Europäisches Patentamt

European Patent Office

Office européen des brevets

(19)

(11) **EP 1 598 776 A1**

(12) **EUROPEAN PATENT APPLICATION**
published in accordance with Art. 158(3) EPC

(43) Date of publication:
**23.11.2005 Bulletin 2005/47**

(51) Int Cl.[7]: **G06T 1/00**

(21) Application number: **04710994.7**

(86) International application number:
**PCT/JP2004/001581**

(22) Date of filing: **13.02.2004**

(87) International publication number:
**WO 2004/077352 (10.09.2004 Gazette 2004/37)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **25.02.2003 JP 2003048018**

(71) Applicant: **SONY CORPORATION Tokyo 141-0001 (JP)**

(72) Inventors:
• **KONDO, Tetsujiro, C/o Sony Corporation Tokyo 141-0001 (JP)**
• **SAWAO, Takashi, C/o Sony Corporation Tokyo 141-0001 (JP)**

• **ISHIBASHI, Junichi, C/o Sony Corporation Tokyo 141-0001 (JP)**
• **NAGANO, Takahiro, C/o Sony Corporation Tokyo 141-0001 (JP)**
• **FUJIWARA, Naoki, C/o Sony Corporation Tokyo 141-0001 (JP)**
• **MIYAKE, Toru, C/o Sony Corporation Tokyo 141-0001 (JP)**
• **WADA, Seiji, C/o Sony Corporation Tokyo 141-0001 (JP)**

(74) Representative: **Körber, Martin Hans et al Mitscherlich & Partner Patentanwälte Sonnenstrasse 33 80331 München (DE)**

(54) **IMAGE PROCESSING DEVICE, METHOD, AND PROGRAM**

(57)    The present invention enables processing results which are more accurate and which have higher precision as to events of the real world to be obtained. (An inverse gamma correction unit 5001 applies inverse gamma correction to an input image wherein light signals of the actual world have been projected and a part of the continuity of the light signals of the actual world has been lost, and which has been subjected to gamma correction. A data continuity detecting unit 101 detects, in the input image subjected to inverse gamma correction, data continuity corresponding to the continuity of light signals of the real world. An actual world estimating unit 102 estimates the light signals by estimating the continuity of the light signals of the real world, based on the data continuity. An image generating unit 103 generates an output image from the estimated light signals. A presentation system property correcting unit 5002 applies correction corresponding to the properties of the presentation system to the output image that has been generated. The present invention can be applied to an image processing device for generating images with higher resolution.

FIG. 308

**Description**

Technical Field

The present invention relates to an image processing device and method, and a program, and particularly relates to an image processing device and method, and program, taking into consideration the real world where data has been acquired.

Background Art

Technology for detecting phenomena in the actual world (real world) with sensor and processing sampling data output from the sensors is widely used. For example, image processing technology wherein the actual world is imaged with an imaging sensor and sampling data which is the image data is processed, is widely employed.

Also, video cameras have built in a gamma correction circuit, and subject the output image data to gamma correction processing. Japanese Unexamined Patent Application Publication No. 10-233942 discloses image data output from a video camera being subjected to inverse gamma correction processing by an inverse gamma correction circuit, and formed into image data with linear properties. Following interpolation filter processing such as enlarging, reduction, pixel number conversion processing, or the like, being performed on this image data by an interpolation filter, an LCD property correction circuit performs correction processing of non-linear properties and inverse properties at the LCD.

Further, Japanese Unexamined Patent Application Publication No. 2001-250119 discloses having second dimensions with fewer dimensions than first dimensions obtained by detecting with sensors first signals, which are signals of the real world having first dimensions, obtaining second signals including distortion as to the first signals, and performing signal processing based on the second signals, thereby generating third signals with alleviated distortion as compared to the second signals.

However, signal processing for estimating the first signals from the second signals had not been thought of to take into consideration the fact that the second signals for the second dimensions with fewer dimensions than first dimensions wherein a part of the continuity of the real world signals is lost, obtained by first signals which are signals of the real world which has the first dimensions, have the continuity of the data corresponding to the stability of the signals of the real world which has been lost.

Disclosure of Invention

The present invention has been made in light of such a situation, and it is an object thereof to take into consideration the real world where data was acquired, and to obtain processing results which are more accurate and more precise as to phenomena in the real world.

The image processing device according to the present invention includes: inverse gamma correction means for applying inverse gamma correction to first image data acquired by light signals of the real world being cast upon a plurality of detecting elements each having spatio-temporal integration effects, of which a part of continuity of the light signals of the real world have been lost, and subjected to gamma correction, and outputting the first image data subjected to inverse gamma correction; image data continuity detecting means for detecting the continuity of image data corresponding to the continuity of the light signals of the real world within the first image data output from the inverse gamma correction means; real world estimating means for generating a function approximating the light signals by estimating the continuity of the light signals of the real world, based on the continuity of the image data detected by the image data continuity detecting means; image generating means for generating second image data from the function generated by the real world estimating means; and presentation system property correcting means for applying correction corresponding to the properties of a presentation system, to the second image data generated by the image generating means.

The image data continuity detecting means may comprise: discontinuity detecting means for detecting discontinuity of a plurality of pixel values within the first image data; peak detecting means for detecting the peak of change of the pixel values from the discontinuity; monotonous increase/decrease region detecting means for detecting a monotonous increase/decrease region wherein the pixel value is increasing or decreasing monotonously from the peak; and discontinuity detecting means for detecting a monotonous increase/decrease region regarding which the monotonous increase/decrease region exists at an adjacent position as a constant region having continuity of image data.

The image processing method according to the present invention includes: an inverse gamma correction step for applying inverse gamma correction to first image data acquired by light signals of the real world being cast upon a plurality of detecting elements each having spatio-temporal integration effects, of which a part of continuity of the light signals of the real world have been lost, and subjected to gamma correction, and outputting the first image data subjected to inverse gamma correction; an image data continuity detecting step for detecting the continuity of image data corresponding to the continuity of the light signals of the real world within the first image data output in the inverse gamma correction step; a real world estimating step for generating a function approximating the light signals by estimating the continuity of the light signals of the real world, based on the continuity of the image data detected in the image data continuity detecting step; an image generating step for generating second image data from the function generated in the real world estimating step; and a presentation system property correcting step for applying correction corresponding to the properties of a presentation system, to the second data generated in the image generating step.

The program according to the present invention causes a computer to execute: an inverse gamma correction step for applying inverse gamma correction to first image data acquired by light signals of the real world being cast upon a plurality of detecting elements each having spatio-temporal integration effects, of which a part of continuity of the light signals of the real world have been lost, and subjected to gamma correction, and outputting the first image data subjected to inverse gamma correction; an image data continuity detecting step for detecting the continuity of image data corresponding to the continuity of the light signals of the real world within the first image data output in the inverse gamma correction step; a real world estimating step for generating a function approximating the light signals by estimating the continuity of the light signals of the real world, based on the continuity of the image data detected in the image data continuity detecting step; an image generating step for generating second image data from the function generated in the real world estimating step; and a presentation system property correcting step for applying correction corresponding to the properties of a presentation system, to the second image data generated in the image generating step.

With the image processing device and method, and program, according to the present invention, inverse gamma correction is applied to first image data acquired by light signals of the real world being cast upon a plurality of detecting elements each having spatio-temporal integration effects, of which a part of continuity of the light signals of the real world have been lost, and subjected to gamma correction, the first image data subjected to inverse gamma correction are output; the continuity of image data corresponding to the continuity of the light signals of the real world within the first image data output is detected; a function approximating the light signals is generated by estimating the continuity of the light signals of the real world, based on the continuity of the detected image data; second image data is generated from the function generated; and correction corresponding to the properties of a presentation system is applied to the generated second image data.

The image-processing device may be a stand-alone device, or may be a block which performs image processing.

Brief Description of the Drawings

Fig. 1 is a diagram illustrating the principle of the present invention.
Fig. 2 is a block diagram illustrating an example of a configuration of a signal processing device.
Fig. 3 is a block diagram illustrating a signal processing device.
Fig. 4 is a diagram illustrating the principle of processing of a conventional image processing device.
Fig. 5 is a diagram for describing the principle of processing of the image processing device.
Fig. 6 is a diagram for describing the principle of the present invention in greater detail.
Fig. 7 is a diagram for describing the principle of the present invention in greater detail.
Fig. 8 is a diagram describing an example of the placement of pixels on an image sensor.
Fig. 9 is a diagram for describing the operations of a detecting device which is a CCD.
Fig. 10 is a diagram for describing the relationship between light cast into detecting elements corresponding to pixel D through pixel F, and pixel values.
Fig. 11 is a diagram for describing the relationship between the passage of time, light cast into a detecting element corresponding to one pixel, and pixel values.
Fig. 12 is a diagram illustrating an example of an image of a linear-shaped object in the actual world.
Fig. 13 is a diagram illustrating an example of pixel values of image data obtained by actual image-taking.
Fig. 14 is a schematic diagram of image data.
Fig. 15 is a diagram illustrating an example of an image of an actual world 1 having a linear shape of a single color which is a different color from the background.
Fig. 16 is a diagram illustrating an example of pixel values of image data obtained by actual image-taking.
Fig. 17 is a schematic diagram of image data.
Fig. 18 is a diagram for describing the principle of the present invention.
Fig. 19 is a diagram for describing the principle of the present invention.
Fig. 20 is a diagram for describing an example of generating high-resolution data.

Fig. 21 is a diagram for describing approximation by model.

Fig. 22 is a diagram for describing estimation of a model with M pieces of data.

Fig. 23 is a diagram for describing the relationship between signals of the actual world and data.

Fig. 24 is a diagram illustrating an example of data of interest at the time of creating an Expression.

Fig. 25 is a diagram for describing signals for two objects in the actual world, and values belonging to a mixed region at the time of creating an expression.

Fig. 26 is a diagram for describing continuity represented by Expression (18), Expression (19), and Expression (22).

Fig. 27 is a diagram illustrating an example of M pieces of data extracted from data.

Fig. 28 is a diagram for describing a region where a pixel value, which is data, is obtained.

Fig. 29 is a diagram for describing approximation of the position of a pixel in the space-time direction.

Fig. 30 is a diagram for describing integration of signals of the actual world in the time direction and two-dimensional spatial direction, in the data.

Fig. 31 is a diagram for describing an integration region at the time of generating high-resolution data with higher resolution in the spatial direction.

Fig. 32 is a diagram for describing an integration region at the time of generating high-resolution data with higher resolution in the time direction.

Fig. 33 is a diagram for describing an integration region at the time of generating high-resolution data with blurring due to movement having been removed.

Fig. 34 is a diagram for describing an integration region at the time of generating high-resolution data with higher resolution is the spatial direction.

Fig. 35 is a diagram illustrating the original image of the input image.

Fig. 36 is a diagram illustrating an example of an input image.

Fig. 37 is a diagram illustrating an image obtained by applying conventional class classification adaptation processing.

Fig. 38 is a diagram illustrating results of detecting a region with a fine line.

Fig. 39 is a diagram illustrating an example of an output image output from a signal processing device.

Fig. 40 is a flowchart for describing signal processing with the signal processing device.

Fig. 41 is a block diagram illustrating the configuration of a data continuity detecting unit.

Fig. 42 is a diagram illustrating an image in the actual world with a fine line in front of the background.

Fig. 43 is a diagram for describing approximation of a background with a plane.

Fig. 44 is a diagram illustrating the cross-sectional shape of image data regarding which the image of a fine line has been projected.

Fig. 45 is a diagram illustrating the cross-sectional shape of image data regarding which the image of a fine line has been projected.

Fig. 46 is a diagram illustrating the cross-sectional shape of image data regarding which the image of a fine line has been projected.

Fig. 47 is a diagram for describing the processing for detecting a peak and detecting of monotonous increase/decrease regions.

Fig. 48 is a diagram for describing the processing for detecting a fine line region wherein the pixel value of the peak exceeds a threshold, while the pixel value of the adjacent pixel is equal to or below the threshold value.

Fig. 49 is a diagram representing the pixel value of pixels arrayed in the direction indicated by dotted line AA' in Fig. 48.

Fig. 50 is a diagram for describing processing for detecting continuity in a monotonous increase/decrease region.

Fig. 51 is a diagram illustrating an example of an image regarding which a continuity component has been extracted by approximation on a plane.

Fig. 52 is a diagram illustrating results of detecting regions with monotonous decrease.

Fig. 53 is a diagram illustrating regions where continuity has been detected.

Fig. 54 is a diagram illustrating pixel values at regions where continuity has been detected.

Fig. 55 is a diagram illustrating an example of other processing for detecting regions where an image of a fine line has been projected.

Fig. 56 is a flowchart for describing continuity detection processing.

Fig. 57 is a diagram for describing processing for detecting continuity of data in the time direction.

Fig. 58 is a block diagram illustrating the configuration of a non-continuity component extracting unit.

Fig. 59 is a diagram for describing the number of time of rejections.

Fig. 60 is a diagram illustrating an example of an input image.

Fig. 61 is a diagram illustrating an image wherein standard error obtained as the result of planar approximation without rejection is taken as pixel values.

Fig. 62 is a diagram illustrating an image wherein standard error obtained as the result of planar approximation with rejection is taken as pixel values.

Fig. 63 is a diagram illustrating an image wherein the number of times of rejection is taken as pixel values.

Fig. 64 is a diagram illustrating an image wherein the gradient of the spatial direction X of a plane is taken as pixel values.

Fig. 65 is a diagram illustrating an image wherein the gradient of the spatial direction Y of a plane is taken as pixel values.

Fig. 66 is a diagram illustrating an image formed of planar approximation values.

Fig. 67 is a diagram illustrating an image formed of the difference between planar approximation values and pixel values.

Fig. 68 is a flowchart describing the processing for extracting the non-continuity component.

Fig. 69 is a flowchart describing the processing for extracting the continuity component.

Fig. 70 is a flowchart describing other processing for extracting the continuity component.

Fig. 71 is a flowchart describing still other processing for extracting the continuity component.

Fig. 72 is a block diagram illustrating another configuration of a continuity component extracting unit.

Fig. 73 is a diagram for describing the activity on an input image having data continuity.

Fig. 74 is a diagram for describing a block for detecting activity.

Fig. 75 is a diagram for describing the angle of data continuity as to activity.

Fig. 76 is a block diagram illustrating a detailed configuration of the data continuity detecting unit.

Fig. 77 is a diagram describing a set of pixels.

Fig. 78 is a diagram describing the relation between the position of a pixel set and the angle of data continuity.

Fig. 79 is a flowchart for describing processing for detecting data continuity.

Fig. 80 is a diagram illustrating a set of pixels extracted when detecting the angle of data continuity in the time direction and space direction.

Fig. 81 is a block diagram illustrating another further detailed configuration of the data continuity detecting unit.

Fig. 82 is a diagram for describing a set of pixels made up of pixels of a number corresponding to the range of angle of set straight lines.

Fig. 83 is a diagram describing the range of angle of the set straight lines.

Fig. 84 is a diagram describing the range of angle of the set straight lines, the number of pixel sets, and the number of pixels per pixel set.

Fig. 85 is a diagram for describing the number of pixel sets and the number of pixels per pixel set.

Fig. 86 is a diagram for describing the number of pixel sets and the number of pixels per pixel set.

Fig. 87 is a diagram for describing the number of pixel sets and the number of pixels per pixel set.

Fig. 88 is a diagram for describing the number of pixel sets and the number of pixels per pixel set.

Fig. 89 is a diagram for describing the number of pixel sets and the number of pixels per pixel set.

Fig. 90 is a diagram for describing the number of pixel sets and the number of pixels per pixel set.

Fig. 91 is a diagram for describing the number of pixel sets and the number of pixels per pixel set.

Fig. 92 is a diagram for describing the number of pixel sets and the number of pixels per pixel set.

Fig. 93 is a flowchart for describing processing for detecting data continuity.

Fig. 94 is a block diagram illustrating still another configuration of the data continuity detecting unit.

Fig. 95 is a block diagram illustrating a further detailed configuration of the data continuity detecting unit.

Fig. 96 is a diagram illustrating an example of a block.

Fig. 97 is a diagram describing the processing for calculating the absolute value of difference of pixel values between a block of interest and a reference block.

Fig. 98 is a diagram describing the distance in the spatial direction X between the position of a pixel in the proximity of the pixel of interest, and a straight line having an angle θ.

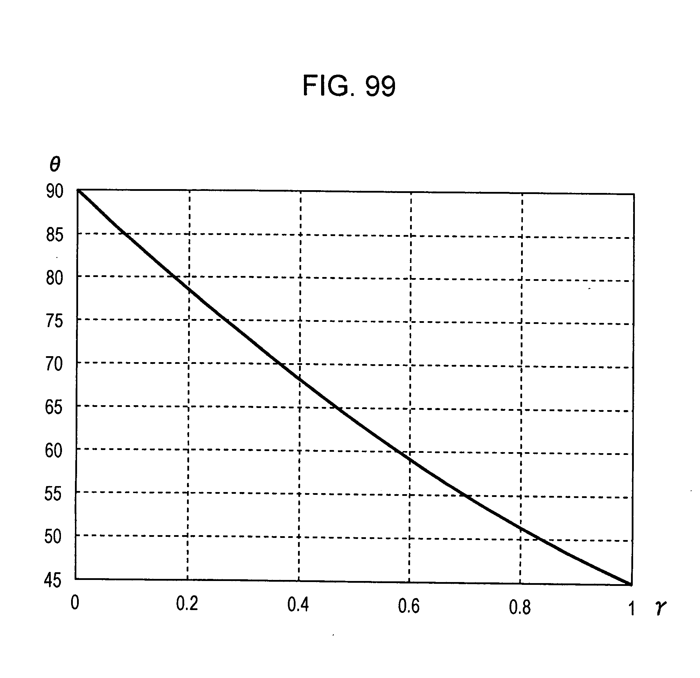

Fig. 99 is a diagram illustrating the relationship between the shift amount γ and angle θ.

Fig. 100 is a diagram illustrating the distance in the spatial direction X between the position of a pixel in the proximity of the pixel of interest and a straight line which passes through the pixel of interest and has an angle of θ, as to the shift amount γ.

Fig. 101 is a diagram illustrating reference block wherein the distance as to a straight line which passes through the pixel of interest and has an angle of θ as to the axis of the spatial direction X, is minimal.

Fig. 102 is a diagram for describing processing for halving the range of angle of continuity of data to be detected.

Fig. 103 is a flowchart for describing the processing for detection of data continuity.

Fig. 104 is a diagram illustrating a block which is extracted at the time of detecting the angle of data continuity in the space direction and time direction.

Fig. 105 is a block diagram illustrating the configuration of the data continuity detecting unit which executes processing for detection of data continuity, based on components signals of an input image.

Fig. 106 is a block diagram illustrating the configuration of the data continuity detecting unit which executes processing for detection of data continuity, based on components signals of an input image.

Fig. 107 is a block diagram illustrating still another configuration of the data continuity detecting unit.

Fig. 108 is a diagram for describing the angle of data continuity with a reference axis as a reference, in the input. image.

Fig. 109 is a diagram for describing the angle of data continuity with a reference axis as a reference, in the input image.

Fig. 110 is a diagram for describing the angle of data continuity with a reference axis as a reference, in the input image.

Fig. 111 is a diagram illustrating the relationship between the change in pixel values as to the position of pixels in the spatial direction, and a regression line, in the input image.

Fig. 112 is a diagram for describing the angle between the regression line A, and an axis indicating the spatial direction X, which is a reference axis, for example.

Fig. 113 is a diagram illustrating an example of a region.

Fig. 114 is a flowchart for describing the processing for detection of data continuity with the data continuity detecting unit of which the configuration is illustrated in Fig. 107.

Fig. 115 is a block diagram illustrating still another configuration of the data continuity detecting unit.

Fig. 116 is a diagram illustrating the relationship between the change in pixel values as to the position of pixels in the spatial direction, and a regression line, in the input image.

Fig. 117 is a diagram for describing the relationship between standard deviation and a region having data continuity.

Fig. 118 is a diagram illustrating an example of a region.

Fig. 119 is a flowchart for describing the processing for detection of data continuity with the data continuity detecting unit of which the configuration is illustrated in Fig. 115.

Fig. 120 is a flowchart for describing other processing for detection of data continuity with the data continuity detecting unit of which the configuration is illustrated in Fig. 115.

Fig. 121 is a block diagram illustrating the configuration of the data continuity detecting unit for detecting the angle of a fine line or a two-valued edge, as data continuity information, to which the present invention has been applied.

Fig. 122 is a diagram for describing a detection method for data continuity information.

Fig. 123 is a diagram for describing a detection method for data continuity information.

Fig. 124 is a diagram illustrating a further detailed configuration of the data continuity detecting unit.

Fig. 125 is a diagram for describing horizontal/vertical determination processing.

Fig. 126 is a diagram for describing horizontal/vertical determination processing.

Fig. 127A is a diagram for describing the relationship between a fine line in the real world and a fine line imaged by a sensor.

Fig. 127B is a diagram for describing the relationship between a fine line in the real world and a fine line imaged by a sensor.

Fig. 127C is a diagram for describing the relationship between a fine line in the real world and a fine line imaged by a sensor.

Fig. 128A is a diagram for describing the relationship between a fine line in the real world and the background.

Fig. 128B is a diagram for describing the relationship between a fine line in the real world and the background.

Fig. 129A is a diagram for describing the relationship between a fine line in an image imaged by a sensor and the background.

Fig. 129B is a diagram for describing the relationship between a fine line in an image imaged by a sensor and the background.

Fig. 130A is a diagram for describing an example of the relationship between a fine line in an image imaged by a sensor and the background.

Fig. 130B is a diagram for describing an example of the relationship between a fine line in an image imaged by a sensor and the background.

Fig. 131A is a diagram for describing the relationship between a fine line in an image in the real world and the background.

Fig. 131B is a diagram for describing the relationship between a fine line in an image in the real world and the background.

Fig. 132A is a diagram for describing the relationship between a fine line in an image imaged by a sensor and the background.

Fig. 132B is a diagram for describing the relationship between a fine line in an image imaged by a sensor and the background.

Fig. 133A is a diagram for describing an example of the relationship between a fine line in an image imaged by a sensor and the background.

Fig. 133B is a diagram for describing an example of the relationship between a fine line in an image imaged by a sensor and the background.

Fig. 134 is a diagram illustrating a model for obtaining the angle of a fine line.

Fig. 135 is a diagram illustrating a model for obtaining the angle of a fine line.

Fig. 136A is a diagram for describing the maximum value and minimum value of pixel values in a dynamic range block corresponding to a pixel of interest.

Fig. 136B is a diagram for describing the maximum value and minimum value of pixel values in a dynamic range block corresponding to a pixel of interest.

Fig. 137A is a diagram for describing how to obtain the angle of a fine line.

Fig. 137B is a diagram for describing how to obtain the angle of a fine line.

Fig. 137C is a diagram for describing how to obtain the angle of a fine line.

Fig. 138 is a diagram for describing how to obtain the angle of a fine line.

Fig. 139 is a diagram for describing an extracted block and dynamic range block.

Fig. 140 is a diagram for describing a least-square solution.

Fig. 141 is a diagram for describing a least-square solution.

Fig. 142A is a diagram for describing a two-valued edge.

Fig. 142B is a diagram for describing a two-valued edge.

Fig. 142C is a diagram for describing a two-valued edge.

Fig. 143A is a diagram for describing a two-valued edge of an image imaged by a sensor.

Fig. 143B is a diagram for describing a two-valued edge of an image imaged by a sensor.

Fig. 144A is a diagram for describing an example of a two-valued edge of an image imaged by a sensor.

Fig. 144B is a diagram for describing an example of a two-valued edge of an image imaged by a sensor.

Fig. 145A is a diagram for describing a two-valued edge of an image imaged by a sensor.

Fig. 145B is a diagram for describing a two-valued edge of an image imaged by a sensor.

Fig. 146 is a diagram illustrating a model for obtaining the angle of a two-valued edge.

Fig. 147A is a diagram illustrating a method for obtaining the angle of a two-valued edge.

Fig. 147B is a diagram illustrating a method for obtaining the angle of a two-valued edge.

Fig. 147C is a diagram illustrating a method for obtaining the angle of a two-valued edge.

Fig. 148 is a diagram illustrating a method for obtaining the angle of a two-valued edge.

Fig. 149 is a flowchart for describing the processing for detecting the angle of a fine line or a two-valued edge along with data continuity.

Fig. 150 is a flowchart for describing data extracting processing.

Fig. 151 is a flowchart for describing addition processing to a normal equation.

Fig. 152A is a diagram for comparing the gradient of a fine line obtained by application of the present invention, and the angle of a fine line obtained using correlation.

Fig. 152B is a diagram for comparing the gradient of a fine line obtained by application of the present invention, and the angle of a fine line obtained using correlation.

Fig. 153A is a diagram for comparing the gradient of a two-valued edge obtained by application of the present invention, and the angle of a fine line obtained using correlation.

Fig. 153B is a diagram for comparing the gradient of a two-valued edge obtained by application of the present invention, and the angle of a fine line obtained using correlation.

Fig. 154 is a block diagram illustrating the configuration of the data continuity detecting unit for detecting a mixture ratio under application of the present invention as data continuity information.

Fig. 155A is a diagram for describing how to obtain the mixture ratio.

Fig. 155B is a diagram for describing how to obtain the mixture ratio.

Fig. 155C is a diagram for describing how to obtain the mixture ratio.

Fig. 156 is a flowchart for describing processing for detecting the mixture ratio along with data continuity.

Fig. 157 is a flowchart for describing addition processing to a normal equation.

Fig. 158A is a diagram illustrating an example of distribution of the mixture ratio of a fine line.

Fig. 158B is a diagram illustrating an example of distribution of the mixture ratio of a fine line.

Fig. 159A is a diagram illustrating an example of distribution of the mixture ratio of a two-valued edge.

Fig. 159B is a diagram illustrating an example of distribution of the mixture ratio of a two-valued edge.

Fig. 160 is a diagram for describing linear approximation of the mixture ratio.

Fig. 161A is a diagram for describing a method for obtaining movement of an object as data continuity information.

Fig. 161B is a diagram for describing a method for obtaining movement of an object as data continuity information.

Fig. 162A is a diagram for describing a method for obtaining movement of an object as data continuity information.

Fig. 162B is a diagram for describing a method for obtaining movement of an object as data continuity information.

Fig. 163A is a diagram for describing a method for obtaining a mixture ratio according to movement of an object as data continuity information.

Fig. 163B is a diagram for describing a method for obtaining a mixture ratio according to movement of an object as data continuity information.

Fig. 163C is a diagram for describing a method for obtaining a mixture ratio according to movement of an object as data continuity information.

Fig. 164 is a diagram for describing linear approximation of the mixture ratio at the time of obtaining the mixture ratio according to movement of the object as data continuity information.

Fig. 165 is a block diagram illustrating the configuration of the data continuity detecting unit for detecting the processing region under application of the present invention, as data continuity information.

Fig. 166 is a flowchart for describing the processing for detection of continuity with the data continuity detecting unit shown in Fig. 165.

Fig. 167 is a diagram for describing the integration range of processing for detection of continuity with the data continuity detecting unit shown in Fig. 165.

Fig. 168 is a diagram for describing the integration range of processing for detection of continuity with the data continuity detecting unit shown in Fig. 165.

Fig. 169 is a block diagram illustrating another configuration of the data continuity detecting unit for detecting a processing region to which the present invention has been applied as data continuity information.

Fig. 170 is a flowchart for describing the processing for detecting continuity with the data continuity detecting unit shown in Fig. 169.

Fig. 171 is a diagram for describing the integration range of processing for detecting continuity with the data continuity detecting unit shown in Fig. 169.

Fig. 172 is a diagram for describing the integration range of processing for detecting continuity with the data continuity detecting unit shown in Fig. 169.

Fig. 173 is a block diagram illustrating the configuration of an actual world estimating unit 102.

Fig. 174 is a diagram for describing the processing for detecting the width of a fine line in actual world signals.

Fig. 175 is a diagram for describing the processing for detecting the width of a fine line in actual world signals.

Fig. 176 is a diagram for describing the processing for estimating the level of a fine line signal in actual world signals.

Fig. 177 is a flowchart for describing the processing of estimating the actual world.

Fig. 178 is a block diagram illustrating another configuration of the actual world estimating unit.

Fig. 179 is a block diagram illustrating the configuration of a boundary detecting unit.

Fig. 180 is a diagram for describing the processing for calculating allocation ratio.

Fig. 181 is a diagram for describing the processing for calculating allocation ratio.

Fig. 182 is a diagram for describing the processing for calculating allocation ratio.

Fig. 183 is a diagram for describing the process for calculating a regression line indicating the boundary of monotonous increase/decrease regions.

Fig. 184 is a diagram for describing the process for calculating a regression line indicating the boundary of monotonous increase/decrease regions.

Fig. 185 is a flowchart for describing processing for estimating the actual world.

Fig. 186 is a flowchart for describing the processing for boundary detection.

Fig. 187 is a block diagram illustrating the configuration of the real world estimating unit which estimates the derivative value in the spatial direction as actual world estimating information.

Fig. 188 is a flowchart for describing the processing of actual world estimation with the real world estimating unit shown in Fig. 187.

Fig. 189 is a diagram for describing a reference pixel.

Fig. 190 is a diagram for describing the position for obtaining the derivative value in the spatial direction.

Fig. 191 is a diagram for describing the relationship between the derivative value in the spatial direction and the amount of shift.

Fig. 192 is a block diagram illustrating the configuration of the actual world estimating unit which estimates the gradient in the spatial direction as actual world estimating information.

Fig. 193 is a flowchart for describing the processing of actual world estimation with the actual world estimating unit shown in Fig. 192.

Fig. 194 is a diagram for describing processing for obtaining the gradient in the spatial direction.

Fig. 195 is a diagram for describing processing for obtaining the gradient in the spatial direction.

Fig. 196 is a block diagram illustrating the configuration of the actual world estimating unit for estimating the derivative value in the frame direction as actual world estimating information.

Fig. 197 is a flowchart for describing the processing of actual world estimation with the actual world estimating unit shown in Fig. 196.

Fig. 198 is a diagram for describing a reference pixel.

Fig. 199 is a diagram for describing the position for obtaining the derivative value in the frame direction.

Fig. 200 is a diagram for describing the relationship between the derivative value in the frame direction and the amount of shift.

Fig. 201 is a block diagram illustrating the configuration of the real world estimating unit which estimates the gradient in the frame direction as actual world estimating information.

Fig. 202 is a flowchart for describing the processing of actual world estimation with the actual world estimating unit shown in Fig. 201.

Fig. 203 is a diagram for describing processing for obtaining the gradient in the frame direction.

Fig. 204 is a diagram for describing processing for obtaining the gradient in the frame direction.

Fig. 205 is a diagram for describing the principle of function approximation, which is an example of an embodiment of the actual world estimating unit shown in Fig. 3.

Fig. 206 is a diagram for describing integration effects in the event that the sensor is a CCD.

Fig. 207 is a diagram for describing a specific example of the integration effects of the sensor shown in Fig. 206.

Fig. 208 is a diagram for describing a specific example of the integration effects of the sensor shown in Fig. 206.

Fig. 209 is a diagram representing a fine-line-inclusive actual world region shown in Fig. 207.

Fig. 210 is a diagram for describing the principle of an example of an embodiment of the actual world estimating unit shown in Fig. 3, in comparison with the example shown in Fig. 205.

Fig. 211 is a diagram representing the fine-line-inclusive data region shown in Fig. 207.

Fig. 212 is a diagram wherein each of the pixel values contained in the fine-line-inclusive data region shown in Fig. 211 are plotted on a graph.

Fig. 213 is a diagram wherein an approximation function, approximating the pixel values contained in the fine-line-inclusive data region shown in Fig. 212, is plotted on a graph.

Fig. 214 is a diagram for describing the continuity in the spatial direction which the fine-line-inclusive actual world region shown in Fig. 207 has.

Fig. 215 is a diagram wherein each of the pixel values contained in the fine-line-inclusive data region shown in Fig. 211 are plotted on a graph.

Fig. 216 is a diagram for describing a state wherein each of the input pixel values indicated in Fig. 215 are shifted by a predetermined shift amount.

Fig. 217 is a diagram wherein an approximation function, approximating the pixel values contained in the fine-line-inclusive data region shown in Fig. 212, is plotted on a graph, taking into consideration the spatial-direction continuity.

Fig. 218 is a diagram for describing space-mixed region.

Fig. 219 is a diagram for describing an approximation function approximating actual-world signals in a space-mixed region.

Fig. 220 is a diagram wherein an approximation function, approximating the actual world signals corresponding to the fine-line-inclusive data region shown in Fig. 212, is plotted on a graph, taking into consideration both the sensor integration properties and the spatial-direction continuity.

Fig. 221 is a block diagram for describing a configuration example of the actual world estimating unit using, of function approximation techniques having the principle shown in Fig. 205, primary polynomial approximation.

Fig. 222 is a flowchart for describing actual world estimation processing which the actual world estimating unit of the configuration shown in Fig. 221 executes.

Fig. 223 is a diagram for describing a tap range.

Fig. 224 is a diagram for describing actual world signals having continuity in the spatial direction.

Fig. 225 is a diagram for describing integration effects in the event that the sensor is a CCD.

Fig. 226 is a diagram for describing distance in the cross-sectional direction.

Fig. 227 is a block diagram for describing a configuration example of the actual world estimating unit using, of function approximation techniques having the principle shown in Fig. 205, quadratic polynomial approximation.

Fig. 228 is a flowchart for describing actual world estimation processing which the actual world estimating unit of the configuration shown in Fig. 227 executes.

Fig. 229 is a diagram for describing a tap range.

Fig. 230 is a diagram for describing direction of continuity in the time-spatial direction.

Fig. 231 is a diagram for describing integration effects in the event that the sensor is a CCD.

Fig. 232 is a diagram for describing actual world signals having continuity in the spatial direction.

Fig. 233 is a diagram for describing actual world signals having continuity in the space-time directions.

Fig. 234 is a block diagram for describing a configuration example of the actual world estimating unit using, of function approximation techniques having the principle shown in Fig. 205, cubic polynomial approximation.

Fig. 235 is a flowchart for describing actual world estimation processing which the actual world estimating unit of the configuration shown in Fig. 234 executes.

Fig. 236 is a diagram for describing the principle of re-integration, which is an example of an embodiment of the

## EP 1 598 776 A1

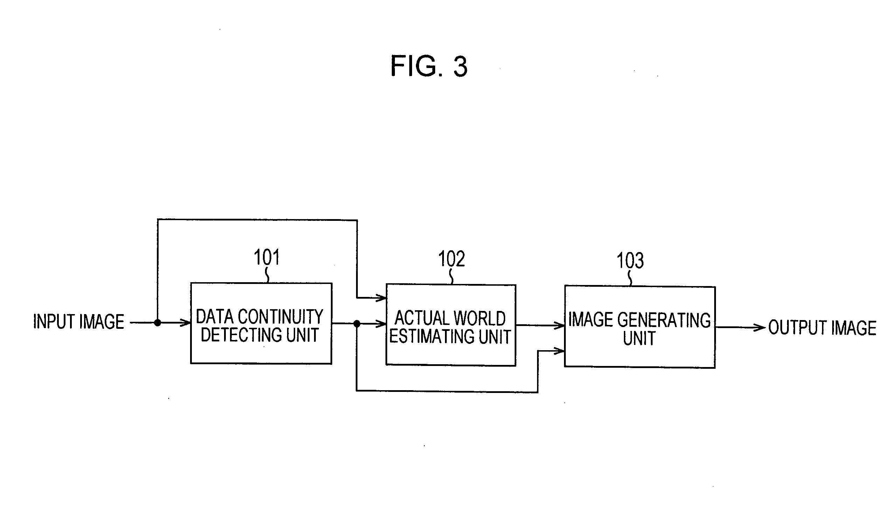

image generating unit shown in Fig. 3.

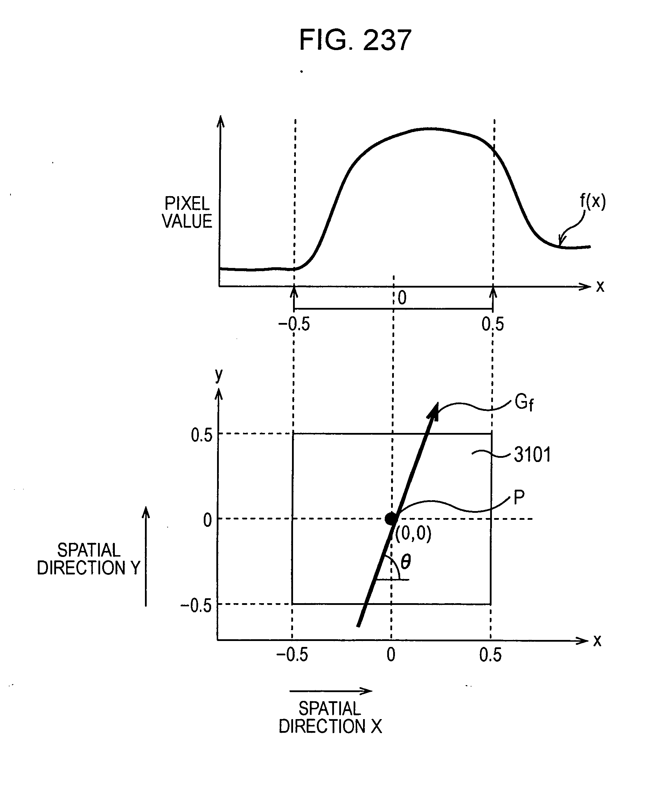

Fig. 237 is a diagram for describing an example of input pixel and an approximation function for approximation of an actual world signal corresponding to the input pixel.

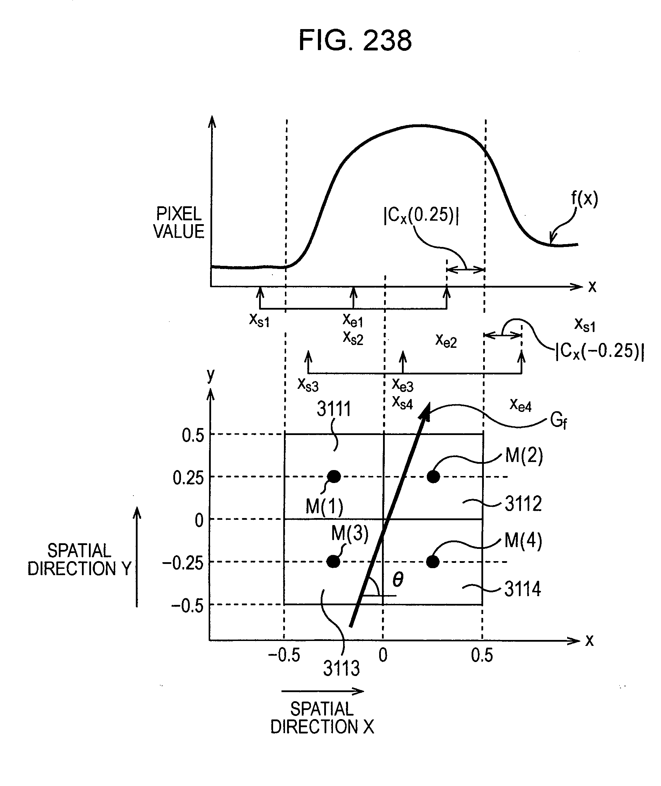

Fig. 238 is a diagram for describing an example of creating four high-resolution pixels in the one input pixel shown in Fig. 237, from the approximation function shown in Fig. 237.

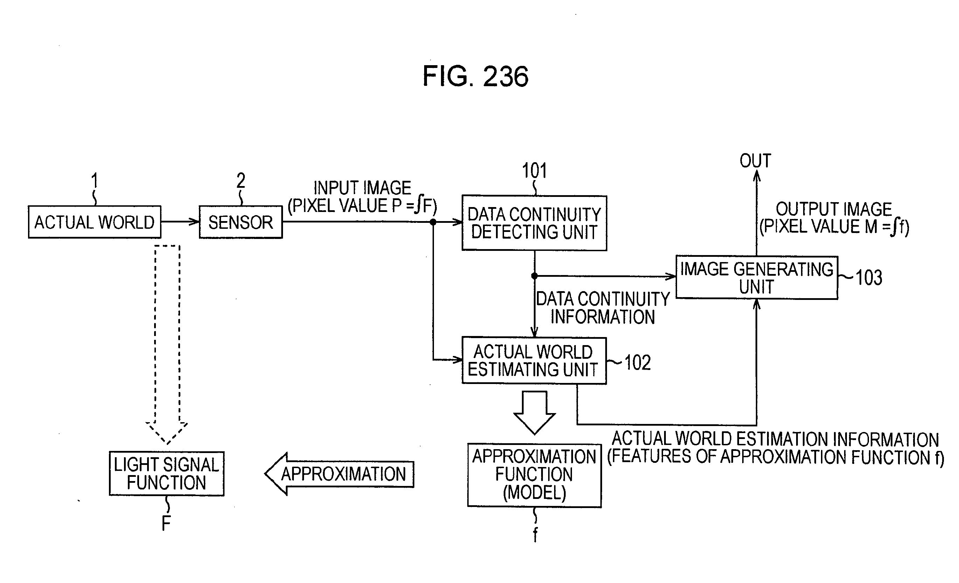

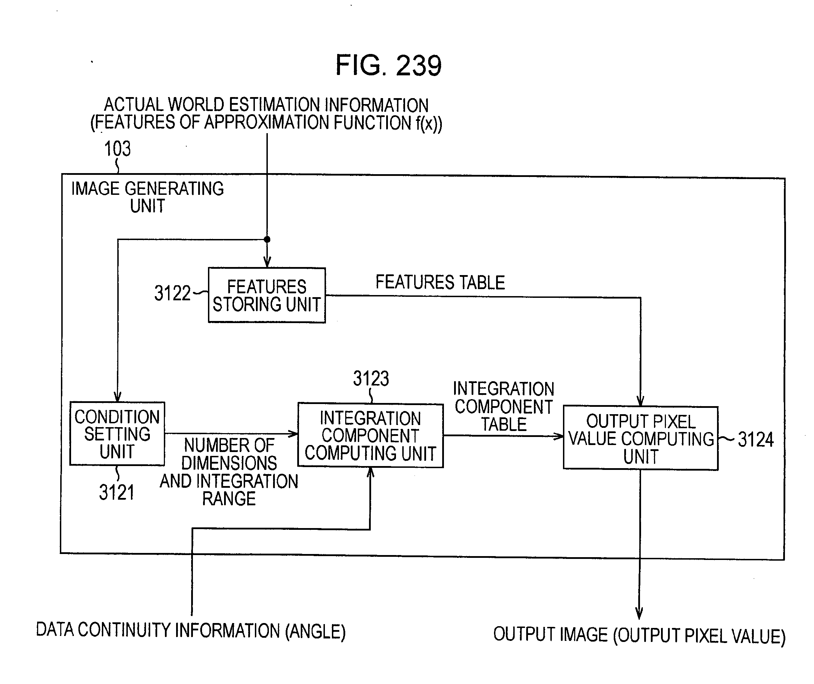

Fig. 239 is a block diagram for describing a configuration example of an image generating unit using, of re-integration techniques having the principle shown in Fig. 236, one-dimensional re-integration.

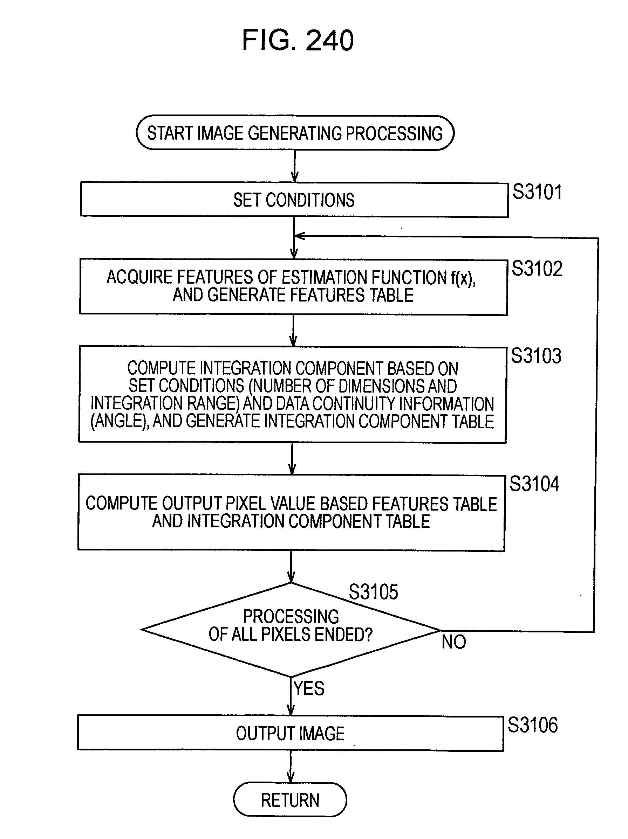

Fig. 240 is a flowchart for describing the image generating processing which the image generating unit of the configuration shown in Fig. 239 executes.

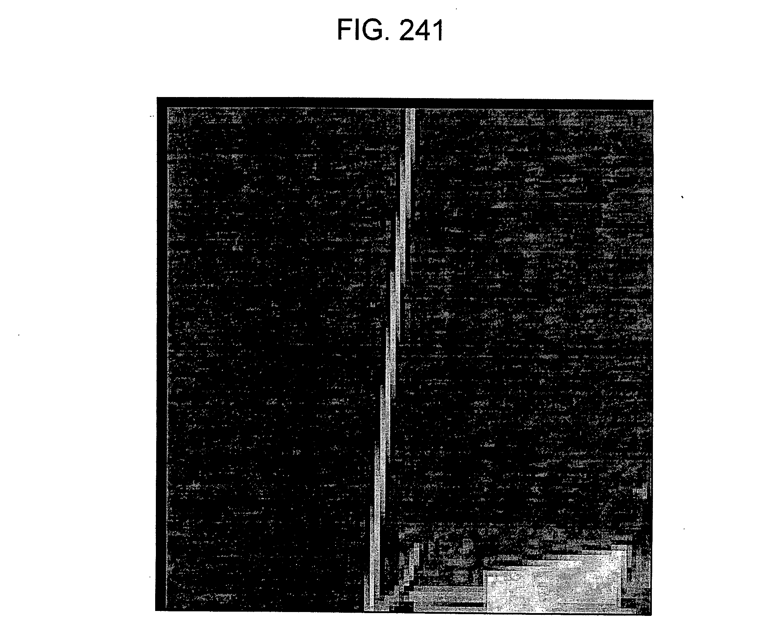

Fig. 241 is a diagram illustrating an example of the original image of the input image.

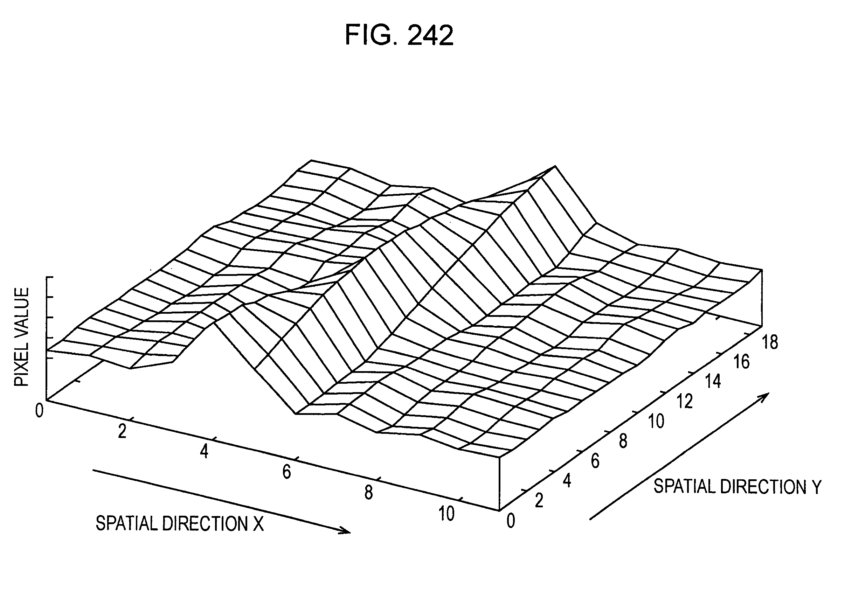

Fig. 242 is a diagram illustrating an example of image data corresponding to the image shown in Fig. 241.

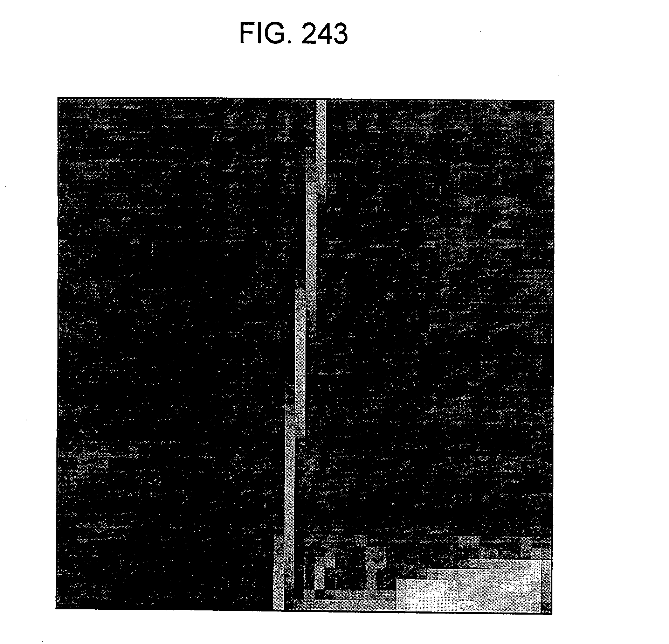

Fig. 243 is a diagram illustrating an example of an input image.

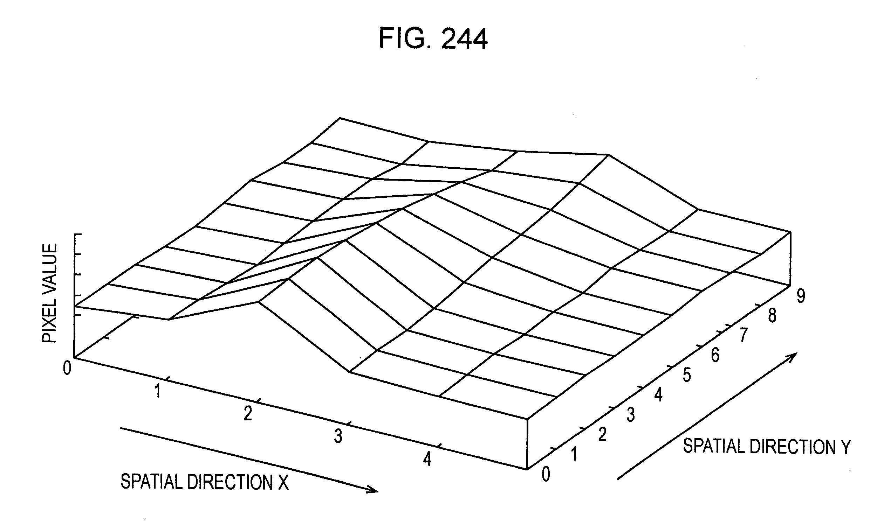

Fig. 244 is a diagram representing an example of image data corresponding to the image shown in Fig. 243.

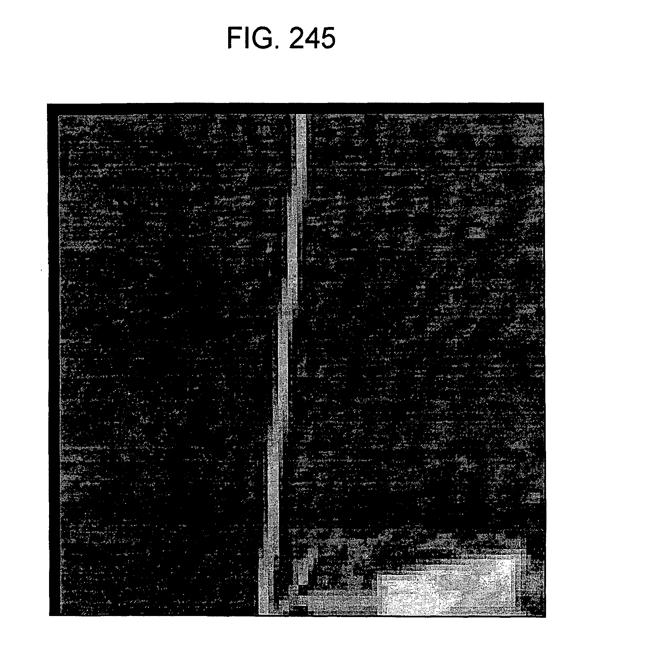

Fig. 245 is a diagram illustrating an example of an image obtained by subjecting an input image to conventional class classification adaptation processing.

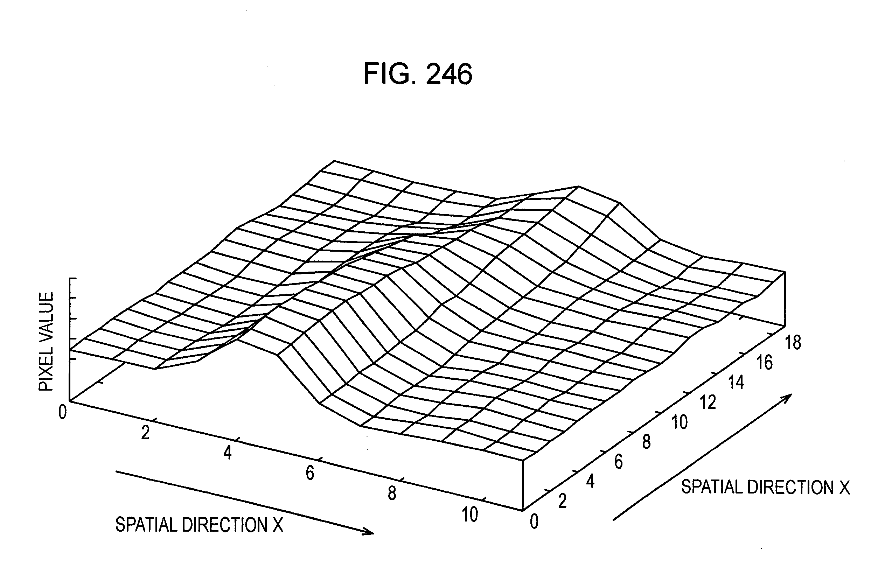

Fig. 246 is a diagram representing an example of image data corresponding to the image shown in Fig. 245.

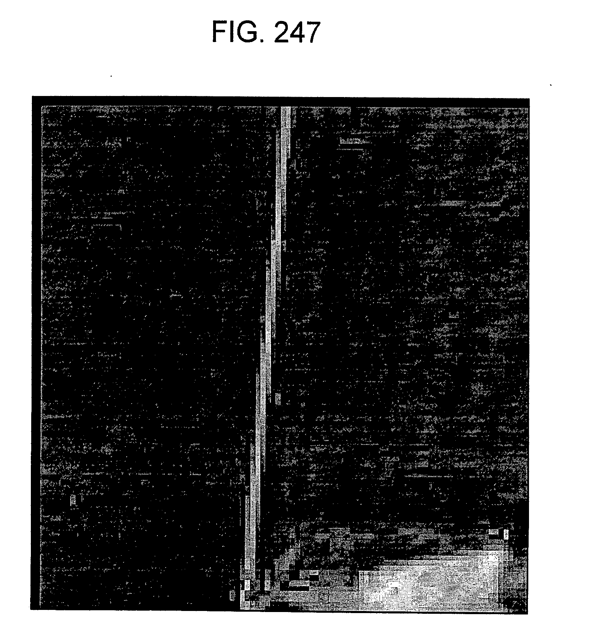

Fig. 247 is a diagram illustrating an example of an image obtained by subjecting an input image to the one-dimensional re-integration technique according to the present invention.

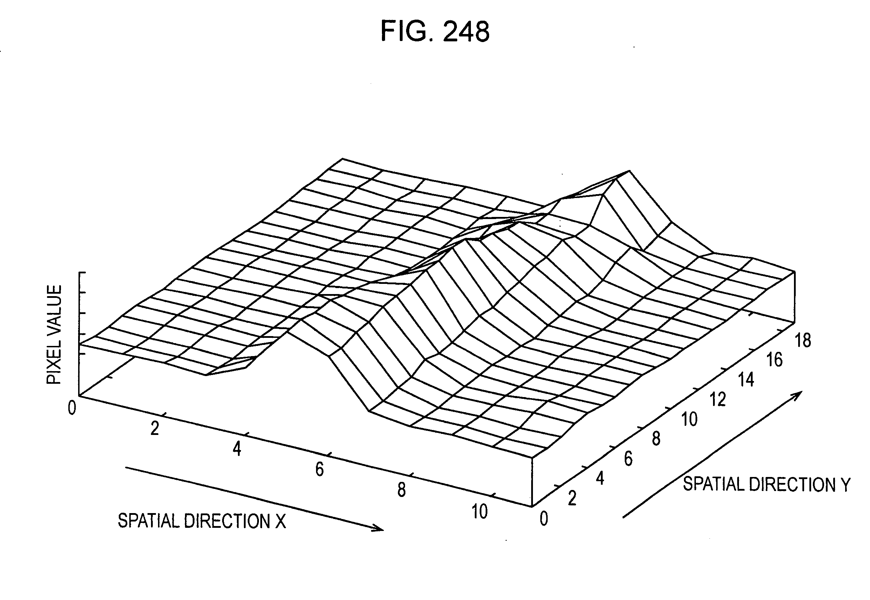

Fig. 248 is a diagram illustrating an example of image data corresponding to the image shown in Fig. 247.

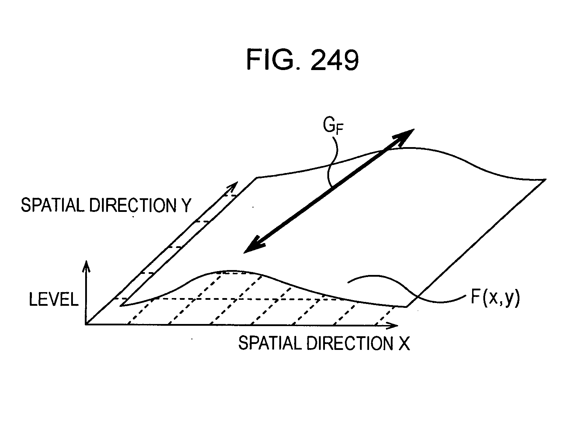

Fig. 249 is a diagram for describing actual-world signals having continuity in the spatial direction.

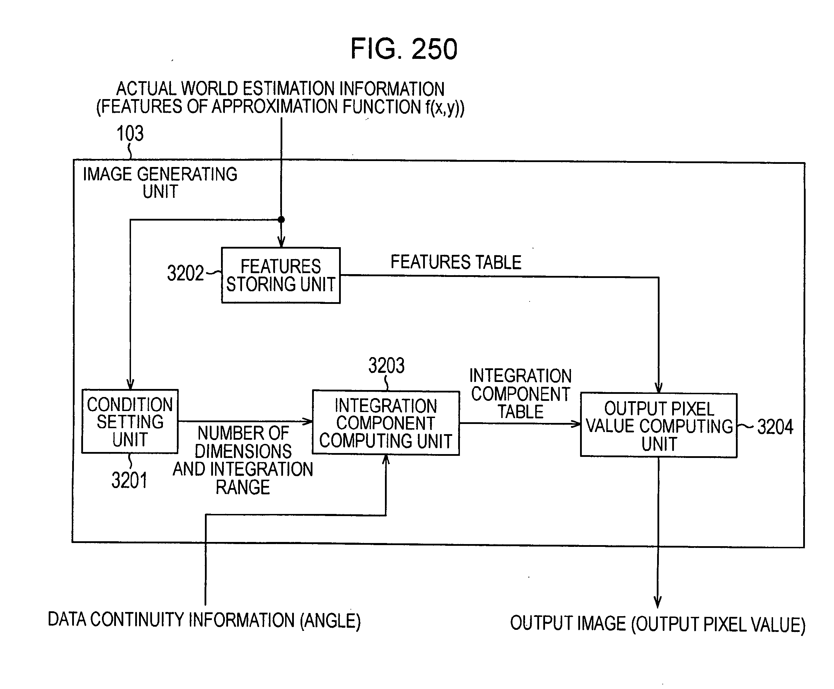

Fig. 250 is a block diagram for describing a configuration example of an image generating unit which uses, of the re-integration techniques having the principle shown in Fig. 236, a two-dimensional re-integration technique.

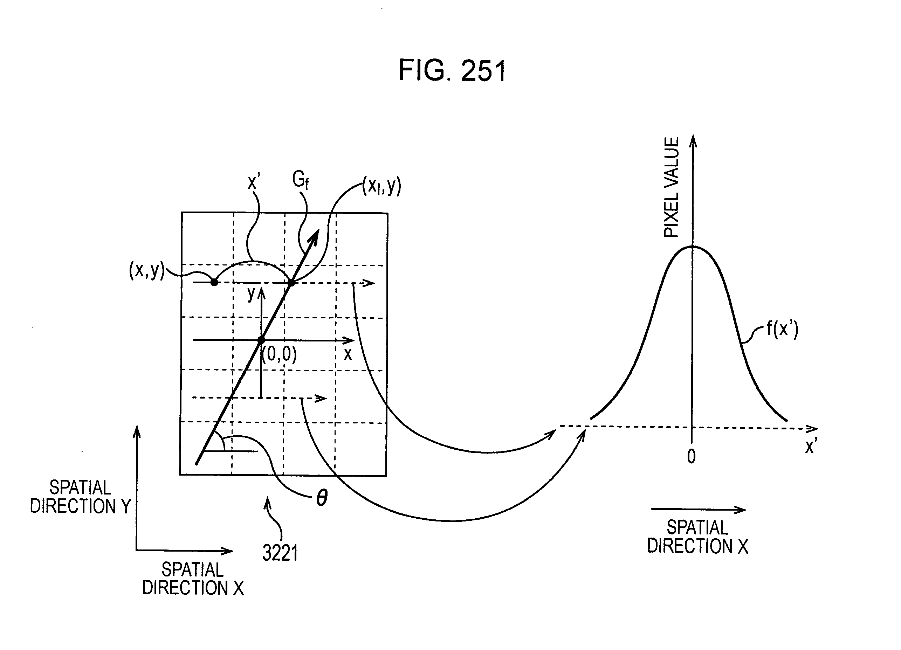

Fig. 251 is a diagram for describing distance in the cross-sectional direction.

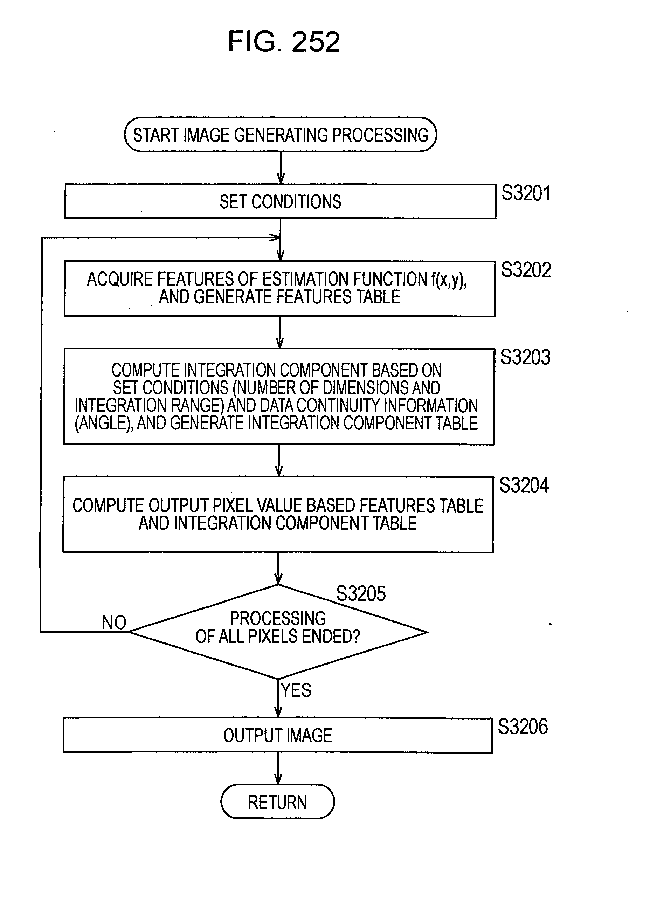

Fig. 252 is a flowchart for describing the image generating processing which the image generating unit of the configuration shown in Fig. 250 executes.

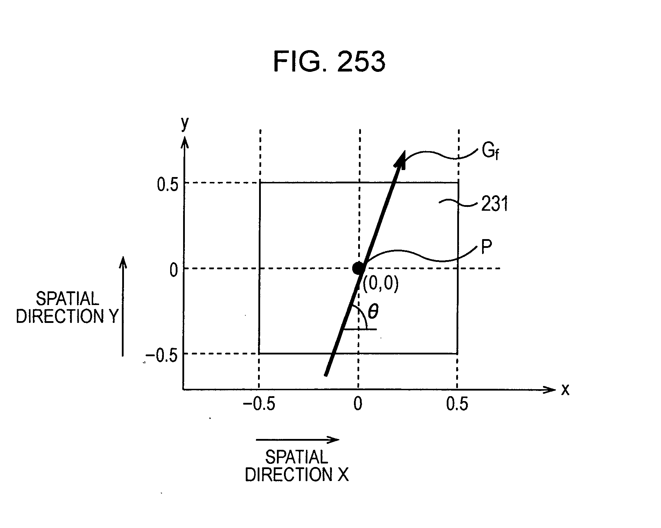

Fig. 253 is a diagram for describing an example of an input pixel.

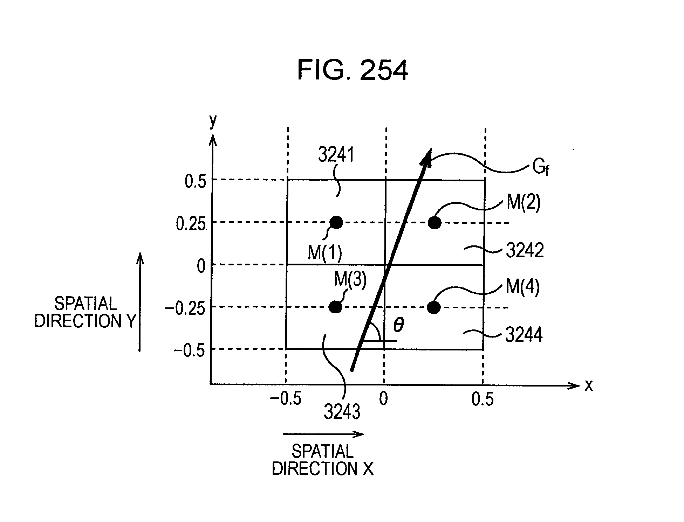

Fig. 254 is a diagram for describing an example of creating four high-resolution pixels in the one input pixel shown in Fig. 253, with the two-dimensional re-integration technique.

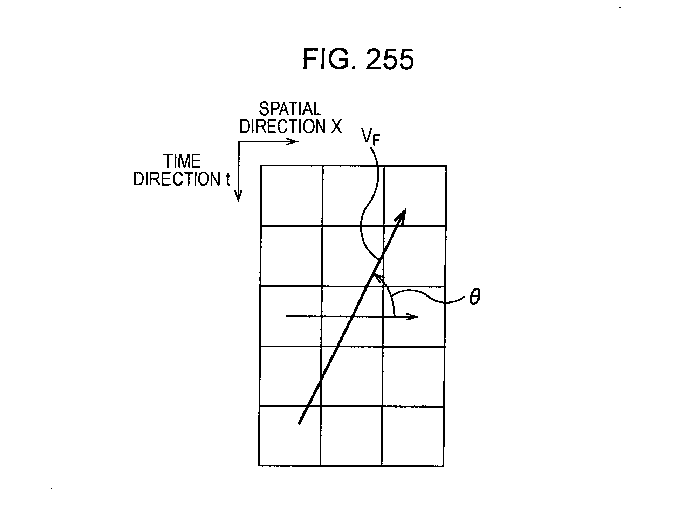

Fig. 255 is a diagram for describing the direction of continuity in the space-time directions.

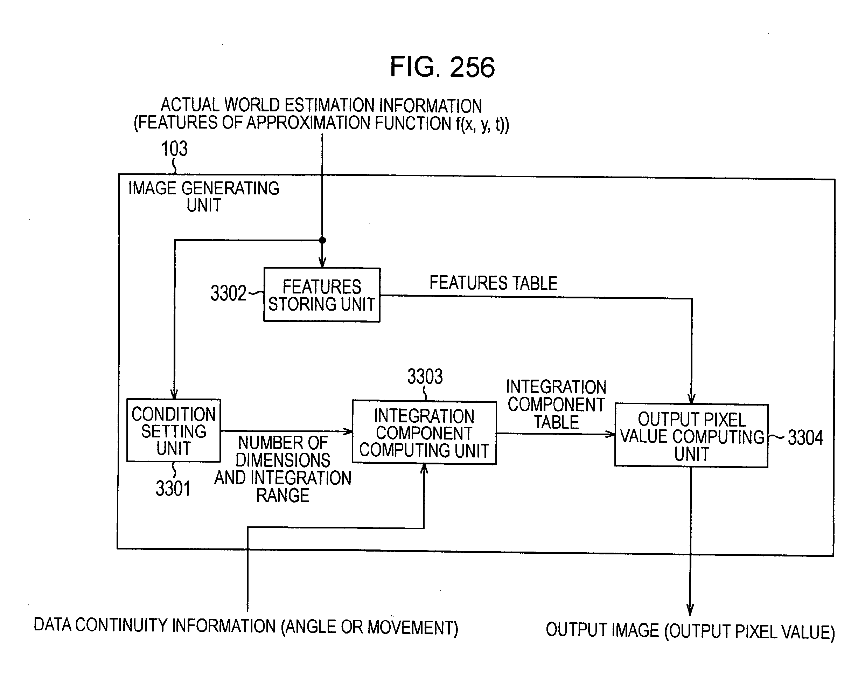

Fig. 256 is a block diagram for describing a configuration example of the image generating unit which uses, of the re-integration techniques having the principle shown in Fig. 236, a three-dimensional re-integration technique.

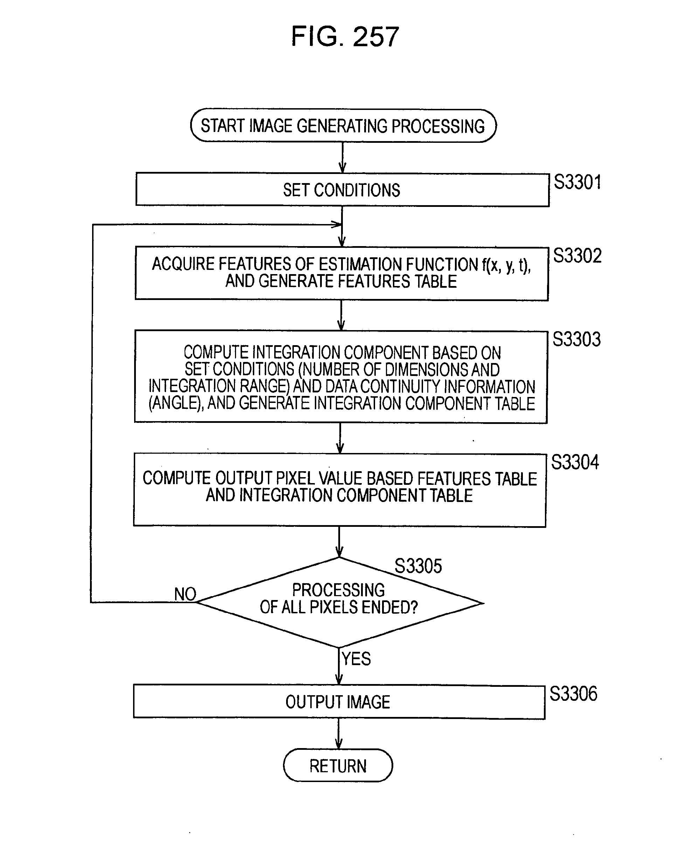

Fig. 257 is a flowchart for describing the image generating processing which the image generating unit of the configuration shown in Fig. 256 executes.

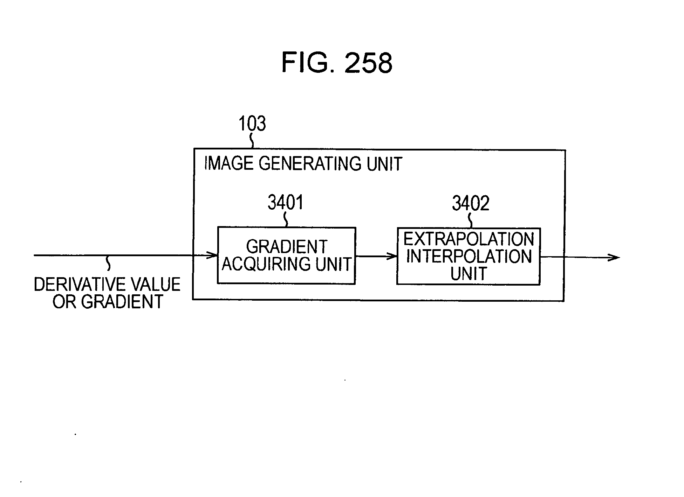

Fig. 258 is a block diagram illustrating another configuration of the image generating unit to which the present invention is applied.

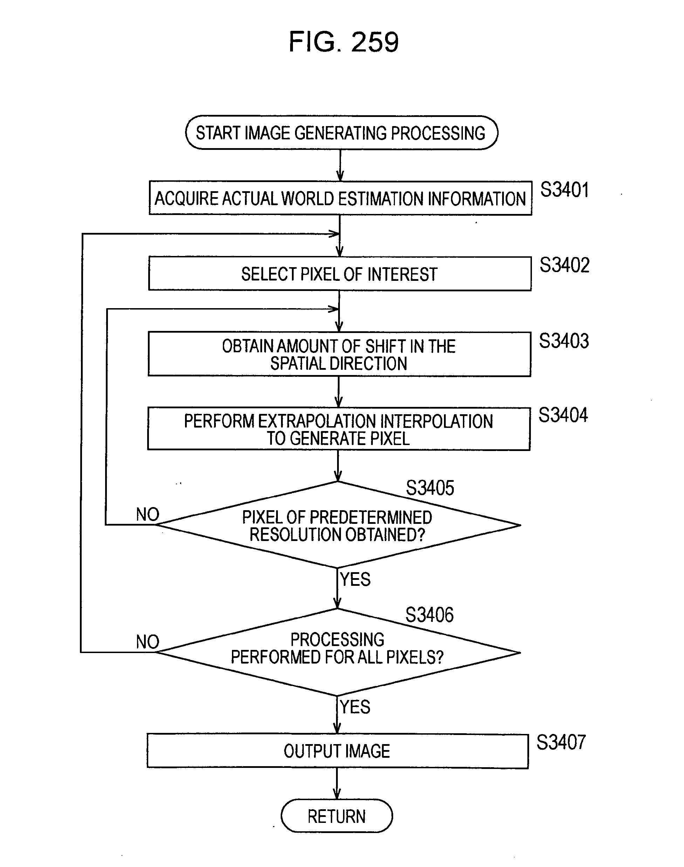

Fig. 259 is a flowchart for describing the processing for image generating with the image generating unit shown in Fig. 258.

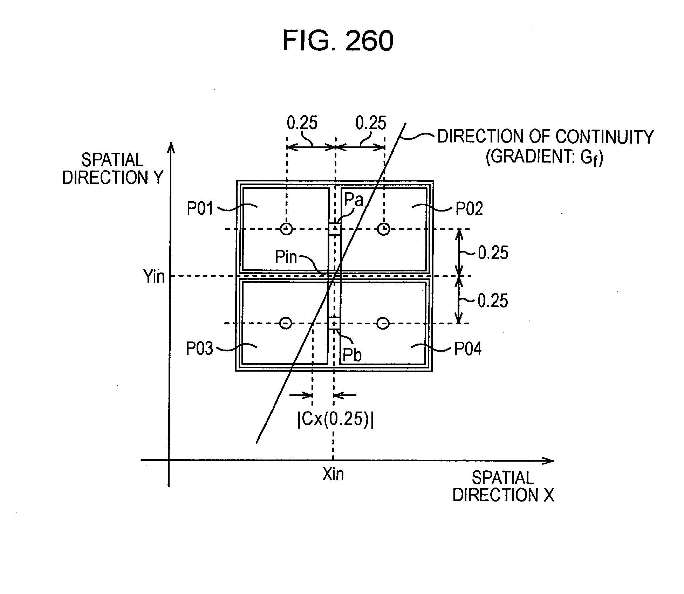

Fig. 260 is a diagram for describing processing of creating a quadruple density pixel from an input pixel.

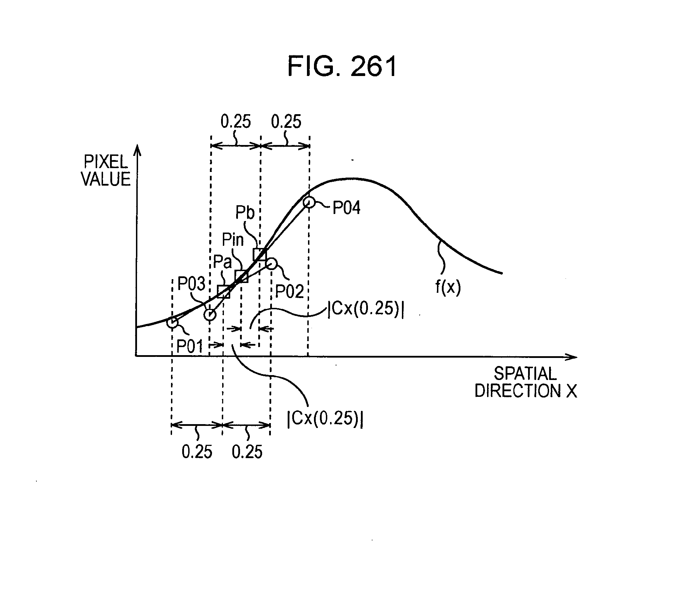

Fig. 261 is a diagram for describing the relationship between an approximation function indicating the pixel value and the amount of shift.

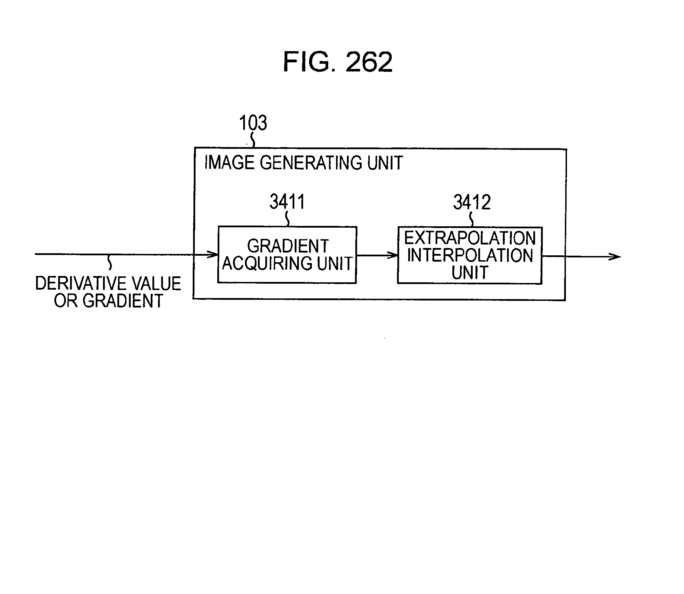

Fig. 262 is a block diagram illustrating another configuration of the image generating unit to which the present invention has been applied.

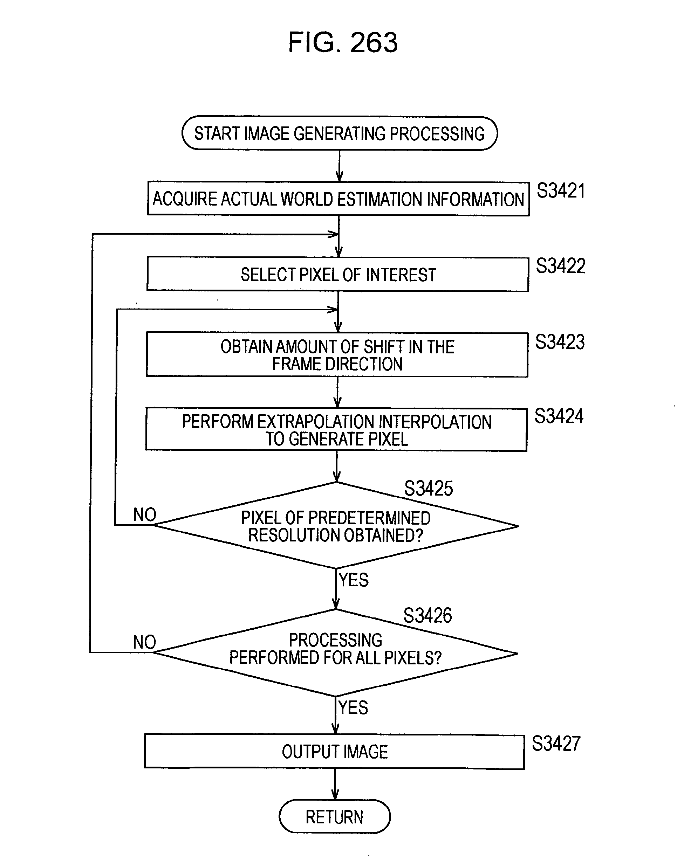

Fig. 263 so a flowchart for describing the processing for image generating with the image generating unit shown in Fig. 262.

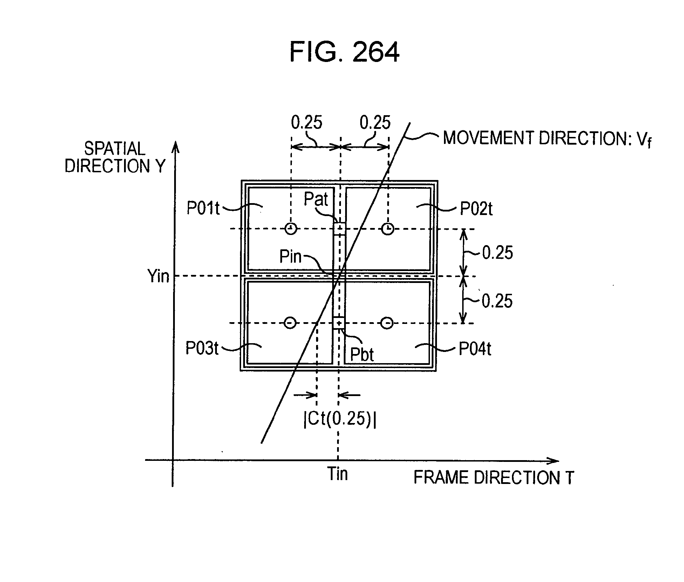

Fig. 264 is a diagram for describing processing of creating a quadruple density pixel from an input pixel.

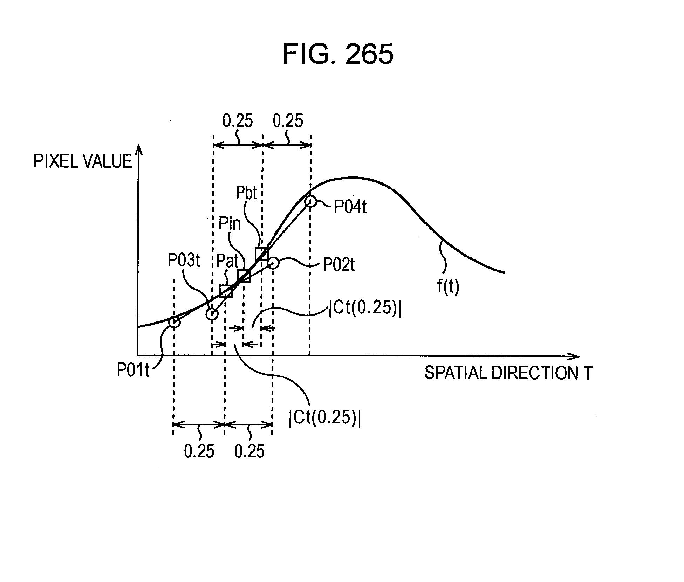

Fig. 265 is a diagram for describing the relationship between an approximation function indicating the pixel value and the amount of shift.

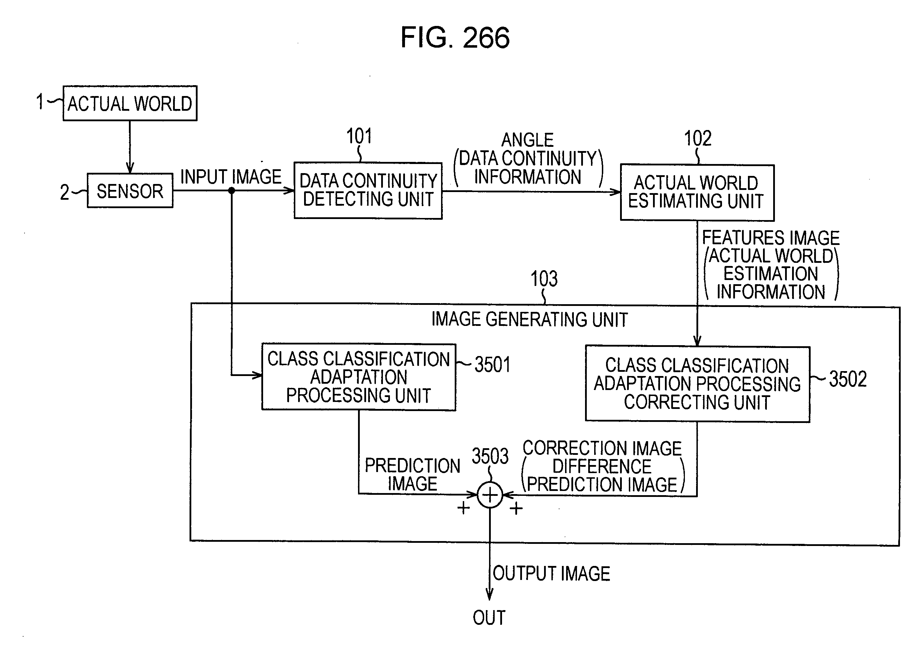

Fig. 266 is a block diagram for describing a configuration example of the image generating unit which uses the one-dimensional re-integration technique in the class classification adaptation process correction technique, which is an example of an embodiment of the image generating unit shown in Fig. 3.

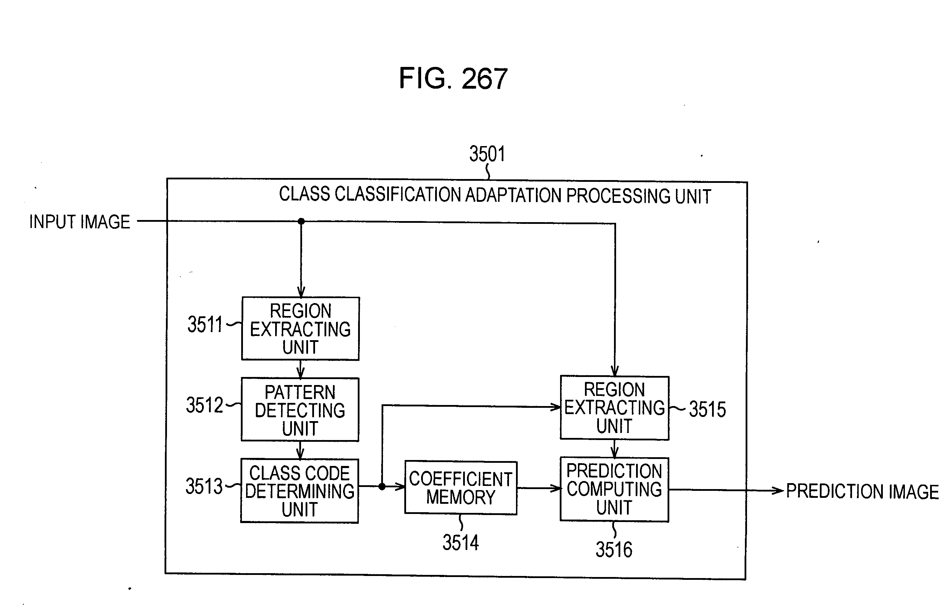

Fig. 267 is a block diagram describing a configuration example of the class classification adaptation processing unit of the image generating unit shown in Fig. 266.

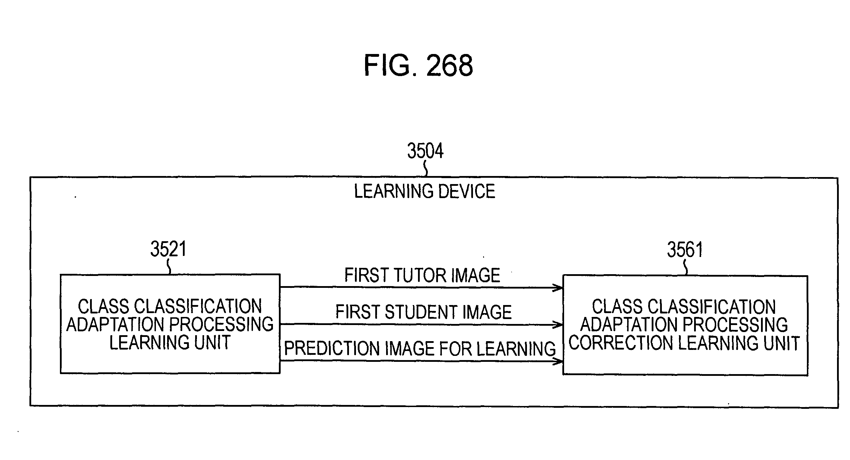

Fig. 268 is a block diagram illustrating the configuration example of class classification adaptation processing unit shown in Fig. 266, and a learning device for determining a coefficient for the class classification adaptation processing correction unit to use by way of learning.

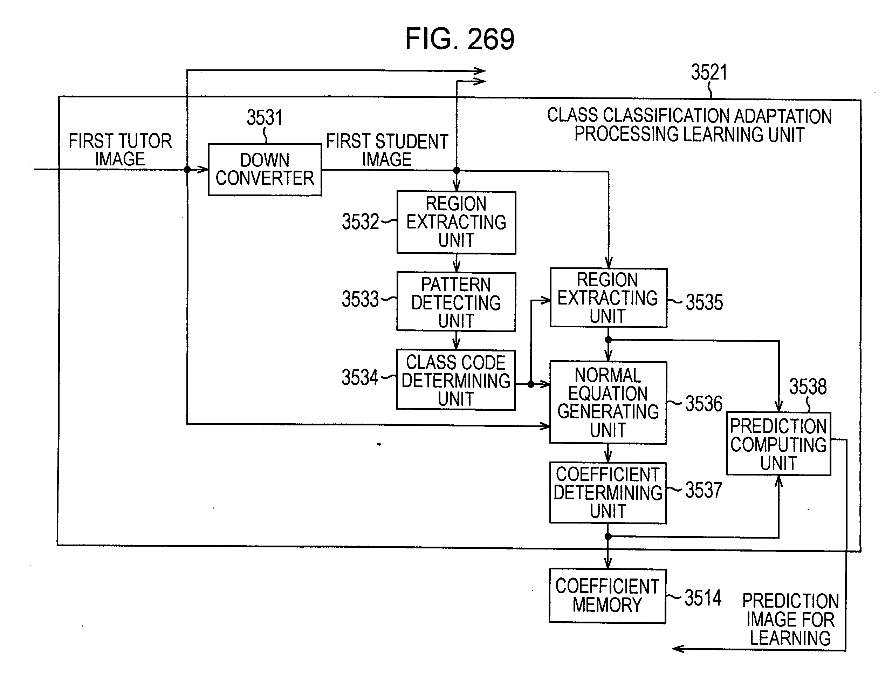

Fig. 269 is a block diagram for describing a detailed configuration example of the learning unit for the class classification adaptation processing unit, shown in Fig. 268.

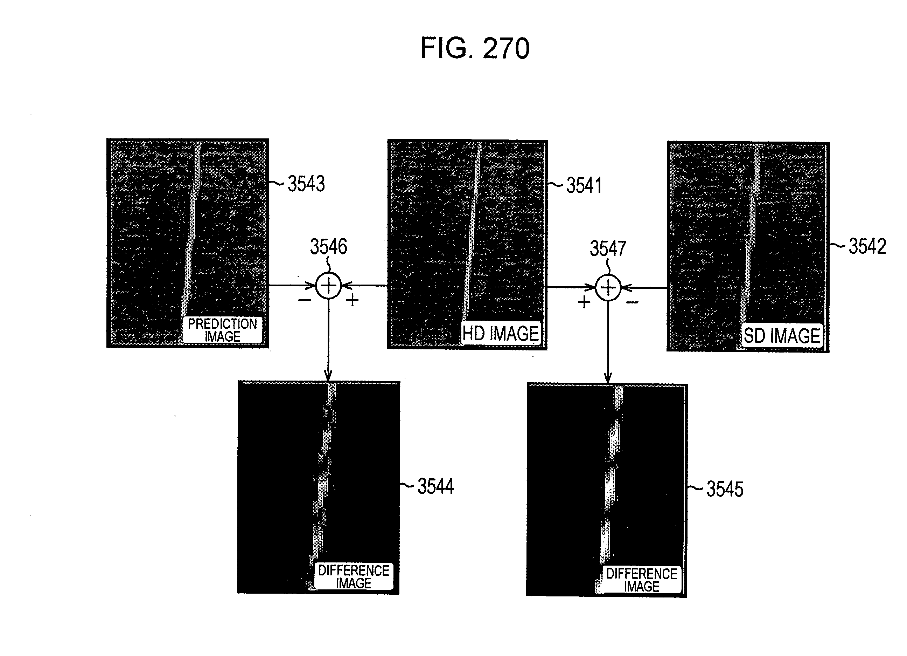

Fig. 270 is a diagram illustrating an example of processing results of the class classification adaptation processing unit shown in Fig. 267.

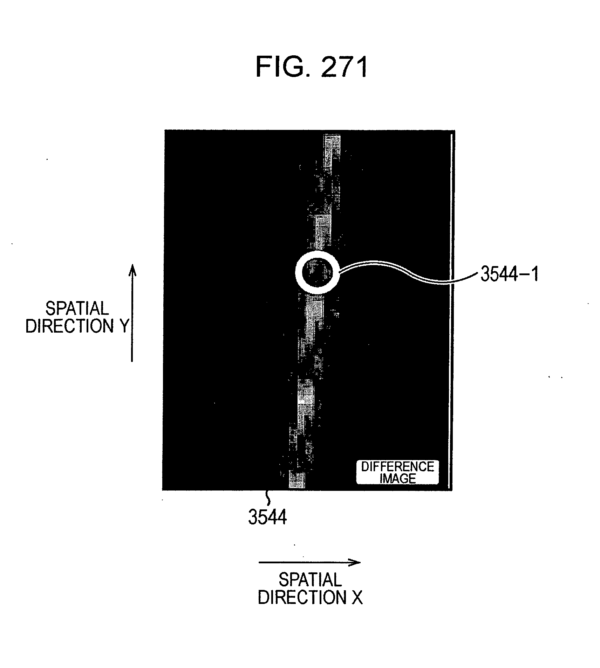

Fig. 271 is a diagram illustrating a difference image between the prediction image shown in Fig. 270 and an HD image.

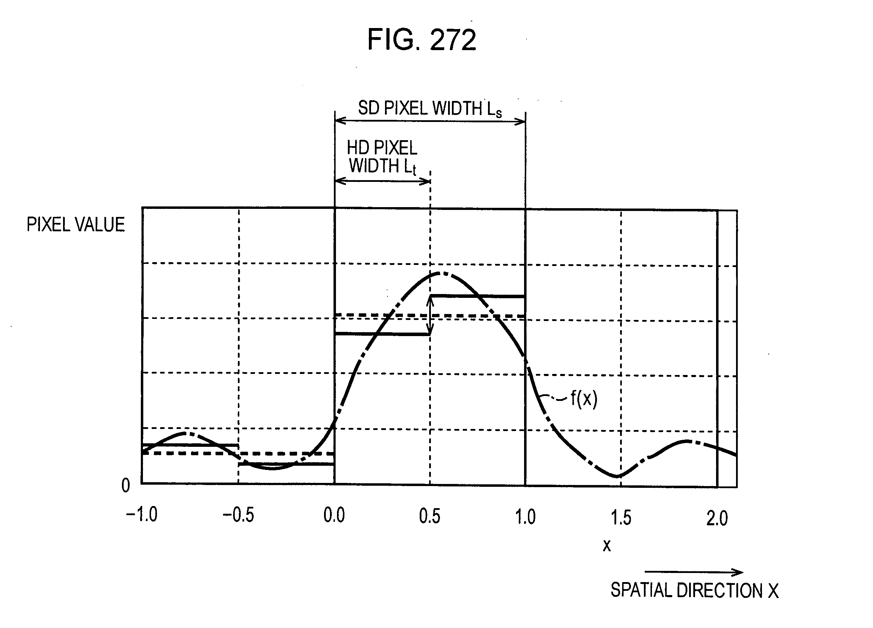

Fig. 272 is a diagram plotting each of specific pixel values of the HD image in Fig. 270, specific pixel values of the SD image, and actual waveform (actual world signals), corresponding to the four HD pixels from the left of the six continuous HD pixels in the X direction contained in the region shown in Fig. 271.

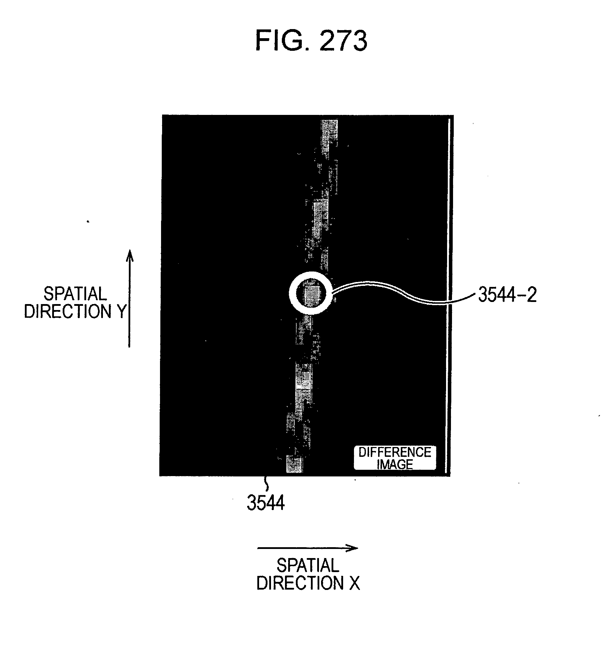

Fig. 273 is a diagram illustrating a difference image of the prediction image in Fig. 270 and an HD image.

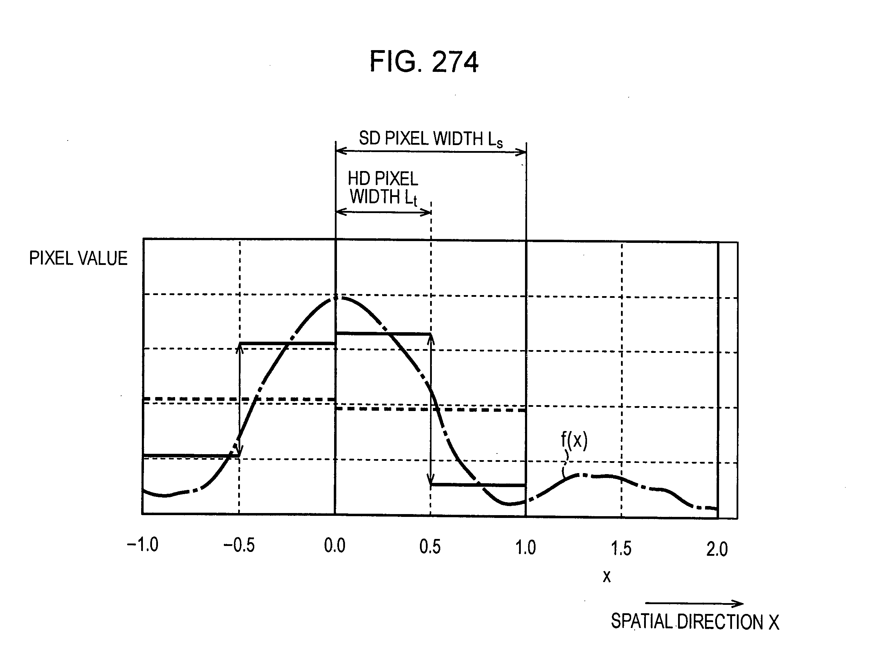

Fig. 274 is a diagram plotting each of specific pixel values of the HD image in Fig. 270, specific pixel values of the SD image, and actual waveform (actual world signals), corresponding to the four HD pixels from the left of the six continuous HD pixels in the X direction contained in the region shown in Fig. 273.

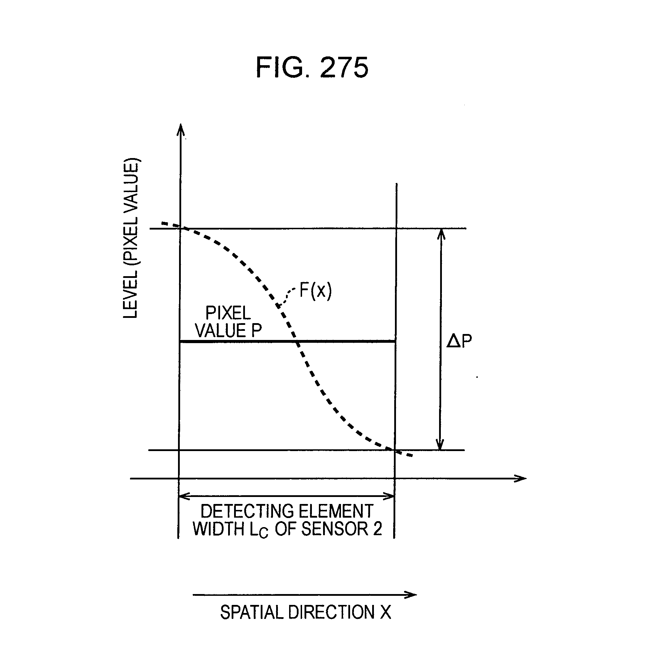

Fig. 275 is a diagram for describing understanding obtained based on the contents shown in Fig. 272 through Fig. 274.

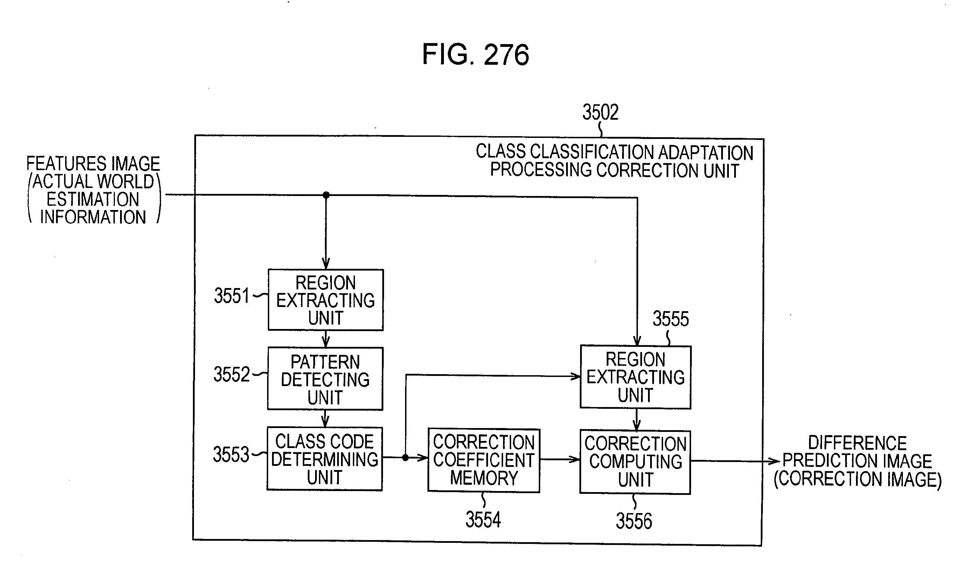

Fig. 276 is a block diagram for describing a configuration example of the class classification adaptation processing correction unit of the image generating unit shown in Fig. 266.

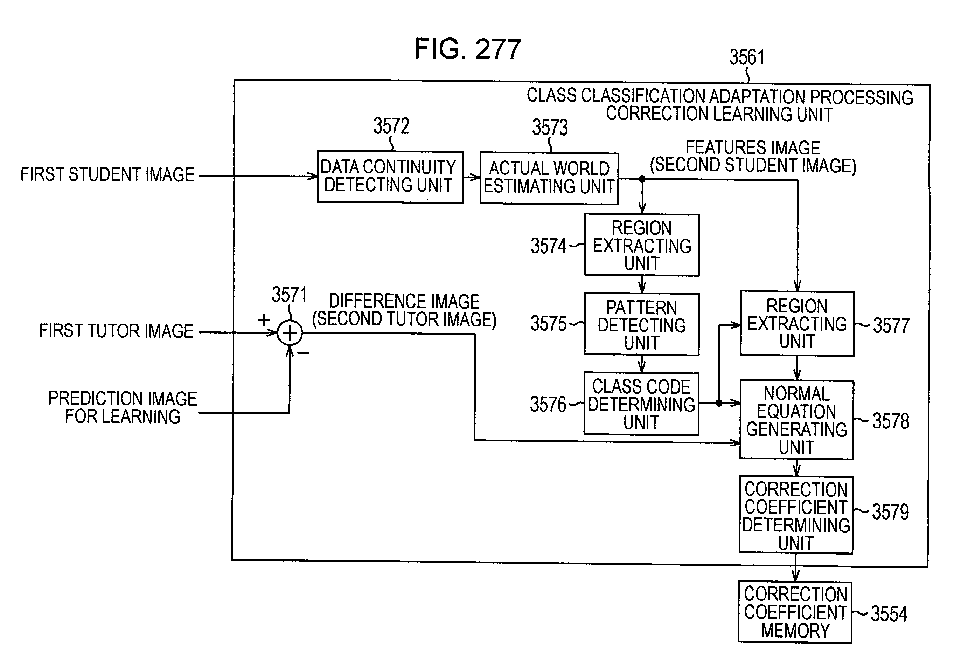

Fig. 277 is a block diagram for describing a detailed configuration example of the learning unit for the class classification adaptation processing correction unit.

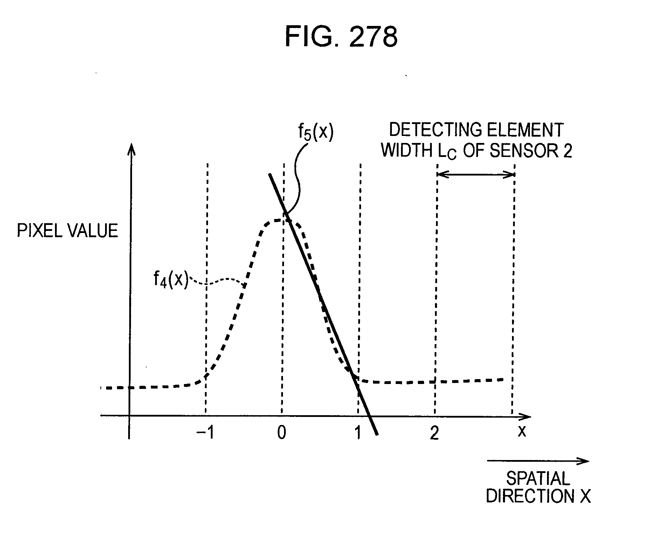

Fig. 278 is a diagram for describing in-pixel gradient.

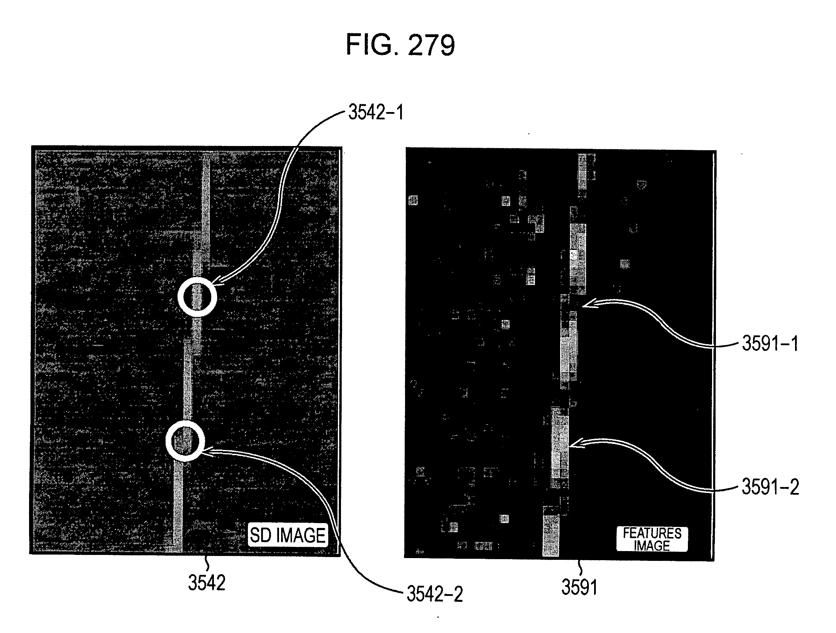

Fig. 279 is a diagram illustrating the SD image shown in Fig. 270, and a features image having as the pixel value thereof the in-pixel gradient of each of the pixels of the SD image.

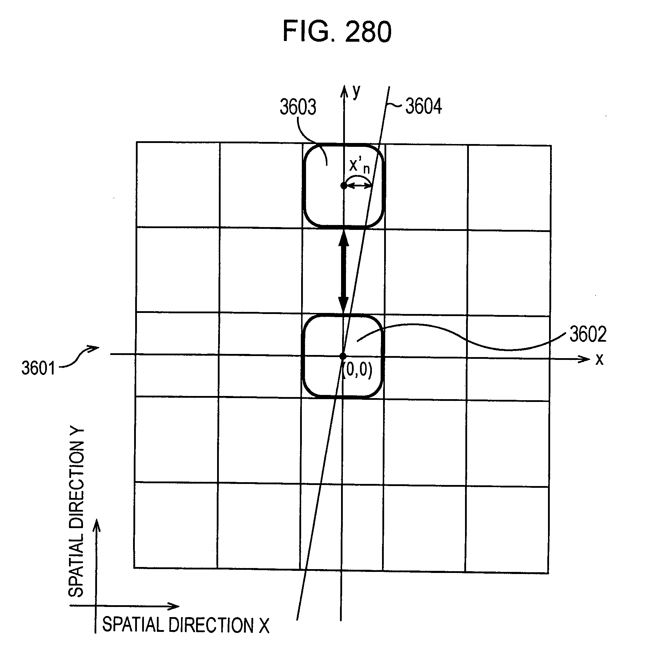

Fig. 280 is a diagram for describing an in-pixel gradient calculation method.

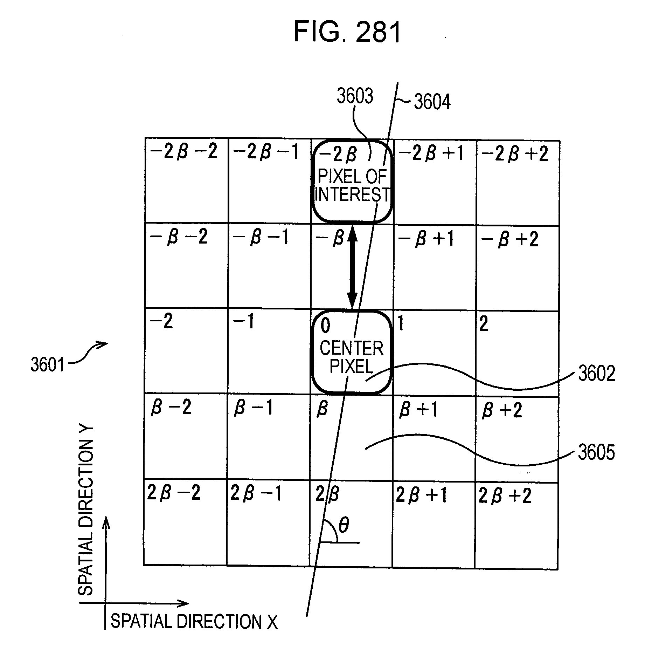

Fig. 281 is a diagram for describing an in-pixel gradient calculation method.

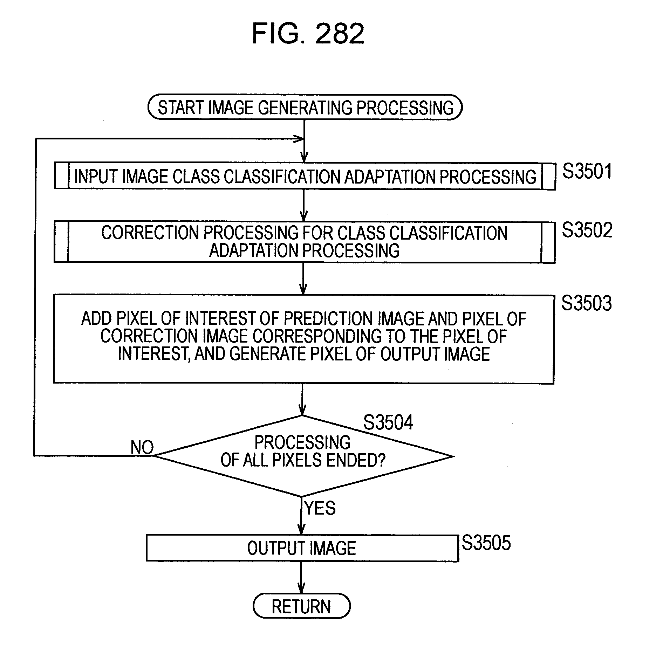

Fig. 282 is a flowchart for describing the image generating processing which the image generating unit of the configuration shown in Fig. 266 executes.

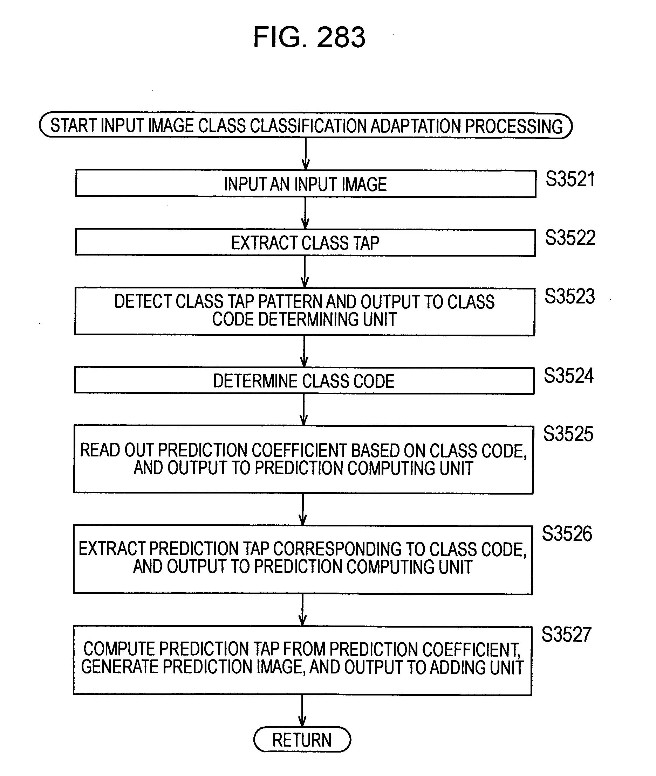

Fig. 283 is a flowchart describing detailed input image class classification adaptation processing in the image generating processing in Fig. 282.

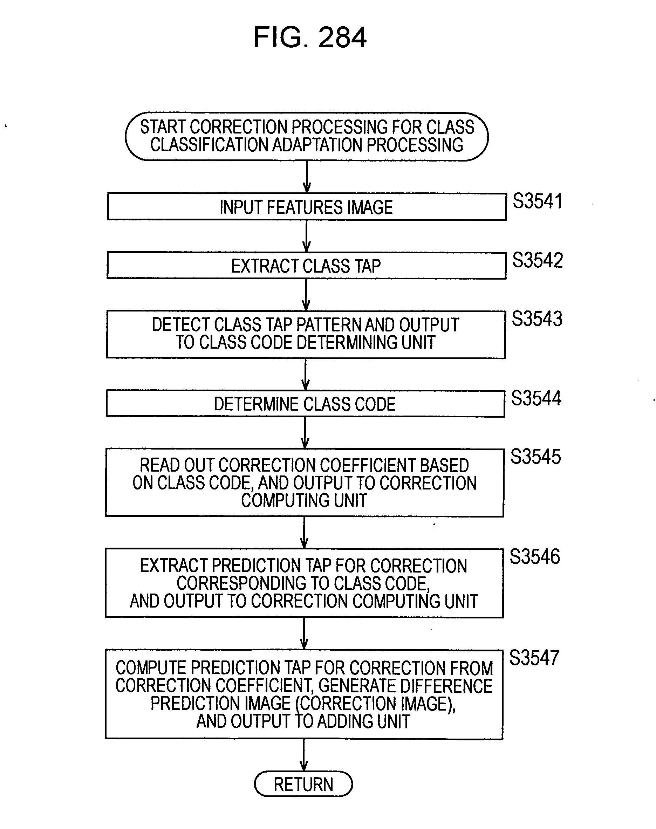

Fig. 284 is a flowchart for describing detailed correction processing of the class classification adaptation processing in the image generating processing in Fig. 282.

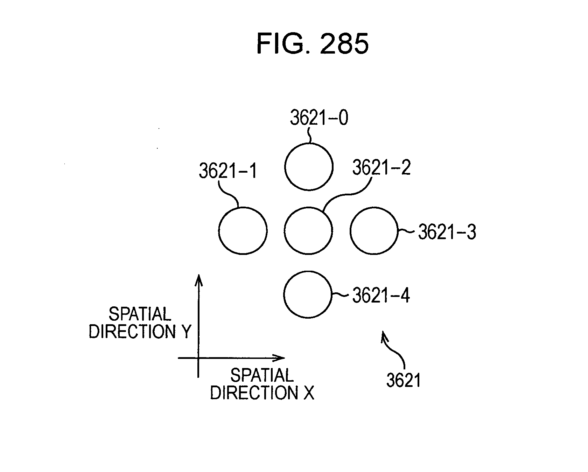

Fig. 285 is a diagram for describing an example of a class tap array.

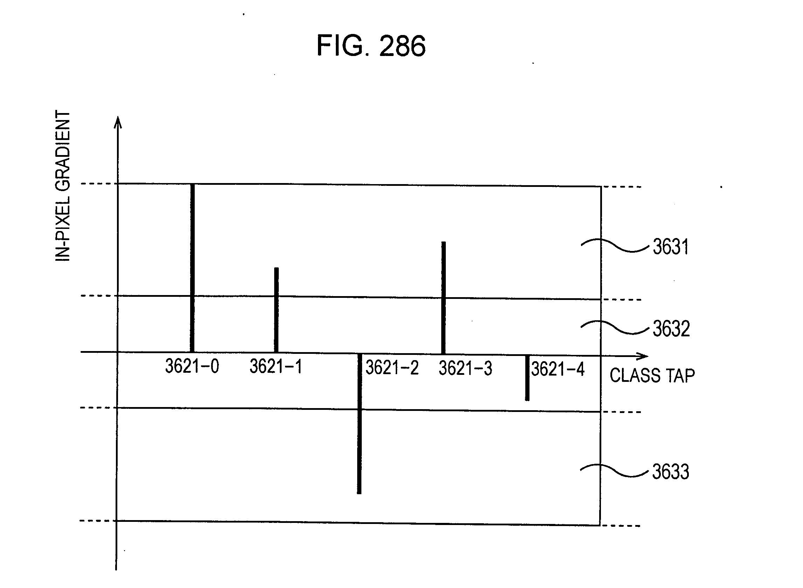

Fig. 286 is a diagram for describing an example of class classification.

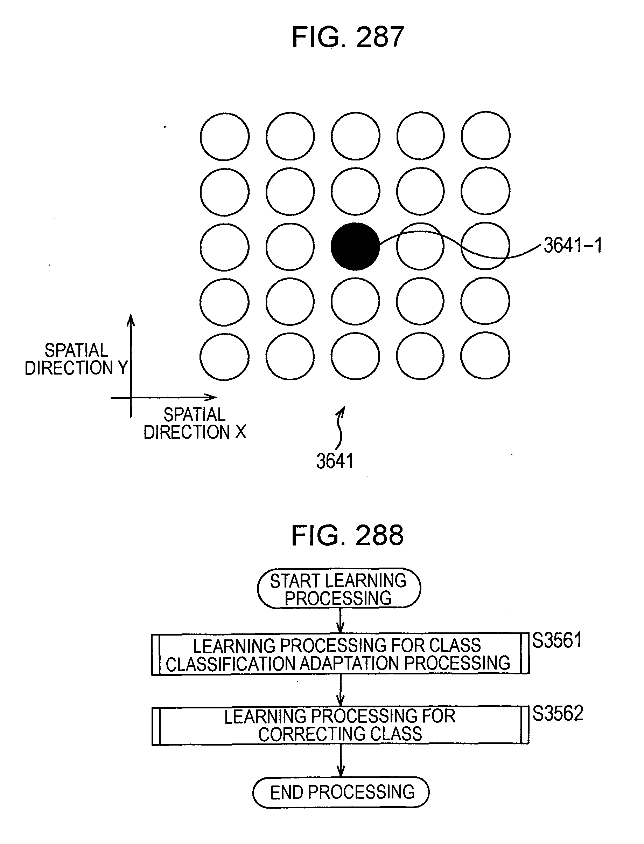

Fig. 287 is a diagram for describing an example of a prediction tap array.

Fig. 288 is a flowchart for describing learning processing of the learning device shown in Fig. 268.

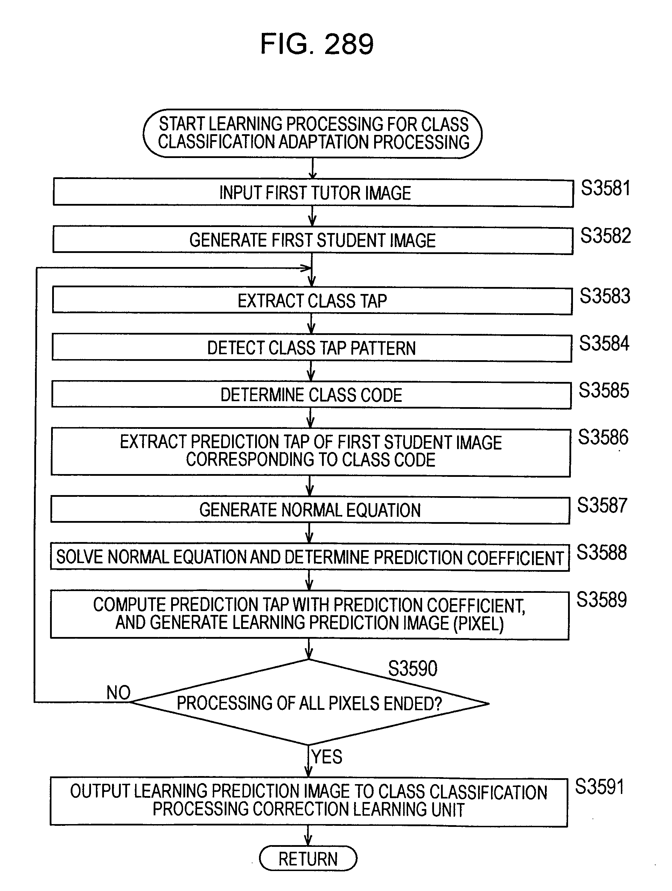

Fig. 289 is a flowchart for describing detailed learning processing for the class classification adaptation processing in the learning processing shown in Fig. 288.

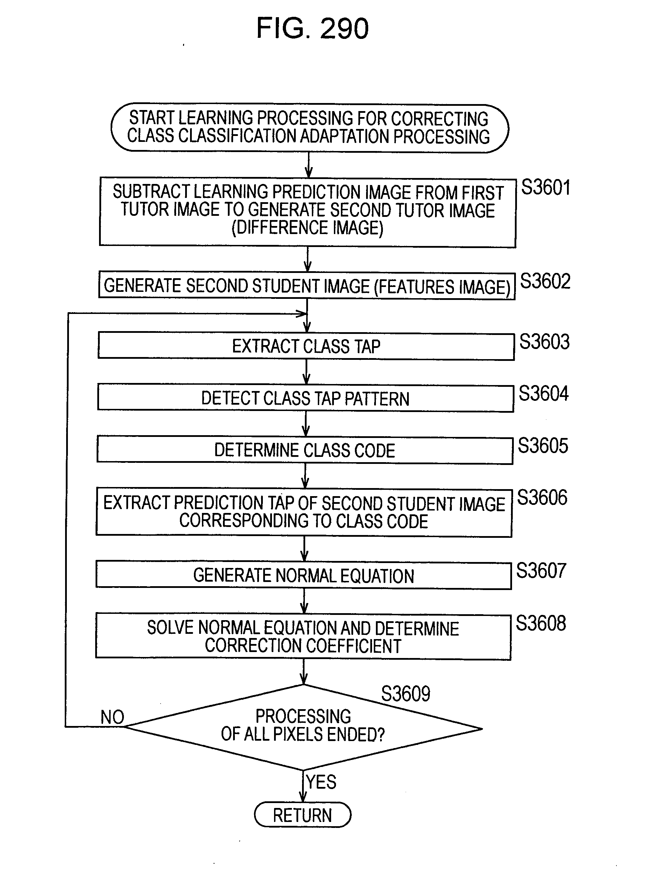

Fig. 290 is a flowchart for describing detailed learning processing for the class classification adaptation processing correction in the learning processing shown in Fig. 288.

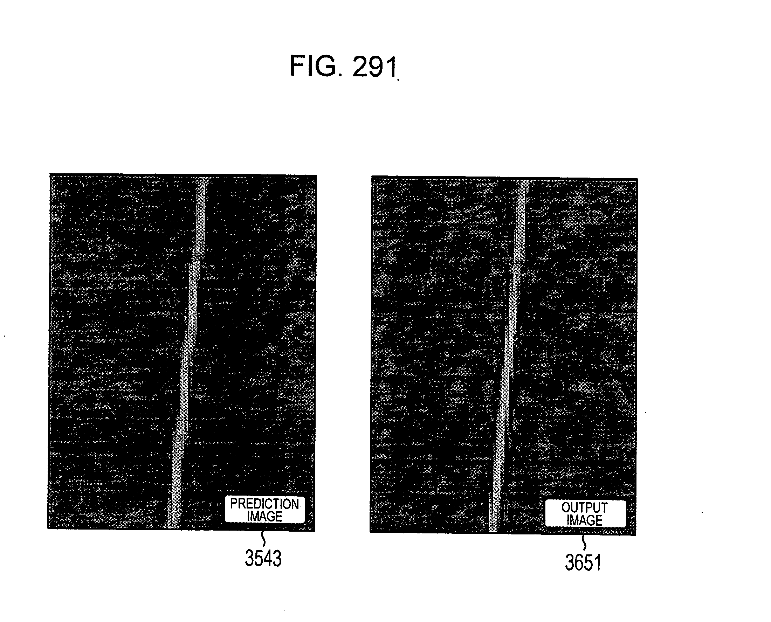

Fig. 291 is a diagram illustrating the prediction image shown in Fig. 270, and an image wherein a correction image is added to the prediction image (the image generated by the image generating unit shown in Fig. 266).

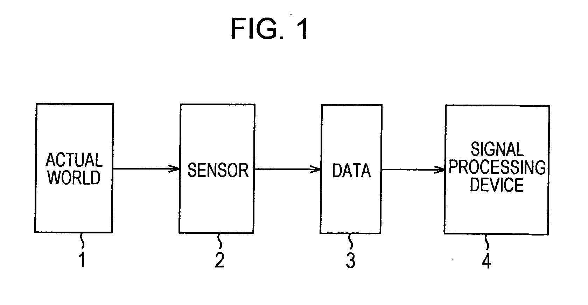

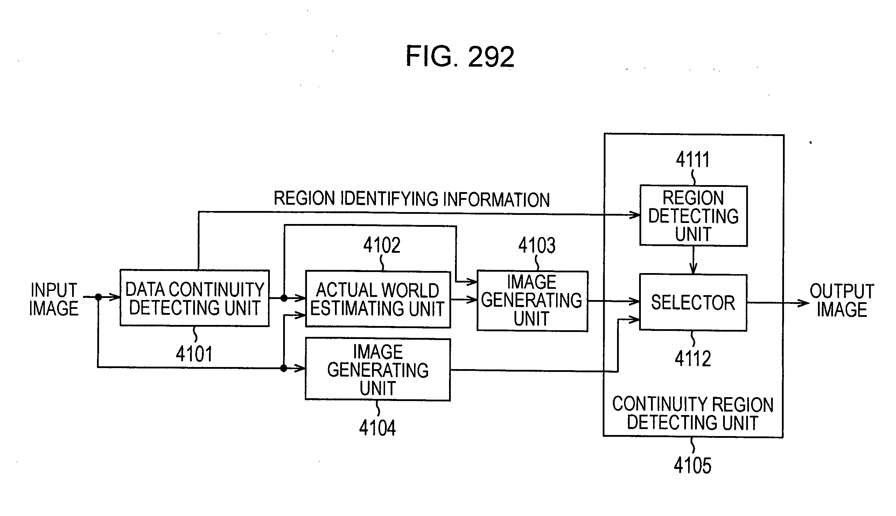

Fig. 292 is a block diagram describing a first configuration example of a signal processing device using a hybrid technique, which is another example of an embodiment of the signal processing device shown in Fig. 1.

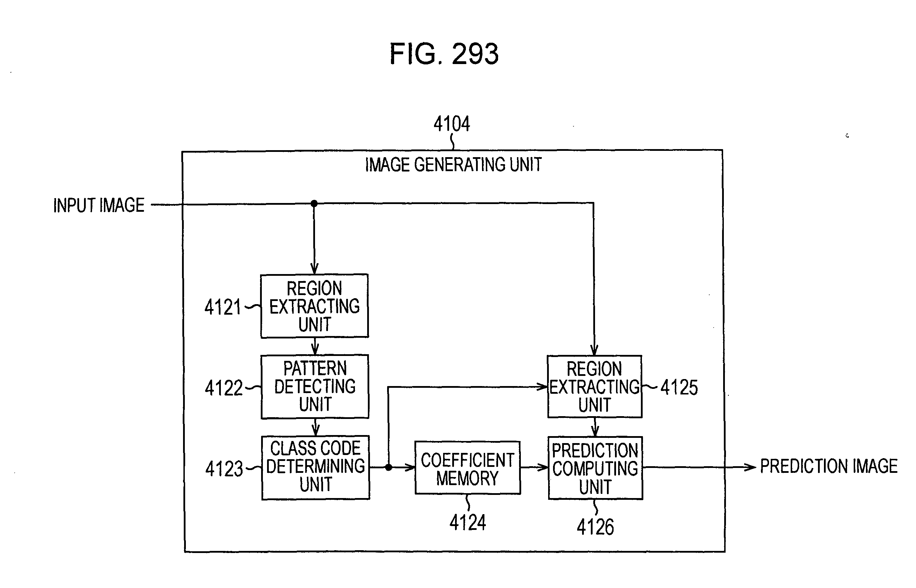

Fig. 293 is a block diagram for describing a configuration example of an image generating unit for executing the class classification adaptation processing of the signal processing device shown in Fig. 292.

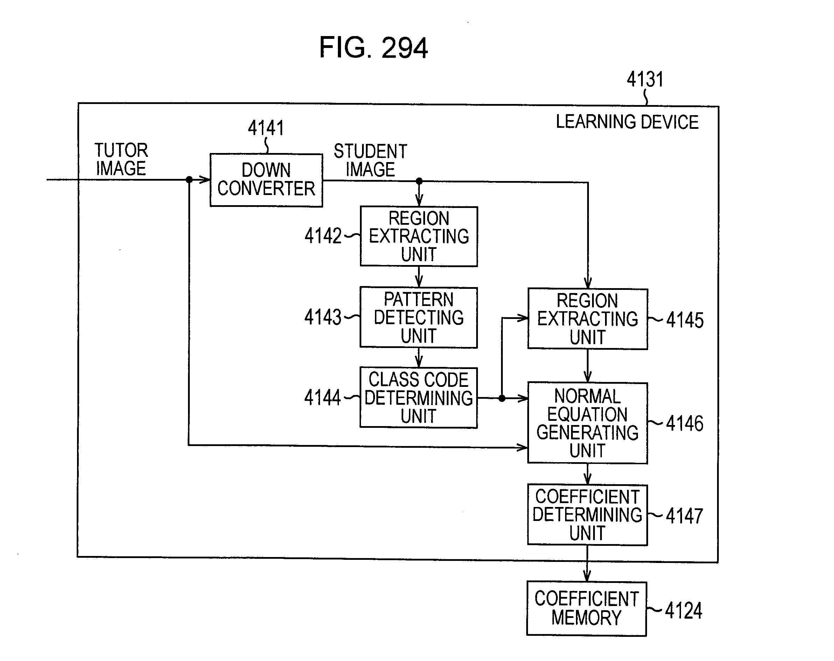

Fig. 294 is a block diagram for describing a configuration example of the learning device as to the image generating unit shown in Fig. 293.

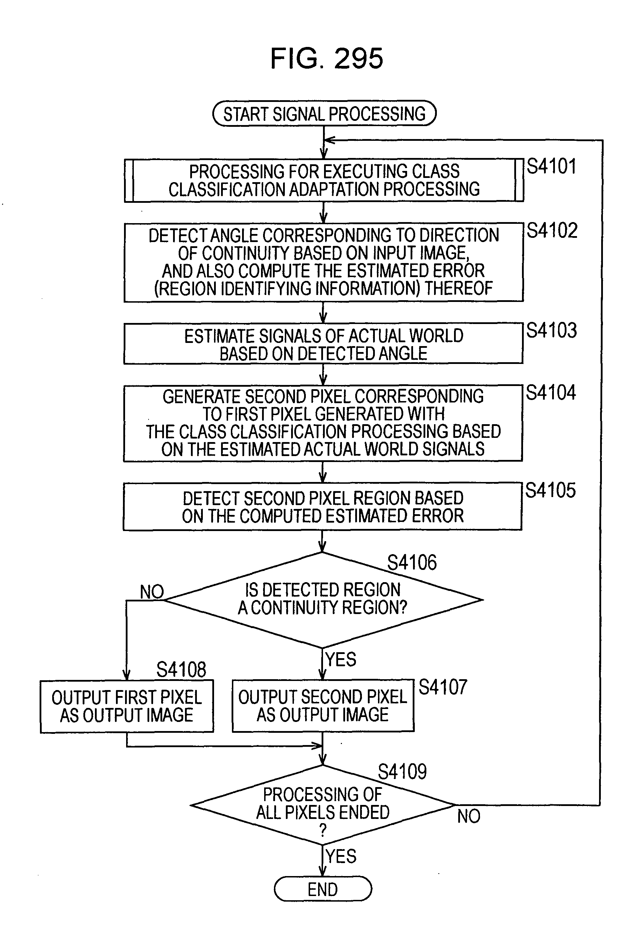

Fig. 295 is a flowchart for describing the processing of signals executed by the signal processing device of the configuration shown in Fig. 292.

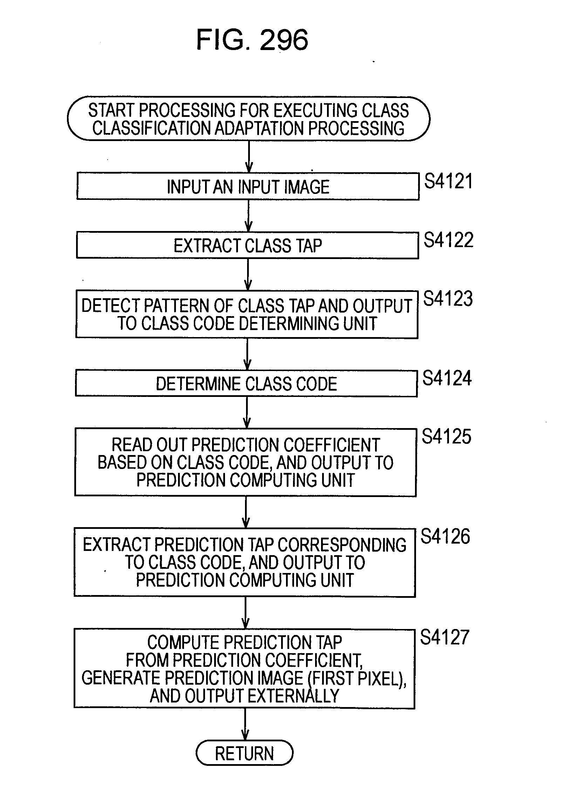

Fig. 296 is a flowchart for describing the details of executing processing of the class classification adaptation processing of the signal processing in Fig. 295.

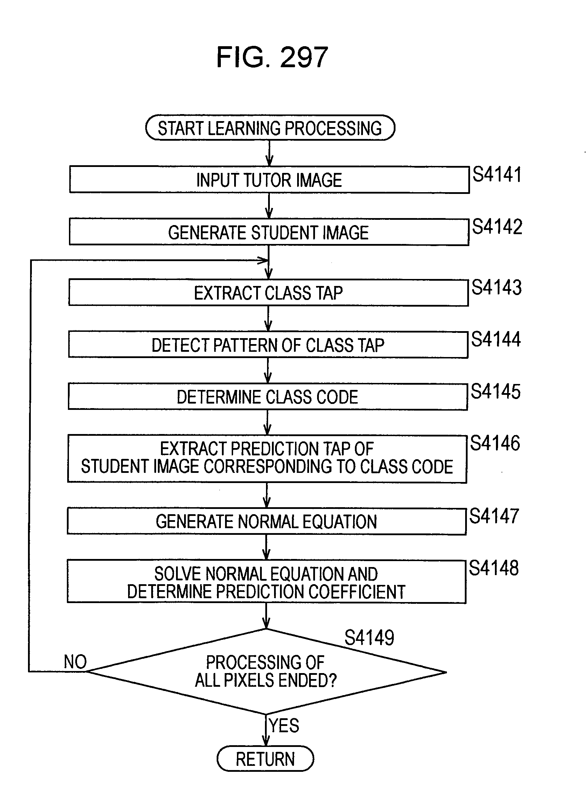

Fig. 297 is a flowchart for describing the learning processing of the learning device shown in Fig. 294.

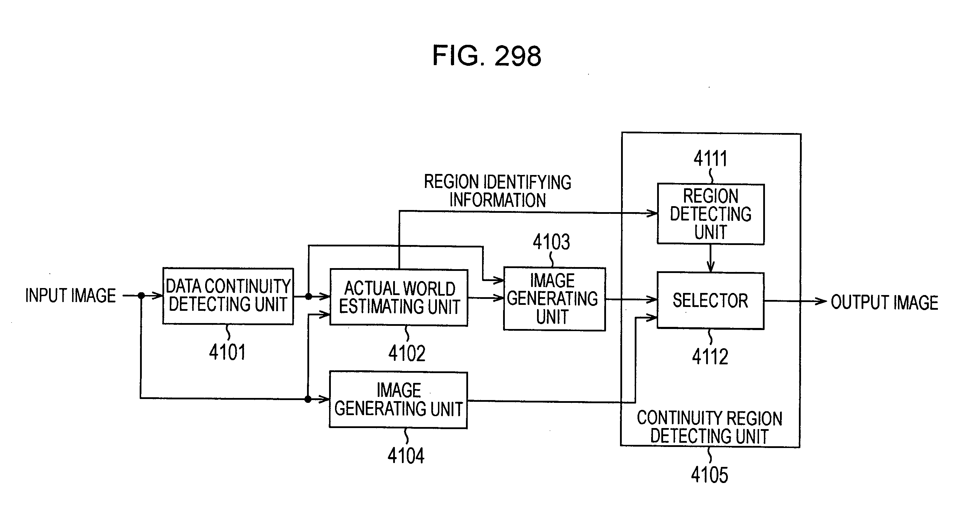

Fig. 298 is a block diagram describing a second configuration example of a signal processing device using a hybrid technique, which is another example of an embodiment of the signal processing device shown in Fig. 1.

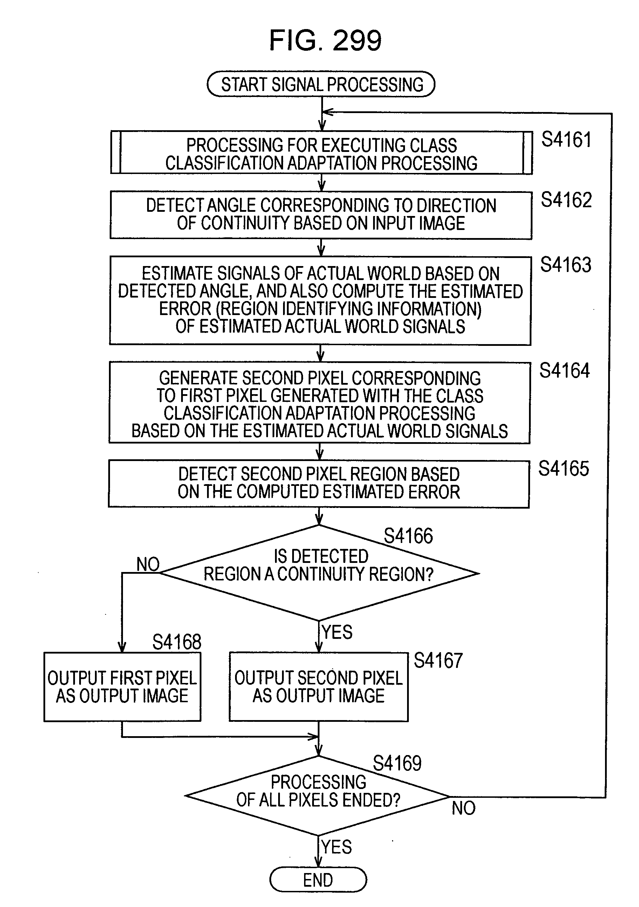

Fig. 299 is a flowchart for describing signal processing which the signal processing device of the configuration shown in Fig. 296 executes.

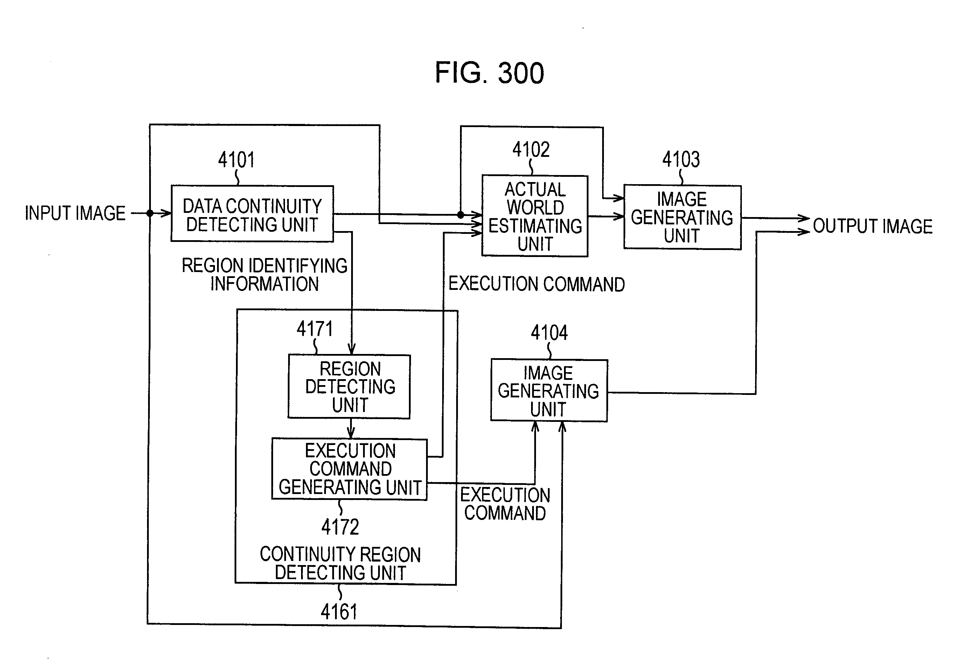

Fig. 300 is a block diagram describing a third configuration example of a signal processing device using a hybrid technique, which is another example of an embodiment of the signal processing device shown in Fig. 1.

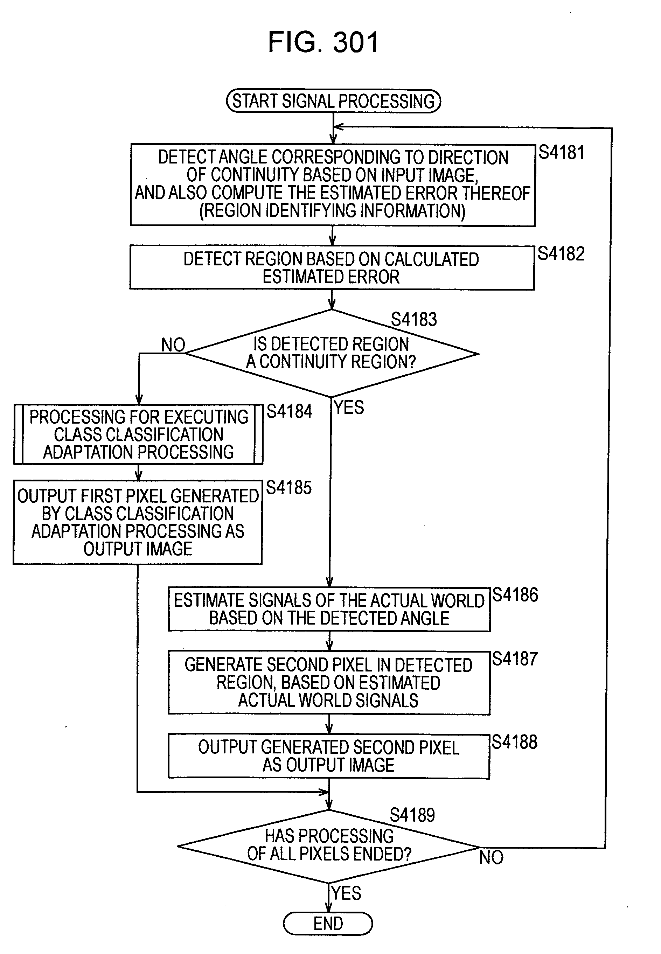

Fig. 301 is a flowchart for describing signal processing which the signal processing device of the configuration shown in Fig. 298 executes.

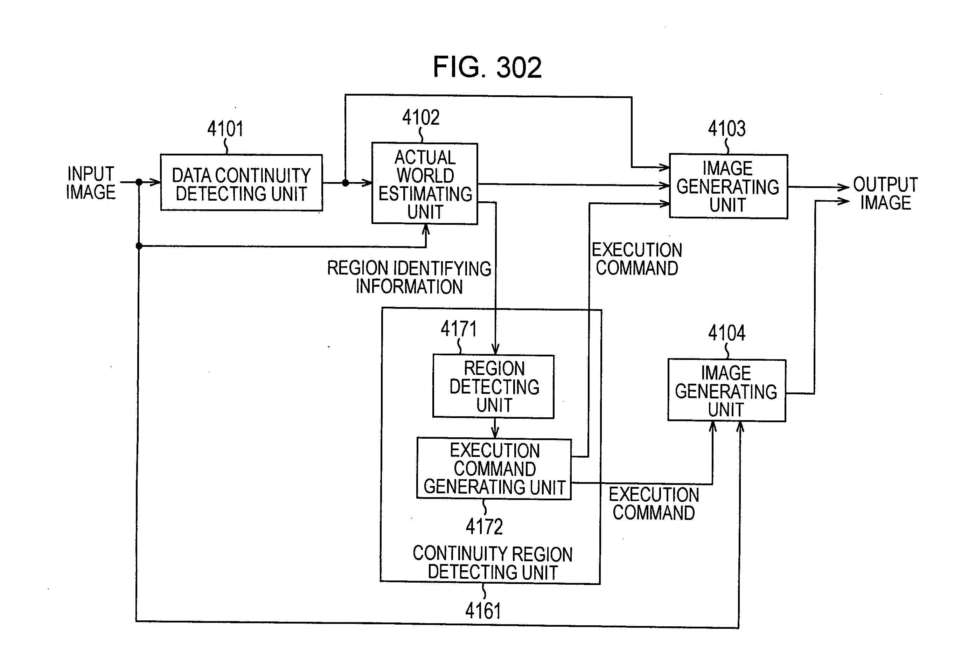

Fig. 302 is a block diagram describing a fourth configuration example of a signal processing device using a hybrid technique, which is another example of an embodiment of the signal processing device shown in Fig. 1.

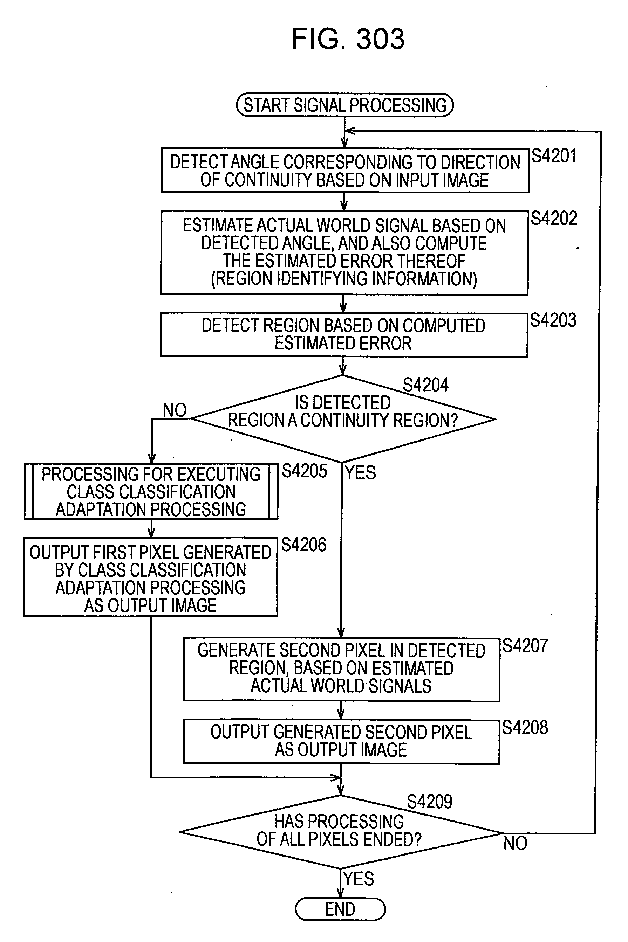

Fig. 303 is a flowchart for describing signal processing which the signal processing device of the configuration shown in Fig. 300 executes.

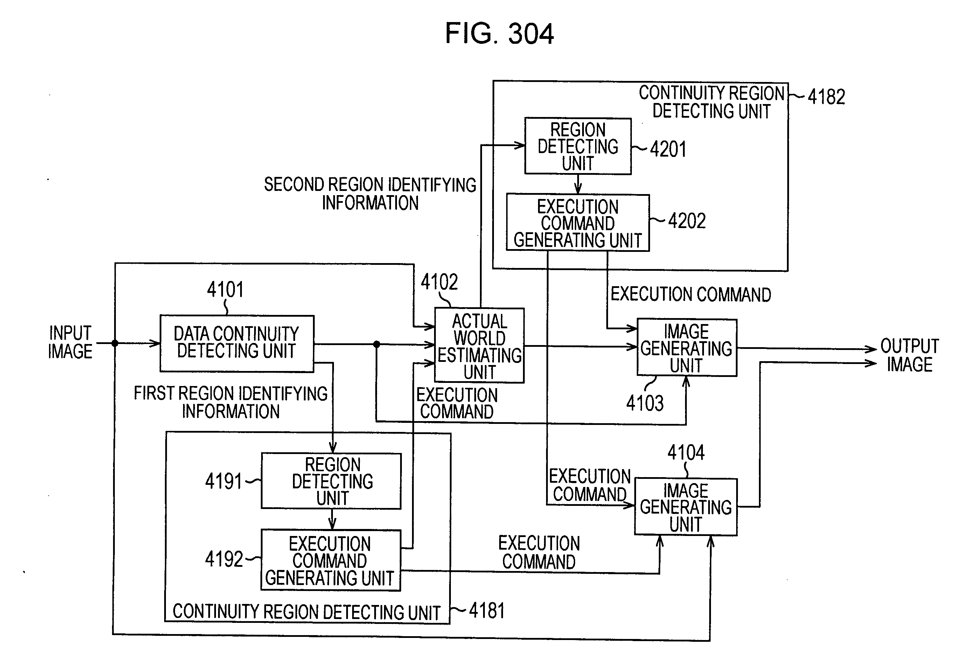

Fig. 304 is a block diagram describing a fifth configuration example of a signal processing device using a hybrid technique, which is another example of an embodiment of the signal processing device shown in Fig. 1.

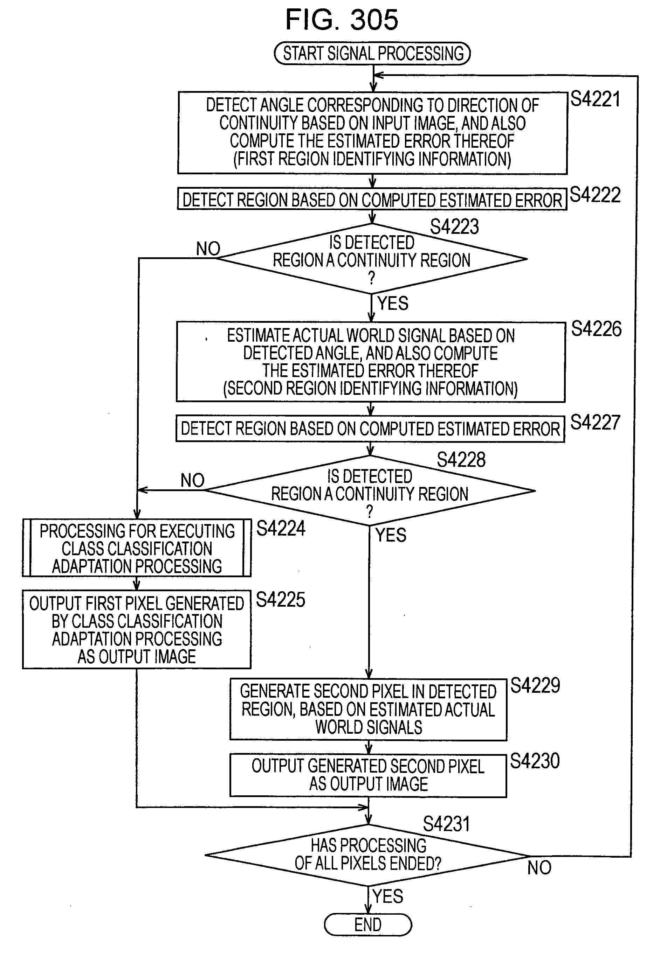

Fig. 305 is a flowchart for describing signal processing which the signal processing device of the configuration shown in Fig. 302 executes.

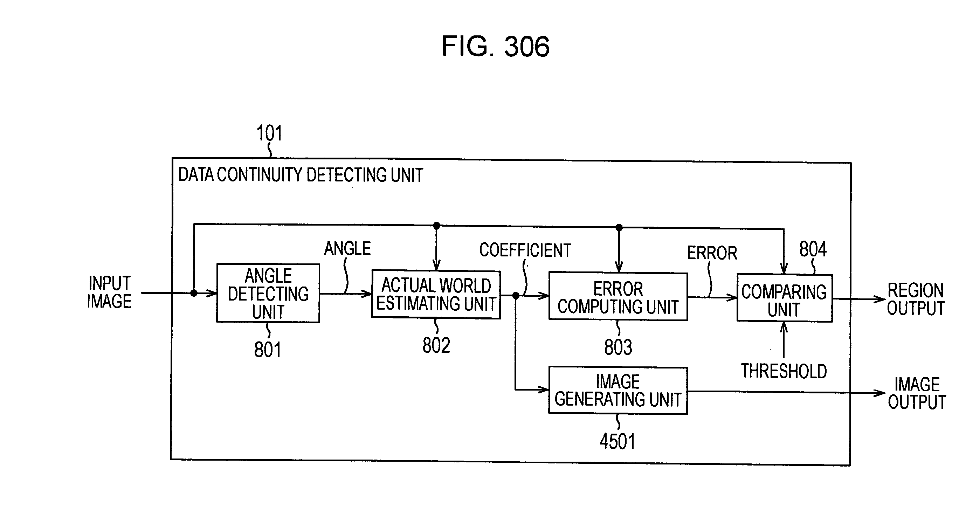

Fig. 306 is a block diagram illustrating the configuration of another embodiment of the data continuity detecting unit.

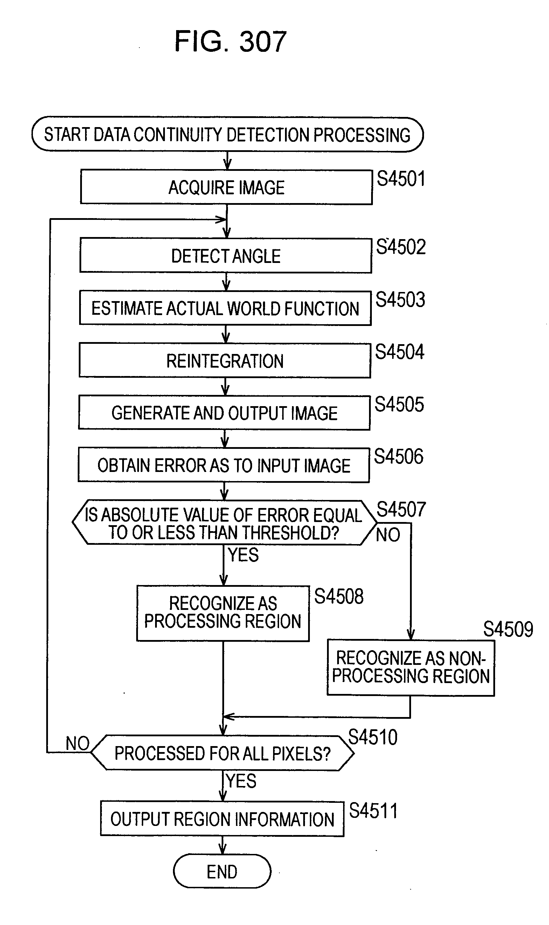

Fig. 307 is a flowchart for describing data continuity detecting processing with the data continuity detecting unit shown in Fig. 306.

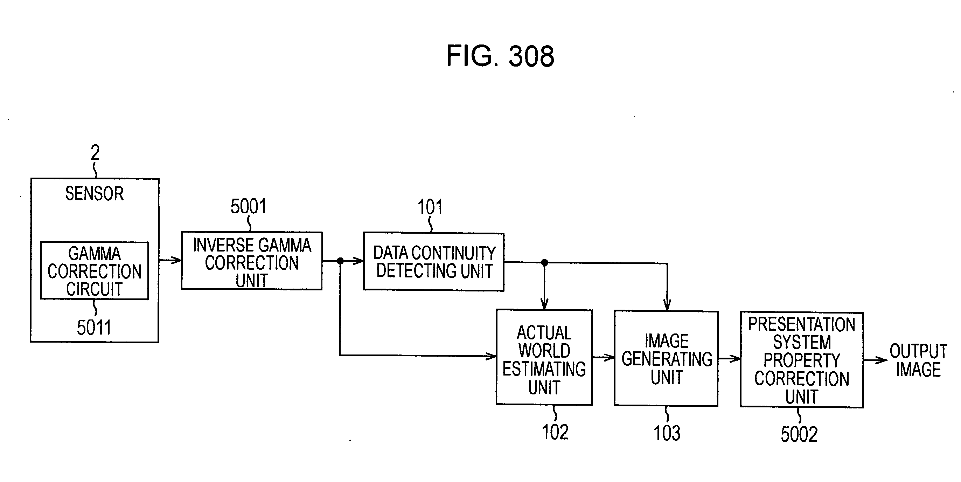

Fig. 308 is a block diagram illustrating another configuration of the signal processing device.

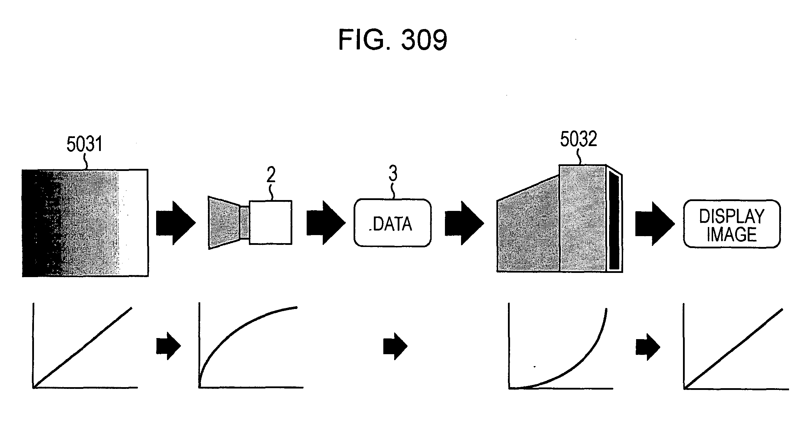

Fig. 309 is a diagram for describing gamma correction.

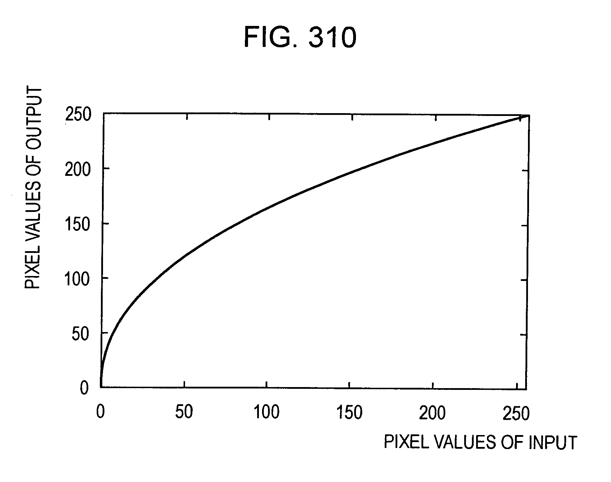

Fig. 310 is a diagram illustrating a gamma correction curve.

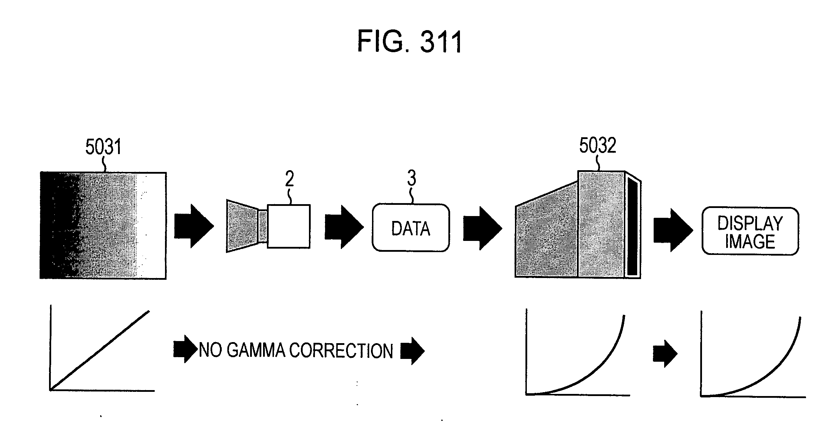

Fig. 311 is a diagram for describing a non-linear display image with no gamma correction performed.

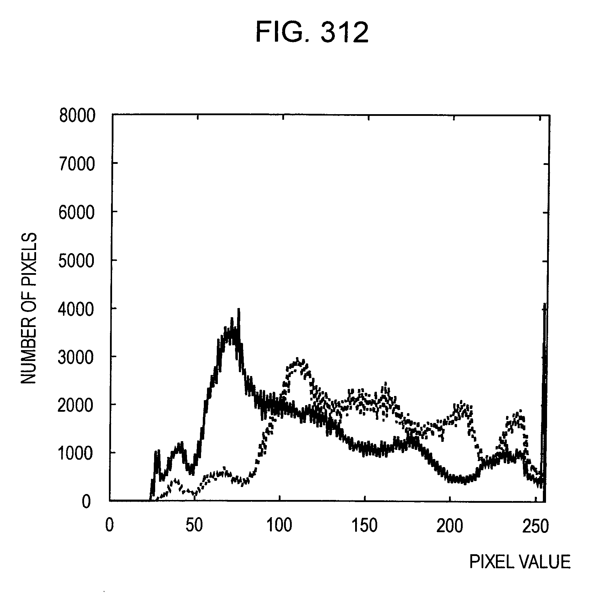

Fig. 312 is a diagram illustrating an example of change in pixel value due to gamma correction.

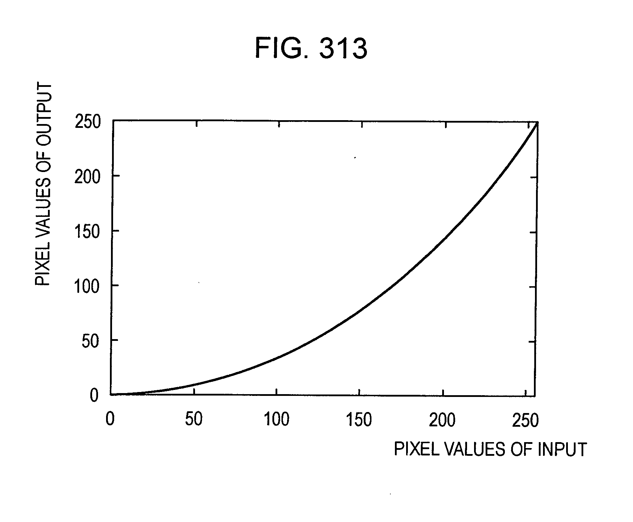

Fig. 313 is a diagram illustrating an inverse gamma correction curve.

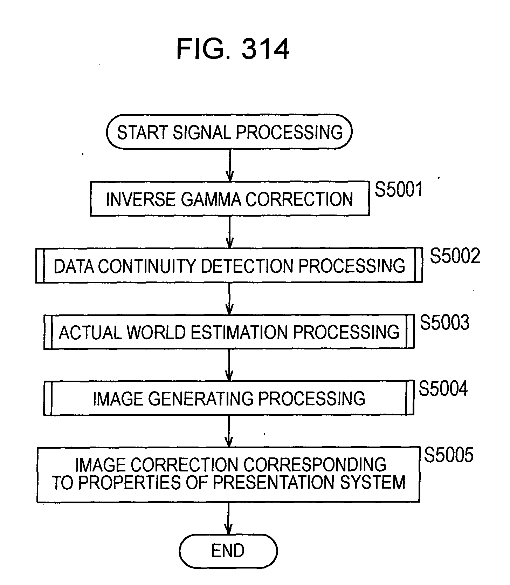

Fig. 314 is a flowchart describing signal processing.


Best Mode for Carrying Out the Invention

Fig. 1 illustrates the principle of the present invention. As shown in the drawing, events (phenomena) in an actual world 1 having dimensions such as space, time, mass, and so forth, are acquired by a sensor 2, and formed into data. Events in the actual world 1 refer to light (images), sound, pressure, temperature, mass, humidity, brightness/ darkness, or acts, and so forth. The events in the actual world 1 are distributed in the space-time directions. For example, an image of the actual world 1 is a distribution of the intensity of light of the actual world 1 in the space-time directions.

Taking note of the sensor 2, of the events in the actual world 1 having the dimensions of space, time, and mass, the events in the actual world 1 which the sensor 2 can acquire, are converted into data 3 by the sensor 2. It can be said that information indicating events in the actual world 1 are acquired by the sensor 2.

That is to say, the sensor 2 converts information indicating events in the actual world 1, into data 3. It can be said that signals which are information indicating the events (phenomena) in the actual world 1 having dimensions such as space, time, and mass, are acquired by the sensor 2 and formed into data.

Hereafter, the distribution of events such as light (images), sound, pressure, temperature, mass, humidity, rightness/darkness, or smells, and so forth, in the actual world 1, will be referred to as signals of the actual world 1, which are information indicating events. Also, signals which are information indicating events of the actual world 1 will also be referred to simply as signals of the actual world 1. In the present Specification, signals are to be understood to include phenomena and events, and also include those wherein there is no intent on the transmitting side.

The data 3 (detected signals) output from the sensor 2 is information obtained by projecting the information indicating the events of the actual world 1 on a space-time having a lower dimension than the actual world 1. For example, the data 3 which is image data of a moving image, is information obtained by projecting an image of the three-dimensional space direction and time direction of the actual world 1 on the time-space having the two-dimensional space direction and time direction. Also, in the event that the data 3 is digital data for example, the data 3 is rounded off according to the sampling increments. In the event that the data 3 is analog data, information of the data 3 is either compressed according to the dynamic range, or a part of the information has been deleted by a limiter or the like.

Thus, by projecting the signals shown are information indicating events in the actual world 1 having a predetermined number of dimensions onto data 3 (detection signals), a part of the information indicating events in the actual world 1 is dropped. That is to say, a part of the information indicating events in the actual world 1 is dropped from the data 3 which the sensor 2 outputs.

However, even though a part of the information indicating events in the actual world 1 is dropped due to projection, the data 3 includes useful information for estimating the signals which are information indicating events (phenomena) in the actual world 1.

With the present invention, information having continuity contained in the data 3 is used as useful information for estimating the signals which is information of the actual world 1. Continuity is a concept which is newly defined.

Taking note of the actual world 1, events in the actual world 1 include characteristics which are constant in predetermined dimensional directions. For example, an object (corporeal object) in the actual world 1 either has shape, pattern, or color that is continuous in the space direction or time direction, or has repeated patterns of shape, pattern, or color.

Accordingly, the information indicating the events in actual world 1 includes characteristics constant in a predetermined dimensional direction.

With a more specific example, a linear object such as a string, cord, or rope, has a characteristic which is constant in the length-wise direction, i.e., the spatial direction, that the cross-sectional shape is the same at arbitrary positions in the length-wise direction. The constant characteristic in the spatial direction that the cross-sectional shape is the same at arbitrary positions in the length-wise direction comes from the characteristic that the linear object is long.

Accordingly, an image of the linear object has a characteristic which is constant in the length-wise direction, i.e., the spatial direction, that the cross-sectional shape is the same, at arbitrary positions in the length-wise direction.

Also, a monotone object, which is a corporeal object, having an expanse in the spatial direction, can be said to have a constant characteristic of having the same color in the spatial direction regardless of the part thereof.

In the same way, an image of a monotone object, which is a corporeal object, having an expanse in the spatial direction, can be said to have a constant characteristic of having the same color in the spatial direction regardless of the part thereof.

In this way, events in the actual world 1 (real world) have characteristics which are constant in predetermined dimensional directions, so signals of the actual world 1 have characteristics which are constant in predetermined dimensional directions.

In the present Specification, such characteristics which are constant in predetermined dimensional directions will be called continuity. Continuity of the signals of the actual world 1 (real world) means the characteristics which are constant in predetermined dimensional directions which the signals indicating the events of the actual world 1 (real world) have.

Countless such continuities exist in the actual world 1 (real world).

Next, taking note of the data 3, the data 3 is obtained by signals which is information indicating events of the actual world 1 having predetermined dimensions being projected by the sensor 2, and includes continuity corresponding to the continuity of signals in the real world. It can be said that the data 3 includes continuity wherein the continuity of actual world signals has been projected.

However, as described above, in the data 3 output from the sensor 2, a part of the information of the actual world 1 has been lost, so a part of the continuity contained in the signals of the actual world 1 (real world) is lost.

In other words., the data 3 contains a part of the continuity within the continuity of the signals of the actual world 1 (real world) as data continuity. Data continuity means characteristics which are constant in predetermined dimensional directions, which the data 3 has.

With the present invention, the data continuity which the data 3 has is used as significant data for estimating signals which are information indicating events of the actual world 1.

For example, with the present invention, information indicating an event in the actual world 1 which has been lost is generated by signals processing of the data 3, using data continuity.

Now, with the present invention, of the length (space), time, and mass, which are dimensions of signals serving as information indicating events in the actual world 1, continuity in the spatial direction or time direction, are used.

Returning to Fig. 1, the sensor 2 is formed of, for example, a digital still camera, a video camera, or the like, and takes images of the actual world 1, and outputs the image data which is the obtained data 3, to a signal processing device 4. The sensor 2 may also be a thermography device, a pressure sensor using photoelasticity, or the like.

The signal processing device 4 is configured of, for example, a personal computer or the like.

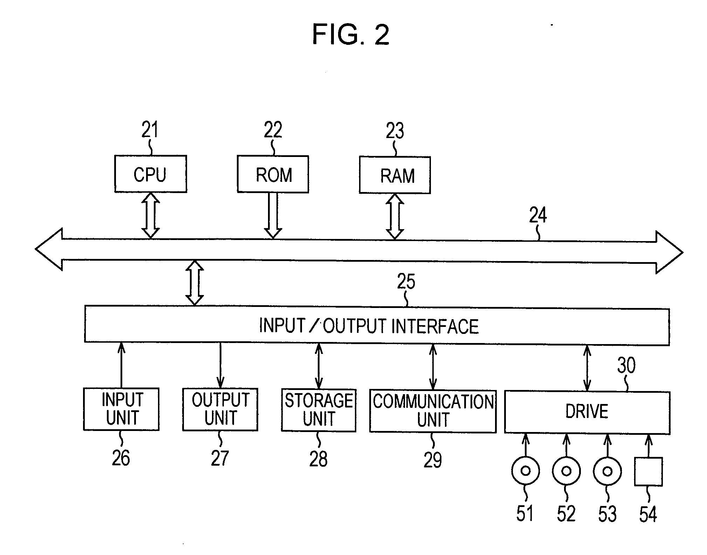

The signal processing device 4 is configured as shown in Fig. 2, for example. A CPU (Central Processing Unit) 21 executes various types of processing following programs stored in ROM (Read Only Memory) 22 or the storage unit 28. RAM (Random Access Memory) 23 stores programs to be executed by the CPU 21, data, and so forth, as suitable. The CPU 21, ROM 22, and RAM 23, are mutually connected by a bus 24.

Also connected to the CPU 21 is an input/output interface 25 via the bus 24. An input device 26 made up of a keyboard, mouse, microphone, and so forth, and an output unit 27 made up of a display, speaker, and so forth, are connected to the input/output interface 25. The CPU 21 executes various types of processing corresponding to commands input from the input unit 26. The CPU 21 then outputs images and audio and the like obtained as a result of processing to the output unit 27.

A storage unit 28 connected to the input/output interface 25 is configured of a hard disk for example, and stores the programs and various types of data which the CPU 21 executes. A communication unit 29 communicates with external devices via the Internet and other networks. In the case of this example, the communication unit 29 acts as an acquiring unit for capturing data 3 output from the sensor 2.

Also, an arrangement may be made wherein programs are obtained via the communication unit 29 and stored in the storage unit 28.

A drive 30 connected to the input/output interface 25 drives a magnetic disk 51, optical disk 52, magneto-optical disk 53, or semiconductor memory 54 or the like mounted thereto, and obtains programs and data recorded therein. The obtained programs and data are transferred to the storage unit 28 as necessary and stored.

Fig. 3 is a block diagram illustrating a signal processing device 4.

Note that whether the functions of the signal processing device 4 are realized by hardware or realized by software is irrelevant. That is to say, the block diagrams in the present Specification may be taken to be hardware block diagrams or may be taken to be software function block diagrams.

With the signal processing device 4 shown in Fig. 3, image data which is an example of the data 3 is input, and the continuity of the data is detected from the input image data (input image). Next, the signals of the actual world 1 acquired by the sensor 2 are estimated from the continuity of the data detected. Then, based on the estimated signals of the actual world 1, an image is generated, and the generated image (output image) is output. That is to say, Fig. 3 is a diagram illustrating the configuration of the signal processing device 4 which is an image processing device.

The input image (image data which is an example of the data 3) input to the signal processing device 4 is supplied to a data continuity detecting unit 101 and actual world estimating unit 102.

The data continuity detecting unit 101 detects the continuity of the data from the input image, and supplies data continuity information indicating the detected continuity to the actual world estimating unit 102 and an image generating unit 103. The data continuity information includes, for example, the position of a region of pixels having continuity of data, the direction of a region of pixels having continuity of data (the angle or gradient of the time direction and space direction), or the length of a region of pixels having continuity of data, or the like in the input image. Detailed configuration of the data continuity detecting unit 101 will be described later.

The actual world estimating unit 102 estimates the signals of the actual world 1, based on the input image and the data continuity information supplied from the data continuity detecting unit 101. That is to say, the actual world estimating unit 102 estimates an image which is the signals of the actual world cast into the sensor 2 at the time that the input image was acquired. The actual world estimating unit 102 supplies the actual world estimation information indicating the results of the estimation of the signals of the actual world 1, to the image generating unit 103. The detailed configuration of the actual world estimating unit 102 will be described later.

The image generating unit 103 generates signals further approximating the signals of the actual world 1, based on the actual world estimation information indicating the estimated signals of the actual world 1, supplied from the actual world estimating unit 102, and outputs the generated signals. Or, the image generating unit 103 generates signals further approximating the signals of the actual world 1, based on the data continuity information supplied from the data continuity detecting unit 101, and the actual world estimation information indicating the estimated signals of the actual world 1, supplied from the actual world estimating unit 102, and outputs the generated signals.

That is to say, the image generating unit 103 generates an image further approximating the image of the actual world 1 based on the actual world estimation information, and outputs the generated image as an output image. Or, the image generating unit 103 generates an image further approximating the image of the actual world 1 based on the data continuity information and actual world estimation information, and outputs the generated image as an output image.

For example, the image generating unit 103 generates an image with higher resolution in the spatial direction or time direction in comparison with the input image, by integrating the estimated image of the actual world 1 within a desired range of the spatial direction or time direction, based on the actual world estimation information, and outputs the generated image as an output image. For example, the image generating unit 103 generates an image by extrapolation/interpolation, and outputs the generated image as an output image.

Detailed configuration of the image generating unit 103 will be described later.

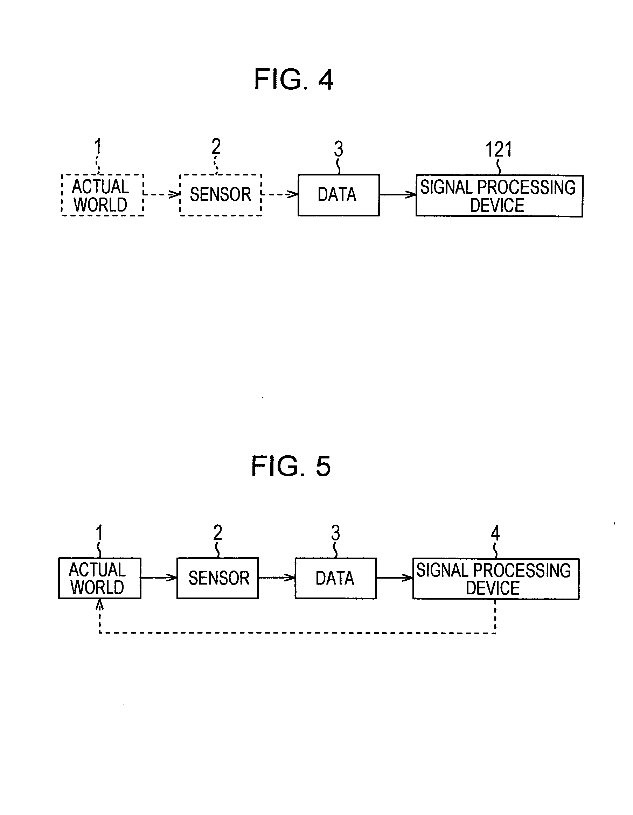

Next, the principle of the present invention will be described with reference to Fig. 4 through Fig. 7.

Fig. 4 is a diagram describing the principle of processing with a conventional signal processing device 121. The conventional signal processing device 121 takes the data 3 as the reference for processing, and executes processing such as increasing resolution and the like with the data 3 as the object of processing. With the conventional signal processing device 121, the actual world 1 is never taken into consideration, and the data 3 is the ultimate reference, so information exceeding the information contained in the data 3 can not be obtained as output.

Also, with the conventional signal processing device 121, distortion in the data 3 due to the sensor 2 (difference between the signals which are information of the actual world 1, and the data 3) is not taken into consideration whatsoever, so the conventional signal processing device 121 outputs signals still containing the distortion. Further, depending on the processing performed by the signal processing device 121, the distortion due to the sensor 2 present within the data 3 is further amplified, and data containing the amplified distortion is output.

Thus, with conventional signals processing, (the signals of) the actual world 1, from which the data 3 has been obtained, was never taken into consideration. In other words, with the conventional signal processing, the actual world 1 was understood within the framework of the information contained in the data 3, so the limits of the signal processing are determined by the information and distortion contained in the data 3. The present Applicant has separately proposed signal processing taking into consideration the actual world 1, but this did not take into consideration the later-described continuity.

In contrast with this, with the signal processing according to the present invention, processing is executed taking (the signals of) the actual world 1 into consideration in an explicit manner.

Fig. 5 is a diagram for describing the principle of the processing at the signal processing device 4 according to the present invention.

This is the same as the conventional arrangement wherein signals, which are information indicating events of the actual world 1, are obtained by the sensor 2, and the sensor 2 outputs data 3 wherein the signals which are information of the actual world 1 are projected.

However, with the present invention, signals, which are information indicating events of the actual world 1, obtained by the sensor 2, are explicitly taken into consideration. That is to say, signal processing is performed conscious of the fact that the data 3 contains distortion due to the sensor 2 (difference between the signals which are information of the actual world 1, and the data 3).

Thus, with the signal processing according to the present invention, the processing results are not restricted due to the information contained in the data 3 and the distortion, and for example, processing results which are more accurate and which have higher precision than conventionally can be obtained with regard to events in the actual world 1. That is to say, with the present invention, processing results which are more accurate and which have higher precision can be obtained with regard to signals, which are information indicating events of the actual world 1, input to the sensor 2.

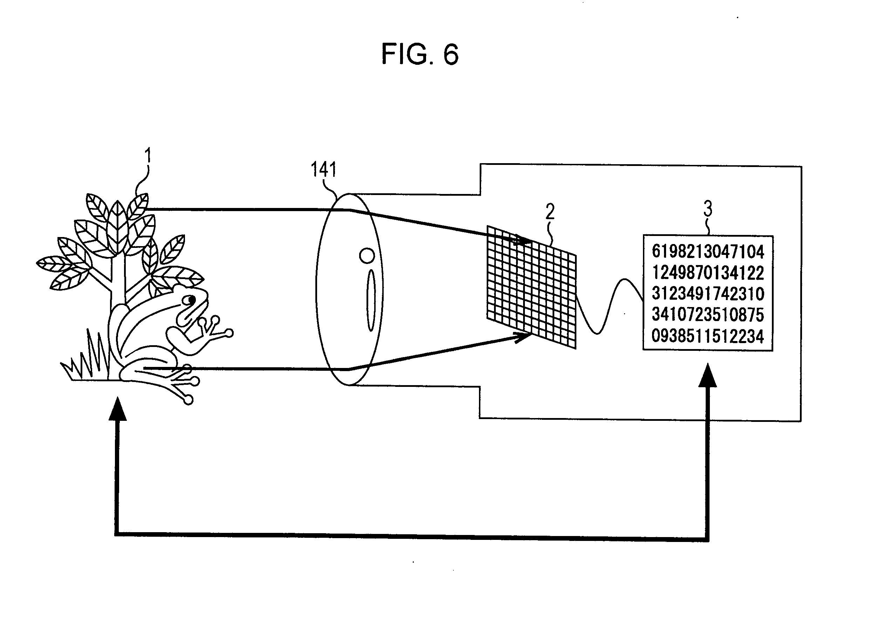

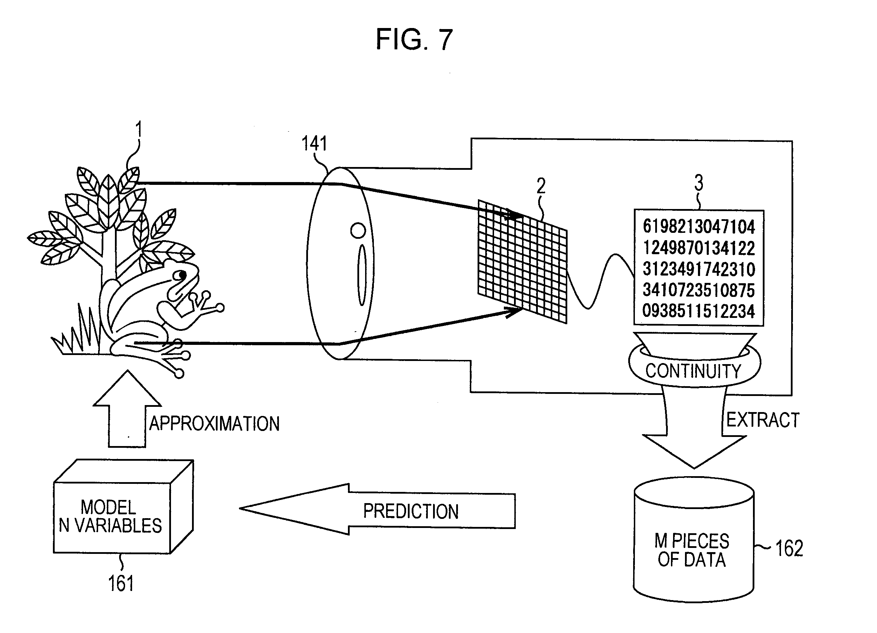

Fig. 6 and Fig. 7 are diagrams for describing the principle of the present invention in greater detail.

As shown in Fig. 6, signals of the actual world, which are an image for example, are image on the photoreception face of a CCD (Charge Coupled Device) which is an example of the sensor 2, by an optical system 141 made up of lenses, an optical LPF (Low Pass Filter), and the like. The CCD, which is an example of the sensor 2, has integration properties, so difference is generated in the data 3 output from the CCD as to the image of the actual world 1. Details of the integration properties of the sensor 2 will be described later.

With the signal processing according to the present invention, the relationship between the image of the actual world 1 obtained by the CCD, and the data 3 taken by the CCD and output, is explicitly taken into consideration. That is to say, the relationship between the data 3 and the signals which is information of the actual world obtained by the sensor 2, is explicitly taken into consideration.

More specifically, as shown in Fig. 7, the signal processing device 4 uses a model 161 to approximate (describe) the actual world 1. The model 161 is represented by, for example, N variables. More accurately, the model 161 approximates (describes) signals of the actual world 1.

In order to predict the model 161, the signal processing device 4 extracts M pieces of data 162 from the data 3. At the time of extracting the M pieces of data 162 from the data 3, the signal processing device 4 uses the continuity of the data contained in the data 3. In other words, the signal processing device 4 extracts data 162 for predicting the model 161, based o the continuity of the data contained in the data 3. Consequently, the model 161 is constrained by the continuity of the data.

That is to say, the model 161 approximates (information (signals) indicating) events of the actual world having continuity (constant characteristics in a predetermined dimensional direction), which generates the data continuity in the data 3.

Now, in the event that the number M of the data 162 is N or more, which is the number of variables of the model, the model 161 represented by the N variables can be predicted, from the M pieces of the data 162.

In this way, the signal processing device 4 can take into consideration the signals which are information of the actual world 1, by predicting the model 161 approximating (describing) the (signals of the) actual world 1.

Next, the integration effects of the sensor 2 will be described.

An image sensor such as a CCD or CMOS (Complementary Metal-Oxide Semiconductor), which is the sensor 2 for taking images, projects signals, which are information of the real world, onto two-dimensional data, at the time of imaging the real world. The pixels of the image sensor each have a predetermined area, as a so-called photoreception face (photoreception region). Incident light to the photoreception face having a predetermined area is integrated in the space direction and time direction for each pixel, and is converted into a single pixel value for each pixel.

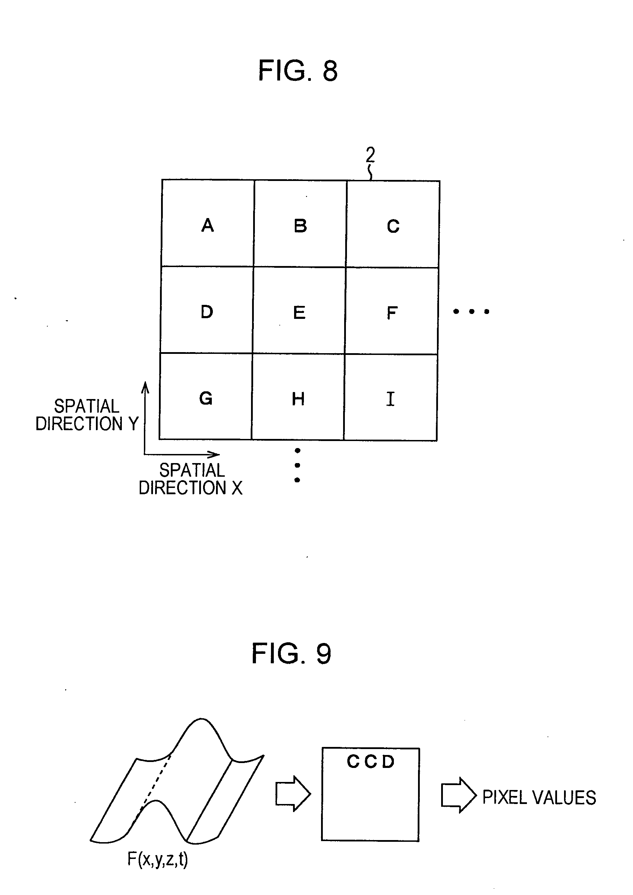

The space-time integration of images will be described with reference to Fig. 8 through Fig. 11.

An image sensor images a subject (object) in the real world, and outputs the obtained image data as a result of imagining in increments of single frames. That is to say, the image sensor acquires signals of the actual world 1 which is light reflected off of the subject of the actual world 1, and outputs the data 3.

For example, the image sensor outputs image data of 30 frames per second. In this case, the exposure time of the image sensor can be made to be 1/30 seconds. The exposure time is the time from the image sensor starting conversion of incident light into electric charge, to ending of the conversion of incident light into electric charge. Hereafter, the exposure time will also be called shutter time.

Fig. 8 is a diagram describing an example of a pixel array on the image sensor. In Fig. 8, A through I denote individual pixels. The pixels are placed on a plane corresponding to the image displayed by the image data. A single detecting element corresponding to a single pixel is placed on the image sensor. At the time of the image sensor taking images of the actual world 1, the one detecting element outputs one pixel value corresponding to the one pixel making up the image data. For example, the position in the spatial direction X (X coordinate) of the detecting element corresponds to the horizontal position on the image displayed by the image data, and the position in the spatial direction Y (Y coordinate) of the detecting element corresponds to the vertical position on the image displayed by the image data.

Distribution of intensity of light of the actual world 1 has expanse in the three-dimensional spatial directions and the time direction, but the image sensor acquires light of the actual world 1 in two-dimensional spatial directions and the time direction, and generates data 3 representing the distribution of intensity of light in the two-dimensional spatial directions and the time direction.

As shown in Fig. 9, the detecting device which is a CCD for example, converts light cast onto the photoreception face (photoreception region) (detecting region) into electric charge during a period corresponding to the shutter time, and accumulates the converted charge. The light is information (signals) of the actual world 1 regarding which the intensity is determined by the three-dimensional spatial position and point-in-time. The distribution of intensity of light of the actual world 1 can be represented by a function $F(x, y, z, t)$, wherein position $x, y, z$, in three-dimensional space, and point-in-time $t$, are variables.

The amount of charge accumulated in the detecting device which is a CCD is approximately proportionate to the intensity of the light cast onto the entire photoreception face having two-dimensional spatial expanse, and the amount of time that light is cast thereupon. The detecting device adds the charge converted from the light cast onto the entire photoreception face, to the charge already accumulated during a period corresponding to the shutter time. That is to say, the detecting device integrates the light cast onto the entire photoreception face having a two-dimensional spatial expanse, and accumulates a change of an amount corresponding to the integrated light during a period corresponding to the shutter time. The detecting device can also be said to have an integration effect regarding space (photoreception face) and time (shutter time).

The charge accumulated in the detecting device is converted into a voltage value by an unshown circuit, the voltage value is further converted into a pixel value such as digital data or the like, and is output as data 3. Accordingly, the individual pixel values output from the image sensor have a value projected on one-dimensional space, which is the result of integrating the portion of the information (signals) of the actual world 1 having time-space expanse with regard to the time direction of the shutter time and the spatial direction of the photoreception face of the detecting device.

That is to say, the pixel value of one pixel is represented as the integration of $F(x, y, t)$. $F(x, y, t)$ is a function representing the distribution of light intensity on the photoreception face of the detecting device. For example, the pixel value $P$ is represented by Expression (1).

$$P = \int_{t_1}^{t_2} \int_{y_1}^{y_2} \int_{x_1}^{x_2} F(x, y, t)\, dx\, dy\, dt$$

$$\ldots (1)$$

In Expression (1), $x_1$ represents the spatial coordinate at the left-side boundary of the photoreception face of the detecting device (X coordinate). $x_2$ represents the spatial coordinate at the right-side boundary of the photoreception face of the detecting device (X coordinate). In Expression (1), $y_1$ represents the spatial coordinate at the top-side boundary of the photoreception face of the detecting device (Y coordinate). $y_2$ represents the spatial coordinate at the bottom-side boundary of the photoreception face of the detecting device (Y coordinate). Also, $t_1$ represents the point-in-time at which conversion of incident light into an electric charge was started. $t_2$ represents the point-in-time at which conversion of incident light into an electric charge was ended.

Note that actually, the gain of the pixel values of the image data output from the image sensor is corrected for the overall frame.

Each of the pixel values of the image data,are integration values of the light cast on the photoreception face of each of the detecting elements of the image sensor, and of the light cast onto the image sensor, waveforms of light of the actual world 1 finer than the photoreception face of the detecting element are hidden in the pixel value as integrated values.

Hereafter, in the present Specification, the waveform of signals represented with a predetermined dimension as a reference may be referred to simply as waveforms.

Thus, the image of the actual world 1 is integrated in the spatial direction and time direction in increments of pixels, so a part of the continuity of the image of the actual world 1 drops out from the image data, so only another part of the continuity of the image of the actual world 1 is left in the image data. Or, there may be cases wherein continuity which has changed from the continuity of the image of the actual world 1 is included in the image data.

Further description will be made regarding the integration effect in the spatial direction for an image taken by an image sensor having integration effects.

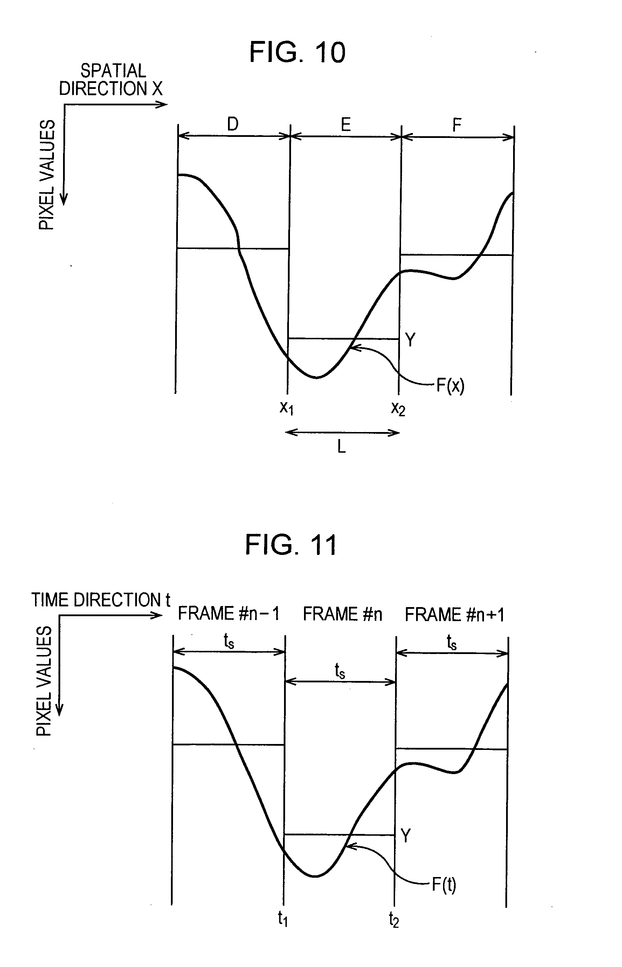

Fig. 10 is a diagram describing the relationship between incident light to the detecting elements corresponding to the pixel D through pixel F, and the pixel values. F(x) in Fig. 10 is an example of a function representing the distribution of light intensity of the actual world 1, having the coordinate x in the spatial direction X in space (on the detecting device) as a variable. In other words, F(x) is an example of a function representing the distribution of light intensity of the actual world 1, with the spatial direction Y and time direction constant. In Fig. 10, L indicates the length in the spatial direction X of the photoreception face of the detecting device corresponding to the pixel D through pixel F.

The pixel value of a single pixel is represented as the integral of F(x). For example, the pixel value P of the pixel.E is represented by Expression (2).

$$P = \int_{x_1}^{x_2} F(x)\,dx$$

$$\ldots (2)$$

In the Expression (2), $x_1$ represents the spatial coordinate in the spatial direction X at the left-side boundary of the photoreception face of the detecting device corresponding to the pixel E. $x_2$ represents the spatial coordinate in the spatial direction X at the right-side boundary of the photoreception face of the detecting device corresponding to the pixel E.

In the same way, further description will be made regarding the integration effect in the time direction for an image taken by an image sensor having integration effects.

Fig. 11 is a diagram for describing the relationship between time elapsed, the incident light to a detecting element corresponding to a single pixel, and the pixel value. F(t) in Fig. 11 is a function representing the distribution of light intensity of the actual world 1, having the point-in-time t as a variable. In other words, F(t) is an example of a function representing the distribution of light intensity of the actual world 1, with the spatial direction Y and the spatial direction X constant. $T_s$ represents the shutter time.

The frame #n-1 is a frame which is previous to the frame #n time-wise, and the frame #n+1 is a frame following the frame #n time-wise. That is to say, the frame #n-1, frame #n, and frame #n+1, are displayed in the order of frame #n-1, frame #n, and frame #n+1.

Note that in the example shown in Fig. 11, the shutter time $t_s$ and the frame intervals are the same.

The pixel value of a single pixel is represented as the integral of F(x). For example, the pixel value P of the pixel of frame #n for example, is represented by Expression (2).

$$P = \int_{t_1}^{t_2} F(t)\,dx$$

$$\ldots (3)$$

In the Expression (3), $t_1$ represents the time at which conversion of incident light into an electric charge was started. $t_2$ represents the time at which conversion of incident light into an electric charge was ended.

Hereafter, the integration effect in the spatial direction by the sensor 2 will be referred to simply as spatial integration effect, and the integration effect in the time direction by the sensor 2 also will be referred to simply as time integration effect. Also, space integration effects or time integration effects will be simply called integration effects.

Next, description will be made regarding an example of continuity of data included in the data 3 acquired by the image sensor having integration effects.

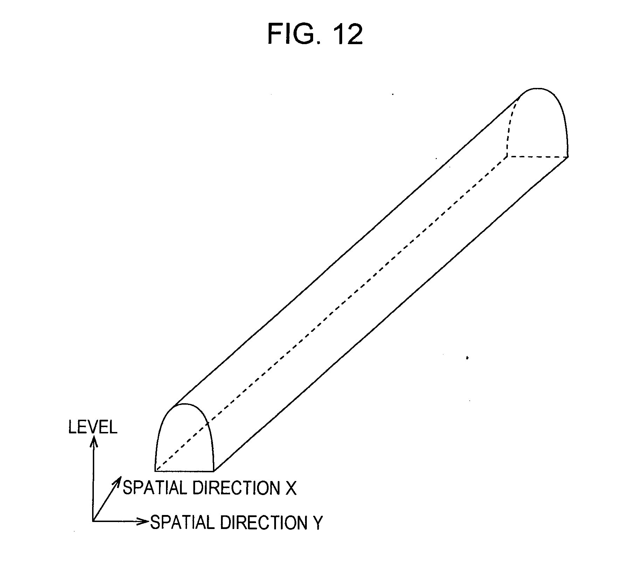

Fig. 12 is a diagram illustrating a linear object of the actual world 1 (e.g., a fine line), i.e., an example of distribution of light intensity. In Fig. 12, the position to the upper side of the drawing indicates the intensity (level) of light, the position to the upper right side of the drawing indicates the position in the spatial direction X which is one direction of the spatial directions of the image, and the position to the right side of the drawing indicates the position in the spatial direction Y which is the other direction of the spatial directions of the image.

The image of the linear object of the actual world 1 includes predetermined continuity. That is to say, the image shown in Fig. 12 has continuity in that the cross-sectional shape (the change in level as to the change in position in the direction orthogonal to the length direction), at any arbitrary position in the length direction.

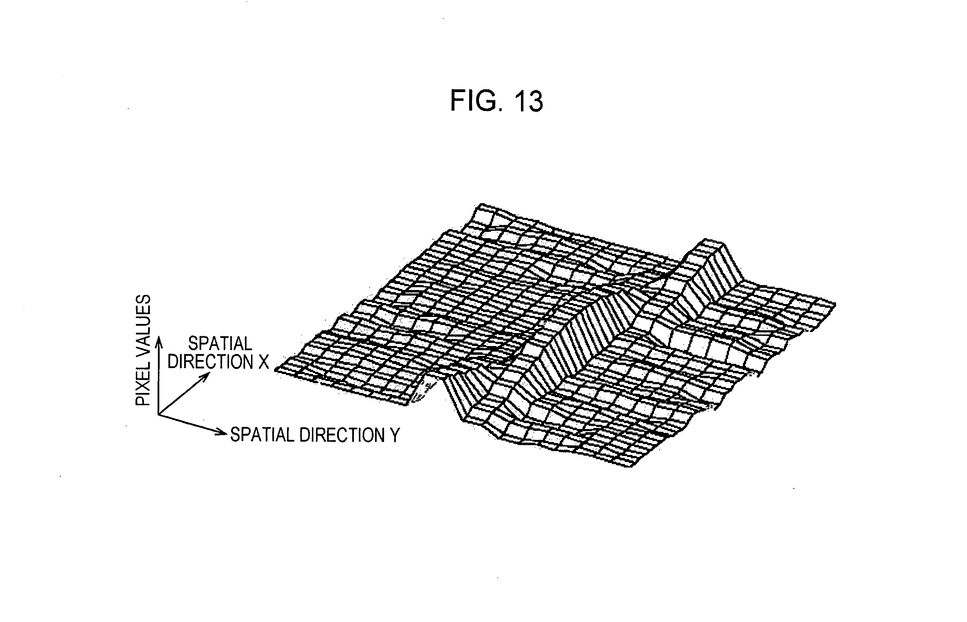

Fig. 13 is a diagram illustrating an example of pixel values of image data obtained by actual image-taking, corresponding to the image shown in Fig. 12.

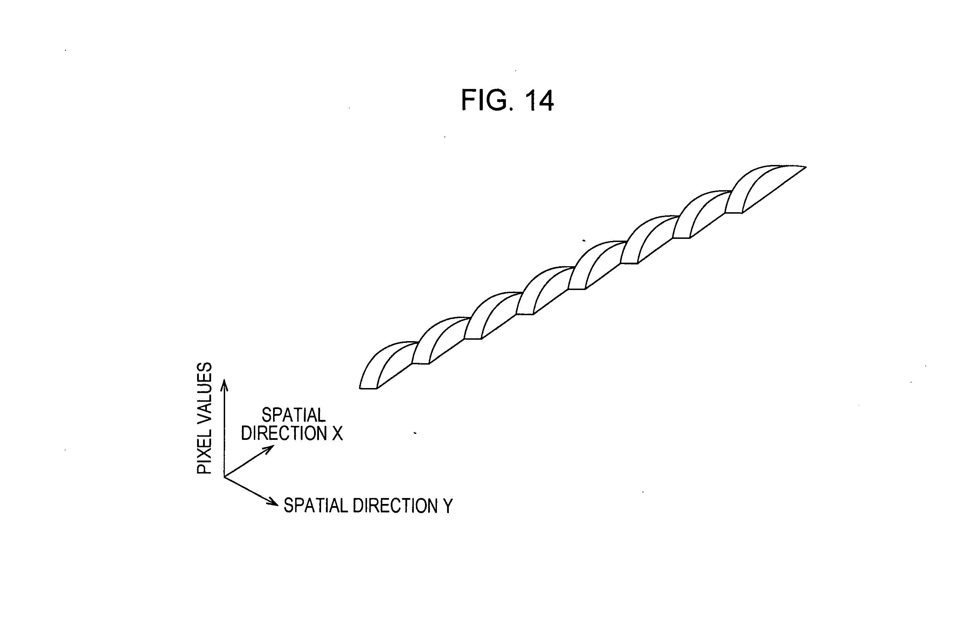

Fig. 14 is a model diagram of the image data shown in Fig. 13.

The model diagram shown in Fig. 14 is a model diagram of image data obtained by imaging, with the image sensor, an image of a linear object having a diameter shorter than the length L of the photoreception face of each pixel, and extending in a direction offset from the array of the pixels of the image sensor (the vertical or horizontal array of the pixels). The image cast into the image sensor at the time that the image data shown in Fig. 14 was acquired is an image of the linear object of the actual world 1 shown in Fig. 12.

In Fig. 14, the position to the upper side of the drawing indicates the pixel value, the position to the upper right side of the drawing indicates the position in the spatial direction X which is one direction of the spatial directions of the image, and the position to the right side of the drawing indicates the position in the spatial direction Y which is the other direction of the spatial directions of the image. The direction indicating the pixel value in Fig. 14 corresponds to the direction of level in Fig. 12, and the spatial direction X and spatial direction Y in Fig. 14 also are the same as the directions in Fig. 12.

In the event of taking an image of a linear object having a diameter narrower than the length L of the photoreception face of each pixel with the image sensor, the linear object is represented in the image data obtained as a result of the image-taking as multiple arc shapes (half-discs) having a predetermined length which are arrayed in a diagonally-offset fashion, in a model representation, for example. The arc shapes are of approximately the same shape. One arc shape is formed on one row of pixels vertically, or is formed on one row of pixels horizontally. For example, one arc shape shown in Fig. 14 is formed on one row of pixels vertically.

Thus, with the image data taken and obtained by the image sensor for example, the continuity in that the cross-sectional shape in the spatial direction Y at any arbitrary position in the length direction which the linear object image of the actual world 1 had, is lost. Also, it can be said that the continuity, which the linear object image of the actual world 1 had, has changed into continuity in that arc shapes of the same shape formed on one row of pixels vertically or formed on one row of pixels horizontally are arrayed at predetermined intervals.

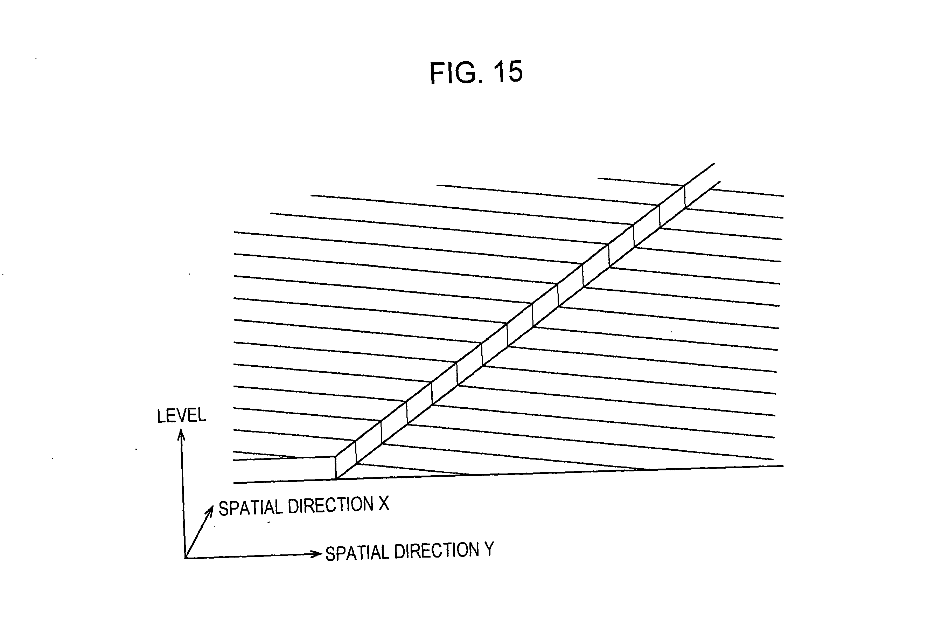

Fig. 15 is a diagram illustrating an image in the actual world 1 of an object having a straight edge, and is of a monotone color different from that of the background, i.e., an example of distribution of light intensity. In Fig. 15, the position to the upper side of the drawing indicates the intensity (level) of light, the position to the upper right side of the drawing indicates the position in the spatial direction X which is one direction of the spatial directions of the image, and the position to the right side of the drawing indicates the position in the spatial direction Y which is the other direction of the spatial directions of the image.

The image of the object of the actual world 1 which has a straight edge and is of a monotone color different from that of the background, includes predetermined continuity. That is to say, the image shown in Fig. 15 has continuity in that the cross-sectional shape (the change in level as to the change in position in the direction orthogonal to the length direction) is the same at any arbitrary position in the length direction.

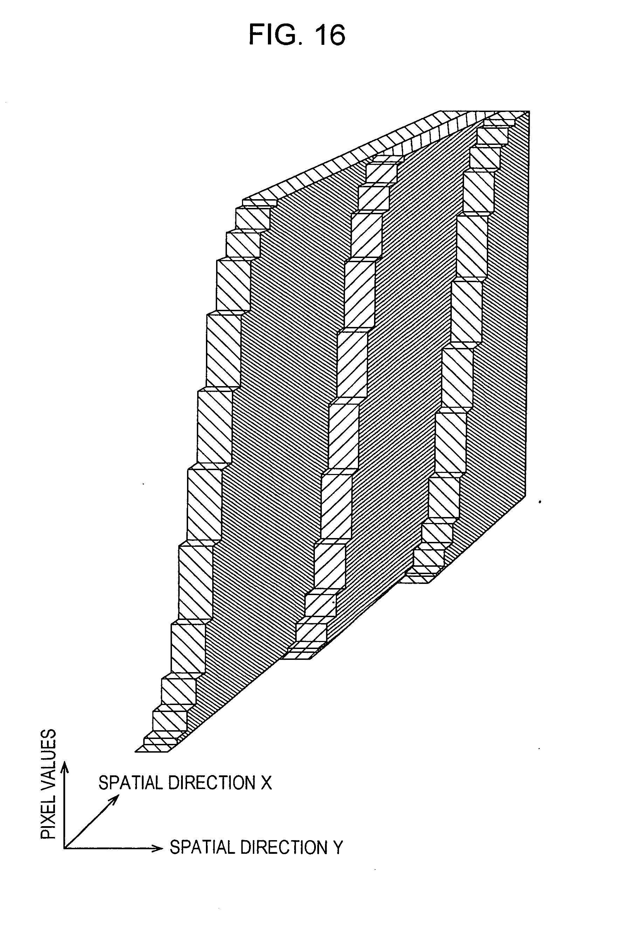

Fig. 16 is a diagram illustrating an example of pixel values of the image data obtained by actual image-taking, corresponding to the image shown in Fig. 15. As shown in Fig. 16, the image data is in a stepped shape, since the image data is made up of pixel values in increments of pixels.

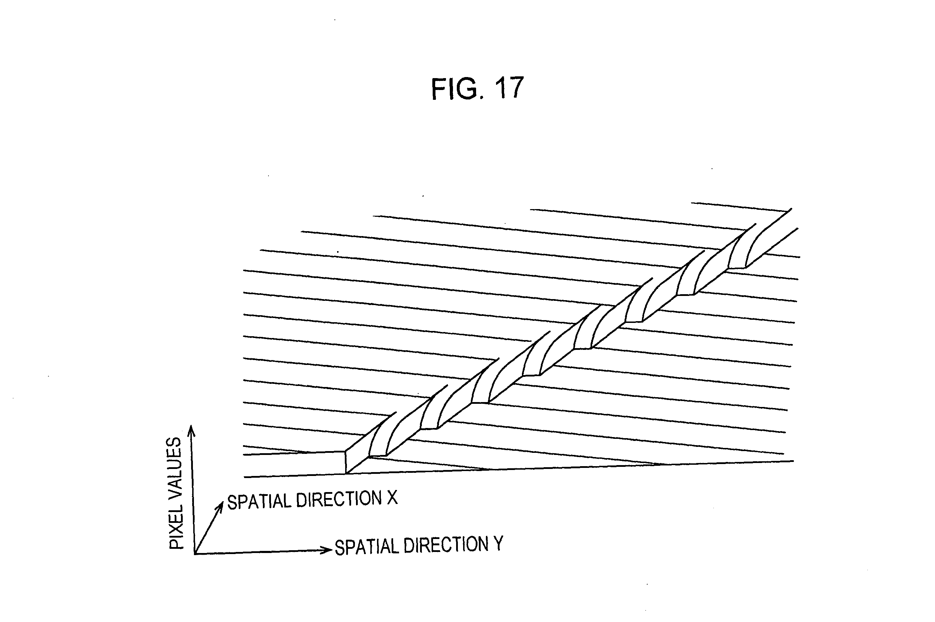

Fig. 17 is a model diagram illustrating the image data shown in Fig. 16.

The model diagram shown in Fig. 17 is a model diagram of image data obtained by taking, with the image sensor, an image of the object of the actual world 1 which has a straight edge and is of a monotone color different from that of the background, and extending in a direction offset from the array of the pixels of the image sensor (the vertical or horizontal array of the pixels). The image cast into the image sensor at the time that the image data shown in Fig. 17 was acquired is an image of the object of the actual world 1 which has a straight edge and is of a monotone color different from that of the background, shown in Fig. 15.

In Fig. 17, the position to the upper side of the drawing indicates the pixel value, the position to the upper right side of the drawing indicates the position in the spatial direction X which is one direction of the spatial directions of the image, and the position to the right side of the drawing indicates the position in the spatial direction Y which is the other direction of the spatial directions of the image. The direction indicating the pixel value in Fig. 17 corresponds to the direction of level in Fig. 15, and the spatial direction X and spatial direction Y in Fig. 17 also are the same as the directions in Fig. 15.

In the event of taking an image of an object of the actual world 1 which has a straight edge and is of a monotone color different from that of the background with an image sensor, the straight edge is represented in the image data obtained as a result of the image-taking as multiple pawl shapes having a predetermined length which are arrayed in a diagonally-offset fashion, in a model representation, for example. The pawl shapes are of approximately the same shape. One pawl shape is formed on one row of pixels vertically, or is formed on one row of pixels horizontally. For example, one pawl shape shown in Fig. 17 is formed on one row of pixels vertically.

Thus, the continuity of image of the object of the actual world 1 which has a straight edge and is of a monotone color different from that of the background, in that the cross-sectional shape is the same at any arbitrary position in the length direction of the edge, for example, is lost in the image data obtained by imaging with an image sensor. Also, it can be said that the continuity, which the image of the object of the actual world 1 which has a straight edge and is of a monotone color different from that of the background had, has changed into continuity in that pawl shapes of the same shape formed on one row of pixels vertically or formed on one row of pixels horizontally are arrayed at predetermined intervals.

The data continuity detecting unit 101 detects such data continuity of the data 3 which is an input image, for example. For example, the data continuity detecting unit 101 detects data continuity by detecting regions having a constant characteristic in a predetermined dimensional direction. For example, the data continuity detecting unit 101 detects a region wherein the same arc shapes are arrayed at constant intervals, such as shown in Fig. 14. Also, the data continuity detecting unit 101 detects a region wherein the same pawl shapes are arrayed at constant intervals, such as shown in Fig. 17.

Also, the data continuity detecting unit 101 detects continuity of the data by detecting angle (gradient) in the spatial direction, indicating an array of the same shapes.

Also, for example, the data continuity detecting unit 101 detects continuity of data by detecting angle (movement) in the space direction and time direction, indicating the array of the same shapes in the space direction and the time direction.

Further, for example, the data continuity detecting unit 101 detects continuity in the data by detecting the length of the region having constant characteristics in a predetermined dimensional direction.

Hereafter, the portion of data 3 where the sensor 2 has projected the image of the object of the actual world 1 which has a straight edge and is of a monotone color different from that of the background, will also be called a two-valued edge.

Next, the principle of the present invention will be described in further detail.

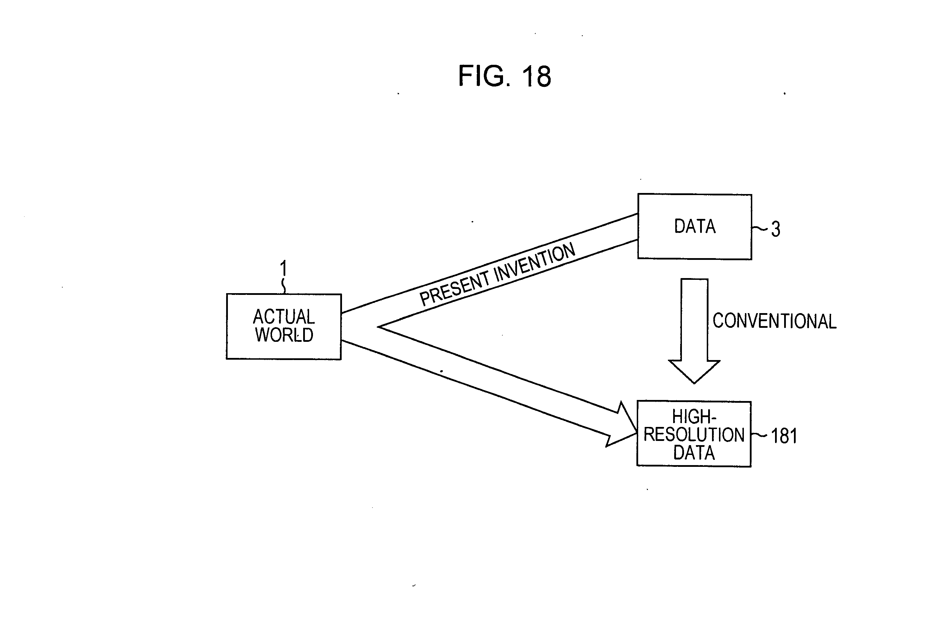

As shown in Fig. 18, with conventional signal processing, desired high-resolution data 181, for example, is generated from the data 3.

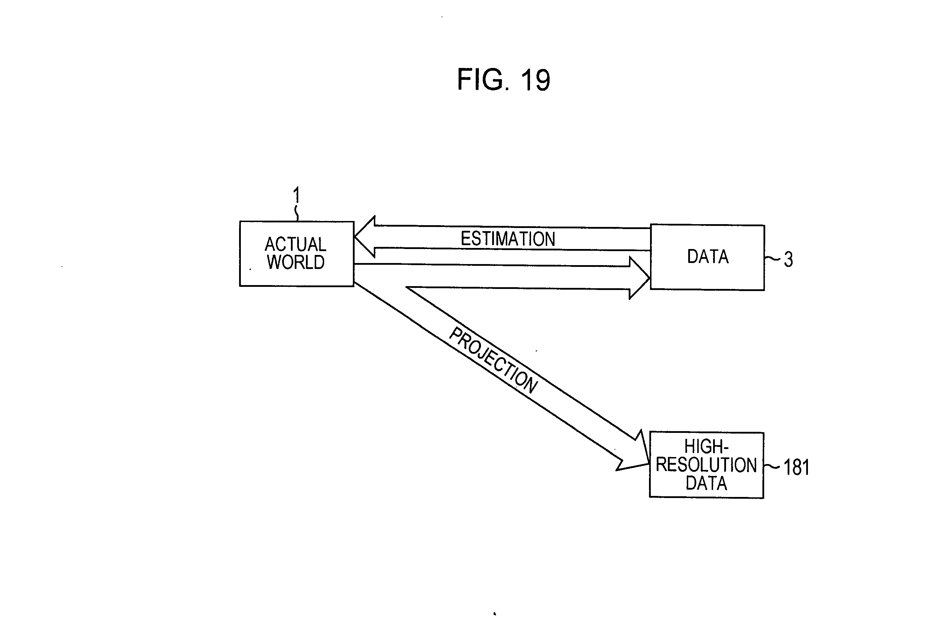

Conversely, with the signal processing according to the present invention, the actual world 1 is estimated from the data 3, and the high-resolution data 181 is generated based on the estimation results. That is to say, as shown in Fig. 19, the actual world 1 is estimated from the data 3, and the high-resolution data 181 is generated based on the estimated actual world 1, taking into consideration the data 3.

In order to generate the high-resolution data 181 from the actual world 1, there is the need to take into consideration the relationship between the actual world 1 and the data 3. For example, how the actual world 1 is projected on the data 3 by the sensor 2 which is a CCD, is taken into consideration.

The sensor 2 which is a CCD has integration properties as described above. That is to say, one unit of the data 3 (e.g., pixel value) can be calculated by integrating a signal of the actual world 1 with a detection region (e.g., photoreception face) of a detection device (e.g., CCD) of the sensor 2.

Applying this to the high-resolution data 181, the high-resolution data 181 can be obtained by applying processing, wherein a virtual high-resolution sensor projects signals of the actual world 1 to the data 3, to the estimated actual world 1.

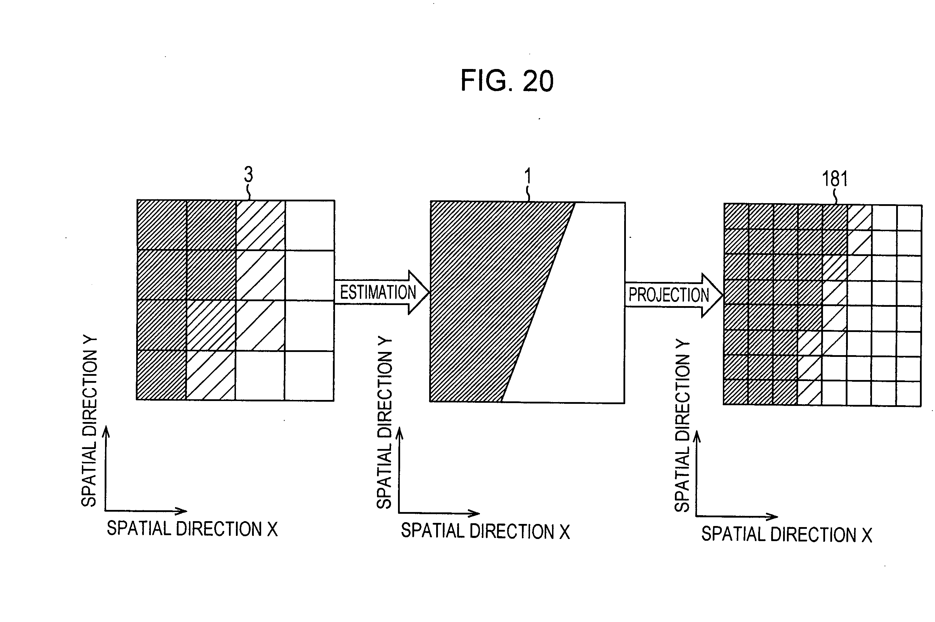

In other words, as shown in Fig. 20, if the signals of the actual world 1 can be estimated from the data 3, one value contained in the high-resolution data 181 can be obtained by integrating signals of the actual world 1 for each detection region of the detecting elements of the virtual high-resolution sensor (in the time-space direction).

For example, in the event that the change in signals of the actual world 1 are smaller than the size of the detection region of the detecting elements of the sensor 2, the data 3 cannot expresses the small changes in the signals of the actual world 1. Accordingly, high-resolution data 181 indicating small change of the signals of the actual world 1 can be obtained by integrating the signals of the actual world 1 estimated from the data 3 with each region (in the time-space direction) that is smaller in comparison with the change in signals of the actual world 1.

That is to say, integrating the signals of the estimated actual world 1 with the detection region with regard to each detecting element of the virtual high-resolution sensor enables the high-resolution data 181 to be obtained.

With the present invention, the image generating unit 103 generates the high-resolution data 181 by integrating the signals of the estimated actual world 1 in the time-space direction regions of the detecting elements of the virtual high-resolution sensor.

Next, with the present invention, in order to estimate the actual world 1 from the data 3, the relationship between the data 3 and the actual world 1, continuity, and a space mixture in the data 3, are used.

Here, a mixture means a value in the data 3 wherein the signals of two objects in the actual world 1 are mixed to yield a single value.

A space mixture means the mixture of the signals of two objects in the spatial direction due to the spatial integration effects of the sensor 2.

The actual world 1 itself is made up of countless events, and accordingly, in order to represent the actual world 1 itself with mathematical expressions, for example, there is the need to have an infinite number of variables. It is impossible to predict all events of the actual world 1 from the data 3.

In the same way, it is impossible to predict all of the signals of the actual world 1 from the data 3.

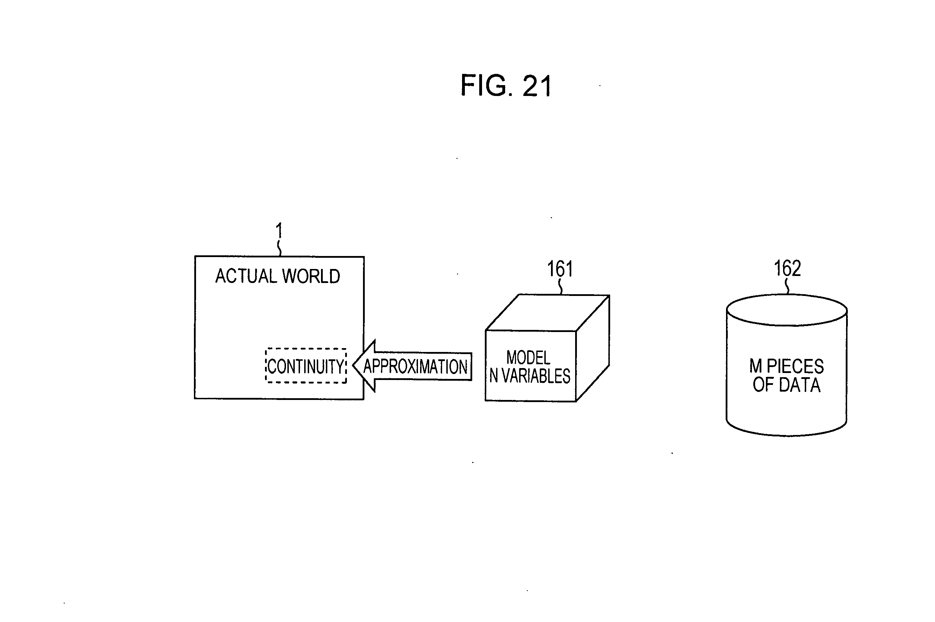

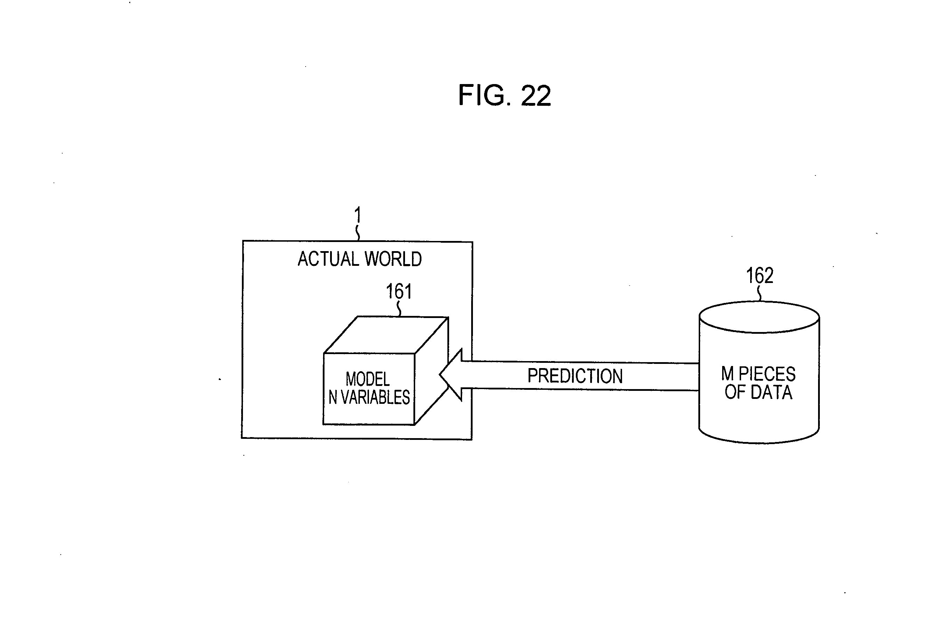

Accordingly, as shown in Fig. 21, with the present embodiment, of the signals of the actual world 1, a portion which has continuity and which can be expressed by the function f(x, y, z, t) is taken note of, and the portion of the signals of the actual world 1 which can be represented by the function f(x, y, z, t) and has continuity is approximated with a model 161 represented by N variables. As shown in Fig. 22, the model 161 is predicted from the M pieces of data 162 in the data 3.

In order to enable the model 161 to be predicted from the M pieces of data 162, first, there is the need to represent the model 161 with N variables based on the continuity, and second, to generate an expression using the N variables which indicates the relationship between the model 161 represented by the N variables and the M pieces of data 162 based on the integral properties of the sensor 2. Since the model 161 is represented by the N variables, based on the continuity, it can be said that the expression using the N variables that indicates the relationship between the model 161 represented by the N variables and the M pieces of data 162, describes the relationship between the part of the signals of the actual world 1 having continuity, and the part of the data 3 having data continuity.

In other words, the part of the signals of the actual world 1 having continuity, that is approximated by the model 161 represented by the N variables, generates data continuity in the data 3.

The data continuity detecting unit 101 detects the part of the data 3 where data continuity has been generated by the part of the signals of the actual world 1 having continuity, and the characteristics of the part where data continuity has been generated.

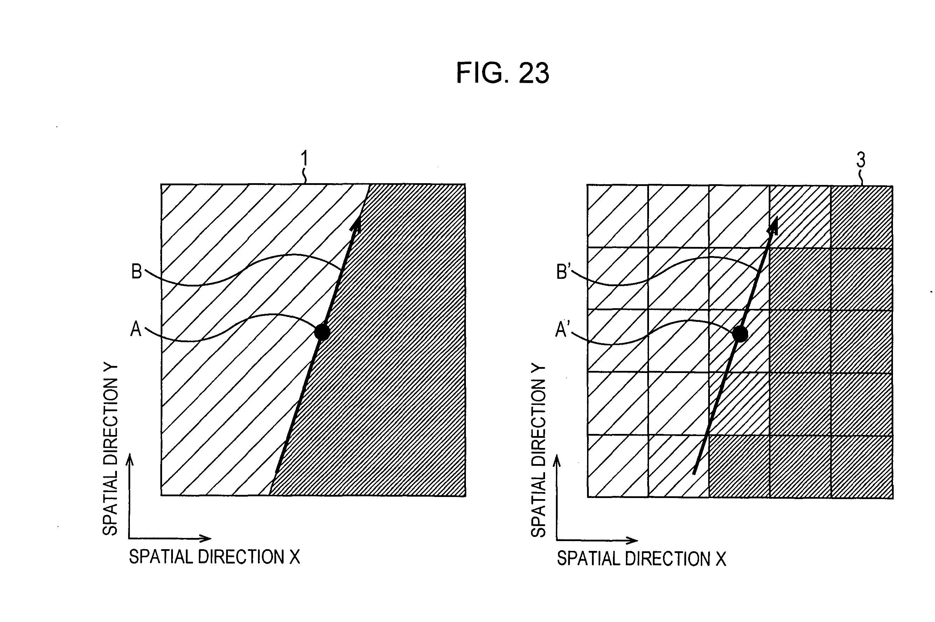

For example, as shown in Fig. 23, in an image of the object of the actual world 1 which has a straight edge and is of a monotone color different from that of the background, the edge at the position of interest indicated by A in Fig. 23, has a gradient. The arrow B in Fig. 23 indicates the gradient of the edge. A predetermined edge gradient can be represented as an angle as to a reference axis or as a direction as to a reference position. For example, a predetermined edge gradient can be represented as the angle between the coordinates axis of the spatial direction X and the edge. For example, the predetermined edge gradient can be represented as the direction indicated by the length of the spatial direction X and the length of the spatial direction Y.

At the time that the image of the object of the actual world 1 which has a straight edge and is of a monotone color different from that of the background is obtained at the sensor 2 and the data 3 is output, pawl shapes corresponding to the edge are arrayed in the data 3 at the position corresponding to the position of interest (A) of the edge in the image of the actual world 1, which is indicated by A' in Fig. 23, and pawl shapes corresponding to the edge are arrayed in the direction corresponding to the gradient of the edge of the image in the actual world 1, in the direction of the gradient indicated by B' in Fig. 23.

The model 161 represented with the N variables approximates such a portion of the signals of the actual world 1 generating data continuity in the data 3.

At the time of formulating an expression using the N variables indicating the relationship between the model 161 represented with the N variables and the M pieces of data 162, the part where data continuity is generated in the data 3 is used.

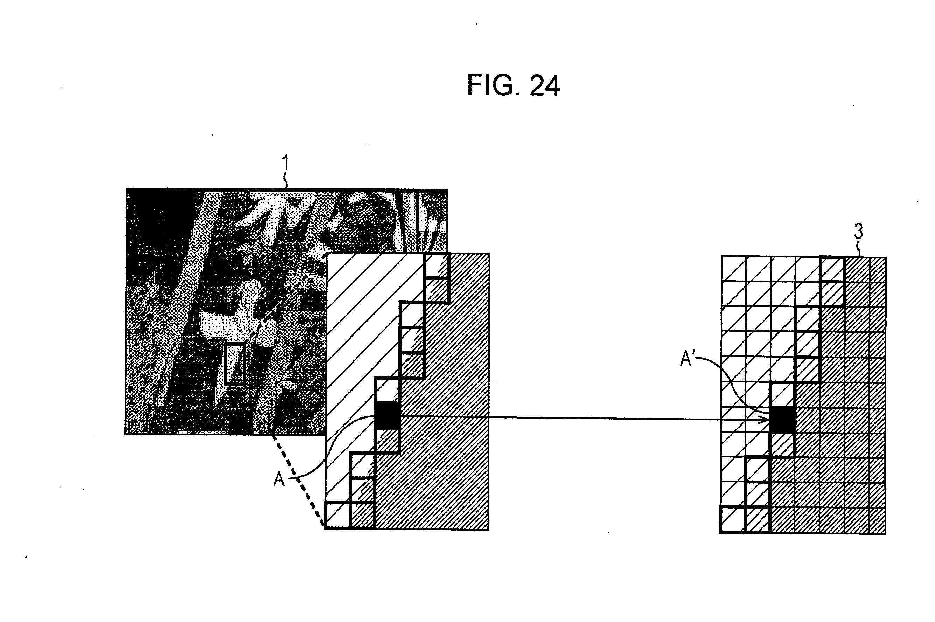

In this case, in the data 3 shown in Fig. 24, taking note of the values where data continuity is generated and which belong to a mixed region, an expression is formulated with a value integrating the signals of the actual world 1 as being equal to a value output by the detecting element of the sensor 2. For example, multiple expressions can be formulated regarding the multiple values in the data 3 where data continuity is generated.

In Fig. 24, A denotes the position of interest of the edge, and A' denotes (the position of) the pixel corresponding to the position (A) of interest of the edge in the image of the actual world 1.

Now, a mixed region means a region of data in the data 3 wherein the signals for two objects in the actual world 1 are mixed and become one value. For example, a pixel value wherein, in the image of the object of the actual world 1 which has a straight edge and is of a monotone color different from that of the background in the data 3, the image of the object having the straight edge and the image of the background are integrated, belongs to a mixed region.

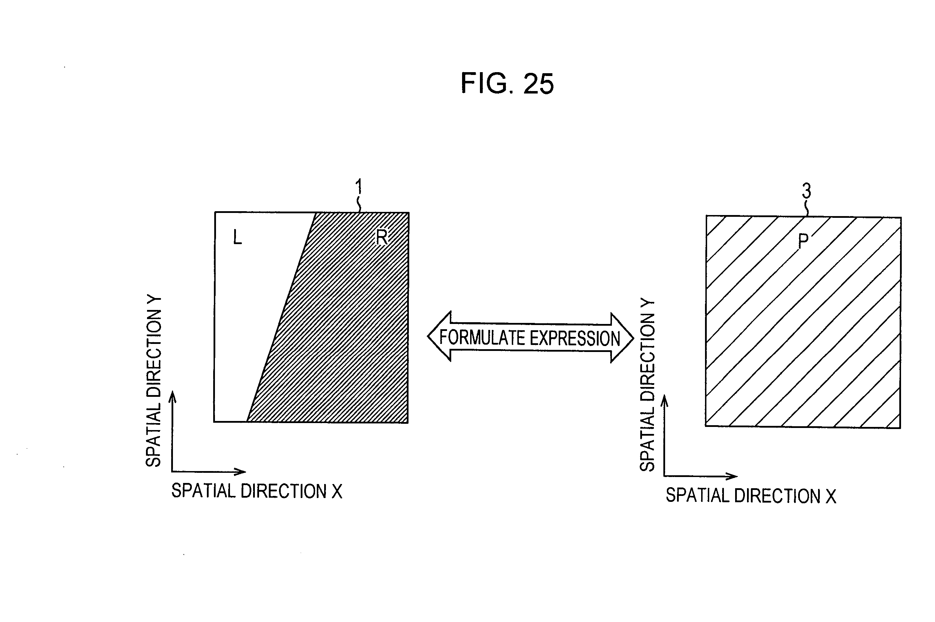

Fig. 25 is a diagram illustrating signals for two objects in the actual world 1 and values belonging to a mixed region, in a case of formulating an expression.

Fig. 25 illustrates, to the left, signals of the actual world 1 corresponding to two objects in the actual world 1 having a predetermined expansion in the spatial direction X and the spatial direction Y, which are acquired at the detection region of a single detecting element of the sensor 2. Fig. 25 illustrates, to the right, a pixel value P of a single pixel in the data 3 wherein the signals of the actual world 1 illustrated to the left in Fig. 25 have been projected by a single detecting element of the sensor 2. That is to say, illustrates a pixel value P of a single pixel in the data 3 wherein the signals of the actual world 1 corresponding to two objects in the actual world 1 having a predetermined expansion in the spatial direction X and the spatial direction Y which are acquired by a single detecting element of the sensor 2, have been projected.

L in Fig. 25 represents the level of the signal of the actual world 1 which is shown in white in Fig. 25, corresponding to one object in the actual world 1. R in Fig. 25 represents the level of the signal of the actual world 1 which is shown hatched in Fig. 25, corresponding to the other object in the actual world 1.

Here, the mixture ratio $\alpha$, is the ratio of (the area of) the signals corresponding to the two objects cast into the detecting region of the one detecting element of the sensor 2 having a predetermined expansion in the spatial direction X and the spatial direction Y. For example, the mixture ratio $\alpha$ represents the ratio of area of the level L signals cast into the detecting region of the one detecting element of the sensor 2 having a predetermined expansion in the spatial direction X and the spatial direction Y, as to the area of the detecting region of a single detecting element of the sensor 2.

In this case, the relationship between the level L, level R, and the pixel value P, can be represented by Expression (4).

$$\alpha \times L + (1 - \alpha) \times R = P \tag{4}$$

Note that there may be cases wherein the level R may be taken as the pixel value of the pixel in the data 3 positioned to the right side of the pixel of interest, and there may be cases wherein the level L may be taken as the pixel value of the pixel in the data 3 positioned to the left side of the pixel of interest.

Also, the time direction can be taken into consideration in the same way as with the spatial direction for the mixture ratio $\alpha$ and the mixed region. For example, in the event that an object in the actual world 1 which is the object of image-taking, is moving as to the sensor 2, the ratio of signals for the two objects cast into the detecting region of the single detecting element of the sensor 2 changes in the time direction. The signals for the two objects regarding which the ratio changes in the time direction, that have been cast into the detecting region of the single detecting element of the sensor 2, are projected into a single value of the data 3 by the detecting element of the sensor 2.

The mixture of signals for two objects in the time direction due to time integration effects of the sensor 2 will be called time mixture.

The data continuity detecting unit 101 detects regions of pixels in the data 3 where signals of the actual world 1 for two objects in the actual world 1, for example, have been projected. The data continuity detecting unit 101 detects gradient in the data 3 corresponding to the gradient of an edge of an image in the actual world 1, for example.

The actual world estimating unit 102 estimates the signals of the actual world by formulating an expression using N variables, representing the relationship between the model 161 represented by the N variables and the M pieces of data 162, based on the region of the pixels having a predetermined mixture ratio $\alpha$ detected by the data continuity detecting unit 101 and the gradient of the region, for example, and solving the formulated expression.

Description will be made further regarding specific estimation of the actual world 1.

Of the signals of the actual world represented by the function $F(x, y, z, t)$ let us consider approximating the signals of the actual world represented by the function $F(x, y, t)$ at the cross-section in the spatial direction Z (the position of the sensor 2), with an approximation function $f(x, y, t)$ determined by a position x in the spatial direction X, a position y in the spatial direction Y, and a point-in-time t.

Now, the detection region of the sensor 2 has an expanse in the spatial direction X and the spatial direction Y. In other words, the approximation function $f(x, y, t)$ is a function approximating the signals of the actual world 1 having an expanse in the spatial direction and time direction, which are acquired with the sensor 2.

Let us say that projection of the signals of the actual world 1 yields a value $P(x, y, t)$ of the data 3. The value $P(x, y, t)$ of the data 3 is a pixel value which the sensor 2 which is an image sensor outputs, for example.

Now, in the event that the projection by the sensor 2 can be formulated, the value obtained by projecting the approximation function $f(x, y, t)$ can be represented as a projection function $S(x, y, t)$.

Obtaining the projection function $S(x, y, t)$ has the following problems.

First, generally, the function $F(x, y, z, t)$ representing the signals of the actual world 1 can be a function with an infinite number of orders.

Second, even if the signals of the actual world could be described as a function, the projection function $S(x, y, t)$ via projection of the sensor 2 generally cannot be determined. That is to say, the action of projection by the sensor 2, in other words, the relationship between the input signals and output signals of the sensor 2, is unknown, so the projection function $S(x, y, t)$ cannot be determined.

With regard to the first problem, let us consider expressing the function $f(x, y, t)$ approximating signals of the actual world 1 with the sum of products of the function $f_i(x, y, t)$ which is a describable function (e.g., a function with a finite number of orders) and variables $w_i$.

Also, with regard to the second problem, formulating projection by the sensor 2 allows us to describe the function $S_i(x, y, t)$ from the description of the function $f_i(x, y, t)$.

That is to say, representing the function $f(x, y, t)$ approximating signals of the actual world 1 with the sum of products of the function $f_i(x, y, t)$ and variables $w_i$, the Expression (5) can be obtained.

$$f(x, y, t) = \sum_{i=1}^{N} w_i f_i (x, y, t)$$

$$\ldots (5)$$

For example, as indicated in Expression (6), the relationship between the data 3 and the signals of the actual world can be formulated as shown in Expression (7) from Expression (5) by formulating the projection of the sensor 2.

$$S_i (x, y, t) = \iiint f_i (x, y, t) \, dx \, dy \, dt$$

$$\ldots (6)$$

$$P_j (x_j, y_j, t_j) = \sum_{i=1}^{N} w_i S_i (x_j, y_j, t_j)$$

$$\ldots (7)$$

In Expression (7), j represents the index of the data.

In the event that M data groups (j = 1 through M) common with the N variables $w_i$(i = 1 through N) exists in Expression (7), Expression (8) is satisfied, so the model 161 of the actual world can be obtained from data 3.

$$N \le M \qquad (8)$$

N is the number of variables representing the model 161 approximating the actual world 1. M is the number of pieces of data 162 include in the data 3.

Representing the function f(x, y, t) approximating the actual world 1 with Expression (5) allows the variable portion $w_i$ to be handled independently. At this time, i represents the number of variables. Also, the form of the function represented by $f_i$ can be handed independently, and a desired function can be used for $f_i$.

Accordingly, the number N of the variables $w_i$ can be defined without dependence on the function $f_i$, and the variables $w_i$ can be obtained from the relationship between the number N of the variables $w_i$ and the number of pieces of data M.

That is to say, using the following three allows the actual world 1 to be estimated from the data 3.

First, the N variables are determined. That is to say, Expression (5) is determined. This enables describing the actual world 1 using continuity. For example, the signals of the actual world 1 can be described with a model 161 wherein a cross-section is expressed with a polynomial, and the same cross-sectional shape continues in a constant direction.

Second, for example, projection by the sensor 2 is formulated, describing Expression (7). For example, this is formulated such that the results of integration of the signals of the actual world 2 are data 3.

Third, M pieces of data 162 are collected to satisfy Expression (8). For example, the data 162 is collected from a region having data continuity that has been detected with the data continuity detecting unit 101. For example, data 162 of a region wherein a constant cross-section continues, which is an example of continuity, is collected.

In this way, the relationship between the data 3 and the actual world 1 is described with the Expression (5), and M pieces of data 162 are collected, thereby satisfying Expression (8), and the actual world 1 can be estimated.

More specifically, in the event of N = M, the number of variables N and the number of expressions M are equal, so the variables $w_i$ can be obtained by formulating a simultaneous equation.

Also, in the event that N < M, various solving methods can be applied. For example, the variables $w_i$ can be obtained by least-square.

Now, the solving method by least-square will be described in detail.

First, an Expression (9) for predicting data 3 from the actual world 1 will be shown according to Expression (7).

$$P'_j(x_j, y_j, t_j) = \sum_{i=1}^{N} w_i S_i(x_j, y_j, t_j)$$

$$\ldots (9)$$

In Expression (9), $P'_j(x_j, y_j, t_j)$ is a prediction value.

The sum of squared differences E for the prediction value P' and observed value P is represented by Expression (10).

$$E = \sum_{j=1}^{M} (P_j(x_j, y_j, t_j) - P'_j(x_j, y_j, t_j))^2$$

$$\ldots (10)$$

The variables $w_i$ are obtained such that the sum of squared differences E is the smallest. Accordingly, the partial differential value of Expression (10) for each variable $w_k$ is 0. That is to say, Expression (11) holds.

$$\frac{\partial E}{\partial w_k} = -2 \sum_{j=1}^{M} w_i S_k(x_j, y_j, t_j) (P_j(x_j, y_j, t_j) - \sum_{i=1}^{N} w_i S_i(x_j, y_j, t_j)) = 0$$

$$\ldots (11)$$

Expression (11) yields Expression (12).

$$\sum_{j=1}^{M} (S_k(x_j, y_j, t_j) \sum_{i=1}^{N} w_i S_i(x_j, y_j, t_j)) = \sum_{j=1}^{M} S_k(x_j, y_j, t_j) P_j(x_j, y_j, t_j)$$

$$\ldots (12)$$

When Expression (12) holds with K = 1 through N, the solution by least-square is obtained. The normal equation thereof is shown in Expression (13).

$$\begin{pmatrix} \sum_{j=1}^{M} S_1(j)S_1(j) & \sum_{j=1}^{M} S_1(j)S_2(j) & \cdots & \sum_{j=1}^{M} S_1(j)S_N(j) \\ \sum_{j=1}^{M} S_2(j)S_1(j) & \sum_{j=1}^{M} S_2(j)S_2(j) & \cdots & \sum_{j=1}^{M} S_2(j)S_N(j) \\ \vdots & \vdots & \ddots & \vdots \\ \sum_{j=1}^{M} S_N(j)S_1(j) & \sum_{j=1}^{M} S_N(j)S_2(j) & \cdots & \sum_{j=1}^{M} S_N(j)S_N(j) \end{pmatrix} \begin{pmatrix} w_1 \\ w_2 \\ \vdots \\ w_N \end{pmatrix} = \begin{pmatrix} \sum_{j=1}^{M} S_1(j)P_j(j) \\ \sum_{j=1}^{M} S_2(j)P_j(j) \\ \vdots \\ \sum_{j=1}^{M} S_N(j)P_j(j) \end{pmatrix}$$

$$\ldots (13)$$

Note that in Expression (13), $S_i(x_j, y_j, t_j)$ is described as $S_i(j)$.

$$S_{MAT} = \begin{pmatrix} \sum_{j=1}^{M} S_1(j)S_1(j) & \sum_{j=1}^{M} S_1(j)S_2(j) & \cdots & \sum_{j=1}^{M} S_1(j)S_N(j) \\ \sum_{j=1}^{M} S_2(j)S_1(j) & \sum_{j=1}^{M} S_2(j)S_2(j) & \cdots & \sum_{j=1}^{M} S_2(j)S_N(j) \\ \vdots & \vdots & \ddots & \vdots \\ \sum_{j=1}^{M} S_N(j)S_1(j) & \sum_{j=1}^{M} S_N(j)S_2(j) & \cdots & \sum_{j=1}^{M} S_N(j)S_N(j) \end{pmatrix}$$

$$\cdots (14)$$

$$W_{MAT} = \begin{pmatrix} w_1 \\ w_2 \\ \vdots \\ w_N \end{pmatrix}$$

$$\cdots (15)$$

$$P_{MAT} = \begin{pmatrix} \sum_{j=1}^{M} S_1(j)P_j(j) \\ \sum_{j=1}^{M} S_2(j)P_j(j) \\ \vdots \\ \sum_{j=1}^{M} S_N(j)P_j(j) \end{pmatrix}$$

$$\cdots (16)$$

From Expression (14) through Expression (16), Expression (13) can be expressed as $S_{MAT}W_{MAT} = P_{MAT}$.
In Expression (13), $S_i$ represents the projection of the actual world 1. In Expression (13), $P_j$ represents the data 3. In Expression (13), $w_i$ represents variables for describing and obtaining the characteristics of the signals of the actual world 1.

Accordingly, inputting the data 3 into Expression (13) and obtaining $W_{MAT}$ by a matrix solution or the like enables the actual world 1 to be estimated. That is to say, the actual world 1 can be estimated by computing Expression (17).

$$W_{MAT} = S_{MAT}^{-1} P_{MAT} \tag{17}$$

Note that in the event that $S_{MAT}$ is not regular, a transposed matrix of $S_{MAT}$ can be used to obtain $W_{MAT}$.

The actual world estimating unit 102 estimates the actual world 1 by, for example, inputting the data 3 into Expression (13) and obtaining $W_{MAT}$ by a matrix solution or the like.

Now, an even more detailed example will be described. For example, the cross-sectional shape of the signals of the actual world 1, i.e., the change in level as to the change in position, will be described with a polynomial. Let us assume that the cross-sectional shape of the signals of the actual world 1 is constant, and that the cross-section of the signals of the actual world 1 moves at a constant speed. Projection of the signals of the actual world 1 from the sensor 2 to the data 3 is formulated by three-dimensional integration in the time-space direction of the signals of the actual world 1.

The assumption that the cross-section of the signals of the actual world 1 moves at a constant speed yields Expression (18) and Expression (19).

$$\frac{dx}{dt} = v_x \tag{18}$$

$$\frac{dy}{dt} = v_y \tag{19}$$

Here, $v_x$ and $v_y$ are constant.

Using Expression (18) and Expression (19), the cross-sectional shape of the signals of the actual world 1 can be represented as in Expression (20).

$$f(x', y') = f(x + v_x t, y + v_y t) \tag{20}$$

Formulating projection of the signals of the actual world 1 from the sensor 2 to the data 3 by three-dimensional integration in the time-space direction of the signals of the actual world 1 yields Expression (21).

$$S(x, y, t) \doteq \int_{x_s}^{x_e} \int_{y_s}^{y_e} \int_{t_s}^{t_e} f(x', y') \, dx \, dy \, dt$$

$$= \int_{x_s}^{x_e} \int_{y_s}^{y_e} \int_{t_s}^{t_e} f(x + v_x t, y + v_y t) \, dx \, dy \, dt$$

$$\ldots (21)$$

In Expression (21), $S(x, y, t)$ represents an integrated value the region from position $x_s$ to position $x_e$ for the spatial direction X, from position $y_s$ to position $y_e$ for the spatial direction Y, and from point-in-time $t_s$ to point-in-time $t_e$ for the time direction t, i.e., the region represented as a space-time cuboid.

Solving Expression (13) using a desired function $f(x', y')$ whereby Expression (21) can be determined enables the signals of the actual world 1 to be estimated.

In the following, we will use the function indicated in Expression (22) as an example of the function $f(x', y')$.

$$f(x', y') = w_1 x' + w_2 y' + w_3$$

$$= w_1(x + v_x t) + w_2(y + v_x t) + w_3 \qquad \ldots (22)$$

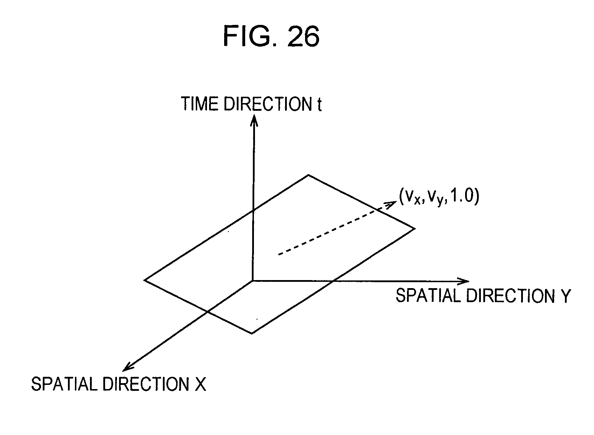

That is to say, the signals of the actual world 1 are estimated to include the continuity represented in Expression (18), Expression (19), and Expression (22). This indicates that the cross-section with a constant shape is moving in the space-time direction as shown in Fig. 26.

Substituting Expression (22) into Expression (21) yields Expression (23).

$$S(x, y, t) = \int_{x_s}^{x_e} \int_{y_s}^{y_e} \int_{t_s}^{t_e} f(x + v_x t, y + v_y t) \, dx \, dy \, dt$$

$$= \mathrm{Volume}\left(\frac{w_0}{2}(x_e + x_s + v_x(t_e + t_s))\right.$$

$$\left. + \frac{w_1}{2}(y_e + y_s + v_y(t_e + t_s)) + w_2\right)$$

$$= w_0 S_0(x, y, t) + w_1 S_1(x, y, t) + w_2 S_2(x, y, t)$$

$$\ldots (23)$$

wherein

$$\mathrm{Volume} = (x_e - x_s)(y_e - y_s)(t_e - t_s)$$

$$S_0(x, y, t) = \mathrm{Volume}/2 \times (x_e + x_s + v_x(t_e + t_s))$$

$$S_1(x, y, t) = \mathrm{Volume}/2 \times (y_e + y_s + v_y(t_e + t_s))$$

$$S_2(x, y, t) = 1$$

holds.

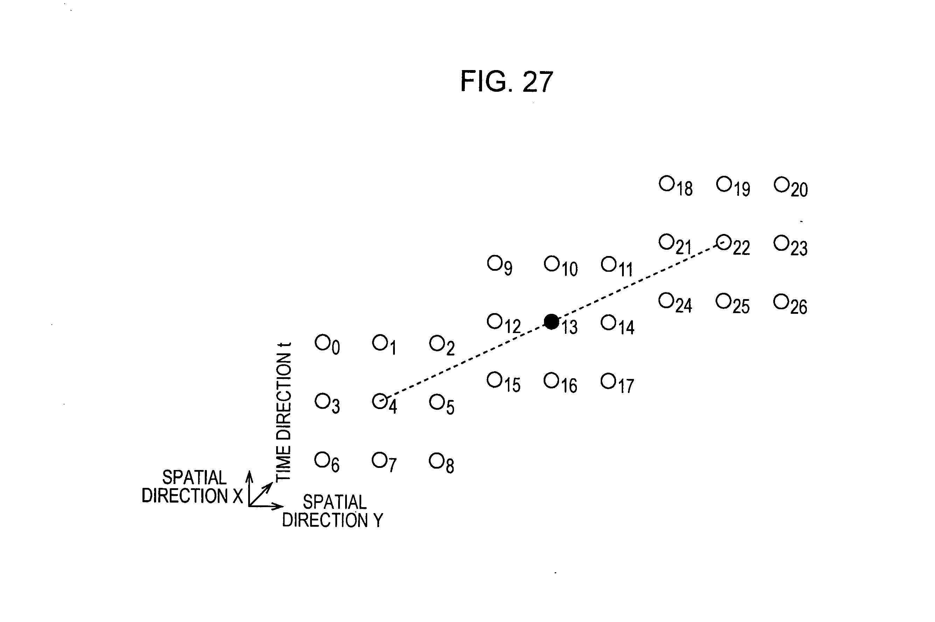

Fig. 27 is a diagram illustrating an example of the M pieces of data 162 extracted from the data 3. For example, let us say that 27 pixel values are extracted as the data 162, and that the extracted pixel values are $P_j(x, y, t)$. In this case, j is 0 through 26.

In the example shown in Fig. 27, in the event that the pixel value of the pixel corresponding to the position of interest at the point-in-time t which is n is $P_{13}(x, y, t)$, and the direction of array of the pixel values of the pixels having the continuity of data (e.g., the direction in which the same-shaped pawl shapes detected by the data continuity detecting unit 101 are arrayed) is a direction connecting $P_4(x, y, t)$, $P_{13}(x, y, t)$, and $P_{22}(x, y, t)$, the pixel values $P_9(x, y, t)$ through $P_{17}(x, y, t)$ at the point-in-time t which is n, the pixel values $P_0(x, y, t)$ through $P_8(x, y, t)$ at the point-in-time t which is n - 1 which is earlier in time than n, and the pixel values $P_{18}(x, y, t)$ through $P_{26}(x, y, t)$ at the point-in-time t which is n + 1 which is later in time than n, are extracted.

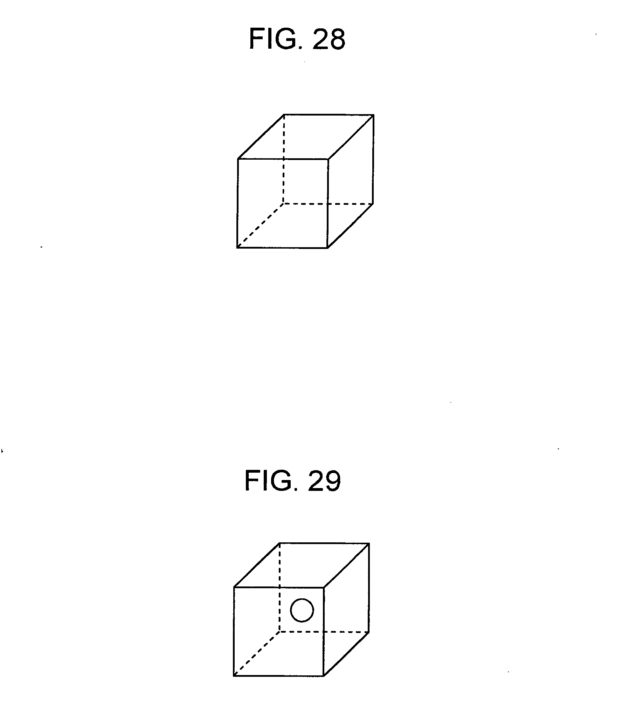

Now, the region regarding which the pixel values, which are the data 3 output from the image sensor which is the sensor 2, have been obtained, have a time-direction and two-dimensional spatial direction expansion, as shown in Fig. 28. Now, as shown in Fig. 29, the center of gravity of the cuboid corresponding to the pixel values (the region regarding which the pixel values have been obtained) can be used as the position of the pixel in the space-time direction. The circle in Fig. 29 indicates the center of gravity.

Generating Expression (13) from the 27 pixel values $P_0(x, y, t)$ through $P_{26}(x, y, t)$ and from Expression (23), and obtaining W, enables the actual world 1 to be estimated.

In this way, the actual world estimating unit 102 generates Expression (13) from the 27 pixel values $P_0(x, y,$

t) through $P_{26}(x, y, t)$ and from Expression (23), and obtains W, thereby estimating the signals of the actual world 1.

Note that a Gaussian function, a sigmoid function, or the like, can be used for the function $f_i(x, y, t)$.

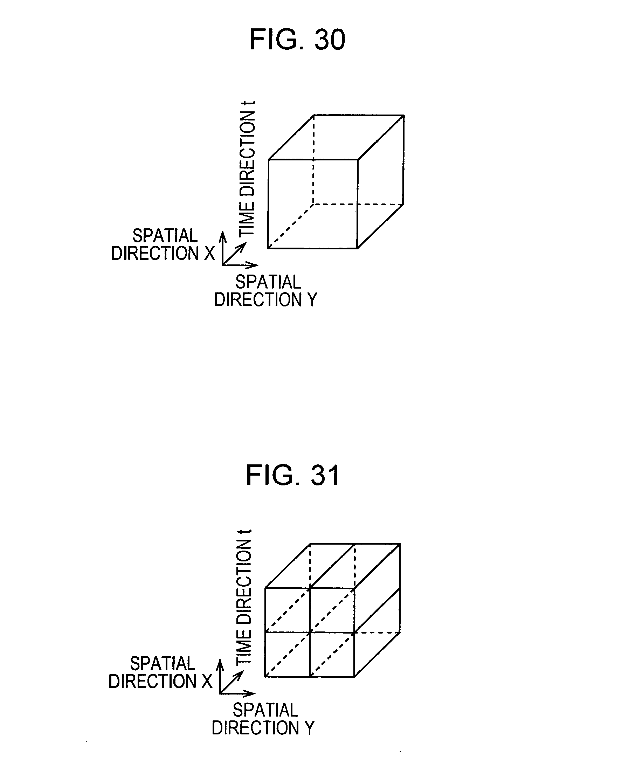

An example of processing for generating high-resolution data 181 with even higher resolution, corresponding to the data 3, from the estimated actual world 1 signals, will be described with reference to Fig. 30 through Fig. 34.

As shown in Fig. 30, the data 3 has a value wherein signals of the actual world 1 are integrated in the time direction and two-dimensional spatial directions. For example, a pixel value which is data 3 that has been output from the image sensor which is the sensor 2 has a value wherein the signals of the actual world 1, which is light cast into the detecting device, are integrated by the shutter time which is the detection time in the time direction, and integrated by the photoreception region of the detecting element in the spatial direction.

Conversely, as shown in Fig. 31, the high-resolution data 181 with even higher resolution in the spatial direction is generated by integrating the estimated actual world 1 signals in the time direction by the same time as the detection time of the sensor 2 which has output the data 3, and also integrating in the spatial direction by a region narrower in comparison with the photoreception region of the detecting element of the sensor 2 which has output the data 3.

Note that at the time of generating the high-resolution data 181 with even higher resolution in the spatial direction, the region where the estimated signals of the actual world 1 are integrated can be set completely disengaged from photoreception region of the detecting element of the sensor 2 which has output the data 3. For example, the high-resolution data 181 can be provided with resolution which is that of the data 3 magnified in the spatial direction by an integer, of course, and further, can be provided with resolution which is that of the data 3 magnified in the spatial direction by a rational number such as 5/3 times, for example.

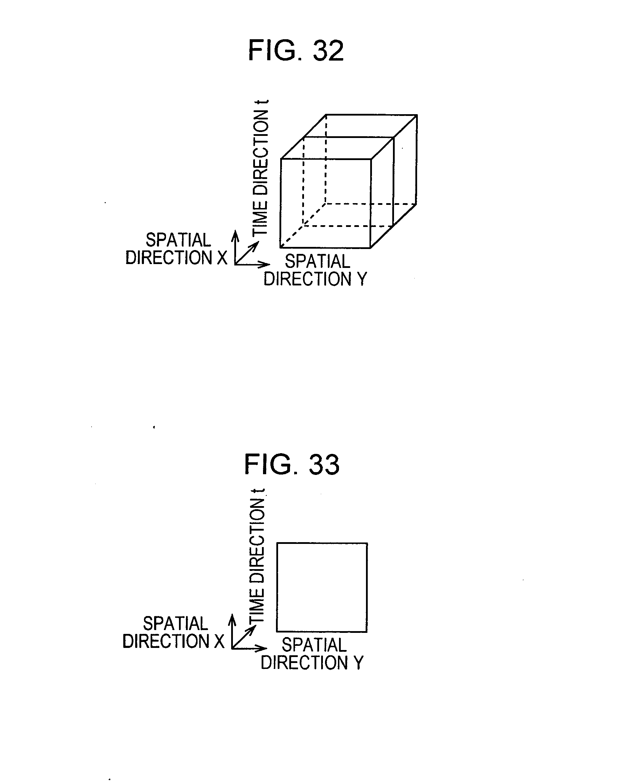

Also, as shown in Fig. 32, the high-resolution data 181 with even higher resolution in the time direction is generated by integrating the estimated actual world 1 signals in the spatial direction by the same region as the photoreception region of the detecting element of the sensor 2 which has output the data 3, and also integrating in the time direction by a time shorter than the detection time of the sensor 2 which has output the data 3.

Note that at the time of generating the high-resolution data 181 with even higher resolution in the time direction, the time by which the estimated signals of the actual world 1 are integrated can be set completely disengaged from shutter time of the detecting element of the sensor 2 which has output the data 3. For example, the high-resolution data 181 can be provided with resolution which is that of the data 3 magnified in the time direction by an integer, of course, and further, can be provided with resolution which is that of the data 3 magnified in the time direction by a rational number such as 7/4 times, for example.

As shown in Fig. 33, high-resolution data 181 with movement blurring removed is generated by integrating the estimated actual world 1 signals only in the spatial direction and not in the time direction.

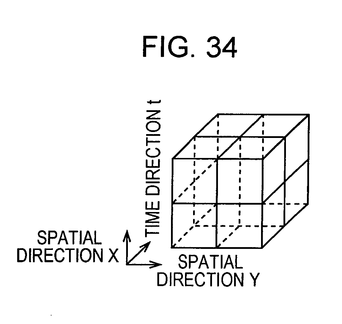

Further, as shown in Fig. 34, high-resolution data 181 with higher resolution in the time direction and space direction is generated by integrating the estimated actual world 1 signals in the spatial direction by a region narrower in comparison with the photoreception region of the detecting element of the sensor 2 which has output the data 3, and also integrating in the time direction by a time shorter in comparison with the detection time of the sensor 2 which has output the data 3.

In this case, the region and time for integrating the estimated actual world 1 signals can be set completely unrelated to the photoreception region and shutter time of the detecting element of the sensor 2 which has output the data 3.

Thus, the image generating unit 103 generates data with higher resolution in the time direction or the spatial direction, by integrating the estimated actual world 1 signals by a desired space-time region, for example.

Accordingly, data which is more accurate with regard to the signals of the actual world 1, and which has higher resolution in the time direction or the space direction, can be generated by estimating the signals of the actual world 1.

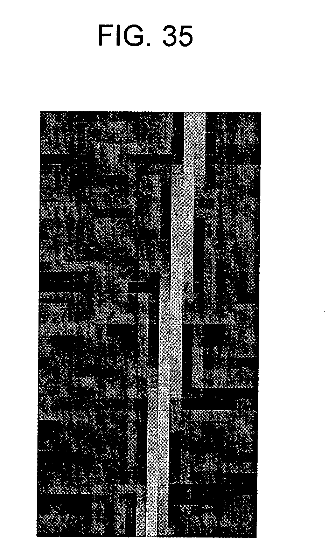

An example of an input image and the results of processing with the signal processing device 4 according to the present invention will be described with reference to Fig. 35 through Fig. 39.

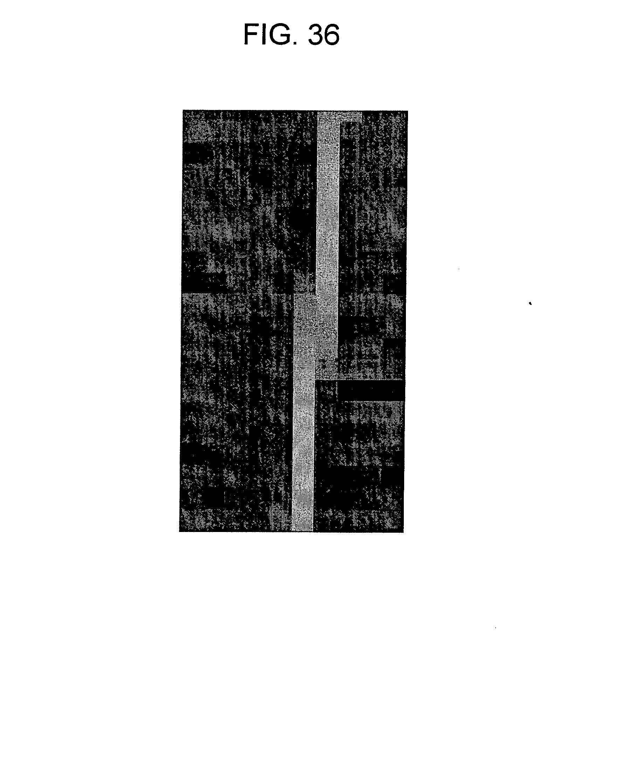

Fig. 35 is a diagram illustrating an original image of an input image. Fig. 36 is a diagram illustrating an example of an input image. The input image shown in Fig. 36 is an image generated by taking the average value of pixel values of pixels belonging to blocks made up of 2 by 2 pixels of the image shown in Fig. 35, as the pixel value of a single pixel. That is to say, the input image is an image obtained by applying spatial direction integration to the image shown in Fig. 35, imitating the integrating properties of the sensor.

The original image shown in Fig. 35 contains an image of a fine line inclined at approximately 5 degrees in the clockwise direction from the vertical direction. In the same way, the input image shown in Fig. 36 contains an image of a fine line inclined at approximately 5 degrees in the clockwise direction from the vertical direction.

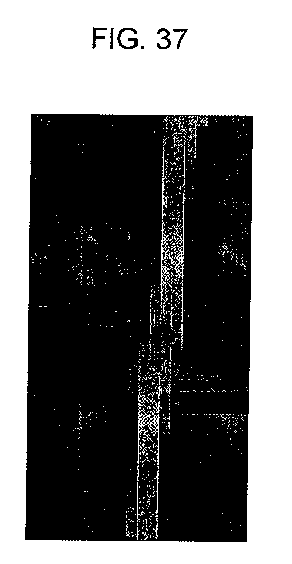

Fig. 37 is a diagram illustrating an image obtained by applying conventional class classification adaptation processing to the input image shown in Fig. 36. Now, class classification processing is made up of class classification processing and adaptation processing, wherein the data is classified based on the nature thereof by the class classification adaptation processing, and subjected to adaptation processing for each class. In the adaptation processing, a low-image quality or standard image quality image, for example, is converted into a high image quality image by being subjected to mapping (mapping) using a predetermined tap coefficient.

It can be understood in the image shown in Fig. 37 that the image of the fine line is different to that of the original image in Fig. 35.

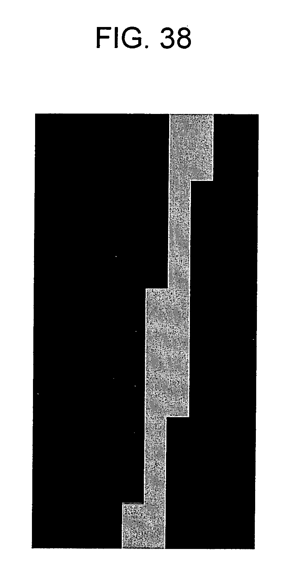

Fig. 38 is a diagram illustrating the results of detecting the fine line regions from the input image shown in the example in Fig. 36, by the data continuity detecting unit 101. In Fig. 38, the white region indicates the fine line region, i.e., the region wherein the arc shapes shown in Fig. 14 are arrayed.

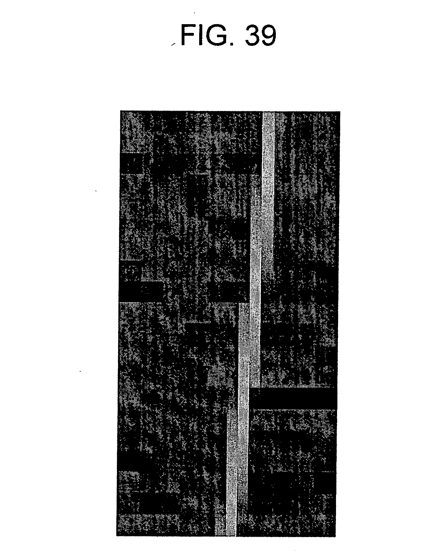

Fig. 39 is a diagram illustrating an example of the output image output from the signal processing device 4 according to the present invention, with the image shown in Fig. 36 as the input image. As shown in Fig. 39, the signals processing device 4 according to the present invention yields an image closer to the fine line image of the original image shown in Fig. 35.

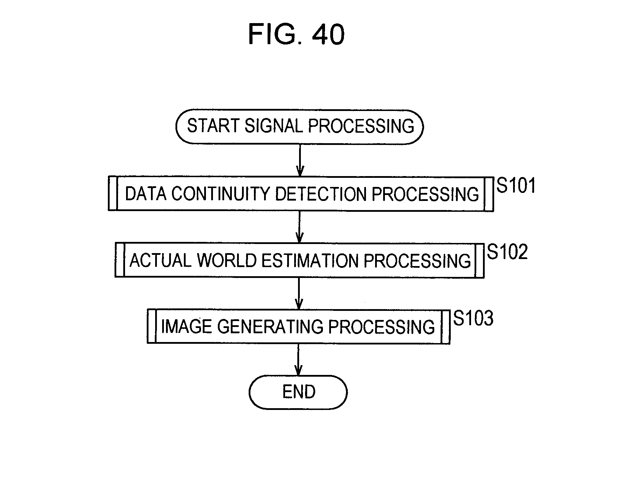

Fig. 40 is a flowchart for describing the processing of signals with the signal processing device 4 according to the present invention.

In step S101, the data continuity detecting unit 101 executes the processing for detecting continuity. The data continuity detecting unit 101 detects data continuity contained in the input image which is the data 3, and supplies the data continuity information indicating the detected data continuity to the actual world estimating unit 102 and the image generating unit 103.

The data continuity detecting unit 101 detects the continuity of data corresponding to the continuity of the signals of the actual world. In the processing in step S101, the continuity of data detected by the data continuity detecting unit 101 is either part of the continuity of the image of the actual world 1 contained in the data 3, or continuity which has changed from the continuity of the signals of the actual world 1.

The data continuity detecting unit 101 detects the data continuity by detecting a region having a constant characteristic in a predetermined dimensional direction. Also, the data continuity detecting unit 101 detects data continuity by detecting angle (gradient) in the spatial direction indicating the an array of the same shape.

Details of the continuity detecting processing in step S101 will be described later.

Note that the data continuity information can be used as features, indicating the characteristics of the data 3.

In step S102, the actual world estimating unit 102 executes processing for estimating the actual world. That is to say, the actual world estimating unit 102 estimates the signals of the actual world based on the input image and the data continuity information supplied from the data continuity detecting unit 101. In the processing in step S102 for example, the actual world estimating unit 102 estimates the signals of the actual world 1 by predicting a model 161 approximating (describing) the actual world 1. The actual world estimating unit 102 supplies the actual world estimation information indicating the estimated signals of the actual world 1 to the image generating unit 103.

For example, the actual world estimating unit 102 estimates the actual world 1 signals by predicting the width of the linear object. Also, for example, the actual world estimating unit 102 estimates the actual world 1 signals by predicting a level indicating the color of the linear object.

Details of processing for estimating the actual world in step S102 will be described later.

Note that the actual world estimation information can be used as features, indicating the characteristics of the data 3.

In step S103, the image generating unit 103 performs image generating processing, and the processing ends. That is to say, the image generating unit 103 generates an image based on the actual world estimation information, and outputs the generated image. Or, the image generating unit 103 generates an image based on the data continuity information and actual world estimation information, and outputs the generated image.

For example, in the processing in step S103, the image generating unit 103 integrates a function approximating the generated real world light signals in the spatial direction, based on the actual world estimated information, hereby generating an image with higher resolution in the spatial direction in comparison with the input image, and outputs the generated image. For example, the image generating unit 103 integrates a function approximating the generated real world light signals in the time-space direction, based on the actual world estimated information, hereby generating an image with higher resolution in the time direction and the spatial direction in comparison with the input image, and outputs the generated image. The details of the image generating processing in step S103 will be described later.

Thus, the signal processing device 4 according to the present invention detects data continuity from the data 3, and estimates the actual world 1 from the detected data continuity. The signal processing device 4 then generates signals closer approximating the actual world 1 based on the estimated actual world 1.

As described above, in the event of performing the processing for estimating signals of the real world, accurate and highly-precise processing results can be obtained.

Also, in the event that first signals which are real world signals having first dimensions are projected, the continuity of data corresponding to the lost continuity of the real world signals is detected for second signals of second dimensions, having a number of dimensions fewer than the first dimensions, from which a part of the continuity of the signals of the real world has been lost, and the first signals are estimated by estimating the lost real world signals continuity based on the detected data continuity, accurate and highly-precise processing results can be obtained as to the events in the real world.

Next, the details of the configuration of the data continuity detecting unit 101 will be described.

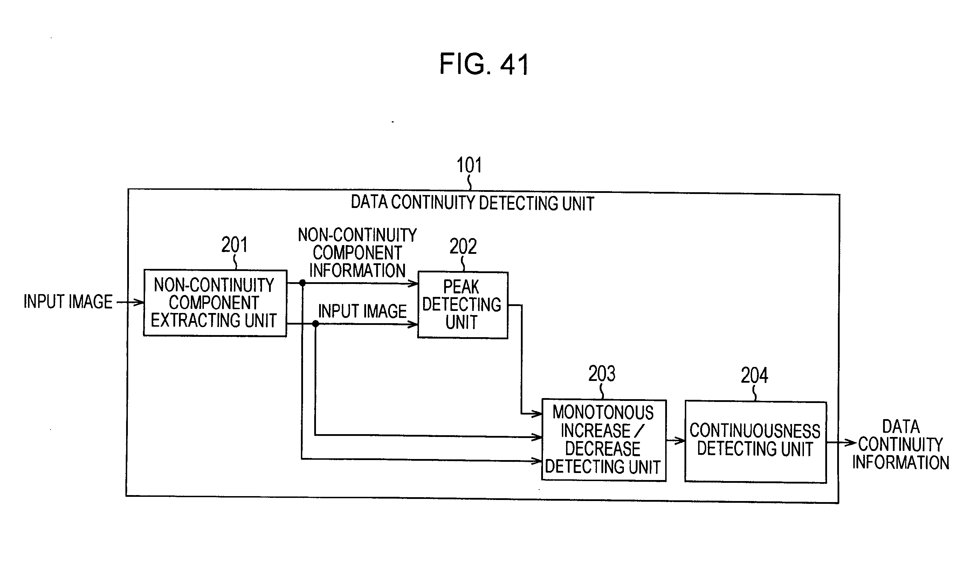

Fig. 41 is a block diagram illustrating the configuration of the data continuity detecting unit 101.

Upon taking an image of an object which is a fine line, the data continuity detecting unit 101, of which the configuration is shown in Fig. 41, detects the continuity of data contained in the data 3, which is generated from the continuity in that the cross-sectional shape which the object has is the same. That is to say, the data continuity detecting unit 101 of the configuration shown in Fig. 41 detects the continuity of data contained in the data 3, which is generated from the continuity in that the change in level of light as to the change in position in the direction orthogonal to the length-wise direction is the same at an arbitrary position in the length-wise direction, which the image of the actual world 1 which is a fine line, has.

More specifically, the data continuity detecting unit 101 of which configuration is shown in Fig. 41 detects the region where multiple arc shapes (half-disks) having a predetermined length are arrayed in a diagonally-offset adjacent manner, within the data 3 obtained by taking an image of a fine line with the sensor 2 having spatial integration effects.

The data continuity detecting unit 101 extracts the portions of the image data other than the portion of the image data where the image of the fine line having data continuity has been projected (hereafter, the portion of the image data where the image of the fine line having data continuity has been projected will also be called continuity component, and the other portions will be called non-continuity component), from an input image which is the data 3, detects the pixels where the image of the fine line of the actual world 1 has been projected, from the extracted non-continuity component and the input image, and detects the region of the input image made up of pixels where the image of the fine line of the actual world 1 has been projected.

A non-continuity component extracting unit 201 extracts the non-continuity component from the input image, and supplies the non-continuity component information indicating the extracted non-continuity component to a peak detecting unit 202 and a monotonous increase/decrease detecting unit 203 along with the input image.

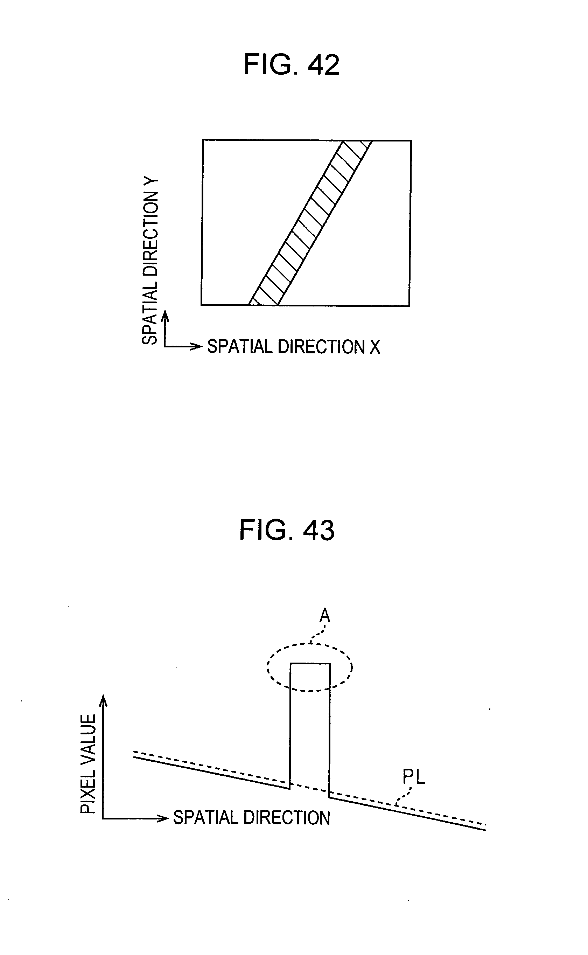

For example, as shown in Fig. 42, in the event that an image of the actual world 1 wherein a fine line exists in front of a background with an approximately constant light level is projected on the data 3, the non-continuity component extracting unit 201 extracts the non-continuity component which is the background, by approximating the background in the input image which is the data 3, on a plane, as shown in Fig. 43. In Fig. 43, the solid line indicates the pixel values of the data 3, and the dotted line illustrates the approximation values indicated by the plane approximating the background. In Fig. 43, A denotes the pixel value of the pixel where the image of the fine line has been projected, and the PL denotes the plane approximating the background.

In this way, the pixel values of the multiple pixels at the portion of the image data having data continuity are discontinuous as to the non-continuity component.

The non-continuity component extracting unit 201 detects the discontinuous portion of the pixel values of the multiple pixels of the image data which is the data 3, where an image which is light signals of the actual world 1 has been projected and a part of the continuity of the image of the actual world 1 has been lost.

Details of the processing for extracting the non-continuity component with the non-continuity component extracting unit 201 will be described later.

The peak detecting unit 202 and the monotonous increase/decrease detecting unit 203 remove the non-continuity component from the input image, based on the non-continuity component information supplied from the non-continuity component extracting unit 201. For example, the peak detecting unit 202 and the monotonous increase/decrease detecting unit 203 remove the non-continuity component from the input image by setting the pixel values of the pixels of the input image where only the background image has been projected, to 0. Also, for example, the peak detecting unit 202 and the monotonous increase/decrease detecting unit 203 remove the non-continuity component from the input image by subtracting values approximated by the plane PL from the pixel values of each pixel of the input image.

Since the background can be removed from the input image, the peak detecting unit 202 through continuousness detecting unit 204 can process only the portion of the image data where the fine line has be projected, thereby further simplifying the processing by the peak detecting unit 202 through the continuousness detecting unit 204.

Note that the non-continuity component extracting unit 201 may supply image data wherein the non-continuity component has been removed form the input image, to the peak detecting unit 202 and the monotonous increase/decrease detecting unit 203.

In the example of processing described below, the image data wherein the non-continuity component has been removed from the input image, i.e., image data made up from only pixel containing the continuity component, is the object.

Now, description will be made regarding the image data upon which the fine line image has been projected, which the peak detecting unit 202 through continuousness detecting unit 204 are to detect.

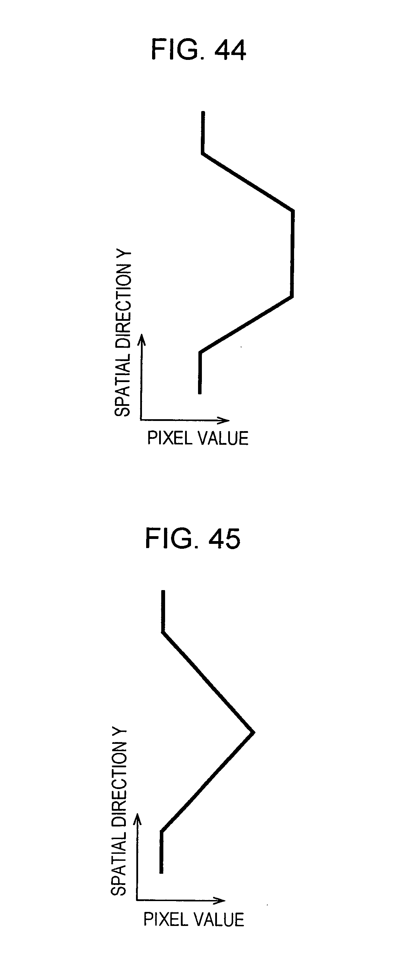

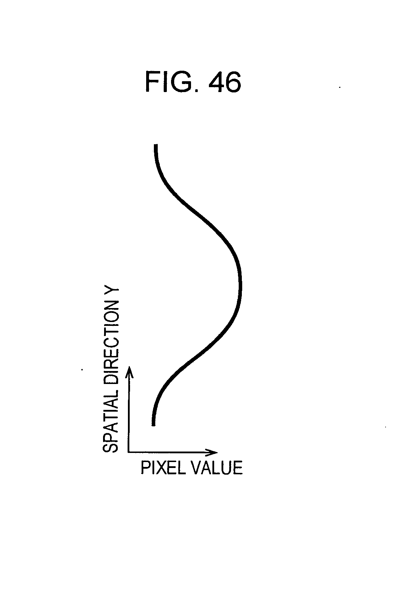

In the event that there is no optical LPF, the cross-dimensional shape in the spatial direction Y (change in the pixel values as to change in the position in the spatial direction) of the image data upon which the fine line image has been projected as shown in Fig. 42 can be thought to be the trapezoid shown in Fig. 44, or the triangle shown in Fig. 45. However, ordinary image sensors have an optical LPF with the image sensor obtaining the image which has passed through the optical LPF and projects the obtained image on the data 3, so in reality, the cross-dimensional shape of the image data with fine lines in the spatial direction Y has a shape resembling Gaussian distribution, as shown in Fig. 46.

The peak detecting unit 202 through continuousness detecting unit 204 detect a region made up of pixels upon which the fine line image has been projected wherein the same cross-sectional shape (change in the pixel values as to change in the position in the spatial direction) is arrayed vertically in the screen at constant intervals, and further, detect a region made up of pixels upon which the fine line image has been projected which is a region having data continuity, by detecting regional connection corresponding to the length-wise direction of the fine line of the actual world 1. That is to say, the peak detecting unit 202 through continuousness detecting unit 204 detect regions wherein arc shapes (half-disc shapes) are formed on a single vertical row of pixels in the input image, and determine whether or not the detected regions are adjacent in the horizontal direction, thereby detecting connection of regions where arc shapes are formed, corresponding to the length-wise direction of the fine line image which is signals of the actual world 1.

Also, the peak detecting unit 202 through continuousness detecting unit 204 detect a region made up of pixels upon which the fine line image has been projected wherein the same cross-sectional shape is arrayed horizontally in the screen at constant intervals, and further, detect a region made up of pixels upon which the fine line image has been projected which is a region having data continuity, by detecting connection of detected regions corresponding to the length-wise direction of the fine line of the actual world 1. That is to say, the peak detecting unit 202 through continuousness detecting unit 204 detect regions wherein arc shapes are formed on a single horizontal row of pixels in the input image, and determine whether or not the detected regions are adjacent in the vertical direction, thereby detecting connection of regions where arc shapes are formed, corresponding to the length-wise direction of the fine line image, which is signals of the actual world 1.

First, description will be made regarding processing for detecting a region of pixels upon which the fine line image has been projected wherein the same arc shape is arrayed vertically in the screen at constant intervals.

The peak detecting unit 202 detects a pixel having a pixel value greater than the surrounding pixels, i.e., a peak, and supplies peak information indicating the position of the peak to the monotonous increase/decrease detecting unit 203. In the event that pixels arrayed in a single vertical row in the screen are the object, the peak detecting unit 202 compares the pixel value of the pixel position upwards in the screen and the pixel value of the pixel position downwards in the screen, and detects the pixel with the greater pixel value as the peak. The peak detecting unit 202 detects one or multiple peaks from a single image, e.g., from the image of a single frame.

A single screen contains frames or fields. This holds true in the following description as well.

For example, the peak detecting unit 202 selects a pixel of interest from pixels of an image of one frame which have not yet been taken as pixels of interest, compares the pixel value of the pixel of interest with the pixel value of the pixel above the pixel of interest, compares the pixel value of the pixel of interest with the pixel value of the pixel below the pixel of interest, detects a pixel of interest which has a greater pixel value than the pixel value of the pixel above and a greater pixel value than the pixel value of the pixel below, and takes the detected pixel of interest as a peak. The peak detecting unit supplies peak information indicating the detected peak to the monotonous increase/decrease detecting unit 203.

There are cases wherein the peak detecting unit 202 does not detect a peak. For example, in the event that the pixel values of all of the pixels of an image are the same value, or in the event that the pixel values decrease in one or two directions, no peak is detected. In this case, no fine line image has been projected on the image data.

The monotonous increase/decrease detecting unit 203 detects a candidate for a region made up of pixels upon which the fine line image has been projected wherein the pixels are vertically arrayed in a single row as to the peak detected by the peak detecting unit 202, based upon the peak information indicating the position of the peak supplied from the peak detecting unit 202, and supplies the region information indicating the detected region to the continuousness detecting unit 204 along with the peak information.

More specifically, the monotonous increase/decrease detecting unit 203 detects a region made up of pixels having pixel values monotonously decreasing with reference to the peak pixel value, as a candidate of a region made up of pixels upon which the image of the fine line has been projected. Monotonous decrease means that the pixel values of pixels which are farther distance-wise from the peak are smaller than the pixel values of pixels which are closer to the peak.

Also, the monotonous increase/decrease detecting unit 203 detects a region made up of pixels having pixel values monotonously increasing with reference to the peak pixel value, as a candidate of a region made up of pixels upon which the image of the fine line has been projected. Monotonous increase means that the pixel values of pixels which are farther distance-wise from the peak are greater than the pixel values of pixels which are closer to the peak.

In the following, the processing regarding regions of pixels having pixel values monotonously increasing is the same as the processing regarding regions of pixels having pixel values monotonously decreasing, so description thereof will be omitted. Also, with the description regarding processing for detecting a region of pixels upon which the fine line image has been projected wherein the same arc shape is arrayed horizontally in the screen at constant intervals, the processing regarding regions of pixels having pixel values monotonously increasing is the same as the processing regarding regions of pixels having pixel values monotonously decreasing, so description thereof will be omitted.

For example, the monotonous increase/decrease detecting unit 203 detects pixel values of each of the pixels in a vertical row as to a peak, the difference as to the pixel value of the pixel above, and the difference as to the pixel value of the pixel below. The monotonous increase/decrease detecting unit 203 then detects a region wherein the pixel value monotonously decreases by detecting pixels wherein the sign of the difference changes.

Further, the monotonous increase/decrease detecting unit 203 detects, from the region wherein pixel values monotonously decrease, a region made up of pixels having pixel values with the same sign as that of the pixel value of the peak, with the sign of the pixel value of the peak as a reference, as a candidate of a region made up of pixels upon which the image of the fine line has been projected.

For example, the monotonous increase/decrease detecting unit 203 compares the sign of the pixel value of each pixel with the sign of the pixel value of the pixel above and sign of the pixel value of the pixel below, and detects the pixel where the sign of the pixel value changes, thereby detecting a region of pixels having pixel values of the same sign as the peak within the region where pixel values monotonously decrease.

Thus, the monotonous increase/decrease detecting unit 203 detects a region formed of pixels arrayed in a vertical direction wherein the pixel values monotonously decrease as to the peak and have pixels values of the same sign as the peak.

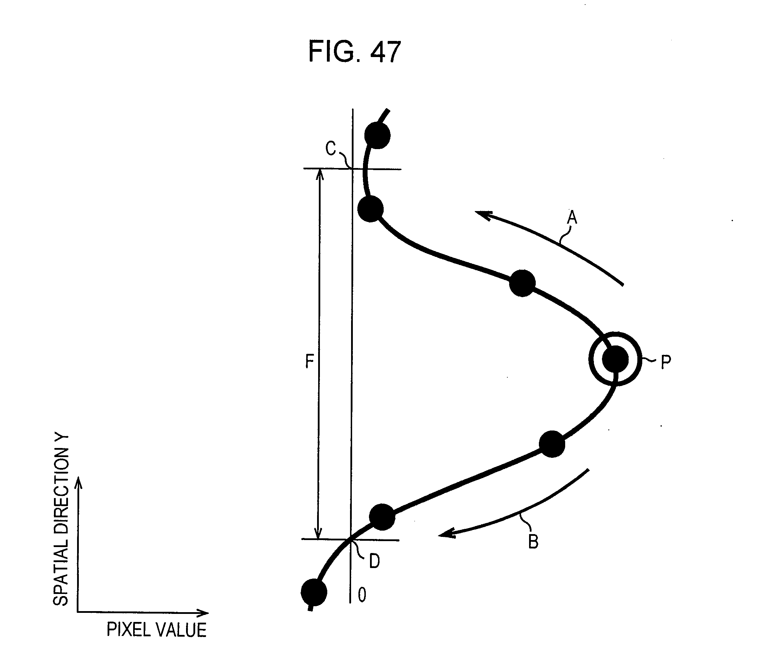

Fig. 47 is a diagram describing processing for peak detection and monotonous increase/decrease region detection, for detecting the region of pixels wherein the image of the fine line has been projected, from the pixel values as to a position in the spatial direction Y.

In Fig. 47 through Fig. 49, P represents a peak. In the description of the data continuity detecting unit 101 of which the configuration is shown in Fig. 41, P represents a peak.

The peak detecting unit 202 compares the pixel values of the pixels with the pixel values of the pixels adjacent thereto in the spatial direction Y, and detects the peak P by detecting a pixel having a pixel value greater than the pixel values of the two pixels adjacent in the spatial direction Y.

The region made up of the peak P and the pixels on both sides of the peak P in the spatial direction Y is a monotonous decrease region wherein the pixel values of the pixels on both sides in the spatial direction Y monotonously decrease as to the pixel value of the peak P. In Fig. 47, the arrow denoted A and the arrow denoted by B represent the monotonous decrease regions existing on either side of the peak P.

The monotonous increase/decrease detecting unit 203 obtains the difference between the pixel values of each pixel and the pixel values of the pixels adjacent in the spatial direction Y, and detects pixels where the sign of the difference changes. The monotonous increase/decrease detecting unit 203 takes the boundary between the detected pixel where the sign of the difference changes and the pixel immediately prior thereto (on the peak P side) as the boundary of the fine line region made up of pixels where the image of the fine line has been projected.

In Fig. 47, the boundary of the fine line region which is the boundary between the pixel where the sign of the difference changes and the pixel immediately prior thereto (on the peak P side) is denoted by C.

Further, the monotonous increase/decrease detecting unit 203 compares the sign of the pixel values of each pixel with the pixel values of the pixels adjacent thereto in the spatial direction Y, and detects pixels where the sign of the pixel value changes in the monotonous decrease region. The monotonous increase/decrease detecting unit 203 takes the boundary between the detected pixel where the sign of the pixel value changes and the pixel immediately prior thereto (on the peak P side) as the boundary of the fine line region.

In Fig. 47, the boundary of the fine line region which is the boundary between the pixel where the sign of the pixel value changes and the pixel immediately prior thereto (on the peak P side) is denoted by P.

As shown in Fig. 47, the fine line region F made up of pixels where the image of the fine line has been projected is the region between the fine line region boundary C and the fine line region boundary D.

The monotonous increase/decrease detecting unit 203 obtains a fine line region F which is longer than a predetermined threshold, from fine line regions F made up of such monotonous increase/decrease regions, i.e., a fine line region F having a greater number of pixels than the threshold value. For example, in the event that the threshold value is 3, the monotonous increase/decrease detecting unit 203 detects a fine line region F including 4 or more pixels.

Further, the monotonous increase/decrease detecting unit 203 compares the pixel value of the peak P, the pixel value of the pixel to the right side of the peak P, and the pixel value of the pixel to the left side of the peak P, from the fine line region F thus detected, each with the threshold value, detects a fine pixel region F having the peak P wherein the pixel value of the peak P exceeds the threshold value, and wherein the pixel value of the pixel to the right side of the peak P is the threshold value or lower, and wherein the pixel value of the pixel to the left side of the peak P is the threshold value or lower, and takes the detected fine line region F as a candidate for the region made up of pixels containing the component of the fine line image.

In other words, determination is made that a fine line region F having the peak P, wherein the pixel value of the peak P is the threshold value or lower, or wherein the pixel value of the pixel to the right side of the peak P exceeds the threshold value, or wherein the pixel value of the pixel to the left side of the peak P exceeds the threshold value, does not contain the component of the fine line image, and is eliminated from candidates for the region made up of pixels including the component of the fine line image.

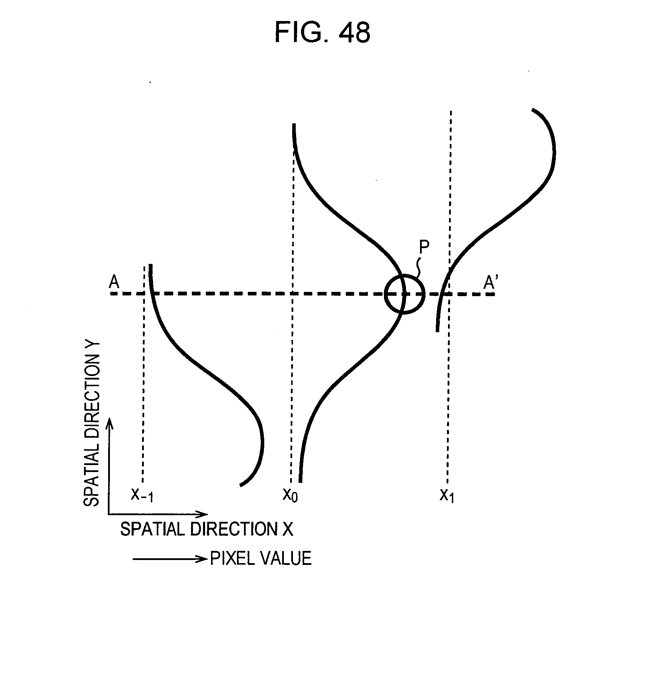

That is, as shown in Fig. 48, the monotonous increase/decrease detecting unit 203 compares the pixel value of the peak P with the threshold value, and also compares the pixel value of the pixel adjacent to the peak P in the spatial direction X (the direction indicated by the dotted line AA') with the threshold value, thereby detecting the fine line region F to which the peak P belongs, wherein the pixel value of the peak P exceeds the threshold value and wherein the pixel values of the pixel adjacent thereto in the spatial direction X are equal to or below the threshold value.

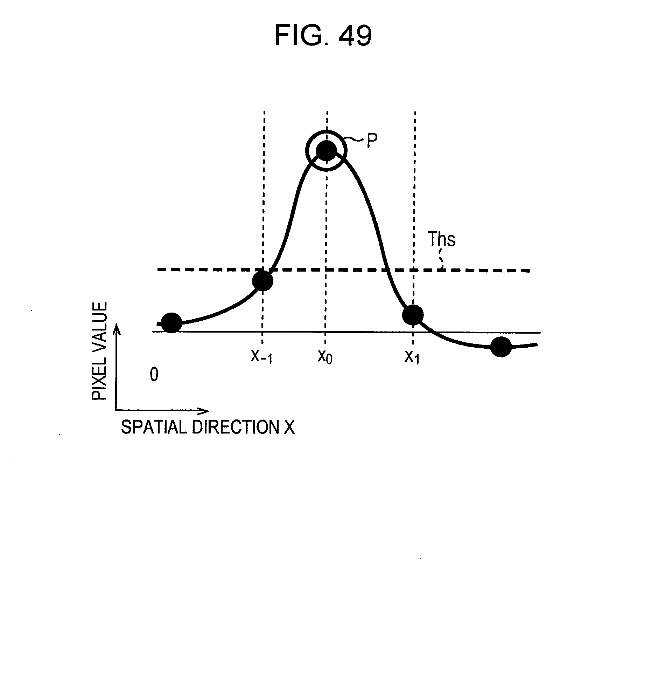

Fig. 49 is a diagram illustrating the pixel values of pixels arrayed in the spatial direction X indicated by the dotted line AA' in Fig. 48. The fine line region F to which the peak P belongs, wherein the pixel value of the peak P exceeds the threshold value $Th_s$ and wherein the pixel values of the pixel adjacent thereto in the spatial direction X are equal to or below the threshold value $Th_s$, contains the fine line component.

Note that an arrangement may be made wherein the monotonous increase/decrease detecting unit 203 compares the difference between the pixel value of the peak P and the pixel value of the background with the threshold value, taking the pixel value of the background as a reference, and also compares the difference between the pixel value of the pixels adjacent to the peak P in the spatial direction and the pixel value of the background with the threshold value, thereby detecting the fine line region F to which the peak P belongs, wherein the difference between the pixel value of the peak P and the pixel value of the background exceeds the threshold value, and wherein the difference between the pixel value of the pixel adjacent in the spatial direction X and the pixel value of the background is equal to or below the threshold value.

The monotonous increase/decrease detecting unit 203 outputs to the continuousness detecting unit 204 monotonous increase/decrease region information indicating a region made up of pixels of which the pixel value monotonously decrease with the peak P as a reference and the sign of the pixel value is the same as that of the peak P, wherein the peak P exceeds the threshold value and wherein the pixel value of the pixel to the right side of the peak P is equal to or below the threshold value and the pixel value of the pixel to the left side of the peak P is equal to or below the threshold value.

In the event of detecting a region of pixels arrayed in a single row in the vertical direction of the screen where the image of the fine line has been projected, pixels belonging to the region indicated by the monotonous increase/decrease region information are arrayed in the vertical direction and include pixels where the image of the fine line has been projected. That is to say, the region indicated by the monotonous increase/decrease region information includes a region formed of pixels arrayed in a single row in the vertical direction of the screen where the image of the fine line has been projected.

In this way, the apex detecting unit 202 and the monotonous increase/decrease detecting unit 203 detects a continuity region made up of pixels where the image of the fine line has been projected, employing the nature that, of the pixels where the image of the fine line has been projected, change in the pixel values in the spatial direction Y approximates Gaussian distribution.

Of the region made up of pixels arrayed in the vertical direction, indicated by the monotonous increase/decrease region information supplied from the monotonous increase/decrease detecting unit 203, the continuousness detecting unit 204 detects regions including pixels adjacent in the horizontal direction, i.e., regions having similar pixel value change and duplicated in the vertical direction, as continuous regions, and outputs the peak information and data continuity information indicating the detected continuous regions. The data continuity information includes monotonous increase/decrease region information, information indicating the connection of regions, and so forth.

Arc shapes are aligned at constant intervals in an adjacent manner with the pixels where the fine line has been projected, so the detected continuous regions include the pixels where the fine line has been projected.

The detected continuous regions include the pixels where arc shapes are aligned at constant intervals in an adjacent manner to which the fine line has been projected, so the detected continuous regions are taken as a continuity region, and the continuousness detecting unit 204 outputs data continuity information indicating the detected continuous regions.

That is to say, the continuousness detecting unit 204 uses the continuity wherein arc shapes are aligned at constant intervals in an adjacent manner in the data 3 obtained by imaging the fine line, which has been generated due to the continuity of the image of the fine line in the actual world 1, the nature of the continuity being continuing in the length direction, so as to further narrow down the candidates of regions detected with the peak detecting unit 202 and the monotonous increase/decrease detecting unit 203.

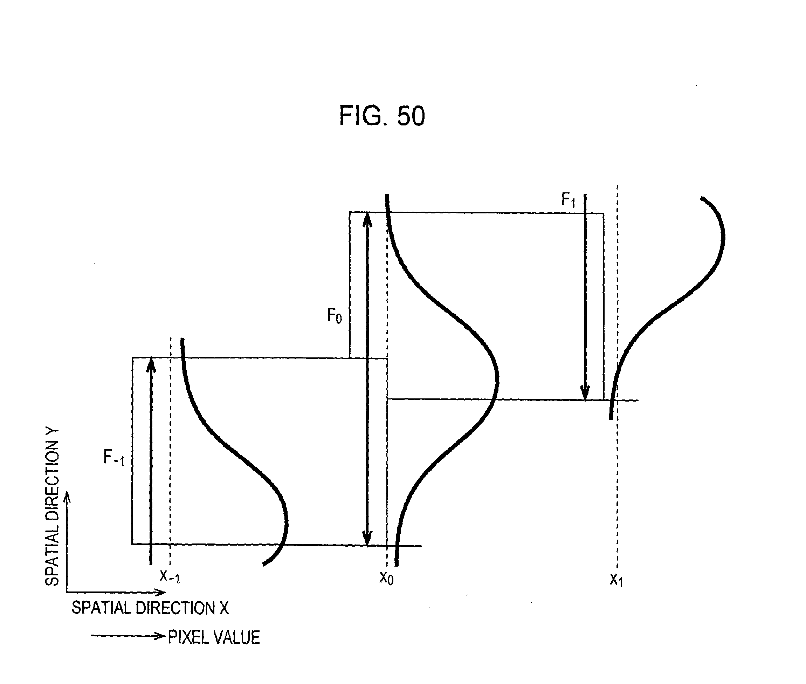

Fig. 50 is a diagram describing the processing for detecting the continuousness of monotonous increase/decrease regions.

As shown in Fig. 50, in the event that a fine line region F formed of pixels aligned in a single row in the vertical direction of the screen includes pixels adjacent in the horizontal direction, the continuousness detecting unit 204 determines that there is continuousness between the two monotonous increase/decrease regions, and in the event that pixels adjacent in the horizontal direction are not included, determines that there is no continuousness between the two fine line regions F. For example, a fine line region $F_{-1}$ made up of pixels aligned in a single row in the vertical direction of the screen is determined to be continuous to a fine line region $F_0$ made up of pixels aligned in a single row in the vertical direction of the screen in the event of containing a pixel adjacent to a pixel of the fine line region $F_0$ in the horizontal direction. The fine line region $F_0$ made up of pixels aligned in a single row in the vertical direction of the screen is determined to be continuous to a fine line region $F_1$ made up of pixels aligned in a single row in the vertical direction of the screen in the event of containing a pixel adjacent to a pixel of the fine line region $F_1$ in the horizontal direction.

In this way, regions made up of pixels aligned in a single row in the vertical direction of the screen where the image of the fine line has been projected are detected by the peak detecting unit 202 through the continuousness detecting unit 204.

As described above, the peak detecting unit 202 through the continuousness detecting unit 204 detect regions made up of pixels aligned in a single row in the vertical direction of the screen where the image of the fine line has been projected, and further detect regions made up of pixels aligned in a single row in the horizontal direction of the screen where the image of the fine line has been projected.

Note that the order of processing does not restrict the present invention, and may be executed in parallel, as a matter of course.

That is to say, the peak detecting unit 202, with regard to of pixels aligned in a single row in the horizontal direction of the screen, detects as a peak a pixel which has a pixel value greater in comparison with the pixel value of the pixel situated to the left side on the screen and the pixel value of the pixel situated to the right side on the screen, and supplies peak information indicating the position of the detected peak to the monotonous increase/decrease detecting unit 203. The peak detecting unit 202 detects one or multiple peaks from one image, for example, one frame image.

For example, the peak detecting unit 202 selects a pixel of interest from pixels in the one frame image which has not yet been taken as a pixel of interest, compares the pixel value of the pixel of interest with the pixel value of the pixel to the left side of the pixel of interest, compares the pixel value of the pixel of interest with the pixel value of the pixel to the right side of the pixel of interest, detects a pixel of interest having a pixel value greater than the pixel value of the pixel to the left side of the pixel of interest and having a pixel value greater than the pixel value of the pixel to the right side of the pixel of interest, and takes the detected pixel of interest as a peak. The peak detecting unit 202 supplies peak information indicating the detected peak to the monotonous increase/decrease detecting unit 203.

There are cases wherein the peak detecting unit 202 does not detect a peak.

The monotonous increase/decrease detecting unit 203 detects candidates for a region made up of pixels aligned in a single row in the horizontal direction as to the peak detected by the peak detecting unit 202 wherein the fine line image has been projected, and supplies the monotonous increase/decrease region information indicating the detected region to the continuousness detecting unit 204 along with the peak information.

More specifically, the monotonous increase/decrease detecting unit 203 detects regions made up of pixels having pixel values monotonously decreasing with the pixel value of the peak as a reference, as candidates of regions made up of pixels where the fine line image has been projected.

For example, the monotonous increase/decrease detecting unit 203 obtains, with regard to each pixel in a single row in the horizontal direction as to the peak, the pixel value of each pixel, the difference as to the pixel value of the pixel to the left side, and the difference as to the pixel value of the pixel to the right side. The monotonous increase/decrease detecting unit 203 then detects the region where the pixel value monotonously decreases by detecting the pixel where the sign of the difference changes.

Further, the monotonous increase/decrease detecting unit 203 detects a region made up of pixels having pixel values with the same sign as the pixel value as the sign of the pixel value of the peak, with reference to the sign of the pixel value of the peak, as a candidate for a region made up of pixels where the fine line image has been projected.

For example, the monotonous increase/decrease detecting unit 203 compares the sign of the pixel value of each pixel with the sign of the pixel value of the pixel to the left side or with the sign of the pixel value of the pixel to the right side, and detects the pixel where the sign of the pixel value changes, thereby detecting a region made up of pixels having pixel values with the same sign as the peak, from the region where the pixel values monotonously decrease.

Thus, the monotonous increase/decrease detecting unit 203 detects a region made up of pixels aligned in the horizontal direction and having pixel values with the same sign as the peak wherein the pixel values monotonously decrease as to the peak.

From a fine line region made up of such a monotonous increase/decrease region, the monotonous increase/decrease detecting unit 203 obtains a fine line region longer than a threshold value set beforehand, i.e., a fine line region having a greater number of pixels than the threshold value.

Further, from the fine line region thus detected, the monotonous increase/decrease detecting unit 203 compares the pixel value of the peak, the pixel value of the pixel above the peak, and the pixel value of the pixel below the peak, each with the threshold value, detects a fine line region to which belongs a peak wherein the pixel value of the peak exceeds the threshold value, the pixel value of the pixel above the peak is within the threshold, and the pixel value of the pixel below the peak is within the threshold, and takes the detected fine line region as a candidate for a region made up of pixels containing the fine line image component.

Another way of saying this is that fine line regions to which belongs a peak wherein the pixel value of the peak is within the threshold value, or the pixel value of the pixel above the peak exceeds the threshold, or the pixel value of the pixel below the peak exceeds the threshold, are determined to not contain the fine line image component, and are eliminated from candidates of the region made up of pixels containing the fine line image component.

Note that the monotonous increase/decrease detecting unit 203 may be arranged to take the background pixel value as a reference, compare the difference between the pixel value of the pixel and the pixel value of the background with the threshold value, and also to compare the difference between the pixel value of the background and the pixel values adjacent to the peak in the vertical direction with the threshold value, and take a detected fine line region wherein the difference between the pixel value of the peak and the pixel value of the background exceeds the threshold value, and the difference between the pixel value of the background and the pixel value of the pixels adjacent in the vertical direction is within the threshold, as a candidate for a region made up of pixels containing the fine line image component.

The monotonous increase/decrease detecting unit 203 supplies to the continuousness detecting unit 204 monotonous increase/decrease region information indicating a region made up of pixels having a pixel value sign which is the same as the peak and monotonously decreasing pixel values as to the peak as a reference, wherein the peak exceeds the threshold value, and the pixel value of the pixel to the right side of the peak is within the threshold, and the pixel value of the pixel to the left side of the peak is within the threshold.

In the event of detecting a region made up of pixels aligned in a single row in the horizontal direction of the screen wherein the image of the fine line has been projected, pixels belonging to the region indicated by the monotonous increase/decrease region information include pixels aligned in the horizontal direction wherein the image of the fine line has been projected. That is to say, the region indicated by the monotonous increase/decrease region information includes a region made up of pixels aligned in a single row in the horizontal direction of the screen wherein the image of the fine line has been projected.

Of the regions made up of pixels aligned in the horizontal direction indicated in the monotonous increase/decrease region information supplied from the monotonous increase/decrease detecting unit 203, the continuousness detecting unit 204 detects regions including pixels adjacent in the vertical direction, i.e., regions having similar pixel value change and which are repeated in the horizontal direction, as continuous regions, and outputs data continuity information indicating the peak information and the detected continuous regions. The data continuity information includes information indicating the connection of the regions.

At the pixels where the fine line has been projected, arc shapes are arrayed at constant intervals in an adjacent manner, so the detected continuous regions include pixels where the fine line has been projected.

The detected continuous regions include pixels where arc shapes are arrayed at constant intervals wherein the fine line has been projected, so the detected continuous regions are taken as a continuity region, and the continuousness detecting unit 204 outputs data continuity information indicating the detected continuous regions.

That is to say, the continuousness detecting unit 204 uses the continuity which is that the arc shapes are arrayed at constant intervals in an adjacent manner in the data 3 obtained by imaging the fine line, generated from the continuity of the image of the fine line in the actual world 1 which is continuation in the length direction, so as to further narrow down the candidates of regions detected by the peak detecting unit 202 and the monotonous increase/decrease detecting unit 203.

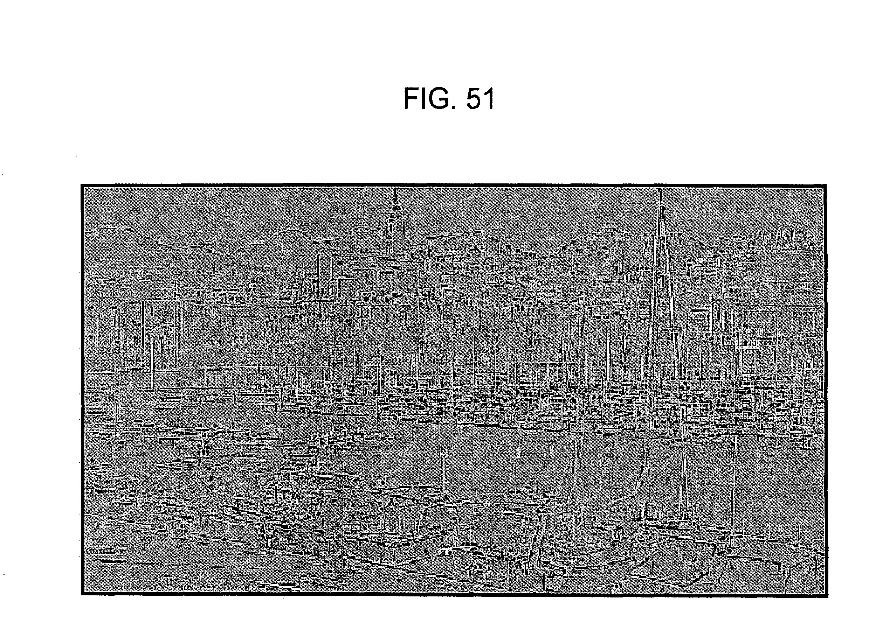

Fig. 51 is a diagram illustrating an example of an image wherein the continuity component has been extracted by planar approximation.

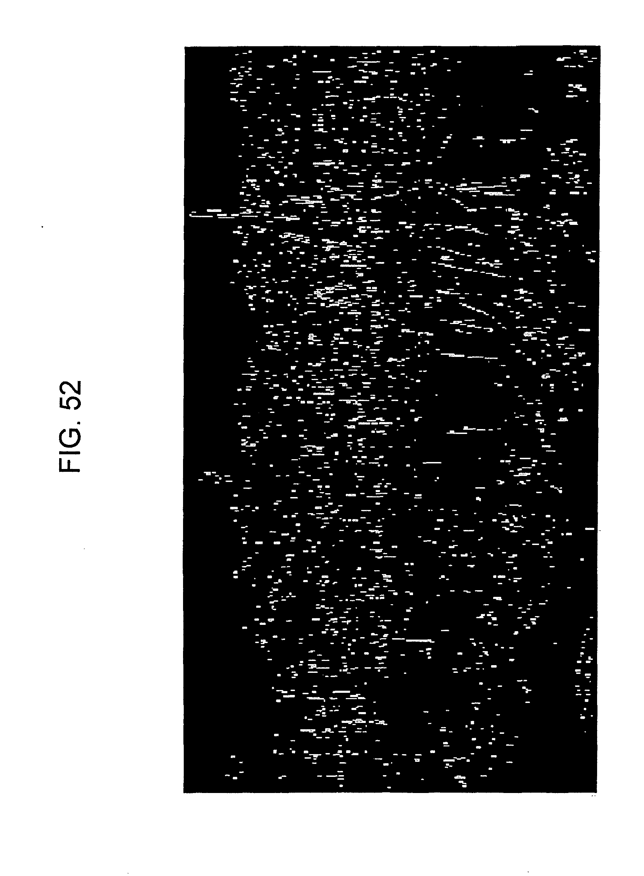

Fig. 52 is a diagram illustrating the results of detecting peaks in the image shown in Fig. 51, and detecting monotonously decreasing regions. In Fig. 52, the portions indicated by white are the detected regions.

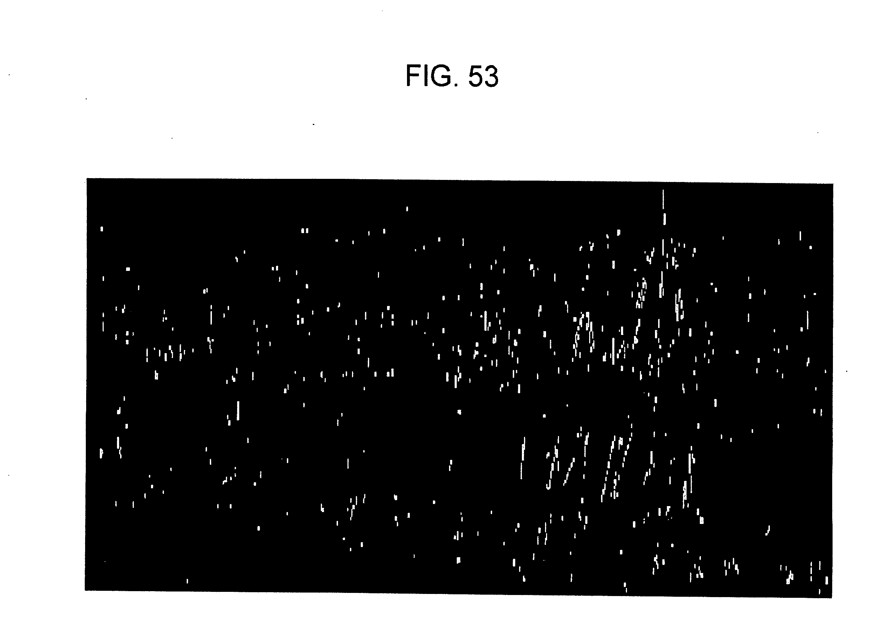

Fig. 53 is a diagram illustrating regions wherein continuousness has been detected by detecting continuousness of adjacent regions in the image shown in Fig. 52. In Fig. 53, the portions shown in white are regions where continuity has been detected. It can be understood that detection of continuousness further identifies the regions.

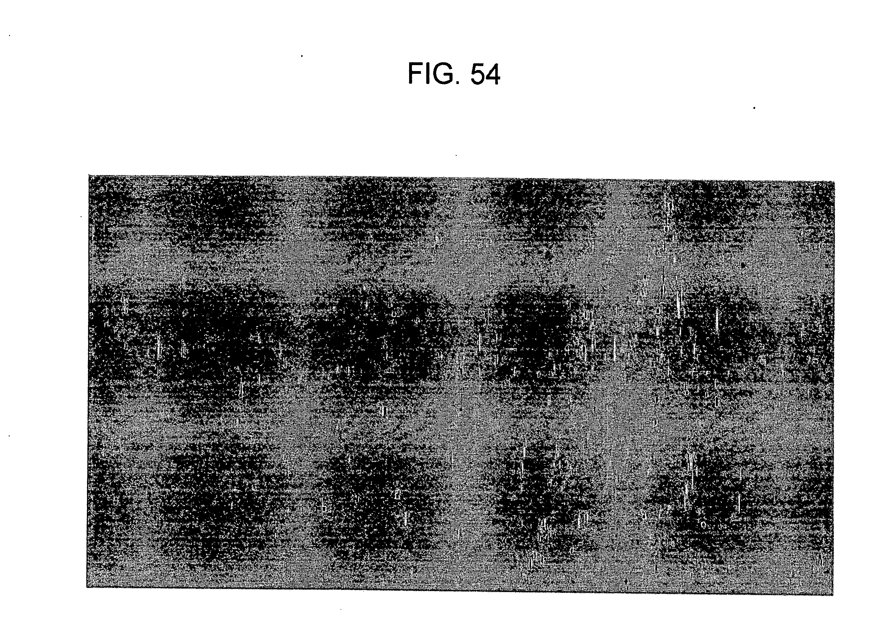

Fig. 54 is a diagram illustrating the pixel values of the regions shown in Fig. 53, i.e., the pixel values of the regions where continuousness has been detected.

Thus, the data continuity detecting unit 101 is capable of detecting continuity contained in the data 3 which is the input image. That is to say, the data continuity detecting unit 101 can detect continuity of data included in the data 3 which has been generated by the actual world 1 image which is a fine line having been projected on the data 3. The data continuity detecting unit 101 detects, from the data 3, regions made up of pixels where the actual world 1 image which is a fine line has been projected.

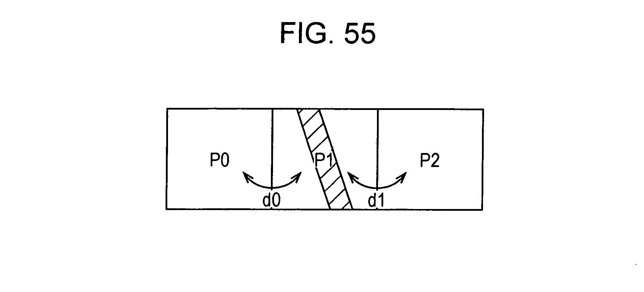

Fig. 55 is a diagram illustrating an example of other processing for detecting regions having continuity, where a fine line image has been projected, with the data continuity detecting unit 101. As shown in Fig. 55, the data continuity detecting unit 101 calculates the absolute value of difference of pixel values for each pixel and adjacent pixels. The calculated absolute values of difference are placed corresponding to the pixels. For example, in a situation such as shown in Fig. 55 wherein there are pixels aligned which have respective pixel values of P0, P1, and P2, the data continuity detecting unit 101 calculates the difference d0 = P0 - P1 and the difference d1 = P1 - P2. Further, the data continuity detecting unit 101 calculates the absolute values of the difference d0 and the difference d1.

In the event that the non-continuity component contained in the pixel values P0, P1, and P2 are identical, only values corresponding to the component of the fine line are set to the difference d0 and the difference d1.

Accordingly, of the absolute values of the differences placed corresponding to the pixels, in the event that adjacent difference values are identical, the data continuity detecting unit 101 determines that the pixel corresponding to the absolute values of the two differences (the pixel between the two absolute values of difference) contains the component of the fine line. Also, of the absolute values of the differences placed corresponding to pixels, in the event that adjacent difference values are identical but the absolute values of difference are smaller than a predetermined threshold value, the data continuity detecting unit 101 determines that the pixel corresponding to the absolute values of the two differences (the pixel between the two absolute values of difference) does not contain the component of the fine line.

The data continuity detecting unit 101 can also detect fine lines with a simple method such as this.

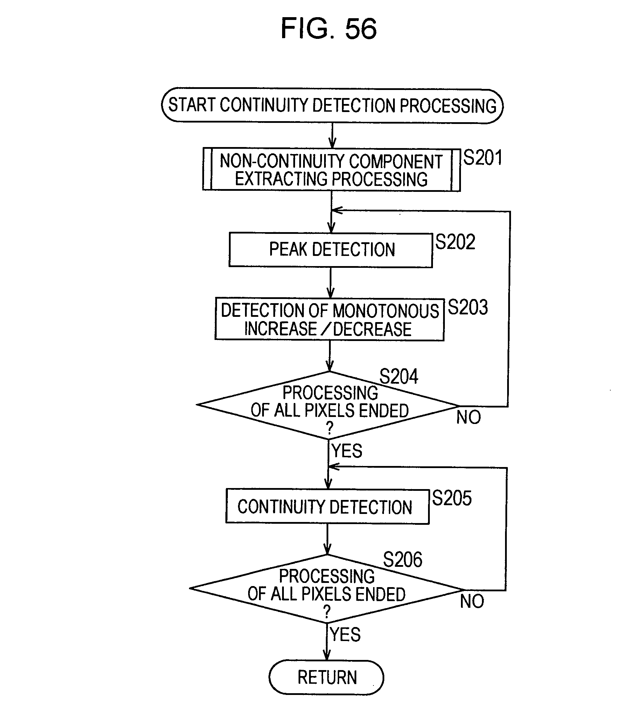

Fig. 56 is a flowchart for describing continuity detection processing.

In step S201, the non-continuity component extracting unit 201 extracts non-continuity component, which is portions other than the portion where the fine line has been projected, from the input image. The non-continuity component extracting unit 201 supplies non-continuity component information indicating the extracted non-continuity component, along with the input image, to the peak detecting unit 202 and the monotonous increase/decrease detecting unit 203. Details of the processing for extracting the non-continuity component will be described later.

In step S202, the peak detecting unit 202 eliminates the non-continuity component from the input image, based on the non-continuity component information supplied from the non-continuity component extracting unit 201, so as to leave only pixels including the continuity component in the input image. Further, in step S202, the peak detecting unit 202 detects peaks.

That is to say, in the event of executing processing with the vertical direction of the screen as a reference, of the pixels containing the continuity component, the peak detecting unit 202 compares the pixel value of each pixel with the pixel values of the pixels above and below, and detects pixels having a greater pixel value than the pixel value of the pixel above and the pixel value of the pixel below, thereby detecting a peak. Also, in step S202, in the event of executing processing with the horizontal direction of the screen as a reference, of the pixels containing the continuity component, the peak detecting unit 202 compares the pixel value of each pixel with the pixel values of the pixels to the right side and left side, and detects pixels having a greater pixel value than the pixel value of the pixel to the right side and the pixel value of the pixel to the left side, thereby detecting a peak.

The peak detecting unit 202 supplies the peak information indicating the detected peaks to the monotonous increase/decrease detecting unit 203.

In step S203, the monotonous increase/decrease detecting unit 203 eliminates the non-continuity component from the input image, based on the non-continuity component information supplied from the non-continuity component extracting unit 201, so as to leave only pixels including the continuity component in the input image. Further, in step S203, the monotonous increase/decrease detecting unit 203 detects the region made up of pixels having data continuity, by detecting monotonous increase/decrease as to the peak, based on peak information indicating the position of the peak, supplied from the peak detecting unit 202.

In the event of executing processing with the vertical direction of the screen as a reference, the monotonous increase/decrease detecting unit 203 detects monotonous increase/decrease made up of one row of pixels aligned vertically where a single fine line image has been projected, based on the pixel value of the peak and the pixel values of the one row of pixels aligned vertically as to the peak, thereby detecting a region made up of pixels having data continuity. That is to say, in step S203, in the event of executing processing with the vertical direction of the screen as a reference, the monotonous increase/decrease detecting unit 203 obtains, with regard to a peak and a row of pixels aligned vertically as to the peak, the difference between the pixel value of each pixel and the pixel value of a pixel above or below, thereby detecting a pixel where the sign of the difference changes. Also, with regard to a peak and a row of pixels aligned vertically as to the peak, the monotonous increase/decrease detecting unit 203 compares the sign of the pixel value of each pixel with the sign of the pixel value of a pixel above or below, thereby detecting a pixel where the sign of the pixel value changes. Further, the monotonous increase/decrease detecting unit 203 compares pixel value of the peak and the pixel values of the pixels to the right side and to the left side of the peak with a threshold value, and detects a region made up of pixels wherein the pixel value of the peak exceeds the threshold value, and wherein the pixel values of the pixels to the right side and to the left side of the peak are within the threshold.

The monotonous increase/decrease detecting unit 203 takes a region detected in this way as a monotonous increase/decrease region, and supplies monotonous increase/decrease region information indicating the monotonous increase/decrease region to the continuousness detecting unit 204.

In the event of executing processing with the horizontal direction of the screen as a reference, the monotonous increase/decrease detecting unit 203 detects monotonous increase/decrease made up of one row of pixels aligned horizontally where a single fine line image has been projected, based on the pixel value of the peak and the pixel values of the one row of pixels aligned horizontally as to the peak, thereby detecting a region made up of pixels having data continuity. That is to say, in step S203, in the event of executing processing with the horizontal direction of the screen as a reference, the monotonous increase/decrease detecting unit 203 obtains, with regard to a peak and a row of pixels aligned horizontally as to the peak, the difference between the pixel value of each pixel and the pixel value of a pixel to the right side or to the left side, thereby detecting a pixel where the sign of the difference changes. Also, with regard to a peak and a row of pixels aligned horizontally as to the peak, the monotonous increase/decrease detecting unit 203 compares the sign of the pixel value of each pixel with the sign of the pixel value of a pixel to the right side or to the left side, thereby detecting a pixel where the sign of the pixel value changes. Further, the monotonous increase/decrease detecting unit 203 compares pixel value of the peak and the pixel values of the pixels to the upper side and to the lower side of the peak with a threshold value, and detects a region made up of pixels wherein the pixel value of the peak exceeds the threshold value, and wherein the pixel values of the pixels to the upper side and to the lower side of the peak are within the threshold.

The monotonous increase/decrease detecting unit 203 takes a region detected in this way as a monotonous increase/decrease region, and supplies monotonous increase/decrease region information indicating the monotonous increase/decrease region to the continuousness detecting unit 204.

In step S204, the monotonous increase/decrease detecting unit 203 determines whether or not processing of all pixels has ended. For example, the non-continuity component extracting unit 201 detects peaks for all pixels of a single screen (for example, frame, field, or the like) of the input image, and whether or not a monotonous increase/decrease region has been detected is determined.

In the event that determination is made in step S204 that processing of all pixels has not ended, i.e., that there are still pixels which have not been subjected to the processing of peak detection and detection of monotonous increase/decrease region, the flow returns to step S202, a pixel which has not yet been subjected to the processing of peak detection and detection of monotonous increase/decrease region is selected as an object of the processing, and the processing of peak detection and detection of monotonous increase/decrease region are repeated.

In the event that determination is made in step S204 that processing of all pixels has ended, in the event that peaks and monotonous increase/decrease regions have been detected with regard to all pixels, the flow proceeds to step S205, where the continuousness detecting unit 204 detects the continuousness of detected regions, based on the monotonous increase/decrease region information. For example, in the event that monotonous increase/decrease regions made up of one row of pixels aligned in the vertical direction of the screen, indicated by monotonous increase/decrease region information, include pixels adjacent in the horizontal direction, the continuousness detecting unit 204 determines that there is continuousness between the two monotonous increase/decrease regions, and in the event of not including pixels adjacent in the horizontal direction, determines that there is no continuousness between the two monotonous increase/decrease regions. For example, in the event that monotonous increase/decrease regions made up of one row of pixels aligned in the horizontal direction of the screen, indicated by monotonous increase/decrease region information, include pixels adjacent in the vertical direction, the continuousness detecting unit 204 determines that there is continuousness between the two monotonous increase/decrease regions, and in the event of not including pixels adjacent in the vertical direction, determines that there is no continuousness between the two monotonous increase/decrease regions.

The continuousness detecting unit 204 takes the detected continuous regions as continuity regions having data continuity, and outputs data continuity information indicating the peak position and continuity region. The data continuity information contains information indicating the connection of regions. The data continuity information output from the continuousness detecting unit 204 indicates the fine line region, which is the continuity region, made up of pixels where the actual world 1 fine line image has been projected.

In step S206, a continuity direction detecting unit 205 determines whether or not processing of all pixels has ended. That is to say, the continuity direction detecting unit 205 determines whether or not region continuation has been detected with regard to all pixels of a certain frame of the input image.

In the event that determination is made in step S206 that processing of all pixels has not yet ended, i.e., that there are still pixels which have not yet been taken as the object of detection of region continuation, the flow returns to step S205, a pixel which has not yet been subjected to the processing of detection of region continuity is selected, and the processing for detection of region continuity is repeated.

In the event that determination is made in step S206 that processing of all pixels has ended, i.e., that all pixels have been taken as the object of detection of region continuity, the processing ends.

Thus, the continuity contained in the data 3 which is the input image is detected. That is to say, continuity of data included in the data 3 which has been generated by the actual world 1 image which is a fine line having been projected on the data 3 is detected, and a region having data continuity, which is made up of pixels on which the actual world 1 image which is a fine line has been projected, is detected from the data 3.

Now, the data continuity detecting unit 101 shown in Fig. 41 can detect time-directional data continuity, based on the region having data continuity detected form the frame of the data 3.

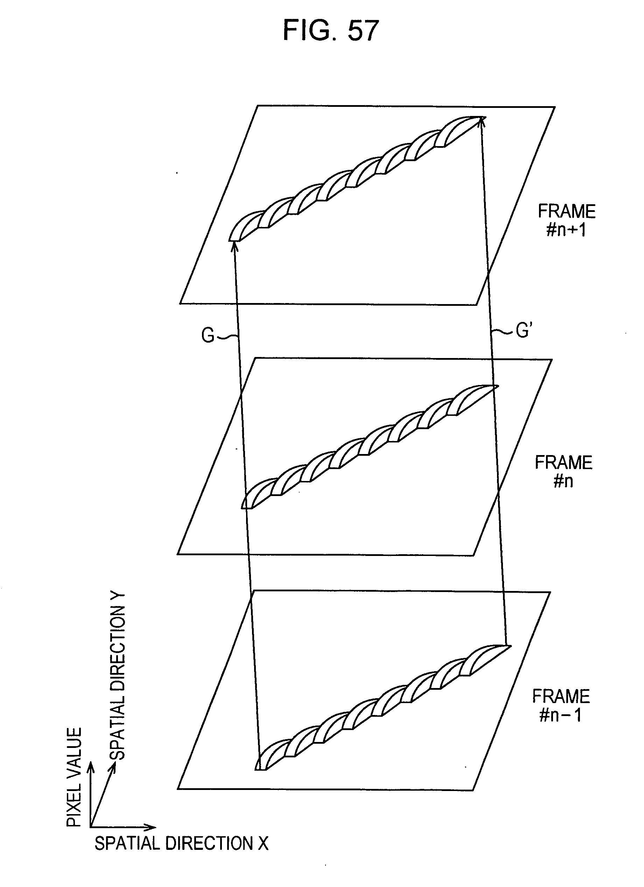

For example, as shown in Fig. 57, the continuousness detecting unit 204 detects time-directional data continuity by connecting the edges of the region having detected data continuity in frame #n, the region having detected data continuity in frame #n-1, and the region having detected data continuity in frame #n+1.

The frame #n-1 is a frame preceding the frame #n time-wise, and the frame #n+1 is a frame following the frame #n time-wise. That is to say, the frame #n-1, the frame #n, and the frame #n+1, are displayed on the order of the frame #n-1, the frame #n, and the frame #n+1.

More specifically, in Fig. 57, G denotes a movement vector obtained by connecting the one edge of the region having detected data continuity in frame #n, the region having detected data continuity in frame #n-1, and the region having detected data continuity in frame #n+1, and G' denotes a movement vector obtained by connecting the other edges of the regions having detected data continuity. The movement vector G and the movement vector G' are an example of data continuity in the time direction.

Further, the data continuity detecting unit 101 of which the configuration is shown in Fig. 41 can output information indicating the length of the region having data continuity as data continuity information.

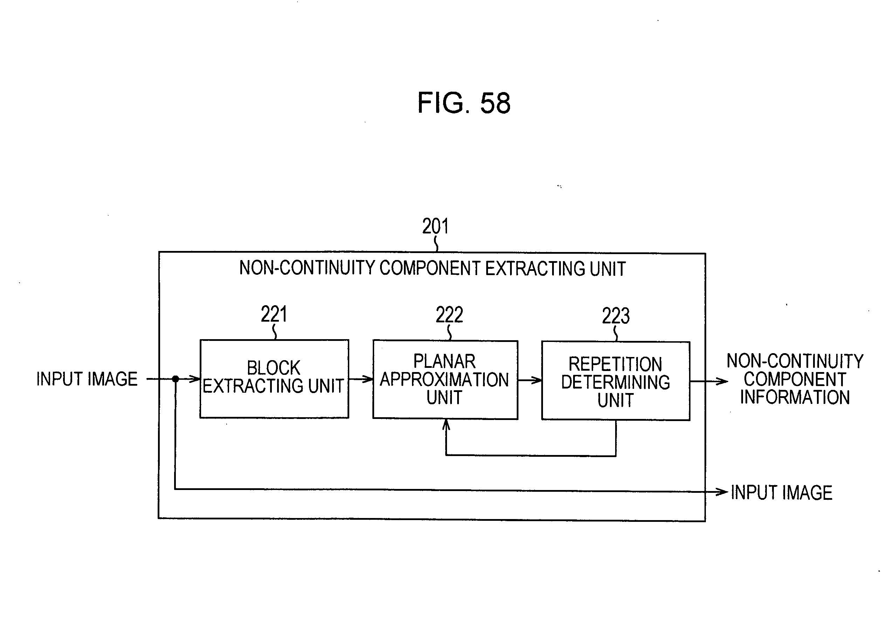

Fig. 58 is a block diagram illustrating the configuration of the non-continuity component extracting unit 201 which performs planar approximation of the non-continuity component which is the portion of the image data which does not have data continuity, and extracts the non-continuity component.

The non-continuity component extracting unit 201 of which the configuration is shown in Fig. 58 extracts blocks, which are made up of a predetermined number of pixels, from the input image, performs planar approximation of the blocks, so that the error between the block and a planar value is below a predetermined threshold value, thereby extracting the non-continuity component.

The input image is supplied to a block extracting unit 221, and is also output without change.

The block extracting unit 221 extracts blocks, which are made up of a predetermined number of pixels, from the input image. For example, the block extracting unit 221 extracts a block made up of $7 \times 7$ pixels, and supplies this to a planar approximation unit 222. For example, the block extracting unit 221 moves the pixel serving as the center of the block to be extracted in raster scan order, thereby sequentially extracting blocks from the input image.

The planar approximation unit 222 approximates the pixel values of a pixel contained in the block on a predetermined plane. For example, the planar approximation unit 222 approximates the pixel value of a pixel contained in the block on a plane expressed by Expression (24).

$$Z = ax + by + c \hspace{4cm} (24)$$

In Expression (24), x represents the position of the pixel in one direction on the screen (the spatial direction X), and y represents the position of the pixel in the other direction on the screen (the spatial direction Y). z represents the application value represented by the plane. a represents the gradient of the spatial direction X of the plane, and b represents the gradient of the spatial direction Y of the plane. In Expression (24), c represents the offset of the plane (intercept).

For example, the planar approximation unit 222 obtains the gradient a, gradient b, and offset c, by regression processing, thereby approximating the pixel values of the pixels contained in the block on a plane expressed by Expression (24). The planar approximation unit 222 obtains the gradient a, gradient b, and offset c, by regression processing including rejection, thereby approximating the pixel values of the pixels contained in the block on a plane expressed by Expression (24).

For example, the planar approximation unit 222 obtains the plane expressed by Expression (24) wherein the error is least as to the pixel values of the pixels of the block using the least-square method, thereby approximating the pixel values of the pixels contained in the block on the plane.

Note that while the planar approximation unit 222 has been described approximating the block on the plane expressed by Expression (24), this is not restricted to the plane expressed by Expression (24), rather, the block may be approximated on a plane represented with a function with a higher degree of freedom, for example, an n-order (wherein n is an arbitrary integer) polynomial.

A repetition determining unit 223 calculates the error between the approximation value represented by the plane upon which the pixel values of the block have been approximated, and the corresponding pixel values of the pixels of the block. Expression (25) is an expression which shows the error ei which is the difference between the approximation value represented by the plane upon which the pixel values of the block have been approximated, and the corresponding pixel values zi of the pixels of the block.

$$e_i = z_i - \hat{z} = z_i - (\hat{a}x_i + \hat{b}y_i + \hat{c}) \tag{25}$$

In Expression (25), z-hat (A symbol with ^ over z will be described as z-hat. The same description will be used in the present specification hereafter.) represents an approximation value expressed by the plane on which the pixel values of the block are approximated, a-hat represents the gradient of the spatial direction X of the plane on which the pixel values of the block are approximated, b-hat represents the gradient of the spatial direction Y of the plane on which the pixel values of the block are approximated, and c-hat represents the offset (intercept) of the plane on which the pixel values of the block are approximated.

The repetition determining unit 223 rejects the pixel regarding which the error ei between the approximation value and the corresponding pixel values of pixels of the block, shown in Expression (25). Thus, pixels where the fine line has been projected, i.e., pixels having continuity, are rejected. The repetition determining unit 223 supplies rejection information indicating the rejected pixels to the planar approximation unit 222.

Further, the repetition determining unit 223 calculates a standard error, and in the event that the standard error is equal to or greater than threshold value which has been set beforehand for determining ending of approximation, and half or more of the pixels of the pixels of a block have not been rejected, the repetition determining unit 223 causes the planar approximation unit 222 to repeat the processing of planar approximation on the pixels contained in the block, from which the rejected pixels have been eliminated.

Pixels having continuity are rejected, so approximating the pixels from which the rejected pixels have been eliminated on a plane means that the plane approximates the non-continuity component.

At the point that the standard error below the threshold value for determining ending of approximation, or half or more of the pixels of the pixels of a block have been rejected, the repetition determining unit 223 ends planar approximation.

With a block made up of $5 \times 5$ pixels, the standard error $e_s$ can be calculated with, for example, Expression (26).

$$e_s = \sum (z_i - \hat{z}) \diagup (n-3)$$
$$= \sum \{(z_i - (\hat{a}x_i + \hat{b}y_i + \hat{c}))\} \diagup (n-3)$$

$$\dots (26)$$

Here, n is the number of pixels.

Note that the repetition determining unit 223 is not restricted to standard error, and may be arranged to calculate the sum of the square of errors for all of the pixels contained in the block, and perform the following processing.

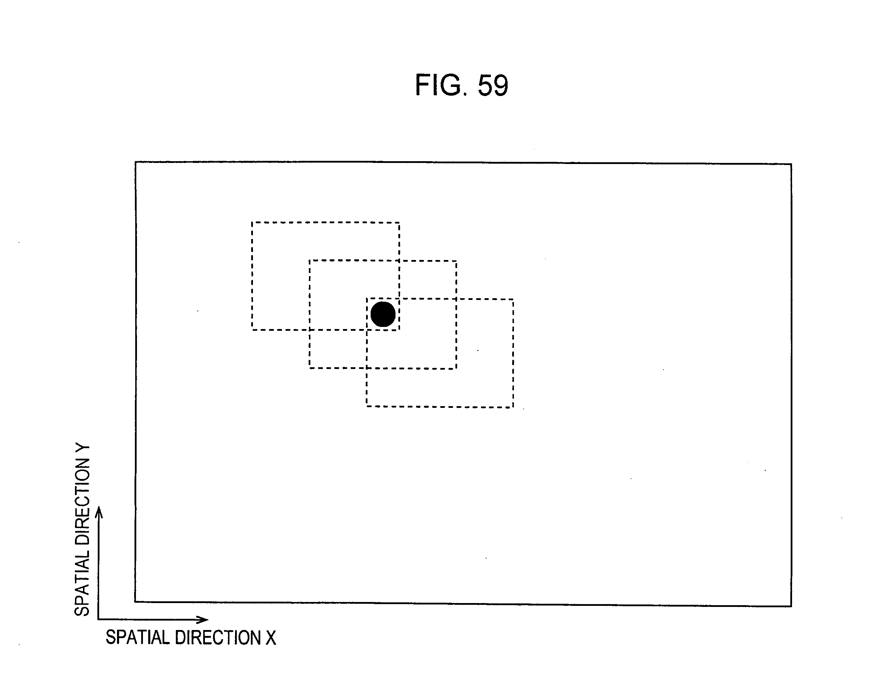

Now, at the time of planar approximation of blocks shifted one pixel in the raster scan direction, a pixel having continuity, indicated by the black circle in the diagram, i.e., a pixel containing the fine line component, will be rejected multiple times, as shown in Fig. 59.

Upon completing planar approximation, the repetition determining unit 223 outputs information expressing the plane for approximating the pixel values of the block (the gradient and intercept of the plane of Expression 24)) as non-continuity information.

Note that an arrangement may be made wherein the repetition determining unit 223 compares the number of times of rejection per pixel with a preset threshold value, and takes a pixel which has been rejected a number of times equal to or greater than the threshold value as a pixel containing the continuity component, and output the information indicating the pixel including the continuity component as continuity component information. In this case, the peak detecting unit 202 through the continuity direction detecting unit 205 execute their respective processing on pixels containing continuity component, indicated by the continuity component information.

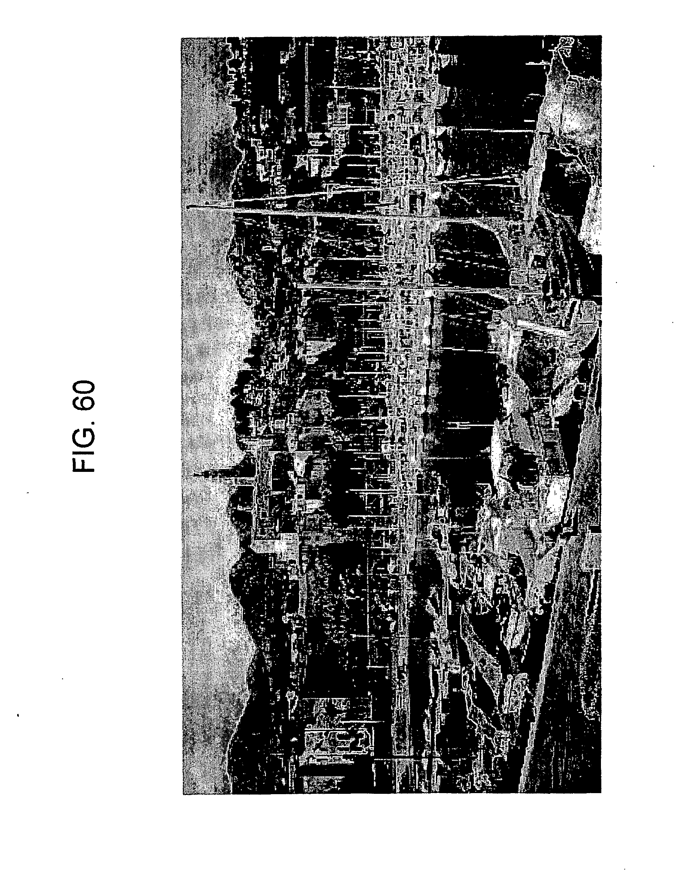

Examples of results of non-continuity component extracting processing will be described with reference to Fig. 60 through Fig. 67.

Fig. 60 is a diagram illustrating an example of an input image generated by the average value of the pixel values of $2 \times 2$ pixels in an original image containing fine lines having been generated as a pixel value.

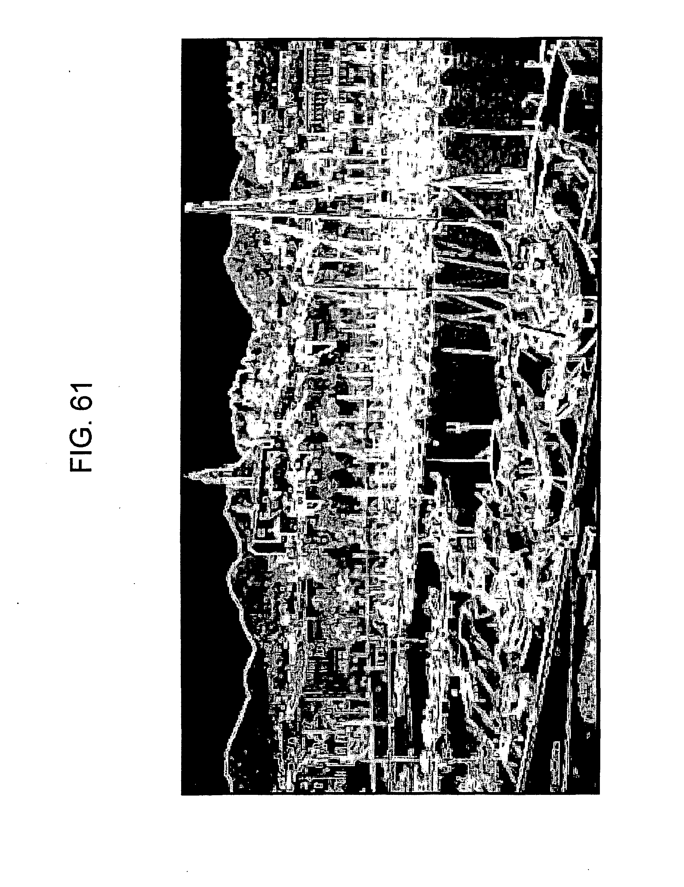

Fig. 61 is a diagram illustrating an image from the image shown in Fig. 60 wherein standard error obtained as the result of planar approximation without rejection is taken as the pixel value. In the example shown in Fig. 61, a block made up of $5 \times 5$ pixels as to a single pixel of interest was subjected to planar approximation. In Fig. 61, white pixels are pixel values which have greater pixel values, i.e., pixels having greater standard error, and black pixels are pixel values which have smaller pixel values, i.e., pixels having smaller standard error.

From Fig. 61, it can be confirmed that in the event that the standard error obtained as the result of planar approximation without rejection is taken as the pixel value, great values are obtained over a wide area at the perimeter of non-continuity portions.

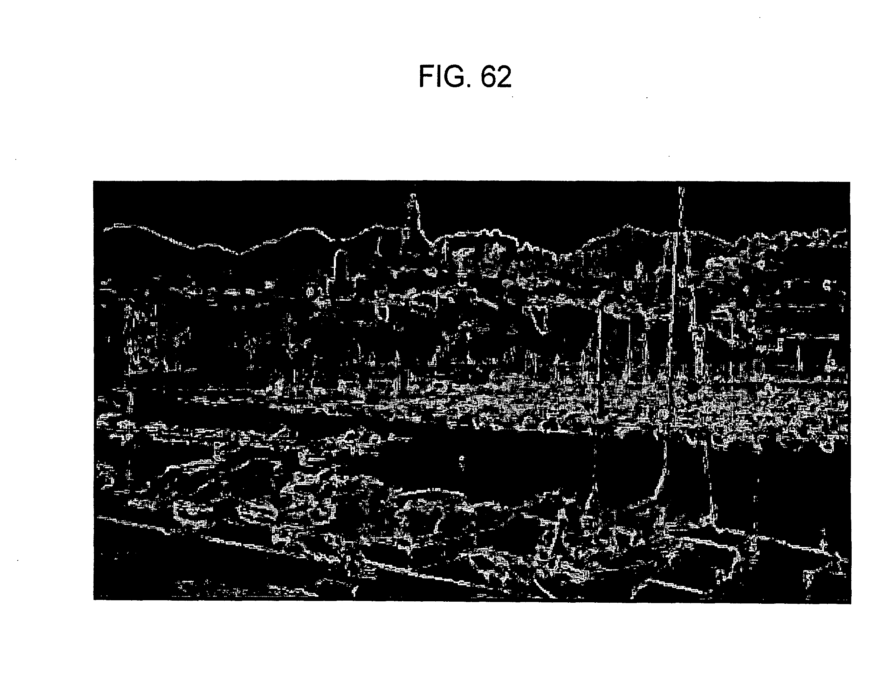

In the examples shown in Fig. 62 through Fig. 67, a block made up of $7 \times 7$ pixels as to a single pixel of interest was subjected to planar approximation. In the event of planar approximation of a block made up of $7 \times 7$ pixels, one pixel is repeatedly included in 49 blocks, meaning that a pixel containing the continuity component is rejected as many as 49 times.

Fig. 62 is an image wherein standard error obtained by planar approximation with rejection of the image shown in Fig. 60 is taken as the pixel value.

In Fig. 62, white pixels are pixel values which have greater pixel values, i.e., pixels having greater standard error, and black pixels are pixel values which have smaller pixel values, i.e., pixels having smaller standard error. It can be understood that the standard error is smaller overall in the case of performing rejection, as compared with a case of not performing rejection.

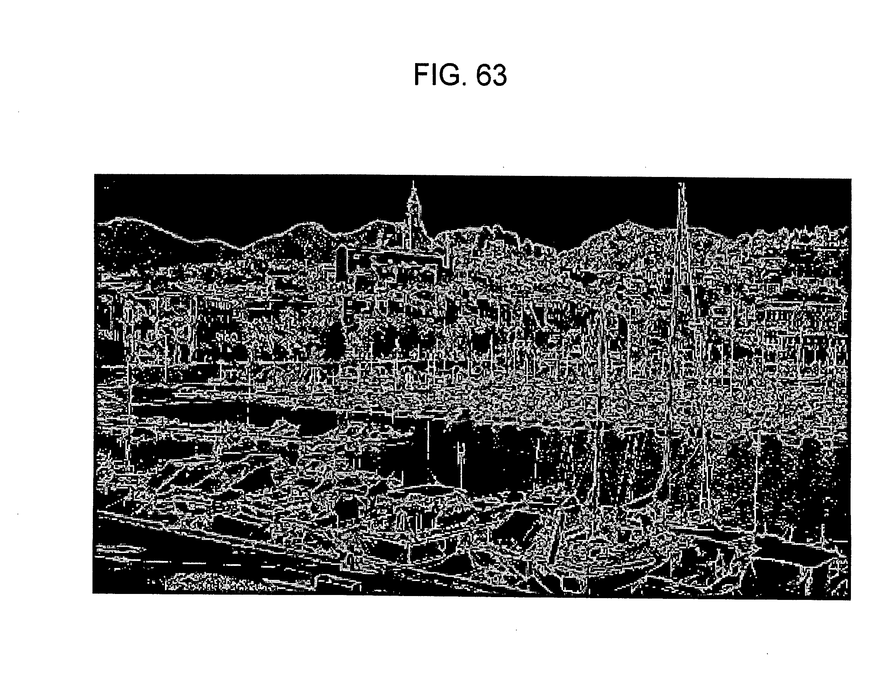

Fig. 63 is an image wherein the number of times of rejection in planar approximation with rejection of the image shown in Fig. 60 is taken as the pixel value. In Fig. 63, white pixels are greater pixel values, i.e., pixels which have been rejected a greater number of times, and black pixels are smaller pixel values, i.e., pixels which have been rejected a fewer times.

From Fig. 63, it can be understood that pixels where the fine line images are projected have been discarded a greater number of times. An image for masking the non-continuity portions of the input image can be generated using the image wherein the number of times of rejection is taken as the pixel value.

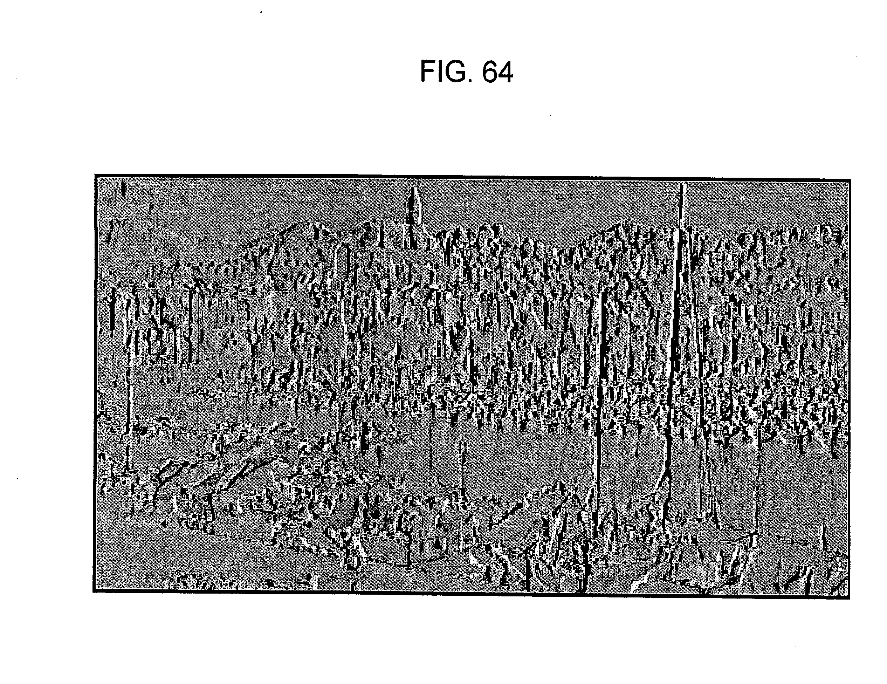

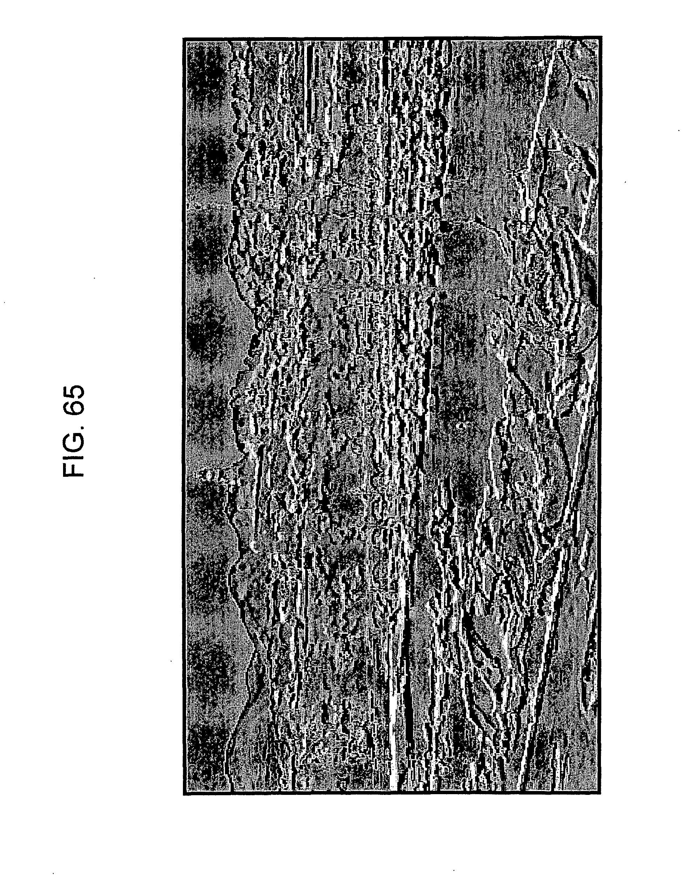

Fig. 64 is a diagram illustrating an image wherein the gradient of the spatial direction X of the plane for approximating the pixel values of the block is taken as the pixel value. Fig. 65 is a diagram illustrating an image wherein the gradient of the spatial direction Y of the plane for approximating the pixel values of the block is taken as the pixel value.

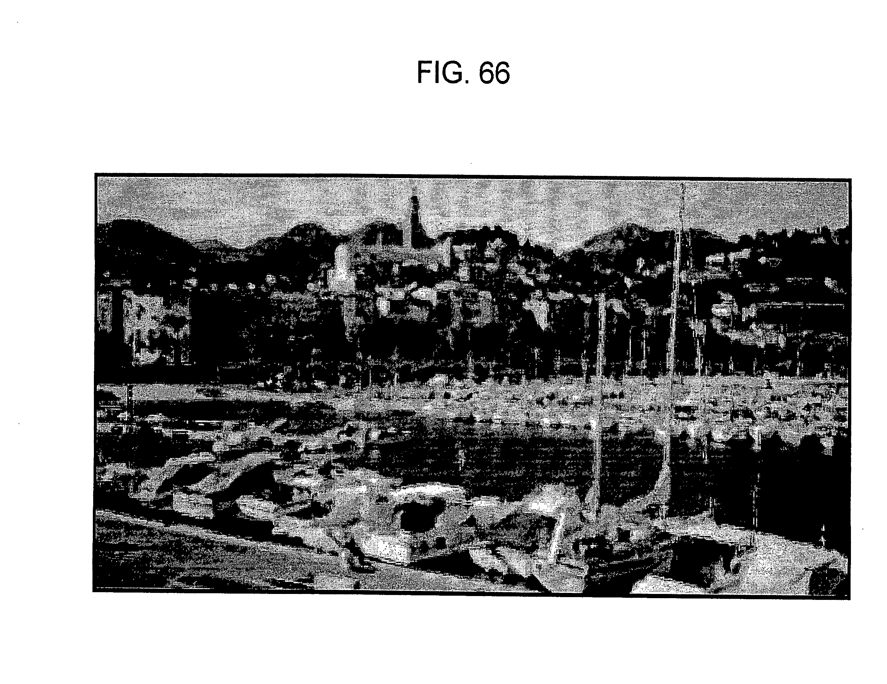

Fig. 66 is a diagram illustrating an image formed of approximation values expressed by a plane for approximating the pixel values of the block. It can be understood that the fine lines have disappeared from the image shown in Fig. 66.

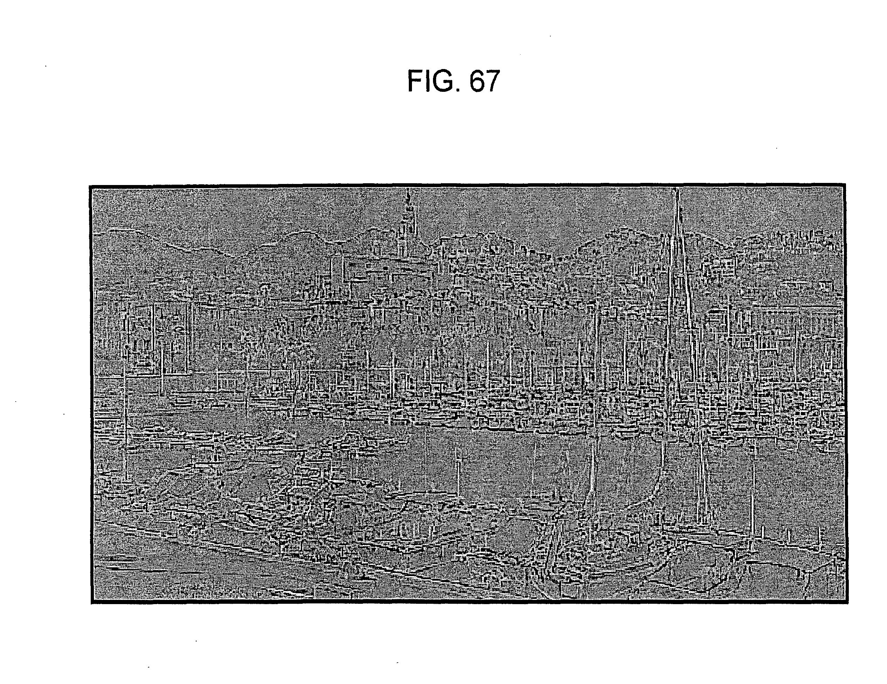

Fig. 67 is a diagram illustrating an image made up of the difference between the image shown in Fig. 60 generated by the average value of the block of $2 \times 2$ pixels in the original image being taken as the pixel value, and an image made up of approximate values expressed as a plane, shown in Fig. 66. The pixel values of the image shown in Fig. 67 have had the non-continuity component removed, so only the values where the image of the fine line has been projected remain. As can be understood from Fig. 67, with an image made up of the difference between the pixel value of the original image and approximation values expressed by a plane whereby approximation has been performed, the continuity component of the original image is extracted well.

The number of times of rejection, the gradient of the spatial direction X of the plane for approximating the pixel values of the pixel of the block, the gradient of the spatial direction Y of the plane for approximating the pixel values of the pixel of the block, approximation values expressed by the plane approximating the pixel values of the pixels of the block, and the error ei, can be used as features of the input image.

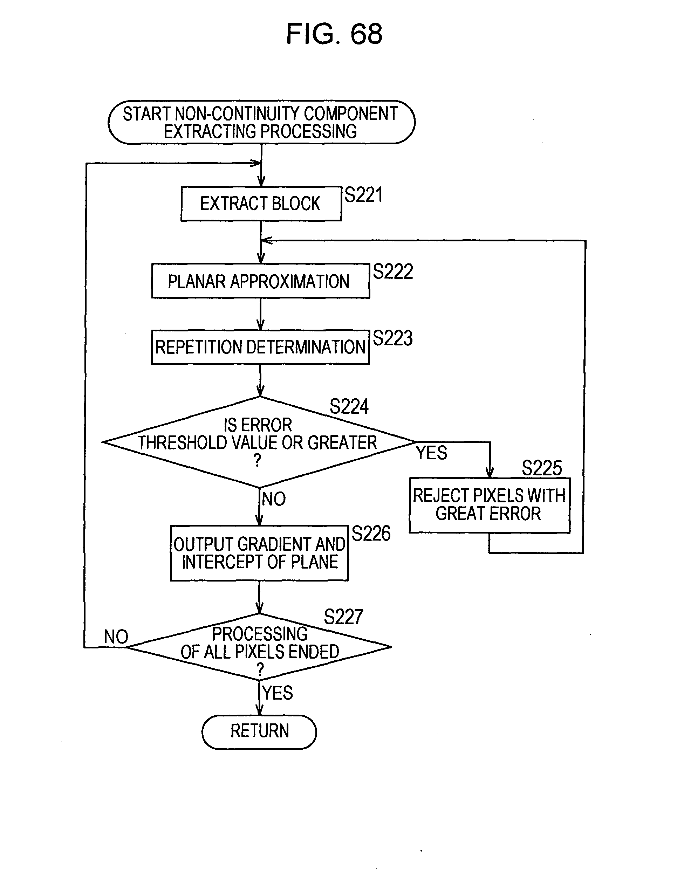

Fig. 68 is a flowchart for describing the processing of extracting the non-continuity component with the non-continuity component extracting unit 201 of which the configuration is shown in Fig. 58.

In step S221, the block extracting unit 221 extracts a block made up of a predetermined number of pixels from the input image, and supplies the extracted block to the planar approximation unit 222. For example, the block extracting unit 221 selects one pixel of the pixels of the input pixel which have not been selected yet, and extracts a block made up of $7 \times 7$ pixels centered on the selected pixel. For example, the block extracting unit 221 can select pixels in raster scan order.

In step S222, the planar approximation unit 222 approximates the extracted block on a plane. The planar approximation unit 222 approximates the pixel values of the pixels of the extracted block on a plane by regression processing, for example. For example, the planar approximation unit 222 approximates the pixel values of the pixels of the extracted block excluding the rejected pixels on a plane, by regression processing. In step S223, the repetition determining unit 223 executes repetition determination. For example, repetition determination is performed by calculating the standard error from the pixel values of the pixels of the block and the planar approximation values, and counting the number of rejected pixels.

In step S224, the repetition determining unit 223 determines whether or not the standard error is equal to or above a threshold value, and in the event that determination is made that the standard error is equal to or above the threshold value, the flow proceeds to step S225.

Note that an arrangement may be made wherein the repetition determining unit 223 determines in step S224 whether or not half or more of the pixels of the block have been rejected, and whether or not the standard error is equal to or above the threshold value, and in the event that determination is made that half or more of the pixels of the block have not been rejected, and the standard error is equal to or above the threshold value, the flow proceeds to step S225.

In step S225, the repetition determining unit 223 calculates the error between the pixel value of each pixel of the block and the approximated planar approximation value, rejects the pixel with the greatest error, and notifies the planar approximation unit 222. The procedure returns to step S222, and the planar approximation processing and repetition determination processing is repeated with regard to the pixels of the block excluding the rejected pixel.

In step S225, in the event that a block which is shifted one pixel in the raster scan direction is extracted in the processing in step S221, the pixel including the fine line component (indicated by the black circle in the drawing) is rejected multiple times, as shown in Fig. 59.

In the event that determination is made in step S224 that the standard error is not equal to or greater than the threshold value, the block has been approximated on the plane, so the flow proceeds to step S226.

Note that an arrangement may be made wherein the repetition determining unit 223 determines in step S224 whether or not half or more of the pixels of the block have been rejected, and whether or not the standard error is equal to or above the threshold value, and in the event that determination is made that half or more of the pixels of the block have been rejected, or the standard error is not equal to or above the threshold value, the flow proceeds to step S225.

In step S226, the repetition determining unit 223 outputs the gradient and intercept of the plane for approximating the pixel values of the pixels of the block as non-continuity component information.

In step S227, the block extracting unit 221 determines whether or not processing of all pixels of one screen of the input image has ended, and in the event that determination is made that there are still pixels which have not yet been taken as the object of processing, the flow returns to step S221, a block is extracted from pixels not yet been subjected to the processing, and the above processing is repeated.

In the event that determination is made in step S227 that processing has ended for all pixels of one screen of the input image, the processing ends.

Thus, the non-continuity component extracting unit 201 of which the configuration is shown in Fig. 58 can extract the non-continuity component from the input image. The non-continuity component extracting unit 201 extracts the non-continuity component from the input image, so the peak detecting unit 202 and monotonous increase/decrease detecting unit 203 can obtain the difference between the input image and the non-continuity component extracted by the non-continuity component extracting unit 201, so as to execute the processing regarding the difference containing the continuity component.

Note that the standard error in the event that rejection is performed, the standard error in the event that rejection is not performed, the number of times of rejection of a pixel, the gradient of the spatial direction X of the plane (a-hat in Expression (24)), the gradient of the spatial direction Y of the plane (b-hat in Expression (24)), the level of planar transposing (c-hat in Expression (24)), and the difference between the pixel values of the input image and the approximation values represented by the plane, calculated in planar approximation processing, can be used as features.

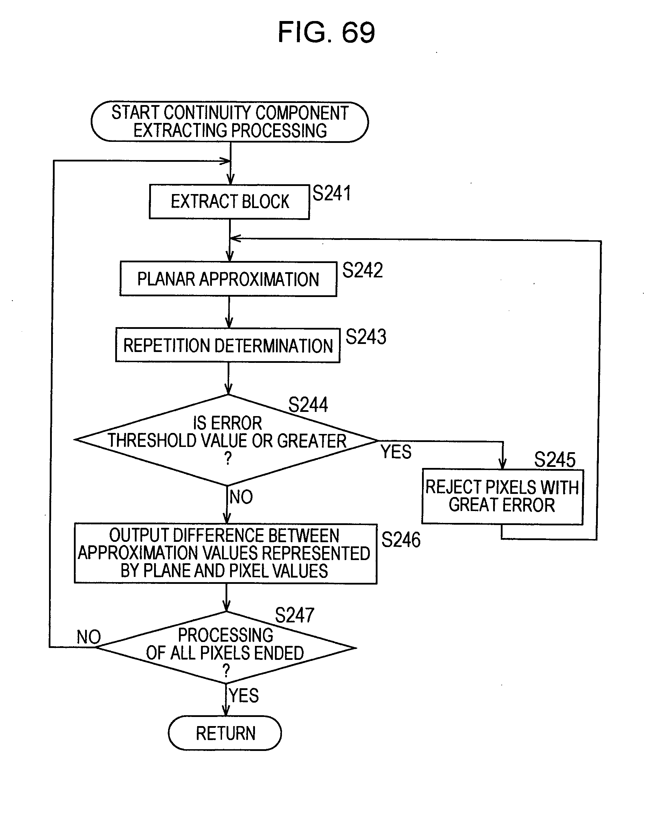

Fig. 69 is a flowchart for describing processing for extracting the continuity component with the non-continuity component extracting unit 201 of which the configuration is shown in Fig. 58, instead of the processing for extracting the non-continuity component corresponding to step S201. The processing of step S241 through step S245 is the same as the processing of step S221 through step S225, so description thereof will be omitted.

In step S246, the repetition determining unit 223 outputs the difference between the approximation value represented by the plane and the pixel values of the input image, as the continuity component of the input image. That is to say, the repetition determining unit 223 outputs the difference between the planar approximation values and the true pixel values.

Note that the repetition determining unit 223 may be arranged to output the difference between the approximation value represented by the plane and the pixel values of the input image, regarding pixel values of pixels of which the difference is equal to or greater than a predetermined threshold value, as the continuity component of the input image.

The processing of step S247 is the same as the processing of step S227, and accordingly description thereof will be omitted.

The plane approximates the non-continuity component, so the non-continuity component extracting unit 201 can remove the non-continuity component from the input image by subtracting the approximation value represented by the plane for approximating pixel values, from the pixel values of each pixel in the input image. In this case, the peak detecting unit 202 through the continuousness detecting unit 204 can be made to process only the continuity component of the input image, i.e., the values where the fine line image has been projected, so the processing with the peak detecting unit 202 through the continuousness detecting unit 204 becomes easier.

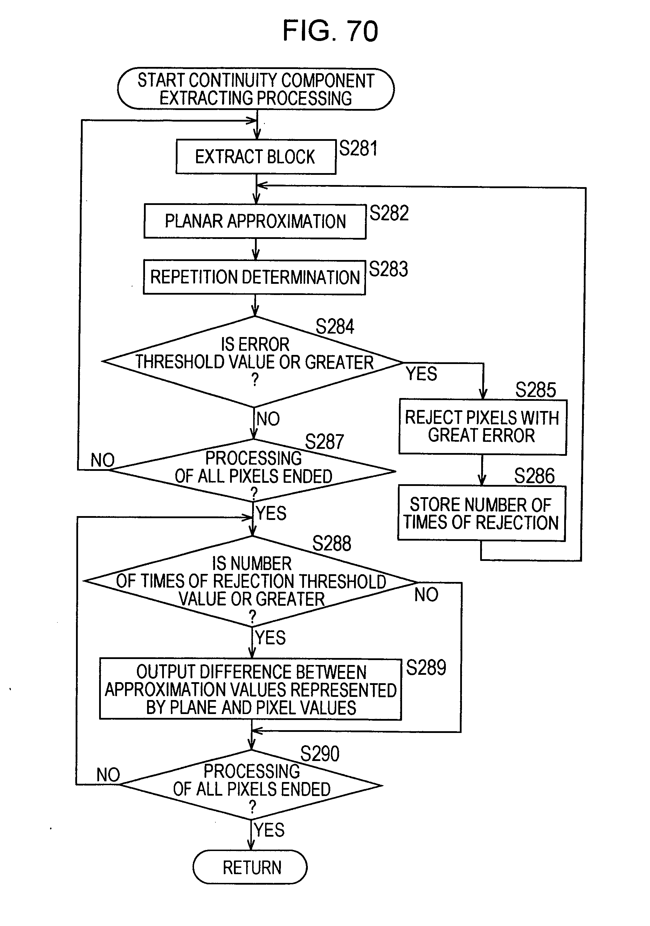

Fig. 70 is a flowchart for describing other processing for extracting the continuity component with the non-continuity component extracting unit 201 of which the configuration is shown in Fig. 58, instead of the processing for extracting the non-continuity component corresponding to step S201. The processing of step S261 through step S265 is the same as the processing of step S221 through step S225, so description thereof will be omitted.

In step S266, the repetition determining unit 223 stores the number of times of rejection for each pixel, the flow returns to step S262, and the processing is repeated.

In step S264, in the event that determination is made that the standard error is not equal to or greater than the threshold value, the block has been approximated on the plane, so the flow proceeds to step S267, the repetition determining unit 223 determines whether or not processing of all pixels of one screen of the input image has ended, and in the event that determination is made that there are still pixels which have not yet been taken as the object of processing, the flow returns to step S261, with regard to a pixel which has not yet been subjected to the processing, a block is extracted, and the above processing is repeated.

In the event that determination is made in step S267 that processing has ended for all pixels of one screen of the input image, the flow proceeds to step S268, the repetition determining unit 223 selects a pixel which has not yet been selected, and determines whether or not the number of times of rejection of the selected pixel is equal to or greater than a threshold value. For example, the repetition determining unit 223 determines in step S268 whether or not the number of times of rejection of the selected pixel is equal to or greater than a threshold value stored beforehand.

In the event that determination is made in step S268 that the number of times of rejection of the selected pixel is equal to or greater than the threshold value, the selected pixel contains the continuity component, so the flow proceeds to step S269, where the repetition determining unit 223 outputs the pixel value of the selected pixel (the pixel value in the input image) as the continuity component of the input image, and the flow proceeds to step S270.

In the event that determination is made in step S268 that the number of times of rejection of the selected pixel is not equal to or greater than the threshold value, the selected pixel does not contain the continuity component, so the processing in step S269 is skipped, and the procedure proceeds to step S270. That is to say, the pixel value of a pixel regarding which determination has been made that the number of times of rejection is not equal to or greater than the threshold value is not output.

Note that an arrangement may be made wherein the repetition determining unit 223 outputs a pixel value set to 0 for pixels regarding which determination has been made that the number of times of rejection is not equal to or greater than the threshold value.

In step S270, the repetition determining unit 223 determines whether or not processing of all pixels of one screen of the input image has ended to determine whether or not the number of times of rejection is equal to or greater than the threshold value, and in the event that determination is made that processing has not ended for all pixels, this means that there are still pixels which have not yet been taken as the object of processing, so the flow returns to step S268, a pixel which has not yet been subjected to the processing is selected, and the above processing is repeated.

In the event that determination is made in step S270 that processing has ended for all pixels of one screen of the input image, the processing ends.

Thus, of the pixels of the input image, the non-continuity component extracting unit 201 can output the pixel values of pixels containing the continuity component, as continuity component information. That is to say, of the pixels of the input image, the non-continuity component extracting unit 201 can output the pixel values of pixels containing the component of the fine line image.

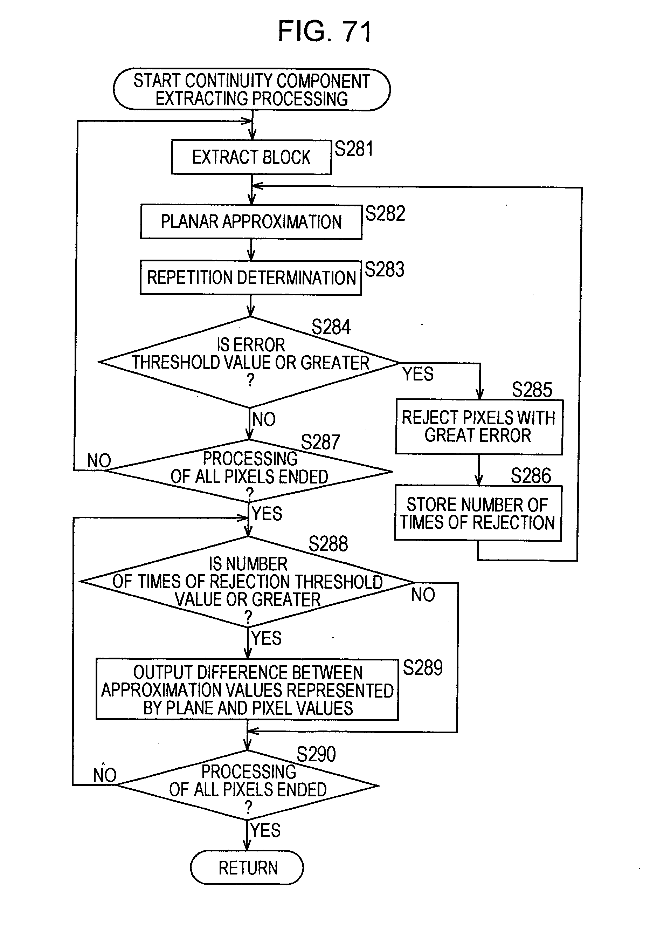

Fig. 71 is a flowchart for describing yet other processing for extracting the continuity component with the non-continuity component extracting unit 201 of which the configuration is shown in Fig. 58, instead of the processing for extracting the non-continuity component corresponding to step S201. The processing of step S281 through step S288 is the same as the processing of step S261 through step S268, so description thereof will be omitted.

In step S289, the repetition determining unit 223 outputs the difference between the approximation value represented by the plane, and the pixel value of a selected pixel, as the continuity component of the input image. That is to say, the repetition determining unit 223 outputs an image wherein the non-continuity component has been removed from the input image, as the continuity information.

The processing of step S290 is the same as the processing of step S270, and accordingly description thereof will be omitted.

Thus, the non-continuity component extracting unit 201 can output an image wherein the non-continuity component has been removed from the input image as the continuity information.

As described above, in a case wherein real world light signals are projected, a non-continuous portion of pixel values of multiple pixels of first image data wherein a part of the continuity of the real world light signals has been lost is detected, data continuity is detected from the detected non-continuous portions, a model (function) is generated for approximating the light signals by estimating the continuity of the real world light signals based on the detected data continuity, and second image data is generated based on the generated function, processing results which are more accurate and have higher precision as to the event in the real world can be obtained.

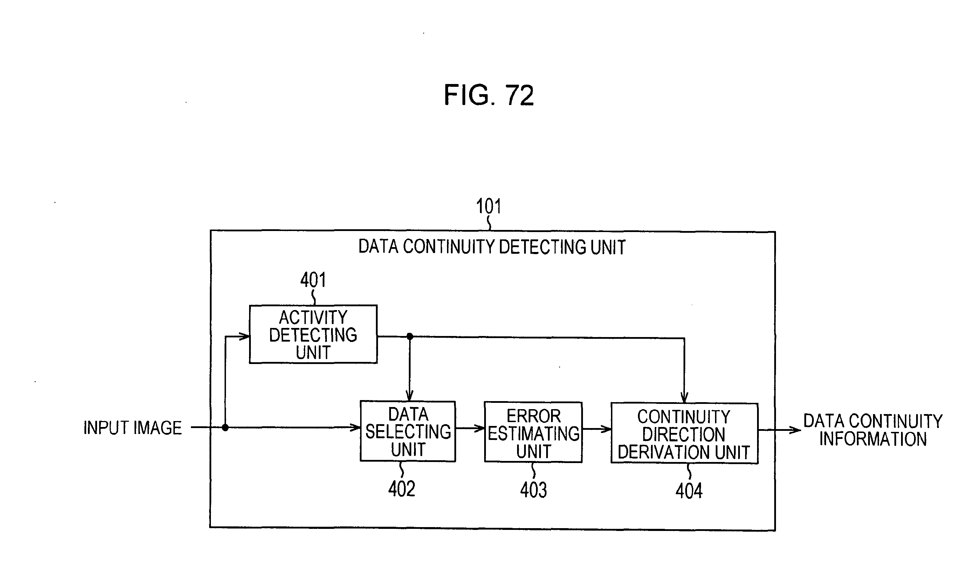

Fig. 72 is a block diagram illustrating another configuration of the data continuity detecting unit 101.

With the data continuity detecting unit 101 of which the configuration is shown in Fig. 72, change in the pixel value of the pixel of interest which is a pixel of interest in the spatial direction of the input image, i.e. activity in the spatial direction of the input image, is detected, multiple sets of pixels made up of a predetermined number of pixels in one row in the vertical direction or one row in the horizontal direction are extracted for each angle based on the pixel of interest and a reference axis according to the detected activity, the correlation of the extracted pixel sets is detected, and the angle of data continuity based on the reference axis in the input image is detected based on the correlation.

The angle of data continuity means an angle assumed by the reference axis, and the direction of a predetermined dimension where constant characteristics repeatedly appear in the data 3. Constant characteristics repeatedly appearing means a case wherein, for example, the change in value as to the change in position in the data 3, i.e., the cross-sectional shape, is the same, and so forth.

The reference axis may be, for example, an axis indicating the spatial direction X (the horizontal direction of the screen), an axis indicating the spatial direction Y (the vertical direction of the screen), and so forth.

The input image is supplied to an activity detecting unit 401 and data selecting unit 402.

The activity detecting unit 401 detects change in the pixel values as to the spatial direction of the input image, i.e., activity in the spatial direction, and supplies the activity information which indicates the detected results to the data selecting unit 402 and a continuity direction derivation unit 404.

For example, the activity detecting unit 401 detects the change of a pixel value as to the horizontal direction of the screen, and the change of a pixel value as to the vertical direction of the screen, and compares the detected change of the pixel value in the horizontal direction and the change of the pixel value in the vertical direction, thereby detecting whether the change of the pixel value in the horizontal direction is greater as compared with the change of the pixel value in the vertical direction, or whether the change of the pixel value in the vertical direction is greater as compared with the change of the pixel value in the horizontal direction.

The activity detecting unit 401 supplies to the data selecting unit 402 and the continuity direction derivation unit 404 activity information, which is the detection results, indicating that the change of the pixel value in the horizontal direction is greater as compared with the change of the pixel value in the vertical direction, or indicating that the change of the pixel value in the vertical direction is greater as compared with the change of the pixel value in the horizontal direction.

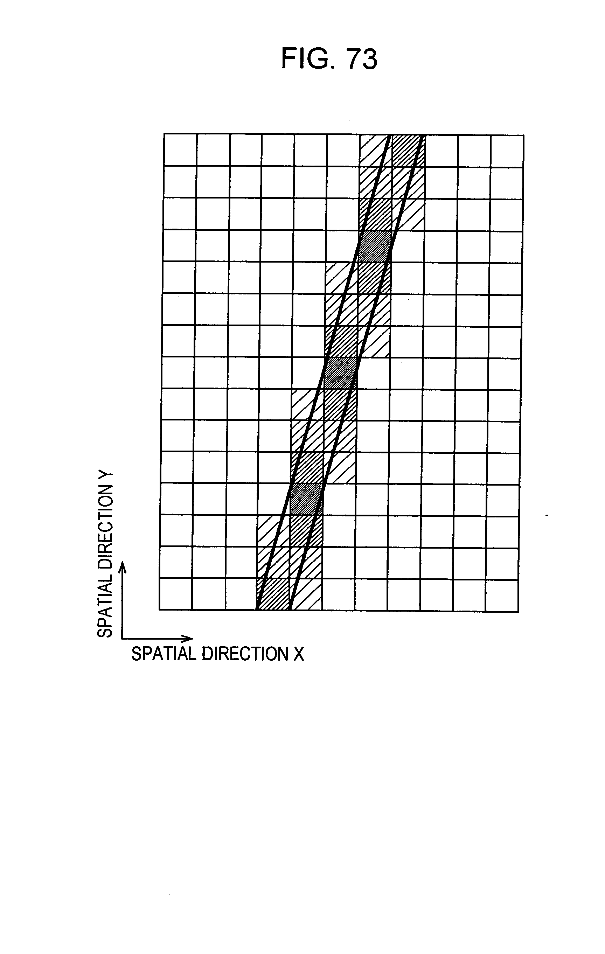

In the event that the change of the pixel value in the horizontal direction is greater as compared with the change of the pixel value in the vertical direction, arc shapes (half-disc shapes) or pawl shapes are formed on one row in the vertical direction, as indicated by Fig. 73 for example, and the arc shapes or pawl shapes are formed repetitively more in the vertical direction. That is to say, in the event that the change of the pixel value in the horizontal direction is greater as compared with the change of the pixel value in the vertical direction, with the reference axis as the axis representing the spatial direction X, the angle of the data continuity based on the reference axis in the input image is a value of any from 45 degrees to 90 degrees.

In the event that the change of the pixel value in the vertical direction is greater as compared with the change of the pixel value in the horizontal direction, arc shapes or pawl shapes are formed on one row in the vertical direction, for example, and the arc shapes or pawl shapes are formed repetitively more in the horizontal direction. That is to say, in the event that the change of the pixel value in the vertical direction is greater as compared with the change of the pixel value in the horizontal direction, with the reference axis as the axis representing the spatial direction X, the angle of the data continuity based on the reference axis in the input image is a value of any from 0 degrees to 45 degrees.

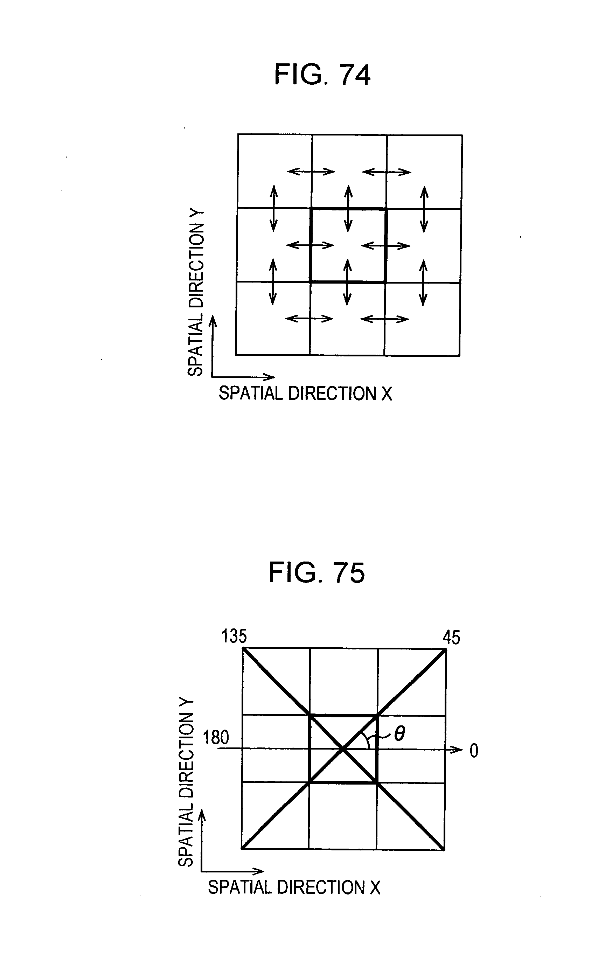

For example, the activity detecting unit 401 extracts from the input image a block made up of the 9 pixels, 3 × 3 centered on the pixel of interest, as shown in Fig. 74. The activity detecting unit 401 calculates the sum of differences of the pixels values regarding the pixels vertically adjacent, and the sum of differences of the pixels values regarding the pixels horizontally adjacent. The sum of differences $h_{diff}$ of the pixels values regarding the pixels horizontally adjacent can be obtained with Expression (27).

$$h_{diff} = \Sigma(P_{i+1,j} - P_{i,j}) \tag{27}$$

In the same way, the sum of differences $v_{diff}$ of the pixels values regarding the pixels vertically adjacent can be obtained with Expression (28).

$$v_{diff} = \Sigma(P_{i,j+1} - P_{i,j}) \qquad\qquad (28)$$

In Expression (27) and Expression (28), P represents the pixel value, i represents the position of the pixel in the horizontal direction, and j represents the position of the pixel in the vertical direction.

An arrangement may be made wherein the activity detecting unit 401 compares the calculated sum of differences $h_{diff}$ of the pixels values regarding the pixels horizontally adjacent with the sum of differences $v_{diff}$ of the pixels values regarding the pixels vertically adjacent, so as to determine the range of the angle of the data continuity based on the reference axis in the input image. That is to say, in this case, the activity detecting unit 401 determines whether a shape indicated by change in the pixel value as to the position in the spatial direction is formed repeatedly in the horizontal direction, or formed repeatedly in the vertical direction.

For example, change in pixel values in the horizontal direction with regard to an arc formed on pixels in one horizontal row is greater than the change of pixel values in the vertical direction, change in pixel values in the vertical direction with regard to an arc formed on pixels in one horizontal row is greater than the change of pixel values in the horizontal direction, and it can be said that the direction of data continuity, i.e., the change in the direction of the predetermined dimension of a constant feature which the input image that is the data 3 has is smaller in comparison with the change in the orthogonal direction too the data continuity. In other words, the difference of the direction orthogonal to the direction of data continuity (hereafter also referred to as non-continuity direction) is greater as compared to the difference in the direction of data continuity.

For example, as shown in Fig. 75, the activity detecting unit 401 compares the calculated sum of differences $h_{diff}$ of the pixels values regarding the pixels horizontally adjacent with the sum of differences $v_{diff}$ of the pixels values regarding the pixels vertically adjacent, and in the event that the sum of differences $h_{diff}$ of the pixels values regarding the pixels horizontally adjacent is greater, determines that the angle of the data continuity based on the reference axis is a value of any from 45 degrees to 135 degrees, and in the event that the sum of differences $v_{diff}$ of the pixels values regarding the pixels vertically adjacent is greater, determines that the angle of the data continuity based on the reference axis is a value of any from 0 degrees to 45 degrees, or a value of any from 135 degrees to 180 degrees.

For example, the activity detecting unit 401 supplies activity information indicating the determination results to the data selecting unit 402 and the continuity direction derivation unit 404.

Note that the activity detecting unit 401 can detect activity by extracting blocks of arbitrary sizes, such as a block made up of 25 pixels of 5 × 5, a block made up of 49 pixels of 7 × 7, and so forth.

The data selecting unit 402 sequentially selects pixels of interest from the pixels of the input image, and extracts multiple sets of pixels made up of a predetermined number of pixels in one row in the vertical direction or one row in the horizontal direction for each angle based on the pixel of interest and the reference axis, based on the activity information supplied from the activity detecting unit 401.

For example, in the event that the activity information indicates that the change in pixel values in the horizontal direction is greater in comparison with the change in pixel values in the vertical direction, this means that the data continuity angle is a value of any from 45 degrees to 135 degrees, so the data selecting unit 402 extracts multiple sets of pixels made up of a predetermined number of pixels in one row in the vertical direction, for each predetermined angle in the range of 45 degrees to 135 degrees, based on the pixel of interest and the reference axis.

In the event that the activity information indicates that the change in pixel values in the vertical direction is greater in comparison with the change in pixel values in the horizontal direction, this means that the data continuity angle is a value of any from 0 degrees to 45 degrees or from 135 degrees to 180 degrees, so the data selecting unit 402 extracts multiple sets of pixels made up of a predetermined number of pixels in one row in the horizontal direction, for each predetermined angle in the range of 0 degrees to 45 degrees or 135 degrees to 180 degrees, based on the pixel of interest and the reference axis.

Also, for example, in the event that the activity information indicates that the angle of data continuity is a value of any from 45 degrees to 135 degrees, the data selecting unit 402 extracts multiple sets of pixels made up of a predetermined number of pixels in one row in the vertical direction, for each predetermined angle in the range of 45 degrees to 135 degrees, based on the pixel of interest and the reference axis.

In the event that the activity information indicates that the angle of data continuity is a value of any from 0 degrees to 45 degrees or from 135 degrees to 180 degrees, the data selecting unit 402 extracts multiple sets of pixels made up of a predetermined number of pixels in one row in the horizontal direction, for each predetermined angle in the range of 0 degrees to 45 degrees or 135 degrees to 180 degrees, based on the pixel of interest and the reference axis.

The data selecting unit 402 supplies the multiple sets made up of the extracted pixels to an error estimating unit 403.

The error estimating unit 403 detects correlation of pixel sets for each angle with regard to the multiple sets of extracted pixels.

For example, with regard to the multiple sets of pixels made up of a predetermined number of pixels in one row in the vertical direction corresponding to one angle, the error estimating unit 403 detects the correlation of the pixels values of the pixels at corresponding positions of the pixel sets. With regard to the multiple sets of pixels made up of a predetermined number of pixels in one row in the horizontal direction corresponding to one angle, the error estimating unit 403 detects the correlation of the pixels values of the pixels at corresponding positions of the sets.

The error estimating unit 403 supplies correlation information indicating the detected correlation to the continuity direction derivation unit 404. The error estimating unit 403 calculates the sum of the pixel values of pixels of a set including the pixel of interest supplied from the data selecting unit 402 as values indicating correlation, and the absolute value of difference of the pixel values of the pixels at corresponding positions in other sets, and supplies the sum of absolute value of difference to the continuity direction derivation unit 404 as correlation information.

Based on the correlation information supplied from the error estimating unit 403, the continuity direction derivation unit 404 detects the data continuity angle based on the reference axis in the input image, corresponding to the lost continuity of the light signals of the actual world 1, and outputs data continuity information indicating an angle. For example, based on the correlation information supplied from the error estimating unit 403, the continuity direction derivation unit 404 detects an angle corresponding to the pixel set with the greatest correlation as the data continuity angle, and outputs data continuity information indicating the angle corresponding to the pixel set with the greatest correlation that has been detected.

The following description will be made regarding detection of data continuity angle in the range of 0 degrees through 90 degrees (the so-called first quadrant).

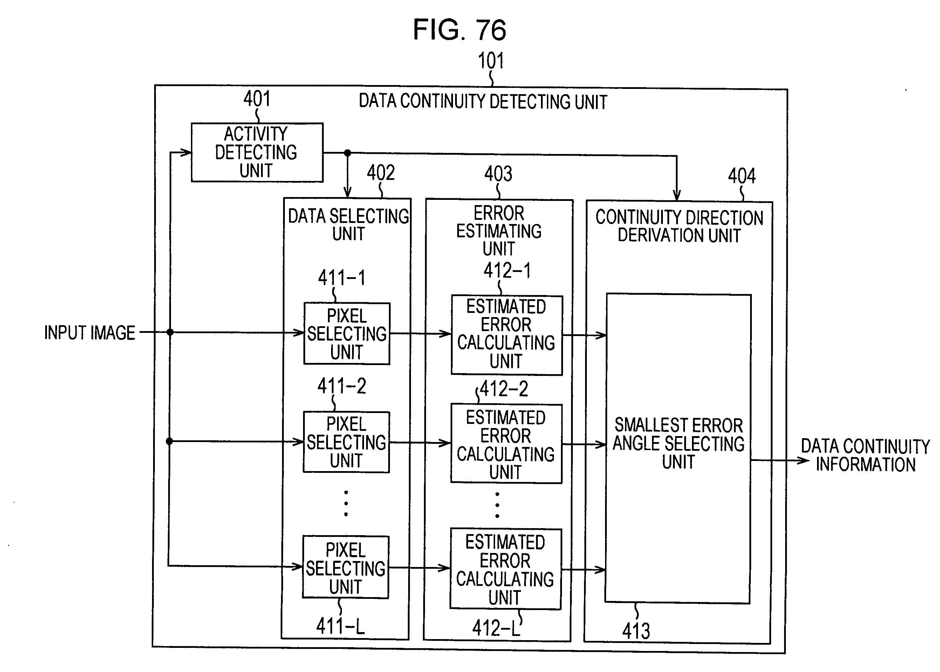

Fig. 76 is a block diagram illustrating a more detailed configuration of the data continuity detecting unit 101 shown in Fig. 72.

The data selecting unit 402 includes pixel selecting unit 411-1 through pixel selecting unit 411-L. The error estimating unit 403 includes estimated error calculating unit 412-1 through estimated error calculating unit 412-L. The continuity direction derivation unit 404 includes a smallest error angle selecting unit 413.

First, description will be made regarding the processing of the pixel selecting unit 411-1 through pixel selecting unit 411-L in the event that the data continuity angle indicated by the activity information is a value of any from 45 degrees to 135 degrees.

The pixel selecting unit 411-1 through pixel selecting unit 411-L set straight lines of mutually differing predetermined angles which pass through the pixel of interest, with the axis indicating the spatial direction X as the reference axis. The pixel selecting unit 411-1 through pixel selecting unit 411-L select, of the pixels belonging to a vertical row of pixels to which the pixel of interest belongs, a predetermined number of pixels above the pixel of interest, and predetermined number of pixels below the pixel of interest, and the pixel of interest, as a set.

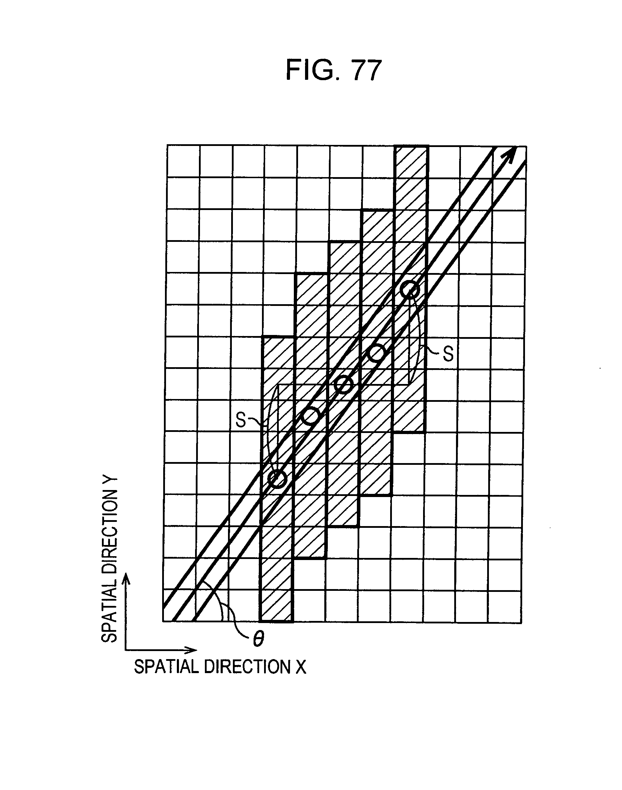

For example, as shown in Fig. 77, the pixel selecting unit 411-1 through pixel selecting unit 411-L select 9 pixels centered on the pixel of interest, as a set of pixels, from the pixels belonging to a vertical row of pixels to which the pixel of interest belongs.

In Fig. 77, one grid-shaped square (one grid) represents one pixel. In Fig. 77, the circle shown at the center represents the pixel of interest.

The pixel selecting unit 411-1 through pixel selecting unit 411-L select, from pixels belonging to a vertical row of pixels to the left of the vertical row of pixels to which the pixel of interest belongs, a pixel at the position closest to the straight line set for each. In Fig. 77, the circle to the lower left of the pixel of interest represents an example of a selected pixel. The pixel selecting unit 411-1 through pixel selecting unit 411-L then select, from the pixels belonging to the vertical row of pixels to the left of the vertical row of pixels to which the pixel of interest belongs, a predetermined number of pixels above the selected pixel, a predetermined number of pixels below the selected pixel, and the selected pixel, as a set of pixels.

For example, as shown in Fig. 77, the pixel selecting unit 411-1 through pixel selecting unit 411-L select 9 pixels centered on the pixel at the position closest to the straight line, from the pixels belonging to the vertical row of pixels to the left of the vertical row of pixels to which the pixel of interest belongs, as a set of pixels.

The pixel selecting unit 411-1 through pixel selecting unit 411-L select, from pixels belonging to a vertical row of pixels second left from the vertical row of pixels to which the pixel of interest belongs, a pixel at the position closest to the straight line set for each. In Fig. 77, the circle to the far left represents an example of the selected pixel. The pixel selecting unit 411-1 through pixel selecting unit 411-L then select, as a set of pixels, from the pixels belonging to the vertical row of pixels second left from the vertical row of pixels to which the pixel of interest belongs, a predetermined number of pixels above the selected pixel, a predetermined number of pixels below the selected pixel, and the selected pixel.

For example, as shown in Fig. 77, the pixel selecting unit 411-1 through pixel selecting unit 411-L select 9 pixels centered on the pixel at the position closest to the straight line, from the pixels belonging to the vertical row of pixels second left from the vertical row of pixels to which the pixel of interest belongs, as a set of pixels.

The pixel selecting unit 411-1 through pixel selecting unit 411-L select, from pixels belonging to a vertical row of pixels to the right of the vertical row of pixels to which the pixel of interest belongs, a pixel at the position closest to the straight line set for each. In Fig. 77, the circle to the upper right of the pixel of interest represents an example of a selected pixel. The pixel selecting unit 411-1 through pixel selecting unit 411-L then select, from the pixels belonging to the vertical row of pixels to the right of the vertical row of pixels to which the pixel of interest belongs, a predetermined number of pixels above the selected pixel, a predetermined number of pixels below the selected pixel, and the selected pixel, as a set of pixels.

For example, as shown in Fig. 77, the pixel selecting unit 411-1 through pixel selecting unit 411-L select 9 pixels centered on the pixel at the position closest to the straight line, from the pixels belonging to the vertical row of pixels to the right of the vertical row of pixels to which the pixel of interest belongs, as a set of pixels.

The pixel selecting unit 411-1 through pixel selecting unit 411-L select, from pixels belonging to a vertical row of pixels second right from the vertical row of pixels to which the pixel of interest belongs, a pixel at the position closest to the straight line set for each. In Fig. 77, the circle to the far right represents an example of the selected pixel. The pixel selecting unit 411-1 through pixel selecting unit 411-L then select, from the pixels belonging to the vertical row of pixels second right from the vertical row of pixels to which the pixel of interest belongs, a predetermined number of pixels above the selected pixel, a predetermined number of pixels below the selected pixel, and the selected pixel, as a set of pixels.

For example, as shown in Fig. 77, the pixel selecting unit 411-1 through pixel selecting unit 411-L select 9 pixels centered on the pixel at the position closest to the straight line, from the pixels belonging to the vertical row of pixels second right from the vertical row of pixels to which the pixel of interest belongs, as a set of pixels.

Thus, the pixel selecting unit 411-1 through pixel selecting unit 411-L each select five sets of pixels.

The pixel selecting unit 411-1 through pixel selecting unit 411-L select pixel sets for (lines set to) mutually different angles. For example, the pixel selecting unit 411-1 selects sets of pixels regarding 45 degrees, the pixel selecting unit 411-2 selects sets of pixels regarding 47.5 degrees, and the pixel selecting unit 411-3 selects sets of pixels regarding 50 degrees. The pixel selecting unit 411-1 through pixel selecting unit 411-L select sets of pixels regarding angles every 2.5 degrees, from 52.5 degrees through 135 degrees.

Note that the number of pixel sets may be an optional number, such as 3 or 7, for example, and does not restrict the present invention. Also, the number of pixels selected as one set may be an optional number, such as 5 or 13, for example, and does not restrict the present invention.

Note that the pixel selecting unit 411-1 through pixel selecting unit 411-L may be arranged to select pixel sets from pixels within a predetermined range in the vertical direction. For example, the pixel selecting unit 411-1 through pixel selecting unit 411-L can select pixel sets from 121 pixels in the vertical direction (60 pixels upward from the pixel of interest, and 60 pixels downward). In this case, the data continuity detecting unit 101 can detect the angle of data continuity up to 88.09 degrees as to the axis representing the spatial direction X.

The pixel selecting unit 411-1 supplies the selected set of pixels to the estimated error calculating unit 412-1, and the pixel selecting unit 411-2 supplies the selected set of pixels to the estimated error calculating unit 412-2. In the same way, each pixel selecting unit 411-3 through pixel selecting unit 411-L supplies the selected set of pixels to each estimated error calculating unit 412-3 through estimated error calculating unit 412-L.

The estimated error calculating unit 412-1 through estimated error calculating unit 412-L detect the correlation of the pixels values of the pixels at positions in the multiple sets, supplied from each of the pixel selecting unit 411-1 through pixel selecting unit 411-L. For example, the estimated error calculating unit 412-1 through estimated error calculating unit 412-L calcualtes, as a value indicating the correlation, the sum of absolute values of difference between the pixel values of the pixels of the set containing the pixel of interest, and the pixel values of the pixels at corresponding positions in other sets, supplied from one of the pixel selecting unit 411-1 through pixel selecting unit 411-L.

More specifically, based on the pixel values of the pixels of the set containing the pixel of interest and the pixel values of the pixels of the set made up of pixels belonging to one vertical row of pixels to the left side of the pixel of interest supplied from one of the pixel selecting unit 411-1 through pixel selecting unit 411-L, the estimated error calculating unit 412-1 through estimated error calculating unit 412-L calculates the difference of the pixel values of the topmost pixel, then calculates the difference of the pixel values of the second pixel from the top, and so on to calculate the absolute values of difference of the pixel values in order from the top pixel, and further calculates the sum of absolute values of the calculated differences. Based on the pixel values of the pixels of the set containing the pixel of interest and the pixel values of the pixels of the set made up of pixels belonging to one vertical row of pixels two to the left from the pixel of interest supplied from one of the pixel selecting unit 411-1 through pixel selecting unit 411-L, the estimated error calculating unit 412-1 through estimated error calculating unit 412-L calculates the absolute values of difference of the pixel values in order from the top pixel, and calculates the sum of absolute values of the calculated differences.

Then, based on the pixel values of the pixels of the set containing the pixel of interest and the pixel values of the pixels of the set made up of pixels belonging to one vertical row of pixels to the right side of the pixel of interest supplied from one of the pixel selecting unit 411-1 through pixel selecting unit 411-L, the estimated error calculating unit 412-1 through estimated error calculating unit 412-L calculates the difference of the pixel values of the topmost pixel, then calculates the difference of the pixel values of the second pixel from the top, and so on to calculate the absolute values of difference of the pixel values in order from the top pixel, and further calculates the sum of absolute values of the calculated differences. Based on the pixel values of the pixels of the set containing the pixel of interest and the pixel values of the pixels of the set made up of pixels belonging to one vertical row of pixels two to the right from the pixel of interest supplied from one of the pixel selecting unit 411-1 through pixel selecting unit 411-L, the estimated error calculating unit 412-1 through estimated error calculating unit 412-L calculates the absolute values of difference of the pixel values in order from the top pixel, and calculates the sum of absolute values of the calculated differences.

The estimated error calculating unit 412-1 through estimated error calculating unit 412-L add all of the sums of absolute values of difference of the pixel values thus calculated, thereby calculating the aggregate of absolute values of difference of the pixel values.

The estimated error calculating unit 412-1 through estimated error calculating unit 412-L supply information indicating the detected correlation to the smallest error angle selecting unit 413. For example, the estimated error calculating unit 412-1 through estimated error calculating unit 412-L supply the aggregate of absolute values of difference of the pixel values calculated, to the smallest error angle selecting unit 413.

Note that the estimated error calculating unit 412-1 through estimated error calculating unit 412-L are not restricted to the sum of absolute values of difference of pixel values, and can also calculate other values as correlation values as well, such as the sum of squared differences of pixel values, or correlation coefficients based on pixel values, and so forth.

The smallest error angle selecting unit 413 detects the data continuity angle based on the reference axis in the input image which corresponds to the continuity of the image which is the lost actual world 1 light signals, based on the correlation detected by the estimated error calculating unit 412-1 through estimated error calculating unit 412-L with regard to mutually different angles. That is to say, based on the correlation detected by the estimated error calculating unit 412-1 through estimated error calculating unit 412-L with regard to mutually different angles, the smallest error angle selecting unit 413 selects the greatest correlation, and takes the angle regarding which the selected correlation was detected as the data continuity angle based on the reference axis, thereby detecting the data continuity angle based on the reference axis in the input image.

For example, of the aggregates of absolute values of difference of the pixel values supplied from the estimated error calculating unit 412-1 through estimated error calculating unit 412-L, the smallest error angle selecting unit 413 selects the smallest aggregate. With regard to the pixel set of which the selected aggregate was calculated, the smallest error angle selecting unit 413 makes reference to a pixel belonging to the one vertical row of pixels two to the left from the pixel of interest and at the closest position to the straight line, and to a pixel belonging to the one vertical row of pixels two to the right from the pixel of interest and at the closest position to the straight line.

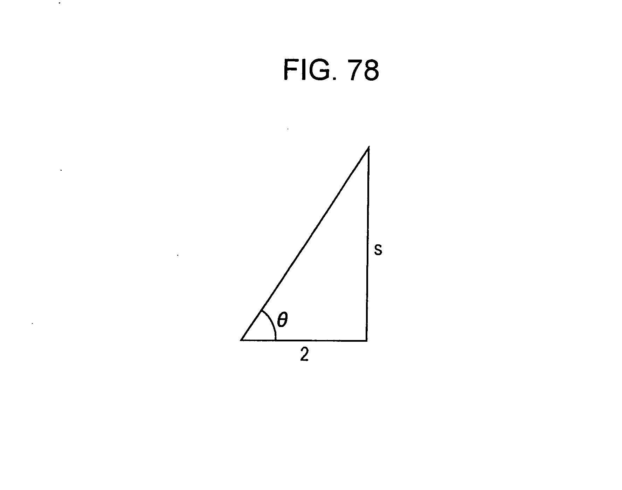

As shown in Fig. 77, the smallest error angle selecting unit 413 obtains the distance S in the vertical direction of the position of the pixels to reference from the position of the pixel of interest. As shown in Fig. 78, the smallest error angle selecting unit 413 calculates the angle θ of data continuity based on the axis indicating the spatial direction X which is the reference axis in the input image which is image data, that corresponds to the lost actual world 1 light signals continuity, from Expression (29).

$$\theta = \tan^{-1} (s/2) \qquad (29)$$

Next, description will be made regarding the processing of the pixel selecting unit 411-1 through pixel selecting unit 411-L in the event that the data continuity angle indicated by the activity information is a value of any from 0 degrees to 45 degrees and 135 degrees to 180 degrees.

The pixel selecting unit 411-1 through pixel selecting unit 411-L set straight lines of predetermined angles which pass through the pixel of interest, with the axis indicating the spatial direction X as the reference axis, and select, of the pixels belonging to a horizontal row of pixels to which the pixel of interest belongs, a predetermined number of pixels to the left of the pixel of interest, and predetermined number of pixels to the right of the pixel of interest, and the pixel of interest, as a pixel set.

The pixel selecting unit 411-1 through pixel selecting unit 411-L select, from pixels belonging to a horizontal row of pixels above the horizontal row of pixels to which the pixel of interest belongs, a pixel at the position closest to the straight line set for each. The pixel selecting unit 411-1 through pixel selecting unit 411-L then select, from the pixels belonging to the horizontal row of pixels above the horizontal row of pixels to which the pixel of interest belongs, a predetermined number of pixels to the left of the selected pixel, a predetermined number of pixels to the right of the selected pixel, and the selected pixel, as a pixel set.

The pixel selecting unit 411-1 through pixel selecting unit 411-L select, from pixels belonging to a horizontal row of pixels two above the horizontal row of pixels to which the pixel of interest belongs, a pixel at the position closest to the straight line set for each. The pixel selecting unit 411-1 through pixel selecting unit 411-L then select, from the pixels belonging to the horizontal row of pixels two above the horizontal row of pixels to which the pixel of interest belongs, a predetermined number of pixels to the left of the selected pixel, a predetermined number of pixels to the right of the selected pixel, and the selected pixel, as a pixel set.

The pixel selecting unit 411-1 through pixel selecting unit 411-L select, from pixels belonging to a horizontal row of pixels below the horizontal row of pixels to which the pixel of interest belongs, a pixel at the position closest to the straight line set for each. The pixel selecting unit 411-1 through pixel selecting unit 411-L then select, from the pixels belonging to the horizontal row of pixels below the horizontal row of pixels to which the pixel of interest belongs, a predetermined number of pixels to the left of the selected pixel, a predetermined number of pixels to the right of the selected pixel, and the selected pixel, as a pixel set.

The pixel selecting unit 411-1 through pixel selecting unit 411-L select, from pixels belonging to a horizontal row of pixels two below the horizontal row of pixels to which the pixel of interest belongs, a pixel at the position closest to the straight line set for each. The pixel selecting unit 411-1 through pixel selecting unit 411-L then select, from the pixels belonging to the horizontal row of pixels two below the horizontal row of pixels to which the pixel of interest belongs, a predetermined number of pixels to the left of the selected pixel, a predetermined number of pixels to the right of the selected pixel, and the selected pixel, as a pixel set.

Thus, the pixel selecting unit 411-1 through pixel selecting unit 411-L each select five sets of pixels.

The pixel selecting unit 411-1 through pixel selecting unit 411-L select pixel sets for mutually different angles. For example, the pixel selecting unit 411-1 selects sets of pixels regarding 0 degrees, the pixel selecting unit 411-2 selects sets of pixels regarding 2.5 degrees, and the pixel selecting unit 411-3 selects sets of pixels regarding 5 degrees. The pixel selecting unit 411-1 through pixel selecting unit 411-L select sets of pixels regarding angles every 2.5 degrees, from 7.5 degrees through 45 degrees and from 135 degrees through 180 degrees.

The pixel selecting unit 411-1 supplies the selected set of pixels to the estimated error calculating unit 412-1, and the pixel selecting unit 411-2 supplies the selected set of pixels to the estimated error calculating unit 412-2. In the same way, each pixel selecting unit 411-3 through pixel selecting unit 411-L supplies the selected set of pixels to each estimated error calculating unit 412-3 through estimated error calculating unit 412-L.

The estimated error calculating unit 412-1 through estimated error calculating unit 412-L detect the correlation of the pixels values of the pixels at positions in the multiple sets, supplied from each of the pixel selecting unit 411-1 through pixel selecting unit 411-L. The estimated error calculating unit 412-1 through estimated error calculating unit 412-L supply information indicating the detected correlation to the smallest error angle selecting unit 413.

The smallest error angle selecting unit 413 detects the data continuity angle based on the reference axis in the input image which corresponds to the continuity of the image which is the lost actual world 1 light signals, based on the correlation detected by the estimated error calculating unit 412-1 through estimated error calculating unit 412-L.

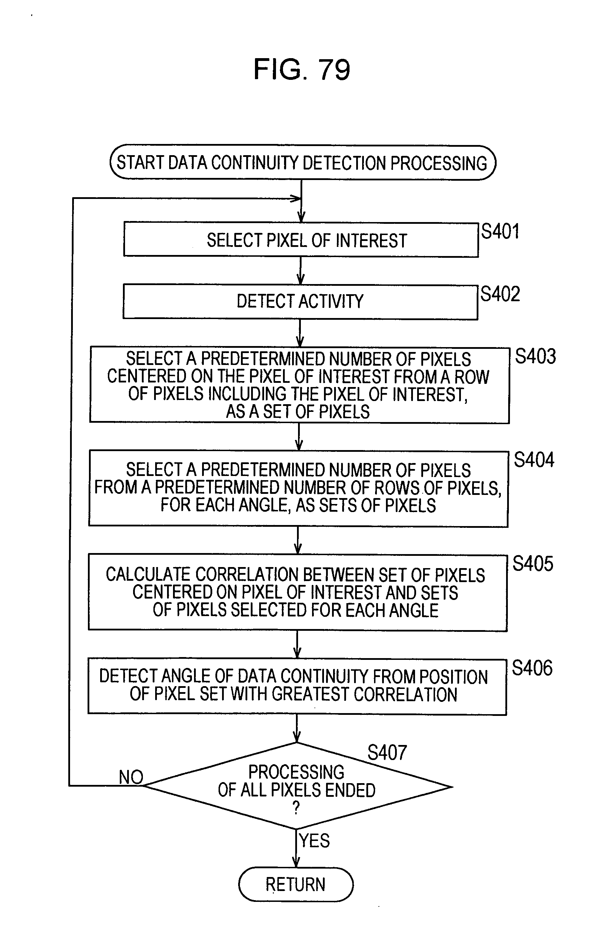

Next, data continuity detection processing with the data continuity detecting unit 101 of which the configuration is shown in Fig. 72, corresponding to the processing in step S101, will be described with reference to the flowchart in Fig. 79.

In step S401, the activity detecting unit 401 and the data selecting unit 402 select the pixel of interest which is a pixel of interest from the input image. The activity detecting unit 401 and the data selecting unit 402 select the same pixel of interest. For example, the activity detecting unit 401 and the data selecting unit 402 select the pixel of interest from the input image in raster scan order.

In step S402, the activity detecting unit 401 detects activity with regard to the pixel of interest. For example, the activity detecting unit 401 detects activity based on the difference of pixel values of pixels aligned in the vertical direction of a block made up of a predetermined number of pixels centered on the pixel of interest, and the difference of pixel values of pixels aligned in the horizontal direction.

The activity detecting unit 401 detects activity in the spatial direction as to the pixel of interest, and supplies activity information indicating the detected results to the data selecting unit 402 and the continuity direction derivation unit 404.

In step S403, the data selecting unit 402 selects, from a row of pixels including the pixel of interest, a predetermined number of pixels centered on the pixel of interest, as a pixel set. For example, the data selecting unit 402 selects a predetermined number of pixels above or to the left of the pixel of interest, and a predetermined number of pixels below or to the right of the pixel of interest, which are pixels belonging to a vertical or horizontal row of pixels to which the pixel of interest belongs, and also the pixel of interest, as a pixel set.

In step S404, the data selecting unit 402 selects, as a pixel set, a predetermined number of pixels each from a predetermined number of pixel rows for each angle in a predetermined range based on the activity detected by the processing in step S402. For example, the data selecting unit 402 sets straight lines with angles of a predetermined range which pass through the pixel of interest, with the axis indicating the spatial direction X as the reference axis, selects a pixel which is one or two rows away from the pixel of interest in the horizontal direction or vertical direction and which is closest to the straight line, and selects a predetermined number of pixels above or to the left of the selected pixel, and a predetermined number of pixels below or to the right of the selected pixel, and the selected pixel closest to the line, as a pixel set. The data selecting unit 402 selects pixel sets for each angle.

The data selecting unit 402 supplies the selected pixel sets to the error estimating unit 403.

In step S405, the error estimating unit 403 calculates the correlation between the set of pixels centered on the pixel of interest, and the pixel sets selected for each angle. For example, the error estimating unit 403 calculates the sum of absolute values of difference of the pixel values of the pixels of the set including the pixel of interest and the pixel values of the pixels at corresponding positions in other sets, for each angle.

The angle of data continuity may be detected based on the correlation between pixel sets selected for each angle.

The error estimating unit 403 supplies the information indicating the calculated correlation to the continuity direction derivation unit 404.

In step S406, from position of the pixel set having the strongest correlation based on the correlation calculated in the processing in step S405, the continuity direction derivation unit 404 detects the data continuity angle based on the reference axis in the input image which is image data that corresponds to the lost actual world 1 light signal continuity. For example, the continuity direction derivation unit 404 selects the smallest aggregate of the aggregate of absolute values of difference of pixel values, and detects the data continuity angle $\theta$ from the position of the pixel set regarding which the selected aggregate has been calculated.

The continuity direction derivation unit 404 outputs data continuity information indicating the angle of the data continuity that has been detected.

In step S407, the data selecting unit 402 determines whether or not processing of all pixels has ended, and in the event that determination is made that processing of all pixels has not ended, the flow returns to step S401, a pixel of interest is selected from pixels not yet taken as the pixel of interest, and the above-described processing is repeated.

In the event that determination is made in step S407 that processing of all pixels has ended, the processing ends.

Thus, the data continuity detecting unit 101 can detect the data continuity angle based on the reference axis in the image data, corresponding to the lost actual world 1 light signal continuity.

Note that an arrangement may be made wherein the data continuity detecting unit 101 of which the configuration is shown in Fig. 72 detects activity in the spatial direction of the input image with regard to the pixel of interest which is a pixel of interest in the frame of interest which is a frame of interest, extracts multiple pixel sets made up of a predetermined number of pixels in one row in the vertical direction or one row in the horizontal direction from the frame of interest and from each of frames before or after time-wise the frame of interest, for each angle and movement vector based on the pixel of interest and the space-directional reference axis, according to the detected activity, detects the correlation of the extracted pixel sets, and detects the data continuity angle in the time direction and spatial direction in the input image, based on this correlation.

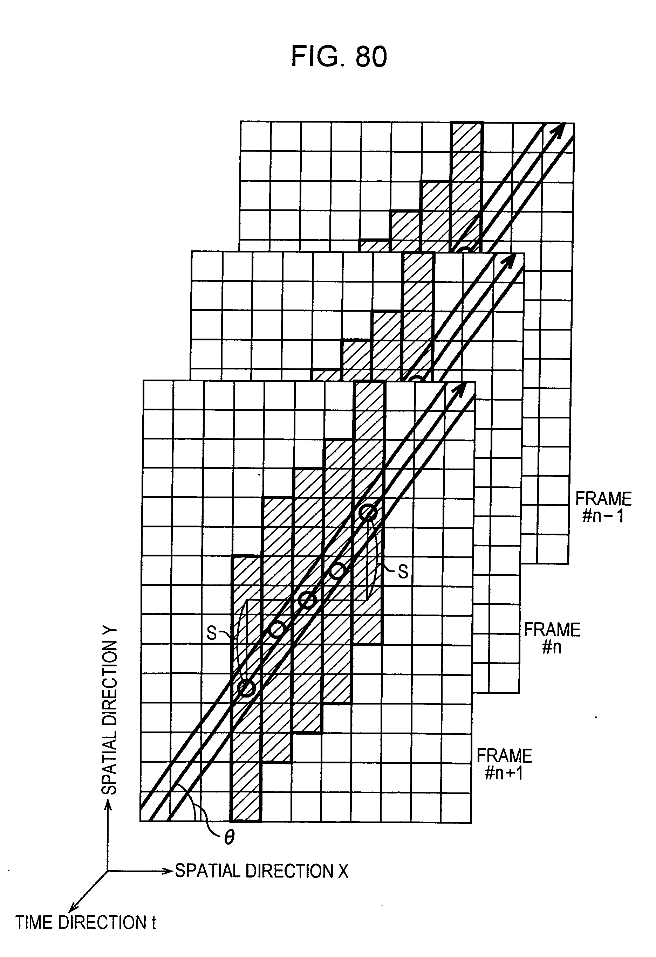

For example, as shown in Fig. 80, the data selecting unit 402 extracts multiple pixel sets made up of a predetermined number of pixels in one row in the vertical direction or one row in the horizontal direction from frame #n which is the frame of interest, frame #n-1, and frame #n+1, for each angle and movement vector based on the pixel of interest and the space-directional reference axis, according to the detected activity.

The frame #n-1 is a frame which is previous to the frame #n time-wise, and the frame #n+1 is a frame following the frame #n time-wise. That is to say, the frame #n-1, frame #n, and frame #n+1, are displayed in the order of frame #n-1, frame #n, and frame #n+1.

The error estimating unit 403 detects the correlation of pixel sets for each single angle and single movement vector, with regard to the multiple sets of the pixels that have been extracted. The continuity direction derivation unit 404 detects the data continuity angle in the temporal direction and spatial direction in the input image which corresponds to the lost actual world 1 light signal continuity, based on the correlation of pixel sets, and outputs the data continuity information indicating the angle.

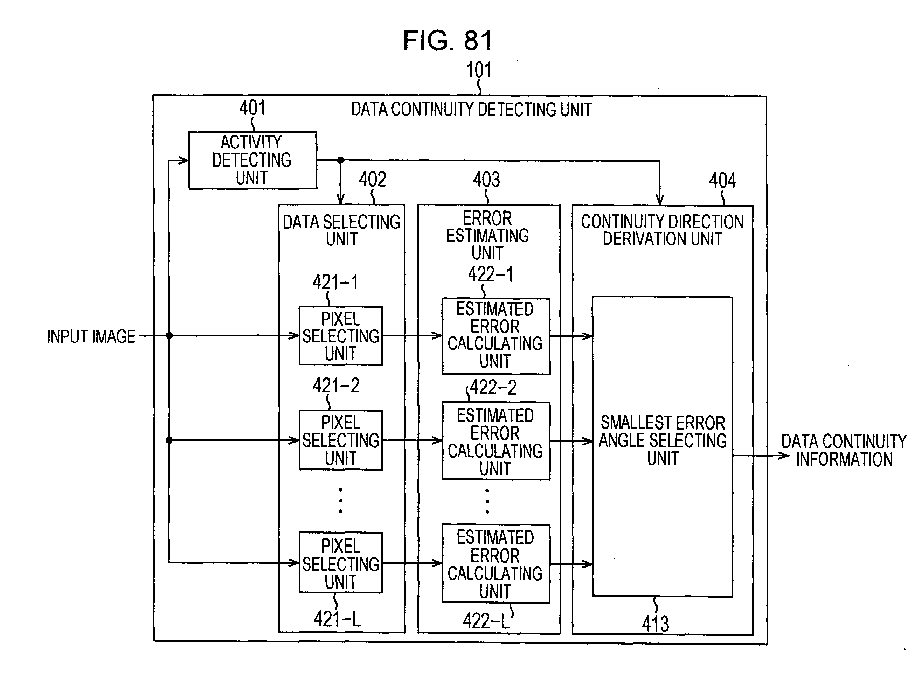

Fig. 81 is a block diagram illustrating another configuration of the data continuity detecting unit 101 shown in Fig. 72, in further detail. Portions which are the same as the case shown in Fig. 76 are denoted with the same numerals, and description thereof will be omitted.

The data selecting unit 402 includes pixel selecting unit 421-1 through pixel selecting unit 421-L. The error estimating unit 403 includes estimated error calculating unit 422-1 through estimated error calculating unit 422-L.

With the data continuity detecting unit 101 shown in Fig. 81, sets of a number corresponding to the range of the angle are extracted wherein the pixel sets are made up of pixels of a number corresponding to the range of the angle, the correlation of the extracted pixel sets is detected, and the data continuity angle based on the reference axis in the input image is detected based on the detected correlation.

First, the processing of the pixel selecting unit 421-1 through pixel selecting unit 421-L in the event that the angle of the data continuity indicated by activity information is any value 45 degrees to 135 degrees, will be described.

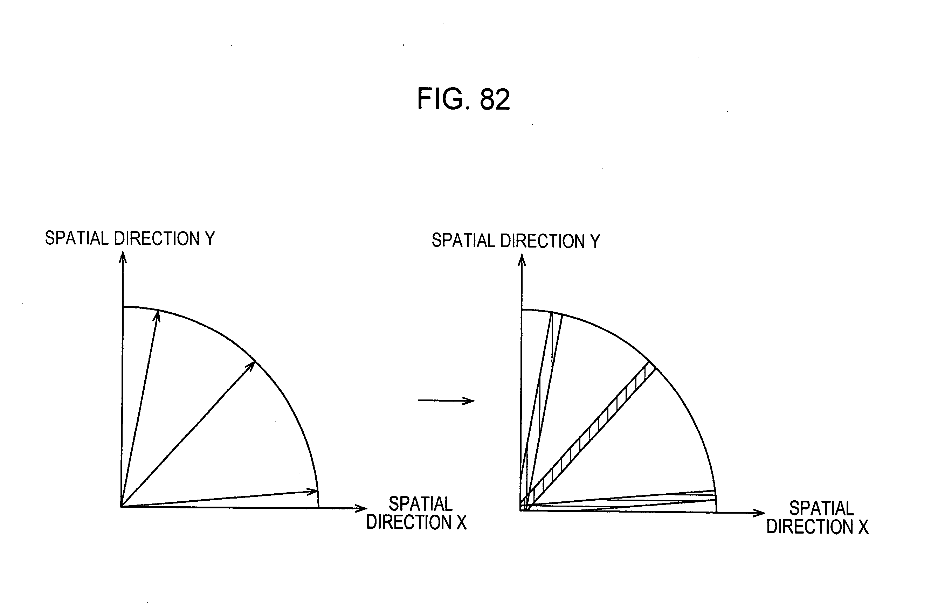

As shown to the left side in Fig. 82, with the data continuity detecting unit 101 shown in Fig. 76, pixel sets of a predetermined number of pixels are extracted regardless of the angle of the set straight line, but with the data continuity detecting unit 101 shown in Fig. 81, pixel sets of a number of pixels corresponding to the range of the angle of the set straight line are extracted, as indicated at the right side of Fig. 82. Also, with the data continuity detecting unit 101 shown in Fig. 81, pixels sets of a number corresponding to the range of the angle of the set straight line are extracted.

The pixel selecting unit 421-1 through pixel selecting unit 421-L set straight lines of mutually differing predetermined angles which pass through the pixel of interest with the axis indicating the spatial direction X as a reference axis, in the range of 45 degrees to 135 degrees.

The pixel selecting unit 421-1 through pixel selecting unit 421-L select, from pixels belonging to one vertical row of pixels to which the pixel of interest belongs, pixels above the pixel of interest and pixels below the pixel of interest of a number corresponding to the range of the angle of the straight line set for each, and the pixel of interest, as a pixel set.

The pixel selecting unit 421-1 through pixel selecting unit 421-L select, from pixels belonging to one vertical line each on the left side and the right side as to the one vertical row of pixels to which the pixel of interest belongs, a predetermined distance away therefrom in the horizontal direction with the pixel as a reference, pixels closest to the straight lines set for each, and selects, from one vertical row of pixels as to the selected pixel, pixels above the selected pixel of a number corresponding to the range of angle of the set straight line, pixels below the selected pixel of a number corresponding to the range of angle of the set straight line, and the selected pixel, as a pixel set.

That is to say, the pixel selecting unit 421-1 through pixel selecting unit 421-L select pixels of a number corresponding to the range of angle of the set straight line as pixel sets. The pixel selecting unit 421-1 through pixel selecting unit 421-L select pixels sets of a number corresponding to the range of angle of the set straight line.

For example, in the event that the image of a fine line, positioned at an angle approximately 45 degrees as to the spatial direction X, and having a width which is approximately the same width as the detection region of a detecting element, has been imaged with the sensor 2, the image of the fine line is projected on the data 3 such that arc shapes are formed on three pixels aligned in one row in the spatial direction Y for the fine-line image. Conversely, in the event that the image of a fine line, positioned at an angle approximately vertical to the spatial direction X, and having a width which is approximately the same width as the detection region of a detecting element, has been imaged with the sensor 2, the image of the fine line is projected on the data 3 such that arc shapes are formed on a great number of pixels aligned in one row in the spatial direction Y for the fine-line image.

With the same number of pixels included in the pixel sets, in the event that the fine line is positioned at an angle approximately 45 degrees to the spatial direction X, the number of pixels on which the fine line image has been projected is smaller in the pixel set, meaning that the resolution is lower. On the other hand, in the event that the fine line is positioned approximately vertical to the spatial direction X, processing is performed on a part of the pixels on which the fine line image has been projected, which may lead to lower accuracy.

Accordingly, to make the number of pixels upon which the fine line image is projected to be approximately equal, the pixel selecting unit 421-1 through pixel selecting unit 421-L selects the pixels and the pixel sets so as to reduce the number of pixels included in each of the pixels sets and increase the number of pixel sets in the event that the straight line set is closer to an angle of 45 degrees as to the spatial direction X, and increase the number of pixels included in each of the pixels sets and reduce the number of pixel sets in the event that the straight line set is closer to being vertical as to the spatial direction X.

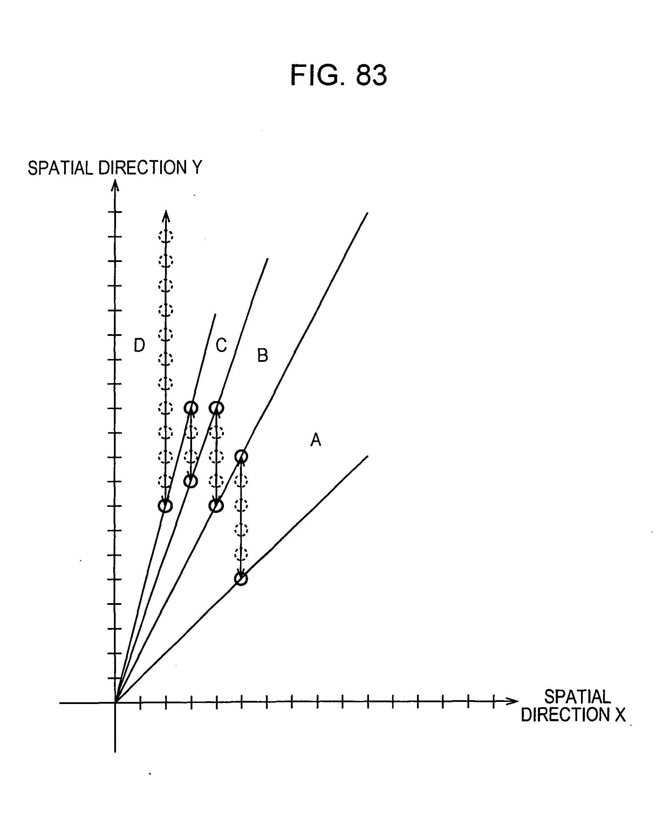

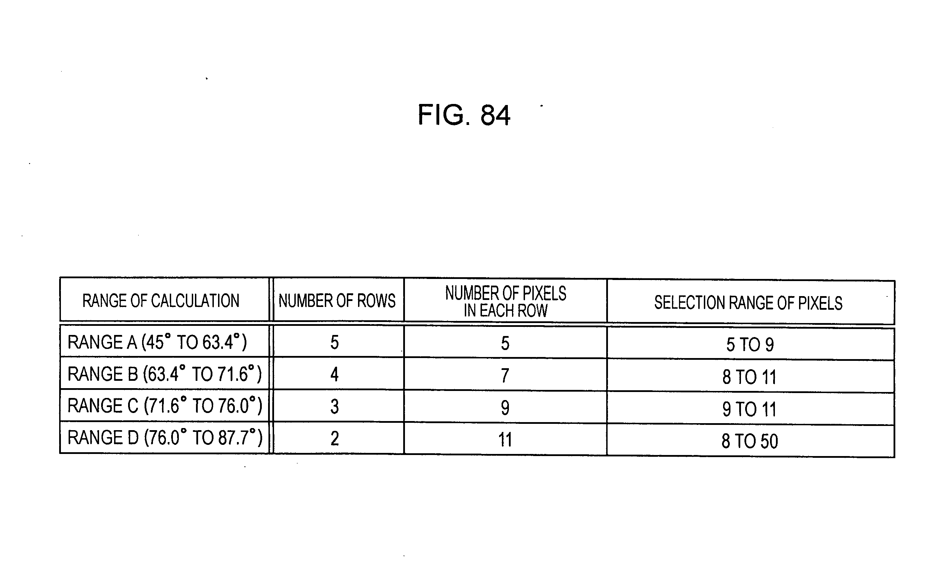

For example, as shown in Fig. 83 and Fig. 84, in the event that the angle of the set straight line is within the range of 45 degrees or greater but smaller than 63.4 degrees (the range indicated by A in Fig. 83 and Fig. 84), the pixel selecting unit 421-1 through pixel selecting unit 421-L select five pixels centered on the pixel of interest from one vertical row of pixels as to the pixel of interest, as a pixel set, and also select as pixel sets five pixels each from pixels belonging to one row of pixels each on the left side and the right side of the pixel of interest within five pixels therefrom in the horizontal direction.

That is to say, in the event that the angle of the set straight line is within the range of 45 degrees or greater but smaller than 63.4 degrees the pixel selecting unit 421-1 through pixel selecting unit 421-L select 11 pixel sets each made up of five pixels, from the input image. In this case, the pixel selected as the pixel which is at the closest position to the set straight line is at a position five pixels to nine pixels in the vertical direction as to the pixel of interest.

In Fig. 84, the number of rows indicates the number of rows of pixels to the left side or right side of the pixel of interest from which pixels are selected as pixel sets. In Fig. 84, the number of pixels in one row indicates the number of pixels selected as a pixel set from the one row of pixels vertical as to the pixel of interest, or the rows to the left side or the right side of the pixel of interest. In Fig. 84, the selection range of pixels indicates the position of pixels to be selected in the vertical direction, as the pixel at a position closest to the set straight line as to the pixel of interest.

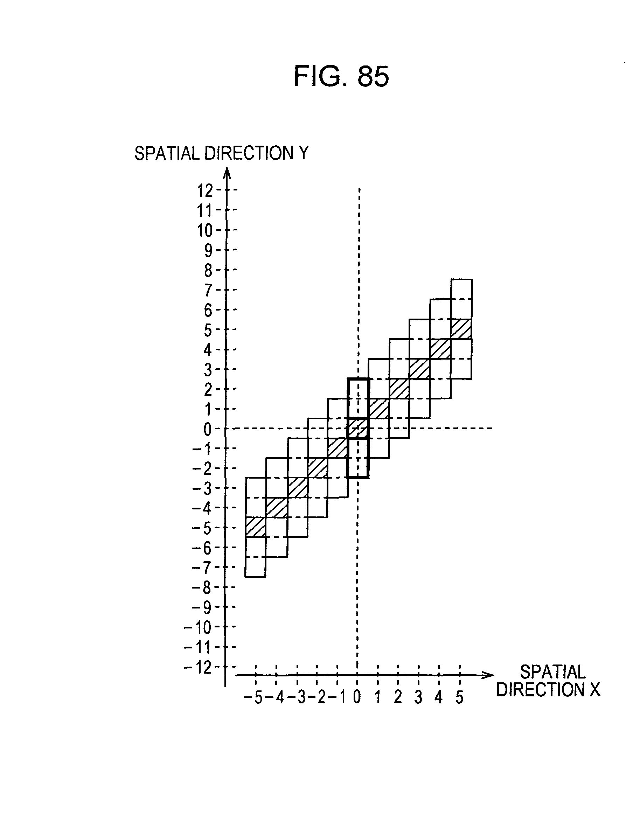

As shown in Fig. 85, for example, in the event that the angle of the set straight line is 45 degrees, the pixel selecting unit 421-1 selects five pixels centered on the pixel of interest from one vertical row of pixels as to the pixel of interest, as a pixel set, and also selects as pixel sets five pixels each from pixels belonging to one row of pixels each on the left side and the right side of the pixel of interest within five pixels therefrom in the horizontal direction. That is to say, the pixel selecting unit 421-1 selects 11 pixel sets each made up of five pixels, from the input image. In this case, of the pixels selected as the pixels at the closest position to the set straight line the pixel which is at the farthest position from the pixel of interest is at a position five pixels in the vertical direction as to the pixel of interest.

Note that in Fig. 85 through Fig. 92, the squares represented by dotted lines (single grids separated by dotted lines) indicate single pixels, and squares represented by solid lines indicate pixel sets. In Fig. 85 through Fig. 92, the coordinate of the pixel of interest in the spatial direction X is 0, and the coordinate of the pixel of interest in the spatial direction Y is 0.

Also, in Fig. 85 through Fig. 92, the hatched squares indicate the pixel of interest or the pixels at positions closest to the set straight line. In Fig. 85 through Fig. 92, the squares represented by heavy lines indicate the set of pixels selected with the pixel of interest as the center.

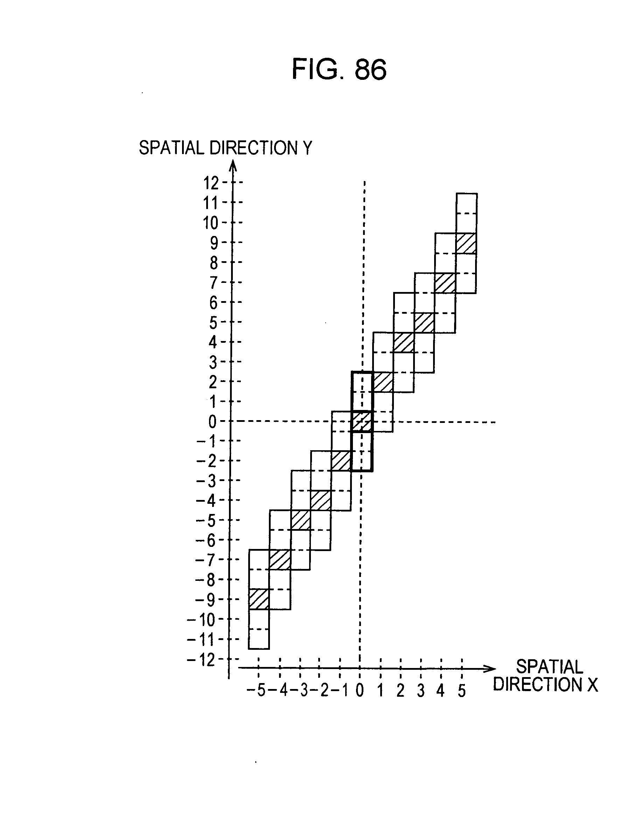

As shown in Fig. 86, for example, in the event that the angle of the set straight line is 60.9 degrees, the pixel selecting unit 421-2 selects five pixels centered on the pixel of interest from one vertical row of pixels as to the pixel of interest, as a pixel set, and also selects as pixel sets five pixels each from pixels belonging to one vertical row of pixels each on the left side and the right side of the pixel of interest within five pixels therefrom in the horizontal direction. That is to say, the pixel selecting unit 421-2 selects 11 pixel sets each made up of five pixels, from the input image. In this case, of the pixels selected as the pixels at the closest position to the set straight line the pixel which is at the farthest position from the pixel of interest is at a position nine pixels in the vertical direction as to the pixel of interest.

For example, as shown in Fig. 83 and Fig. 84, in the event that the angle of the set straight line is 63.4 degrees or greater but smaller than 71.6 degrees (the range indicated by B in Fig. 83 and Fig. 84), the pixel selecting unit 421-1 through pixel selecting unit 421-L select seven pixels centered on the pixel of interest from one vertical row of pixels as to the pixel of interest, as a pixel set, and also select as pixel sets seven pixels each from pixels belonging to one row of pixels each on the left side and the right side of the pixel of interest within four pixels therefrom in the horizontal direction.

That is to say, in the event that the angle of the set straight line is 63.4 degrees or greater but smaller than 71.6 degrees the pixel selecting unit 421-1 through pixel selecting unit 421-L select nine pixel sets each made up of seven pixels, from the input image. In this case, the pixel selected as the pixel which is at the closest position to the set straight line is at a position eight pixels to 11 pixels in the vertical direction as to the pixel of interest.

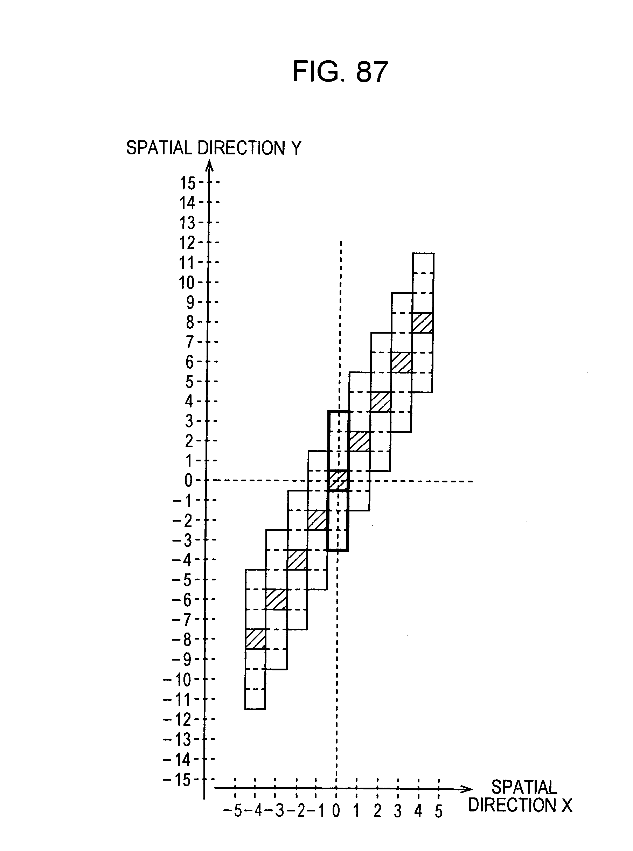

As shown in Fig. 87, for example, in the event that the angle of the set straight line is 63.4 degrees, the pixel selecting unit 421-3 selects seven pixels centered on the pixel of interest from one vertical row of pixels as to the pixel of interest, as a pixel set, and also selects as pixel sets seven pixels each from pixels belonging to one row of pixels each on the left side and the right side of the pixel of interest within four pixels therefrom in the horizontal direction. That is to say, the pixel selecting unit 421-3 selects nine pixel sets each made up of seven pixels, from the input image. In this case, of the pixels selected as the pixels at the closest position to the set straight line the pixel which is at the farthest position from the pixel of interest is at a position eight pixels in the vertical direction as to the pixel of interest.

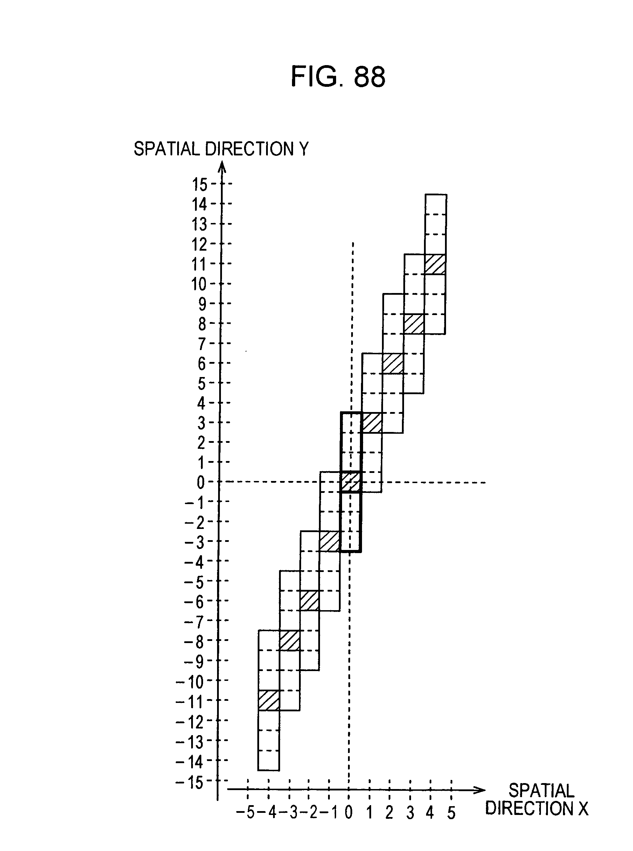

As shown in Fig. 88, for example, in the event that the angle of the set straight line is 70.0 degrees, the pixel selecting unit 421-4 selects seven pixels centered on the pixel of interest from one vertical row of pixels as to the pixel of interest, as a pixel set, and also selects as pixel sets seven pixels each from pixels belonging to one row of pixels each on the left side and the right side of the pixel of interest within four pixels therefrom in the horizontal direction. That is to say, the pixel selecting unit 421-4 selects nine pixel sets each made up of seven pixels, from the input image. In this case, of the pixels selected as the pixels at the closest position to the set straight line the pixel which is at the farthest position from the pixel of interest is at a position 11 pixels in the vertical direction as to the pixel of interest.

For example, as shown in Fig. 83 and Fig. 84, in the event that the angle of the set straight line is 71.6 degrees or greater but smaller than 76.0 degrees (the range indicated by C in Fig. 83 and Fig. 84), the pixel selecting unit 421-1 through pixel selecting unit 421-L select nine pixels centered on the pixel of interest from one vertical row of pixels as to the pixel of interest, as a pixel set, and also select as pixel sets nine pixels each from pixels belonging to one row of pixels each on the left side and the right side of the pixel of interest within three pixels therefrom in the horizontal direction.

That is to say, in the event that the angle of the set straight line is 71.6 degrees or greater but smaller than 76.0 degrees, the pixel selecting unit 421-1 through pixel selecting unit 421-L select seven pixel sets each made up of nine pixels, from the input image. In this case, the pixel selected as the pixel which is at the closest position to the set straight line is at a position nine pixels to 11 pixels in the vertical direction as to the pixel of interest.

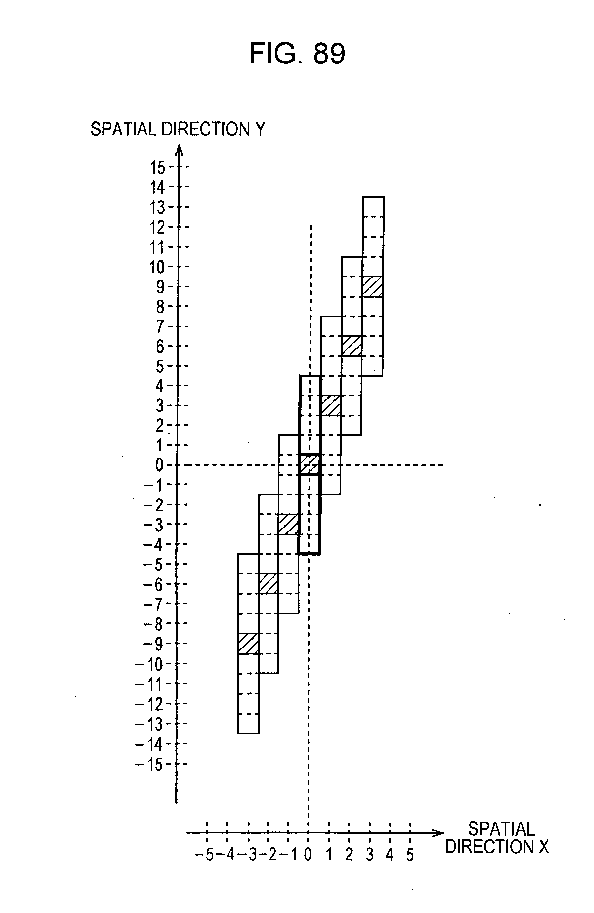

As shown in Fig. 89, for example, in the event that the angle of the set straight line is 71.6 degrees, the pixel selecting unit 421-5 selects nine pixels centered on the pixel of interest from one vertical row of pixels as to the pixel of interest, as a pixel set, and also selects as pixel sets nine pixels each from pixels belonging to one row of pixels each on the left side and the right side of the pixel of interest within three pixels therefrom in the horizontal direction. That is to say, the pixel selecting unit 421-5 selects seven pixel sets each made up of nine pixels, from the input image. In this case, of the pixels selected as the pixels at the closest position to the set straight line the pixel which is at the farthest position from the pixel of interest is at a position nine pixels in the vertical direction as to the pixel of interest.

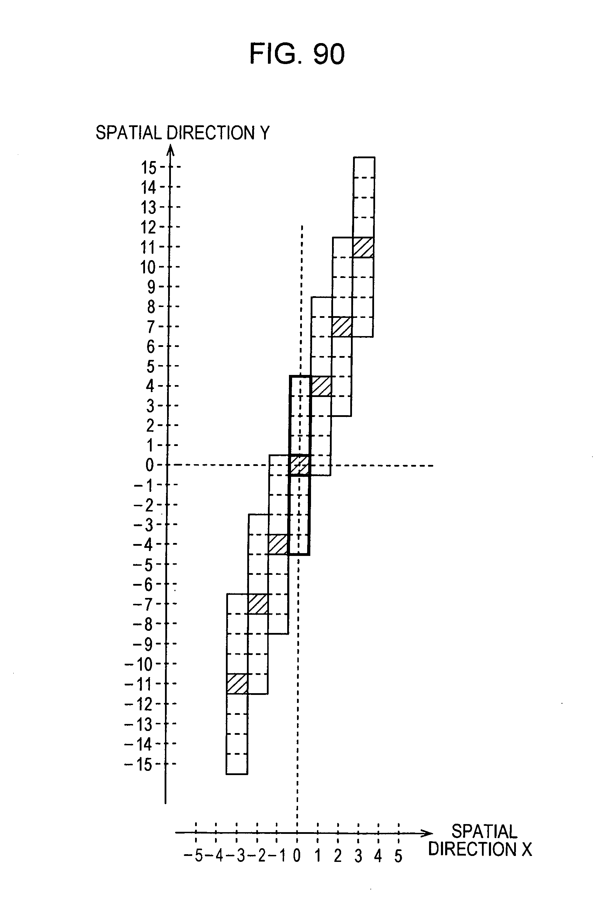

Also, As shown in Fig. 90, for example, in the event that the angle of the set straight line is 74.7 degrees, the pixel selecting unit 421-6 selects nine pixels centered on the pixel of interest from one vertical row of pixels as to the pixel of interest, as a pixel set, and also selects as pixel sets nine pixels each from pixels belonging to one row of pixels each on the left side and the right side of the pixel of interest within three pixels therefrom in the horizontal direction. That is to say, the pixel selecting unit 421-6 selects seven pixel sets each made up of nine pixels, from the input image. In this case, of the pixels selected as the pixels at the closest position to the set straight line the pixel which is at the farthest position from the pixel of interest is at a position 11 pixels in the vertical direction as to the pixel of interest.

For example, as shown in Fig. 83 and Fig. 84, in the event that the angle of the set straight line is 76.0 degrees or greater but smaller than 87.7 degrees (the range indicated by D in Fig. 83 and Fig. 84), the pixel selecting unit 421-1 through pixel selecting unit 421-L select 11 pixels centered on the pixel of interest from one vertical row of pixels as to the pixel of interest, as a pixel set, and also select as pixel sets 11 pixels each from pixels belonging to one row of pixels each on the left side and the right side of the pixel of interest within two pixels therefrom in the horizontal direction. That is to say, in the event that the angle of the set straight line is 76.0 degrees or greater but smaller than 87.7 degrees, the pixel selecting unit 421-1 through pixel selecting unit 421-L select five pixel sets each made up of 11 pixels, from the input image. In this case, the pixel selected as the pixel which is at the closest position to the set straight line is at a position eight pixels to 50 pixels in the vertical direction as to the pixel of interest.

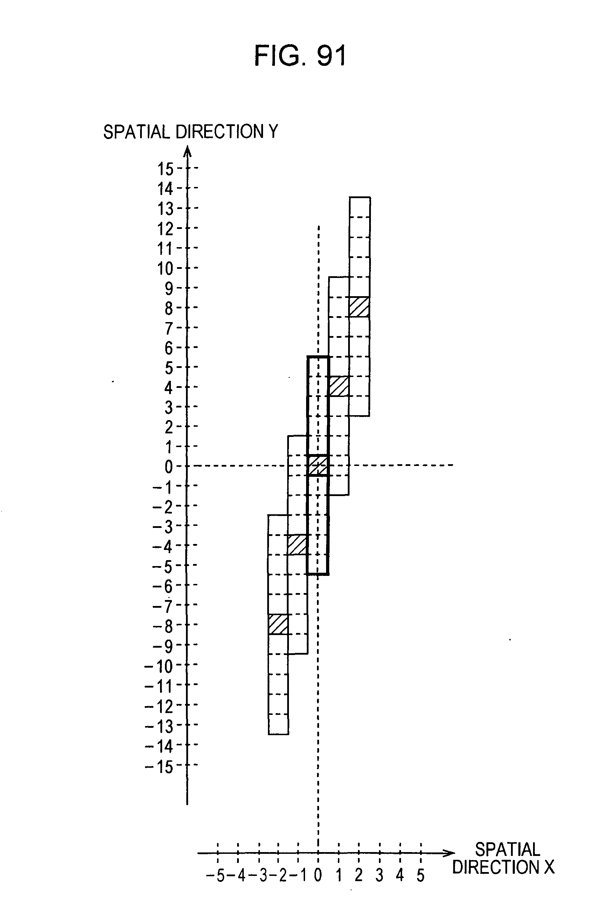

As shown in Fig. 91, for example, in the event that the angle of the set straight line is 76.0 degrees, the pixel selecting unit 421-7 selects 11 pixels centered on the pixel of interest from one vertical row of pixels as to the pixel of interest, as a pixel set, and also selects as pixel sets 11 pixels each from pixels belonging to one row of pixels each on the left side and the right side of the pixel of interest within two pixels therefrom in the horizontal direction. That is to say, the pixel selecting unit 421-7 selects five pixel sets each made up of 11 pixels, from the input image. In this case, of the pixels selected as the pixels at the closest position to the set straight line the pixel which is at the farthest position from the pixel of interest is at a position eight pixels in the vertical direction as to the pixel of interest.

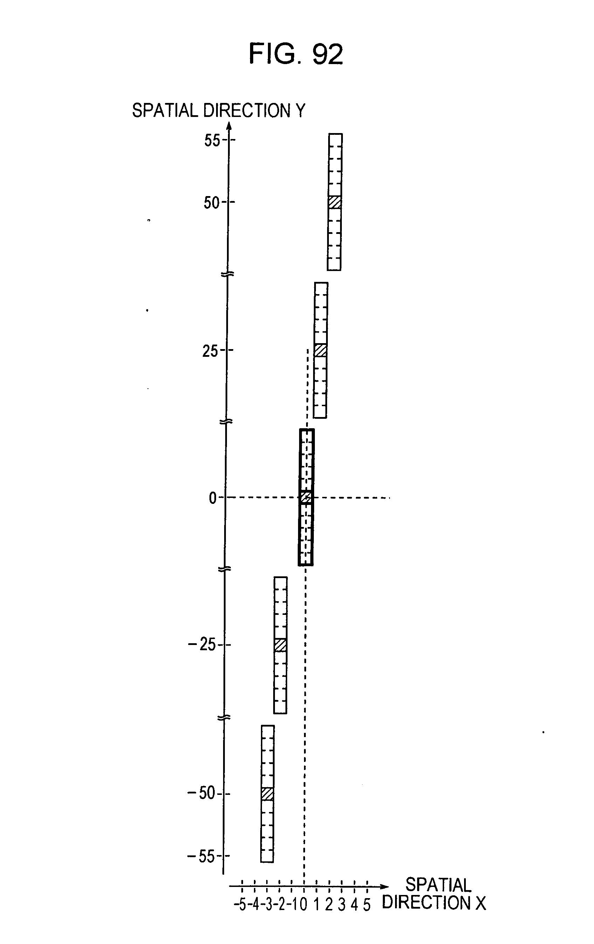

Also, as shown in Fig. 92, for example, in the event that the angle of the set straight line is 87.7 degrees, the pixel selecting unit 421-8 selects 11 pixels centered on the pixel of interest from one vertical row of pixels as to the pixel of interest, as a pixel set, and also selects as pixel sets 11 pixels each from pixels belonging to one row of pixels each on the left side and the right side of the pixel of interest within two pixels therefrom in the horizontal direction. That is to say, the pixel selecting unit 421-8 selects five pixel sets each made up of 11 pixels, from the input image. In this case, of the pixels selected as the pixels at the closest position to the set straight line the pixel which is at the farthest position from the pixel of interest is at a position 50 pixels in the vertical direction as to the pixel of interest.

Thus, the pixel selecting unit 421-1 through pixel selecting unit 421-L each select a predetermined number of pixels sets corresponding to the range of the angle, made up of a predetermined number of pixels corresponding to the range of the angle.

The pixel selecting unit 421-1 supplies the selected pixel sets to an estimated error calculating unit 422-1, and the pixel selecting unit 421-2 supplies the selected pixel sets to an estimated error calculating unit 422-2. In the same way, the pixel selecting unit 421-3 through pixel selecting unit 421-L supply the selected pixel sets to estimated error calculating unit 422-3 through estimated error calculating unit 422-L.

The estimated error calculating unit 422-1 through estimated error calculating unit 422-L detect the correlation of pixel values of the pixels at corresponding positions in the multiple sets supplied from each of the pixel selecting unit 421-1 through pixel selecting unit 421-L. For example, the estimated error calculating unit 422-1 through estimated error calculating unit 422-L calculate the sum of absolute values of difference between the pixel values of the pixels of the pixel set including the pixel of interest, and of the pixel values of the pixels at corresponding positions in the other multiple sets, supplied from each of the pixel selecting unit 421-1 through pixel selecting unit 421-L, and divides the calculated sum by the number of pixels contained in the pixel sets other than the pixel set containing the pixel of interest. The reason for dividing the calculated sum by the number of pixels contained in sets other than the set containing the pixel of interest is to normalize the value indicating the correlation, since the number of pixels selected differs according to the angle of the straight line that has been set.

The estimated error calculating unit 422-1 through estimated error calculating unit 422-L supply the detected information indicating correlation to the smallest error angle selecting unit 413. For example, the estimated error calculating unit 422-1 through estimated error calculating unit 422-L supply the normalized sum of difference of the pixel values to the smallest error angle selecting unit 413.

Next, the processing of the pixel selecting unit 421-1 through pixel selecting unit 421-L in the event that the angle of the data continuity indicated by activity information is any value 0 degrees to 45 degrees and 135 degrees to 180 degrees, will be described.

The pixel selecting unit 421-1 through pixel selecting unit 421-L set straight lines of mutually differing predetermined angles which pass through the pixel of interest with the axis indicating the spatial direction X as a reference, in the range of 0 degrees to 45 degrees or 135 degrees to 180 degrees.

The pixel selecting unit 421-1 through pixel selecting unit 421-L select, from pixels belonging to one horizontal row of pixels to which the pixel of interest belongs, pixels to the left side of the pixel of interest of a number corresponding to the range of angle of the set line, pixels to the right side of the pixel of interest of a number corresponding to the range of angle of the set line, and the selected pixel, as a pixel set.

The pixel selecting unit 421-1 through pixel selecting unit 421-L select, from pixels belonging to one horizontal line each above and below as to the one horizontal row of pixels to which the pixel of interest belongs, a predetermined distance away therefrom in the vertical direction with the pixel as a reference, pixels closest to the straight lines set for each, and selects, from one horizontal row of pixels as to the selected pixel, pixels to the left side of the selected pixel of a number corresponding to the range of angle of the set line, pixels to the right side of the selected pixel of a number corresponding to the range of angle of the set line, and the selected pixel, as a pixel set.

That is to say, the pixel selecting unit 421-1 through pixel selecting unit 421-L select pixels of a number corresponding to the range of angle of the set line as pixel sets. The pixel selecting unit 421-1 through pixel selecting unit 421-L select pixels sets of a number corresponding to the range of angle of the set line.

The pixel selecting unit 421-1 supplies the selected set of pixels to the estimated error calculating unit 422-1, and the pixel selecting unit 421-2 supplies the selected set of pixels to the estimated error calculating unit 422-2. In the same way, each pixel selecting unit 421-3 through pixel selecting unit 421-L supplies the selected set of pixels to each estimated error calculating unit 422-3 through estimated error calculating unit 422-L.

The estimated error calculating unit 422-1 through estimated error calculating unit 422-L detect the correlation of pixel values of the pixels at corresponding positions in the multiple sets supplied from each of the pixel selecting unit 421-1 through pixel selecting unit 421-L.

The estimated error calculating unit 422-1 through estimated error calculating unit 422-L supply the detected information indicating correlation to the smallest error angle selecting unit 413.

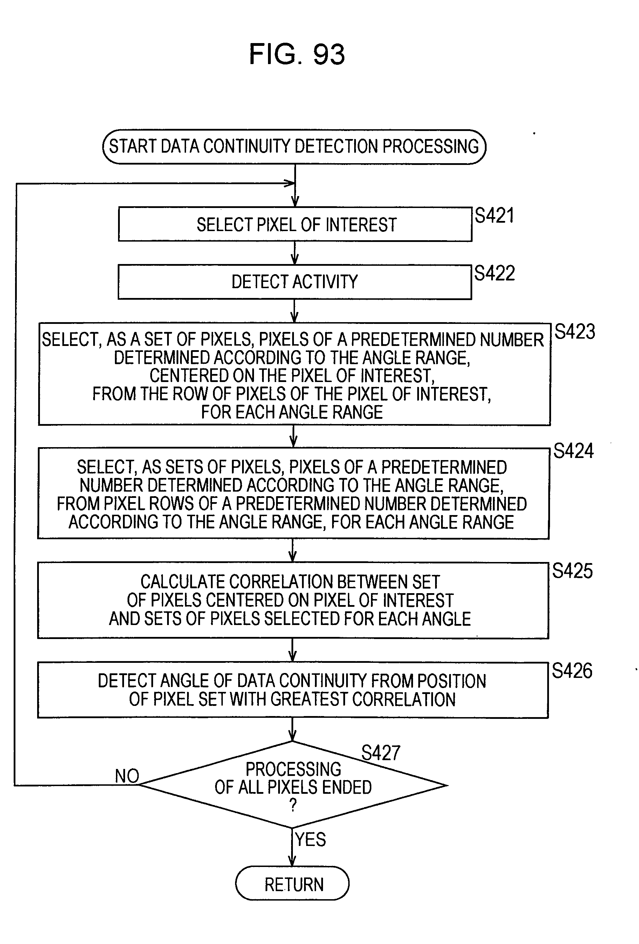

Next, the processing for data continuity detection with the data continuity detecting unit 101 of which the configuration is shown in Fig. 81, corresponding to the processing in step S101, will be described with reference to the flowchart shown in Fig. 93.

The processing of step S421 and step S422 is the same as the processing of step S401 and step S402, so description thereof will be omitted.

In step S423, the data selecting unit 402 selects, from a row of pixels containing a pixel of interest, a number of pixels predetermined with regard to the range of the angle which are centered on the pixel of interest, as a set of pixels, for each angle of a range corresponding to the activity detected in the processing in step S422. For example, the data selecting unit 402 selects from pixels belonging to one vertical or horizontal row of pixels, pixels of a number determined by the range of angle, for the angle of the straight line to be set, above or to the left of the pixel of interest, below or to the right of the pixel of interest, and the pixel of interest, as a pixel set.

In step S424, the data selecting unit 402 selects, from pixel rows of a number determined according to the range of angle, pixels of a number determined according to the range of angle, as a pixel set, for each predetermined angle range, based on the activity detected in the processing in step S422. For example, the data selecting unit 402 sets a straight line passing through the pixel of interest with an angle of a predetermined range, taking an axis representing the spatial direction X as a reference axis, selects a pixel closest to the straight line while being distanced from the pixel of interest in the horizontal direction or the vertical direction by a predetermined range according to the range of angle of the straight line to be set, and selects pixels of a number corresponding to the range of angle of the straight line to be set from above or to the left side of the selected pixel, pixels of a number corresponding to the range of angle of the straight line to be set from below or to the right side of the selected pixel, and the pixel closest to the selected line, as a pixel set. The data selecting unit 402 selects a set of pixels for each angle.

The data selecting unit 402 supplies the selected pixel sets to the error estimating unit 403.

In step S425, the error estimating unit 403 calculates the correlation between the pixel set centered on the pixel of interest, and the pixel set selected for each angle. For example, the error estimating unit 403 calculates the sum of absolute values of difference between the pixel values of pixels of the set including the pixel of interest and the pixel values of pixels at corresponding positions in the other sets, and divides the sum of absolute values of difference between the pixel values by the number of pixels belonging to the other sets, thereby calculating the correlation.

An arrangement may be made wherein the data continuity angle is detected based on the mutual correlation between the pixel sets selected for each angle.

The error estimating unit 403 supplies the information indicating the calculated correlation to the continuity direction derivation unit 404.

The processing of step S426 and step S427 is the same as the processing of step S406 and step S407, so description thereof will be omitted.

Thus, the data continuity detecting unit 101 can detect the angle of data continuity based on a reference axis in the image data, corresponding to the lost actual world 1 light signal continuity, more accurately and precisely. With the data continuity detecting unit 101 of which the configuration is shown in Fig. 81, the correlation of a greater number of pixels where the fine line image has been projected can be evaluated particularly in the event that the data continuity angle is around 45 degrees, so the angle of data continuity can be detected with higher precision.

Note that an arrangement may be made with the data continuity detecting unit 101 of which the configuration is shown in Fig. 81 as well, wherein activity in the spatial direction of the input image is detected for a certain pixel of interest which is the pixel of interest in a frame of interest which is the frame of interest, and from sets of pixels of a number determined according to the spatial angle range in one vertical row or one horizontal row, pixels of a number corresponding to the spatial angle range are extracted, from the frame of interest and frames previous to or following the frame of interest time-wise, for each angle and movement vector based on the pixel of interest and the reference axis in the spatial direction, according to the detected activity, the correlation of the extracted pixel sets is detected, and the data continuity angle in the time direction and the spatial direction in the input image is detected based on the correlation.

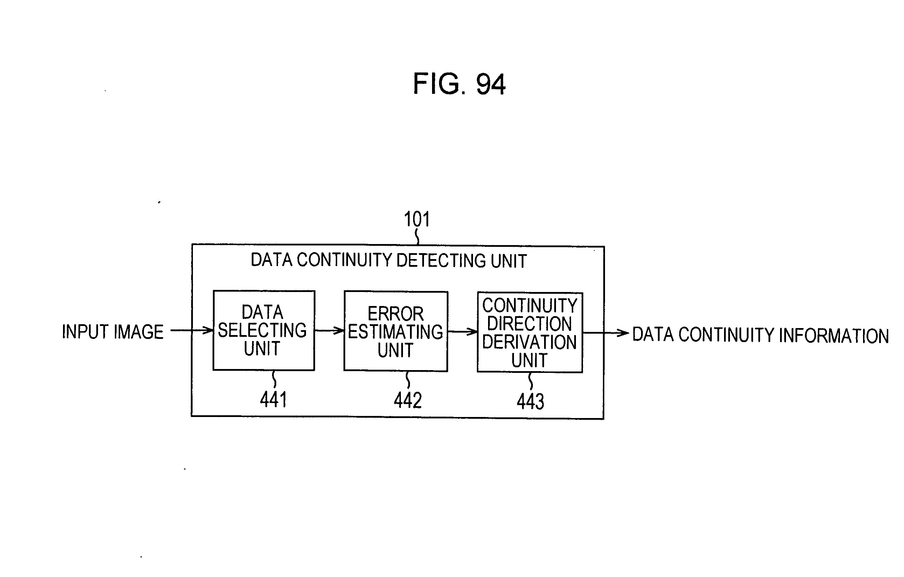

Fig. 94 is a block diagram illustrating yet another configuration of the data continuity detecting unit 101.

With the data continuity detecting unit 101 of which the configuration is shown in Fig. 94, with regard to a pixel of interest which is the pixel of interest, a block made up of a predetermined number of pixels centered on the pixel of interest, and multiple blocks each made up of a predetermined number of pixels around the pixel of interest, are extracted, the correlation of the block centered on the pixel of interest and the surrounding blocks is detected, and the angle of data continuity in the input image based on a reference axis is detected, based on the correlation.

A data selecting unit 441 sequentially selects the pixel of interest from the pixels of the input image, extracts the block made of the predetermined number of pixels centered on the pixel of interest and the multiple blocks made up of the predetermined number of pixels surrounding the pixel of interest, and supplies the extracted blocks to an error estimating unit 442.

For example, the data selecting unit 441 extracts a block made up of $5 \times 5$ pixels centered on the pixel of interest, and two blocks made up of $5 \times 5$ pixels from the surroundings of the pixel of interest for each predetermined angle range based on the pixel of interest and the reference axis.

The error estimating unit 442 detects the correlation between the block centered on the pixel of interest and the blocks in the surroundings of the pixel of the interest supplied from the data selecting unit 441, and supplies correlation information indicating the detected correlation to a continuity direction derivation unit 443.

For example, the error estimating unit 442 detects the correlation of pixel values with regard to a block made up of $5 \times 5$ pixels centered on the pixel of interest for each angle range, and two blocks made up of $5 \times 5$ pixels corresponding to one angle range.

From the position of the block in the surroundings of the pixel of interest with the greatest correlation based on the correlation information supplied from the error estimating unit 442, the continuity direction derivation unit 443 detects the angle of data continuity in the input image based on the reference axis, that corresponds to the lost actual world 1 light signal continuity, and outputs data continuity information indicating this angle. For example, the continuity direction derivation unit 443 detects the range of the angle regarding the two blocks made up of $5 \times 5$ pixels from the surroundings of the pixel of interest which have the greatest correlation with the block made up of $5 \times 5$ pixels centered on the pixel of interest, as the angle of data continuity, based on the correlation information supplied from the error estimating unit 442, and outputs data continuity information indicating the detected angle.

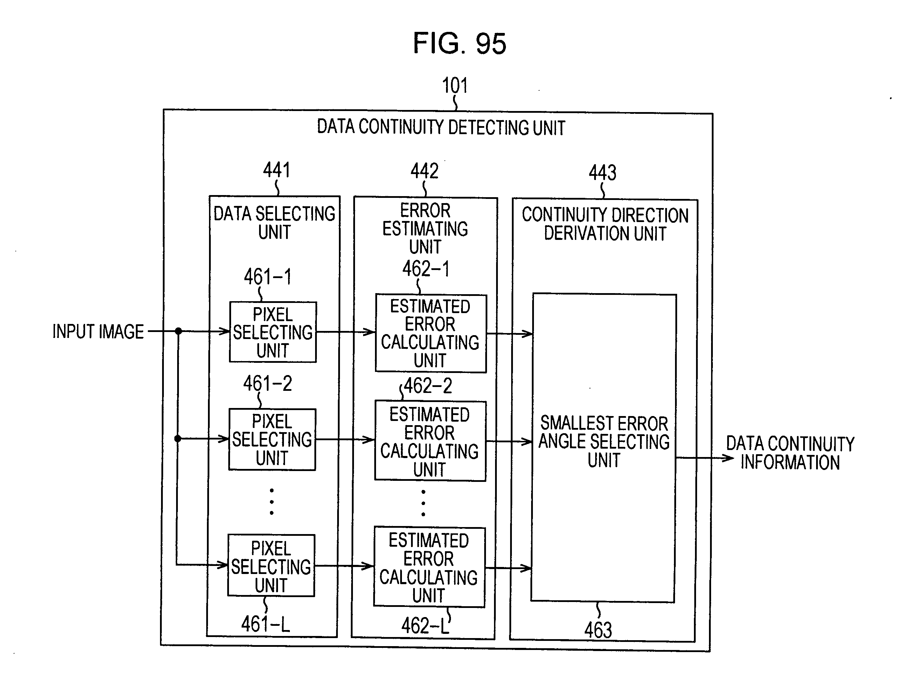

Fig. 95 is a block diagram illustrating a more detailed configuration of the data continuity detecting unit 101 shown in Fig. 94.

The data selecting unit 441 includes pixel selecting unit 461-1 through pixel selecting unit 461-L. The error estimating unit 442 includes estimated error calculating unit 462-1 through estimated error calculating unit 462-L. The continuity direction derivation unit 443 includes a smallest error angle selecting unit 463.

For example, the data selecting unit 441 has pixel selecting unit 461-1 through pixel selecting unit 461-8. The error estimating unit 442 has estimated error calculating unit 462-1 through estimated error calculating unit 462-8.

Each of the pixel selecting unit 461-1 through pixel selecting unit 461-L extracts a block made up of a predetermined number of pixels centered on the pixel of interest, and two blocks made up of a predetermined number of pixels according to a predetermined angle range based on the pixel of interest and the reference axis.

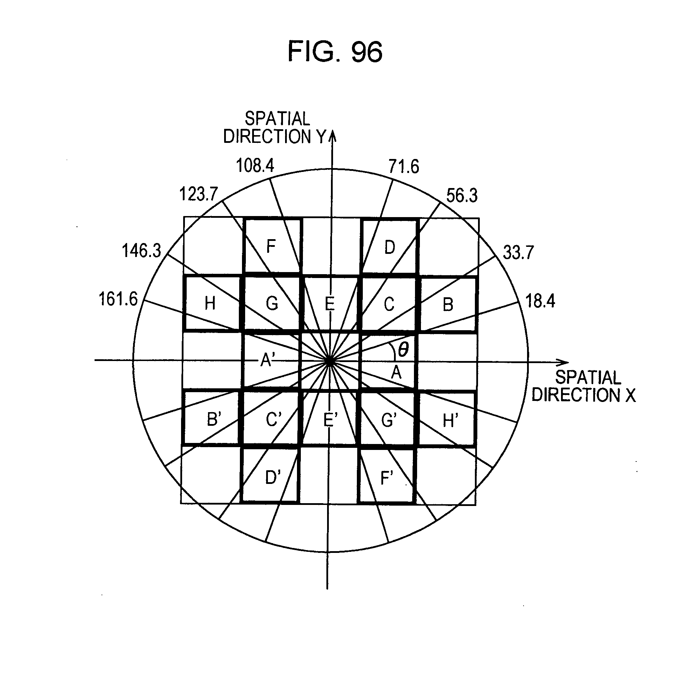

Fig. 96 is a diagram for describing an example of a $5 \times 5$ pixel block extracted by the pixel selecting unit 461-1 through pixel selecting unit 461-L. The center position in Fig. 96 indicates the position of the pixel of interest.

Note that a $5 \times 5$ pixel block is only an example, and the number of pixels contained in a block do not restrict the present invention.

For example, the pixel selecting unit 461-1 extracts a $5 \times 5$ pixel block centered on the pixel of interest, and also extracts a $5 \times 5$ pixel block (indicated by A in Fig. 96) centered on a pixel at a position shifted five pixels to the right side from the pixel of interest, and extracts a 5 × 5 pixel block (indicated by A' in Fig. 96) centered on a pixel at a position shifted five pixels to the left side from the pixel of interest, corresponding to 0 degrees to 18.4 degrees and 161.6 degrees to 180.0 degrees. The pixel selecting unit 461-1 supplies the three extracted 5 × 5 pixel blocks to the estimated error calculating unit 462-1.

The pixel selecting unit 461-2 extracts a 5 × 5 pixel block centered on the pixel of interest, and also extracts a 5 × 5 pixel block (indicated by B in Fig. 96) centered on a pixel at a position shifted 10 pixels to the right side from the pixel of interest and five pixels upwards, and extracts a 5 × 5 pixel block (indicated by B' in Fig. 96) centered on a pixel at a position shifted 10 pixels to the left side from the pixel of interest and five pixels downwards, corresponding to the range of 18.4 degrees through 33.7 degrees. The pixel selecting unit 461-2 supplies the three extracted 5 × 5 pixel blocks to the estimated error calculating unit 462-2.

The pixel selecting unit 461-3 extracts a 5 × 5 pixel block centered on the pixel of interest, and also extracts a 5 × 5 pixel block (indicated by C in Fig. 96) centered on a pixel at a position shifted five pixels to the right side from the pixel of interest and five pixels upwards, and extracts a 5 × 5 pixel block (indicated by C' in Fig. 96) centered on a pixel at a position shifted five pixels to the left side from the pixel of interest and five pixels downwards, corresponding to the range of 33.7 degrees through 56.3 degrees. The pixel selecting unit 461-3 supplies the three extracted 5 × 5 pixel blocks to the estimated error calculating unit 462-3.

The pixel selecting unit 461-4 extracts a 5 × 5 pixel block centered on the pixel of interest, and also extracts a 5 × 5 pixel block (indicated by D in Fig. 96) centered on a pixel at a position shifted five pixels to the right side from the pixel of interest and 10 pixels upwards, and extracts a 5 × 5 pixel block (indicated by D' in Fig. 96) centered on a pixel at a position shifted five pixels to the left side from the pixel of interest and 10 pixels downwards, corresponding to the range of 56.3 degrees through 71.6 degrees. The pixel selecting unit 461-4 supplies the three extracted 5 × 5 pixel blocks to the estimated error calculating unit 462-4.

The pixel selecting unit 461-5 extracts a 5 × 5 pixel block centered on the pixel of interest, and also extracts a 5 × 5 pixel block (indicated by E in Fig. 96) centered on a pixel at a position shifted five pixels upwards from the pixel of interest, and extracts a 5 5 pixel block (indicated by E' in Fig. 96) centered on a pixel at a position shifted five pixels downwards from the pixel of interest, corresponding to the range of 71.6 degrees through 108.4 degrees. The pixel selecting unit 461-5 supplies the three extracted 5 × 5 pixel blocks to the estimated error calculating unit 462-5.

The pixel selecting unit 461-6 extracts a 5 × 5 pixel block centered on the pixel of interest, and also extracts a 5 × 5 pixel block (indicated by F in Fig. 96) centered on a pixel at a position shifted five pixels to the left side from the pixel of interest and 10 pixels upwards, and extracts a 5 × 5 pixel block (indicated by F' in Fig. 96) centered on a pixel at a position shifted five pixels to the right side from the pixel of interest and 10 pixels downwards, corresponding to the range of 108.4 degrees through 123.7 degrees. The pixel selecting unit 461-6 supplies the three extracted 5 × 5 pixel blocks to the estimated error calculating unit 462-6.

The pixel selecting unit 461-7 extracts a 5 × 5 pixel block centered on the pixel of interest, and also extracts a 5 × 5 pixel block (indicated by G in Fig. 96) centered on a pixel at a position shifted five pixels to the left side from the pixel of interest and five pixels upwards, and extracts a 5 × 5 pixel block (indicated by G' in Fig. 96) centered on a pixel at a position shifted five pixels to the right side from the pixel of interest and five pixels downwards, corresponding to the range of 123.7 degrees through 146.3 degrees. The pixel selecting unit 461-7 supplies the three extracted 5 × 5 pixel blocks to the estimated error calculating unit 462-7.

The pixel selecting unit 461-8 extracts a 5 × 5 pixel block centered on the pixel of interest, and also extracts a 5 × 5 pixel block (indicated by H in Fig. 96) centered on a pixel at a position shifted 10 pixels to the left side from the pixel of interest and five pixels upwards, and extracts a 5 × 5 pixel block (indicated by H' in Fig. 96) centered on a pixel at a position shifted 10 pixels to the right side from the pixel of interest and five pixels downwards, corresponding to the range of 146.3 degrees through 161.6 degrees. The pixel selecting unit 461-8 supplies the three extracted 5 × 5 pixel blocks to the estimated error calculating unit 462-8.

Hereafter, a block made up of a predetermined number of pixels centered on the pixel of interest will be called a block of interest.

Hereafter, a block made up of a predetermined number of pixels corresponding to a predetermined range of angle based on the pixel of interest and reference axis will be called a reference block.

In this way, the pixel selecting unit 461-1 through pixel selecting unit 461-8 extracts a block of interest and reference blocks from a range of 25 × 25 pixels, centered on the pixel of interest, for example.

The estimated error calculating unit 462-1 through estimated error calculating unit 462-L detect the correlation between the block of interest and the two reference blocks supplied from the pixel selecting unit 461-1 through pixel selecting unit 461-L, and supplies correlation information indicating the detected correlation to the smallest error angle selecting unit 463.

For example, the estimated error calculating unit 462-1 calculates the absolute value of difference between the pixel values of the pixels contained in the block of interest and the pixel values of the pixels contained in the reference block, with regard to the block of interest made up of 5 × 5 pixels centered on the pixel of interest, and the 5 × 5 pixel reference block centered on a pixel at a position shifted five pixels to the right side from the pixel of interest, extracted corresponding to 0 degrees to 18.4 degrees and 161.6 degrees to 180.0 degrees.

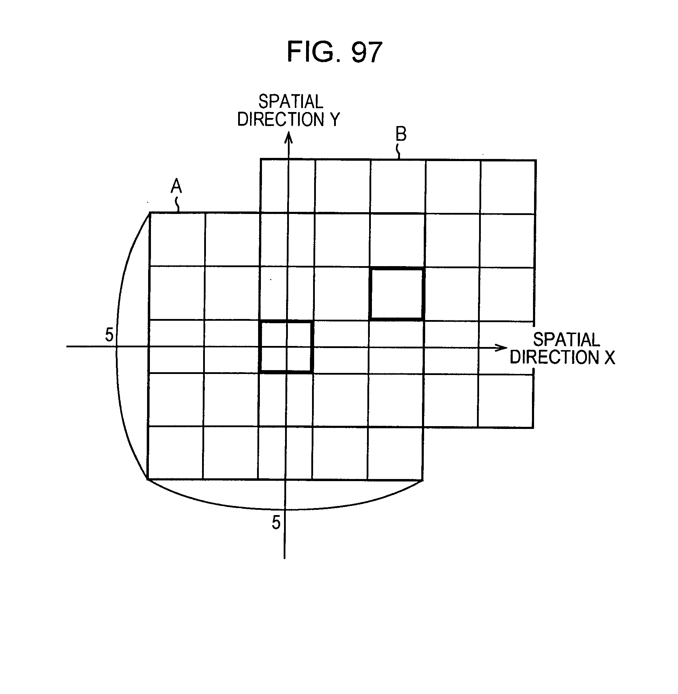

In this case, as shown in Fig. 97, in order for the pixel value of the pixel of interest to be used on the calculation of the absolute value of difference of pixel values, with the position where the center pixel of the block of interest and the center pixel of the reference block overlap as a reference, the estimated error calculating unit 462-1 calculates the absolute value of difference of pixel values of pixels at positions overlapping in the event that the position of the block of interest is shifted to any one of two pixels to the left side through two pixels to the right side and any one of two pixels upwards through two pixels downwards as to the reference block. This means that the absolute value of difference of the pixel values of pixels at corresponding positions in 25 types of positions of the block of interest and the reference block. In other words, in a case wherein the absolute values of difference of the pixel values are calculated, the range formed of the block of interest moved relatively and the reference block is 9 × 9 pixels.

In Fig. 97, the square represent pixels, A represents the reference block, and B represents the block of interest. In Fig. 97, the heavy lines indicate the pixel of interest. That is to say, Fig. 97 is a diagram illustrating a case wherein the block of interest has been shifted two pixels to the right side and one pixel upwards, as to the reference block.

Further, the estimated error calculating unit 462-1 calculates the absolute value of difference between the pixel values of the pixels contained in the block of interest and the pixel values of the pixels contained in the reference block, with regard to the block of interest made up of 5 × 5 pixels centered on the pixel of interest, and the 5 × 5 pixel reference block centered on a pixel at a position shifted five pixels to the left side from the pixel of interest, extracted corresponding to 0 degrees to 18.4 degrees and 161.6 degrees to 180.0 degrees.

The estimated error calculating unit 462-1 then obtains the sum of the absolute values of difference that have been calculated, and supplies the sum of the absolute values of difference to the smallest error angle selecting unit 463 as correlation information indicating correlation.

The estimated error calculating unit 462-2 calculates the absolute value of difference between the pixel values with regard to the block of interest made up of 5 × 5 pixels and the two 5 × 5 reference pixel blocks extracted corresponding to the range of 18.4 degrees to 33.7 degrees, and further calculates sum of the absolute values of difference that have been calculated. The estimated error calculating unit 462-1 supplies the sum of the absolute values of difference that has been calculated to the smallest error angle selecting unit 463 as correlation information indicating correlation.

In the same way, the estimated error calculating unit 462-3 through estimated error calculating unit 462-8 calculate the absolute value of difference between the pixel values with regard to the block of interest made up of 5 × 5 pixels and the two 5 × 5 pixel reference blocks extracted corresponding to the predetermined angle ranges, and further calculate sum of the absolute values of difference that have been calculated. The estimated error calculating unit 462-3 through estimated error calculating unit 462-8 each supply the sum of the absolute values of difference to the smallest error angle selecting unit 463 as correlation information indicating correlation.

The smallest error angle selecting unit 463 detects, as the data continuity angle, the angle corresponding to the two reference blocks at the reference block position where, of the sums of the absolute values of difference of pixel values serving as correlation information supplied from the estimated error calculating unit 462-1 through estimated error calculating unit 462-8, the smallest value indicating the strongest correlation has been obtained, and outputs data continuity information indicating the detected angle.

Now, description will be made regarding the relationship between the position of the reference blocks and the range of angle of data continuity.

In a case of approximating an approximation function f(x) for approximating actual world signals with an n-order one-dimensional polynomial, the approximation function f(x) can be expressed by Expression (30).

$$f(x) = w_0 x^n + w_1 x^{n-1} + \cdots + w_{n-1} x + w_n$$

$$= \sum_{i=0}^{n} w_i x^{n-i}$$

$$\cdots (30)$$

In the event that the waveform of the signal of the actual world 1 approximated by the approximation function f(x) has a certain gradient (angle) as to the spatial direction Y, the approximation function (x, y) for approximating actual world 1 signals is expressed by Expression (31) which has been obtained by taking x in Expression (30) as x + γy.

$$f(x, y) = w_0(x+\gamma y)^n + w_1(x+\gamma y)^{n-1} + \cdots + w_{n-1}(x+\gamma y) + w_n$$

$$= \sum_{i=0}^{n} w_i(x+\gamma y)^{n-i}$$

$$\ldots(31)$$

$\gamma$ represents the ratio of change in position in the spatial direction X as to the change in position in the spatial direction Y. Hereafter, $\gamma$ will also be called amount of shift.

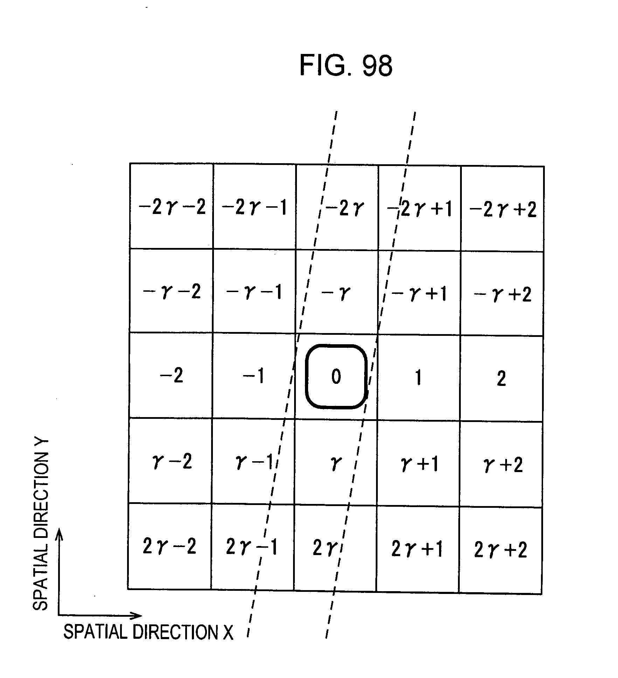

Fig. 98 is a diagram illustrating the distance to a straight line having an angle $\theta$ in the spatial direction X from the position of surrounding pixels of the pixel of interest in a case wherein the distance in the spatial direction X between the position of the pixel of interest and the straight line having the angle $\theta$ is 0, i.e., wherein the straight line passes through the pixel of interest. Here, the position of the pixel is the center of the pixel. Also, in the event that the position is to the left side of the straight line, the distance between the position and the straight line is indicated by a negative value, and in the event that the position is to the right side of the straight line, is indicated by a positive value.

For example, the distance in the spatial direction X between the position of the pixel adjacent to the pixel of interest on the right side, i.e., the position where the coordinate x in the spatial direction X increases by 1, and the straight line having the angle $\theta$, is 1, and the distance in the spatial direction X between the position of the pixel adjacent to the pixel of interest on the left side, i.e., the position where the coordinate x in the spatial direction X decreases by 1, and the straight line having the angle $\theta$, is -1. The distance in the spatial direction X between the position of the pixel adjacent to the pixel of interest above, i.e., the position where the coordinate y in the spatial direction Y increases by 1, and the straight line having the angle $\theta$, is -$\gamma$, and the distance in the spatial direction X between the position of the pixel adjacent to the pixel of interest below, i.e., the position where the coordinate y in the spatial direction Y decreases by 1, and the straight line having the angle $\theta$, is $\gamma$.

In the event that the angle $\theta$ exceeds 45 degrees but is smaller than 90 degrees, and the amount of shift $\gamma$ exceeds 0 but is smaller than 1, the relational expression of $\gamma = 1/\tan\theta$ holds between the amount of shift $\gamma$ and the angle $\theta$. Fig, 99 is a diagram illustrating the relationship between the amount of shift $\gamma$ and the angle $\theta$.

Now, let us take note of the change in distance in the spatial direction X between the position of a pixel nearby the pixel of interest, and the straight line which passes through the pixel of interest and has the angle $\theta$, as to change in the amount of shift $\gamma$.

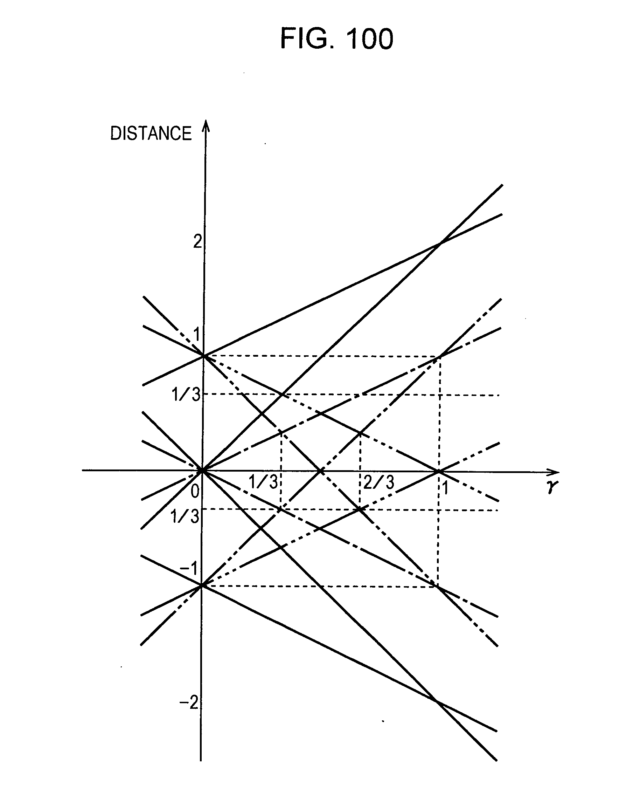

Fig. 100 is a diagram illustrating the distance in the spatial direction X between the position of a pixel nearby the pixel of interest and the straight line which passes through the pixel of interest and has the angle $\theta$, as to the amount of shift $\gamma$. In Fig. 100, the single-dot broken line which heads toward the upper right indicates the distance in the spatial direction X between the position of a pixel adjacent to the pixel of interest on the bottom side, and the straight line, as to the amount of shift $\gamma$. The single-dot broken line which heads toward the lower left indicates the distance in the spatial direction X between the position of a pixel adjacent to the pixel of interest on the top side, and the straight line, as to the amount of shift $\gamma$.

In Fig. 100, the two-dot broken line which heads toward the upper right indicates the distance in the spatial direction X between the position of a pixel two pixels below the pixel of interest and one to the left, and the straight line, as to the amount of shift $\gamma$; the two-dot broken line which heads toward the lower left indicates the distance in the spatial direction X between the position of a pixel two pixels above the pixel of interest and one to the right, and the straight line, as to the amount of shift $\gamma$.

In Fig. 100, the three-dot broken line which heads toward the upper right indicates the distance in the spatial direction X between the position of a pixel one pixel below the pixel of interest and one to the left, and the straight line, as to the amount of shift $\gamma$; the three -dot broken line which heads toward the lower left indicates the distance in the spatial direction X between the position of a pixel one pixel above the pixel of interest and one to the right, and the straight line, as to the amount of shift $\gamma$.

The pixel with the smallest distance as to the amount of shift $\gamma$ can be found from Fig. 100.

That is to say, in the event that the amount of shift $\gamma$ is 0 through 1/3, the distance to the straight line is minimal from a pixel adjacent to the pixel of interest on the top side and from a pixel adjacent to the pixel of interest on the bottom side. That is to say, in the event that the angle $\theta$ is 71.6 degrees to 90 degrees, the distance to the straight line is minimal from the pixel adjacent to the pixel of interest on the top side and from the pixel adjacent to the pixel of interest on the bottom side.

In the event that the amount of shift $\gamma$ is 1/3 through 2/3, the distance to the straight line is minimal from a pixel two pixels above the pixel of interest and one to the right and from a pixel two pixels below the pixel of interest and one to the left. That is to say, in the event that the angle θ is 56.3 degrees to 71.6 degrees, the distance to the straight line is minimal from the pixel two pixels above the pixel of interest and one to the right and from a pixel two pixels below the pixel of interest and one to the left.

In the event that the amount of shift γ is 2/3 through 1, the distance to the straight line is minimal from a pixel one pixel above the pixel of interest and one to the right and from a pixel one pixel below the pixel of interest and one to the left. That is to say, in the event that the angle θ is 45 degrees to 56.3 degrees, the distance to the straight line is minimal from the pixel one pixel above the pixel of interest and one to the right and from a pixel one pixel below the pixel of interest and one to the left.

The relationship between the straight line in a range of angle θ from 0 degrees to 45 degrees and a pixel can also be considered in the same way.

The pixels shown in Fig. 98 can be replaced with the block of interest and reference block, to consider the distance in the spatial direction X between the reference block and the straight line.

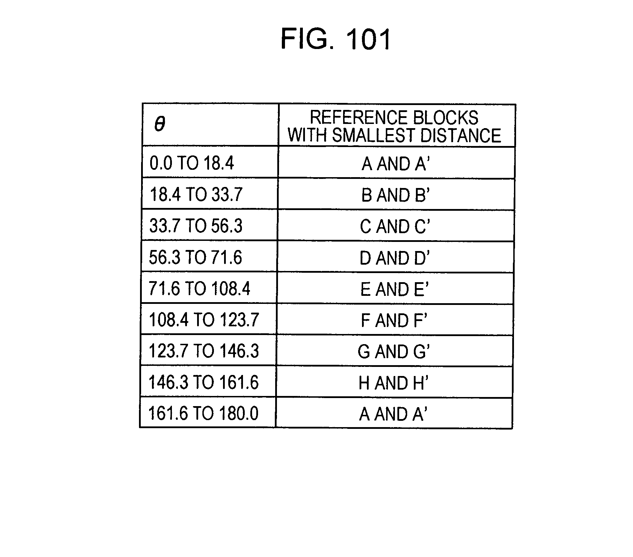

Fig. 101 shows the reference blocks wherein the distance to the straight line which passes through the pixel of interest and has an angle θ as to the axis of the spatial direction X is the smallest.

A through H and A' through H' in Fig. 101 represent the reference blocks A through H and A' through H' in Fig. 96.

That is to say, of the distances in the spatial direction X between a straight line having an angle θ which is any of 0 degrees through 18.4 degrees and 161.6 degrees through 180.0 degrees which passes through the pixel of interest with the axis of the spatial direction X as a reference, and each of the reference blocks A through H and A' through H', the distance between the straight line and the reference blocks A and A' is the smallest. Accordingly, following reverse logic, in the event that the correlation between the block of interest and the reference blocks A and A' is the greatest, this means that a certain feature is repeatedly manifested in the direction connecting the block of interest and the reference blocks A and A', so it can be said that the angle of data continuity is within the ranges of 0 degrees through 18.4 degrees and 161.6 degrees through 180.0 degrees.

Of the distances in the spatial direction X between a straight line having an angle θ which is any of 18.4 degrees through 33.7 degrees which passes through the pixel of interest with the axis of the spatial direction X as a reference, and each of the reference blocks A through H and A' through H', the distance between the straight line and the reference blocks B and B' is the smallest. Accordingly, following reverse logic, in the event that the correlation between the block of interest and the reference blocks B and B' is the greatest, this means that a certain feature is repeatedly manifested in the direction connecting the block of interest and the reference blocks B and B', so it can be said that the angle of data continuity is within the range of 18.4 degrees through 33.7 degrees.

Of the distances in the spatial direction X between a straight line having an angle θ which is any of 33.7 degrees through 56.3 degrees which passes through the pixel of interest with the axis of the spatial direction X as a reference, and each of the reference blocks A through H and A' through H', the distance between the straight line and the reference blocks C and C' is the smallest. Accordingly, following reverse logic, in the event that the correlation between the block of interest and the reference blocks C and C' is the greatest, this means that a certain feature is repeatedly manifested in the direction connecting the block of interest and the reference blocks C and C', so it can be said that the angle of data continuity is within the range of 33.7 degrees through 56.3 degrees.

Of the distances in the spatial direction X between a straight line having an angle θ which is any of 56.3 degrees through 71.6 degrees which passes through the pixel of interest with the axis of the spatial direction X as a reference, and each of the reference blocks A through H and A' through H', the distance between the straight line and the reference blocks D and D' is the smallest. Accordingly, following reverse logic, in the event that the correlation between the block of interest and the reference blocks D and D' is the greatest, this means that a certain feature is repeatedly manifested in the direction connecting the block of interest and the reference blocks D and D', so it can be said that the angle of data continuity is within the range of 56.3 degrees through 71.6 degrees.

Of the distances in the spatial direction X between a straight line having an angle θ which is any of 71.6 degrees through 108.4 degrees which passes through the pixel of interest with the axis of the spatial direction X as a reference, and each of the reference blocks A through H and A' through H', the distance between the straight line and the reference blocks E and E' is the smallest. Accordingly, following reverse logic, in the event that the correlation between the block of interest and the reference blocks E and E' is the greatest, this means that a certain feature is repeatedly manifested in the direction connecting the block of interest and the reference blocks E and E', so it can be said that the angle of data continuity is within the range of 71.6 degrees through 108.4 degrees.

Of the distances in the spatial direction X between a straight line having an angle θ which is any of 108.4 degrees through 123.7 degrees which passes through the pixel of interest with the axis of the spatial direction X as a reference, and each of the reference blocks A through H and A' through H', the distance between the straight line and the reference blocks F and F' is the smallest. Accordingly, following reverse logic, in the event that the correlation between the block of interest and the reference blocks F and F' is the greatest, this means that a certain feature is repeatedly manifested in the direction connecting the block of interest and the reference blocks F and F', so it can be said that the angle of data continuity is within the range of 108.4 degrees through 123.7 degrees.

Of the distances in the spatial direction X between a straight line having an angle θ which is any of 123.7 degrees through 146.3 degrees which passes through the pixel of interest with the axis of the spatial direction X as a reference, and each of the reference blocks A through H and A' through H', the distance between the straight line and the reference blocks G and G' is the smallest. Accordingly, following reverse logic, in the event that the correlation between the block of interest and the reference blocks G and G' is the greatest, this means that a certain feature is repeatedly manifested in the direction connecting the block of interest and the reference blocks G and G', so it can be said that the angle of data continuity is within the range of 123.7 degrees through 146.3 degrees.

Of the distances in the spatial direction X between a straight line having an angle θ which is any of 146.3 degrees through 161.6 degrees which passes through the pixel of interest with the axis of the spatial direction X as a reference, and each of the reference blocks A through H and A' through H', the distance between the straight line and the reference blocks H and H' is the smallest. Accordingly, following reverse logic, in the event that the correlation between the block of interest and the reference blocks H and H' is the greatest, this means that a certain feature is repeatedly manifested in the direction connecting the block of interest and the reference blocks H and H', so it can be said that the angle of data continuity is within the range of 146.3 degrees through 161.6 degrees.

Thus, the data continuity detecting unit 101 can detect the data continuity angle based on the correlation between the block of interest and the reference blocks.

Note that with the data continuity detecting unit 101 of which the configuration is shown in Fig. 94, an arrangement may be made wherein the angle range of data continuity is output as data continuity information, or an arrangement may be made wherein a representative value representing the range of angle of the data continuity is output as data continuity information. For example, the median value of the range of angle of the data continuity may serve as a representative value.

Further, with the data continuity detecting unit 101 of which the configuration is shown in Fig. 94, using the correlation between the block of interest and the reference blocks with the greatest correlation allows the angle range of data continuity to be detected to be halved, i.e., for the resolution of the angle of data continuity to be detected to be doubled.

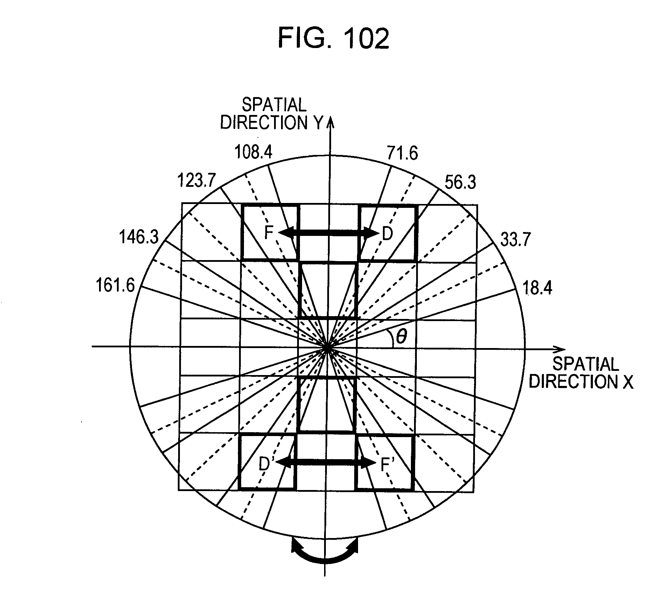

For example, when the correlation between the block of interest and the reference blocks E and E' is the greatest, the smallest error angle selecting unit 463 compares the correlation of the reference blocks D and D' as to the block of interest with the correlation of the reference blocks F and F' as to the block of interest, as shown in Fig. 102. In the event that the correlation of the reference blocks D and D' as to the block of interest is greater than the correlation of the reference blocks F and F' as to the block of interest, the smallest error angle selecting unit 463 sets the range of 71.6 degrees to 90 degrees for the data continuity angle. Or, in this case, the smallest error angle selecting unit 463 may set 81 degrees for the data continuity angle as a representative value.

In the event that the correlation of the reference blocks F and F' as to the block of interest is greater than the correlation of the reference blocks D and D' as to the block of interest, the smallest error angle selecting unit 463 sets the range of 90 degrees to 108.4 degrees for the data continuity angle. Or, in this case, the smallest error angle selecting unit 463 may set 99 degrees for the data continuity angle as a representative value.

The smallest error angle selecting unit 463 can halve the range of the data continuity angle to be detected for other angle ranges as well, with the same processing.

The technique described with reference to Fig. 102 is also called simplified 16-directional detection.

Thus, the data continuity detecting unit 101 of which the configuration is shown in Fig. 94 can detect the angle of data continuity in narrower ranges, with simple processing.

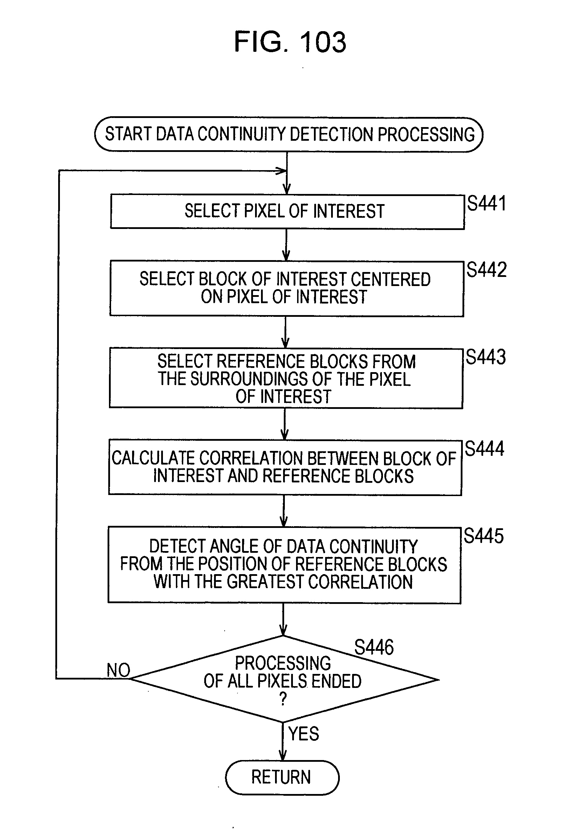

Next, the processing for detecting data continuity with the data continuity detecting unit 101 of which the configuration is shown in Fig. 94, corresponding to the processing in step S101, will be described with reference to the flowchart shown in Fig. 103.

In step S441, the data selecting unit 441 selects the pixel of interest which is a pixel of interest from the input image. For example, the data selecting unit 441 selects the pixel of interest in raster scan order from the input image.

In step S442, the data selecting unit 441 selects a block of interest made up of a predetermined number of pixels centered on the pixel of interest. For example, the data selecting unit 441 selects a block of interest made up of $5 \times 5$ pixels centered on the pixel of interest.

In step S443, the data selecting unit 441 selects reference blocks made up of a predetermined number of pixels at predetermined positions at the surroundings of the pixel of interest. For example, the data selecting unit 441 selects reference blocks made up of $5 \times 5$ pixels centered on pixels at predetermined positions based on the size of the block of interest, for each predetermined angle range based on the pixel of interest and the reference axis.

The data selecting unit 441 supplies the block of interest and the reference blocks to the error estimating unit 442.

In step S444, the error estimating unit 442 calculates the correlation between the block of interest and the reference blocks corresponding to the range of angle, for each predetermined angle range based on the pixel of interest and the reference axis. The error estimating unit 442 supplies the correlation information indicating the calculated correlation to the continuity direction derivation unit 443.

In step S445, the continuity direction derivation unit 443 detects the angle of data continuity in the input image based on the reference axis, corresponding to the image continuity which is the lost actual world 1 light signals, from the position of the reference block which has the greatest correlation as to the block of interest.

The continuity direction derivation unit 443 outputs the data continuity information which indicates the detected data continuity angle.

In step S446, the data selecting unit 441 determines whether or not processing of all pixels has ended, and in the event that determination is made that processing of all pixels has not ended, the flow returns to step S441, a pixel of interest is selected from pixels not yet selected as the pixel of interest, and the above-described processing is repeated.

In step S446, in the event that determination is made that processing of all pixels has ended, the processing ends.

Thus, the data continuity detecting unit 101 of which the configuration is shown in Fig. 94 can detect the data continuity angle in the image data based on the reference axis, corresponding to the lost actual world 1 light signal continuity with easier processing. Also, the data continuity detecting unit 101 of which the configuration is shown in Fig. 94 can detect the angle of data continuity using pixel values of pixels of a relatively narrow range in the input image, so the angle of data continuity can be detected more accurately even in the event that noise and the like is in the input image.

Note that an arrangement may be made with the data continuity detecting unit 101 of which the configuration is shown in Fig. 94, wherein, with regard to a pixel of interest which is the pixel of interest in a frame of interest which is the frame of interest, in addition to extracting a block centered on the pixel of interest and made up of a predetermined number of pixels in the frame of interest, and multiple blocks each made up of a predetermined number of pixels from the surroundings of the pixel of interest, also extracting, from frames previous to or following the frame of interest time-wise, a block centered on a pixel at a position corresponding to the pixel of interest and made up of a predetermined number of pixels, and multiple blocks each made up of a predetermined number of pixels from the surroundings of the pixel centered on the pixel corresponding to the pixel of interest, and detecting the correlation between the block centered on the pixel of interest and blocks in the surroundings thereof space-wise or time-wise, so as to detect the angle of data continuity in the input image in the temporal direction and spatial direction, based on the correlation.

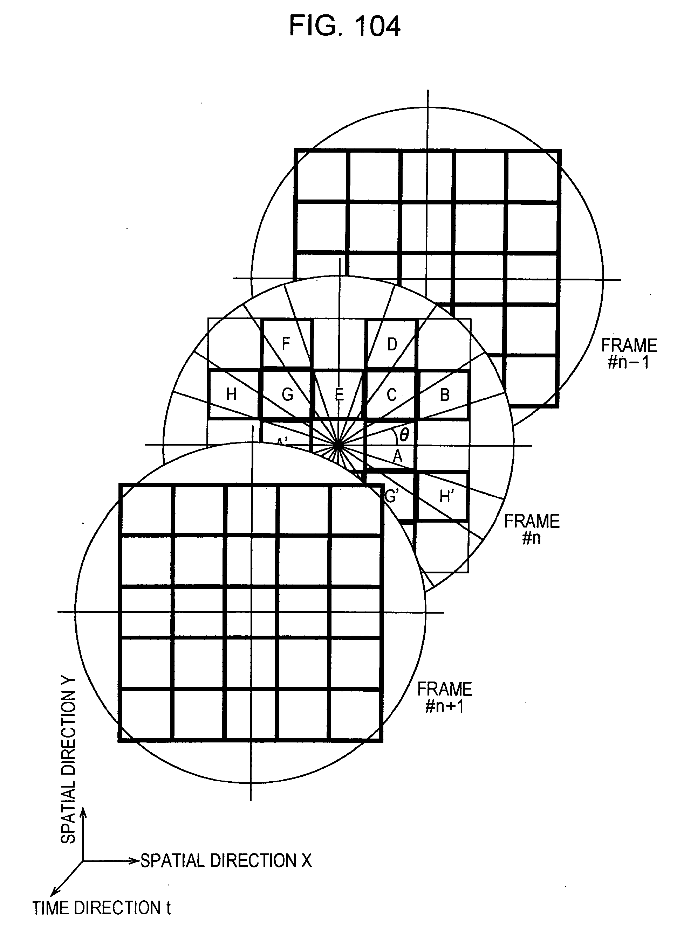

For example, as shown in Fig. 104, the data selecting unit 441 sequentially selects the pixel of interest from the frame #n which is the frame of interest, and extracts from the frame #n a block centered on the pixel of interest and made up of a predetermined number of pixels and multiple blocks each made up of a predetermined number of pixels from the surroundings of the pixel of interest. Also, the data selecting unit 441 extracts from the frame #n-1 and frame #n+1 a block centered on the pixel at a position corresponding to the position of the pixel of interest and made up of a predetermined number of pixels and multiple blocks each made up of a predetermined number of pixels from the surroundings of a pixel at a position corresponding to the pixel of interest. The data selecting unit 441 supplies the extracted blocks to the error estimating unit 442.

The error estimating unit 442 detects the correlation between the block centered on the pixel of interest and the blocks in the surroundings thereof space-wise or time-wise, supplied from the data selecting unit 441, and supplies correlation information indicated the detected correlation to the continuity direction derivation unit 443. Based on the correlation information from the error estimating unit 442, the continuity direction derivation unit 443 detects the angle of data continuity in the input image in the space direction or time direction, corresponding to the lost actual world 1 light signal continuity, from the position of the block in the surroundings thereof space-wise or time-wise which has the greatest correlation, and outputs the data continuity information which indicates the angle.

Also, the data continuity detecting unit 101 can perform data continuity detection processing based on component signals of the input image.

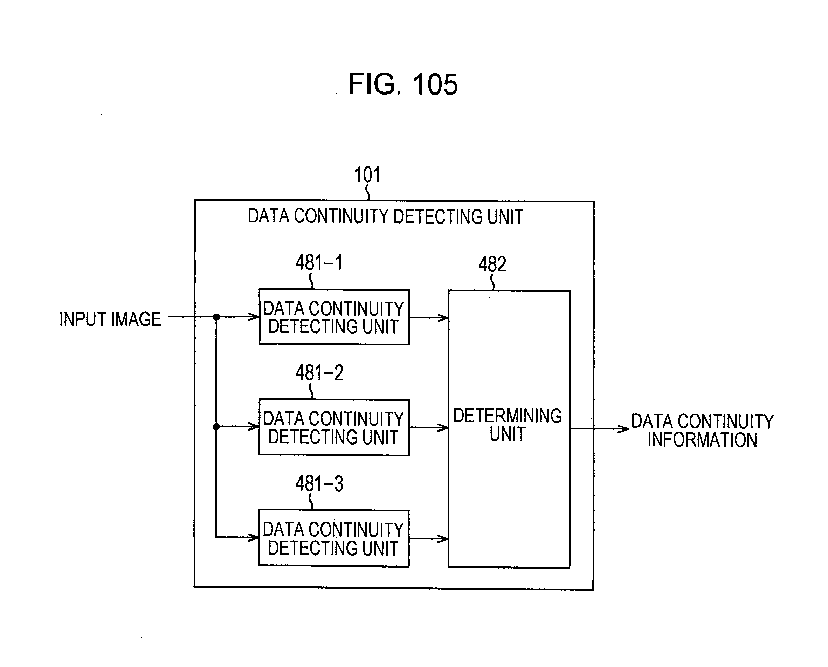

Fig. 105 is a block diagram illustrating the configuration of the data continuity detecting unit 101 for performing data continuity detection processing based on component signals of the input image.

Each of data continuity detecting units 481-1 through 481-3 have the same configuration as the above-described and or later-described data continuity detecting unit 101, and executes the above-described or later-described processing on each component signals of the input image.

The data continuity detecting unit 481-1 detects the data continuity based on the first component signal of the input image, and supplies information indicating the continuity of the data detected from the first component signal to a determining unit 482. For example, the data continuity detecting unit 481-1 detects data continuity based on the brightness signal of the input image, and supplies information indicating the continuity of the data detected from the brightness signal to the determining unit 482.

The data continuity detecting unit 481-2 detects the data continuity based on the second component signal of the input image, and supplies information indicating the continuity of the data detected from the second component signal to the determining unit 482. For example, the data continuity detecting unit 481-2 detects data continuity based on the I signal which is color difference signal of the input image, and supplies information indicating the continuity of the data detected from the I signal to the determining unit 482.

The data continuity detecting unit 481-3 detects the data continuity based on the third component signal of the input image, and supplies information indicating the continuity of the data detected from the third component signal to the determining unit 482. For example, the data continuity detecting unit 481-2 detects data continuity based on the Q signal which is the color difference signal of the input image, and supplies information indicating the continuity of the data detected from the Q signal to the determining unit 482.

The determining unit 482 detects the final data continuity of the input image based on the information indicating data continuity that has been detected from each of the component signals supplied from the data continuity detecting units 481-1 through 481-3, and outputs data continuity information indicating the detected data continuity.

For example, the detecting unit 482 takes as the final data continuity the greatest data continuity of the data continuities detected from each of the component signals supplied from the data continuity detecting units 481-1 through 481-3. Or, the detecting unit 482 takes as the final data continuity the smallest data continuity of the data continuities detected from each of the component signals supplied from the data continuity detecting units 481-1 through 481-3.

Further, for example, the detecting unit 482 takes as the final data continuity the average data continuity of the data continuities detected from each of the component signals supplied from the data continuity detecting units 481-1 through 481-3. The determining unit 482 may be arranged so as to taken as the final data continuity the median (median value) of the data continuities detected from each of the component signals supplied from the data continuity detecting units 481-1 through 481-3.

Also, for example, based on signals externally input, the detecting unit 482 takes as the final data continuity the data continuity specified by the externally input signals of the data continuities detected from each of the component signals supplied from the data continuity detecting units 481-1 through 481-3. The determining unit 482 may be arranged so as to taken as the final data continuity a predetermined data continuity of the data continuities detected from each of the component signals supplied from the data continuity detecting units 481-1 through 481-3.

Moreover, the detecting unit 482 may be arranged so as to determine the final data continuity based on the error obtained in the processing for detecting the data continuity of the component signals supplied from the data continuity detecting units 481-1 through 481-3. The error which can be obtained in the processing for data continuity detection will be described later.

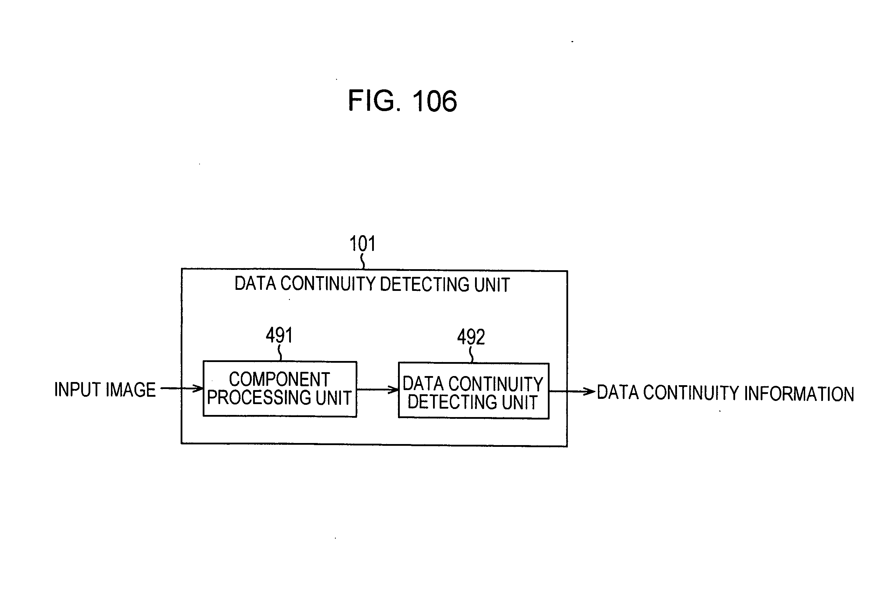

Fig. 106 is a diagram illustrating another configuration of the data continuity detecting unit 101 for performing data continuity detection based on components signals of the input image.

A component processing unit 491 generates one signal based on the component signals of the input image, and supplies this to a data continuity detecting unit 492. For example, the component processing unit 491 adds values of each of the component signals of the input image for a pixel at the same position on the screen, thereby generating a signal made up of the sum of the component signals.

For example, the component processing unit 491 averages the pixel values in each of the component signals of the input image with regard to a pixel at the same position on the screen, thereby generating a signal made up of the average values of the pixel values of the component signals.

The data continuity detecting unit 492 detects the data continuity in the input image, based on the signal input from the component processing unit 491, and outputs data continuity information indicating the detected data continuity.

The data continuity detecting unit 492 has the same configuration as the above-described and or later-described data continuity detecting unit 101, and executes the above-described or later-described processing on the signals supplied from the component processing unit 491.

Thus, the data continuity detecting unit 101 can detect data continuity by detecting the data continuity of the input image based on component signals, so the data continuity can be detected more accurately even in the event that noise and the like is in the input image. For example, the data continuity detecting unit 101 can detect data continuity angle (gradient), mixture ratio, and regions having data continuity more precisely, by detecting data continuity of the input image based on component signals.

Note that the component signals are not restricted to brightness signals and color difference signals, and may be other component signals of other formats, such as RGB signals, YUV signals, and so forth.

As described above, with an arrangement wherein light signals of the real world are projected, the angle as to the reference axis is detected of data continuity corresponding to the continuity of real world light signals that has dropped out from the image data having continuity of real world light signals of which a part has dropped out, and the light signals are estimated by estimating the continuity of the real world light signals that has dropped out based on the detected angle, processing results which are more accurate and more precise can be obtained.

Also, with an arrangement wherein multiple sets are extracted of pixel sets made up of a predetermined number of pixels for each angle based on a pixel of interest which is the pixel of interest and the reference axis in image data obtained by light signals of the real world being projected on multiple detecting elements in which a part of the continuity of the real world light signals has dropped out, the correlation of the pixel values of pixels at corresponding positions in multiple sets which have been extracted for each angle is detected, the angle of data continuity in the image data, based on the reference axis, corresponding to the real world light signal continuity which has dropped out, is detected based on the detected correlation and the light signals are estimated by estimating the continuity of the real world light signals that has dropped out, based on the detected angle of the data continuity as to the reference axis in the image data, processing results which are more accurate and more precise as to the real world events can be obtained.

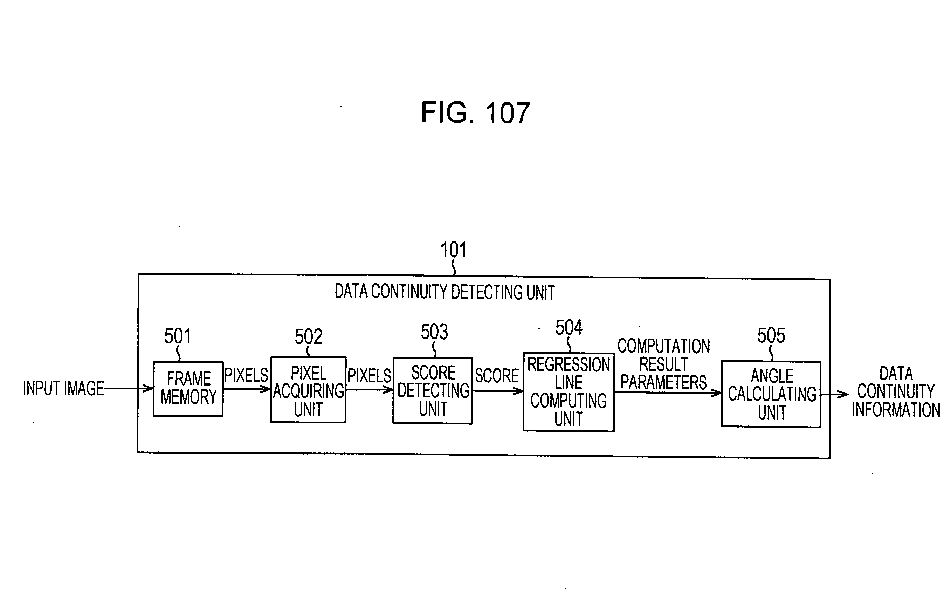

Fig. 107 is a block diagram illustrating yet another configuration of the data continuity detecting unit 101.

With the data continuity detecting unit 101 shown in Fig. 107, light signals of the real world are projected, a region, corresponding to a pixel of interest which is the pixel of interest in the image data of which a part of the continuity of the real world light signals has dropped out, is selected, and a score based on correlation value is set for pixels wherein the correlation value of the pixel value of the pixel of interest and the pixel value of a pixel belonging to a selected region is equal to or greater than a threshold value, thereby detecting the score of pixels belonging to the region, and a regression line is detected based on the detected score, thereby detecting the data continuity of the image data corresponding to the continuity of the real world light signals which has dropped out.

Frame memory 501 stores input images in increments of frames, and supplies the pixel values of the pixels making up stored frames to a pixel acquiring unit 502. The frame memory 501 can supply pixel values of pixels of frames of an input image which is a moving image to the pixel acquiring unit 502, by storing the current frame of the input image in one page, supplying the pixel values of the pixel of the frame one frame previous (in the past) as to the current frame stored in another page to the pixel acquiring unit 502, and switching pages at the switching point-in-time of the frames of the input image.

The pixel acquiring unit 502 selects the pixel of interest which is a pixel of interest based on the pixel values of the pixels supplied from the frame memory 501, and selects a region made up of a predetermined number of pixels corresponding to the selected pixel of interest. For example, the pixel acquiring unit 502 selects a region made up of $5 \times 5$ pixels centered on the pixel of interest.

The size of the region which the pixel acquiring unit 502 selects does not restrict the present invention.

The pixel acquiring unit 502 acquires the pixel values of the pixels of the selected region, and supplies the pixel values of the pixels of the selected region to a score detecting unit 503.

Based on the pixel values of the pixels of the selected region supplied from the pixel acquiring unit 502, the score detecting unit 503 detects the score of pixels belonging to the region, by setting a score based on correlation for pixels wherein the correlation value of the pixel value of the pixel of interest and the pixel value of a pixel belonging to the selected region is equal to or greater than a threshold value. The details of processing for setting score based on correlation at the score detecting unit 503 will be described later.

The score detecting unit 503 supplies the detected score to a regression line computing unit 504.

The regression line computing unit 504 computes a regression line based on the score supplied from the score detecting unit 503. For example, the regression line computing unit 504 computes a regression line based on the score supplied from the score detecting unit 503. Also, the regression line computing unit 504 computes a regression line which is a predetermined curve, based on the score supplied from the score detecting unit 503. The regression line computing unit 504 supplies computation result parameters indicating the computed regression line and the results of computation to an angle calculating unit 505. The computation results which the computation parameters indicate include later-described variation and covariation.

The angle calculating unit 505 detects the continuity of the data of the input image which is image data, corresponding to the continuity of the light signals of the real world that has dropped out, based on the regression line indicated by the computation result parameters supplied from the regression line computing unit 504. For example, based on the regression line indicated by the computation result parameters supplied from the regression line computing unit 504, the angle calculating unit 505 detects the angle of data continuity in the input image based on the reference axis, corresponding to the dropped actual world 1 light signal continuity. The angle calculating unit 505 outputs data continuity information indicating the angle of the data continuity in the input image based on the reference axis.

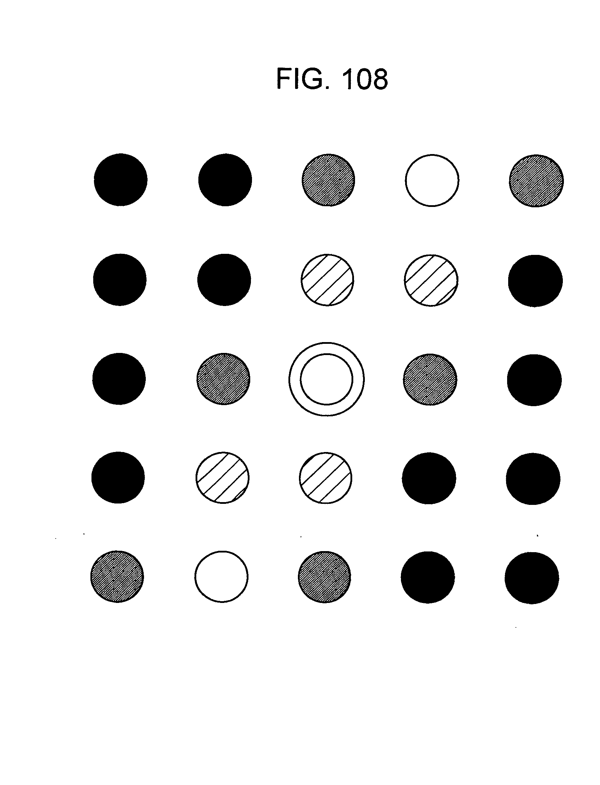

The angle of the data continuity in the input image based on the reference axis will be described with reference to Fig. 108 through Fig. 110.

In Fig. 108, each circle represents a single pixel, and the double circle represents the pixel of interest. The colors of the circles schematically represent the pixel values of the pixels, with the lighter colors indicating greater pixel values. For example, black represents a pixel value of 30, while white indicates a pixel value of 120.

In the event that a person views the image made up of the pixels shown in Fig. 108, the person who sees the image can recognize that a straight line is extending in the diagonally upper right direction.

Upon inputting an input image made up of the pixels shown in Fig. 108, the data continuity detecting unit 101

of which the configuration is shown in Fig. 107 detects that a straight line is extending in the diagonally upper right direction.

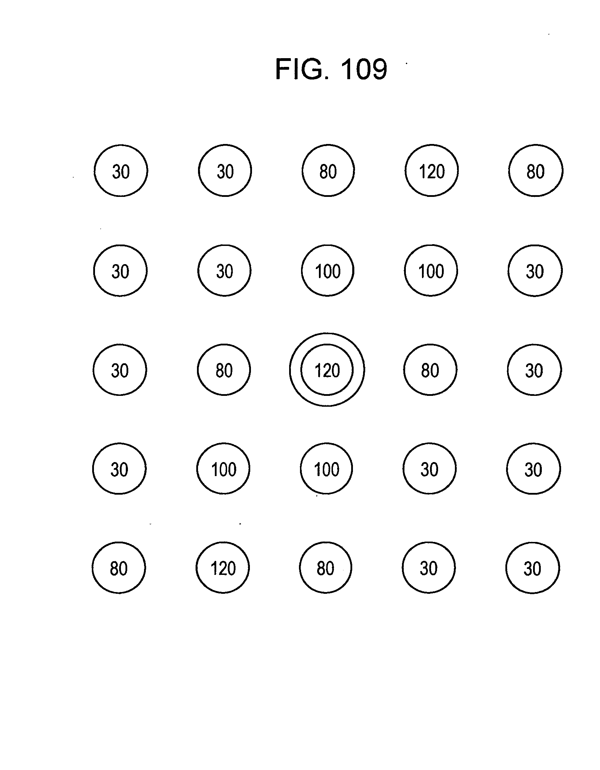

Fig. 109 is a diagram illustrating the pixel values of the pixels shown in Fig. 108 with numerical values. Each circle represents one pixel, and the numerical values in the circles represent the pixel values.

For example, the pixel value of the pixel of interest is 120, the pixel value of the pixel above the pixel of interest is 100, and the pixel value of the pixel below the pixel of interest is 100. Also, the pixel value of the pixel to the left of the pixel of interest is 80, and the pixel value of the pixel to the right of the pixel of interest is 80. In the same way, the pixel value of the pixel to the lower left of the pixel of interest is 100, and the pixel value of the pixel to the upper right of the pixel of interest is 100. The pixel value of the pixel to the upper left of the pixel of interest is 30, and the pixel value of the pixel to the lower right of the pixel of interest is 30.

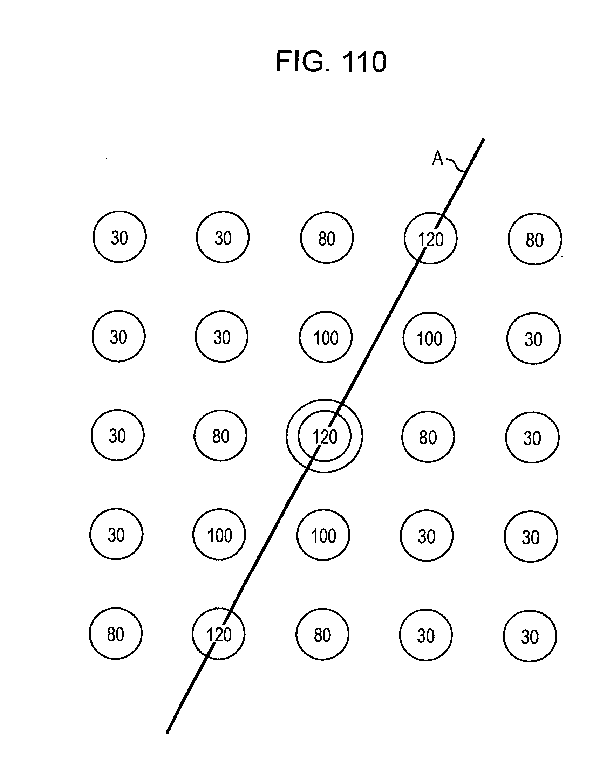

The data continuity detecting unit 101 of which the configuration is shown in Fig. 107 plots a regression line A as to the input image shown in Fig. 109, as shown in Fig. 110.

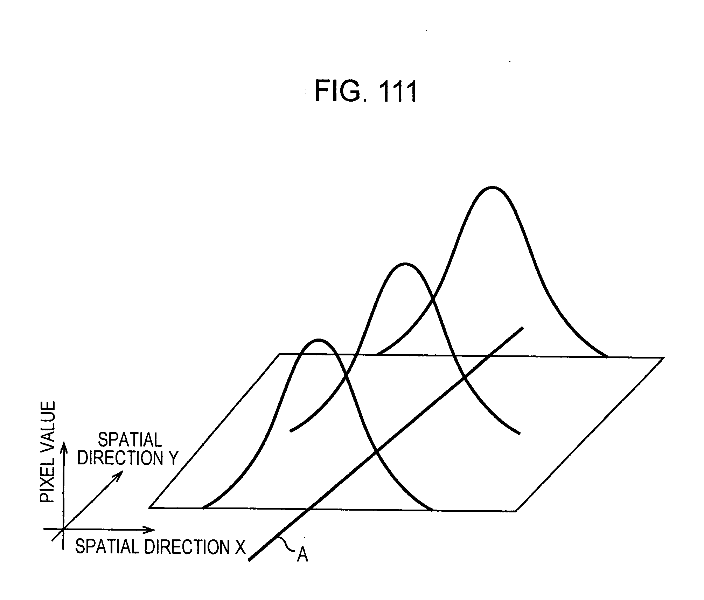

Fig. 111 is a diagram illustrating the relation between change in pixel values in the input image as to the position of the pixels in the spatial direction, and the regression line A. The pixel values of pixels in the region having data continuity change in the form of a crest, for example, as shown in Fig. 111.

The data continuity detecting unit 101 of which the configuration is shown in Fig. 107 plots the regression line A by least-square, weighted with the pixel values of the pixels in the region having data continuity. The regression line A obtained by the data continuity detecting unit 101 represents the data continuity in the neighborhood of the pixel of interest.

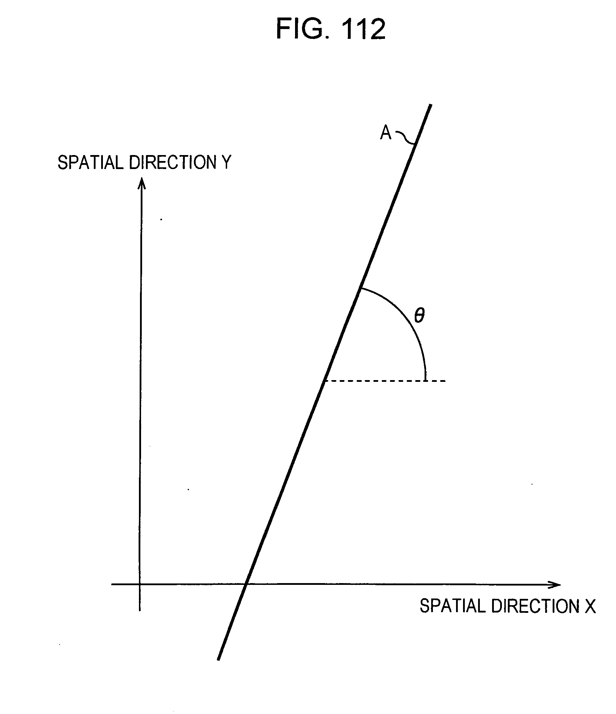

The angle of data continuity in the input image based on the reference axis is detected by obtaining the angle θ between the regression line A and an axis indicating the spatial direction X which is the reference axis for example, as shown in Fig. 112.

Next, a specific method for calculating the regression line with the data continuity detecting unit 101 of which the configuration is shown in Fig. 107.

From the pixel values of pixels in a region made up of 9 pixels in the spatial direction X and 5 pixels in the spatial direction Y for a total of 45 pixels, centered on the pixel of interest, supplied from the pixel acquiring unit 502, for example, the score detecting unit 503 detects the score corresponding to the coordinates of the pixels belonging to the region.

For example, the score detecting unit 503 detects the score $L_{i,j}$ of the coordinates $(x_i, y_j)$ belonging to the region, by calculating the score with the computation of Expression (32).

$$L_{i,j} = \begin{cases} \exp\left(0.050\left(255 - |P_{0,0} - P_{i,j}|\right) - 1\right) & (|P_{0,0} - P_{i,j}|) \le Th \\ 0 & (|P_{0,0} - P_{i,j}|) > Th \end{cases}$$

$$\ldots (32)$$

In Expression (32), $P_{0,0}$ represents the pixel value of the pixel of interest, and $P_{i,j}$ represents the pixel values of the pixel at the coordinates $(x_i, y_j)$. Th represents a threshold value.

i represents the order of the pixel in the spatial direction X in the region wherein $1 \le i \le k$. j represents the order of the pixel in the spatial direction Y in the region wherein $1 \le j \le l$.

k represents the number of pixels in the spatial direction X in the region, and l represents the number of pixels in the spatial direction Y in the region. For example, in the event of a region made up of 9 pixels in the spatial direction X and 5 pixels in the spatial direction Y for a total of 45 pixels, K is 9 and l is 5.

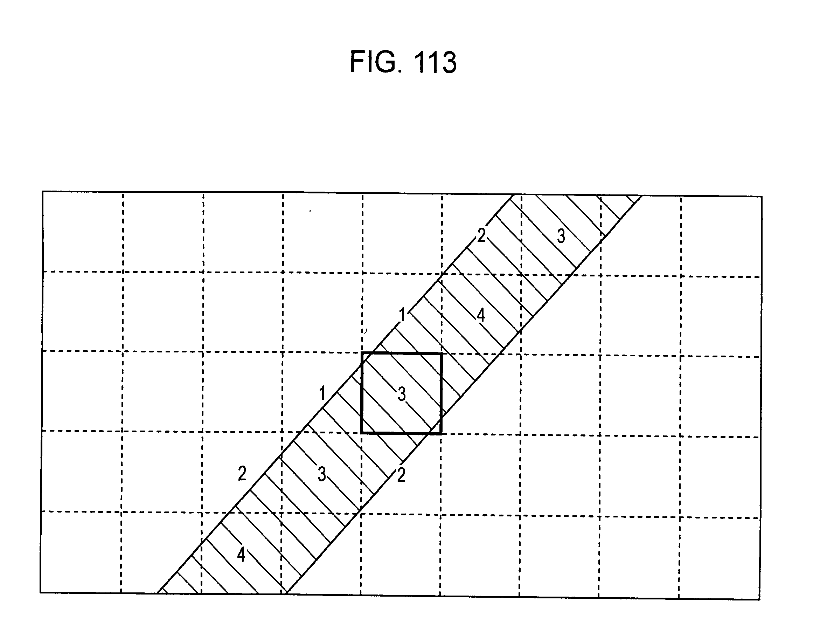

Fig. 113 is a diagram illustrating an example of a region acquired by the pixel acquiring unit 502. In Fig. 113, the dotted squares each represent one pixel.

For example, as shown in Fig. 113, in the event that the region is made up of 9 pixels centered on the pixel of interest in the spatial direction X, and is made up of 5 pixels centered on the pixel of interest in the spatial direction Y, with the coordinates (x, y) of the pixel of interest being (0, 0), the coordinates (x, y) of the pixel at the upper left of the region are (-4, 2), the coordinates (x, y) of the pixel at the upper right of the region are (4, 2), the coordinates (x, y) of the pixel at the lower left of the region are (-4, -2), and the coordinates (x, y) of the pixel at the lower right of the region are (4, -2).

The order i of the pixels at the left side of the region in the spatial direction X is 1, and the order i of the pixels at the right side of the region in the spatial direction X is 9. The order j of the pixels at the lower side of the region in the spatial direction Y is 1, and the order j of the pixels at the upper side of the region in the spatial direction Y is 5.

That is to say, with the coordinates $(x_5, y_3)$ of the pixel of interest as (0, 0), the coordinates $(x_1, y_5)$ of the pixel

at the upper left of the region are (-4, 2), the coordinates $(x_9, y_5)$ of the pixel at the upper right of the region are (4, 2), the coordinates $(x_1, y_1)$ of the pixel at the lower left of the region are (-4, -2), and the coordinates $(x_9, y_1)$ of the pixel at the lower right of the region are (4, -2).

The score detecting unit 503 calculates the absolute values of difference of the pixel value of the pixel of interest and the pixel values of the pixels belonging to the region as a correlation value with Expression (32), so this is not restricted to a region having data continuity in the input image where a fine line image of the actual world 1 has been projected, rather, score can be detected representing the feature of spatial change of pixel values in the region of the input image having two-valued edge data continuity, wherein an image of an object in the actual world 1 having a straight edge and which is of a monotone color different from that of the background has been projected.

Note that the score detecting unit 503 is not restricted to the absolute values of difference of the pixel values of pixels, and may be arranged to detect the score based on other correlation values such as correlation coefficients and so forth.

Also, the reason that an exponential function is applied in Expression (32) is to exaggerate difference in score as to difference in pixel values, and an arrangement may be made wherein other functions are applied.

The threshold value Th may be an optional value. For example, the threshold value Th may be 30.

Thus, the score detecting unit 503 sets a score to pixels having a correlation value with a pixel value of a pixel belonging to a selected region, based on the correlation value, and thereby detects the score of the pixels belonging to the region.

Also, the score detecting unit 503 performs the computation of Expression (33), thereby calculating the score, whereby the score $L_{i,j}$ of the coordinates $(x_i, y_j)$ belonging to the region is detected.

$$L_{i,j} = \begin{cases} 255 - |P_{0,0} - P_{i,j}| & (|P_{0,0} - P_{i,j}|) \leq Th \\ 0 & (|P_{0,0} - P_{i,j}|) > Th \end{cases}$$

$$\ldots (33)$$

With the score of the coordinates $(x_i, y_j)$ as $L_{i,j}$ ($1 \leq i \leq k$, $1 \leq j \leq l$), the sum $q_i$ of the score $L_{i,j}$ of the coordinate $x_i$ in the spatial direction Y is expressed by Expression (34), and the sum $h_j$ of the score $L_{i,j}$ of the coordinate $y_j$ in the spatial direction X is expressed by Expression (35).

$$q_i = \sum_{j=1}^{l} L_{i,j}$$

$$\ldots (34)$$

$$h_j = \sum_{i=1}^{k} L_{i,j}$$

$$\ldots (35)$$

The summation u of the scores is expressed by Expression (36).

$$u = \sum_{i=1}^{k} \sum_{j=1}^{l} L_{i,j}$$

$$= \sum_{i=1}^{k} q_i$$

$$= \sum_{j=1}^{l} h_j$$

$$\ldots (36)$$

In the example shown in Fig. 113, the score $L_{5,3}$ of the coordinate of the pixel of interest is 3, the score $L_{5,4}$ of the coordinate of the pixel above the pixel of interest is 1, the score $L_{6,4}$ of the coordinate of the pixel to the upper right of the pixel of interest is 4, the score $L_{6,5}$ of the coordinate of the pixel two pixels above and one pixel to the right of the pixel of interest is 2, and the score $L_{7,5}$ of the coordinate of the pixel two pixels above and two pixels to the right of the pixel of interest is 3. Also, the score $L_{5,2}$ of the coordinate of the pixel below the pixel of interest is 2, the score $L_{4,3}$ of the coordinate of the pixel to the left of the pixel of interest is 1, the score $L_{4,2}$ of the coordinate of the pixel to the lower left of the pixel of interest is 3, the score $L_{3,2}$ of the coordinate of the pixel one pixel below and two pixels to the left of the pixel of interest is 2, and the score $L_{3,1}$ of the coordinate of the pixel two pixels below and two pixels to the left of the pixel of interest is 4. The score of all other pixels in the region shown in Fig. 113 is 0, and description of pixels which have a score of 0 are omitted from Fig. 113.

In the region shown in Fig. 113, the sum $q_1$ of the scores in the spatial direction Y is 0, since all scores L wherein i is 1 are 0, and $q_2$ is 0 since all scores L wherein i is 2 are 0. $q_3$ is 6 since $L_{3,2}$ is 2 and $L_{3,1}$ is 4. In the same way, $q_4$ is 4, $q_5$ is 6, $q_6$ is 6, $q_7$ is 3, $q_8$ is 0, and $q_9$ is 0.

In the region shown in Fig. 113, the sum $h_1$ of the scores in the spatial direction X is 4, since $L_{3,1}$ is 4. $h_2$ is 7 since $L_{3,2}$ is 2, $L_{4,2}$ is 3, and $L_{5,2}$ is 2. In the same way, $h_3$ is 4, $h_4$ is 5, and $h_5$ is 5.

In the region shown in Fig. 113, the summation u of scores is 25.

The sum $T_x$ of the results of multiplying the sum $q_i$ of the scores $L_{i,j}$ in the spatial direction Y by the coordinate $x_i$ is shown in Expression (37).

$$T_x = q_1 x_1 + q_2 x_2 + \cdots + q_k x_k$$

$$= \sum_{i=1}^{k} q_i x_i$$

$$\ldots (37)$$

The sum $T_y$ of the results of multiplying the sum $h_j$ of the scores $L_{i,j}$ in the spatial direction X by the coordinate $y_j$ is shown in Expression (38).

$$T_y = h_1 y_1 + h_2 y_2 + \cdots + h_l y_l$$

$$= \sum_{j=1}^{l} h_j y_j$$

$$\ldots (38)$$

For example, in the region shown in Fig. 113, $q_1$ is 0 and $x_1$ is -4, so $q_1 x_1$ is 0, and $q_2$ is 0 and $x_2$ is -3, so $q_2 x_2$ is 0. In the same way, $q_3$ is 6 and $x_3$ is -2, so $q_3 x_3$ is -12; $q_4$ is 4 and $x_4$ is -1, so $q_4 x_4$ is -4; $q_5$ is 6 and $x_5$ is 0, so $q_5 x_5$ is 0; $q_6$ is 6 and $x_6$ is 1, so $q_6 x_6$ is 6; $q_7$ is 3 and $x_7$ is 2, so $q_7 x_7$ is 6; $q_8$ is 0 and $x_8$ is 3, so $q_8 x_8$ is 0; and $q_9$ is

0 and $x_9$ is 4, so $q_9 x_9$ is 0. Accordingly, $T_x$ which is the sum of $q_1 x_1$ through $q_9 x_9$ is -4.

For example, in the region shown in Fig. 113, $h_1$ is 4 and $y_1$ is -2, so $h_1 y_1$ is -8, and $h_2$ is 7 and $y_2$ is -1, so $h_2 y_2$ is -7. In the same way, $h_3$ is 4 and $y_3$ is 0, so $h_3 y_3$ is 0; $h_4$ is 5 and $y_4$ is 1, so $h_4 y_4$ is 5; and $h_5$ is 5 and $y_5$ is 2, so $h_5 y_5$ is 10. Accordingly, $T_y$ which is the sum of $h_1 y_1$ through $h_5 y_5$ is 0.

Also, $Q_i$ is defined as follows.

$$Q_i = \sum_{j=1}^{l} L_{i,j} y_j$$

$$\ldots (39)$$

The variation $S_x$ of x is expressed by Expression (40).

$$S_x = \sum_{i=1}^{k} q_i x_i^2 - T_x^2 / u$$

$$\ldots (40)$$

The variation $S_y$ of y is expressed by Expression (41).

$$S_y = \sum_{j=1}^{l} h_j y_j^2 - T_y^2 / u$$

$$\ldots (41)$$

The covariation $S_{xy}$ is expressed by Expression (42).

$$S_{xy} = \sum_{i=1}^{k} \sum_{j=1}^{l} L_{i,j} x_i y_j - T_x T_y / u$$

$$= \sum_{i=1}^{k} Q_i x_i - T_x T_y / u$$

$$\ldots (42)$$

Let us consider obtaining the primary regression line shown in Expression (43).

$$y = ax + b \qquad (43)$$

The gradient a and intercept b can be obtained as follows by the least-square method.

$$a = \frac{u \sum_{i=1}^{k} \sum_{j=1}^{l} L_{i,j} x_i y_j - T_x T_y}{u \sum_{i=1}^{k} q_i x_i^2 - T_x^2}$$

$$= \frac{S_{xy}}{S_x}$$

$$\ldots (44)$$

$$b = \frac{T_y \sum_{i=1}^{k} q_i x_i^2 - T_x \sum_{i=1}^{k} \sum_{j=1}^{l} L_{i,j} x_i y_j}{u \sum_{i=1}^{k} q_i x_i^2 - T_x^2}$$

$$\ldots (45)$$

However, it should be noted that the conditions necessary for obtaining a correct regression line is that the scores $L_{i,j}$ are distributed in a Gaussian distribution as to the regression line. To put this the other way around, there is the need for the score detecting unit 503 to convert the pixel values of the pixels of the region into the scores $L_{i,j}$ such that the scores $L_{i,j}$ have a Gaussian distribution.

The regression line computing unit 504 performs the computation of Expression (44) and Expression (45) to obtain the regression line.

The angle calculating unit 505 performs the computation of Expression (46) to convert the gradient a of the regression line to an angle θ as to the axis in the spatial direction X, which is the reference axis.

$$\theta = \tan^{-1}(a) \tag{46}$$

Now, in the case of the regression line computing unit 504 computing a regression line which is a predetermined curve, the angle calculating unit 505 obtains the angle θ of the regression line at the position of the pixel of interest as to the reference axis.

Here, the intercept b is unnecessary for detecting the data continuity for each pixel. Accordingly, let us consider obtaining the primary regression line shown in Expression (47).

$$y = ax \tag{47}$$

In this case, the regression line computing unit 504 can obtain the gradient a by the least-square method as in Expression (48).

$$a = \frac{\displaystyle\sum_{i=1}^{k}\sum_{j=1}^{l} L_{i,j}x_i y_j}{\displaystyle\sum_{i=1}^{k} q_i x_i^2}$$

$$\ldots (48)$$

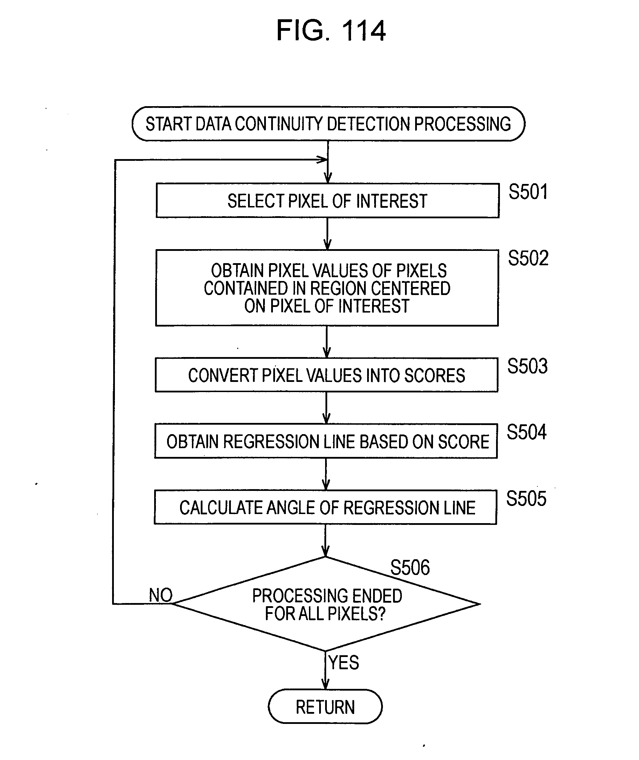

The processing for detecting data continuity with the data continuity detecting unit 101 of which the configuration is shown in Fig. 107, corresponding to the processing in step S101, will be described with reference to the flowchart shown in Fig. 114.

In step S501, the pixel acquiring unit 502 selects a pixel of interest from pixels which have not yet been taken as the pixel of interest. For example, the pixel acquiring unit 502 selects the pixel of interest in raster scan order. In step S502, the pixel acquiring unit 502 acquires the pixel values of the pixel contained in a region centered on the pixel of interest, and supplies the pixel values of the pixels acquired to the score detecting unit 503. For example, the pixel acquiring unit 502 selects a region made up of 9 × 5 pixels centered on the pixel of interest, and acquires the pixel values of the pixels contained in the region.

In step S503, the score detecting unit 503 converts the pixel values of the pixels contained in the region into scores, thereby detecting scores. For example, the score detecting unit 503 converts the pixel values into scores $L_{i,j}$ by the computation shown in Expression (32). In this case, the score detecting unit 503 converts the pixel values of the pixels of the region into the scores $L_{i,j}$ such that the scores $L_{i,j}$ have a Gaussian distribution. The score detecting unit 503 supplies the converted scores to the regression line computing unit 504.

In step S504, the regression line computing unit 504 obtains a regression line based on the scores supplied from the score detecting unit 503. For example, the regression line computing unit 504 obtains the regression line based on the scores supplied from the score detecting unit 503. More specifically, the regression line computing unit 504 obtains the regression line by executing the computation shown in Expression (44) and Expression (45). The regression line computing unit 504 supplies computation result parameters indicating the regression line which is the result of computation, to the angle calculating unit 505.

In step S505, the angle calculating unit 505 calculates the angle of the regression line as to the reference axis, thereby detecting the data continuity of the image data, corresponding to the continuity of the light signals of the real world that has dropped out. For example, the angle calculating unit 505 converts the gradient a of the regression line into the angle θ as to the axis of the spatial direction X which is the reference axis, by the computation of Expression (46).

Note that an arrangement may be made wherein the angle calculating unit 505 outputs data continuity information indicating the gradient a.

In step S506, the pixel acquiring unit 502 determines whether or not the processing of all pixels has ended, and in the event that determination is made that the processing of all pixels has not ended, the flow returns to step S501, a pixel of interest is selected from the pixels which have not yet been taken as a pixel of interest, and the above-described processing is repeated.

In the event that determination is made in step S506 that the processing of all pixels has ended, the processing ends.

Thus, the data continuity detecting unit 101 of which the configuration is shown in Fig. 107 can detect the angle of data continuity in the image data based on the reference axis, corresponding to the dropped continuity of the actual world 1 light signals.

Particularly, the data continuity detecting unit 101 of which the configuration is shown in Fig. 107 can obtain angles smaller than pixels, based on the pixel values of pixels in a relatively narrow region.

As described above, in a case wherein light signals of the real world are projected, a region, corresponding to a pixel of interest which is the pixel of interest in the image data of which a part of the continuity of the real world light signals has dropped out, is selected, and a score based on correlation value is set for pixels wherein the correlation value of the pixel value of the pixel of interest and the pixel value of a pixel belonging to a selected region is equal to or greater than a threshold value, thereby detecting the score of pixels belonging to the region, and a regression line is detected based on the detected score, thereby detecting the data continuity of the image data corresponding to the continuity of the real world light signals which has dropped out, and subsequently estimating the light signals by estimating the continuity of the dropped real world light signal based on the detected data of the image data, processing results which are more accurate and more precise as to events in the real world can be obtained.

Note that with the data continuity detecting unit 101 of which the configuration is shown in Fig. 107, an arrangement wherein the pixel values of pixels in a predetermined region of the frame of interest where the pixel of interest belongs and in frames before and after the frame of interest time-wise are converted into scores, and a regression plane is obtained based on the scores, allows the angle of time-directional data continuity to be detected along with the angle of the data continuity in the spatial direction.

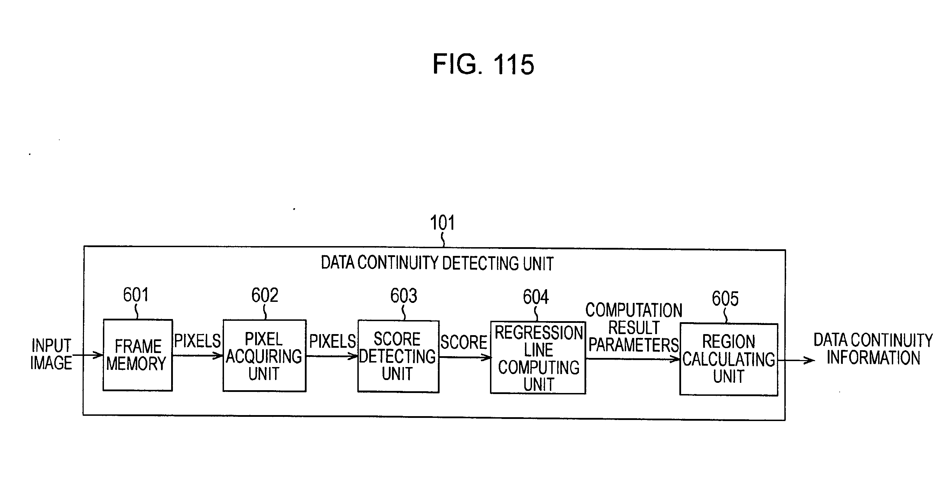

Fig. 115 is a block diagram illustrating yet another configuration of the data continuity detecting unit 101.

With the data continuity detecting unit 101 shown in Fig. 115, light signals of the real world are projected, a region, corresponding to a pixel of interest which is the pixel of interest in the image data of which a part of the continuity of the real world light signals has dropped out, is selected, and a score based on correlation value is set for pixels wherein the correlation value of the pixel value of the pixel of interest and the pixel value of a pixel belonging to a selected region is equal to or greater than a threshold value, thereby detecting the score of pixels belonging to the region, and a regression line is detected based on the detected score, thereby detecting the data continuity of the image data corresponding to the continuity of the real world light signals which has dropped out.

Frame memory 601 stores input images in increments of frames, and supplies the pixel values of the pixels making up stored frames to a pixel acquiring unit 602. The frame memory 601 can supply pixel values of pixels of frames of an input image which is a moving image to the pixel acquiring unit 602, by storing the current frame of the input image in one page, supplying the pixel values of the pixel of the frame one frame previous (in the past) as to the current frame stored in another page to the pixel acquiring unit 602, and switching pages at the switching point-in-time of the frames of the input image.

The pixel acquiring unit 602 selects the pixel of interest which is a pixel of interest based on the pixel values of the pixels supplied from the frame memory 601, and selects a region made up of a predetermined number of pixels corresponding to the selected pixel of interest. For example, the pixel acquiring unit 602 selects a region made up of $5 \times 5$ pixels centered on the pixel of interest.

The size of the region which the pixel acquiring unit 602 selects does not restrict the present invention.

The pixel acquiring unit 602 acquires the pixel values of the pixels of the selected region, and supplies the pixel values of the pixels of the selected region to a score detecting unit 603.

Based on the pixel values of the pixels of the selected region supplied from the pixel acquiring unit 602, the score detecting unit 603 detects the score of pixels belonging to the region, by setting a score based on correlation value for pixels wherein the correlation value of the pixel value of the pixel of interest and the pixel value of a pixel belonging to the selected region is equal to or greater than a threshold value. The details of processing for setting score based on correlation at the score detecting unit 603 will be described later.

The score detecting unit 603 supplies the detected score to a regression line computing unit 604.

The regression line computing unit 604 computes a regression line based on the score supplied from the score detecting unit 603. For example, the regression line computing unit 604 computes a regression line based on the score supplied from the score detecting unit 603. Also, for example, the regression line computing unit 604 computes a regression line which is a predetermined curve, based on the score supplied from the score detecting unit 603. The regression line computing unit 604 supplies computation result parameters indicating the computed regression line and the results of computation to an region calculating unit 605. The computation results which the computation parameters indicate include later-described variation and covariation.

The region calculating unit 605 detects the region having the continuity of the data of the input image which is image data, corresponding to the continuity of the light signals of the real world that has dropped out, based on the regression line indicated by the computation result parameters supplied from the regression line computing unit 604.

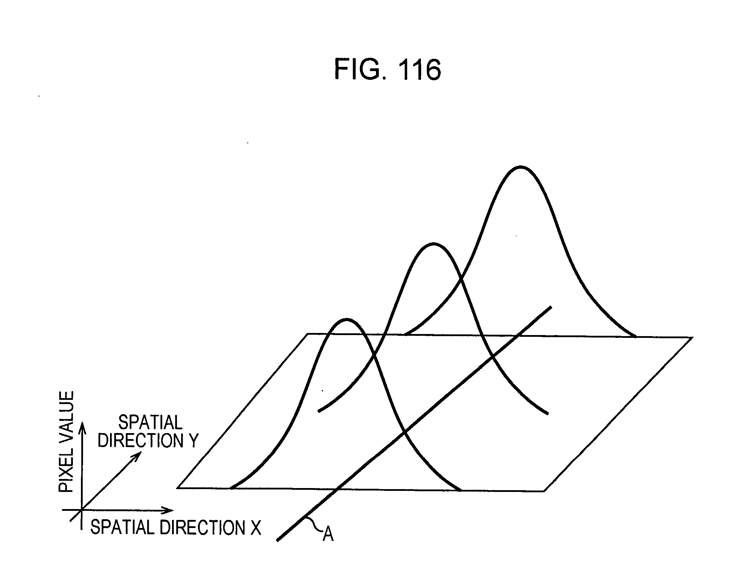

Fig. 116 is a diagram illustrating the relation between change in pixel values in the input image as to the position of the pixels in the spatial direction, and the regression line A. The pixel values of pixels in the region having data continuity change in the form of a crest, for example, as shown in Fig. 116.

The data continuity detecting unit 101 of which the configuration is shown in Fig. 115 plots the regression line A by least-square, weighted with the pixel values of the pixels in the region having data continuity. The regression line A obtained by the data continuity detecting unit 101 represents the data continuity in the neighborhood of the pixel of interest.

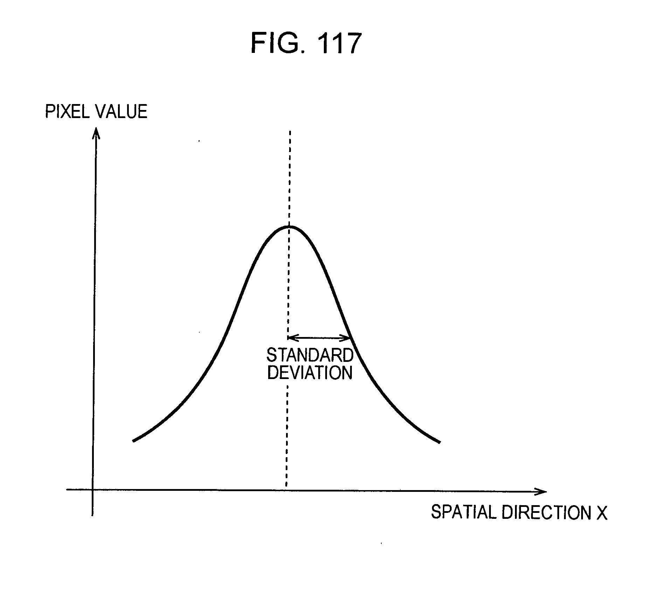

Plotting a regression line means approximation assuming a Gaussian function. As shown in Fig. 117, the data continuity detecting unit of which the configuration is illustrated in Fig. 115 can tell the general width of the region in the data 3 where the image of the fine line has been projected, by obtaining standard deviation, for example. Also, the data continuity detecting unit of which the configuration is illustrated in Fig. 115 can tell the general width of the region in the data 3 where the image of the fine line has been projected, based on correlation coefficients.

Next, a specific method for calculating the regression line with the data continuity detecting unit 101 of which the configuration is shown in Fig. 115.

From the pixel values of pixels in a region made up of 9 pixels in the spatial direction X and 5 pixels in the spatial direction Y for a total of 45 pixels, centered on the pixel of interest, supplied from the pixel acquiring unit 602, for example, the score detecting unit 603 detects the score corresponding to the coordinates of the pixels belonging to the region.

For example, the score detecting unit 603 detects the score $L_{i,j}$ of the coordinates $(x_i, y_j)$ belonging to the region, by calculating the score with the computation of Expression (49).

$$
L_{i,j} = \begin{cases} \exp(0.050(255-|P_{0,0}-P_{i,j}|)-1) & (|P_{0,0}-P_{i,j}|) \leq Th) \\ 0 & (|P_{0,0}-P_{i,j}|) > Th) \end{cases}
$$

$$\ldots (49)$$

In Expression (49), $P_{0,0}$ represents the pixel value of the pixel of interest, and $P_{i,j}$ represents the pixel values of the pixel at the coordinates $(x_i, y_j)$. Th represents the threshold value.

i represents the order of the pixel in the spatial direction X in the region wherein $1 \leq i \leq k$. j represents the order of the pixel in the spatial direction Y in the region wherein $1 \leq j \leq l$.

k represents the number of pixels in the spatial direction X in the region, and l represents the number of pixels in the spatial direction Y in the region. For example, in the event of a region made up of 9 pixels in the spatial direction X and 5 pixels in the spatial direction Y for a total of 45 pixels, K is 9 and l is 5.

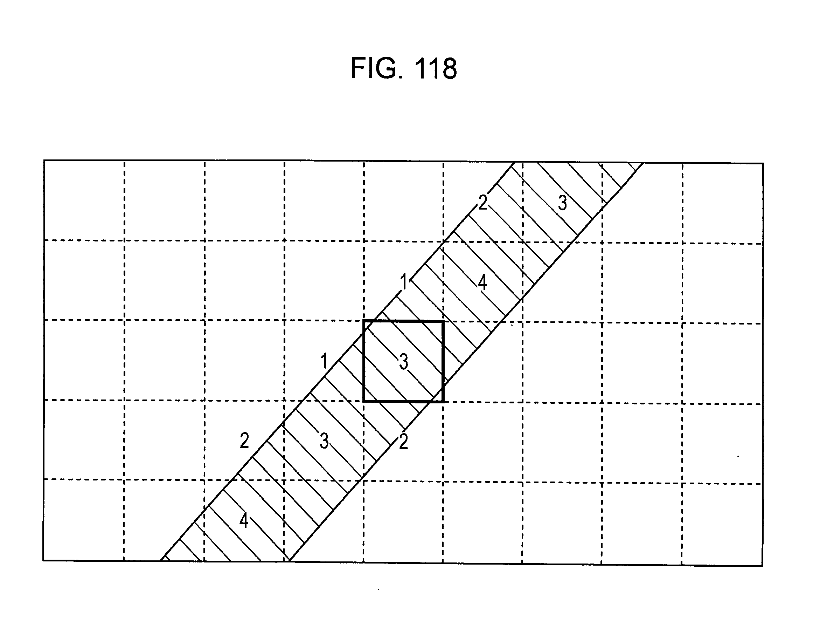

Fig. 118 is a diagram illustrating an example of a region acquired by the pixel acquiring unit 602. In Fig. 118, the dotted squares each represent one pixel.

For example, as shown in Fig. 118, in the event that the region is made up of 9 pixels centered on the pixel of interest in the spatial direction X, and is made up of 5 pixels centered on the pixel of interest in the spatial direction Y, with the coordinates (x, y) of the pixel of interest being (0, 0), the coordinates (x, y) of the pixel at the upper left of the region are (-4, 2), the coordinates (x, y) of the pixel at the upper right of the region are (4, 2), the coordinates (x, y) of the pixel at the lower left of the region are (-4, -2), and the coordinates (x, y) of the pixel at the lower right of the region are (4, 42).

The order i of the pixels at the left side of the region in the spatial direction X is 1, and the order i of the pixels at the right side of the region in the spatial direction X is 9. The order j of the pixels at the lower side of the region in the spatial direction Y is 1, and the order j of the pixels at the upper side of the region in the spatial direction Y is 5.

That is to say, with the coordinates $(x_5, y_3)$ of the pixel of interest as (0, 0), the coordinates $(x_1, y_5)$ of the pixel at the upper left of the region are (-4, 2), the coordinates $(x_9, y_5)$ of the pixel at the upper right of the region are (4, 2), the coordinates $(x_1, y_1)$ of the pixel at the lower left of the region are (-4, -2), and the coordinates $(x_9, y_1)$ of the pixel at the lower right of the region are (4, -2).

The score detecting unit 603 calculates the absolute values of difference of the pixel value of the pixel of interest and the pixel values of the pixels belonging to the region as a correlation value with Expression (49), so this is not restricted to a region having data continuity in the input image where a fine line image of the actual world 1 has been projected, rather, score can be detected representing the feature of spatial change of pixel values in the region of the input image having two-valued edge data continuity, wherein an image of an object in the actual world 1 having a straight edge and which is of a monotone color different from that of the background has been projected.

Note that the score detecting unit 603 is not restricted to the absolute values of difference of the pixel values of the pixels, and may be arranged to detect the score based on other correlation values such as correlation coefficients and so forth.

Also, the reason that an exponential function is applied in Expression (49) is to exaggerate difference in score as to difference in pixel values, and an arrangement may be made wherein other functions are applied.

The threshold value Th may be an optional value. For example, the threshold value Th may be 30.

Thus, the score detecting unit 603 sets a score to pixels having a correlation value with a pixel value of a pixel belonging to a selected region equal to or greater than the threshold value, based on the correlation value, and thereby detects the score of the pixels belonging to the region.

Also, the score detecting unit 603 performs the computation of Expression (50) for example, thereby calculating the score, whereby the score $L_{i,j}$ of the coordinates $(x_i, y_j)$ belonging to the region is detected.

$$L_{i,j} = \begin{cases} 255 - |P_{0,0} - P_{i,j}| & (|P_{0,0} - P_{i,j}|) \leq Th) \\ 0 & (|P_{0,0} - P_{i,j}|) > Th) \end{cases}$$

$$\cdots (50)$$

With the score of the coordinates $(x_i, y_j)$ as $L_{i,j}$ ($1 \leq i \leq k$, $1 \leq j \leq l$), the sum $q_i$ of the score $L_{i,j}$ of the coordinate $x_i$ in the spatial direction Y is expressed by Expression (51), and the sum $h_j$ of the score $L_{i,j}$ of the coordinate $y_j$ in the spatial direction X is expressed by Expression (52).

$$q_i = \sum_{j=1}^{l} L_{i,j}$$

$$\cdots (51)$$

$$h_j = \sum_{i=1}^{k} L_{i,j}$$

$$\cdots (52)$$

The summation u of the scores is expressed by Expression (53).

$$u = \sum_{i=1}^{k} \sum_{j=1}^{l} L_{i,j}$$
$$= \sum_{i=1}^{k} q_i$$
$$= \sum_{j=1}^{l} h_j$$

$$\cdots (53)$$

In the example shown in Fig. 118, the score $L_{5,3}$ of the coordinate of the pixel of interest is 3, the score $L_{5,4}$ of the coordinate of the pixel above the pixel of interest is 1, the score $L_{6,4}$ of the coordinate of the pixel to the upper right of the pixel of interest is 4, the score $L_{6,5}$ of the coordinate of the pixel two pixels above and one pixel to the right of the pixel of interest is 2, and the score $L_{7,5}$ of the coordinate of the pixel two pixels above and two pixels to the right of the pixel of interest is 3. Also, the score $L_{5,2}$ of the coordinate of the pixel below the pixel of interest is 2, the score $L_{4,3}$ of the coordinate of the pixel to the left of the pixel of interest is 1, the score $L_{4,2}$ of the coordinate of the pixel to the lower left of the pixel of interest is 3, the score $L_{4,2}$ of the coordinate of the pixel one pixel below and two pixels to the left of the pixel of interest is 2, and the score $L_{3,1}$ of the coordinate of the pixel two pixels below and two pixels to the left of the pixel of interest is 4. The score of all other pixels in the region shown in Fig. 118 is 0, and description of pixels which have a score of 0 are omitted from Fig. 118.

In the region shown in Fig. 118, the sum $q_1$ of the scores in the spatial direction Y is 0, since all scores L wherein i is 1 are 0, and $q_2$ is 0 since all scores L wherein i is 2 are 0. $q_3$ is 6 since $L_{3,2}$ is 2 and $L_{3,1}$ is 4. In the same way, $q_4$ is 4, $q_5$ is 6, $q_6$ is 6, $q_7$ is 3, $q_8$ is 0, and $q_9$ is 0.

In the region shown in Fig. 118, the sum $h_1$ of the scores in the spatial direction X is 4, since $L_{3,1}$ is 4. $h_2$ is 7

since $L_{3,2}$ is 2, $L_{4,2}$ is 3, and $L_{5,2}$ is 2. In the same way, $h_3$ is 4, $h_4$ is 5, and $h_5$ is 5.

In the region shown in Fig. 118, the summation u of scores is 25.

The sum $T_x$ of the results of multiplying the sum $q_i$ of the scores $L_{i,j}$ in the spatial direction Y by the coordinate $x_i$ is shown in Expression (54).

$$T_x = q_1 x_1 + q_2 x_2 + \cdots + q_k x_k$$
$$= \sum_{i=1}^{k} q_i x_i$$

$$\dots (54)$$

The sum $T_y$ of the results of multiplying the sum $h_j$ of the scores $L_{i,j}$ in the spatial direction X by the coordinate $y_j$ is shown in Expression (55).

$$T_y = h_1 y_1 + h_2 y_2 + \cdots + h_l y_l$$
$$= \sum_{j=1}^{l} h_j y_j$$

$$\dots (55)$$

For example, in the region shown in Fig. 118, $q_1$ is 0 and $x_1$ is -4, so $q_1 x_1$ is 0, and $q_2$ is 0 and $x_2$ is -3, so $q_2 x_2$ is 0. In the same way, $q_3$ is 6 and $x_3$ is -2, so $q_3 x_3$ is -12; $q_4$ is 4 and $x_4$ is -1, so $q_4 x_4$ is -4; $q_5$ is 6 and $x_5$ is 0, so $q_5 x_5$ is 0; $q_6$ is 6 and $x_6$ is 1, so $q_6 x_6$ is 6; $q_7$ is 3 and $x_7$ is 2, so $q_7 x_7$ is 6; $q_8$ is 0 and $x_8$, is 3, so $q_8 x_8$ is 0; and $q_9$ is 0 and $x_9$ is 4, so $q_9 x_9$ is 0. Accordingly, $T_x$ which is the sum of $q_1 x_1$ through $q_9 x_9$ is -4.

For example, in the region shown in Fig. 118, $h_1$ is 4 and $y_1$ is -2, so $h_1 y_1$ is -8, and $h_2$ is 7 and $y_2$ is -1, so $h_2 y_2$ is -7. In the same way, $h_3$ is 4 and $y_3$ is 0, so $h_3 y_3$ is 0; $h_4$ is 5 and $y_4$ is 1, so $h_4 y_4$ is 5; and $h_5$ is 5 and $y_5$ is 2, so $h_5 y_5$ is 10. Accordingly, $T_y$ which is the sum of $h_1 y_1$ through $h_5 y_5$ is 0.

Also, $Q_i$ is defined as follows.

$$Q_i = \sum_{j=1}^{l} L_{i,j} y_j$$

$$\dots (56)$$

The variation $S_x$ of x is expressed by Expression (57).

$$S_x = \sum_{i=1}^{k} q_i x_i^2 - T_x^2 / u$$

$$\dots (57)$$

The variation $S_y$ of y is expressed by Expression (58).

$$S_y = \sum_{j=1}^{l} h_j y_j^2 - T_y^2 \diagup u$$

$$\ldots (58)$$

The covariation $s_{xy}$ is expressed by Expression (59).

$$S_{xy} = \sum_{i=1}^{k} \sum_{j=1}^{l} L_{i,j} x_i y_j - T_x T_y \diagup u$$

$$= \sum_{i=1}^{k} Q_i x_i - T_x T_y \diagup u$$

$$\ldots (59)$$

Let us consider obtaining the primary regression line shown in Expression (60).

$$y = ax + b \qquad (60)$$

The gradient a and intercept b can be obtained as follows by the least-square method.

$$a = \frac{u \sum_{i=1}^{k} \sum_{j=1}^{l} L_{i,j} x_i y_j - T_x T_y}{u \sum_{i=1}^{k} q_i x_i^2 - T_x^2}$$

$$= \frac{S_{xy}}{S_x}$$

$$\ldots (61)$$

$$b = \frac{T_y \sum_{i=1}^{k} q_i x_i^2 - T_x \sum_{i=1}^{k} \sum_{j=1}^{l} L_{i,j} x_i y_j}{u \sum_{i=1}^{k} q_i x_i^2 - T_x^2}$$

$$\ldots (62)$$

However, it should be noted that the conditions necessary for obtaining a correct regression line is that the scores $L_{i,j}$ are distributed in a Gaussian distribution as to the regression line. To put this the other way around, there is the need for the score detecting unit 603 to convert the pixel values of the pixels of the region into the scores $L_{i,j}$ such that the scores $L_{i,j}$ have a Gaussian distribution.

The regression line computing unit 604 performs the computation of Expression (61) and Expression (62) to obtain the regression line.

Also, the intercept b is unnecessary for detecting the data continuity for each pixel. Accordingly, let us consider obtaining the primary regression line shown in Expression (63).

$$y = ax \tag{63}$$

In this case, the regression line computing unit 604 can obtain the gradient a by the least-square method as in Expression (64).

$$a = \frac{\displaystyle\sum_{i=1}^{k}\sum_{j=1}^{l} L_{i,j} x_i y_j}{\displaystyle\sum_{i=1}^{k} q_i x_i^2}$$

$$\ldots (64)$$

With a first technique for determining the region having data continuity, the estimation error of the regression line shown in Expression (60) is used.

The variation $S_{y \cdot x}$ of y is obtained with the computation shown in Expression (65).

$$S_{y \cdot x} = \sum (y_i - ax_i - b)^2$$
$$= S_y - S_{xy}^2 / S_x$$
$$= S_y - a S_{xy}$$

$$\ldots (65)$$

Scattering of the estimation error is obtained by the computation shown in Expression (66) using variation.

$$V_{y \cdot x} = S_{y \cdot x} / (u-2)$$
$$= (S_y - a S_{xy}) / (u-2)$$

$$\ldots (66)$$

Accordingly, the following Expression yields the standard deviation.

$$\sqrt{V_{y \cdot x}} = \sqrt{\frac{S_y - a S_{xy}}{u-2}} \tag{67}$$

However, in the case of handling a region where a fine line image has been projected, the standard deviation is an amount worth the width of the fine line, so determination cannot be categorically made that great standard deviation means that a region is not the region with data continuity. However, for example, information indicating detected regions using standard deviation can be utilized to detect regions where there is a great possibility that class classification adaptation processing breakdown will occur, since class classification adaptation processing breakdown occurs at portions of the region having data continuity where the fine line is narrow.

The region calculating unit 605 calculates the standard deviation by the computation shown in Expression (67), and calculates the region of the input image having data continuity, based on the standard deviation, for example. The region calculating unit 605 multiplies the standard deviation by a predetermined coefficient so as to obtain distance, and takes the region within the obtained distance from the regression line as a region having data continuity. For example, the region calculating unit 605 calculates the region within the standard deviation distance from the regression line as a region having data continuity, with the regression line as the center thereof.

With a second technique, the correlation of score is used for detecting a region having data continuity.

The correlation coefficient $r_{xy}$ can be obtained by the computation shown in Expression (68), based on the variation $S_x$ of x, the variation $S_y$ of y, and the covariation $S_{xy}$.

$$r_{xy} = S_{xy}/\sqrt{S_x S_y} \qquad (68)$$

Correlation includes positive correlation and negative correlation, so the region calculating unit 605 obtains the absolute value of the correlation coefficient $r_{xy}$, and determines that the closer to 1 the absolute value of the correlation coefficient $r_{xy}$ is, the greater the correlation is. More specifically, the region calculating unit 605 compares the threshold value with the absolute value of the correlation coefficient $r_{xy}$, and detects a region wherein the correlation coefficient $r_{xy}$ is equal to or greater than the threshold value as a region having data continuity.

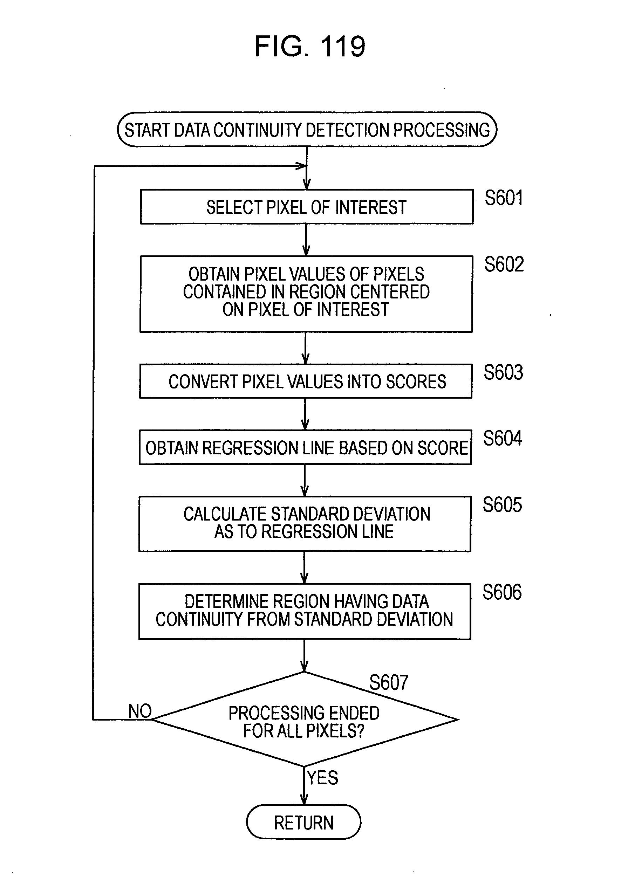

The processing for detecting data continuity with the data continuity detecting unit 101 of which the configuration is shown in Fig. 115, corresponding to the processing in step S101, will be described with reference to the flowchart shown in Fig. 119.

In step S601, the pixel acquiring unit 602 selects a pixel of interest from pixels which have not yet been taken as the pixel of interest. For example, the pixel acquiring unit 602 selects the pixel of interest in raster scan order. In step S602, the pixel acquiring unit 602 acquires the pixel values of the pixel contained in a region centered on the pixel of interest, and supplies the pixel values of the pixels acquired to the score detecting unit 603. For example, the pixel acquiring unit 602 selects a region made up of 9 × 5 pixels centered on the pixel of interest, and acquires the pixel values of the pixels contained in the region.

In step S603, the score detecting unit 603 converts the pixel values of the pixels contained in the region into scores, thereby detecting scores. For example, the score detecting unit 603 converts the pixel values into scores $L_{i,j}$ by the computation shown in Expression (49). In this case, the score detecting unit 603 converts the pixel values of the pixels of the region into the scores $L_{i,j}$ such that the scores $L_{i,j}$ have a Gaussian distribution. The score detecting unit 603 supplies the converted scores to the regression line computing unit 604.

In step S604, the regression line computing unit 604 obtains a regression line based on the scores supplied from the score detecting unit 603. For example, the regression line computing unit 604 obtains the regression line based on the scores supplied from the score detecting unit 603. More specifically, the regression line computing unit 604 obtains the regression line by executing the computation shown in Expression (61) and Expression (62). The regression line computing unit 604 supplies computation result parameters indicating the regression line which is the result of computation, to the region calculating unit 605.

In step S605, the region calculating unit 605 calculates the standard deviation regarding the regression line. For example, an arrangement may be made wherein the region calculating unit 605 calculates the standard deviation as to the regression line by the computation of Expression (67).

In step S606, the region calculating unit 605 determines the region of the input image having data continuity, from the standard deviation. For example, the region calculating unit 605 multiplies the standard deviation by a predetermined coefficient to obtain distance, and determines the region within the obtained distance from the regression line to be the region having data continuity.

The region calculating unit 605 outputs data continuity information indicating a region having data continuity.

In step S607, the pixel acquiring unit 602 determines whether or not the processing of all pixels has ended, and in the event that determination is made that the processing of all pixels has not ended, the flow returns to step S601, a pixel of interest is selected from the pixels which have not yet been taken as a pixel of interest, and the above-described processing is repeated.

In the event that determination is made in step S607 that the processing of all pixels has ended, the processing ends.

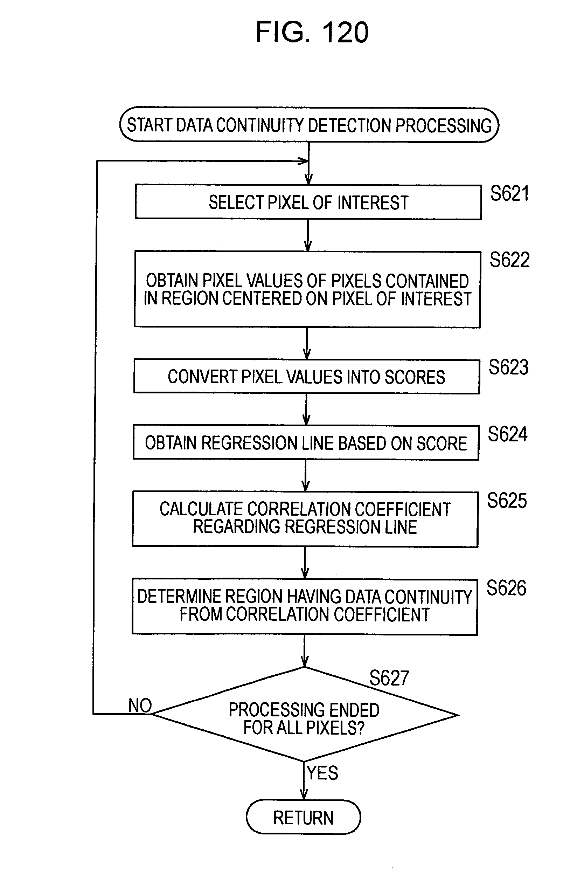

Other processing for detecting data continuity with the data continuity detecting unit 101 of which the configuration is shown in Fig. 115, corresponding to the processing in step S101, will be described with reference to the flowchart shown in Fig. 120. The processing of step S621 through step S624 is the same as the processing of step S601 through step S604, so description thereof will be omitted.

In step S625, the region calculating unit 605 calculates a correlation coefficient regarding the regression line. For example, the region calculating unit 605 calculates the correlation coefficient as to the regression line by the computation of Expression (68).

In step S626, the region calculating unit 605 determines the region of the input image having data continuity, from the correlation coefficient. For example, the region calculating unit 605 compares the absolute value of the correlation coefficient with a threshold value stored beforehand, and determines a region wherein the absolute value of the correlation coefficient is equal to or greater than the threshold value to be the region having data continuity.

The region calculating unit 605 outputs data continuity information indicating a region having data continuity.

The processing of step S627 is the same as the processing of step S607, so description thereof will be omitted.

Thus, the data continuity detecting unit 101 of which the configuration is shown in Fig. 115 can detect the region in the image data having data continuity, corresponding to the dropped actual world 1 light signal continuity.

As described above, in a case wherein light signals of the real world are projected, a region, corresponding to a pixel of interest which is the pixel of interest in the image data of which a part of the continuity of the real world light signals has dropped out, is selected, and a score based on correlation value is set for pixels wherein the correlation value of the pixel value of the pixel of interest and the pixel value of a pixel belonging to a selected region is equal to or greater than a threshold value, thereby detecting the score of pixels belonging to the region, and a regression line is detected based on the detected score, thereby detecting the region having the data continuity of the image data corresponding to the continuity of the real world light signals which has dropped out, and subsequently estimating the light signals by estimating the dropped real world light signal continuity based on the detected data continuity of the image data, processing results which are more accurate and more precise as to events in the real world can be obtained.

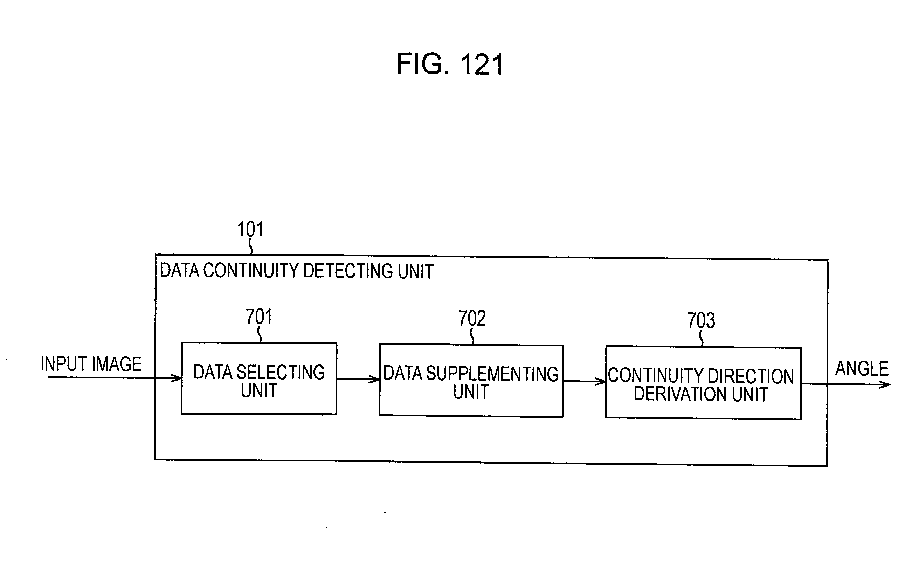

Fig. 121 illustrates the configuration of another form of the data continuity detecting unit 101.

The data continuity detecting unit 101 shown in Fig. 121 comprises a data selecting unit 701, a data supplementing unit 702, and a continuity direction derivation unit 703.

The data selecting unit 701 takes each pixel of the input image as the pixel of interest, selects pixel value data of pixels corresponding to each pixel of interest, and outputs this to the data supplementing unit 702.

The data supplementing unit 702 performs least-square supplementation computation based on the data input from the data selecting unit 701, and outputs the supplementation computation results of the continuity direction derivation unit 703. The supplementation computation by the data supplementing unit 702 is computation regarding the summation item used in the later-described least-square computation, and the computation results thereof can be said to be the feature of the image data for detecting the angle of continuity.

The continuity direction derivation unit 703 computes the continuity direction, i.e., the angle as to the reference axis which the data continuity has (e.g., the gradient or direction of a fine line or two-valued edge) from the supplementation computation results input by the data supplementing unit 702, and outputs this as data continuity information.

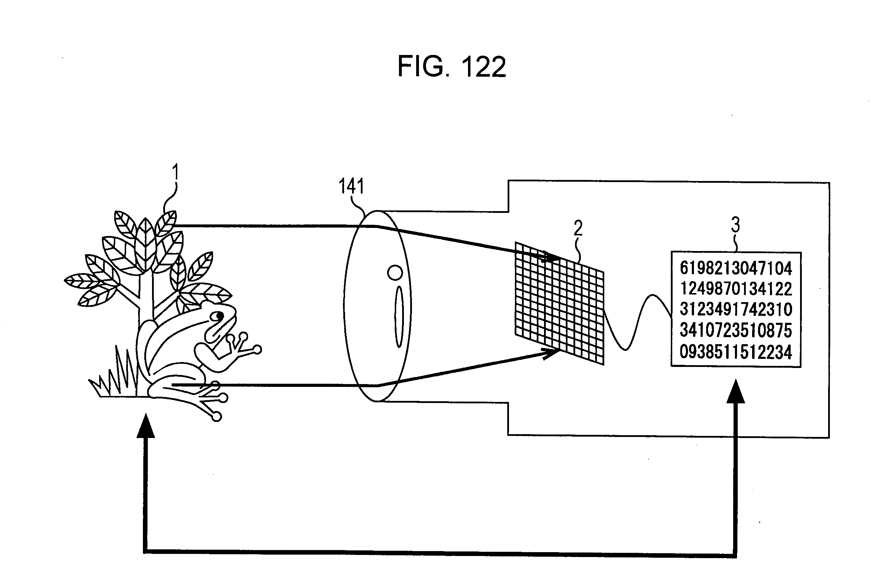

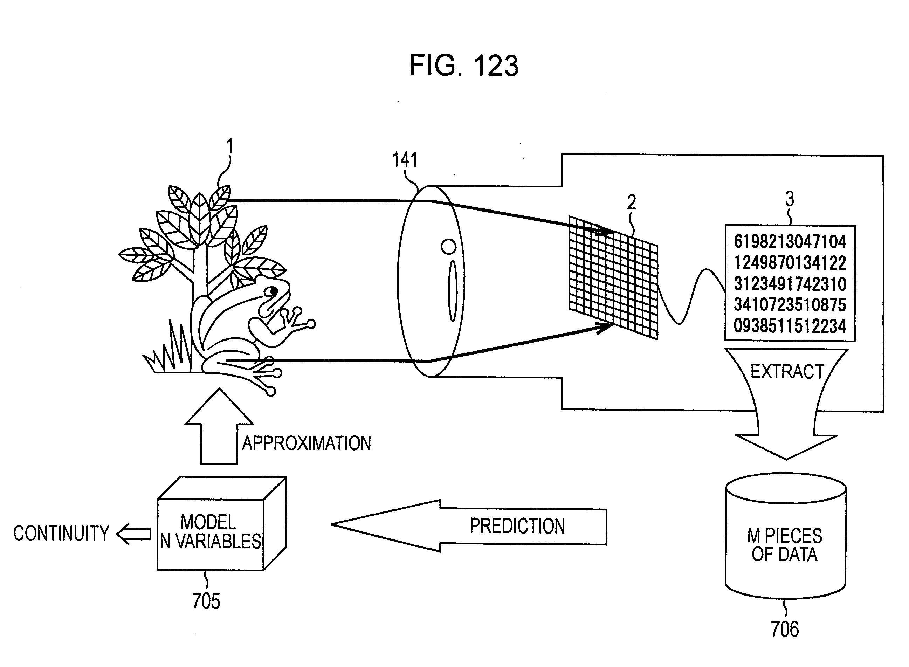

Next, the overview of the operations of the data continuity detecting unit 101 in detecting continuity (direction or angle) will be described with reference to Fig. 122. Portions in Fig. 122 and Fig. 123 which correspond with those in Fig. 6 and Fig. 7 are denoted with the same symbols, and description thereof in the following will be omitted as suitable.

As shown in Fig. 122, signals of the actual world 1 (e.g., an image), are imaged on the photoreception face of a sensor 2 (e.g., a CCD (Charge Coupled Device) or CMOS (Complementary Metal-Oxide Semiconductor)), by an optical system 141 (made up of lenses, an LPF (Low Pass Filter), and the like, for example). The sensor 2 is configured of a device having integration properties, such as a CCD or CMOS, for example. Due to this configuration, the image obtained from the data 3 output from the sensor 2 is an image differing from the image of the actual world 1 (difference as to the image of the actual world 1 occurs).

Accordingly, as shown in Fig. 123, the data continuity detecting unit 101 uses a model 705 to describe in an approximate manner the actual world 1 by an approximation expression and extracts the data continuity from the approximation expression. The model 705 is represented by, for example, N variables. More accurately, the model 705 approximates (describes) signals of the actual world 1.

In order to predict the model 705, the data continuity detecting unit 101 extracts M pieces of data 706 from the data 3. Consequently, the model 705 is constrained by the continuity of the data.

That is to say, the model 705 approximates continuity of the (information (signals) indicating) events of the actual world 1 having continuity (constant characteristics in a predetermined dimensional direction), which generates the data continuity in the data 3 when obtained with the sensor 2.

Now, in the event that the number M of the data 706 is N, which is the number N of variables of the model 705, or more, the model 705 represented by the N variables can be predicted from M pieces of data 706.

Further, by predicting the model 705 approximating (describing) the signals of) the actual world 1, the data continuity detecting unit 101 derives the data continuity contained in the signals which are information of the actual world 1 as, for example, fine line or two-valued edge direction (the gradient, or the angle as to an axis in a case wherein a predetermined direction is taken as an axis), and outputs this as data continuity information.

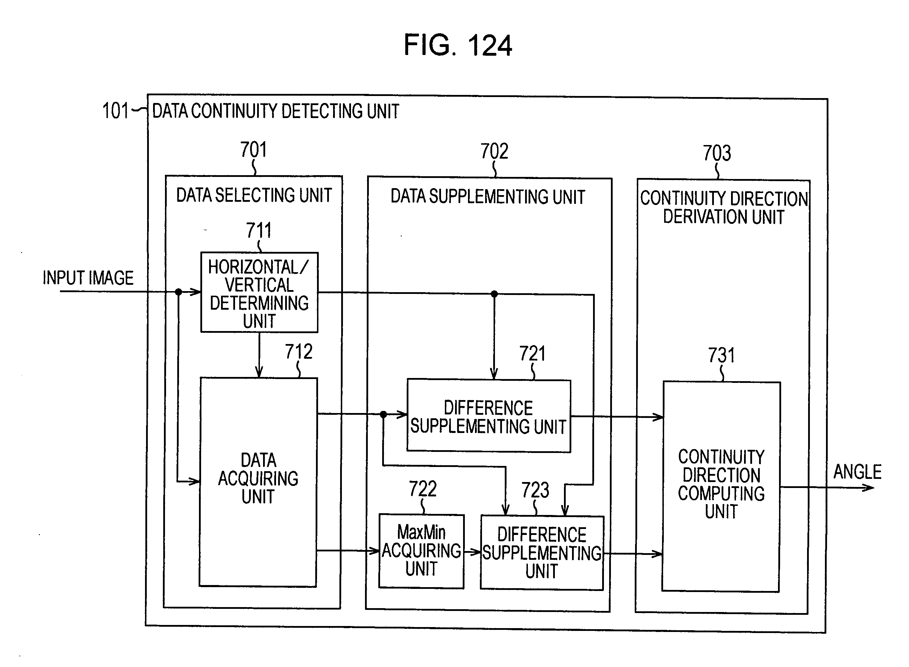

Next, the data continuity detecting unit 101 which outputs the direction (angle) of a fine line from the input image as data continuity information will be described with reference to Fig. 124.

The data selecting unit 701 is configured of a horizontal/vertical determining unit 711, and a data acquiring unit 712. The horizontal/vertical determining unit 711 determines, from the difference in pixel values between the pixel of interest and the surrounding pixels, whether the angle as to the horizontal direction of the fine line in the input image is a fine line closer to the horizontal direction or is a fine line closer to the vertical direction, and outputs the determination results to the data acquiring unit 712 and data supplementing unit 702.

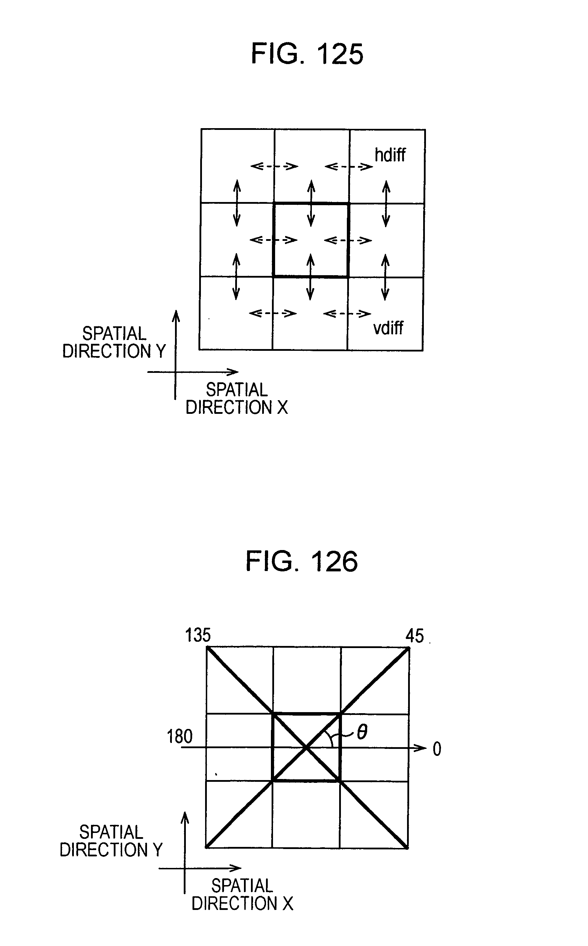

In more detail, for example, in the sense of this technique, other techniques may be used as well. For example, simplified 16-directional detection may be used. As shown in Fig. 125, of the difference between the pixel of interest and the surrounding pixels (difference in pixel values between the pixels), the horizontal/vertical determining unit 711 obtains the difference between the sum of difference (activity) between pixels in the horizontal direction (hdiff) and the sum of difference (activity) between pixels in the vertical direction (vdiff), and determines whether the sum of difference is greater between the pixel of interest and pixels adjacent thereto in the vertical direction, or between the pixel of interest and pixels adjacent thereto in the horizontal direction. Now, in Fig. 125, each grid represents a pixel, and the pixel at the center of the diagram is the pixel of interest. Also, the differences between pixels indicated by the dotted arrows in the diagram are the differences between pixels in the horizontal direction, and the sum thereof is indicated by hdiff. Also, the differences between pixels indicated by the solid arrows in the diagram are the differences between pixels in the vertical direction, and the sum thereof is indicated by vdiff.

Based on the sum of differences hdiff of the pixel values of the pixels in the horizontal direction, and the sum of differences vdiff of the pixel values of the pixels in the vertical direction, that have been thus obtained, in the event that (hdiff minus vdiff) is positive, this means that the change (activity) of pixel values between pixels is greater in the horizontal direction than the vertical direction, so in a case wherein the angle as to the horizontal direction is represented by θ (0 degrees degrees $\leq$ θ $\leq$ 180 degrees degrees) as shown in Fig. 126, the horizontal/vertical determining unit 711 determines that the pixels belong to a fine line which is 45 degrees degrees < θ $\leq$135 degrees degrees, i.e., an angle closer to the vertical direction, and conversely, in the event that this is negative, this means that the change (activity) of pixel values between pixels is greater in the vertical direction, so the horizontal/vertical determining unit 711 determines that the pixels belong to a fine line which is 0 degrees degrees $\leq$ θ < 45 degrees degrees or 135 degrees degrees < θ $\leq$ 180 degrees degrees, i.e., an angle closer to the horizontal direction (pixels in the direction (angle) in which the fine line extends each are pixels representing the fine line, so change (activity) between those pixels should be smaller).

Also, the horizontal/vertical determining unit 711 has a counter (not shown) for identifying individual pixels of the input image, and can be used whenever suitable or necessary.

Also, while description has been made in Fig. 125 regarding an example of comparing the sum of difference of pixel values between pixels in the vertical direction and horizontal direction in a 3 pixel $\times$ 3 pixel range centered on the pixel of interest, to determine whether the fine line is closer to the vertical direction or closer to the horizontal direction, but the direction of the fine line can be determined with the same technique using a greater number of pixels, for example, determination may be made based on blocks of 5 pixels $\times$ 5 pixels centered on the pixel of interest, 7 pixels $\times$ 7 pixels, and so forth, i.e., a greater number of pixels.

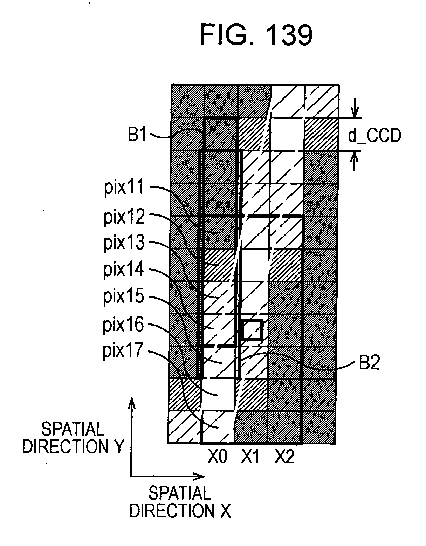

Based on the determination results regarding the direction of the fine line input from the horizontal/vertical determining unit 711, the data acquiring unit 712 reads out (acquires) pixel values in increments of blocks made up of multiple pixels arrayed in the horizontal direction corresponding to the pixel of interest, or in increments of blocks made up of multiple pixels arrayed in the vertical direction, and along with data of difference between pixels adjacent in the direction according to the determination results from the horizontal/vertical determining unit 711 between multiple corresponding pixels for each pixel of interest read out (acquired), maximum value and minimum value data of pixel values of the pixels contained in blocks of a predetermined number of pixels is output to the data supplementing unit 702. Hereafter, a block made up of multiple pixels obtained corresponding to the pixel of interest by the data acquiring unit 712 will be referred to as an acquired block (of the multiple pixels (each represented by a grid) shown in Fig. 139 described later for example, with the pixel indicated by the black square as the pixel of interest, an acquired block is the three pixels above and below, and one pixel to the right and left, for a total of 15 pixels.

The difference supplementing unit 721 of the data supplementing unit 702 detects the difference data input from the data selecting unit 701, executes supplementing processing necessary for solution of the later-described least-square method, based on the determination results of horizontal direction or vertical direction input from the horizontal/vertical determining unit 711 of the data selecting unit 701, and outputs the supplementing results to the continuity direction derivation unit 703. More specifically, of the multiple pixels, the data of difference in the pixel values between the pixel i adjacent in the direction determined by the horizontal/vertical determining unit 711 and the pixel (i+1) is taken as yi, and in the event that the acquired block corresponding to the pixel of interest is made up of n pixels, the difference supplementing unit 721 computes supplementing of $(y1)^2 + (y2)^2 + (y3)^2 + \cdots$ for each horizontal direction or vertical direction, and outputs to the continuity direction derivation unit 703.

Upon obtaining the maximum value and minimum value of pixel values of pixels contained in a block set for each of the pixels contained in the acquired block corresponding to the pixel of interest input from the data selecting unit 701 (hereafter referred to as a dynamic range block (of the pixels in the acquired block indicated in Fig. 139 which will be described later, a dynamic range block of the three pixels above and below the pixel pix12 for a total of 7 pixels, illustrated as the dynamic range block B1 surrounded with a black solid line)), a MaxMin acquiring unit 722 computes (detects) from the difference thereof a dynamic range Dri (the difference between the maximum value and minimum value of pixel values of pixels contained in the dynamic range block corresponding to the i'th pixel in the acquired block), and outputs this to a difference supplementing unit 723.

The difference supplementing unit 723 detects the dynamic range Dri input from the MaxMin acquiring unit 722 and the difference data input from the data selecting unit 701, supplements each horizontal direction or vertical direction input from the horizontal/vertical determining unit 711 of the data selecting unit 701 with a value obtained by multiplying the dynamic range Dri and the difference data yi based on the dynamic range Dri and the difference data which have been detected, and outputs the computation results to the continuity direction derivation unit 703. That is to say, the computation results which the difference supplementing unit 723 outputs is y1 $\times$ Dr1 + y2 $\times$ Dr2 + y3 $\times$ Dr3 + $\cdots$ in each horizontal direction or vertical direction.

The continuity direction computation unit 731 of the continuity direction derivation unit 703 computes the angle (direction) of the fine line based on the supplemented computation results in each horizontal direction or vertical direction input from the data supplementing unit 702, and outputs the computed angle as continuity information.

Now, the method for computing the direction (gradient or angle of the fine line) of the fine line will be described.

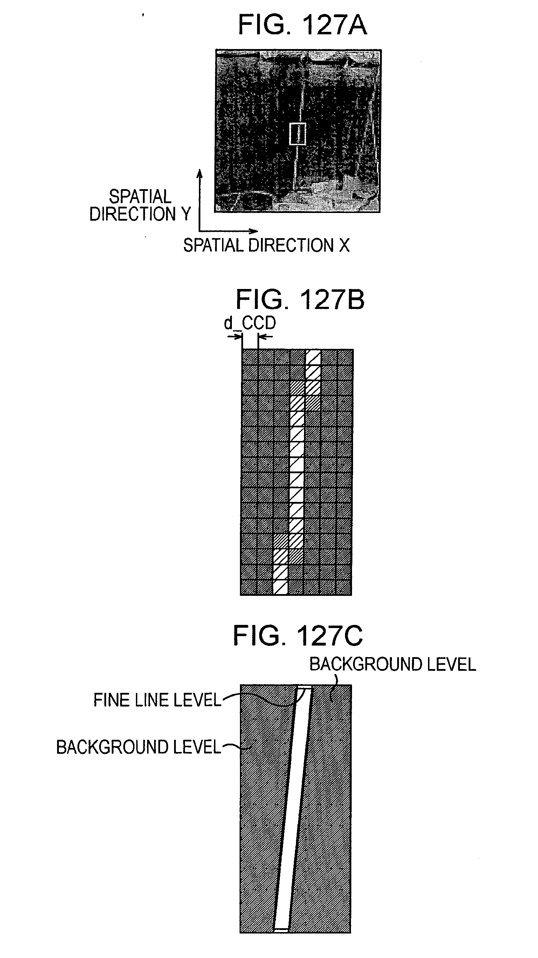

Enlarging the portion surrounded by the white line in an input image such as shown in Fig. 127A shows that the fine line (the white line extending diagonally in the upwards right direction in the drawing) is actually displayed as in Fig. 127B. That is to say, in the real world, the image is such that as shown in Fig. 127C, the two levels of fine-line level (the lighter hatched portion in Fig. 127C) and the background level form boundaries, and no other levels exist. Conversely, the image taken with the sensor 2, i.e., the image imaged in increments of pixels, is an image wherein, as shown in Fig. 127B, there is a repeated array in the fine line direction of blocks which are made up of multiple pixels with the background level and the fine line level spatially mixed due to the integration effects, arrayed in the vertical direction so that the ratio (mixture ratio) thereof changes according to a certain pattern. Note that in Fig. 127B, each square-shaped grid represents one pixel of the CCD, and we will say that the length of each side thereof is d_CCD. Also, the portions of the grids filled in lattice-like are the minimum value of the pixel values, equivalent to the background level, and the other portions filled in hatched have a greater pixel value the less dense the shading is (accordingly, white grids with no shading have the maximum value of the pixel values).

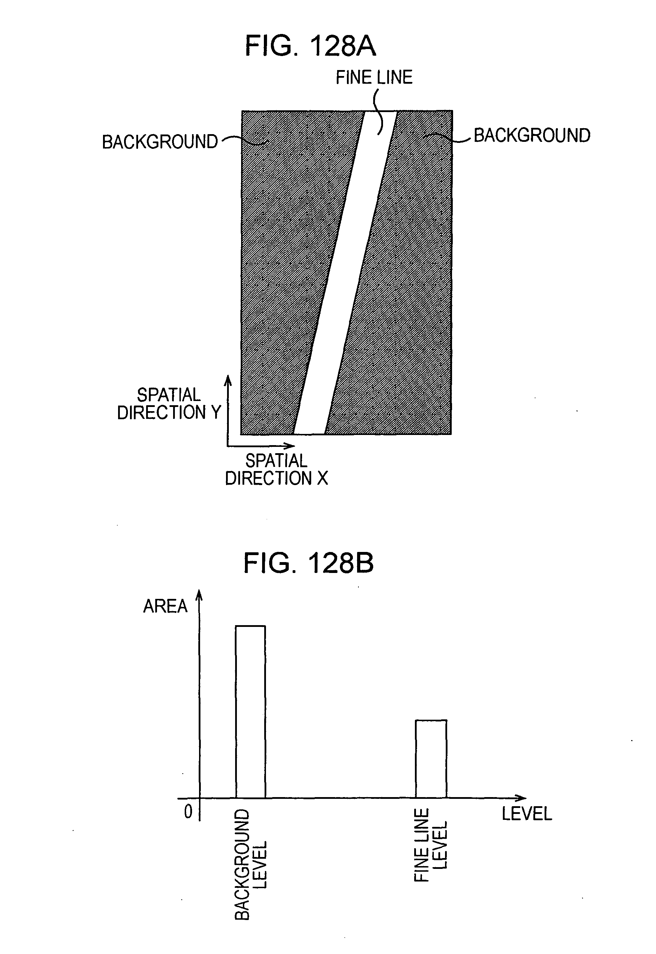

In the event that a fine line exists on the background in the real world as shown in Fig. 128A, the image of the real world can be represented as shown in Fig. 128B with the level as the horizontal axis and the area in the image of the portion corresponding to that level as the vertical axis, which shows that there is a relation in area occupied in the image between the area corresponding to the background in the image and the area of the portion corresponding to the fine line.

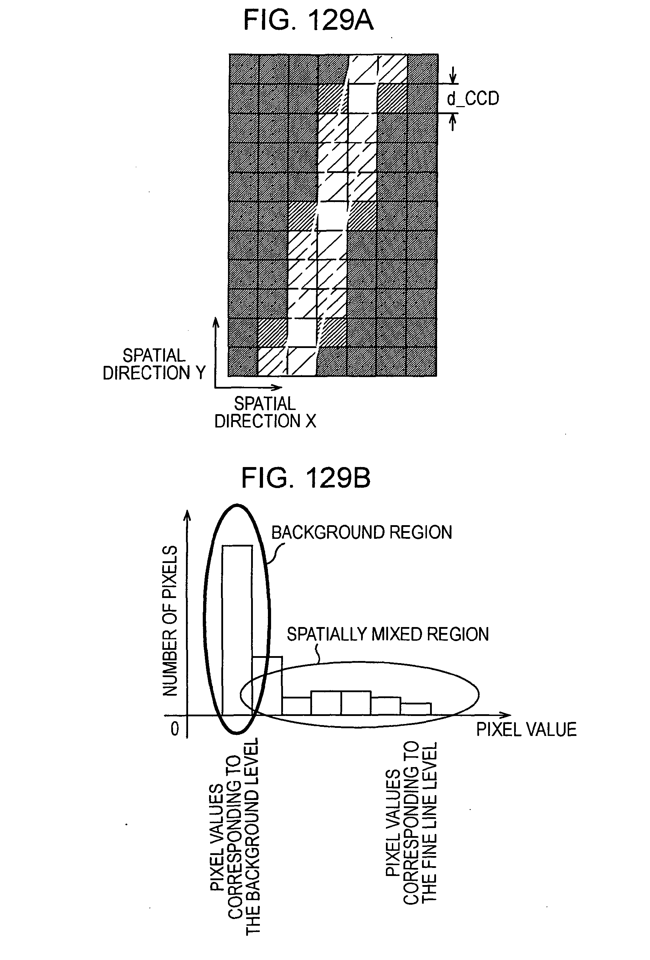

In the same way, as shown in Fig. 129A, the image taken with the sensor 2 is an image wherein there is a repeated array in the direction in which the fine line exists of blocks which are made up of pixels with the background level and the fine line level mixed arrayed in the vertical direction in the pixel of the background level, so that the mixture ratio thereof changes according to a certain pattern, and accordingly, a mixed space region made up of pixels occurring as the result of spatially mixing the background and the fine line, of a level partway between the region which is the background level (background region) and the fine line level, as shown in Fig. 129B. Now, while the vertical axis in Fig. 129B is the number of pixels, the area of one pixel is (d_CCD)$^2$, so it can be said that the relation between the level of pixel values and the number of pixels in Fig. 129B is the same as the relation between the level of pixel values and distribution of area.

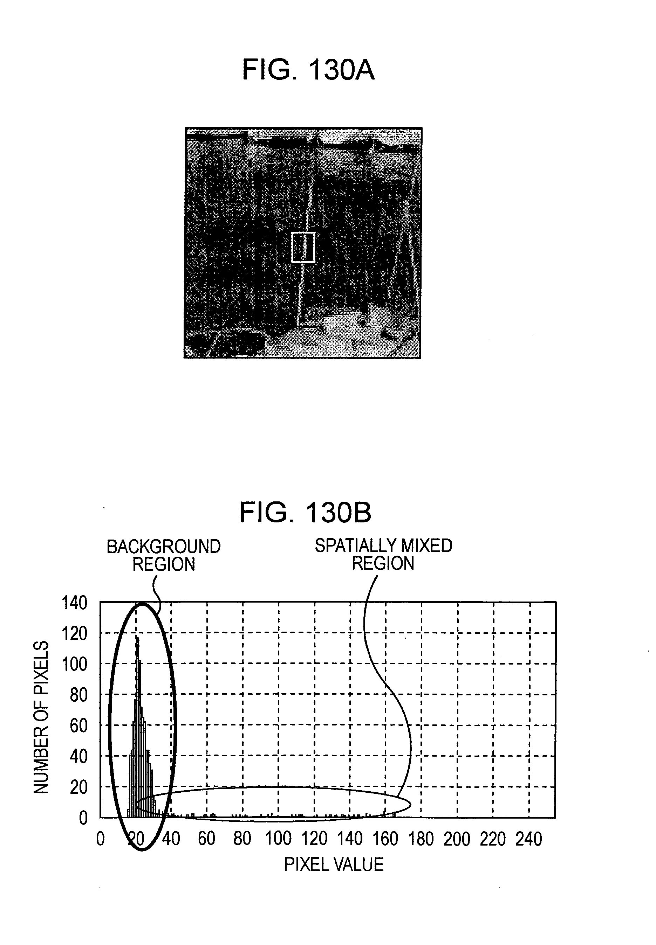

The same results are obtained regarding the portion enclosed with the white line in the actual image shown in Fig. 130A (an image 31 pixels $\times$ 31 pixels), as shown in Fig. 130B. As shown in Fig. 130B, the background portions shown in Fig. 130A (the portions which appear black in Fig. 130A) has distribution of a great number of pixels with low pixel value level (with pixel values around 20), and these portions with little change make up the image of the background region. Conversely, the portion wherein the pixel value level in Fig. 130B is not low, i.e., pixels with pixel value level distribution of around 40 to around 160 are pixels belonging to the spatial mixture region which make up the image of the fine line, and while the number of pixels for each pixel value is not great, these are distributed over a wide range of pixel values.

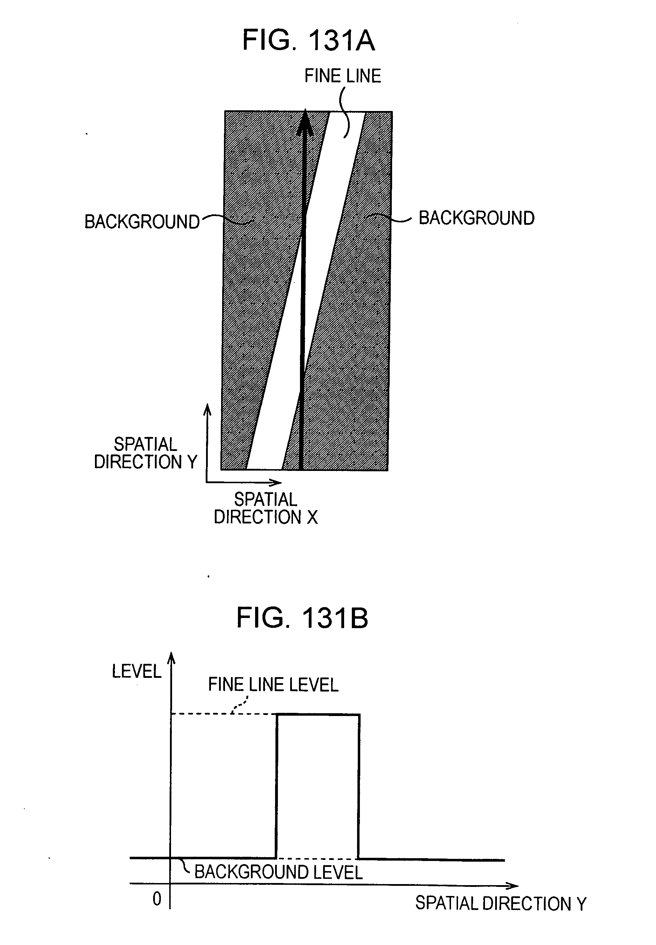

Now, viewing the levels of each of the background and the fine line in the real world image along the arrow direction (Y-coordinate direction) shown in Fig. 131A for example, change occurs as shown in Fig. 131B. That is to say, the background region from the start of the arrow to the fine line has a relatively low background level, and the fine line region has the fine line level which is a high level, and passing the fine line region and returning to the background region returns to the background level which is a low level. As a result, this forms a pulse-shaped waveform where only the fine line region is high level.

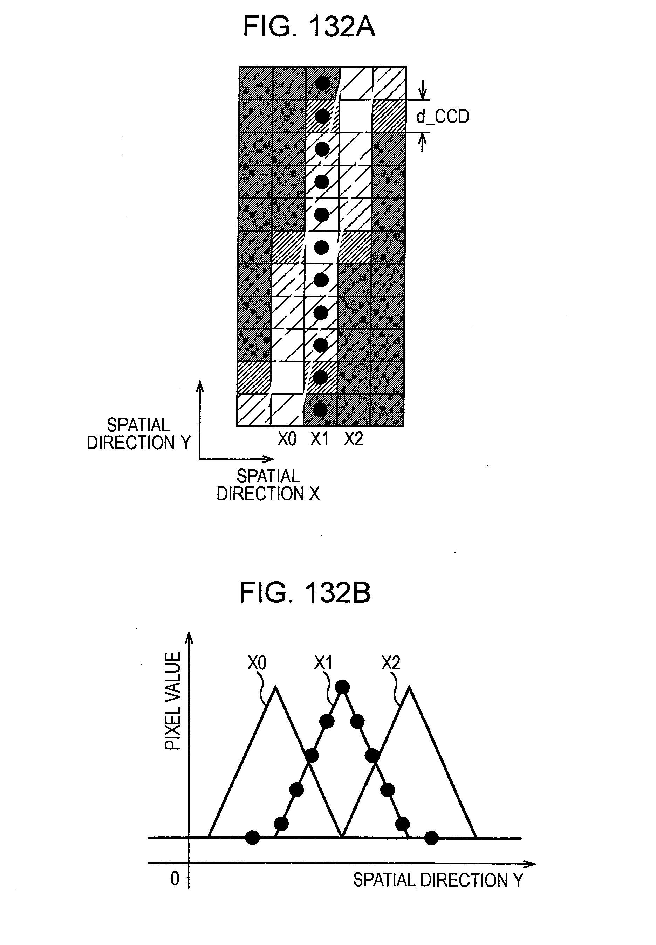

Conversely, in the image taken with the sensor 2, the relationship between the pixel values of the pixels of the spatial direction X = X1 in Fig. 132A corresponding to the arrow in Fig. 131A (the pixels indicated by black dots in Fig. 132A) and the spatial direction Y of these pixels is as shown in Fig. 132B. Note that in Fig. 132A, between the two white lines extending toward the upper right represents the fine line in the image of the real world.

That is to say, as shown in Fig. 132B, the pixel corresponding to the center pixel in Fig. 132A has the highest pixel value, so the pixel values of the pixels increases as the position of the spatial direction Y moves from the lower part of the figure toward the center pixel, and then gradually decreases after passing the center position. As a result, as shown in Fig. 132B, peak-shaped waveforms are formed. Also, the change in pixel values of the pixels corresponding to the spatial directions X = X0 and X2 in Fig. 132A also have the same shape, although the position of the peak in the spatial direction Y is shifted according to the gradient of the fine line.

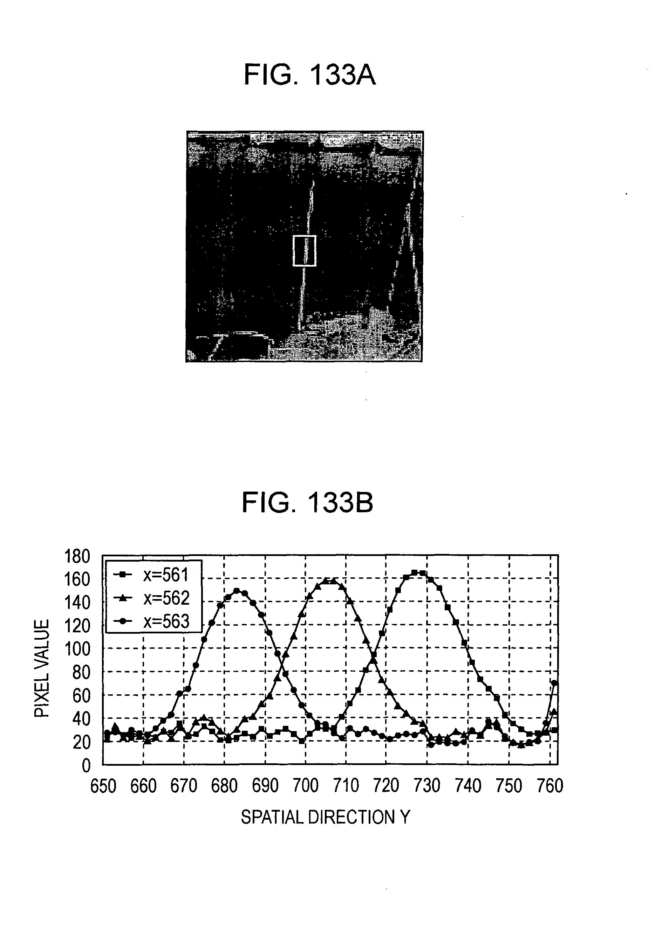

Even in a case of an image actually taken with the sensor 2 as shown in Fig. 133A for example, the same sort of results are obtained, as shown in Fig. 133B. That is to say, Fig. 133B shows the change in pixel values corresponding to the spatial direction Y for each predetermined spatial direction X (in the figure, X = 561, 562, 563) of the pixel values around fine line in the range enclosed by the white lines in the image in Fig. 133A. In this way, the image taken with the actual sensor 2 also has waveforms wherein X = 561 peaks at Y = 730, X = 562 at Y = 705, and X = 563 at Y = 685.

Thus, while the waveform indicating change of level near the fine line in the real world image exhibits a pulse-like waveform, the waveform indicating change of pixel values in the image taken by the sensor 2 exhibits peak-shaped waveforms.

That is to say, in other words, the level of the real world image should be a waveform as shown in Fig. 131B, but distortion occurs in the change in the imaged image due to having been taken by the sensor 2, and accordingly it can be said that this has changed into a waveform which is different from the real world image (wherein information of the real world has dropped out), as shown in Fig. 132B.

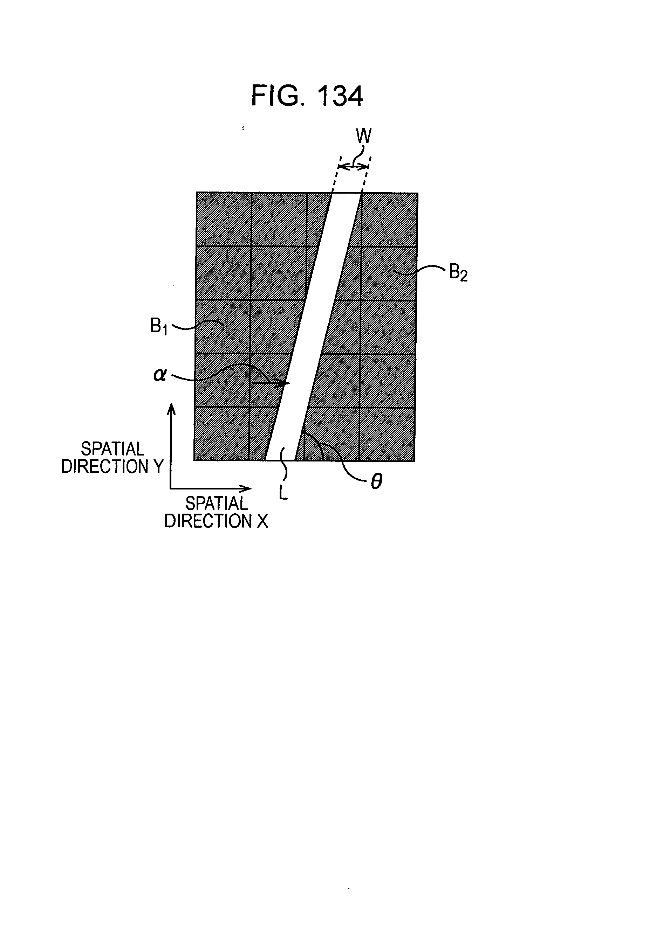

Accordingly, a model (equivalent to the model 705 in Fig. 123) for approximately describing the real world from the image data obtained from the sensor 2 is set, in order to obtain continuity information of the real world image from the image taken by the sensor 2. For example, in the case of a fine line, the real world image is set, as shown in Fig. 134. That is to say, parameters are set with the level of the background portion at the left part of the image as B1, the background portion at the right part of the image as B2, the level of the fine line portion as L, the mixture ratio of the fine line as $\alpha$, the width of the fine line as W, and the angle of the fine line as to the horizontal direction as $\theta$, this is formed into a model, a function approximately expressing the real world is set, an approximation function which approximately expresses the real world is obtained by obtaining the parameters, and the direction (gradient or angle as to the reference axis) of the fine line is obtained from the approximation function.

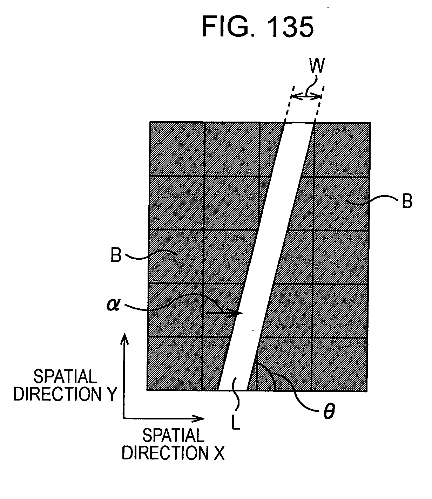

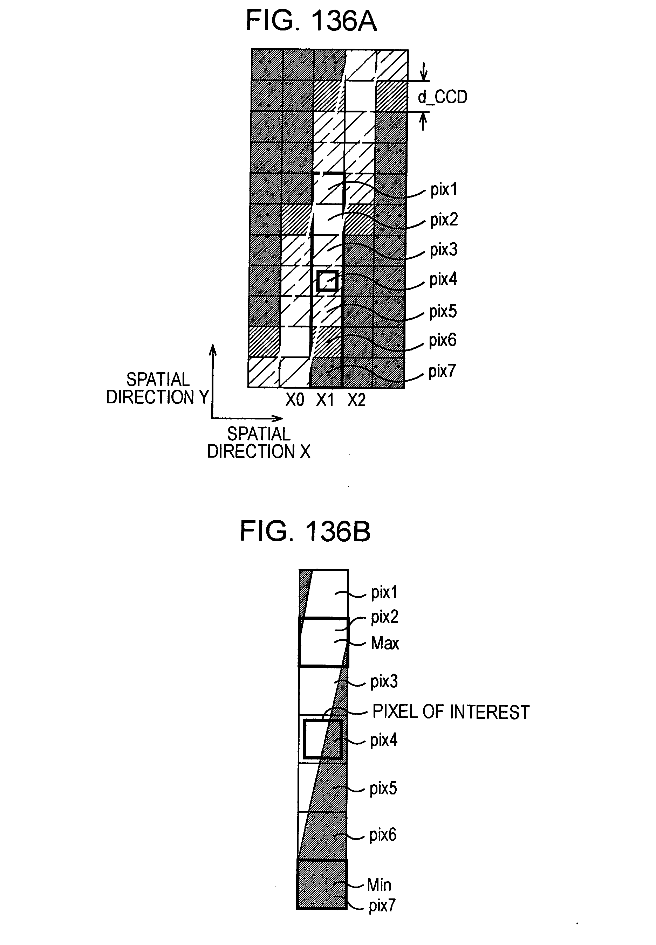

At this time, the left part and right part of the background region can be approximated as being the same, and accordingly are integrated into B (= B1 = B2) as shown in Fig. 135. Also, the width of the fine line is to be one pixel or more. At the time of taking the real world thus set with the sensor 2, the taken image is imaged as shown in Fig. 136A. Note that in Fig. 136A, the space between the two white lines extending towards the upper right represents the fine line on the real world image.

That is to say, pixels existing in a position on the fine line of the real world are of a level closest to the level of the fine line, so the pixel value decreases the further away from the fine line in the vertical direction (direction of the spatial direction Y), and the pixel values of pixels which exist at positions which do not come into contact with the fine line region, i.e., background region pixels, have pixel values of the background value. At this time, the pixel values of the pixels existing at positions straddling the fine line region and the background region have pixel values wherein the pixel value B of the background level and the pixel value L of the fine line level L are mixed with a mixture ratio $\alpha$.

In the case of taking each of the pixels of the imaged image as the pixel of interest in this way, the data acquiring unit 712 extracts the pixels of an acquired block corresponding to the pixel of interest, extracts a dynamic range block for each of the pixels making up the extracted acquired block, and extracts from the pixels making up the dynamic range block a pixel with a pixel value which is the maximum value and a pixel with a pixel value which is the minimum value. That is to say, as shown in Fig. 136A, in the event of extracting pixels of a dynamic range block (e.g., the 7 pixels of pix1 through 7 surrounded by the black solid line in the drawing) corresponding to a predetermined pixel in the acquired block (the pixel pix4 regarding which a square is described with a black solid line in one grid of the drawing), as shown in Fig. 136A, the image of the real world corresponding to each pixel is as shown in Fig. 136B.

That is to say, as shown in Fig. 136B, with the pixel pix1, the portion taking up generally 1/8 of the area to the left is the background region, and the portion taking up generally 7/8 of the area to the right is the fine line region. With the pixel pix2, generally the entire region is the fine line region. With the pixel pix3, the portion taking up generally 7/8 of the area to the left is the fine line region, and the portion taking up generally 1/8 of the area to the right is the background region. With the pixel pix4, the portion taking up generally 2/3 of the area to the left is the fine line region, and the portion taking up generally 1/3 of the area to the right is the background region. With the pixel pix5, the portion taking up generally 1/3 of the area to the left is the fine line region, and the portion taking up generally 2/3 of the area to the right is the background region. With the pixel pix6, the portion taking up generally 1/8 of the area to the left is the fine line region, and the portion taking up generally 7/8 of the area to the right is the background region. Further, with the pixel pix7, the entire region is the background region.

As a result, the pixel values of the pixels pix1 through 7 of the dynamic range block shown in Fig. 136A and Fig. 136B are pixel values wherein the background level and the fine line level are mixed at a mixture ratio corresponding to the ratio of the fine line region and the background region.

That is to say, the mixture ratio of background level: foreground level is generally 1:7 for pixel pix1, generally 0:1 for pixel pix2, generally 1:7 for pixel pix3, generally 1:2 for pixel pix4, generally 2:1 for pixel pix5, generally 7:1 for pixel pix6, and generally 1:0 for pixel pix7.

Accordingly, of the pixel values of the pixels pix1 through 7 of the dynamic range block that has been extracted, pixel pix2 is the highest, followed by pixels pix1 and 3, and then in the order of pixel value, pixels pix4, 5, 6, and 7. Accordingly, with the case shown in Fig. 136B, the maximum value is the pixel value of the pixel pix2, and the minimum value is the pixel value of the pixel pix7.

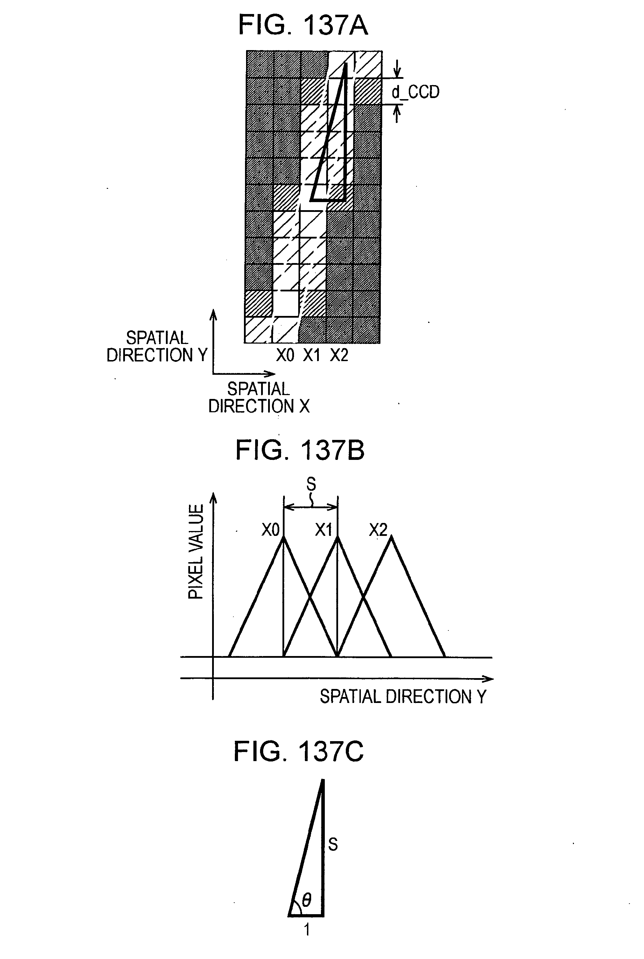

Also, as shown in Fig. 137A, the direction of the fine line can be said to be the direction in which pixels with maximum pixel values continue, so the direction in which pixels with the maximum value are arrayed is the direction of the fine line.

Now, the gradient $G_{f1}$ indicating the direction of the fine line is the ratio of change in the spatial direction Y (change in distance) as to the unit distance in the spatial direction X, so in the case of an illustration such as in Fig. 137A, the distance of the spatial direction Y as to the distance of one pixel in the spatial direction X in the drawing is the gradient $G_{f1}$.

Change of pixel values in the spatial direction Y of the spatial directions X0 through X2 is such that the peak waveform is repeated at predetermined intervals for each spatial direction X, as shown in Fig. 137B. As described above, the direction of the fine line is the direction in which pixels with maximum value continue in the image taken by the sensor 2, so the interval S in the spatial direction Y where the maximum values in the spatial direction X are is the gradient $G_{f1}$ of the fine line. That is to say, as shown in Fig. 137C, the amount of change in the vertical direction as to the distance of one pixel in the horizontal direction is the gradient $G_{f1}$. Accordingly, with the horizontal direction corresponding to the gradient thereof as the reference axis, and the angle of the fine line thereto expressed as θ, as shown in Fig. 137C, the gradient $G_{f1}$ (corresponding to the angle with the horizontal direction as the reference axis) of the fine line can be expressed in the relation shown in the following Expression (69).

$$\theta = \text{Tan}^{-1}\,(G_{f1})\,(= \text{Tan}^{-1}(S)) \qquad\qquad (69)$$

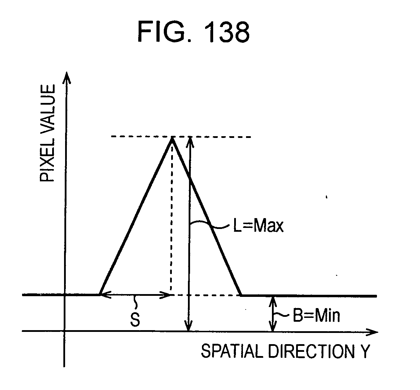

Also, in the case of setting a model such as shown in Fig. 135, and further assuming that the relationship between the pixel values of the pixels in the spatial direction Y is such that the waveform of the peaks shown in Fig. 137B is formed of perfect triangles (an isosceles triangle waveform where the leading edge or trailing edge change linearly), and, as shown in Fig. 138, with the maximum value of pixel values of the pixels existing in the spatial direction Y, in the spatial direction X of a predetermined pixel of interest as Max = L (here, a pixel value corresponding to the level of the fine line in the real world), and the minimum value as Min = B (here, a pixel value corresponding to the level of the background in the real world), the relationship illustrated in the following Expression (70) holds.

$$L - B = G_{f1} \times d\_y \qquad\qquad (70)$$

Here, d_y indicates the difference in pixel values between pixels in the spatial direction Y.

That is to say, the greater the gradient $G_{f1}$ in the spatial direction is, the closer the fine line is to being vertical, so the waveform of the peaks is a waveform of isosceles triangles with a great base, and conversely, the smaller the gradient S is, the smaller the base of the isosceles triangles of the waveform is. Consequently, the greater the gradient $G_{f1}$ is, the smaller the difference d_y of the pixel values between pixels in the spatial direction Y is, and the smaller the gradient S is, the greater the difference d_y of the pixel values between pixels in the spatial direction Y is.

Accordingly, obtaining the gradient $G_{f1}$ where the above Expression (70) holds allows the angle θ of the fine line as to the reference axis to be obtained. Expression (70) is a single-variable function wherein $G_{f1}$ is the variable, so this could be obtained using one set of difference d_y of the pixel values between pixels (in the vertical direction) around the pixel of interest, and the difference between the maximum value and minimum value (L - B), however, as described above, this uses an approximation expression assuming that the change of pixel values in the spatial direction Y assumes a perfect triangle, so dynamic range blocks are extracted for each of the pixels of the extracted block corresponding to the pixel of interest, and further the dynamic range Dr is obtained from the maximum value and the minimum value thereof, as well as statistically obtaining by the least-square method, using the difference d_y of pixel values between pixels in the spatial direction Y for each of the pixels in the extracted block.

Now, before starting description of statistical processing by the least-square method, first, the extracted block and dynamic range block will be described in detail.

As shown in Fig. 139 for example, the extracted block may be three pixels above and below the pixel of interest (the pixel of the grid where a square is drawn with black solid lines in the drawing) in the spatial direction Y, and one pixel to the right and left in the spatial direction X, for a total of 15 pixels, or the like. Also, in this case, for the difference d_y of pixel values between each of the pixels in the extracted block, with difference corresponding to pixel pix11 being expressed as d_y11 for example, in the case of spatial direction X = X0, differences d_y11 through d_y16 are obtained for the pixel values between the pixels pix11 and pix12, pix12 and pix13, pix13 and pix14, pix15 and pix16, and pix16 and pix17. At this time, the difference of pixel values between pixels is obtained in the same way for spatial direction X = X1 and X2, as well. As a result, there are 18 differences d_y of pixel values between the pixels.

Further, with regard to the pixels of the extracted block, determination has been made for this case based on the determination results of the horizontal/vertical determining unit 711 that the pixels of the dynamic range block are, with regard to pix11 for example, in the vertical direction, so as shown in Fig. 139, the pixel pix11 is taken along with three pixels in both the upwards and downwards direction which is the vertical direction (spatial direction Y) so that the range of the dynamic range block B1 is 7 pixels, the maximum value and minimum value of the pixel values of the pixels in this dynamic range block B1 is obtained, and further, the dynamic range obtained from the maximum value and the minimum value is taken as dynamic range Dr11. In the same way, the dynamic range Dr12 is obtained regarding the pixel pix12 of the extracted block from the 7 pixels of the dynamic range block B2 shown in Fig. 139 in the same way. Thus, the gradient $G_{f1}$ is statistically obtained using the least-square method, based on the combination of the 18 pixel differences d_yi in the extracted block and the corresponding dynamic ranges Dri.

Next, the single-variable least-square solution will be described. Let us assume here that the determination results of the horizontal/vertical determining unit 711 are the vertical direction.

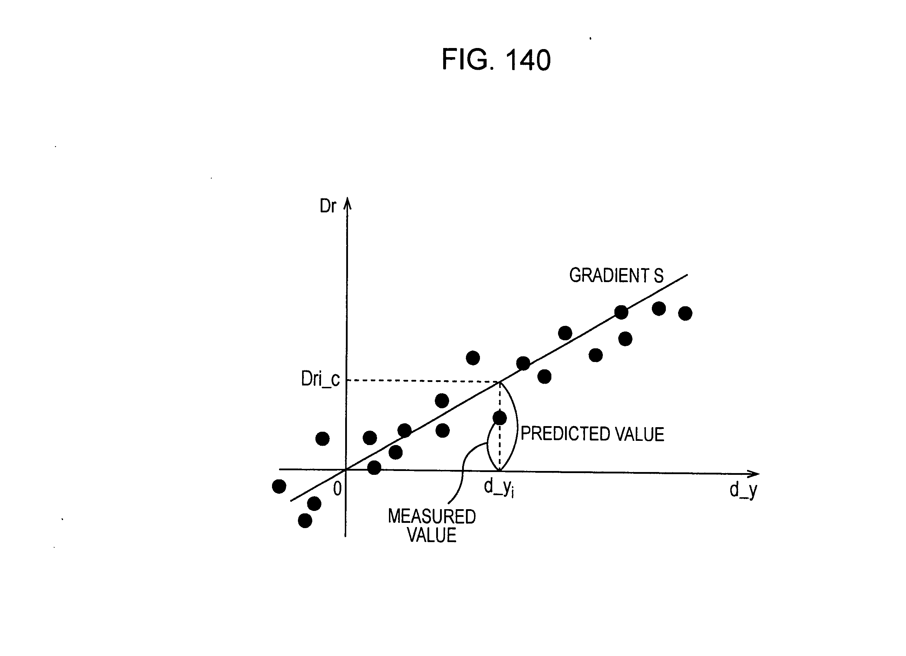

The single-variable least-square solution is for obtaining, for example, the gradient $G_{f1}$ of the straight line made up of prediction values Dri_c wherein the distance to all of the actual measurement values indicated by black dots in Fig. 140 is minimal. Thus, the gradient S is obtained from the following technique based on the relationship indicated in the above-described Expression (70).

That is to say, with the difference between the maximum value and the minimum value as the dynamic range Dr, the above Expression (70) can be described as in the following Expression (71).

$$Dr = G_{f1} \times d\_y \qquad\qquad (71)$$

Thus, the dynamic range Dri_c can be obtained by substituting the difference d_yi between each of the pixels in the extracted block into the above Expression (71). Accordingly, the relation of the following Expression (72) is satisfied for each of the pixels.

$$Dri\_c = G_{f1} \times d\_yi \qquad\qquad (72)$$

Here, the difference d_yi is the difference in pixel values between pixels in the spatial direction Y for each of the pixels i (for the example, the difference in pixel values between pixels adjacent to a pixel i in the upward direction or the downward direction, and Dri_c is the dynamic range obtained when the Expression (70) holds regarding the pixel i.

As described above, the least-square method as used here is a method for obtaining the gradient $G_{f1}$ wherein the sum of squared differences Q of the dynamic range Dri_c for the pixel i of the extracted block and the dynamic range Dri_r which is the actual measured value of the pixel i, obtained with the method described with reference to Fig. 136A and Fig. 136B, is the smallest for all pixels within the image. Accordingly, the sum of squared differences Q can be obtained by the following Expression (73).

$$Q = \sum_{i=1}^{n} \{Dr_{i\_}r - Dr_{i\_}c\}^2$$
$$= \sum_{i=1}^{n} \{Dr_{i\_}r - G_{f1} \times d\_y_i\}^2$$

$$\cdots (73)$$

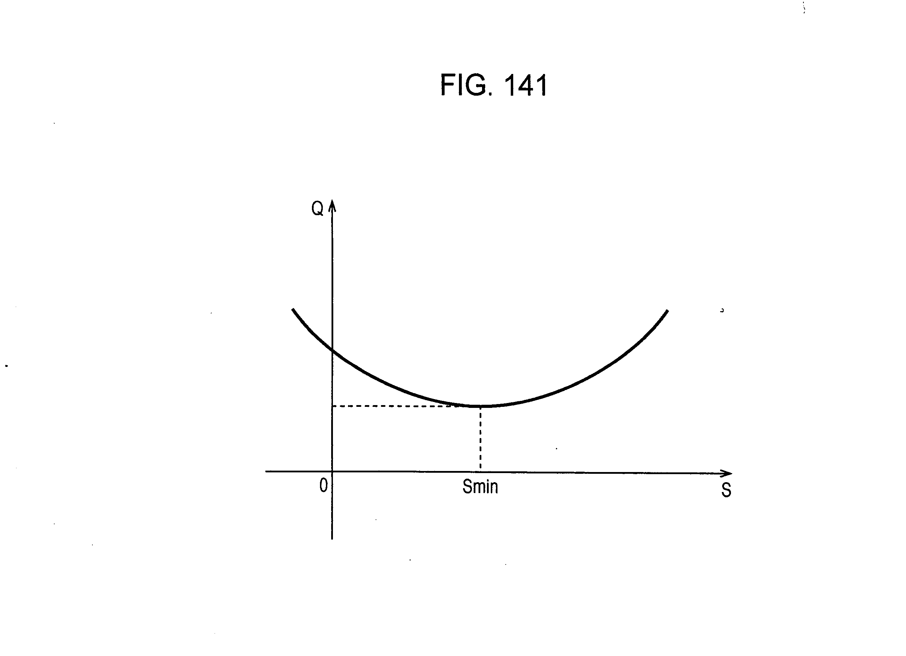

The sum of squared differences Q shown in Expression (73) is a quadratic function, which assumes a downward-convex curve as shown in Fig. 141 regarding the variable $G_{f1}$ (gradient $G_{f1}$), so $G_{f1}min$ where the gradient $G_{f1}$ is the smallest is the solution of the least-square method.

Differentiating the sum of squared differences Q shown in Expression (73) with the variable $G_{f1}$ yields $dQ/dG_{f1}$ shown in the following Expression (74).

$$\frac{\partial Q}{\partial G_{fl}} = \sum_{i=1}^{n} 2(-d\_y_i)(Dr_{i\_}r - G_{fl} \times d\_y_i)$$

$$\ldots (74)$$

With Expression (74), 0 is the $G_{f1}min$ assuming the minimal value of the sum of squared differences Q shown in Fig. 141, so by expanding the Expression wherein Expression (74) is 0 yields the gradient $G_{f1}$ with the following Expression (75).

$$G_{fl} = \frac{\sum_{i=1}^{n} Dr_{i\_}r \times d\_y_i}{\sum_{i=1}^{n} (d\_y_i)^2}$$

$$\ldots (75)$$

The above Expression (75) is a so-called single-variable (gradient $G_{f1}$) normal equation.

Thus, substituting the obtained gradient $G_{f1}$ into the above Expression (69) yields the angle θ of the fine line with the horizontal direction as the reference axis, corresponding to the gradient $G_{f1}$ of the fine line.

Now, in the above description, description has been made regarding a case wherein the pixel of interest is a pixel on the fine line which is within a range of angle θ of 45 degrees degrees ≤ θ < 135 degrees degrees with the horizontal direction as the reference axis, but in the event that the pixel of interest is a pixel on the fine line closer to the horizontal direction, within a range of angle θ of 0 degrees degrees ≤ θ < 45 degrees degrees or 135 degrees degrees ≤ θ < 108 degrees degrees with the horizontal direction as the reference axis for example, the difference of pixel values between pixels adjacent to the pixel i in the horizontal direction is d_xi, and in the same way, at the time of obtaining the maximum value or minimum value of pixel values from the multiple pixels corresponding to the pixel i, the pixels of the dynamic range block to be extracted are selected from multiple pixels existing in the horizontal direction as to the pixel i. With the processing in this case, the relationship between the horizontal direction and vertical direction in the above description is simply switched, so description thereof will be omitted.

Also, similar processing can be used to obtain the angle corresponding to the gradient of a two-valued edge.

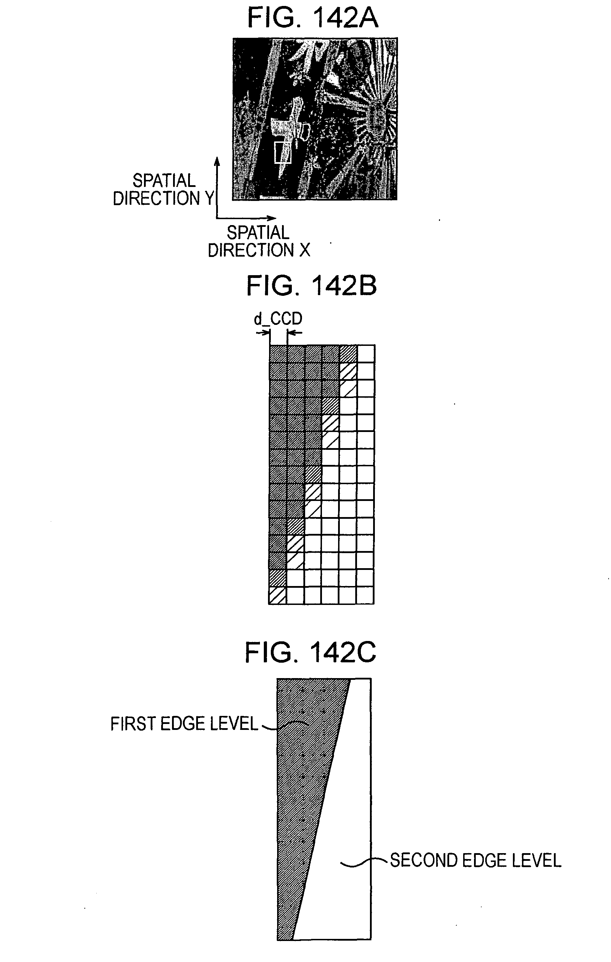

That is to say, enlarging the portion in an input image such as that enclosed by the white lines as illustrated in Fig. 142A shows that the edge portion in the image (the lower part of the cross-shaped character written in white on a black banner in the figure) (hereafter, an edge portion in an image made up of two value levels will also be called a two-valued edge) is actually displayed as shown in Fig. 142B. That is to say, in the real world, the image has a boundary formed of the two types of levels of a first level (the field level of the banner) and a second level (the level of the character (the hatched portion with low concentration in Fig. 142C)), and no other.levels exist. Conversely, with the image taken by the sensor 2, i.e., the image taken in increments of pixels, a portion where first level pixels are arrayed and a portion where second level pixels are arrayed border on a region wherein there is a repeated array in the direction in which the edge exists of blocks which are made up of pixels occurring as the result of spatially mixing the first level and the second level, arrayed in the vertical direction, so that the ratio (mixture ratio) thereof changes according to a certain pattern.

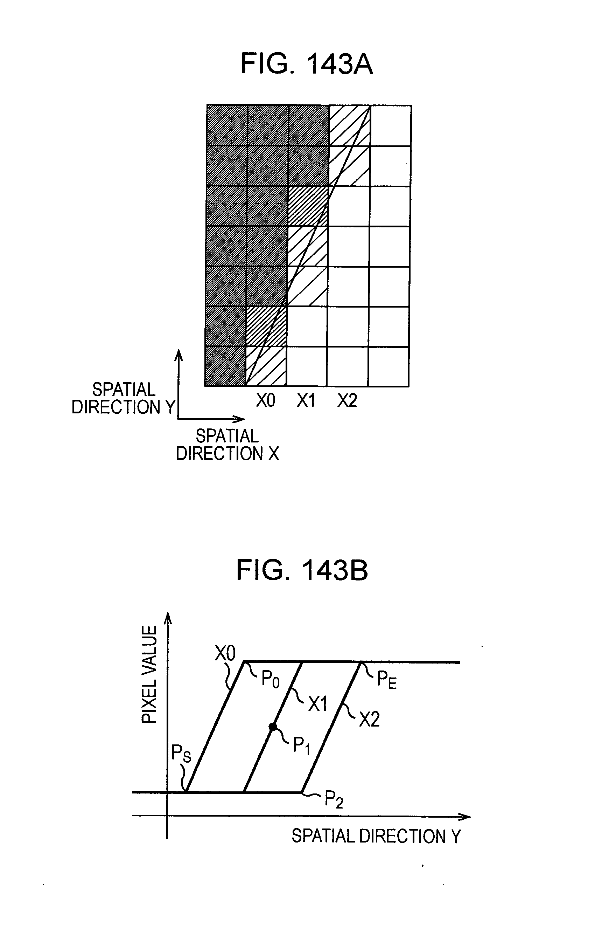

That is to say, as shown in Fig. 143A, with regard to the spatial direction X = X0, X1, and X2, the respective change of pixel values in the spatial direction Y is such that as shown in Fig. 143B, the pixel values are a predetermined minimum value pixel value from the bottom of the figure to near to the two-valued edge (the straight line in Fig. 143A which heads toward the upper right) boundary, but the pixel value gradually increases near the two-valued edge boundary, and at the point $P_E$ in the drawing past the edge the pixel value reaches a predetermined maximum value. More specifically, the change of the spatial direction X = X0 is such that the pixel value gradually increases after passing the point $P_s$ which is the minimum value of the pixel value, and reaches the point P0 where the pixel value is the maximum value, as shown in Fig. 143B. In comparison with this, the change of pixel values of the pixels in the spatial direction X = X1 exhibits a waveform offset in the spatial direction, and accordingly increases to the maximum value of the pixel value via the point P1 in the drawing, with the position where the pixel value gradually increases from the minimum value of pixel values being a direction offset in the positive direction of the spatial direction Y as shown in Fig. 143B. Further, change of pixel values in the spatial direction Y at the spatial direction X = X2 decreases via a point P2 in the drawing which is even further shifted in the positive direction of the spatial direction Y, and goes from the maximum value of the pixel value to the minimum value.

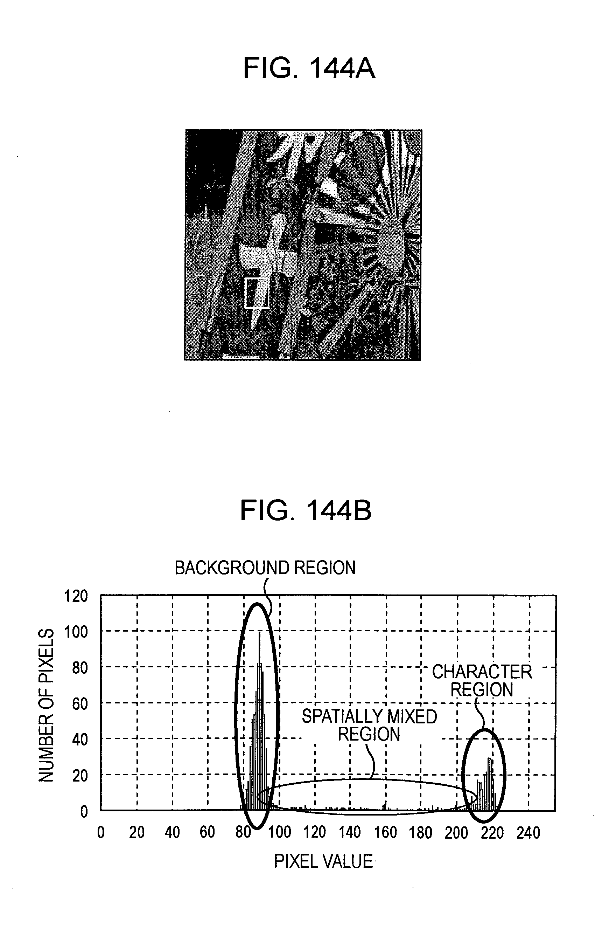

A similar tendency can be observed at the portion enclosed with the white line in the actual image, as well. That is to say, in the portion enclosed with the white line in the actual image in Fig. 144A (a 31 pixel $\times$ 31 pixel image), the background portion (the portion which appears black in Fig. 144A) has distribution of a great number of pixels with low pixel values (pixel value around 90) as shown in Fig. 144B, and these portions with little change form the image of the background region. Conversely, the portion in Fig. 144B wherein the pixel values are not low, i.e., pixels with pixel values distributed around 100 to 200 are a distribution of pixels belonging to the spatially mixed region between the character region and the background region, and while the number of pixels per pixel value is small, the distribution is over a wide range of pixel values. Further, a great number of pixels of the character region with high pixel values (the portion which appears white in Fig. 144A) are distributed around the pixel value shown as 220.

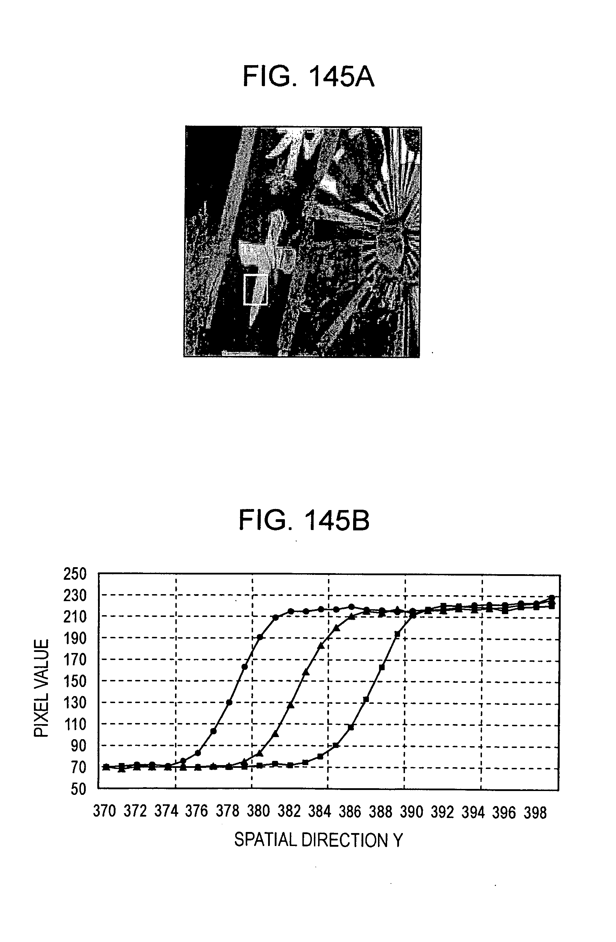

As a result, the change of pixel values in the spatial direction Y as to the predetermined spatial direction X in the edge image shown in Fig. 145A is as shown in Fig. 145B.

That is, Fig. 145B illustrates the change of pixel values corresponding to the spatial direction Y, for each predetermined spatial direction X (in the drawing, X = 658, 659, 660) regarding the pixel values near the edge within the range enclosed by the white lines in the image in Fig. 145A. As can be seen here, in the image taken by the actual sensor 2 as well, with X = 658, the pixel value begins to increase around Y = 374 (the distribution indicated by black circles in the drawing), and reaches the maximum value around X = 382. Also, with X = 659, the pixel value begins to increase around Y = 378 which is shifted in the positive direction as to the spatial direction Y (the distribution indicated by black triangles in the drawing), and reaches the maximum pixel value around X = 386. Further, with X = 660, the pixel value begins to increase around Y = 382 which is shifted even further in the positive direction as to the spatial direction Y (the distribution indicated by black squares in the drawing), and reaches the maximum value around X = 390.

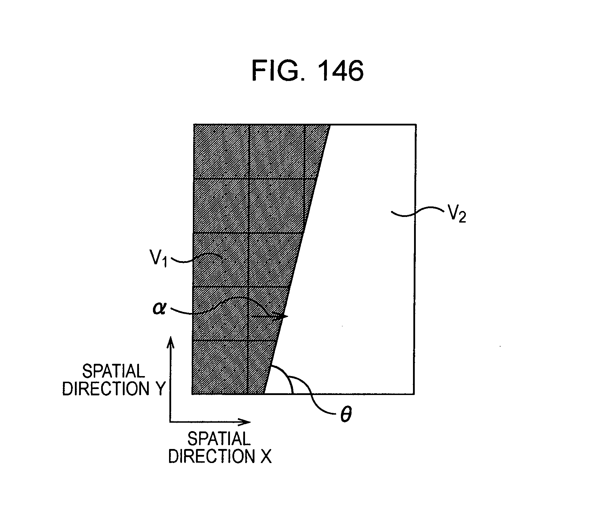

Accordingly, in order to obtain continuity information of the real world image from the image taken by the sensor 2, a model is set to approximately describe the real world from the image data acquired by the sensor 2. For example, in the case of a two-valued edge, a real world image is set, as shown in Fig. 146. That is to say, parameters are set with the background portion level to the left in the figure as V1, the character portion level to the right side in the figure as V2, the mixture ratio between pixels around the two-valued edge as $\alpha$, and the angle of the edge as to the horizontal direction as $\theta$, this is formed into a model, a function which approximately expresses the real world is set, the parameters are obtained so as to obtain a function which approximately expresses the real world, and the direction (gradient, or angle as to the reference axis) of the edge is obtained from the approximation function.

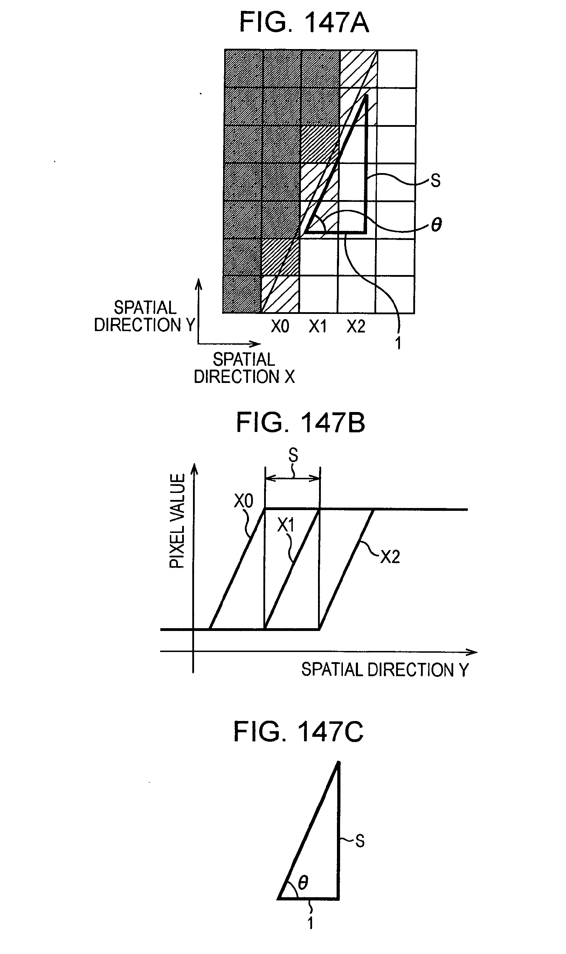

Now, the gradient indicating the direction of the edge is the ratio of change in the spatial direction Y (change in distance) as to the unit distance in the spatial direction X, so in a case such as shown in Fig. 147A, the distance in the spatial direction Y as to the distance of one pixel in the spatial direction X in the drawing is the gradient.

The change in pixel values as to the spatial direction Y for each of the spatial directions X0 through X2 is such that the same waveforms are repeated at predetermined intervals for each of the spatial directions X, as shown in Fig. 147B. As described above, the edge in the image taken by the sensor 2 is the direction in which similar pixel value change (in this case, change in pixel values in a predetermined spatial direction Y, changing from the minimum value to the maximum value) spatially continues, so the intervals S of the position where change of pixel values in the spatial direction Y begins, or the spatial direction Y which is the position where change ends, for each of the spatial directions X, is the gradient $G_{fe}$ of the edge. That is to say, as shown in Fig. 147C, the amount of change in the vertical direction as to the distance of one pixel in the horizontal direction, is the gradient $G_{fe}$.

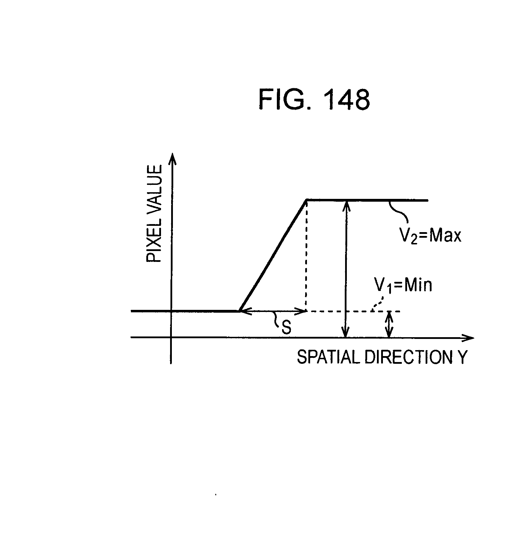

Now, this relationship is the same as the relationship regarding the gradient $G_{f1}$ of the fine line described above with reference to Fig. 137A through C. Accordingly, the relational expression is the same. That is to say, the relational expression in the case of a two-valued edge is that shown in Fig. 148, with the pixel value of the background region as V1, and the pixel value of the character region as V2, each as the minimum value and the maximum value. Also, with the mixture ratio of pixels near the edge as $\alpha$, and the edge gradient as $G_{fe}$, relational expressions which hold will be the same as the above Expression (69) through Expression (71) (with $G_{f1}$ replaced with $G_{fe}$).

Accordingly, the data continuity detecting unit 101 shown in Fig. 124 can detect the angle corresponding to the gradient of the fine line, and the angle corresponding to the gradient of the edge, as data continuity information with the same processing. Accordingly, in the following, gradient will collectively refer to the gradient of the fine line and the gradient of the two-valued edge, and will be called gradient $G_f$. Also, the gradient $G_{f1}$ in the above Expression (73) through Expression (75) may be $G_{fe}$, and consequently, will be considered to be substitutable with $G_f$.

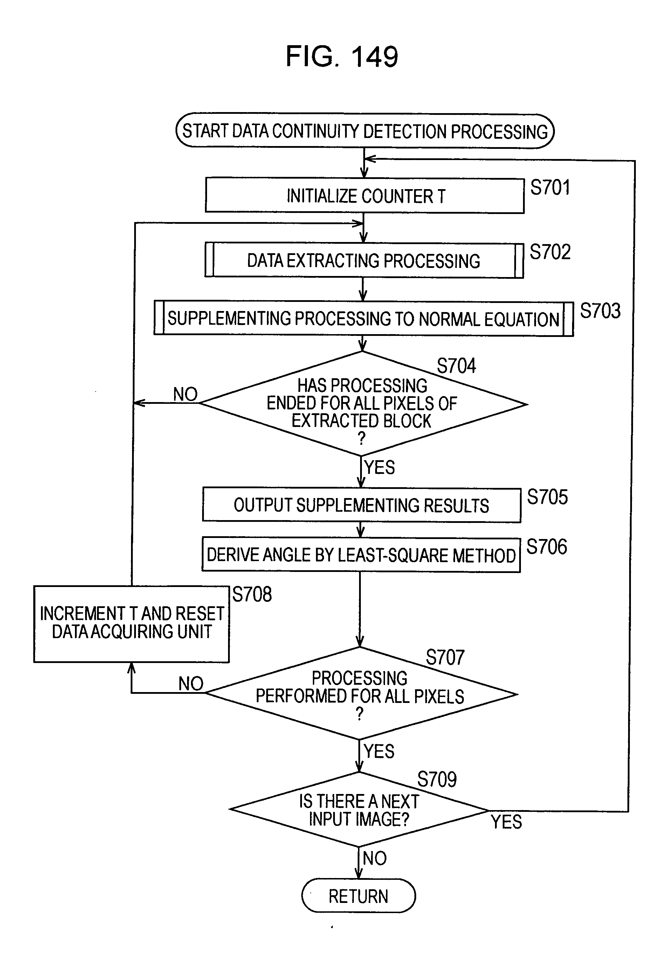

Next, the processing for detecting data continuity will be described with reference to the flowchart in Fig. 149.

In step S701, the horizontal/vertical determining unit 711 initializes a counter T which identifies each of the pixels of the input image.

In step S702, the horizontal/vertical determining unit 711 performs processing for extracting data necessary in later steps.

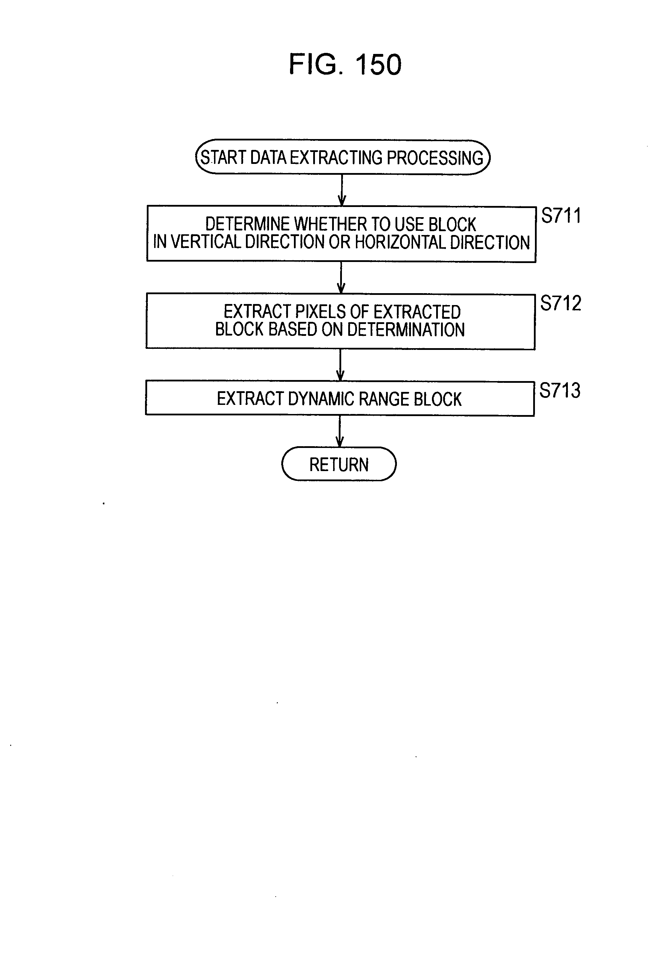

Now, the processing for extracting data will be described with reference to the flowchart in Fig. 150.

In step S711, the horizontal/vertical determining unit 711 of the data selecting unit 701 computes, for each pixel of interest T, as described with reference to Fig. 125, the sum of difference (activity) of the pixel values of the pixel values between the pixels in the horizontal direction (hdiff) and the sum of difference (activity) between pixels in the vertical direction (vdiff), with regard to nine pixels adjacent in the horizontal, vertical, and diagonal directions, and further obtains the difference thereof the difference (hdiff minus vdiff); in the event that (hdiff minus vdiff) $\geq$ 0, and with the pixel of interest T taking the horizontal direction as the reference axis, determination is made that it is a pixel near a fine line or two-valued edge closer to the vertical direction, wherein the angle $\theta$ as to the reference axis is 45 degrees degrees $\leq \theta <$ 135 degrees degrees, and determination results indicating that the extracted block to be used corresponds to the vertical direction are output to the data acquiring unit 712 and the data supplementing unit 702.

On the other hand, in the event that (hdiff minus vdiff) < 0, and with the pixel of interest taking the horizontal direction as the reference axis, determination is made by the horizontal/vertical determining unit 711 that it is a pixel near a fine line or edge closer to the horizontal direction, wherein the angle $\theta$ of the fine line or the two-valued edge as to the reference axis is 0 degrees degrees $\leq \theta <$ 45 degrees degrees or 135 degrees degrees $\leq \theta <$ 180 degrees degrees, and determination results indicating that the extracted block to be used corresponds to the horizontal direction are output to the data acquiring unit 712 and the data supplementing unit 702.

That is, the gradient of the fine line or two-valued edge being closer to the vertical direction means that, as shown in Fig. 131A for example, the portion of the fine line which intersects with the arrow in the drawing is greater, so extracted blocks with an increased number of pixels in the vertical direction are set (vertically long extracted blocks are set). In the same way, with the case of fine lines having a gradient closer to the horizontal direction, extracted blocks with an increased number of pixels in the horizontal direction are set (horizontally long extracted blocks are set). Thus, accurate maximum values and minimum values can be computed without increasing the amount of unnecessary calculations.

In step S712, the data acquiring unit 712 extracts pixels of an extracted block corresponding to the determination results input from the horizontal/vertical determining unit 711 indicating the horizontal direction or the vertical direction for the pixel of interest. That is to say, as shown in Fig. 139 for example, (three pixels in the horizontal direction) $\times$ (seven pixels in the vertical direction) for a total of 21 pixels, centered on the pixel of interest, are extracted as the extracted block, and stored.

In step S713, the data acquiring unit 712 extracts the pixels of dynamic range blocks corresponding to the direction corresponding to the determination results of the horizontal/vertical determining unit 711 for each of the pixels in the extracted block, and stores these. That is to say, as described above with reference to Fig. 139, in this case, with regard to the pixel pix11 of the extracted block for example, the determination results of the horizontal/vertical determining unit 711 indicate the vertical direction, so the data acquiring unit 712 extracts the dynamic range block B1 in the vertical direction, and extracts the dynamic range block B2 for the pixel pix12 in the same way. Dynamic range blocks are extracted for the other extracted blocks in the same way.

That is to say, information of pixels necessary for computation of the normal equation regarding a certain pixel of interest T is stored in the data acquiring unit 712 with this data extracting processing (a region to be processed is selected).

Now, let us return to the flowchart in Fig. 149.

In step S703, the data supplementing unit 702 performs processing for supplementing the values necessary for each of the items in the normal equation (Expression (74) here).

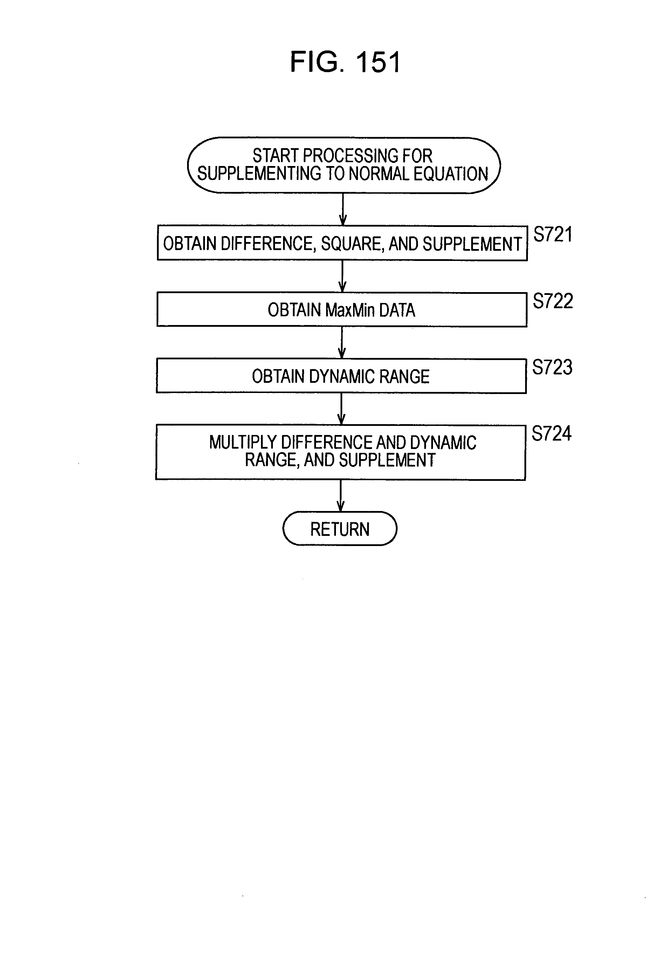

Now, the supplementing process to the normal equation will be described with reference to the flowchart in Fig. 151.

In step S721, the difference supplementing unit 721 obtains (detects) the difference of pixel values between the pixels of the extracted block stored in the data acquiring unit 712, according to the determination results of the horizontal/vertical determining unit 711 of the data selecting unit 701, and further raises these to the second power (squares) and supplements. That is to say, in the event that the determination results of the horizontal/vertical determining unit 711 are the vertical direction, the difference supplementing unit 721 obtains the difference of pixel values between pixels adjacent to each of the pixels of the extracted block in the vertical direction, and further squares and supplements these. In the same way, in the event that the determination results of the horizontal/vertical determining unit 711 are the horizontal direction, the difference supplementing unit 721 obtains the difference of pixel values between pixels adjacent to each of the pixels of the extracted block in the horizontal direction, and further squares and supplements these. As a result, the difference supplementing unit 721 generates the sum of squared difference of the items to be the denominator in the above-described Expression (75) and stores.

In step S722, the MaxMin acquiring unit 722 obtains the maximum value and minimum value of the pixel values of the pixels contained in the dynamic range block stored in the data acquiring unit 712, and in step S723, obtains (detects) the dynamic range from the maximum value and minimum value, and outputs this to the difference supplementing unit 723. That is to say, in the case of a 7-pixel dynamic range block made up of pixels pix1 through 7 as illustrated in Fig. 136B, the pixel value of pix2 is detected as the maximum value, the pixel value of pix7 is detected as the minimum value, and the difference of these is obtained as the dynamic range.

In step S724, the difference supplementing unit 723 obtains (detects), from the pixels in the extracted block stored in the data acquiring unit 712, the difference in pixel values between pixel adjacent in the direction corresponding to the determination results of the horizontal/vertical determining unit 711 of the data selecting unit 701, and supplements values multiplied by the dynamic range input from the MaxMin acquiring unit 722. That is to say, the difference supplementing unit 721 generates a sum of items to serve as the numerator in the above-described Expression (75), and stores this.

Now, let us return to description of the flowchart in Fig. 149.

In step S704, the difference supplementing unit 721 determines whether or not the difference in pixel values between pixels (the difference in pixel values between pixels adjacent in the direction corresponding to the determination results of the horizontal/vertical determining unit 711) has been supplemented for all pixels of the extracted block, and in the event that determination is made that, for example, the difference in pixel values between pixels has not been supplemented for all pixels of the extracted block, the flow returns to step S702, and the subsequent processing is repeated. That is to say, the processing of step S702 through S704 is repeated until determination is made that the difference in pixel values between pixels has been supplemented for all pixels of the extracted block.

In the event that determination is made in step S704 that the difference in pixel values between pixels has been supplemented for all pixels of the extracted block, in step S705, the difference supplementing units 721 and 723 output the supplementing results stored therein to the continuity direction derivation unit 703.

In step S706, the continuity direction computation unit 731 solves the normal equation given in the above-described Expression (75), based on: the sum of squared difference in pixel values between pixels adjacent in the direction corresponding to the determination results of the horizontal/vertical determining unit 711, of the pixels in the acquired block input from the difference supplementing unit 721 of the data supplementing unit 702; the difference in pixel values between pixels adjacent in the direction corresponding to the determination results of the horizontal/vertical determining unit 711, of the pixels in the acquired block input from the difference supplementing unit 723; and the sum of products of the dynamic ranges corresponding to the pixels of the obtained block; thereby statistically computing and outputting the angle indicating the direction of continuity (the angle indicating the gradient of the fine line or two-valued edge), which is the data continuity information of the pixel of interest, using the least-square method.

In step S707, the data acquiring unit 712 determines whether or not processing has been performed for all pixels of the input image, and in the event that determination is made that processing has not been performed for all pixels of the input image for example, i.e., that information of the angle of the fine line or two-valued edge has not been output for all pixels of the input image, the counter T is incremented by 1 in step S708, and the process returns to step S702. That is to say, the processing of steps S702 through S708 is repeated until pixels of the input image to be processed are changed and processing is performed for all pixels of the input image. Change of pixel by the counter T may be according to raster scan or the like for example, or may be sequential change according to other rules.

In the event that determination is made in step S707 that processing has been performed for all pixels of the input image, in step S709 the data acquiring unit 712 determines whether or not there is a next input image, and in the event that determination is made that there is a next input image, the processing returns to step S701, and the subsequent processing is repeated.

In the event that determination is made in step S709 that there is no next input image, the processing ends.

According to the above processing, the angle of the fine line or two-valued edge is detected as continuity information and output.

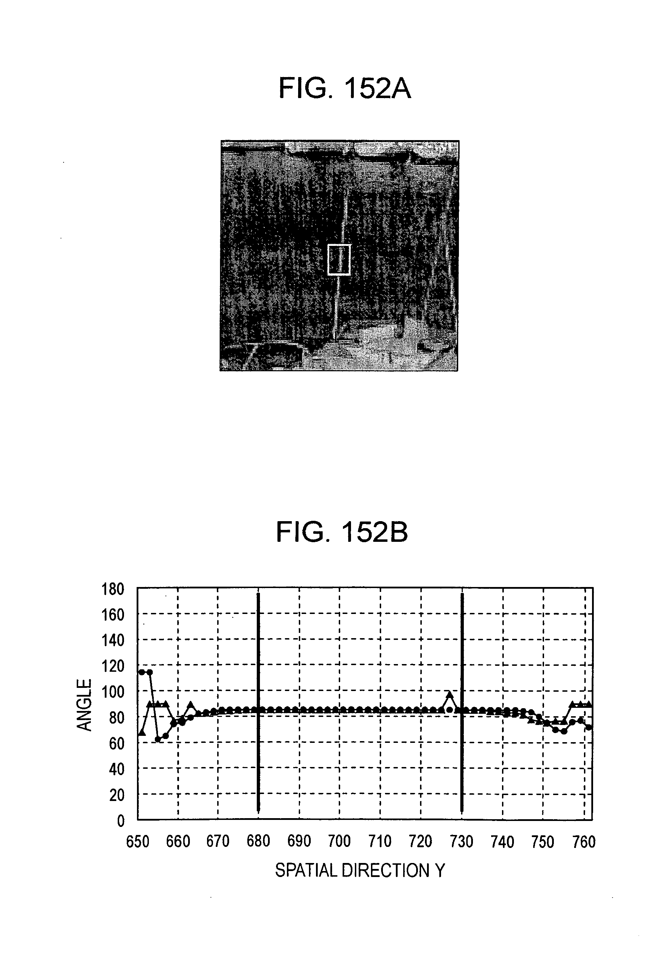

The angle of the fine line or two-valued edge obtained by this statistical processing approximately matches the angle of the fine line or two-valued edge obtained using correlation. That is to say, with regard to the image of the range enclosed by the white lines in the image shown in Fig. 152A, as shown in Fig. 152B, the angle indicating the gradient of the fine line obtained by the method using correlation (the black circles in the figure) and the angle of the fine line obtained by statistical processing with the data continuity detecting unit 101 shown in Fig. 124 (the black triangles in the figure) approximately agree at the spatial direction Y coordinates near the fine line, with regard to change in gradient in the spatial direction Y at predetermined coordinates in the horizontal direction on the fine line. Note that in Fig. 152B, the spatial directions Y = 680 through 730 between the black lines in the figure are the coordinates on the fine line.

In the same way, with regard to the image of the range enclosed by the white lines in the image shown in Fig.

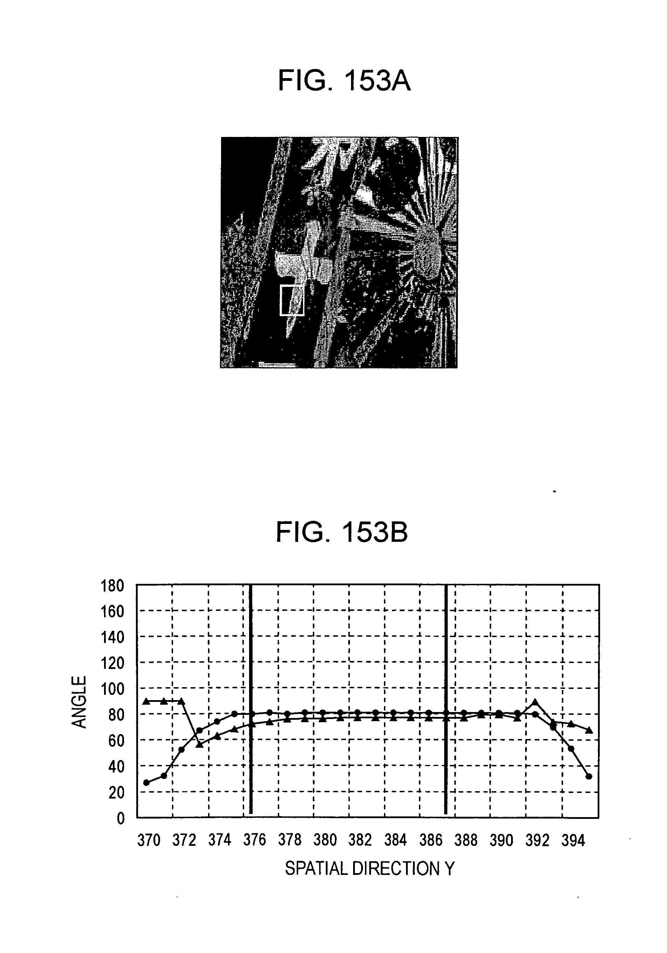

153A, as shown in Fig. 153B, the angle indicating the gradient of the two-valued edge obtained by the method using correlation (the black circles in the figure) and the angle of the two-valued edge obtained by statistical processing with the data continuity detecting unit 101 shown in Fig. 124 (the black triangles in the figure) approximately agree at the spatial direction Y coordinates near the fine line, with regard to change in gradient in the spatial direction Y at predetermined coordinates in the horizontal direction on the two-valued edge. Note that in Fig. 153B, the spatial directions Y = (around) 376 through (around) 388 are the coordinates on the fine line.

Consequently, the data continuity detecting unit 101 shown in Fig. 124 can statistically obtain the angle indicating the gradient of the fine line or two-valued edge (the angle with the horizontal direction as the reference axis here) using information around each pixel for obtaining the angle of the fine line or two-valued edge as the data continuity, unlike the method using correlation with blocks made up of predetermined pixels, and accordingly, there is no switching according to predetermined angle ranges as observed with the method using correlation, thus, the angle of the gradients of all fine lines or two-valued edges can be obtained with the same processing, thereby enabling simplification of the processing.

Also, while description has been made above regarding an example of the data continuity detecting unit 101 outputting the angle between the fine line or two-valued edge and a predetermined reference axis as the continuity information, but it is conceivable that depending on the subsequent processing, outputting the angle as such may improve processing efficiency. In such a case, the continuity direction derivation unit 703 and continuity direction computation unit 731 of the data continuity detecting unit 101 may output the gradient $G_f$ of the fine line or two-valued edge obtained by the least-square method as continuity information, without change.

Further, while description has been made above regarding a case wherein the dynamic range Dri_r in Expression (75) is computed having been obtained regarding each of the pixels in the extracted block, but setting the dynamic range block sufficiently great, i.e., setting the dynamic range for a great number of pixels of interest and a great number of pixels therearound, the maximum value and minimum value of pixel values of pixels in the image should be selected at all times for the dynamic range. Accordingly, an arrangement may be made wherein computation is made for the dynamic range Dri_r with the dynamic range Dri_r as a fixed value obtained as the dynamic range from the maximum value and minimum value of pixels in the extracted block or in the image data without computing each pixel of the extracted block.

That is to say, an arrangement may be made to obtain the angle θ (gradient $G_f$) of the fine line by supplementing only the difference in pixel values between the pixels, as in the following Expression (76). Fixing the dynamic range in this way allows the computation processing to be simplified, and processing can be performed at high speed.

$$G_f = \frac{Dr \times \sum_{i=1}^{n} d\_y_i}{\sum_{i=1}^{n} (d\_y_i)^2}$$

$$\ldots (76)$$

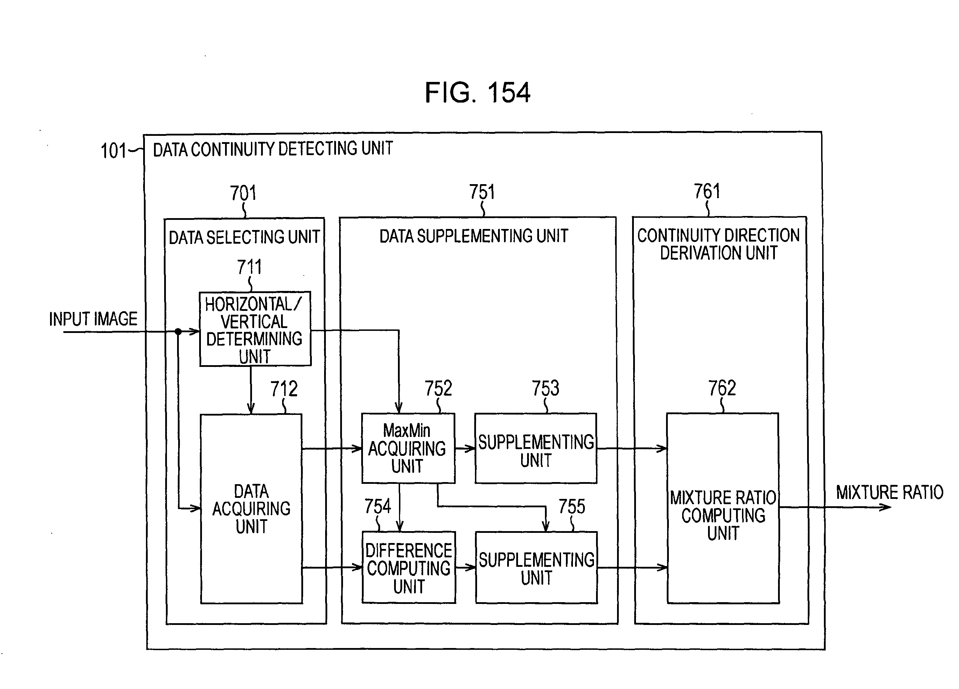

Next, description will be made regarding the data continuity detecting unit 101 for detecting the mixture ratio of the pixels as data continuity information with reference to Fig. 154.

Note that with the data continuity detecting unit 101 shown in Fig. 154, portions which correspond to those of the data continuity detecting unit 101 shown in Fig. 124 are denoted with the same symbols, and description thereof will be omitted as appropriate.

With the data continuity detecting unit 101 shown in Fig. 154, what differs from the data continuity detecting unit 101 shown in Fig. 124 is the point that a data supplementing unit 751 and mixture ratio derivation unit 761 are provided instead of the data supplementing unit 702 and continuity direction derivation unit 703.

A MaxMin acquiring unit 752 of the data supplementing unit 751 performs the same processing as the MaxMin acquiring unit 722 in Fig. 124, and the maximum value and minimum value of the pixel values of the pixels in the dynamic range block are obtained, the difference (dynamic range) of the maximum value and minimum value is obtained, and output to supplementing units 753 and 755 as well as outputting the maximum value to a difference computing unit 754.

The supplementing unit 753 squares the value obtained by the MaxMin acquiring unit, performs supplementing for all pixels of the extracted block, obtains the sum thereof, and outputs to the mixture ratio derivation unit 761.

The difference computing unit 754 obtains the difference between each pixel in the acquired block of the data acquiring unit 712 and the maximum value of the corresponding dynamic range block, and outputs this to the supplementing unit 755.

The supplementing unit 755 multiplies the difference between the maximum value and minimum value (dynamic range) of each pixel of the acquired block input from the Max Min acquiring unit 752 with the difference between the pixel value of each of the pixels in the acquired block input from the difference computing unit 754 and the maximum value of the corresponding dynamic range block, obtains the sum thereof, and outputs to the mixture ratio derivation unit 761.

A mixture ratio calculating unit 762 of the mixture ratio derivation unit 761 statistically obtains the mixture ratio of the pixel of interest by the least-square method, based on the values input from the supplementing units 753 and 755 of the data supplementing unit, and outputs this as data continuity information.

Next, the mixture ratio derivation method will be described.

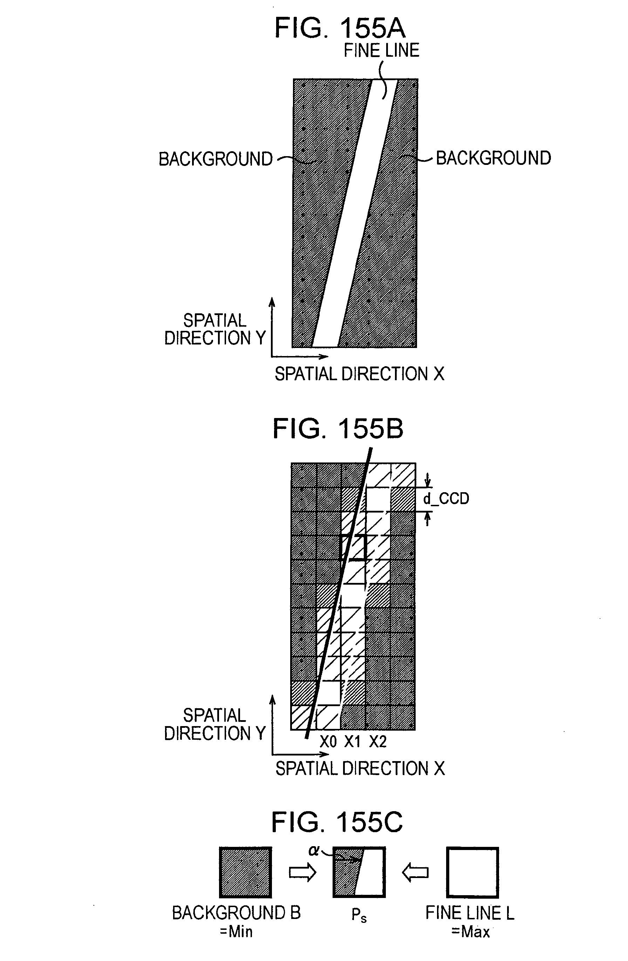

As shown in Fig. 155A, in the event that a fine line exists on the image, the image taken with the sensor 2 is an image such as shown in Fig. 155B. In this image, let us hold in interest the pixel enclosed by the black solid lines on the spatial direction X = X1 in Fig. 155B. Note that the range between the white lines in Fig. 155B indicates the position corresponding to the fine line region in the real world. The pixel value M of this pixel should be an intermediate color between the pixel value B corresponding to the level of the background region, and the pixel value L corresponding to the level of the fine line region, and in further detail, this pixel value $P_s$ should be a mixture of each level according to the area ratio between the background region and fine line region. Accordingly, the pixel value $P_s$ can be expressed by the following Expression (77).

$$P_s = \alpha \times B + (1 - \alpha) \times L \tag{77}$$

Here, $\alpha$ is the mixture ratio, and more specifically, indicates the ratio of area which the background region occupies in the pixel of interest. Accordingly, $(1 - \alpha)$ can be said to indicate the ratio of area which the fine line region occupies. Now, pixels of the background region can be considered to be the component of an object existing in the background, and thus can be said to be a background object component. Also, pixels of the fine line region can be considered to be the component of an object existing in the foreground as to the background object, and thus can be said to be a foreground object component.

Consequently, the mixture ratio $\alpha$ can be expressed by the following Expression (78) by expanding the Expression (77).

$$\alpha = (P_s - L) / (B - L) \tag{78}$$

Further, in this case, we are assuming that the pixel value exists at a position straddling the first pixel value (pixel value B) region and the second pixel value (pixel value L) region, and accordingly, the pixel value L can be substituted with the maximum value Max of the pixel values, and further, the pixel value B can be substituted with the minimum value of the pixel value. Accordingly, the mixture ratio $\alpha$ can also be expressed by the following Expression (79).

$$\alpha = (P_s - \text{Max}) / (\text{Min} - \text{Max}) \tag{79}$$

As a result of the above, the mixture ratio $\alpha$ can be obtained from the dynamic range (equivalent to (Min - Max)) of the dynamic range block regarding the pixel of interest, and the difference between the pixel of interest and the maximum value of pixels within the dynamic range block, but in order to further improve precision, the mixture ratio $\alpha$ will here be statistically obtained by the least-square method.

That is to say, expanding the above Expression (79) yields the following Expression (80).

$$(P_s - \text{Max}) = \alpha \times (\text{Min} - \text{Max}) \tag{80}$$

As with the case of the above-described Expression (71), this Expression (80) is a single-variable least-square equation. That is to say, in Expression (71), the gradient $G_f$ was obtained by the least-square method, but here, the mixture ratio $\alpha$ is obtained. Accordingly, the mixture ratio $\alpha$ can be statistically obtained by solving the normal equation shown in the following Expression (81).

$$\alpha = \frac{\sum_{i=1}^{n} \left( (Min_i - Max_i)(P_{si} - Max_i) \right)}{\sum_{i=1}^{n} \left( (Min_i - Max_i)(Min_i - Max_i) \right)}$$

$$...(81)$$

Here, i is for identifying the pixels of the extracted block. Accordingly, in Expression (81), the number of pixels in the extracted block is n.

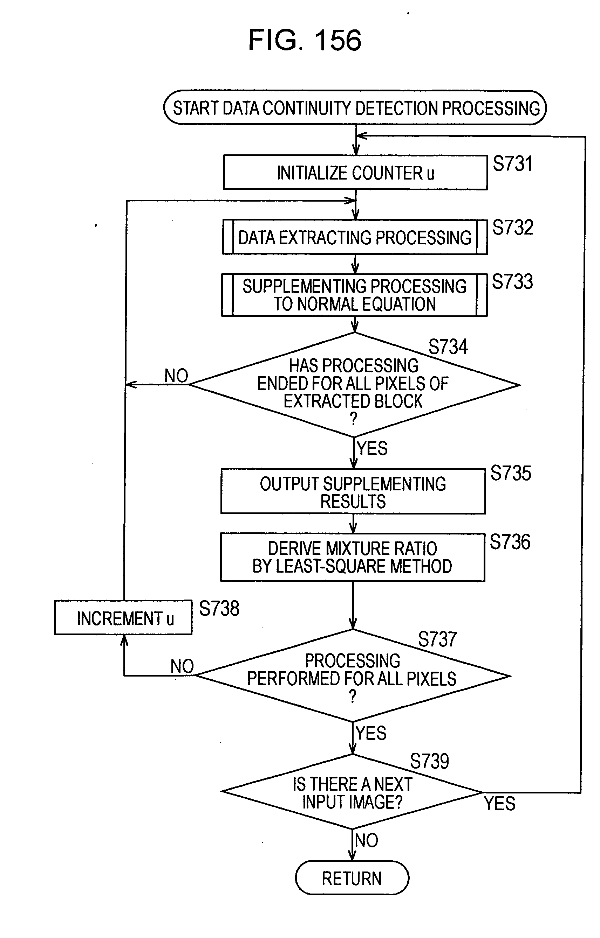

Next, the processing for detecting data continuity with the mixture ratio as data continuity will be described with reference to the flowchart in Fig. 156.

In step S731, the horizontal/vertical determining unit 711 initializes the counter U which identifies the pixels of the input image.

In step S732, the horizontal/vertical determining unit 711 performs processing for extracting data necessary for subsequent processing. Note that the processing of step S732 is the same as the processing described with reference to the flowchart in Fig. 150, so description thereof will be omitted.

In step S733, the data supplementing unit 751 performs processing for supplementing values necessary of each of the items for computing the normal equation (Expression (81) here).

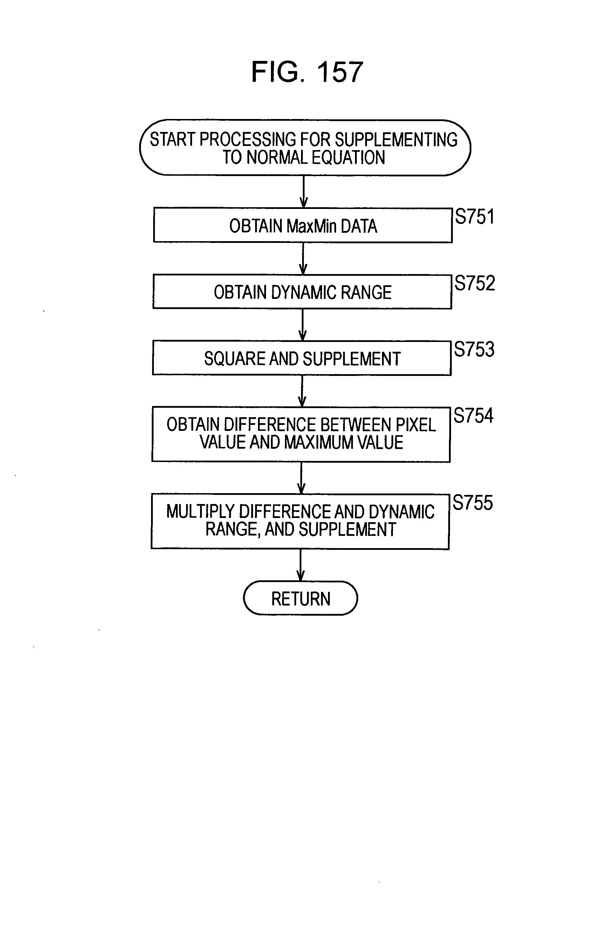

Now, the processing for supplementing to the normal equation will be described with reference to the flowchart in Fig. 157.

In step S751, the MaxMin acquiring unit 752 obtains the maximum value and minimum value of the pixels values of the pixels contained in the dynamic range block stored in the data acquiring unit 712, and of these, outputs the minimum value to the difference computing unit 754.

In step S752, the MaxMin acquiring unit 752 obtains the dynamic range from the difference between the maximum value and the minimum value, and outputs this to the difference supplementing units 753 and 755.

In step S753, the supplementing unit 753 squares the dynamic range (Max - Min) input from the MaxMin acquiring unit 752, and supplements. That is to say, the supplementing unit 753 generates by supplementing a value equivalent to the denominator in the above Expression (81).

In step S754, the difference computing unit 754 obtains the difference between the maximum value of the dynamic range block input from the MaxMin acquiring unit 752 and the pixel values of the pixels currently being processed in the extracted block, and outputs to the supplementing unit 755.

In step S755, the supplementing unit 755 multiplies the dynamic range input from the MaxMin acquiring unit 752 with the difference between the pixel values of the pixels currently being processed input from the difference computing unit 754 and the maximum value of the pixels of the dynamic range block, and supplements. That is to say, the supplementing unit 755 generates values equivalent to the numerator item of the above Expression (81).

As described above, the data supplementing unit 751 performs computation of the items of the above Expression (81) by supplementing.

Now, let us return to the description of the flowchart in Fig. 156.

In step S734, the difference supplementing unit 721 determines whether or not supplementing has ended for all pixels of the extracted block, and in the event that determination is made that supplementing has not ended for all pixels of the extracted block for example, the processing returns to step S732, and the subsequent processing is repeated. That is to say, the processing of steps S732 through S734 is repeated until determination is made that supplementing has ended for all pixels of the extracted block.

In step S734, in the event that determination is made that supplementing has ended for all pixels of the extracted block, in step S735 the supplementing units 753 and 755 output the supplementing results stored therein to the mixture ratio derivation unit 761.

In step S736, the mixture ratio calculating unit 762 of the mixture ratio derivation unit 761 statistically computes, by the least-square method, and outputs, the mixture ratio of the pixel of interest which is the data continuity information, by solving the normal equation shown in Expression (81), based on the sum of squares of the dynamic range, and the sum of multiplying the difference between the pixel values of the pixels of the extracted block and the maximum value of the dynamic block by the dynamic range, input from the supplementing units 753 and 755 of the data supplementing unit 751.

In step S737, the data acquiring unit 712 determines whether or not processing has been performed for all pixels in the input image, and in the event that determination is made that, for example, processing has not been performed for all pixels in the input image, i.e., in the event that determination is made that the mixture ratio has not been output for all pixels of the input image, in step S738 the counter U is incremented by 1, and the processing returns to step S732.

That is to say, the processing of steps S732 through S738 is repeated until pixels to be processed within the input image are changed and the mixture ratio is computed for all pixels of the input image. Change of pixel by the counter U may be according to raster scan or the like for example, or may be sequential change according to other rules.

In the event that determination is made in step S737 that processing has been performed for all pixels of the input image, in step S739 the data acquiring unit 712 determines whether or not there is a next input image, and in the event that determination is made that there is a next input image, the processing returns to step S731, and the subsequent processing is repeated.

In the event that determination is made in step S739 that there is no next input image, the processing ends.

Due to the above processing, the mixture ratio of the pixels is detected as continuity information, and output.

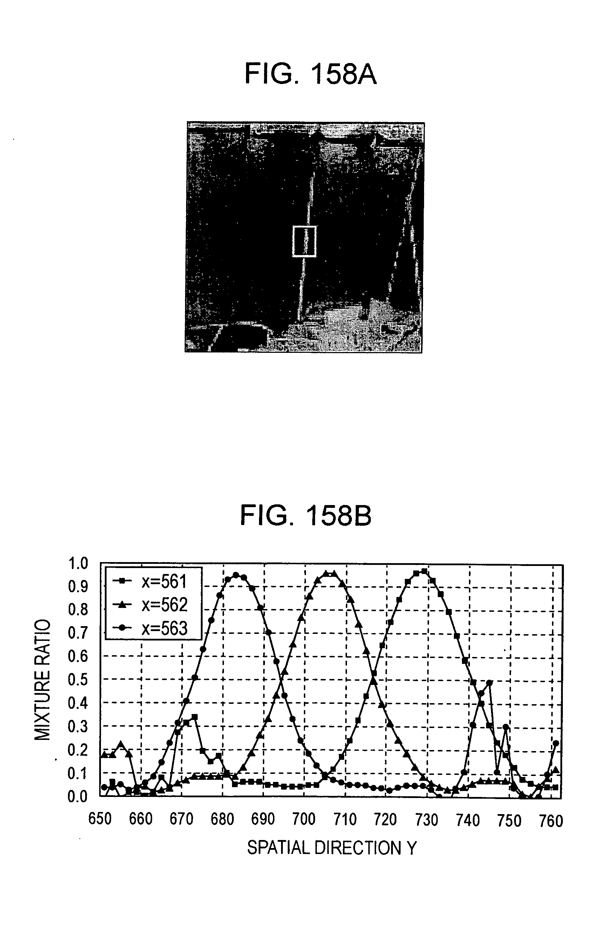

Fig. 158B illustrates the change in the mixture ratio on predetermined spatial directions X (= 561, 562, 563) with regard to the fine line image within the white lines in the image shown in Fig. 158A, according to the above technique, for example. As shown in Fig. 158B, the change in the mixture ratio in the spatial direction Y which is continuous in the horizontal direction is such that, respectively, in the case of the spatial direction X = 563, the mixture ratio starts rising at around the spatial direction Y = 660, peaks at around Y = 685, and drops to Y = 710. Also, in the case of the spatial direction X = 562, the mixture ratio starts rising at around the spatial direction Y = 680, peaks at around Y = 705, and drops to Y = 735. Further, in the case of the spatial direction X = 561, the mixture ratio starts rising at around the spatial direction Y = 705, peaks at around Y = 725, and drops to Y = 755.

Thus, as shown in Fig. 158B, the change of each of the mixture ratios in the continuous spatial directions X is the same change as the change in pixel values changing according to the mixture ratio (the change in pixel values shown in Fig. 133B), and is cyclically continuous, so it can be understood that the mixture ratio of pixels near the fine line are being accurately represented.

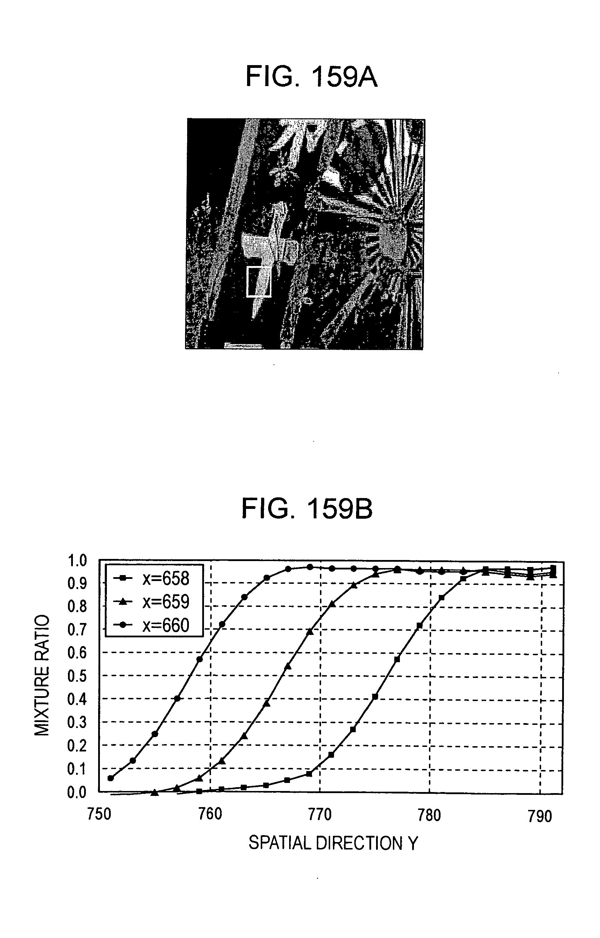

Also, in the same way, Fig. 159B illustrates the change in the mixture ratio on predetermined spatial directions X (= 658, 659, 660) with regard to the two-valued edge image within the white lines in the image shown in Fig. 159A. As shown in Fig. 159B, the change in the mixture ratio in the spatial direction Y which is continuous in the horizontal direction is such that, respectively, in the case of the spatial direction X = 660, the mixture ratio starts rising at around the spatial direction Y = 750, and peaks at around Y = 765. Also, in the case of the spatial direction X = 659, the mixture ratio starts rising at around the spatial direction Y = 760, and peaks at around Y = 775. Further, in the case of the spatial direction X = 658, the mixture ratio starts rising at around the spatial direction Y = 770, and peaks at around Y = 785.

Thus, as shown in Fig. 159B, the change of each of the mixture ratios of the two-valued edge is approximately the same as change which is the same change as the change in pixel values changing according to the mixture ratio (the change in pixel values shown in Fig. 145B), and is cyclically continuous, so it can be understood that the mixture ratio of pixel values near the two-valued edge are being accurately represented.

According to the above, the mixture ratio of each pixel can be statistically obtained as data continuity information by the least-square method. Further, the pixel values of each of the pixels can be directly generated based on this mixture ratio.

Also, if we say that the change in mixture ratio has continuity, and further, the change in the mixture ratio is linear, the relationship such as indicated in the following Expression (82) holds.

$$\alpha = m \times y + n \tag{82}$$

Here, m represents the gradient when the mixture ratio $\alpha$ changes as to the spatial direction Y, and also, n is equivalent to the intercept when the mixture ratio $\alpha$ changes linearly.

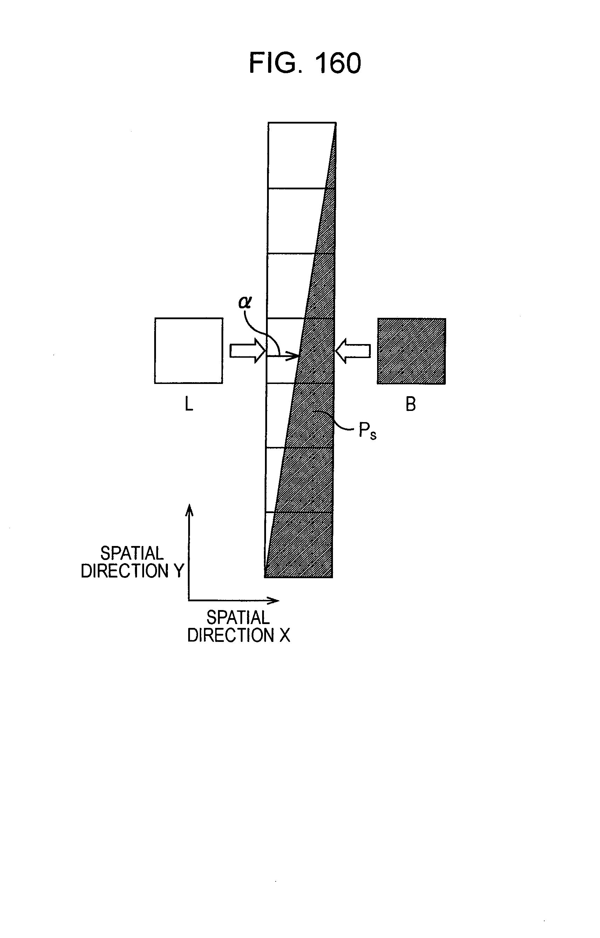

That is, as shown in Fig. 160, the straight line indicating the mixture ratio is a straight line indicating the boundary between the pixel value B equivalent to the background region level and the level L equivalent to the fine line level, and in this case, the amount in change of the mixture ratio upon progressing a unit distance with regard to the spatial direction Y is the gradient m.

Accordingly, substituting Expression (82) into Expression (77) yields the following Expression (83).

$$M = (m \times y + n) \times B + (1 - (m \times y + n)) \times L \tag{83}$$

Further, expanding this Expression (83) yields the following Expression (84).

$$M - L = (y \times B - y \times L) \times m + (B - L) \times n \qquad (84)$$

In Expression (84), the first item m represents the gradient of the mixture ratio in the spatial direction, and the second item is the item representing the intercept of the mixture ratio. Accordingly, an arrangement may be made wherein a normal equation is generated using the least-square of two variables to obtain m and n in Expression (84) described above.

However, the gradient m of the mixture ratio $\alpha$ is the above-described gradient of the fine line or two-valued edge (the above-described gradient $G_f$) itself, so an arrangement may be made wherein the above-described method is used to obtain the gradient $G_f$ of the fine line or two-valued edge beforehand, following which the gradient is used and substituted into Expression (84), thereby making for a single-variable function with regard to the item of the intercept, and obtaining with the single-variable least-square method the same as the technique described above.

While the above example has been described regarding a data continuity detecting unit 101 for detecting the angle (gradient) or mixture ratio of a fine line or two-valued edge in the spatial direction as data continuity information, an arrangement may be made wherein that corresponding to the angle in the spatial direction obtained by replacing one of the spatial-direction axes (spatial directions X and Y), for example, with the time-direction (frame direction) T axis. That is to say, that which corresponds to the angle obtained by replacing one of the spatial-direction axes (spatial directions X and Y) with the time-direction (frame direction) T axis, is a vector of movement of an object (movement vector direction).

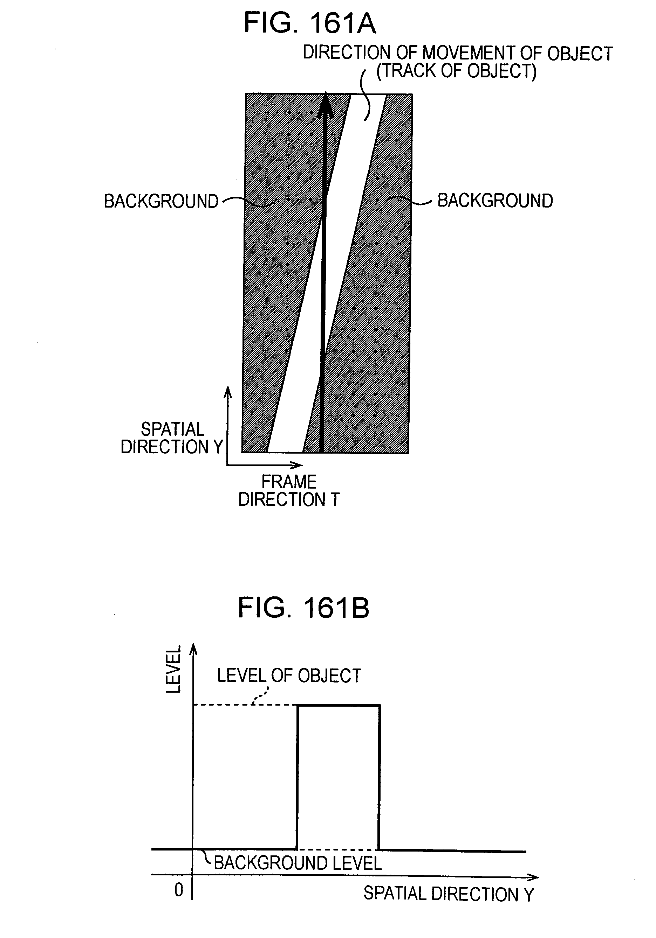

More specifically, as shown in Fig. 161A, in the event that an object is moving upwards in the drawing with regard to the spatial direction Y over time, the track of movement of the object is manifested at the portion equivalent to the fine line in the drawing (in comparison with that in Fig. 131A). Accordingly, the gradient at the fine line in the time direction T represents the direction of movement of the object (angle indicating the movement of the object) (is equivalent to the direction of the movement vector) in Fig. 161A. Accordingly, in the real world, in a frame of a predetermined point-in-time indicated by the arrow in Fig. 161A, a pulse-shaped waveform wherein the portion to be the track of the object is the level of (the color of) the object, and other portions are the background level, as shown in Fig. 161B, is obtained.

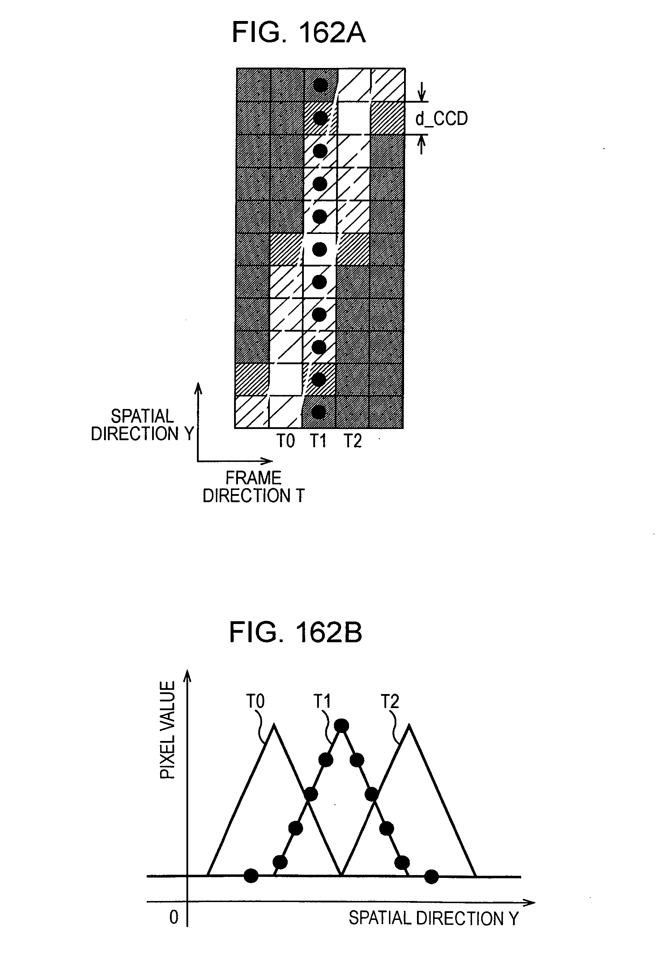

In this way, in the case of imaging an object with movement with the sensor 2, as shown in Fig. 162A, the distribution of pixel values of each of the pixels of the frames from point-in-time T1 through T3 each assumes a peak-shaped waveform in the spatial direction Y, as shown in Fig. 162B. This relationship can be thought to be the same as the relationship in the spatial directions X and Y, described with reference to Fig. 132A and Fig. 132B. Accordingly, in the event that the object has movement in the frame direction T, the direction of the movement vector of the object can be obtained as data continuity information in the same way as with the information of the gradient of the fine line or the angle (gradient) of the two-valued edge described above. Note that in Fig. 162B, each grid in the frame direction T (time direction T) is the shutter time making up the image of one frame.

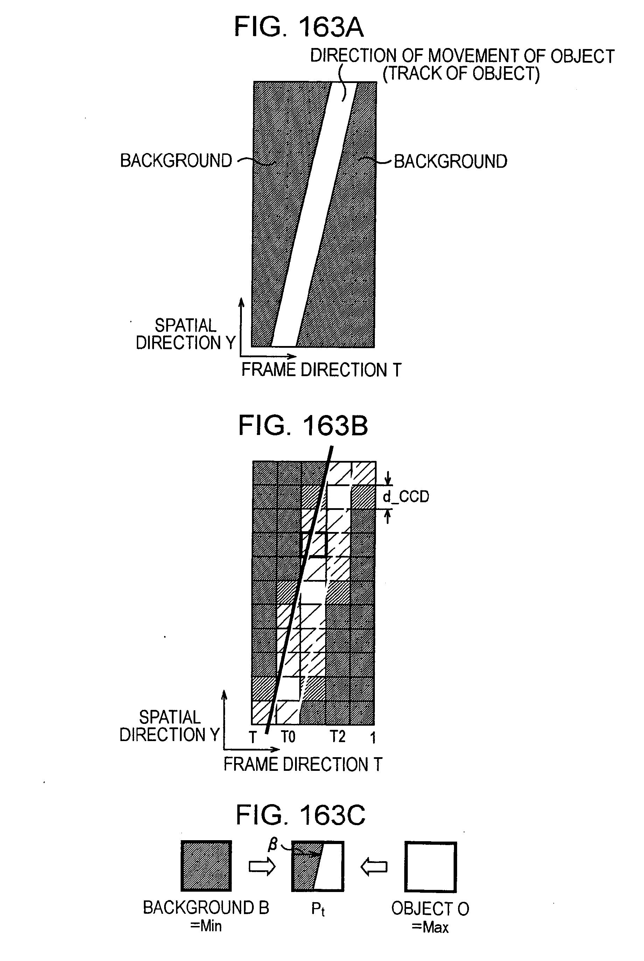

Also, in the same way, in the event that there is movement of an object in the spatial direction Y for each frame direction T as shown in Fig. 163A, each pixel value corresponding to the movement of the object as to the spatial direction Y on a frame corresponding to a predetermined point-in-time T1 can be obtained as shown in Fig. 163B. At this time, the pixel value of the pixel enclosed by the black solid lines in Fig. 163B is a pixel value wherein the background level and the object level are mixed in the frame direction at a mixture ratio $\beta$, corresponding to the movement of the object, as shown in Fig. 163C, for example.

This relationship is the same as the relationship described with reference to Fig. 155A, Fig. 155B, and Fig. 155C.

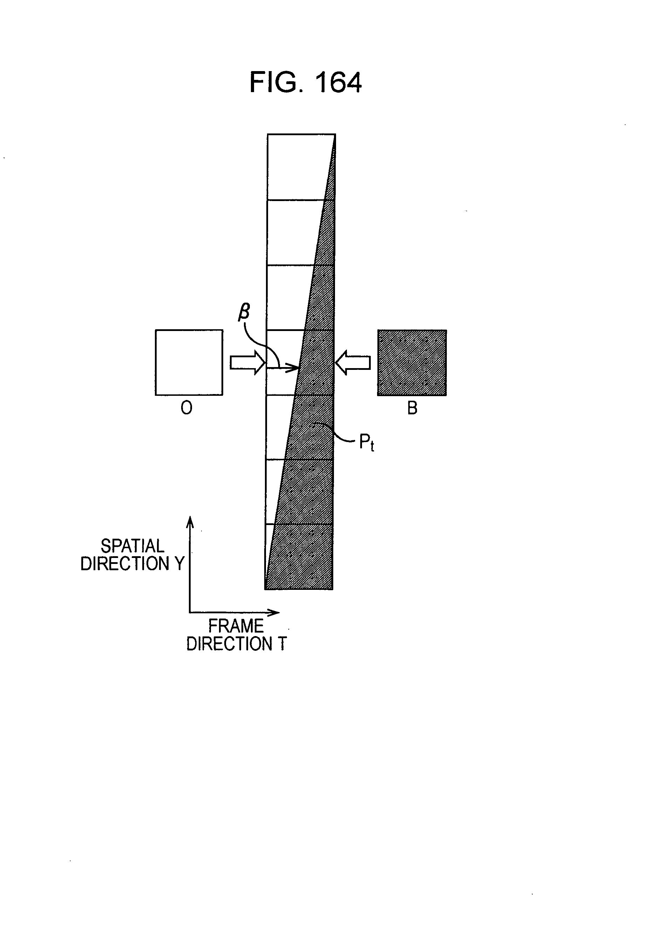

Further, as shown in Fig. 164, the level O of the object and the level B of the background can also be made to be linearly approximated by the mixture ratio $\beta$ in the frame direction (time direction). This relationship is the same relationship as the linear approximation of mixture ratio in the spatial direction, described with reference to Fig. 160.

Accordingly, the mixture ratio $\beta$ in the time (frame) direction can be obtained as data continuity information with the same technique as the case of the mixture ratio $\alpha$ in the spatial direction.

Also, an arrangement may be made wherein the frame direction, or one dimension of the spatial direction, is selected, and the data continuity angle or the movement vector direction is obtained, and in the same way, the mixture ratios $\alpha$ and $\beta$ may be selectively obtained.

According to the above, light signals of the real world are projected, a region, corresponding to a pixel of interest in the image data of which a part of the continuity of the real world light signals has dropped out, is selected, features for detecting the angle as to a reference axis of the image data continuity corresponding to the lost real world light signal continuity are detected in the selected region, the angle is statistically detected based on the detected features, and light signals are estimated by estimating the lost real world light signal continuity based on the detected angle of the continuity of the image data as to the reference axis, so the angle of continuity (direction of movement vector) or (a time-space) mixture ratio can be obtained.

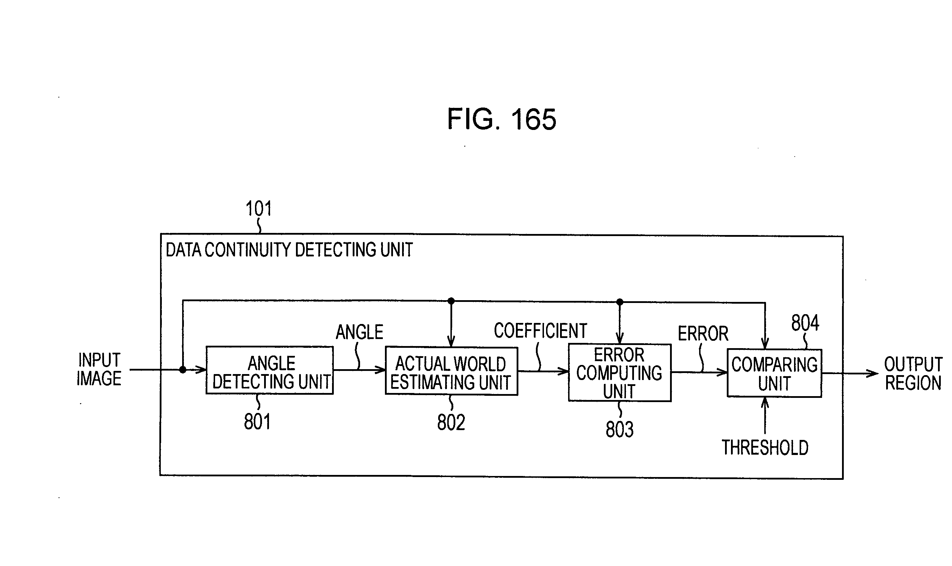

Next, description will be made, with reference to Fig. 165, of a data continuity information detecting unit 101 which outputs, as data continuity information, information of regions where processing using data continuity information should be performed.

An angle detecting unit 801 detects, of the input image, the spatial-direction angle of regions having continuity, i.e., of portions configuring fine lines and two-valued edges having continuity in the image, and outputs the detected angle to an actual world estimating unit 802. Note that this angle detecting unit 801 is the same as the data continuity detecting unit 101 in Fig. 3.

The actual world estimating unit 802 estimates the actual world based on the angle indicating the direction of data continuity input from the angle detecting unit 801, and information of the input image. That is to say, the actual world estimating unit 802 obtains a coefficient of an approximation function which approximately describes the intensity distribution of the actual world light signals, from the input angle and each pixel of the input image, and outputs to an error computing unit 803 the obtained coefficient as estimation results of the actual world. Note that this actual world estimating unit 802 is the same as the actual world estimating unit 102 shown in Fig. 3.

The error computing unit 803 formulates an approximation function indicating the approximately described real world light intensity distribution, based on the coefficient input from the actual world estimating unit 802, and further, integrates the light intensity corresponding to each pixel position based on this approximation function, thereby generating pixel values of each of the pixels from the light intensity distribution estimated from the approximation function, and outputs to a comparing unit 804 with the difference as to the actually-input pixel values as error.

The comparing unit 804 compares the error input from the error computing unit 803 for each pixel, and a threshold value set beforehand, so as to distinguish between processing regions where pixels exist regarding which processing using continuity information is to be performed, and non-processing regions, and outputs region information, distinguishing between processing regions where processing using continuity information is to be performed and non-processing regions, as continuity information.

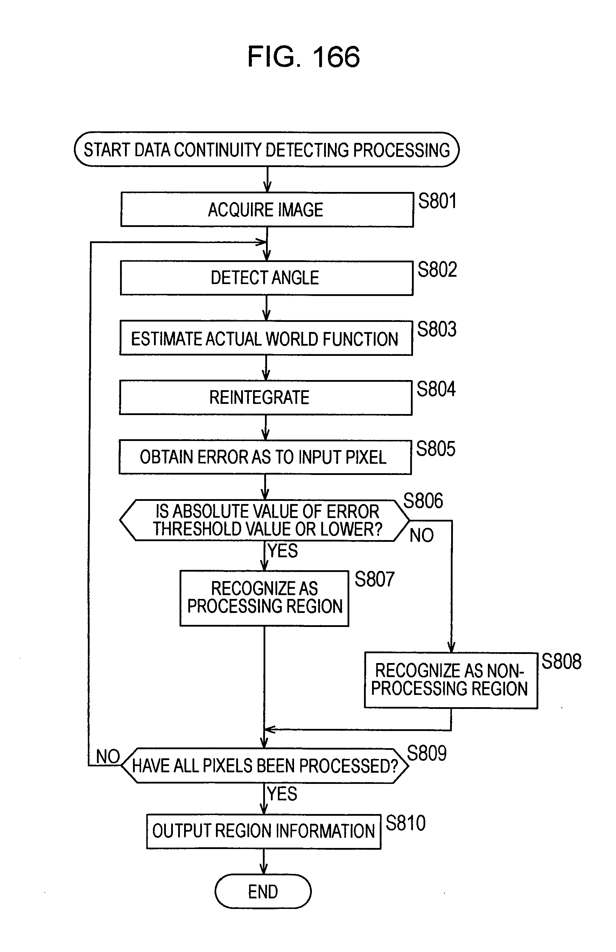

Next, description will be made regarding continuity detection processing using the data continuity detecting unit 101 in Fig. 165 with reference to the flowchart in Fig. 166.

The angle detecting unit 801 acquires an image input in step S801, and detects an angle indicating the direction of continuity in step S802. More particularly, the angle detecting unit 801 detects a fine line when the horizontal direction is taken as a reference axis, or an angle indicating the direction of continuity having a two-valued edge for example, and outputs this to the actual world estimating unit 802.

In step S803, the actual world estimating unit 802 obtains a coefficient of an approximation function f(x) made up of a polynomial, which approximately describes a function F(x) expressing the real world, based on angular information input from the angle detecting unit 801 and input image information, and outputs this to the error calculation unit 803. That is to say, the approximation function f(x) expressing the real world is shown with a primary polynomial such as the following Expression (85).

$$f(x) = w_0 x^n + w_1 x^{n-1} + \cdots + w_{n-1} x + w_n$$

$$= \sum_{i=0}^{n} w_i x^{n-i}$$

$$\cdots (85)$$

Here, wi is a coefficient of the polynomial, and the actual world estimating unit 802 obtains this coefficient wi and outputs this to the error calculation unit 803. Further, a gradient from the direction of continuity can be obtained based on an angle input from the angle detecting unit 801 ($G_f = \tan^{-1} \theta$, $G_f$: gradient, $\theta$: angle), so the above Expression (85) can be described with a quadratic polynomial such as shown in the following Expression (86) by substituting a constraint condition of this gradient $G_f$.

$$f(x, y) = w_0 (x - \alpha y)^n + w_1 (x - \alpha y)^{n-1} + \cdots$$
$$+ w_{n-1} (x - \alpha y) + w_n$$
$$= \sum_{i=0}^{n} w_i (x - \alpha y)^{n-i}$$

$$\cdots (86)$$

That is to say, the above Expression (86) describes a quadratic function f(x, y) obtained by expressing the width of a shift occurring due to the primary approximation function f(x) described with Expression (85) moving in parallel with the spatial direction Y using a shift amount $\alpha$ (= -dy/$G_f$: dy is the amount of change in the spatial direction Y).

Accordingly, the actual world estimating unit 802 solves each coefficient wi of the above Expression (86) using an input image and angular information in the direction of continuity, and outputs the obtained coefficients wi to the error calculation unit 803.

Here, description will return to the flowchart in Fig. 166.

In step S804, the error calculation unit 803 performs reintegration regarding each pixel based on the coefficients input by the actual world estimating unit 802. More specifically, the error calculation unit 803 subjects the above Expression (86) to integration regarding each pixel such as shown in the following Expression (87) based on the coefficients input from the actual world estimating unit 802.

$$S_s = \int_{y_m}^{y_m + B} \int_{x_m}^{x_m + A} f(x, y) \, dx \, dy$$
$$= \int_{y_m}^{y_m + B} \int_{x_m}^{x_m + A} \left( \sum_{i=0}^{n} w_i (x - \alpha y)^{n-i} \right) dx \, dy$$
$$= \sum_{i=0}^{n} w_i \int_{y_m}^{y_m + B} \int_{x_m}^{x_m + A} (x - \alpha y)^{n-i} dx \, dy$$
$$= \sum_{i=0}^{n} w_i \times \frac{1}{(n-i+2)(n-i+1)\alpha}$$
$$\times \left[ \{ (x_m + A - \alpha (y_m + B))^{n-i+2} - (x_m - \alpha (y_m + B))^{n-i+2} \} \right.$$
$$\left. - \{ (x_m + A - \alpha y_m)^{n-i+2} - (x_m - \alpha y_m)^{n-i+2} \} \right]$$

$$\cdots (87)$$

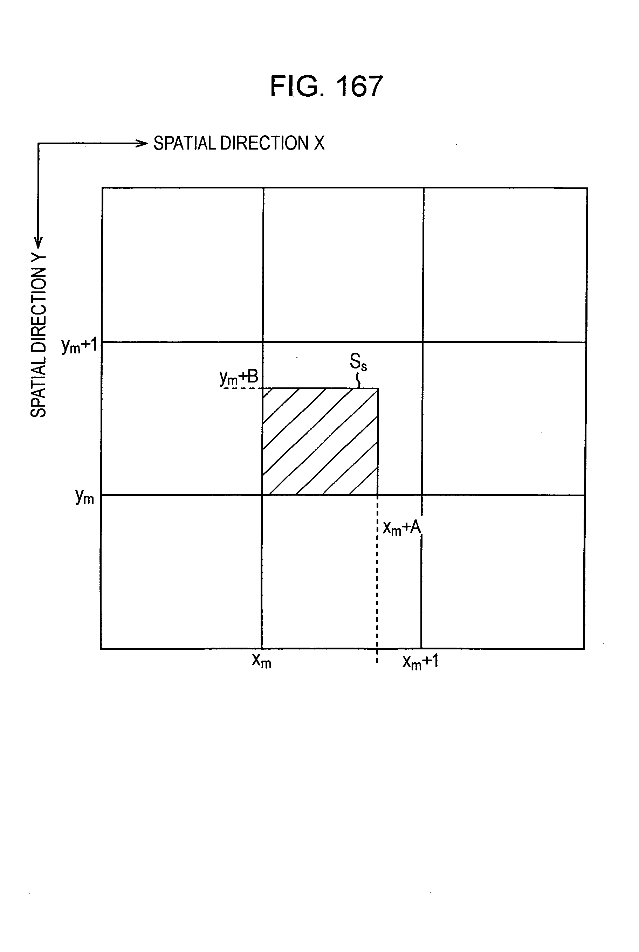

Here, $S_s$ denotes the integrated result in the spatial direction shown in Fig. 167. Also, the integral range thereof is, as shown in Fig. 167, $x_m$ through $x_{m+B}$ for the spatial direction X, and $y_m$ through $y_{m+A}$ for the spatial direction Y. Also, in Fig. 167, let us say that each grid (square) denotes one pixel, and both grid for the spatial direction X and grid for the spatial direction Y is 1.

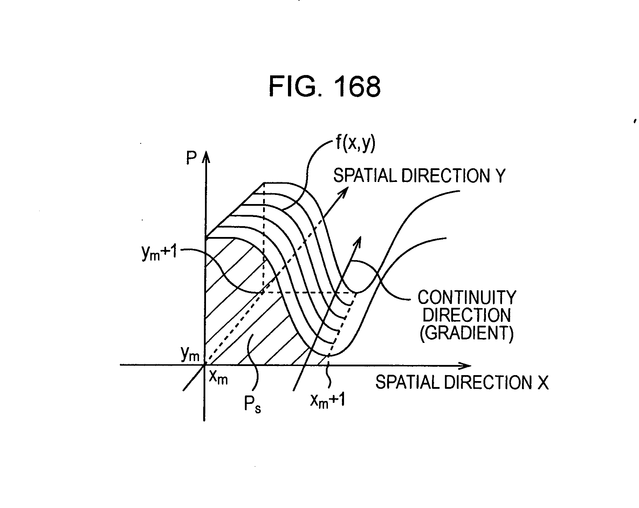

Accordingly, the error calculation unit 803, as shown in Fig. 168, subjects each pixel to an integral arithmetic operation such as shown in the following Expression (88) with an integral range of $x_m$ through $x_{m+1}$ for the spatial direction X of a curved surface shown in the approximation function f(x, y), and $y_m$ through $y_{m+1}$ for the spatial direction Y (A = B = 1), and calculates the pixel value $P_s$ of each pixel obtained by spatially integrating the approximation function expressing the actual world in an approximate manner.

$$P_s = \int_{y_m}^{y_m+1} \int_{x_m}^{x_m+1} f(x, y) \, dx \, dy$$

$$= \int_{y_m}^{y_m+1} \int_{x_m}^{x_m+1} \left( \sum_{i=0}^{n} w_i (x - \alpha y)^{n-i} \right) dx \, dy$$

$$= \sum_{i=0}^{n} w_i \int_{y_m}^{y_m+1} \int_{x_m}^{x_m+1} (x - \alpha y)^{n-i} dx \, dy$$

$$= \sum_{i=0}^{n} w_i \times \frac{1}{(n-i+2)(n-i+1)\alpha}$$

$$\times \left[ \left\{ (x_m+1 - \alpha(y_m+1))^{n-i+2} - (x_m - \alpha(y_m+1))^{n-i+2} \right\} \right.$$

$$\left. - \left\{ (x_m+1 - \alpha y_m)^{n-i+2} - (x_m - \alpha y_m)^{n-i+2} \right\} \right]$$

$$\ldots (88)$$

In other words, according to this processing, the error calculation unit 803 serves as, so to speak, a kind of pixel value generating unit, and generates pixel values from the approximation function.

In step S805, the error calculation unit 803 calculates the difference between a pixel value obtained with integration such as shown in the above Expression (88) and a pixel value of the input image, and outputs this to the comparison unit 804 as an error. In other words, the error calculation unit 803 obtains the difference between the pixel value of a pixel corresponding to the integral range ($x_m$ through $x_{m+1}$ for the spatial direction X, and $y_m$ through $y_{m+1}$ for the spatial direction Y) shown in the above Fig. 167 and Fig. 168, and a pixel value obtained with the integrated result in a range corresponding to the pixel as an error, and outputs this to the comparison unit 804.

In step S806, the comparison unit 804 determines regarding whether or not the absolute value of the error between the pixel value obtained with integration input from the error calculation unit 803 and the pixel value of the input image is a predetermined threshold value or less.

In step S806, in the event that determination is made that the error is the predetermined threshold value or less, since the pixel value obtained with integration is a value close to the pixel value of the pixel of the input image, the comparison unit 804 regards the approximation function set for calculating the pixel value of the pixel as a function sufficiently approximated with the light intensity allocation of a light signal in the real world, and recognizes the region of the pixel now processed as a processing region where processing using the approximation function based on continuity information is performed in step S807. In further detail, the comparison unit 804 stores the pixel now processed in unshown memory as the pixel in the subsequent processing regions.

On the other hand, in the event that determination is made that the error is not the threshold value or less in step S806, since the pixel value obtained with integration is a value far from the actual pixel value, the comparison unit 804 regards the approximation function set for calculating the pixel value of the pixel as a function insufficiently approximated with the light intensity allocation of a light signal in the real world, and recognizes the region of the pixel now processed as a non-processing region where processing using the approximation function based on continuity information is not performed at a subsequent stage in step S808. In further detail, the comparison unit 804 stores the region of the pixel now processed in unshown memory as the subsequent non-processing regions.

In step S809, the comparison unit 804 determines regarding whether or not the processing has been performed as to all of the pixels, and in the event that determination is made that the processing has not been performed as to all of the pixels, the processing returns to step S802, wherein the subsequent processing is repeatedly performed. In other words, the processing in steps S802 through S809 is repeatedly performed until determination processing wherein comparison between a pixel value obtained with integration and a pixel value input is performed, and determination is made regarding whether or not the pixel is a processing region, is completed regarding all of the pixels.

In step S809, in the event that determination is made that determination processing wherein comparison between a pixel value obtained with reintegration and a pixel value input is performed, and determination is made regarding whether or not the pixel is a processing region, has been completed regarding all of the pixels, the comparison unit 804, in step S810, outputs region information wherein a processing region where processing based on the continuity information in the spatial direction is performed at subsequent processing, and a non-processing region where processing based on the continuity information in the spatial direction is not performed are identified regarding the input image stored in the unshown memory, as continuity information.

According to the above processing, based on the error between the pixel value obtained by the integrated result in a region corresponding to each pixel using the approximation function f(x) calculated based on the continuity information and the pixel value in the actual input image, evaluation for reliability of expression of the approximation function is performed for each region (for each pixel), and accordingly, a region having a small error, i.e., only a region where a pixel of which the pixel value obtained with integration based on the approximation function is reliable exists is regarded as a processing region, and the regions other than this region are regarded as non-processing regions, and consequently, only a reliable region can be subjected to the processing based on the continuity information in the spatial direction, and the necessary processing alone can be performed, whereby processing speed can be improved, and also the processing can be performed as to the reliable region alone, resulting in preventing image quality due to this processing from deterioration.

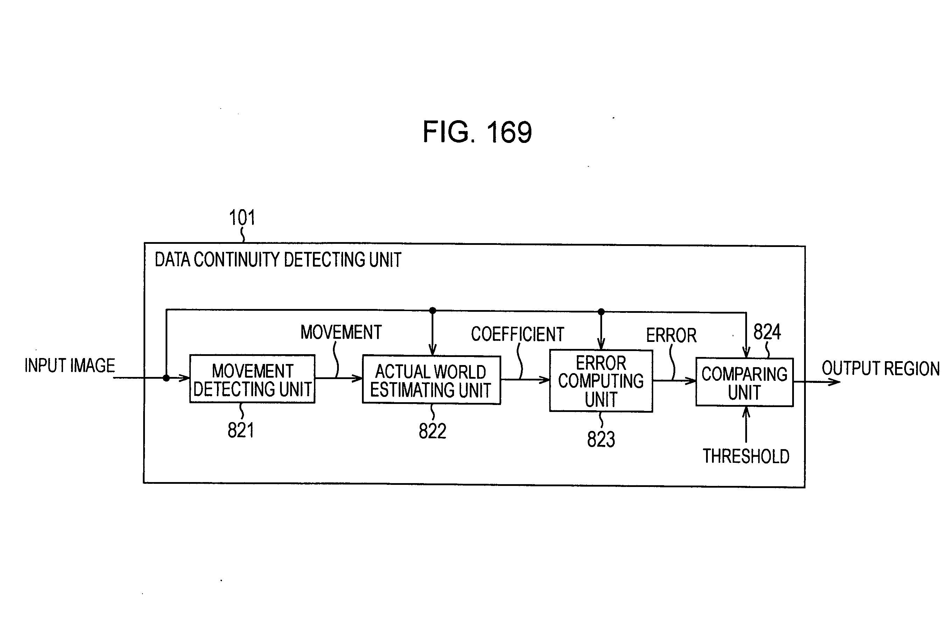

Next, description will be made regarding other embodiments regarding the data continuity information detecting unit 101 which outputs region information where a pixel to be processed using data continuity information exists, as data continuity information with reference to Fig. 169.

A movement detecting unit 821 detects, of images input, a region having continuity, i.e., movement having continuity in the frame direction on an image (direction of movement vector: $V_f$), and outputs the detected movement to the actual world estimating unit 822. Note that this movement detecting unit 821 is the same as the data continuity detecting unit 101 in Fig. 3.

The actual world estimating unit 822 estimates the actual world based on the movement of the data continuity input from the movement detecting unit 821, and the input image information. More specifically, the actual world estimating unit 822 obtains coefficients of the approximation function approximately describing the intensity allocation of a light signal in the actual world in the frame direction (time direction) based on the movement input and each pixel of the input image, and outputs the obtained coefficients to the error calculation unit 823 as an estimated result in the actual world. Note that this actual world estimating unit 822 is the same as the actual world estimating unit 102 in Fig. 3.

The error calculation unit 823 makes up an approximation function indicating the intensity allocation of light in the real world in the frame direction, which is approximately described based on the coefficients input from the actual world estimating unit 822, further integrates the intensity of light equivalent to each pixel position for each frame from this approximation function, generates the pixel value of each pixel from the intensity allocation of light estimated by the approximation function, and outputs the difference with the pixel value actually input to the comparison unit 824 as an error.

The comparison unit 824 identifies a processing region where a pixel to be subjected to processing using the continuity information exists, and a non-processing region by comparing the error input from the error calculation unit 823 regarding each pixel with a predetermined threshold value set beforehand, and outputs region information wherein a processing region where processing is performed using this continuity information and a non-processing region are identified, as continuity information.

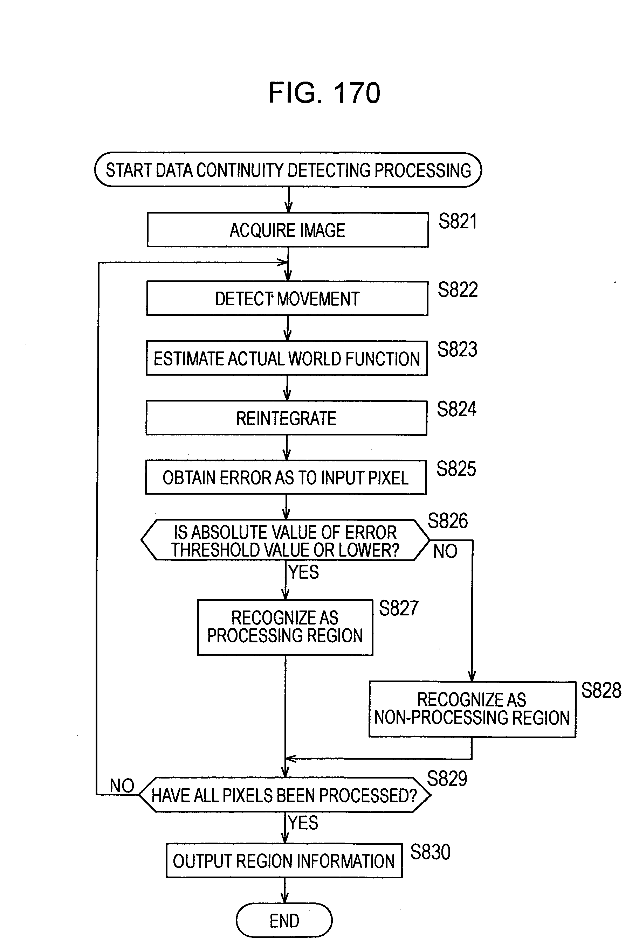

Next, description will be made regarding continuity detection processing using the data continuity detecting unit 101 in Fig. 169 with reference to the flowchart in Fig. 170.

The movement detecting unit 801 acquires an image input in step S821, and detects movement indicating continuity in step S822. In further detail, the movement detecting unit 801 detects movement of a substance moving within the input image (direction of movement vector: $V_f$) for example, and outputs this to the actual world estimating unit 822.

In step S823, the actual world estimating unit 822 obtains coefficients of a function f(t) made up of a polynomial, which approximately describes a function F(t) in the frame direction, which expresses the real world, based on the movement information input from the movement detecting unit 821 and the information of the input image, and outputs this to the error calculation unit 823. That is to say, the function f(t) expressing the real world is shown as a primary polynomial such as the following Expression (89).

$$f(t) = w_0 t^n + w_1 t^{n-1} + \cdots + w_{n-1} t + w_n$$

$$= \sum_{i=0}^{n} w_i t^{n-i}$$

$$\ldots (89)$$

Here, wi is coefficients of the polynomial, and the actual world estimating unit 822 obtains these coefficients wi, and outputs these to the error calculation unit 823. Further, movement as continuity can be obtained by the movement input from the movement detecting unit 821 ($V_f$ = tan$^{-1}$ $\theta$v, $V_f$: gradient in the frame direction of a movement vector, $\theta$v: angle in the frame direction of a movement vector), so the above Expression (89) can be described with a quadratic polynomial such as shown in the following Expression (90) by substituting a constraint condition of this gradient.

$$f(t, y) = w_0 (t - \alpha y)^n + w_1 (t - \alpha y)^{n-1} + \cdots$$

$$+ w_{n-1} (t - \alpha y) + w_n$$

$$= \sum_{i=0}^{n} w_i (t - \alpha y)^{n-i}$$

$$\ldots (90)$$

That is to say, the above Expression (90) describes a quadratic function f(t, y) obtained by expressing the width of a shift occurring by a primary approximation function f(t), which is described with Expression (89), moving in parallel to the spatial direction Y, as a shift amount $\alpha$t (= -dy / $V_f$: dy is the amount of change in the spatial direction Y).

Accordingly, the actual world estimating unit 822 solves each coefficient wi of the above Expression (90) using the input image and continuity movement information, and outputs the obtained coefficients wi to the error calculation unit 823.

Now, description will return to the flowchart in Fig. 170.

In step S824, the error calculation unit 823 performs integration regarding each pixel in the frame direction from the coefficients input by the actual world estimating unit 822. That is to say, the error calculation unit 823 integrates the above Expression (90) regarding each pixel from coefficients input by the actual world estimating unit 822 such as shown in the following Expression (91).

$$S_t = \int_{y_m}^{y_m+B} \int_{t_m}^{t_m+A} f(t, y) \, dt \, dy$$

$$= \int_{y_m}^{y_m+B} \int_{t_m}^{t_m+A} \left( \sum_{i=0}^{n} w_i (t - \alpha y)^{n-i} \right) dt \, dy$$

$$= \sum_{i=0}^{n} w_i \int_{y_m}^{y_m+B} \int_{t_m}^{t_m+A} (t - \alpha y)^{n-i} \, dt \, dy$$

$$= \sum_{i=0}^{n} w_i \times \frac{1}{(n-i+2)(n-i+1)\alpha}$$

$$\times [\{(t_m + A - \alpha(y_m + B))^{n-i+2} - (t_m - \alpha(y_m + B))^{n-i+2}\}$$

$$- \{(t_m + A - \alpha y_m)^{n-i+2} - (t_m - \alpha y_m)^{n-i+2}\}]$$

$$\ldots (91)$$

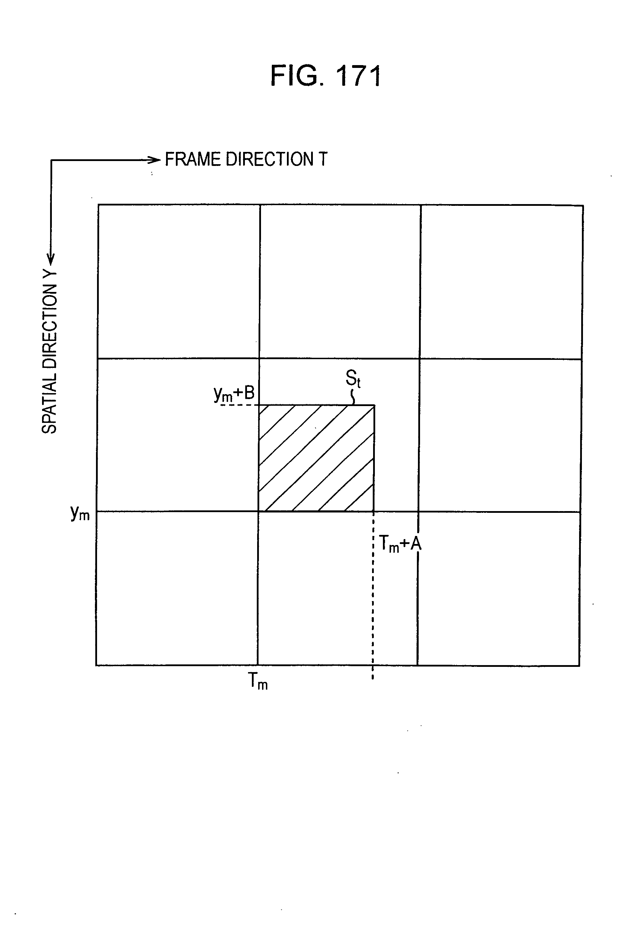

Here, $S_t$ represents the integrated result in the frame direction shown in Fig. 171. The integral range thereof is, as shown in Fig. 171, $T_m$ through $T_{m+B}$ for the frame direction T, and $y_m$ through $y_{m+A}$ for the spatial direction Y. Also, in Fig. 171, let us say that each grid (square) denotes one pixel, and both for the frame direction T and spatial direction Y are 1. Here, "1 regarding the frame direction T" means that the shutter time for the worth of one frame is 1.

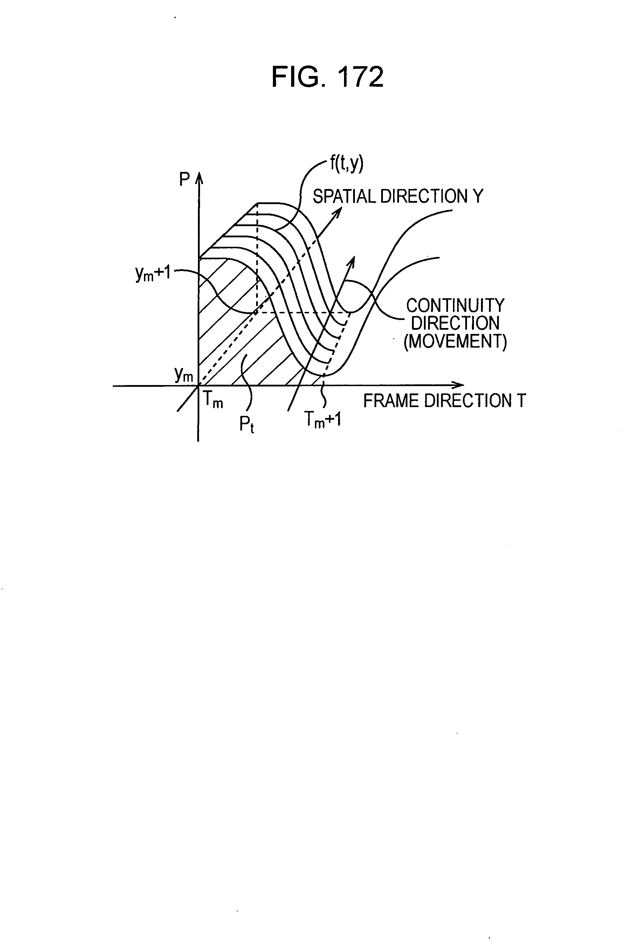

Accordingly, the error calculation unit 823 performs, as shown in Fig. 172, an integral arithmetic operation such as shown in the following Expression (92) regarding each pixel with an integral range of $T_m$ through $T_{m+1}$ for the spatial direction T of a curved surface shown in the approximation function f(t, y), and $y_m$ through $y_{m+1}$ for the spatial direction Y (A = B = 1), and calculates the pixel value $P_t$ of each pixel obtained from the function approximately expressing the actual world.

$$P_t = \int_{y_m}^{y_m+1} \int_{t_m}^{t_m+1} f(t, y)\, dt\, dy$$

$$= \int_{y_m}^{y_m+1} \int_{t_m}^{t_m+1} \left( \sum_{i=0}^{n} w_i (t - \alpha y)^{n-i} \right) dt\, dy$$

$$= \sum_{i=0}^{n} w_i \int_{y_m}^{y_m+1} \int_{t_m}^{t_m+1} (t - \alpha y)^{n-i}\, dt\, dy$$

$$= \sum_{i=0}^{n} w_i \times \frac{1}{(n-i+2)(n-i+1)\alpha}$$

$$\times \left[ \left\{ (t_m + 1 - \alpha(y_m+1))^{n-i+2} - (t_m - \alpha(y_m+1))^{n-i+2} \right\} \right.$$

$$\left. - \left\{ (t_m + 1 - \alpha y_m)^{n-i+2} - (t_m - \alpha y_m)^{n-i+2} \right\} \right]$$

$$\ldots (92)$$

That is to say, according to this processing, the error calculation unit 823 serves as, so to speak, a kind of pixel value generating unit, and generates pixel values from the approximation function.

In step S825, the error calculation unit 803 calculates the difference between a pixel value obtained with integration such as shown in the above Expression (92) and a pixel value of the input image, and outputs this to the comparison unit 824 as an error. That is to say, the error calculation unit 823 obtains the difference between the pixel value of a pixel corresponding to the integral range shown in the above Fig. 171 and Fig. 172 ($T_m$ through $T_{m+1}$ for the spatial direction T, and $y_m$ through $y_{m+1}$ for the spatial direction Y) and a pixel value obtained by the integrated result in a range corresponding to the pixel, as an error, and outputs this to the comparison unit 824.

In step S826, the comparison unit 824 determines regarding whether or not the absolute value of the error between the pixel value obtained with integration and the pixel value of the input image, which are input from the error calculation unit 823, is a predetermined threshold value or less.

In step S826, in the event that determination is made that the error is the predetermined threshold value or less, since the pixel value obtained with integration is a value close to the pixel value of the input image, the comparison unit 824 regards the approximation function set for calculating the pixel value of the pixel as a function sufficiently approximated with the light intensity allocation of a light signal in the real world, and recognizes the region of the pixel now processed as a processing region in step S827. In further detail, the comparison unit 824 stores the pixel now processed in unshown memory as the pixel in the subsequent processing regions.

On the other hand, in the event that determination is made that the error is not the threshold value or less in step S826, since the pixel value obtained with integration is a value far from the actual pixel value, the comparison unit 824 regards the approximation function set for calculating the pixel value of the pixel as a function insufficiently approximated with the light intensity allocation in the real world, and recognizes the region of the pixel now processed as a non-processing region where processing using the approximation function based on continuity information is not performed at a subsequent stage in step S828. In further detail, the comparison unit 824 stores the region of the pixel now processed in unshown memory as the subsequent non-processing regions.

In step S829, the comparison unit 824 determines regarding whether or not the processing has been performed as to all of the pixels, and in the event that determination is made that the processing has not been performed as to all of the pixels, the processing returns to step S822, wherein the subsequent processing is repeatedly performed. In other words, the processing in steps S822 through S829 is repeatedly performed until determination processing wherein comparison between a pixel value obtained with integration and a pixel value input is performed, and determination is made regarding whether or not the pixel is a processing region, is completed regarding all of the pixels.

In step S829, in the event that determination is made that determination processing wherein comparison between a pixel value obtained by reintegration and a pixel value input is performed, and determination is made regarding whether or not the pixel is a processing region, has been completed regarding all of the pixels, the comparison unit 824, in step S830, outputs region information wherein a processing region where processing based on the continuity information in the frame direction is performed at subsequent processing, and a non-processing region where processing based on the continuity information in the frame direction is not performed are identified regarding the input image stored in the unshown memory, as continuity information.

According to the above processing, based on the error between the pixel value obtained by the integrated result in a region corresponding to each pixel using the approximation function f(t) calculated based on the continuity information and the pixel value within the actual input image, evaluation for reliability of expression of the approximation function is performed for each region (for each pixel), and accordingly, a region having a small error, i.e., only a region where a pixel of which the pixel value obtained with integration based on the approximation function is reliable exists is regarded as a processing region, and the regions other than this region are regarded as non-processing regions, and consequently, only a reliable region can be subjected to the processing based on continuity information in the frame direction, and the necessary processing alone can be performed, whereby processing speed can be improved, and also the processing can be performed as to the reliable region alone, resulting in preventing image quality due to this processing from deterioration.

An arrangement may be made wherein the configurations of the data continuity information detecting unit 101 in Fig. 165 and Fig. 169 are combined, any one-dimensional direction of the spatial and temporal directions is selected, and the region information is selectively output.

According to the above configuration, light signals in the real world are projected by the multiple detecting elements of the sensor each having spatio-temporal integration effects, continuity of data in image data made up of multiple pixels having a pixel value projected by the detecting elements of which a part of continuity of the light signals in the real world drops is detected, a function corresponding to the light signals in the real world is approximated on condition that the pixel value of each pixel corresponding to the detected continuity, and corresponding to at least a position in a one-dimensional direction of the spatial and temporal directions of the image data is the pixel value acquired with at least integration effects in the one-dimensional direction, and accordingly, a difference value between a pixel value acquired by estimating the function corresponding to the light signals in the real world, and integrating the estimated function at least in increments of corresponding to each pixel in the primary direction and the pixel value of each pixel is detected, and the function is selectively output according to the difference value, and accordingly, a region alone where a pixel of which the pixel value obtained with integration based on the approximation function is reliable exists can be regarded as a processing region, and the other regions other than this region can be regarded as non-processing regions, the reliable region alone can be subjected to processing based on the continuity information in the frame direction, so the necessary processing alone can be performed, whereby processing speed can be improved, and also the reliable region alone can be subjected to processing, resulting in preventing image quality due to this processing from deterioration.

Next, description will be made regarding estimation of signals in the actual world 1.

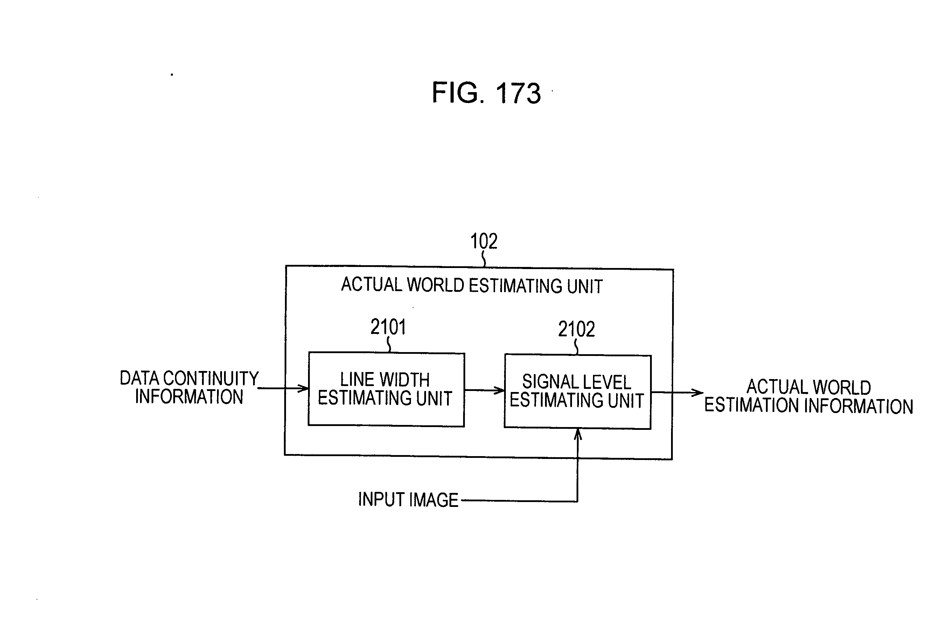

Fig. 173 is a block diagram illustrating the configuration of the actual world estimating unit 102.

With the actual world estimating unit 102 of which the configuration is shown in Fig. 173, based on the input image and the data continuity information supplied from the continuity detecting unit 101, the width of a fine line in the image, which is a signal in the actual world 1, is detected, and the level of the fine line (light intensity of the signal in the actual world 1) is estimated.

A line-width detecting unit 2101 detects the width of a fine line based on the data continuity information indicating a continuity region serving as a fine-line region made up of pixels, on which the fine-line image is projected, supplied from the continuity detecting unit 101. The line-width detecting unit 2101 supplies fine-line width information indicating the width of a fine line detected to a signal-level estimating unit 2102 along with the data continuity information.

The signal-level estimating unit 2102 estimates, based on the input image, the fine-line width information indicating the width of a fine line, which is supplied from the line-width detecting unit 2101, and the data continuity information, the level of the fine-line image serving as the signals in the actual world 1, i.e., the level of light intensity, and outputs actual world estimating information indicating the width of a fine line and the level of the fine-line image.

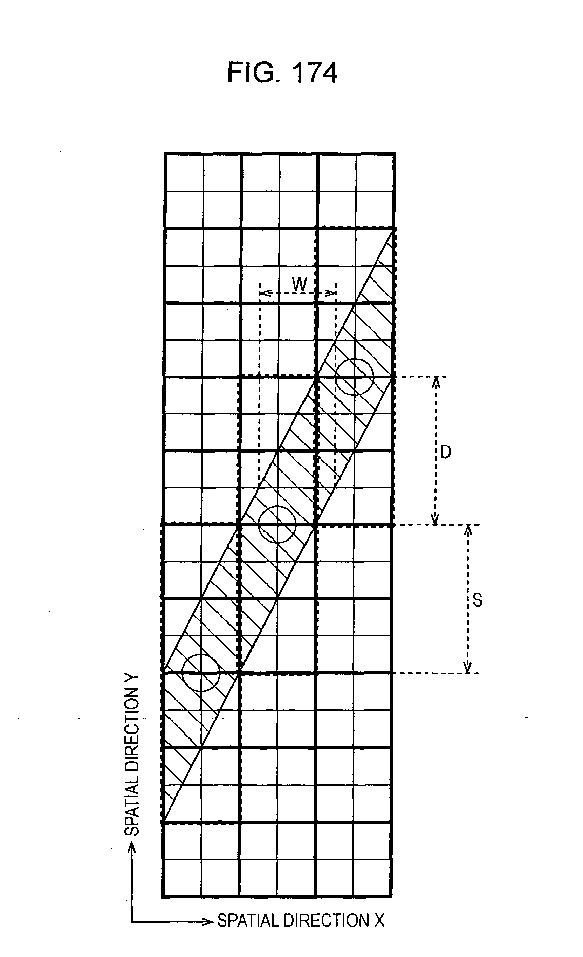

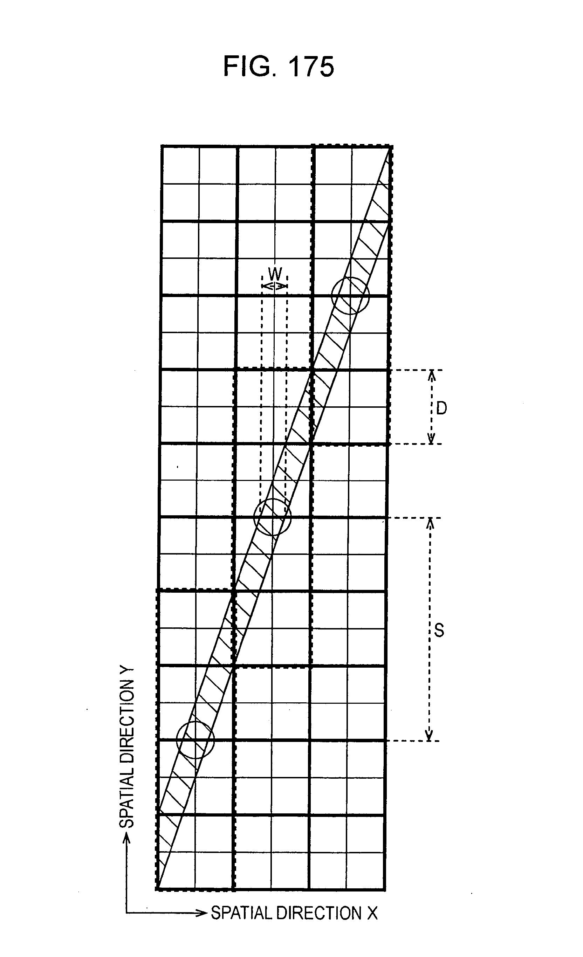

Fig. 174 and Fig. 175 are diagrams for describing processing for detecting the width of a fine line in signals in the actual world 1.

In Fig. 174 and Fig. 175, a region surrounded with a thick line (region made up of four squares) denotes one pixel, a region surrounded with a dashed line denotes a fine-line region made up of pixels on which a fine-line image is projected, and a circle denotes the gravity of a fine-line region. In Fig. 174 and Fig. 175, a hatched line denotes a fine-line image cast in the sensor 2. In other words, it can be said that this hatched line denotes a region where a fine-line image in the actual world 1 is projected on the sensor 2.

In Fig. 174 and Fig. 175, S denotes a gradient to be calculated from the gravity position of a fine-line region, and D is the duplication of fine-line regions. Here, fine-line regions are adjacent to each other, so the gradient S is a distance between the gravities thereof in increments of pixel. Also, the duplication D of fine-line regions denotes the number of pixels adjacent to each other in two fine-line regions.

In Fig. 174 and Fig. 175, W denotes the width of a fine line.

In Fig. 174, the gradient S is 2, and the duplication D is 2.

In Fig. 175, the gradient S is 3, and the duplication D is 1.

The fine-line regions are adjacent to each other, and the distance between the gravities thereof in the direction where the fine-line regions are adjacent to each other is one pixel, so W : D = 1 : S holds, the fine-line width W can be obtained by the duplication D / gradient S.

For example, as shown in Fig. 174, when the gradient S is 2, and the duplication D is 2, 2 / 2 is 1, so the fine-line width W is 1. Also, for example, as shown in Fig. 175, when the gradient S is 3, and the duplication D is 1, the fine-line width W is 1 / 3.

The line-width detecting unit 2101 thus detects the width of a fine-line based on the gradient calculated from the gravity positions of fine-line regions, and duplication of fine-line regions.

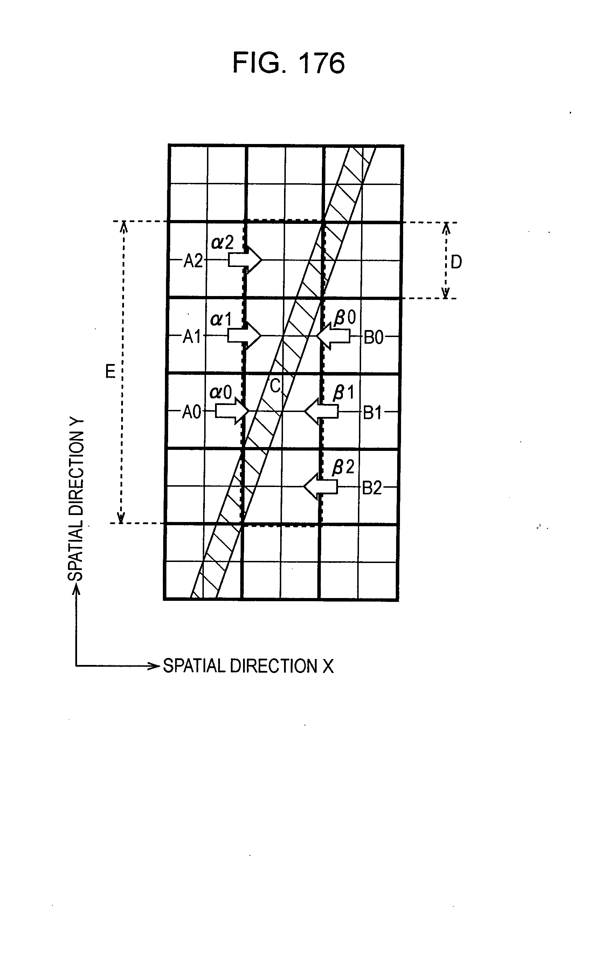

Fig. 176 is a diagram for describing the processing for estimating the level of a fine-line signal in signals in the actual world 1.

In Fig. 176, a region surrounded with a thick line (region made up of four squares) denotes one pixel, a region surrounded with a dashed line denotes a fine-line region made up of pixels on which a fine-line image is projected. In Fig. 176, E denotes the length of a fine-line region in increments of a pixel in a fine-line region, and D is duplication of fine-line regions (the number of pixels adjacent to another fine-line region).

The level of a fine-line signal is approximated when the level is constant within processing increments (fine-line region), and the level of an image other than a fine line wherein a fine line is projected on the pixel value of a pixel is approximated when the level is equal to a level corresponding to the pixel value of the adjacent pixel.

With the level of a fine-line signal as C, let us say that with a signal (image) projected on the fine-line region, the level of the left side portion of a portion where the fine-line signal is projected is A in the drawing, and the level of the right side portion of the portion where the fine-line signal is projected is B in the drawing.

At this time, Expression (93) holds.

$$\text{Sum of pixel values of a fine-line region} = (E - D) / 2 \times A + (E - D) / 2 \times B + D \times C \tag{93}$$

The width of a fine line is constant, and the width of a fine-line region is one pixel, so the area of (the portion where the signal is projected of) a fine line in a fine-line region is equal to the duplication D of fine-line regions. The width of a fine-line region is one pixel, so the area of a fine-line region in increments of a pixel in a fine-line region is equal to the length E of a fine-line region.

Of a fine-line region, the area on the left side of a fine line is (E - D) / 2. Of a fine-line region, the area on the right side of a fine line is (E - D) / 2.

The first term of the right side of Expression (93) is the portion of the pixel value where the signal having the same level as that in the signal projected on a pixel adjacent to the left side is projected, and can be represented with Expression (94).

$$A = \sum \alpha_i \times A_i = \sum 1/(E-D) \times (i+0.5) \times A_i \tag{94}$$

In Expression (94), $A_i$ denotes the pixel value of a pixel adjacent to the left side.

In Expression (94), $\alpha i$ denotes the proportion of the area where the signal having the same level as that in the signal projected on a pixel adjacent to the left side is projected on the pixel of the fine-line region. In other words, $\alpha_i$ denotes the proportion of the same pixel value as that of a pixel adjacent to the left side, which is included in the pixel value of the pixel in the fine-line region.

i represents the position of a pixel adjacent to the left side of the fine-line region.

For example, in Fig. 176, the proportion of the same pixel value as the pixel value $A_0$ of a pixel adjacent to the left side of the fine-line region, which is included in the pixel value of the pixel in the fine-line region, is $\alpha_0$. In Fig. 176, the proportion of the same pixel value as the pixel value $A_1$ of a pixel adjacent to the left side of the fine-line region, which is included in the pixel value of the pixel in the fine-line region, is $\alpha_1$. In Fig. 176, the proportion of the same pixel value as the pixel value $A_2$ of a pixel adjacent to the left side of the fine-line region, which is included in the pixel value of the pixel in the fine-line region, is $\alpha_2$.

The second term of the right side of Expression (93) is the portion of the pixel value where the signal having the same level as that in the signal projected on a pixel adjacent to the right side is projected, and can be represented

with Expression (95).

$$B = \Sigma\beta_j \times B_j = \Sigma 1/(E-D) \times (j+0.5) \times B_j \qquad (95)$$

In Expression (95), $B_j$ denotes the pixel value of a pixel adjacent to the right side.

In Expression (95), $\beta_j$ denotes the proportion of the area where the signal having the same level as that in the signal projected on a pixel adjacent to the right side is projected on the pixel of the fine-line region. In other words, $\beta_j$ denotes the proportion of the same pixel value as that of a pixel adjacent to the right side, which is included in the pixel value of the pixel in the fine-line region.

j denotes the position of a pixel adjacent to the right side of the fine-line region.

For example, in Fig. 176, the proportion of the same pixel value as the pixel value $B_0$ of a pixel adjacent to the right side of the fine-line region, which is included in the pixel value of the pixel in the fine-line region, is $\beta_0$. In Fig. 176, the proportion of the same pixel value as the pixel value $B_1$ of a pixel adjacent to the right side of the fine-line region, which is included in the pixel value of the pixel in the fine-line region, is $\beta_1$. In Fig. 176, the proportion of the same pixel value as the pixel value $B_2$ of a pixel adjacent to the right side of the fine-line region, which is included in the pixel value of the pixel in the fine-line region, is $\beta_2$.

Thus, the signal level estimating unit 2102 obtains the pixel values of the image including a fine line alone, of the pixel values included in a fine-line region, by calculating the pixel values of the image other than a fine line, of the pixel values included in the fine-line region, based on Expression (94) and Expression (95), and removing the pixel values of the image other than the fine line from the pixel values in the fine-line region based on Expression (93). Subsequently, the signal level estimating unit 2102 obtains the level of the fine-line signal based on the pixel values of the image including the fine line alone and the area of the fine line. More specifically, the signal level estimating unit 2102 calculates the level of the fine line signal by dividing the pixel values of the image including the fine line alone, of the pixel values included in the fine-line region, by the area of the fine line in the fine-line region, i.e., the duplication D of the fine-line regions.

The signal level estimating unit 2102 outputs actual world estimating information indicating the width of a fine line, and the signal level of a fine line, in a signal in the actual world 1.

With the technique of the present invention, the waveform of a fine line is geometrically described instead of pixels, so any resolution can be employed.

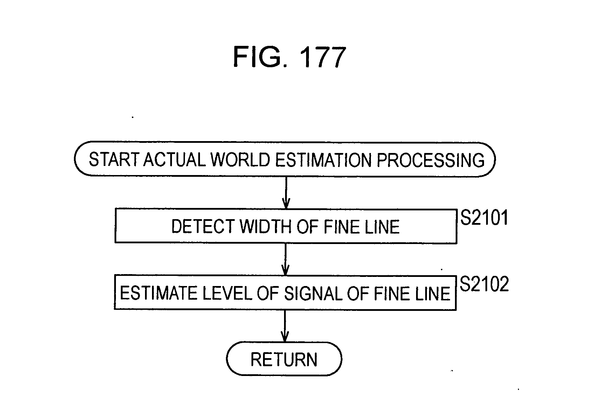

Next, description will be made regarding actual world estimating processing corresponding to the processing in step S102 with reference to the flowchart in Fig. 177.

In step S2101, the line-width detecting unit 2101 detects the width of a fine line based on the data continuity information. For example, the line-width detecting unit 2101 estimates the width of a fine line in a signal in the actual world 1 by dividing duplication of fine-line regions by a gradient calculated from the gravity positions in fine-line regions.

In step S2102, the signal level estimating unit 2102 estimates the signal level of a fine line based on the width of a fine line, and the pixel value of a pixel adjacent to a fine-line region, outputs actual world estimating information indicating the width of the fine line and the signal level of the fine line, which are estimated, and the processing ends. For example, the signal level estimating unit 2102 obtains pixel values on which the image including a fine line alone is projected by calculating pixel values on which the image other than the fine line included in a fine-line region is projected, and removing the pixel values on which the image other than the fine line from the fine-line region is projected, and estimates the level of the fine line in a signal in the actual world 1 by calculating the signal level of the fine line based on the obtained pixel values on which the image including the fine line alone is projected, and the area of the fine line.

Thus, the actual world estimating unit 102 can estimate the width and level of a fine line of a signal in the actual world 1.

As described above, a light signal in the real world is projected, continuity of data regarding first image data wherein part of continuity of a light signal in the real world drops, is detected, the waveform of the light signal in the real world is estimated from the continuity of the first image data based on a model representing the waveform of the light signal in the real world corresponding to the continuity of data, and in the event that the estimated light signal is converted into second image data, a more accurate higher-precision processing result can be obtained as to the light signal in the real world.

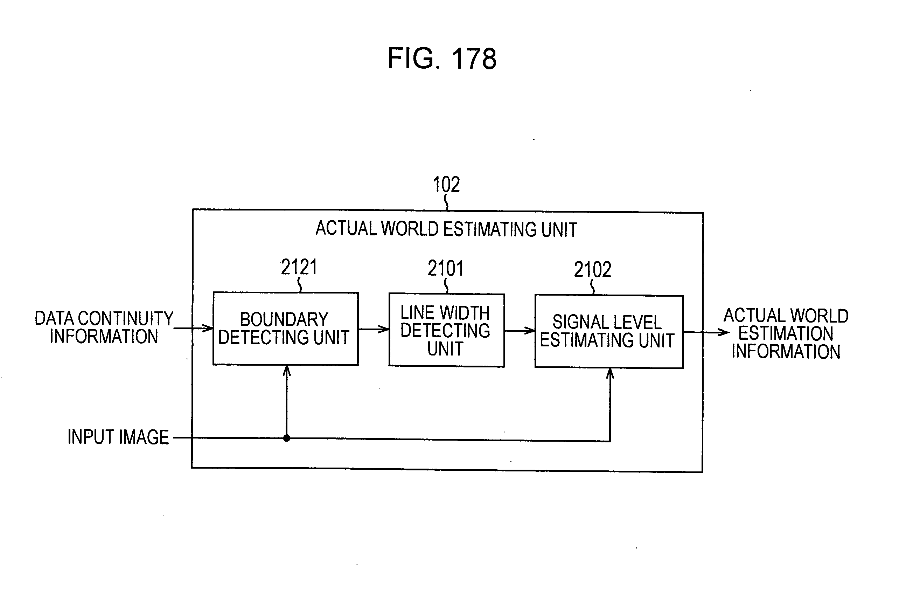

Fig. 178 is a block diagram illustrating another configuration of the actual world estimating unit 102.

With the actual world estimating unit 102 of which the configuration is illustrated in Fig. 178, a region is detected again based on an input image and the data continuity information supplied from the data continuity detecting unit 101, the width of a fine line in the image serving as a signal in the actual world 1 is detected based on the region detected again, and the light intensity (level) of the signal in the actual world 1 is estimated. For example, with the actual world estimating unit 102 of which the configuration is illustrated in Fig. 178, a continuity region made up of pixels on which a fine-line image is projected is detected again, the width of a fine line in an image serving as a signal in the actual world 1 is detected based on the region detected again, and the light intensity of the signal in the actual world 1 is estimated.

The data continuity information, which is supplied from the data continuity detecting unit 101, input to the actual world estimating unit 102 of which configuration is shown in Fig. 178, includes non-continuity component information indicating non-components other than continuity components on which a fine-line image is projected, of input images serving as the data 3, monotonous increase/decrease region information indicating a monotonous increase/decrease region of continuity regions, information indicating a continuity region, and the like. For example, non-continuity component information included in the data continuity information is made up of the gradient of a plane and intercept which approximate non-continuity components such as a background in an input image.

The data continuity information input to the actual world estimating unit 102 is supplied to a boundary detecting unit 2121. The input image input to the actual world estimating unit 102 is supplied to the boundary detecting unit 2121 and signal level estimating unit 2102.

The boundary detecting unit 2121 generates an image made up of continuity components alone on which a fine-line image is projected from the non-continuity component information included in the data continuity information, and the input image, calculates an allocation ratio indicating a proportion wherein a fine-line image serving as a signal in the actual world 1 is projected, and detects a fine-line region serving as a continuity region again by calculating a regression line indicating the boundary of the fine-line region from the calculated allocation ratio.

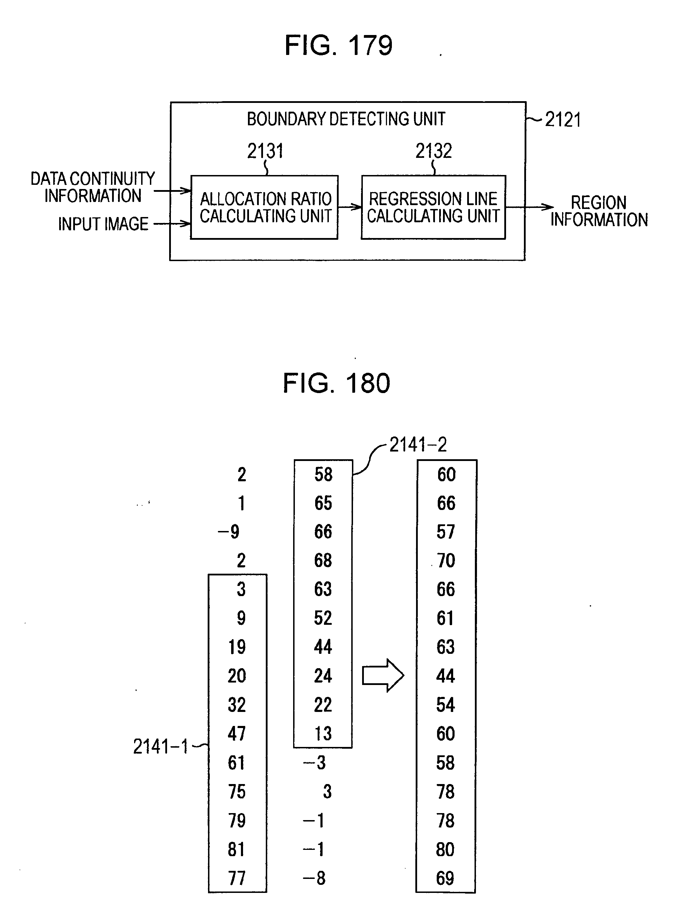

Fig. 179 is a block diagram illustrating the configuration of the boundary detecting unit 2121.

An allocation-ratio calculation unit 2131 generates an image made up of continuity components alone on which a fine-line image is projected from the data continuity information, the non-continuity component information included in the data continuity information, and an input image. More specifically, the allocation-ratio calculation unit 2131 detects adjacent monotonous increase/decrease regions of the continuity region from the input image based on the monotonous increase/decrease region information included in the data continuity information, and generates an image made up of continuity components alone on which a fine-line image is projected by subtracting an approximate value to be approximated at a plane indicated with a gradient and intercept included in the continuity component information from the pixel value of a pixel belonged to the detected monotonous increase/decrease region.

Note that the allocation-ratio calculation unit 2131 may generate an image made up of continuity components alone on which a fine-line image is projected by subtracting an approximate value to be approximated at a plane indicated with a gradient and intercept included in the continuity component information from the pixel value of a pixel in the input image.

The allocation-ratio calculation unit 2131 calculates an allocation ratio indicating proportion wherein a fine-line image serving as a signal in the actual world 1 is allocated into two pixels belonged to adjacent monotonous increase/decrease regions within a continuity region based on the generated image made up of the continuity components alone. The allocation-ratio calculation unit 2131 supplies the calculated allocation ratio to a regression-line calculation unit 2132.

Description will be made regarding allocation-ratio calculation processing in the allocation-ratio calculation unit 2131 with reference to Fig. 180 through Fig. 182.

The numeric values in two columns on the left side in Fig. 180 denote the pixel values of pixels vertically arrayed in two columns of an image calculated by subtracting approximate values to be approximated at a plane indicated with a gradient and intercept included in the continuity component information from the pixel values of an input image. Two regions surrounded with a square on the left side in Fig. 180 denote a monotonous increase/decrease region 2141-1 and monotonous increase/decrease region 2141-2, which are two adjacent monotonous increase/decrease regions. In other words, the numeric values shown in the monotonous increase/decrease region 2141-1 and monotonous increase/decrease region 2141-2 denote the pixel values of pixels belonged to a monotonous increase/decrease region serving as a continuity region, which is detected by the data continuity detecting unit 101.

The numeric values in one column on the right side in Fig. 180 denote values obtained by adding the pixel values of the pixels horizontally arrayed, of the pixel values of the pixels in two columns on the left side in Fig. 180. In other words, the numeric values in one column on the right side in Fig. 180 denote values obtained by adding the pixel values on which a fine-line image is projected for each pixel horizontally adjacent regarding the two monotonous increase/decrease regions made up of pixels in one column vertically arrayed.

For example, when belonging to any one of the monotonous increase/decrease region 2141-1 and monotonous increase/decrease region 2141-2, which are made up of the pixels in one column vertically arrayed respectively, and the pixel values of the pixels horizontally adjacent are 2 and 58, the value added is 60. When belonging to any one of the monotonous increase/decrease region 2141-1 and monotonous increase/decrease region 2141-2, which are made up of the pixels in one column vertically arrayed respectively, and the pixel values of the pixels horizontally adjacent are 1 and 65, the value added is 66.

It can be understood that the numeric values in one column on the right side in Fig. 180, i.e., the values obtained by adding the pixel values on which a fine-line image is projected regarding the pixels adjacent in the horizontal direction of the two adjacent monotonous increase/decrease regions made up of the pixels in one column vertically arrayed, are generally constant.

Similarly, the values obtained by adding the pixel values on which a fine-line image is projected regarding the pixels adjacent in the vertical direction of the two adjacent monotonous increase/decrease regions made up of the pixels in one column horizontally arrayed, are generally constant.

The allocation-ratio calculation unit 2131 calculates how a fine-line image is allocated on the pixel values of the pixels in one column by utilizing characteristics that the values obtained by adding the pixel values on which the fine-line image is projected regarding the adjacent pixels of the two adjacent monotonous increase/decrease regions, are generally constant.

The allocation-ratio calculation unit 2131 calculates an allocation ratio regarding each pixel belonged to the two adjacent monotonous increase/decrease regions by dividing the pixel value of each pixel belonged to the two adjacent monotonous increase/decrease regions made up of pixels in one column vertically arrayed by the value obtained by adding the pixel values on which a fine-line image is projected for each pixel horizontally adjacent. However, in the event that the calculated result, i.e., the calculated allocation ratio exceeds 100, the allocation ratio is set to 100.

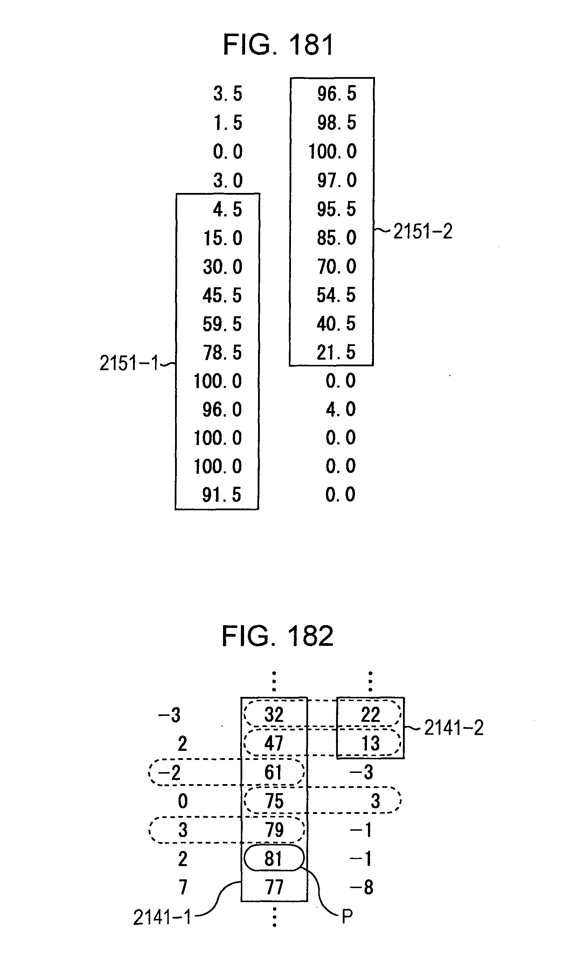

For example, as shown in Fig. 181, when the pixel values of pixels horizontally adjacent, which are belonged to two adjacent monotonous increase/decrease regions made up of pixels in one column vertically arrayed, are 2 and 58 respectively, the value added is 60, and accordingly, allocation ratios 3.5 and 96.5 are calculated as to the corresponding pixels respectively. When the pixel values of pixels horizontally adjacent, which are belonged to two adjacent monotonous increase/decrease regions made up of pixels in one column vertically arrayed, are 1 and 65 respectively, the value added is 65, and accordingly, allocation ratios 1.5 and 98.5 are calculated as to the corresponding pixels respectively.

In this case, in the event that three monotonous increase/decrease regions are adjacent, regarding which column is first calculated, of two values obtained by adding the pixel values on which a fine-line image is projected for each pixel horizontally adjacent, an allocation ratio is calculated based on a value closer to the pixel value of the peak P, as shown in Fig. 182.

For example, when the pixel value of the peak P is 81, and the pixel value of a pixel of interest belonged to a monotonous increase/decrease region is 79, in the event that the pixel value of a pixel adjacent to the left side is 3, and the pixel value of a pixel adjacent to the right side is -1, the value obtained by adding the pixel value adjacent to the left side is 82, and the value obtained by adding the pixel value adjacent to the right side is 78, and consequently, 82 which is closer to the pixel value 81 of the peak P is selected, so an allocation ratio is calculated based on the pixel adjacent to the left side. Similarly, when the pixel value of the peak P is 81, and the pixel value of a pixel of interest belonged to the monotonous increase/decrease region is 75, in the event that the pixel value of a pixel adjacent to the left side is 0, and the pixel value of a pixel adjacent to the right side is 3, the value obtained by adding the pixel value adjacent to the left side is 75, and the value obtained by adding the pixel value adjacent to the right side is 78, and consequently, 78 which is closer to the pixel value 81 of the peak P is selected, so an allocation ratio is calculated based on the pixel adjacent to the right side.

Thus, the allocation-ratio calculation unit 2131 calculates an allocation ratio regarding a monotonous increase/decrease region made up of pixels in one column vertically arrayed.

With the same processing, the allocation-ratio calculation unit 2131 calculates an allocation ratio regarding a monotonous increase/decrease region made up of pixels in one column horizontally arrayed.

The regression-line calculation unit 2132 assumes that the boundary of a monotonous increase/decrease region is a straight line, and detects the monotonous increase/decrease region within the continuity region again by calculating a regression line indicating the boundary of the monotonous increase/decrease region based on the calculated allocation ratio by the allocation-ratio calculation unit 2131.

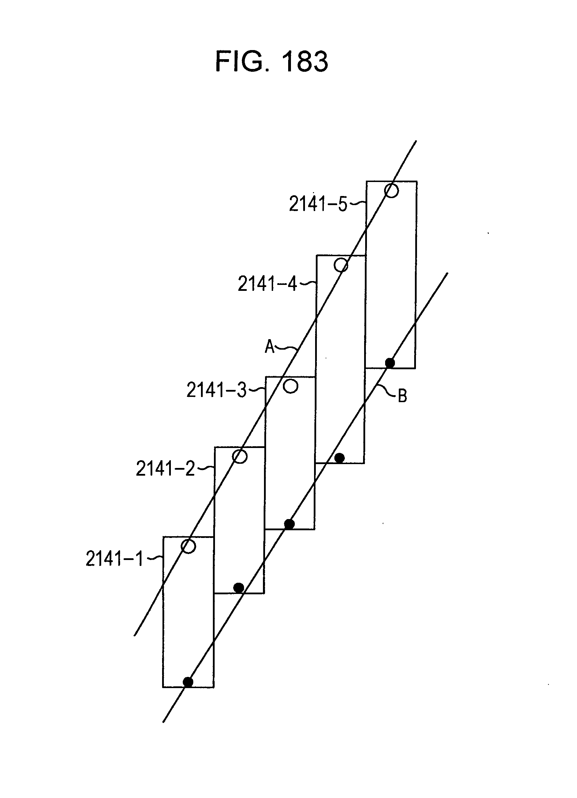

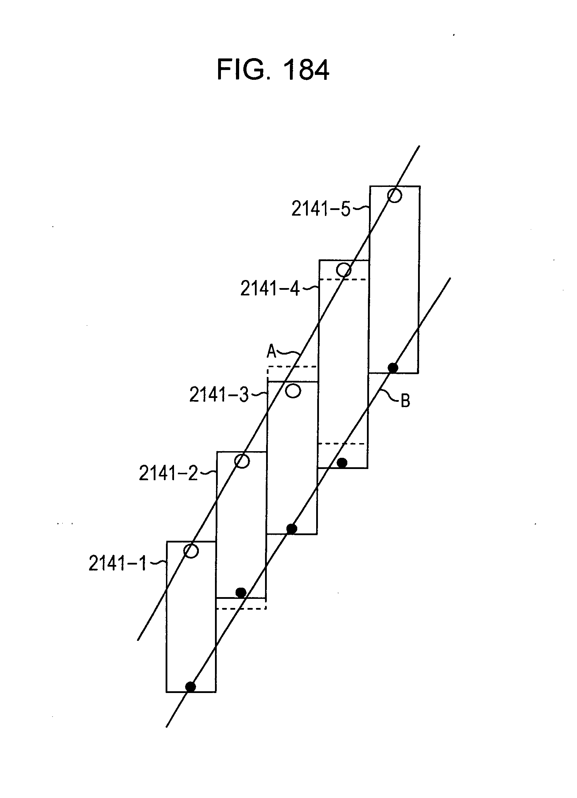

Description will be made regarding processing for calculating a regression line indicating the boundary of a monotonous increase/decrease region in the regression-line calculation unit 2132 with reference to Fig. 183 and Fig. 184.

In Fig. 183, a white circle denotes a pixel positioned in the boundary on the upper side of the monotonous increase/decrease region 2141-1 through the monotonous increase/decrease region 2141-5. The regression-line calculation unit 2132 calculates a regression line regarding the boundary on the upper side of the monotonous increase/decrease region 2141-1 through the monotonous increase/decrease region 2141-5 using the regression processing. For example, the regression-line calculation unit 2132 calculates a straight line A wherein the sum of squares of the distances with the pixels positioned in the boundary on the upper side of the monotonous increase/decrease region 2141-1 through the monotonous increase/decrease region 2141-5 becomes the minimum value.

Also, in Fig. 183, a black circle denotes a pixel positioned in the boundary on the lower side of the monotonous increase/decrease region 2141-1 through the monotonous increase/decrease region 2141-5. The regression-line calculation unit 2132 calculates a regression line regarding the boundary on the lower side of the monotonous increase/decrease region 2141-1 through the monotonous increase/decrease region 2141-5 using the regression processing. For example, the regression-line calculation unit 2132 calculates a straight line B wherein the sum of squares of the distances with the pixels positioned in the boundary on the lower side of the monotonous increase/decrease region 2141-1 through the monotonous increase/decrease region 2141-5 becomes the minimum value.

The regression-line calculation unit 2132 detects the monotonous increase/decrease region within the continuity region again by determining the boundary of the monotonous increase/decrease region based on the calculated regression line.

As shown in Fig. 184, the regression-line calculation unit 2132 determines the boundary on the upper side of the monotonous increase/decrease region 2141-1 through the monotonous increase/decrease region 2141-5 based on the calculated straight line A. For example, the regression-line calculation unit 2132 determines the boundary on the upper side from the pixel closest to the calculated straight line A regarding each of the monotonous increase/decrease region 2141-1 through the monotonous increase/decrease region 2141-5. For example, the regression-line calculation unit 2132 determines the boundary on the upper side such that the pixel closest to the calculated straight line A is included in each region regarding each of the monotonous increase/decrease region 2141-1 through the monotonous increase/decrease region 2141-5.

As shown in Fig. 184, the regression-line calculation unit 2132 determines the boundary on the lower side of the monotonous increase/decrease region 2141-1 through the monotonous increase/decrease region 2141-5 based on the calculated straight line B. For example, the regression-line calculation unit 2132 determines the boundary on the lower side from the pixel closest to the calculated straight line B regarding each of the monotonous increase/decrease region 2141-1 through the monotonous increase/decrease region 2141-5. For example, the regression-line calculation unit 2132 determines the boundary on the upper side such that the pixel closest to the calculated straight line B is included in each region regarding each of the monotonous increase/decrease region 2141-1 through the monotonous increase/decrease region 2141-5.

Thus, the regression-line calculation unit 2132 detects a region wherein the pixel value monotonously increases or decreases from the peak again based on a regression line for recurring the boundary of the continuity region detected by the data continuity detecting unit 101. In other words, the regression-line calculation unit 2132 detects a region serving as the monotonous increase/decrease region within the continuity region again by determining the boundary of the monotonous increase/decrease region based on the calculated regression line, and supplies region information indicating the detected region to the line-width detecting unit 2101.

As described above, the boundary detecting unit 2121 calculates an allocation ratio indicating proportion wherein a fine-line image serving as a signal in the actual world 1 is projected on pixels, and detects the monotonous increase/decrease region within the continuity region again by calculating a regression line indicating the boundary of the monotonous increase/decrease region from the calculated allocation ratio. Thus, a more accurate monotonous increase/decrease region can be detected.

The line-width detecting unit 2101 shown in Fig. 178 detects the width of a fine line in the same processing as the case shown in Fig. 173 based on the region information indicating the region detected again, which is supplied from the boundary detecting unit 2121. The line-width detecting unit 2101 supplies fine-line width information indicating the width of a fine line detected to the signal level estimating unit 2102 along with the data continuity information.

The processing of the signal level estimating unit 2102 shown in Fig. 178 is the same processing as the case shown in Fig. 173, so the description thereof is omitted.

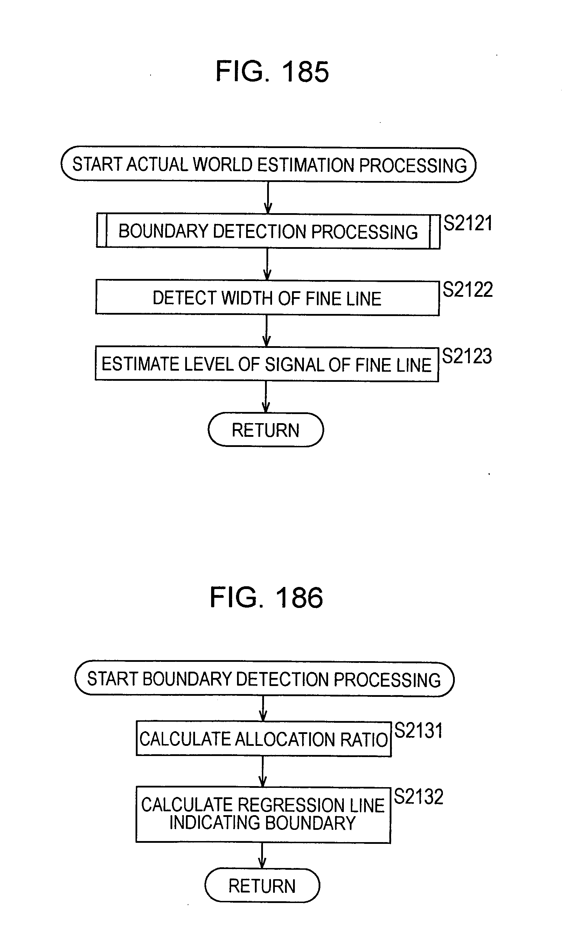

Fig. 185 is a flowchart for describing actual world estimating processing using the actual world estimating unit 102 of which configuration is shown in Fig. 178, which corresponds to the processing in step S102.

In step S2121, the boundary detecting unit 2121 executes boundary detecting processing for detecting a region again based on the pixel value of a pixel belonged to the continuity region detected by the data continuity detecting unit 101. The details of the boundary detecting processing will be described later.

The processing in step S2122 and step S2123 is the same as the processing in step S2101 and step S2102, so the description thereof is omitted.

Fig. 186 is a flowchart for describing boundary detecting processing corresponding to the processing in step S2121.

In step S2131, the allocation-ratio calculation unit 2131 calculates an allocation ratio indicating proportion wherein a fine-line image is projected based on the data continuity information indicating a monotonous increase/decrease region and an input image. For example, the allocation-ratio calculation unit 2131 detects adjacent monotonous increase/decrease regions within the continuity region from an input image based on the monotonous increase/decrease region information included in the data continuity information, and generates an image made up of continuity components alone on which a fine-line image is projected by subtracting approximate values to be approximated at a plane indicated with a gradient and intercept included in the continuity component information from the pixel values of the pixels belonged to the detected monotonous increase/decrease region. Subsequently, the allocation-ratio calculation unit 2131 calculates an allocation ratio, by dividing the pixel values of pixels belonged to two monotonous increase/decrease regions made up of pixels in one column by the sum of the pixel values of the adjacent pixels, regarding each pixel belonged to the two adjacent monotonous increase/decrease regions.

The allocation-ratio calculation unit 2131 supplies the calculated allocation ratio to the regression-line calculation unit 2132.

In step S2132, the regression-line calculation unit 2132 detects a region within the continuity region again by calculating a regression line indicating the boundary of a monotonous increase/decrease region based on the allocation ratio indicating proportion wherein a fine-line image is projected. For example, the regression-line calculation unit 2132 assumes that the boundary of a monotonous increase/decrease region is a straight line, and detects the monotonous increase/decrease region within the continuity region again by calculating a regression line indicating the boundary of one end of the monotonous increase/decrease region, and calculating a regression line indicating the boundary of another end of the monotonous increase/decrease region.

The regression-line calculation unit 2132 supplies region information indicating the region detected again within the continuity region to the line-width detecting unit 2101, and the processing ends.

Thus, the actual world estimating unit 102 of which configuration is shown in Fig. 178 detects a region made up of pixels on which a fine-line image is projected again, detects the width of a fine line in the image serving as a signal in the actual world 1 based on the region detected again, and estimates the intensity (level) of light of the signal in the actual world 1. Thus, the width of a fine line can be detected more accurately, and the intensity of light can be estimated more accurately regarding a signal in the actual world 1.

As described above, in the event that a light signal in the real world is projected, a discontinuous portion of the pixel values of multiple pixels in the first image data of witch part of continuity of the light signal in the real world drops is detected, a continuity region having continuity of data is detected from the detected discontinuous portion, a region is detected again based on the pixel values of pixels belonged to the detected continuity region, and the actual world is estimated based on the region detected again, a more accurate and higher-precision processing result can be obtained as to events in the real world.

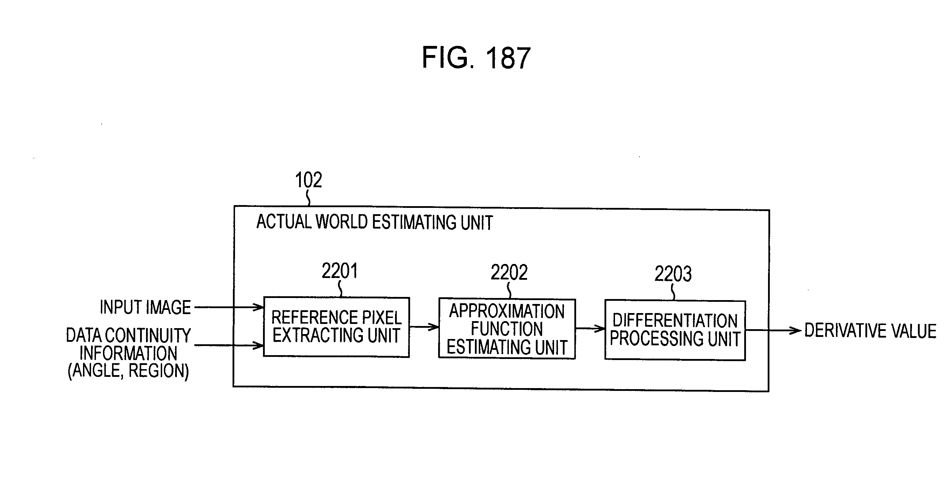

Next, description will be made regarding the actual world estimating unit 102 for outputting derivative values of the approximation function in the spatial direction for each pixel in a region having continuity as actual world estimating information with reference to Fig. 187.

A reference-pixel extracting unit 2201 determines regarding whether or not each pixel in an input image is a processing region based on the data continuity information (angle as continuity or region information) input from the data continuity detecting unit 101, and in the event of a processing region, extracts reference pixel information necessary for obtaining an approximate function for approximating the pixel values of pixels in the input image (the positions and pixel values of multiple pixels around a pixel of interest necessary for calculation), and outputs this to an approximation-function estimating unit 2202.

The approximation-function estimating unit 2202 estimates, based on the least-squares method, an approximation function for approximately describing the pixel values of pixels around a pixel of interest based on the reference pixel information input from the reference-pixel extracting unit 2201, and outputs the estimated approximation function to a differential processing unit 2203.

The differential processing unit 2203 obtains a shift amount in the position of a pixel to be generated from a pixel of interest according to the angle of the data continuity information (for example, angle as to a predetermined axis of a fine line or two-valued edge: gradient) based on the approximation function input from the approximation-function estimating unit 2202, calculates a derivative value in the position on the approximation function according to the shift amount (the derivative value of a function for approximating the pixel value of each pixel corresponding to a distance from a line corresponding to continuity along in the one-dimensional direction), and further, adds information regarding the position and pixel value of a pixel of interest, and gradient as continuity to this, and outputs this to the image generating unit 103 as actual world estimating information.

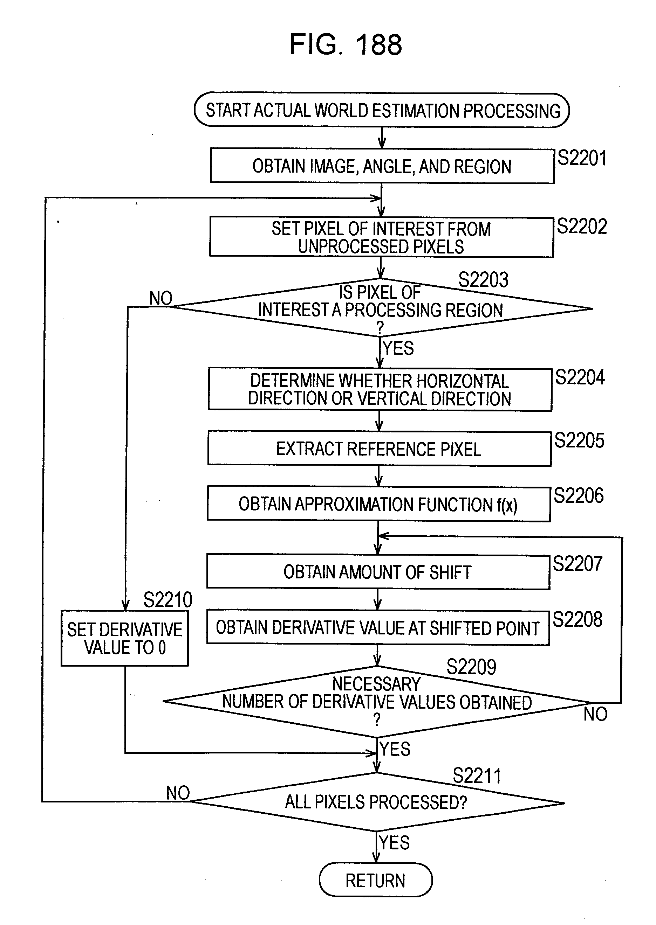

Next, description will be made regarding actual world estimating processing by the actual world estimating unit 102 in Fig. 187 with reference to the flowchart in Fig. 188.

In step S2201, the reference-pixel extracting unit 2201 acquires an angle and region information as the data continuity information from the data continuity detecting unit 101 as well as an input image.

In step S2202, the reference-pixel extracting unit 2201 sets a pixel of interest from unprocessed pixels in the input image.

In step S2203, the reference-pixel extracting unit 2201 determines regarding whether or not the pixel of interest is included in a processing region based on the region information of the data continuity information, and in the event that the pixel of interest is not a pixel in a processing region, the processing proceeds to step S2210, the differential processing unit 2203 is informed that the pixel of interest is in a non-processing region via the approximation-function estimating unit 2202, in response to this, the differential processing unit 2203 sets the derivative value regarding the corresponding pixel of interest to zero, further adds the pixel value of the pixel of interest to this, and outputs this to the image generating unit 103 as actual world estimating information, and also the processing proceeds to step S2211. Also, in the event that determination is made that the pixel of interest is in a processing region, the processing proceeds to step S2204.

In step S2204, the reference-pixel extracting unit 2201 determines regarding whether the direction having data continuity is an angle close to the horizontal direction or angle close to the vertical direction based on the angular information included in the data continuity information. That is to say, in the event that an angle θ having data continuity is $45° > θ ≥ 0°$, or $180° > θ ≥ 135°$, the reference-pixel extracting unit 2201 determines that the direction of continuity of the pixel of interest is close to the horizontal direction, and in the event that the angle θ having data continuity is $135° > θ ≥ 45°$, determines that the direction of continuity of the pixel of interest is close to the vertical direction.

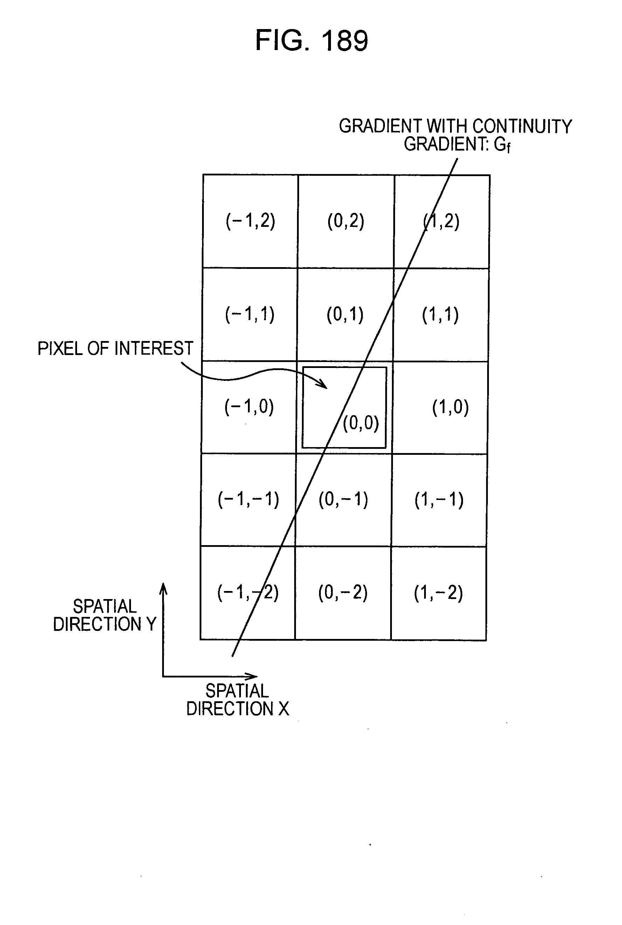

In step S2205, the reference-pixel extracting unit 2201 extracts the positional information and pixel values of reference pixels corresponding to the determined direction from the input image respectively, and outputs these to the approximation-function estimating unit 2202. That is to say, reference pixels become data to be used for calculating a later-described approximation function, so are preferably extracted according to the gradient thereof. Accordingly, corresponding to any determined direction of the horizontal direction and the vertical direction, reference pixels in a long range in the direction thereof are extracted. More specifically, for example, as shown in Fig. 189, in the event that a gradient $G_f$ is close to the vertical direction, determination is made that the direction is the vertical direction. In this case, as shown in Fig. 189 for example, when a pixel (0, 0) in the center of Fig. 189 is taken as a pixel of interest, the reference-pixel extracting unit 2201 extracts each pixel value of pixels (-1, 2), (-1, 1), (-1, 0), (-1, -1), (-1, -2), (0, 2), (0, 1), (0, 0), (0, -1), (0, -2), (1, 2), (1, 1), (1, 0), (1, -1), and (1, -2). Note that in Fig. 189, let us say that both sizes in the horizontal direction and in the vertical direction of each pixel is 1.

In other words, the reference-pixel extracting unit 2201 extracts pixels in a long range in the vertical direction as reference pixels such that the reference pixels are 15 pixels in total of 2 pixels respectively in the vertical (upper/lower) direction $\times$ 1 pixel respectively in the horizontal (left/right) direction centered on the pixel of interest.

On the contrary, in the event that determination is made that the direction is the horizontal direction, the reference-pixel extracting unit 2201 extracts pixels in a long range in the horizontal direction as reference pixels such that the reference pixels are 15 pixels in total of 1 pixel respectively in the vertical (upper/lower) direction $\times$ 2 pixels respectively in the horizontal (left/right) direction centered on the pixel of interest, and outputs these to the approximation-function estimating unit 2202. Needless to say, the number of reference pixels is not restricted to 15 pixels as described above, so any number of pixels may be employed.

In step S2206, the approximation-function estimating unit 2202 estimates the approximation function f(x) using the least squares method based on information of reference pixels input from the reference-pixel extracting unit 2201, and outputs this to the differential processing unit 2203.

That is to say, the approximation function f(x) is a polynomial such as shown in the following Expression (96).

$$f(x) = w_1 x^n + w_2 x^{n-1} + \cdots + w_{n+1} \qquad (96)$$

Thus, if each of coefficients $W_1$ through $W_{n+1}$ of the polynomial in Expression (96) can be obtained, the approximation function f(x) for approximating the pixel value of each reference pixel (reference pixel value) can be obtained. However, reference pixel values exceeding the number of coefficients are necessary, so for example, in the case such as shown in Fig. 189, the number of reference pixels is 15 pixels in total, and accordingly, the number of obtainable coefficients in the polynomial is restricted to 15. In this case, let us say that the polynomial is up to 14-dimension, and the approximation function is estimated by obtaining the coefficients $W_1$ through $W_{15}$. Note that in this case, simultaneous equations may be employed by setting the approximation function f(x) made up of a 15-dimensional polynomial.

Accordingly, when 15 reference pixel values shown in Fig. 189 are employed, the approximation-function estimating unit 2202 estimates the approximation function f(x) by solving the following Expression (97) using the least squares method.

$$P (-1, -2) = f (-1 - Cx (-2))$$

$$P (-1, -1) = f (-1 - Cx (-1))$$

$$P (-1, 0) = f (-1) (=f (-1 - Cx (0)))$$

$$P (-1, 1) = f (-1 - Cx (1))$$

$$P(-1, 2) = f(-1 - Cx(2))$$

$$P(0, -2) = f(0 - Cx(-2))$$

$$P(0, -1) = f(0 - Cx(-1))$$

$$P(0, 0) = f(0) (=f(0 - Cx(0)))$$

$$P(0, 1) = f(0 - Cx(1))$$

$$P(0, 2) = f(0 - Cx(2))$$

$$P(1, -2) = f(1 - Cx(-2))$$

$$P(1, -1) = f(1 - Cx(-1))$$

$$P(1, 0) = f(1) (=f(1 - Cx(0)))$$

$$P(1, 1) = f(1 - Cx(1))$$

$$P(1, 2) = f(1 - Cx(2)) \tag{97}$$

Note that the number of reference pixels may be changed in accordance with the degree of the polynomial.

Here, Cx (ty) denotes a shift amount, and when the gradient as continuity is denoted with $G_f$, Cx (ty) = ty / $G_f$ is defined. This shift amount Cx (ty) denotes the width of a shift as to the spatial direction X in the position in the spatial direction Y = ty on condition that the approximation function f(x) defined on the position in the spatial direction Y = 0 is continuous (has continuity) along the gradient $G_f$. Accordingly, for example, in the event that the approximation function is defined as f (x) on the position in the spatial direction Y = 0, this approximation function f(x) must be shifted by Cx (ty) as to the spatial direction X along the gradient $G_f$ in the spatial direction Y = ty, so the function is defined as f (x - Cx (ty)) (=f (x - ty / $G_f$).

In step S2207, the differential processing unit 2203 obtains a shift amount in the position of a pixel to be generated based on the approximation function f(x) input from the approximation-function estimating unit 2202.

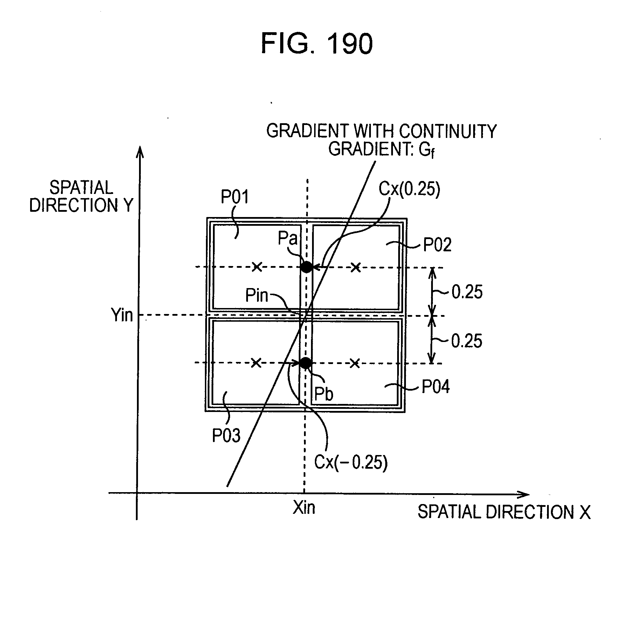

That is to say, in the event that pixels are generated so as to be a double density in the horizontal direction and in the vertical direction respectively (quadruple density in total), the differential processing unit 2203 first obtains a shift amount of Pin (Xin, Yin) in the center position to divide a pixel of interest into two pixels Pa and Pb, which become a double density in the vertical direction, as shown in Fig. 190, to obtain a derivative value at a center position Pin (Xin, Yin) of a pixel of interest. This shift amount becomes Cx (0), so actually becomes zero. Note that in Fig. 190, a pixel Pin of which general gravity position is (Xin, Yin) is a square, and pixels Pa and Pb of which general gravity positions are (Xin, Yin + 0.25) and (Xin, Yin - 0.25) respectively are rectangles long in the horizontal direction in the drawing.

In step S2208, the differential processing unit 2203 differentiates the approximation function f(x) so as to obtain a primary differential function f(x)' of the approximation function, obtains a derivative value at a position according to the obtained shift amount, and outputs this to the image generating unit 103 as actual world estimating information. That is to say, in this case, the differential processing unit 2203 obtains a derivative value f (Xin)', and adds the position thereof (in this case, a pixel of interest (Xin, Yin)), the pixel value thereof, and the gradient information in the direction of continuity to this, and outputs this.

In step S2209, the differential processing unit 2203 determines regarding whether or not derivative values necessary for generating desired-density pixels are obtained. For example, in this case, the obtained derivative values are only derivative values necessary for a double density (only derivative values to become a double density for the spatial direction Y are obtained), so determination is made that derivative values necessary for generating desired-density pixels are not obtained, and the processing returns to step S2207.

In step S2207, the differential processing unit 2203 obtains a shift amount in the position of a pixel to be generated based on the approximation function f(x) input from the approximation-function estimating unit 2202 again. That is to say, in this case, the differential processing unit 2203 obtains derivative values necessary for further dividing the divided pixels Pa and Pb into 2 pixels respectively. The positions of the pixels Pa and Pb are denoted with black circles in Fig. 190 respectively, so the differential processing unit 2203 obtains a shift amount corresponding to each position. The shift amounts of the pixels Pa and Pb are Cx (0.25) and Cx (-0.25) respectively.

In step S2208, the differential processing unit 2203 subjects the approximation function f(x) to a primary differentiation, obtains a derivative value in the position according to a shift amount corresponding to each of the pixels Pa and Pb, and outputs this to the image generating unit 103 as actual world estimating information.

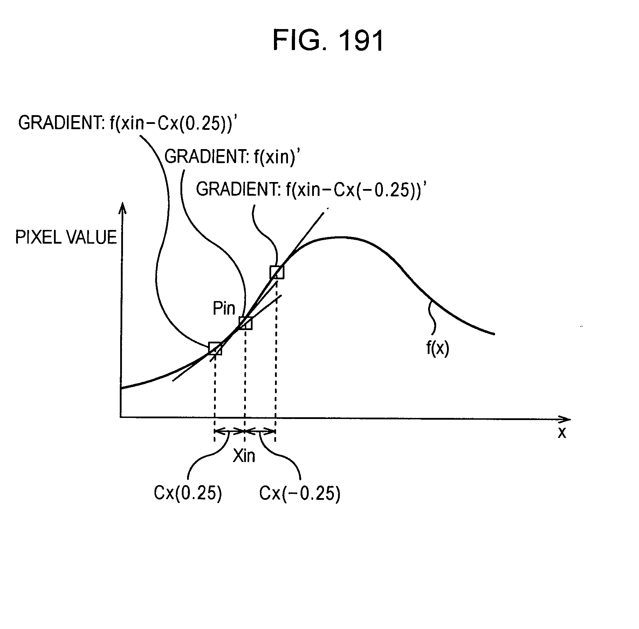

That is to say, in the event of employing the reference pixels shown in Fig. 189, the differential processing unit 2203, as shown in Fig. 191, obtains a differential function f(x)' regarding the obtained approximation function f(x), obtains derivative values in the positions (Xin - Cx (0.25)) and (Xin - Cx (-0.25)), which are positions shifted by shift amounts Cx (0.25) and Cx (-0.25) for the spatial direction X, as f (Xin - Cx (0.25))' and f (Xin - Cx (-0.25))' respectively, adds the positional information corresponding to the derivative values thereof to this, and outputs this as actual world estimating information. Note that the information of the pixel values is output at the first processing, so this is not added at this processing.

In step S2209, the differential processing unit 2203 determines regarding whether or not derivative values necessary for generating desired-density pixels are obtained again. For example, in this case, derivative values to become a quadruple density have been obtained, so determination is made that derivative values necessary for generating desired-density pixels have been obtained, and the processing proceeds to step S2211.

In step S2211, the reference-pixel extracting unit 2201 determines regarding whether or not all of the pixels have been processed, and in the event that determination is made that all of the pixels have not been processed, the processing returns to step S2202. Also, in step S2211, in the event that determination is made that all of the pixels have been processed, the processing ends.

As described above, in the event that pixels are generated so as to become a quadruple density in the horizontal direction and in the vertical direction regarding the input image, pixels are divided by extrapolation/interpolation using the derivative value of the approximation function in the center position of the pixel to be divided, so in order to generate quadruple-density pixels, information of three derivative values in total is necessary.

That is to say, as shown in Fig. 190, derivative values necessary for generating four pixels P01, P02, P03, and P04 (in Fig. 190, pixels P01, P02, P03, and P04 are squares of which the gravity positions are the positions of four cross marks in the drawing, and the length of each side is 1 for the pixel Pin, so around 0.5 for the pixels P01, P02, P03, and P04) are necessary for one pixel in the end, and accordingly, in order to generate quadruple-density pixels, first, double-density pixels in the horizontal direction or in the vertical direction (in this case, in the vertical direction) are generated (the above first processing in steps S2207 and S2208), and further, the divided two pixels are divided in the direction orthogonal to the initial dividing direction (in this case, in the horizontal direction) (the above second processing in steps S2207 and S2208).

Note that with the above example, description has been made regarding derivative values at the time of calculating quadruple-density pixels as an example, but in the event of calculating pixels having a density more than a quadruple density, many more derivative values necessary for calculating pixel values may be obtained by repeatedly performing the processing in steps S2207 through S2209. Also, with the above example, description has been made regarding an example for obtaining double-density pixel values, but the approximation function f(x) is a continuous function, so necessary derivative values may be obtained even regarding pixel values having a density other than a pluralized density.

According to the above arrangement, an approximation function for approximating the pixel values of pixels near a pixel of interest can be obtained, and derivative values in the positions corresponding to the pixel positions in the spatial direction can be output as actual world estimating information.

With the actual world estimating unit 102 described in Fig. 187, derivative values necessary for generating an image have been output as actual world estimating information, but a derivative value is the same value as a gradient of the approximation function f(x) in a necessary position.

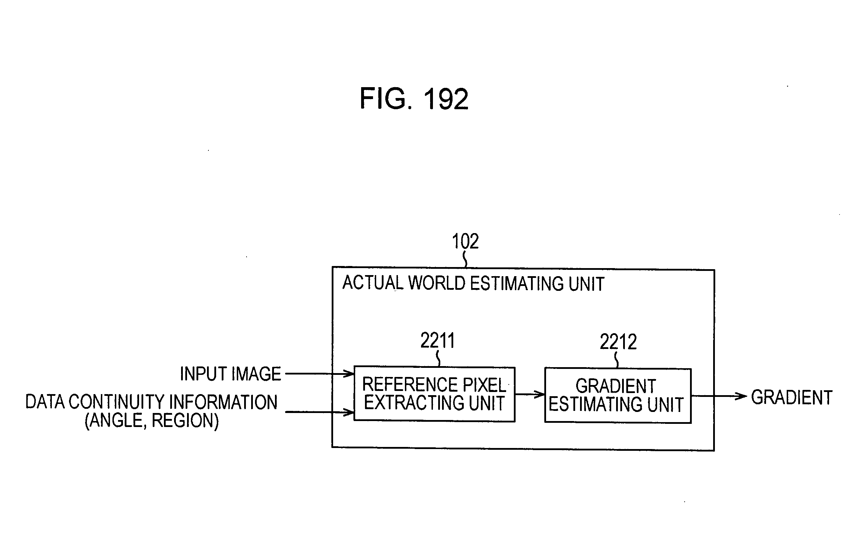

Now, description will be made next regarding the actual world estimating unit 102 wherein gradients alone on the approximation function f(x) necessary for generating pixels are directly obtained without obtaining the approximation function f(x), and output as actual world estimating information, with reference to Fig. 192.

The reference-pixel extracting unit 2211 determines regarding whether or not each pixel of an input image is a processing region based on the data continuity information (angle as continuity, or region information) input from the data continuity detecting unit 101, and in the event of a processing region, extracts information of reference pixels necessary for obtaining gradients from the input image (perimeter multiple pixels arrayed in the vertical direction including a pixel of interest, which are necessary for calculation, or the positions of perimeter multiple pixels arrayed in the horizontal direction including a pixel of interest, and information of each pixel value), and outputs this to a gradient estimating unit 2212.

The gradient estimating unit 2212 generates gradient information of a pixel position necessary for generating a pixel based on the reference pixel information input from the reference-pixel extracting unit 2211, and outputs this to the image generating unit 103 as actual world estimating information. More specifically, the gradient estimating unit 2212 obtains a gradient in the position of a pixel of interest on the approximation function f(x) approximately expressing the actual world using the difference information of the pixel values between pixels, outputs this along with the position information and pixel value of the pixel of interest, and the gradient information in the direction of continuity, as actual world estimating information.

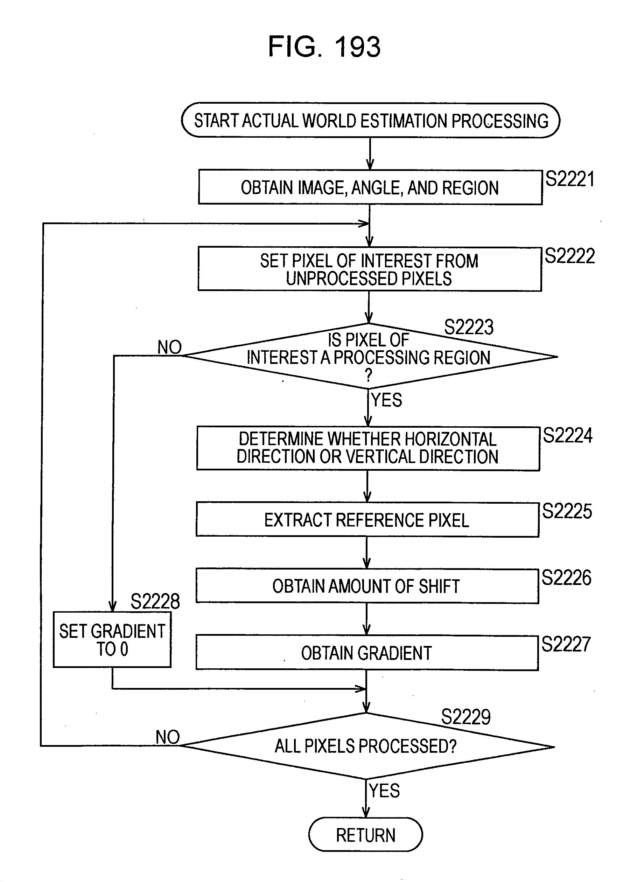

Next, description will be made regarding the actual world estimating processing by the actual world estimating unit 102 in Fig. 192 with reference to the flowchart in Fig. 193.

In step S2221, the reference-pixel extracting unit 2211 acquires an angle and region information as the data continuity information from the data continuity detecting unit 101 along with an input image.

In step S2222, the reference-pixel extracting unit 2211 sets a pixel of interest from unprocessed pixels in the input image.

In step S2223, the reference-pixel extracting unit 2211 determines regarding whether or not the pixel of interest is in a processing region based on the region information of the data continuity information, and in the event that determination is made that the pixel of interest is not a pixel in the processing region, the processing proceeds to step S2228, wherein the gradient estimating unit 2212 is informed that the pixel of interest is in a non-processing region, in response to this, the gradient estimating unit 2212 sets the gradient for the corresponding pixel of interest to zero, and further adds the pixel value of the pixel of interest to this, and outputs this as actual world estimating information to the image generating unit 103, and also the processing proceeds to step S2229. Also, in the event that determination is made that the pixel of interest is in a processing region, the processing proceeds to step S2224.

In step S2224, the reference-pixel extracting unit 2211 determines regarding whether the direction having data continuity is an angle close to the horizontal direction or angle close to the vertical direction based on the angular information included in the data continuity information. That is to say, in the event that an angle $\theta$ having data continuity is $45° > \theta \geq 0°$, or $180° > \theta \geq 135°$, the reference-pixel extracting unit 2211 determines that the direction of continuity of the pixel of interest is close to the horizontal direction, and in the event that the angle $\theta$ having data continuity is $135° > \theta \geq 45°$, determines that the direction of continuity of the pixel of interest is close to the vertical direction.

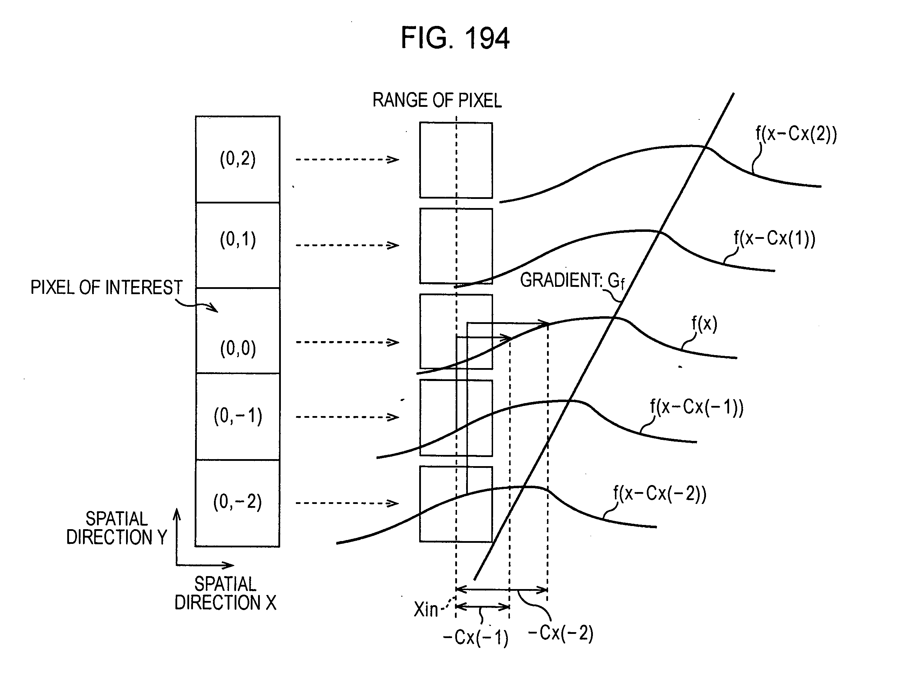

In step S2225, the reference-pixel extracting unit 2211 extracts the positional information and pixel values of reference pixels corresponding to the determined direction from the input image respectively, and outputs these to the gradient estimating unit 2212. That is to say, reference pixels become data to be used for calculating a later-described gradient, so are preferably extracted according to a gradient indicating the direction of continuity. Accordingly, corresponding to any determined direction of the horizontal direction and the vertical direction, reference pixels in a long range in the direction thereof are extracted. More specifically, for example, in the event that determination is made that a gradient is close to the vertical direction, as shown in Fig. 194, when a pixel (0, 0) in the center of Fig. 194 is taken as a pixel of interest, the reference-pixel extracting unit 2211 extracts each pixel value of pixels (0, 2), (0, 1), (0, 0), (0, -1), and (0, -2). Note that in Fig. 194, let us say that both sizes in the horizontal direction and in the vertical direction of each pixel is 1.

In other words, the reference-pixel extracting unit 2211 extracts pixels in a long range in the vertical direction as reference pixels such that the reference pixels are 5 pixels in total of 2 pixels respectively in the vertical (upper/lower) direction centered on the pixel of interest.

On the contrary, in the event that determination is made that the direction is the horizontal direction, the reference-pixel extracting unit 2211 extracts pixels in a long range in the horizontal direction as reference pixels such that the reference pixels are 5 pixels in total of 2 pixels respectively in the horizontal (left/right) direction centered on the pixel of interest, and outputs these to the approximation-function estimating unit 2202. Needless to say, the number of reference pixels is not restricted to 5 pixels as described above, so any number of pixels may be employed.

In step S2226, the gradient estimating unit 2212 calculates a shift amount of each pixel value based on the reference pixel information input from the reference-pixel extracting unit 2211, and the gradient $G_f$ in the direction of continuity. That is to say, in the event that the approximation function f(x) corresponding to the spatial direction Y = 0 is taken as a basis, the approximation functions corresponding to the spatial directions Y = -2, -1, 1, and 2 are continuous along the gradient $G_f$ as continuity as shown in Fig. 194, so the respective approximation functions are described as f (x - Cx (2)), f (x - Cx (1)), f (x - Cx (-1)), and f (x - Cx (-2)), and are represented as functions shifted by each shift amount in the spatial direction X for each of the spatial directions Y = -2, -1, 1, and 2.

Accordingly, the gradient estimating unit 2212 obtains shift amounts Cx (-2) through Cx (2) of these. For example, in the event that reference pixels are extracted such as shown in Fig. 194, with regard to the shift amounts thereof, the reference pixel (0, 2) in the drawing becomes Cx (2) = 2 / $G_f$, the reference pixel (0, 1) becomes Cx (1) = 1 / $G_f$, the reference pixel (0, 0) becomes Cx (0) = 0, the reference pixel (0, -1) becomes Cx (-1) = -1 / $G_f$, and the reference pixel (0, -2) becomes Cx (-2) = -2 / $G_f$.

In step S2227, the gradient estimating unit 2212 calculates (estimates) a gradient on the approximation function f(x) in the position of the pixel of interest. For example, as shown in Fig. 194, in the event that the direction of continuity regarding the pixel of interest is an angle close to the vertical direction, the pixel values between the pixels adjacent in the horizontal direction exhibit great differences, but change between the pixels in the vertical direction is small and similar, and accordingly, the gradient estimating unit 2212 substitutes the difference between the pixels in the vertical direction for the difference between the pixels in the horizontal direction, and obtains a gradient on the approximation function f(x) in the position of the pixel of interest, by seizing change between the pixels in the vertical direction as change in the spatial direction X according to a shift amount.

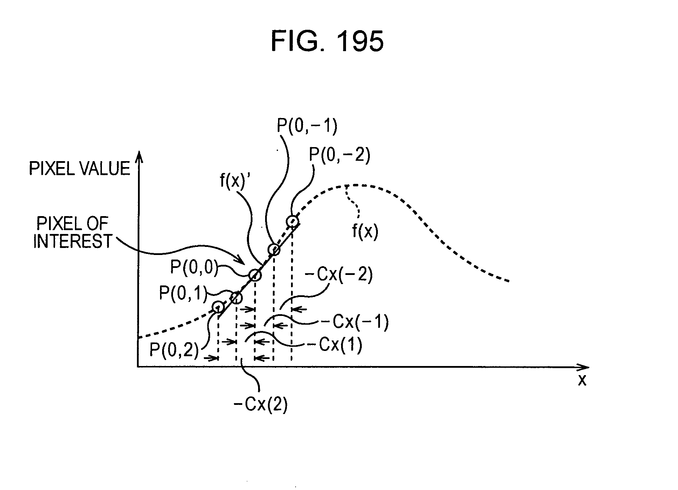

That is to say, if we assume that the approximation function f(x) approximately describing the real world exists, the relations between the above shift amounts and the pixel values of the respective reference pixels is such as shown in Fig. 195. Here, the pixel values of the respective pixels in Fig. 194 are represented as P (0, 2), P (0, 1), P (0, 0), P (0, -1), and P (0, -2) from the top. As a result, with regard to the pixel value P and shift amount Cx near the pixel of interest (0, 0), 5 pairs of relations (P, Cx) = ((P (0, 2), -Cx (2)), (P (0, 1), -Cx (1)), (P (0, -1)), -Cx (-1)), (P (0, -2), -Cx (-2)), and (P (0, 0), 0) are obtained.

Now, with the pixel value P, shift amount Cx, and gradient Kx (gradient on the approximation function f(x)), the relation such as the following Expression (98) holds.

$$P = Kx \times Cx \tag{98}$$

The above Expression (98) is a one-variable function regarding the variable Kx, so the gradient estimating unit 2212 obtains the gradient Kx (gradient) using the least squares method of one variable.

That is to say, the gradient estimating unit 2212 obtains the gradient of the pixel of interest by solving a normal equation such as shown in the following Expression (99), adds the pixel value of the pixel of interest, and the gradient information in the direction of continuity to this, and outputs this to the image generating unit 103 as actual world estimating information.

$$K_x = \frac{\sum_{i=1}^{m} (C_{xi} - P_i)}{\sum_{i=1}^{m} (C_{xi})^2}$$

$$\ldots (99)$$

Here, i denotes a number for identifying each pair of the pixel value P and shift amount C of the above reference pixel, 1 through m. Also, m denotes the number of the reference pixels including the pixel of interest.

In step S2229, the reference-pixel extracting unit 2211 determines regarding whether or not all of the pixels have been processed, and in the event that determination is made that all of the pixels have not been processed, the processing returns to step S2222. Also, in the event that determination is made that all of the pixels have been processed in step S2229, the processing ends.

Note that the gradient to be output as actual world estimating information by the above processing is employed at the time of calculating desired pixel values to be obtained finally through extrapolation/interpolation. Also, with the above example, description has been made regarding the gradient at the time of calculating double-density pixels as an example, but in the event of calculating pixels having a density more than a double density, gradients in many more positions necessary for calculating the pixel values may be obtained.

For example, as shown in Fig. 190, in the event that pixels having a quadruple density in the spatial directions in total of a double density in the horizontal direction and also a double density in the vertical direction are generated, the gradient Kx of the approximation function f(x) corresponding to the respective positions Pin, Pa, and Pb in Fig. 190 should be obtained, as described above.

Also, with the above example, an example for obtaining double-density pixels has been described, but the approximation function f(x) is a continuous function, so it is possible to obtain a necessary gradient even regarding the pixel value of a pixel in a position other than a pluralized density.

According to the above arrangements, it is possible to generate and output gradients on the approximation function necessary for generating pixels in the spatial direction as actual world estimating information by using the pixel values of pixels near a pixel of interest without obtaining the approximation function approximately representing the actual world.

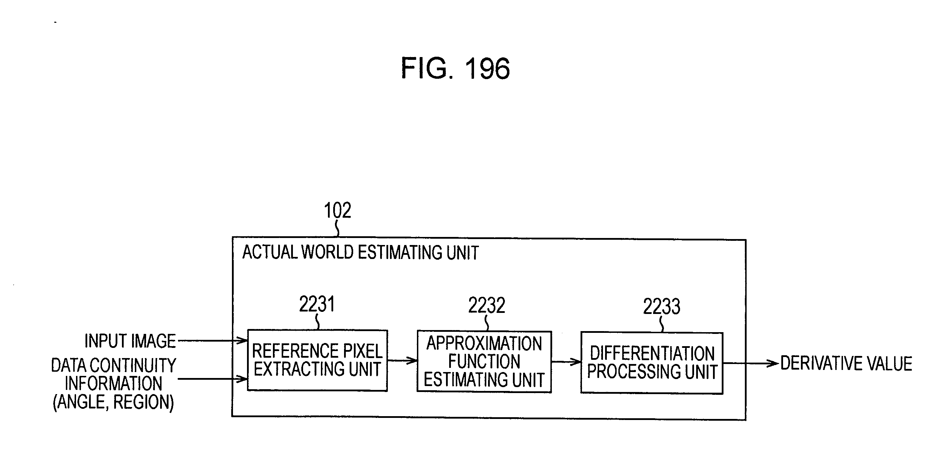

Next, description will be made regarding the actual world estimating unit 102, which outputs derivative values on the approximation function in the frame direction (temporal direction) for each pixel in a region having continuity as actual world estimating information, with reference to Fig. 196.

The reference-pixel extracting unit 2231 determines regarding whether or not each pixel in an input image is in a processing region based on the data continuity information (movement as continuity (movement vector), and region information) input from the data continuity detecting unit 101, and in the event that each pixel is in a processing region, extracts reference pixel information necessary for obtaining an approximation function approximating the pixel values of the pixels in the input image (multiple pixel positions around a pixel of interest necessary for calculation, and the pixel values thereof), and outputs this to the approximation-function estimating unit 2202.

The approximation-function estimating unit 2232 estimates an approximation function, which approximately describes the pixel value of each pixel around the pixel of interest based on the reference pixel information in the frame direction input from the reference-pixel extracting unit 2231, based on the least squares method, and outputs the estimated function to the differential processing unit 2233.

The differential processing unit 2233 obtains a shift amount in the frame direction in the position of a pixel to be generated from the pixel of interest according to the movement of the data continuity information based on the approximation function in the frame direction input from the approximation-function estimating unit 2232, calculates a derivative value in a position on the approximation function in the frame direction according to the shift amount thereof (derivative value of the function approximating the pixel value of each pixel corresponding to a distance along in the primary direction from a line corresponding to continuity), further adds the position and pixel value of the pixel of interest, and information regarding movement as continuity to this, and outputs this to the image generating unit 103 as actual world estimating information.

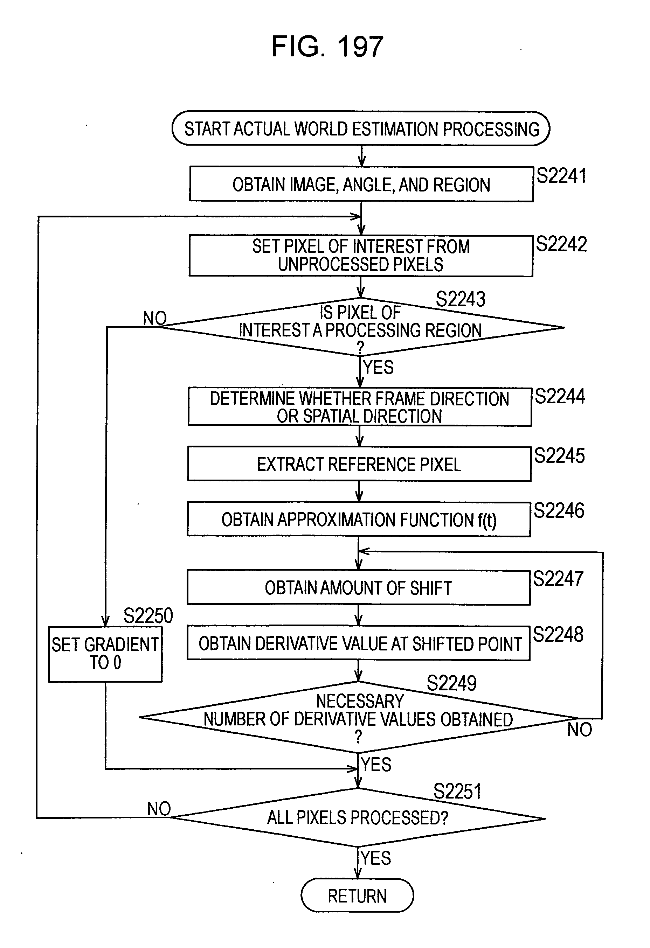

Next, description will be made regarding the actual world estimating processing by the actual world estimating unit 102 in Fig. 196 with reference to the flowchart in Fig. 197.

In step S2241, the reference-pixel extracting unit 2231 acquires the movement and region information as the data continuity information from the data continuity detecting unit 101 along with an input image.

In step S2242, the reference-pixel extracting unit 2231 sets a pixel of interest from unprocessed pixels in the input image.

In step S2243, the reference-pixel extracting unit 2231 determines regarding whether or not the pixel of interest is included in a processing region based on the region information of the data continuity information, and in the event that the pixel of interest is not a pixel in a processing region, the processing proceeds to step S2250, the differential processing unit 2233 is informed that the pixel of interest is in a non-processing region via the approximation-function estimating unit 2232, in response to this, the differential processing unit 2233 sets the derivative value regarding the corresponding pixel of interest to zero, further adds the pixel value of the pixel of interest to this, and outputs this to the image generating unit 103 as actual world estimating information, and also the processing proceeds to step S2251. Also, in the event that determination is made that the pixel of interest is in a processing region, the processing proceeds to step S2244.

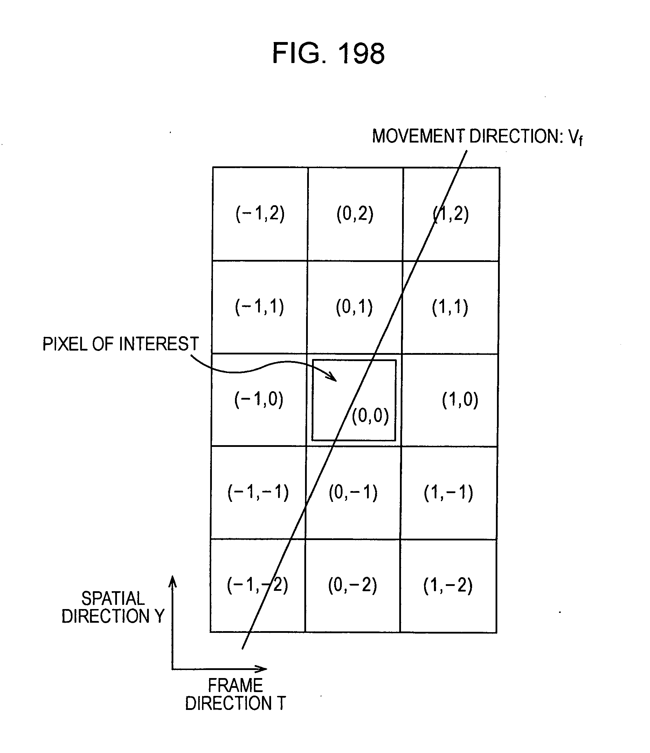

In step S2244, the reference-pixel extracting unit 2231 determines regarding whether the direction having data continuity is movement close to the spatial direction or movement close to the frame direction based on movement information included in the data continuity information. That is to say, as shown in Fig. 198, if we say that an angle indicating the spatial and temporal directions within a surface made up of the frame direction T, which is taken as a reference axis, and the spatial direction Y, is taken as $\theta v$, in the event that an angle $\theta v$ having data continuity is $45° > \theta v \geq 0°$, or $180° > \theta v \geq 135°$, the reference-pixel extracting unit 2201 determines that the movement as continuity of the pixel of interest is close to the frame direction (temporal direction), and in the event that the angle $\theta$ having data continuity is $135° > \theta \geq 45°$, determines that the direction of continuity of the pixel of interest is close to the spatial direction.

In step S2245, the reference-pixel extracting unit 2201 extracts the positional information and pixel values of reference pixels corresponding to the determined direction from the input image respectively, and outputs these to the approximation-function estimating unit 2232. That is to say, reference pixels become data to be used for calculating a later-described approximation function, so are preferably extracted according to the angle thereof. Accordingly, corresponding to any determined direction of the frame direction and the spatial direction, reference pixels in a long range in the direction thereof are extracted. More specifically, for example, as shown in Fig. 198, in the event that a movement direction $V_f$ is close to the spatial direction, determination is made that the direction is the spatial direction. In this case, as shown in Fig. 198 for example, when a pixel $(t, y) = (0, 0)$ in the center of Fig. 198 is taken as a pixel of interest, the reference-pixel extracting unit 2231 extracts each pixel value of pixels $(t, y) = (-1, 2), (-1, 1), (-1, 0), (-1, -1), (-1, -2), (0, 2), (0, 1), (0, 0), (0, -1), (0, -2), (1, 2), (1, 1), (1, 0), (1, -1),$ and $(1, -2)$. Note that in Fig. 198, let us say that both sizes in the frame direction and in the spatial direction of each pixel is 1.

In other words, the reference-pixel extracting unit 2231 extracts pixels in a long range in the spatial direction as to the frame direction as reference pixels such that the reference pixels are 15 pixels in total of 2 pixels respectively in the spatial direction (upper/lower direction in the drawing) $\times$ 1 frame respectively in the frame direction (left/right direction in the drawing) centered on the pixel of interest.

On the contrary, in the event that determination is made that the direction is the frame direction, the reference-pixel extracting unit 2231 extracts pixels in a long range in the frame direction as reference pixels such that the reference pixels are 15 pixels in total of 1 pixel respectively in the spatial direction (upper/lower direction in the drawing) $\times$ 2 frames respectively in the frame direction (left/right direction in the drawing) centered on the pixel of interest, and outputs these to the approximation-function estimating unit 2232. Needless to say, the number of reference pixels is not restricted to 15 pixels as described above, so any number of pixels may be employed.

In step S2246, the approximation-function estimating unit 2232 estimates the approximation function f(t) using the least squares method based on information of reference pixels input from the reference-pixel extracting unit 2231, and outputs this to the differential processing unit 2233.

That is to say, the approximation function f(t) is a polynomial such as shown in the following Expression (100).

$$f(t) = W_1 t^n + W_2 t^{n-1} + \cdots + W_{n-1} \tag{100}$$

Thus, if each of coefficients $W_1$ through $W_{n+1}$ of the polynomial in Expression (100) can be obtained, the approximation function f(t) in the frame direction for approximating the pixel value of each reference pixel can be obtained. However, reference pixel values exceeding the number of coefficients are necessary, so for example, in the case such as shown in Fig. 198, the number of reference pixels is 15 pixels in total, and accordingly, the number of obtainable coefficients in the polynomial is restricted to 15. In this case, let us say that the polynomial is up to 14-dimension, and the approximation function is estimated by obtaining the coefficients $W_1$ through $W_{15}$. Note that in this case, simultaneous equations may be employed by setting the approximation function f(t) made up of a 15-dimensional polynomial.

Accordingly, when 15 reference pixel values shown in Fig. 198 are employed, the approximation-function estimating unit 2232 estimates the approximation function f(t) by solving the following Expression (101) using the least squares method.

$$P(-1, -2) = f(-1 - Ct(-2))$$

$$P(-1, -1) = f(-1 - Ct(-1))$$

$$P(-1, 0) = f(-1) \ (= f(-1 - Ct(0)))$$

$$P(-1, 1) = f(-1 - Ct(1))$$

$$P(-1, 2) = f(-1 - Ct(2))$$

$$P(0, -2) = f(0 - Ct(-2))$$

$$P(0, -1) = f(0 - Ct(-1))$$

$$P(0, 0) = f(0) \ (= f(0 - Ct(0)))$$

$$P(0, 1) = f(0 - Ct(1))$$

$$P(0, 2) = f(0 - Ct(2))$$

$$P(1, -2) = f(1 - Ct(-2))$$

$$P(1, -1) = f(1 - Ct(-1))$$

$$P(1, 0) = f(1) \ (= f(1 - Ct(0)))$$

$$P(1, 1) = f(1 - Ct(1))$$

$$P(1, 2) = f(1 - Ct(2)) \tag{101}$$

Note that the number of reference pixels may be changed in accordance with the degree of the polynomial.

Here, Ct (ty) denotes a shift amount, which is the same as the above Cx (ty), and when the gradient as continuity is denoted with $V_f$, Ct (ty) = ty / $V_f$ is defined. This shift amount Ct (ty) denotes the width of a shift as to the frame direction T in the position in the spatial direction Y = ty on condition that the approximation function f(t) defined on the position in the spatial direction Y = 0 is continuous (has continuity) along the gradient $V_f$. Accordingly, for example, in the event that the approximation function is defined as f (t) on the position in the spatial direction Y = 0, this approximation function f(t) must be shifted by Ct (ty) as to the frame direction (temporal direction) T in the spatial direction Y = ty, so the function is defined as f (t - Ct (ty)) (=f (t - ty / $V_f$).

In step S2247, the differential processing unit 2233 obtains a shift amount in the position of a pixel to be generated based on the approximation function f(t) input from the approximation-function estimating unit 2232.

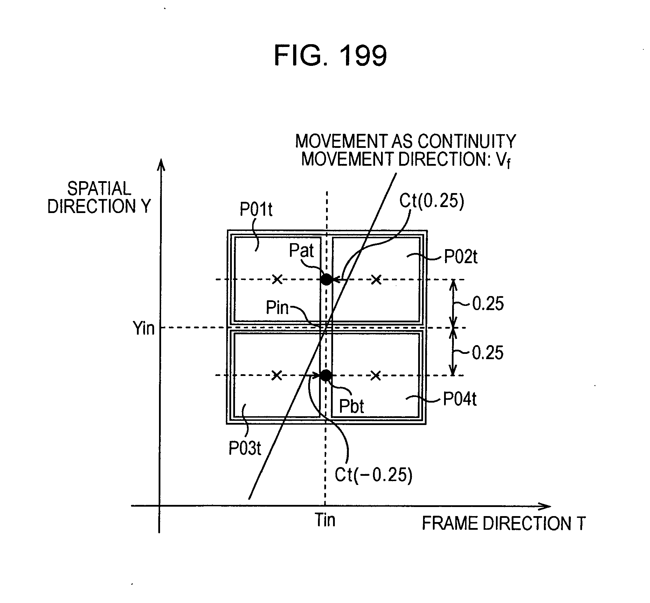

That is to say, in the event that pixels are generated so as to be a double density in the frame direction and in the spatial direction respectively (quadruple density in total), the differential processing unit 2233 first obtains, for example, a shift amount of later-described Pin (Tin, Yin) in the center position to be divided into later-described two pixels Pat and Pbt, which become a double density in the spatial direction, as shown in Fig. 199, to obtain a derivative value at a center position Pin (Tin, Yin) of a pixel of interest. This shift amount becomes Ct (0), so actually becomes zero. Note that in Fig. 199, a pixel Pin of which general gravity position is (Tin, Yin) is a square, and pixels Pat and Pbt of which general gravity positions are (Tin, Yin + 0.25) and (Tin, Yin - 0.25) respectively are rectangles long in the horizontal direction in the drawing. Also, the length in the frame direction T of the pixel of interest Pin is 1, which corresponds to the shutter time for one frame.

In step S2248, the differential processing unit 2233 differentiates the approximation function f(t) so as to obtain a primary differential function f(t)' of the approximation function, obtains a derivative value at a position according to the obtained shift amount, and outputs this to the image generating unit 103 as actual world estimating information. That is to say, in this case, the differential processing unit 2233 obtains a derivative value f (Tin)', and adds the position thereof (in this case, a pixel of interest (Tin, Yin)), the pixel value thereof, and the movement information in the direction of continuity to this, and outputs this.

In step S2249, the differential processing unit 2233 determines regarding whether or not derivative values necessary for generating desired-density pixels are obtained. For example, in this case, the obtained derivative values are only derivative values necessary for a double density in the spatial direction (derivative values to become a double density for the frame direction are not obtained), so determination is made that derivative values necessary for generating desired-density pixels are not obtained, and the processing returns to step S2247.

In step S2247, the differential processing unit 2203 obtains a shift amount in the position of a pixel to be generated based on the approximation function f(t) input from the approximation-function estimating unit 2202 again. That is to say, in this case, the differential processing unit 2203 obtains derivative values necessary for further dividing the divided pixels Pat and Pbt into 2 pixels respectively. The positions of the pixels Pat and Pbt are denoted with black circles in Fig. 199 respectively, so the differential processing unit 2233 obtains a shift amount corresponding to each position. The shift amounts of the pixels Pat and Pbt are Ct (0.25) and Ct (-0.25) respectively.

In step S2248, the differential processing unit 2233 differentiates the approximation function f(t), obtains a derivative value in the position according to a shift amount corresponding to each of the pixels Pat and Pbt, and outputs this to the image generating unit 103 as actual world estimating information.

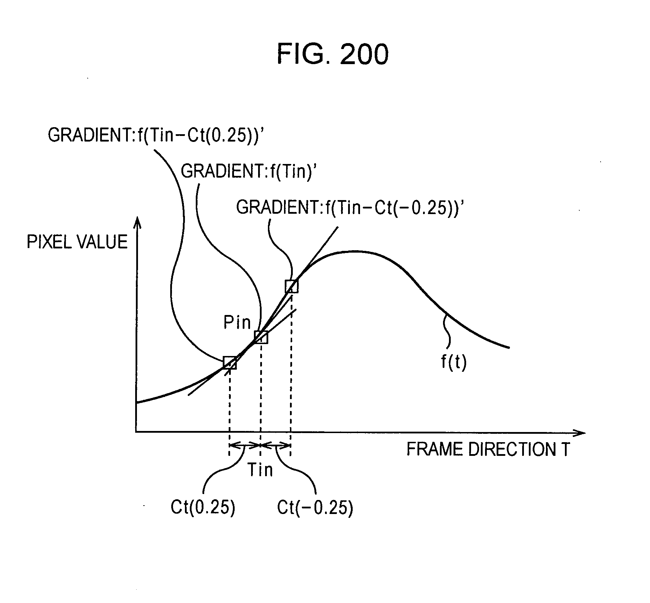

That is to say, in the event of employing the reference pixels shown in Fig. 198, the differential processing unit 2233, as shown in Fig. 200, obtains a differential function f(t)' regarding the obtained approximation function f(t), obtains derivative values in the positions (Tin - Ct (0.25)) and (Tin - Ct (-0.25)), which are positions shifted by shift amounts Ct (0.25) and Ct (-0.25) for the spatial direction T, as f (Tin - Ct (0.25))' and f (Tin - Ct (-0.25))' respectively, adds the positional information corresponding to the derivative values thereof to this, and outputs this as actual world estimating information. Note that the information of the pixel values is output at the first processing, so this is not added at this processing.

In step S2249, the differential processing unit 2233 determines regarding whether or not derivative values necessary for generating desired-density pixels are obtained again. For example, in this case, derivative values to become a double density in the spatial direction Y and in the frame direction T respectively (quadruple density in total) are obtained, so determination is made that derivative values necessary for generating desired-density pixels are obtained, and the processing proceeds to step S2251.

In step S2251, the reference-pixel extracting unit 2231 determines regarding whether or not all of the pixels have been processed, and in the event that determination is made that all of the pixels have not been processed, the processing returns to step S2242. Also, in step S2251, in the event that determination is made that all of the pixels have been processed, the processing ends.

As described above, in the event that pixels are generated so as to become a quadruple density in the frame direction (temporal direction) and in the spatial direction regarding the input image, pixels are divided by extrapolation/interpolation using the derivative value of the approximation function in the center position of the pixel to be divided, so in order to generate quadruple-density pixels, information of three derivative values in total is necessary.

That is to say, as shown in Fig. 199, derivative values necessary for generating four pixels P01t, P02t, P03t, and P04t (in Fig. 199, pixels P01t, P02t, P03t, and P04t are squares of which the gravity positions are the positions of four cross marks in the drawing, and the length of each side is 1 for the pixel Pin, so around 0.5 for the pixels P01t, P02t, P03t, and P04t) are necessary for one pixel in the end, and accordingly, in order to generate quadruple-density pixels, first, double-density pixels in the frame direction or in the spatial direction are generated (the above first processing in steps S2247 and S2248), and further, the divided two pixels are divided in the direction orthogonal to the initial dividing direction (in this case, in the frame direction) (the above second processing in steps S2247 and S2248).

Note that with the above example, description has been made regarding derivative values at the time of calculating quadruple-density pixels as an example, but in the event of calculating pixels having a density more than a quadruple density, many more derivative values necessary for calculating pixel values may be obtained by repeatedly performing the processing in steps S2247 through S2249. Also, with the above example, description has been made regarding an example for obtaining double-density pixel values, but the approximation function f(t) is a continuous function, so derivative values may be obtained even regarding pixel values having a density other than a pluralized density.

According to the above arrangement, an approximation function for approximately expressing the pixel value of each pixel can be obtained using the pixel values of pixels near a pixel of interest, and derivative values in the positions necessary for generating pixels can be output as actual world estimating information.

With the actual world estimating unit 102 described in Fig. 196, derivative values necessary for generating an image have been output as actual world estimating information, but a derivative value is the same value as a gradient of the approximation function f(t) in a necessary position.

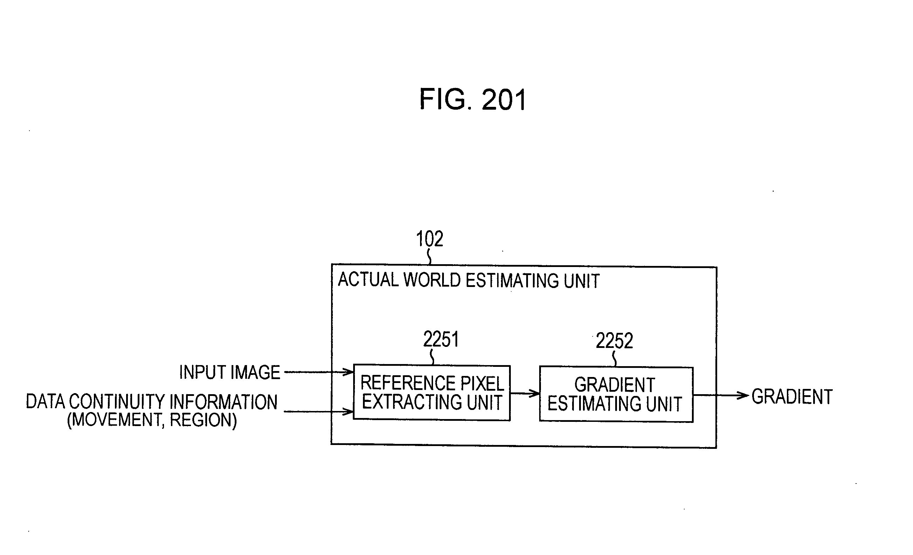

Now, description will be made next regarding the actual world estimating unit 102 wherein gradients alone in the frame direction on the approximation function necessary for generating pixels are directly obtained without obtaining the approximation function, and output as actual world estimating information, with reference to Fig. 201.

A reference-pixel extracting unit 2251 determines regarding whether or not each pixel of an input image is a processing region based on the data continuity information (movement as continuity, or region information) input from the data continuity detecting unit 101, and in the event of a processing region, extracts information of reference pixels necessary for obtaining gradients from the input image (perimeter multiple pixels arrayed in the spatial direction including a pixel of interest, which are necessary for calculation, or the positions of perimeter multiple pixels arrayed in the frame direction including a pixel of interest, and information of each pixel value), and outputs this to a gradient estimating unit 2252.

The gradient estimating unit 2252 generates gradient information of a pixel position necessary for generating a pixel based on the reference pixel information input from the reference-pixel extracting unit 2251, and outputs this to the image generating unit 103 as actual world estimating information. In further detail the gradient estimating unit 2252 obtains a gradient in the frame direction in the position of a pixel of interest on the approximation function approximately expressing the pixel value of each reference pixel using the difference information of the pixel values between pixels, outputs this along with the position information and pixel value of the pixel of interest, and the movement information in the direction of continuity, as actual world estimating information.

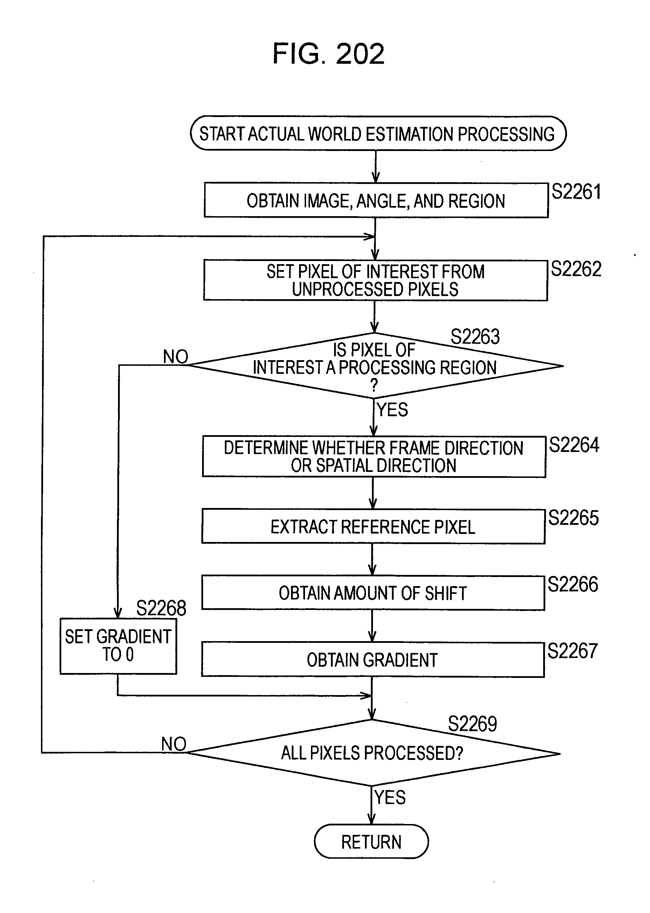

Next, description will be made regarding the actual world estimating processing by the actual world estimating unit 102 in Fig. 201 with reference to the flowchart in Fig. 202.

In step S2261, the reference-pixel extracting unit 2251 acquires movement and region information as the data continuity information from the data continuity detecting unit 101 along with an input image.

In step S2262, the reference-pixel extracting unit 2251 sets a pixel of interest from unprocessed pixels in the input image.

In step S2263, the reference-pixel extracting unit 2251 determines regarding whether or not the pixel of interest is in a processing region based on the region information of the data continuity information, and in the event that determination is made that the pixel of interest is not a pixel in a processing region, the processing proceeds to step S2268, wherein the gradient estimating unit 2252 is informed that the pixel of interest is in a non-processing region, in response to this, the gradient estimating unit 2252 sets the gradient for the corresponding pixel of interest to zero, and further adds the pixel value of the pixel of interest to this, and outputs this as actual world estimating information to the image generating unit 103, and also the processing proceeds to step S2269. Also, in the event that determination is made that the pixel of interest is in a processing region, the processing proceeds to step S2264.

In step S2264, the reference-pixel extracting unit 2211 determines regarding whether movement as data continuity is movement close to the frame direction or movement close to the spatial direction based on the movement information included in the data continuity information. That is to say, if we say that an angle indicating the spatial and temporal directions within a surface made up of the frame direction T, which is taken as a reference axis, and the spatial direction Y, is taken as $\theta v$, in the event that an angle $\theta v$ of movement as data continuity is $45° > \theta v \geq 0°$, or $180° > \theta v \geq 135°$, the reference-pixel extracting unit 2251 determines that the movement as continuity of the pixel of interest is close to the frame direction, and in the event that the angle $\theta v$ having data continuity is $135° > \theta v \geq 45°$, determines that the movement as continuity of the pixel of interest is close to the spatial direction.

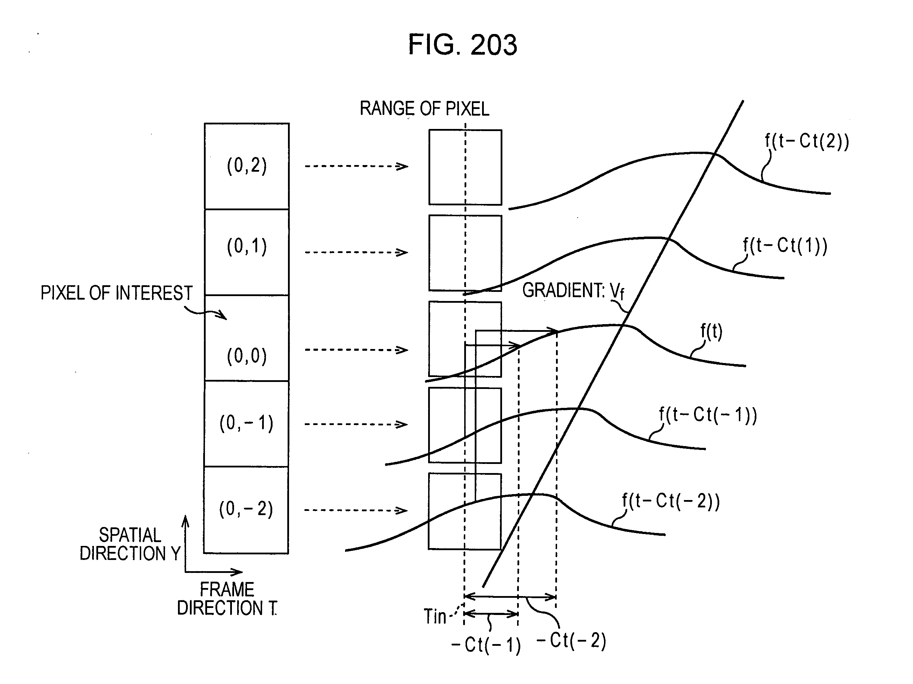

In step S2265, the reference-pixel extracting unit 2251 extracts the positional information and pixel values of reference pixels corresponding to the determined direction from the input image respectively, and outputs these to the gradient estimating unit 2252. That is to say, reference pixels become data to be used for calculating a later-described gradient, so are preferably extracted according to movement as continuity. Accordingly, corresponding to any determined direction of the frame direction and the spatial direction, reference pixels in a long range in the direction thereof are extracted. More specifically, for example, in the event that determination is made that movement is close to the spatial direction, as shown in Fig. 203, when a pixel (t, y) = (0, 0) in the center of Fig. 203 is taken as a pixel of interest, the reference-pixel extracting unit 2251 extracts each pixel value of pixels (t, y) = (0, 2), (0, 1), (0, 0), (0, -1), and (0, -2). Note that in Fig. 203, let us say that both sizes in the frame direction and in the spatial direction of each pixel is 1.

In other words, the reference-pixel extracting unit 2251 extracts pixels in a long range in the spatial direction as reference pixels such that the reference pixels are 5 pixels in total of 2 pixels respectively in the spatial direction (upper/lower direction in the drawing) centered on the pixel of interest.

On the contrary, in the event that determination is made that the direction is the frame direction, the reference-pixel extracting unit 2251 extracts pixels in a long range in the horizontal direction as reference pixels such that the reference pixels are 5 pixels in total of 2 pixels respectively in the frame direction (left/right direction in the drawing) centered on the pixel of interest, and outputs these to the approximation-function estimating unit 2252. Needless to say, the number of reference pixels is not restricted to 5 pixels as described above, so any number of pixels may be employed.

In step S2266, the gradient estimating unit 2252 calculates a shift amount of each pixel value based on the reference pixel information input from the reference-pixel extracting unit 2251, and the movement $V_f$ in the direction of continuity. That is to say, in the event that the approximation function f(t) corresponding to the spatial direction Y = 0 is taken as a basis, the approximation functions corresponding to the spatial directions Y = -2, -1, 1, and 2 are continuous along the gradient $V_f$ as continuity as shown in Fig. 203, so the respective approximation functions are described as f (t - Ct (2)), f (t - Ct (1)), f (t - Ct (-1)), and f (t - Ct (-2)), and are represented as functions shifted by each shift amount in the frame direction T for each of the spatial directions Y = -2, -1, 1, and 2.

Accordingly, the gradient estimating unit 2252 obtains shift amounts Ct (-2) through Ct (2) of these. For example, in the event that reference pixels are extracted such as shown in Fig. 203, with regard to the shift amounts thereof, the reference pixel (0, 2) in the drawing becomes Ct (2) = 2 / $V_f$, the reference pixel (0, 1) becomes Ct (1) = 1 / $V_f$, the reference pixel (0, 0) becomes Ct (0) = 0, the reference pixel (0, -1) becomes Ct (-1) = -1 / $V_f$, and the reference pixel (0, -2) becomes Ct (-2) = -2 / $V_f$. The gradient estimating unit 2252 obtains these shift amounts Ct (-2) through Ct (2).

In step S2267, the gradient estimating unit 2252 calculates (estimates) a gradient in the frame direction of the pixel of interest. For example, as shown in Fig. 203, in the event that the direction of continuity regarding the pixel of interest is an angle close to the spatial direction, the pixel values between the pixels adjacent in the frame direction exhibit great differences, but change between the pixels in the spatial direction is small and similar, and accordingly, the gradient estimating unit 2252 substitutes the difference between the pixels in the frame direction for the difference between the pixels in the spatial direction, and obtains a gradient at the pixel of interest, by seizing change between the pixels in the spatial direction as change in the frame direction T according to a shift amount.

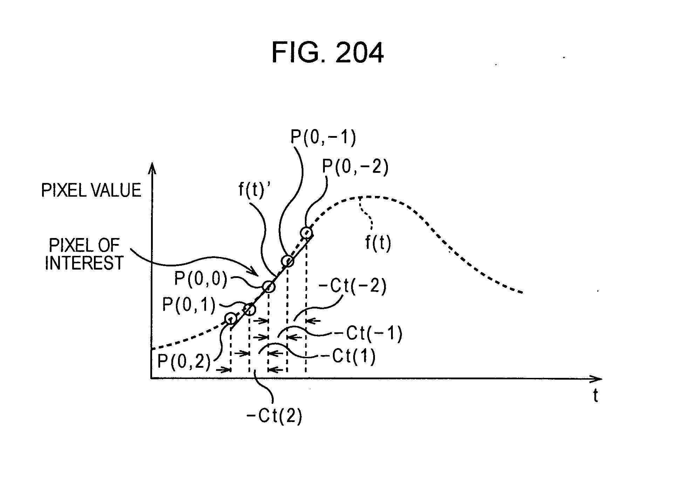

That is to say, if we assume that the approximation function f(t) approximately describing the real world exists, the relations between the above shift amounts and the pixel values of the respective reference pixels is such as shown in Fig. 204. Here, the pixel values of the respective pixels in Fig. 204 are represented as P (0, 2), P (0, 1), P (0, 0), P (0, -1), and P (0, -2) from the top. As a result, with regard to the pixel value P and shift amount Ct near the pixel of interest (0, 0), 5 pairs of relations (P, Ct) = ((P (0, 2), -Ct (2)), (P (0, 1), -Ct (1)), (P (0, -1)), -Ct (-1)), (P (0, -2), -Ct (-2)), and (P (0, 0), 0) are obtained.

Now, with the pixel value P, shift amount Ct, and gradient Kt (gradient on the approximation function f(t)), the relation such as the following Expression (102) holds.

$$P = Kt \times Ct \tag{102}$$

The above Expression (102) is a one-variable function regarding the variable Kt, so the gradient estimating unit 2212 obtains the variable Kt (gradient) using the least squares method of one variable.

That is to say, the gradient estimating unit 2252 obtains the gradient of the pixel of interest by solving a normal equation such as shown in the following Expression (103), adds the pixel value of the pixel of interest, and the gradient information in the direction of continuity to this, and outputs this to the image generating unit 103 as actual world estimating information.

$$K_t = \frac{\sum\limits_{i=1}^{m} (C_{ti} - P_i)}{\sum\limits_{i=1}^{m} (C_{ti})^2}$$

$$\ldots (103)$$

Here, i denotes a number for identifying each pair of the pixel value P and shift amount Ct of the above reference pixel, 1 through m. Also, m denotes the number of the reference pixels including the pixel of interest.

In step S2269, the reference-pixel extracting unit 2251 determines regarding whether or not all of the pixels have been processed, and in the event that determination is made that all of the pixels have not been processed, the processing returns to step S2262. Also, in the event that determination is made that all of the pixels have been processed in step S2269, the processing ends.

Note that the gradient in the frame direction to be output as actual world estimating information by the above processing is employed at the time of calculating desired pixel values to be obtained finally through extrapolation/interpolation. Also, with the above example, description has been made regarding the gradient at the time of calculating double-density pixels as an example, but in the event of calculating pixels having a density more than a double density, gradients in many more positions necessary for calculating the pixel values may be obtained.

For example, as shown in Fig. 190, in the event that pixels having a quadruple density in the temporal and spatial directions in total of a double density in the horizontal direction and also a double density in the frame direction are generated, the gradient Kt of the approximation function f(t) corresponding to the respective positions Pin, Pat, and Pbt in Fig. 190 should be obtained, as described above.

Also, with the above example, an example for obtaining double-density pixel values has been described, but the approximation function f(t) is a continuous function, so it is possible to obtain a necessary gradient even regarding the pixel value of a pixel in a position other than a pluralized density.

Needless to say, there is no restriction regarding the sequence of processing for obtaining gradients on the approximation function as to the frame direction or the spatial direction or derivative values. Further, with the above example in the spatial direction, description has been made using the relation between the spatial direction Y and frame direction T, but the relation between the spatial direction X and frame direction T may be employed instead of this. Further, a gradient (in any one-dimensional direction) or a derivative value may be selectively obtained from any two-dimensional relation of the temporal and spatial directions.

According to the above arrangements, it is possible to generate and output gradients on the approximation function in the frame direction (temporal direction) of positions necessary for generating pixels as actual world estimating information by using the pixel values of pixels near a pixel of interest without obtaining the approximation function in the frame direction approximately representing the actual world.

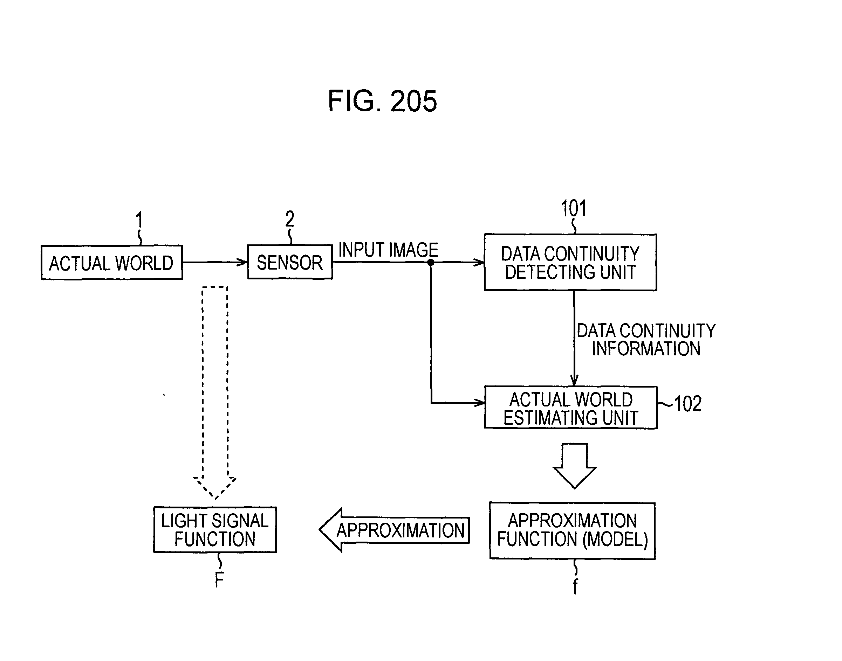

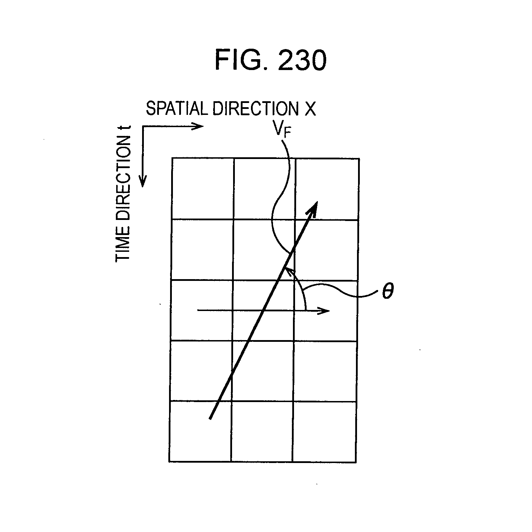

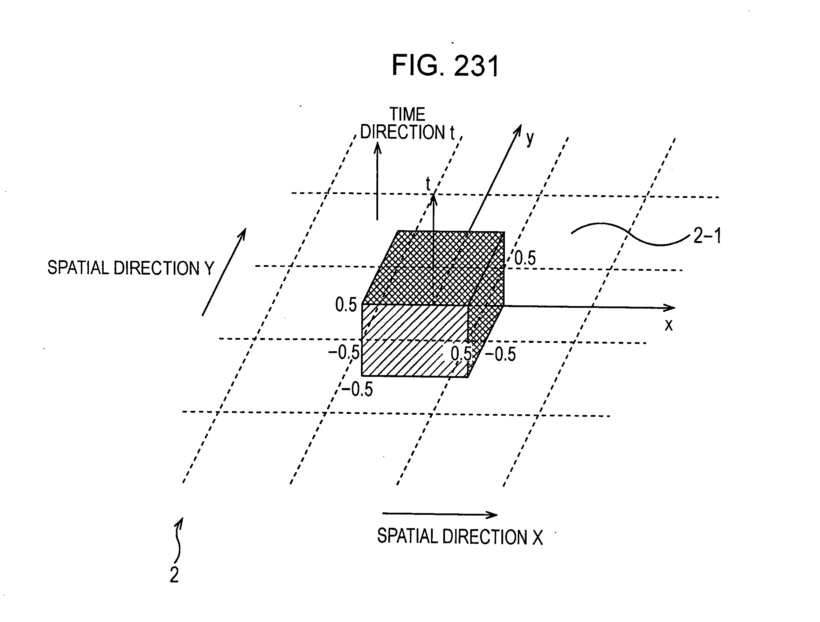

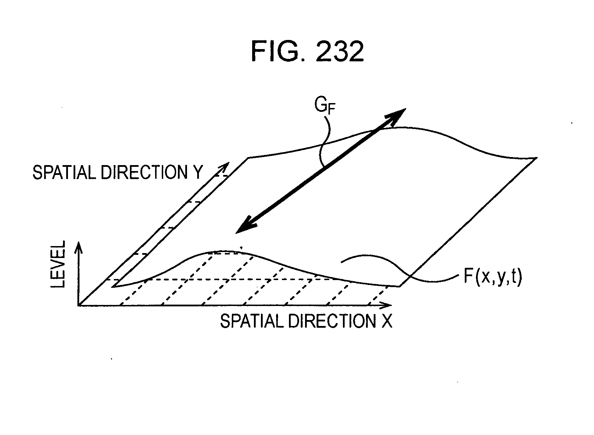

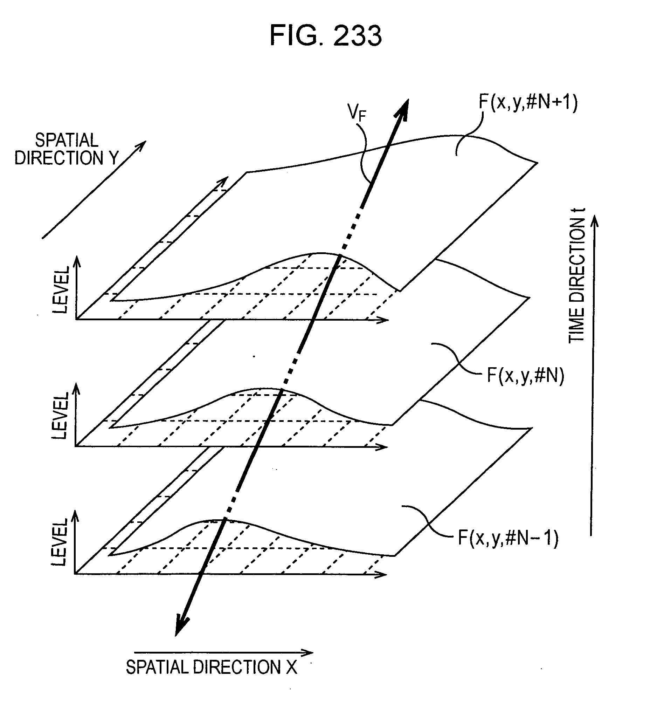

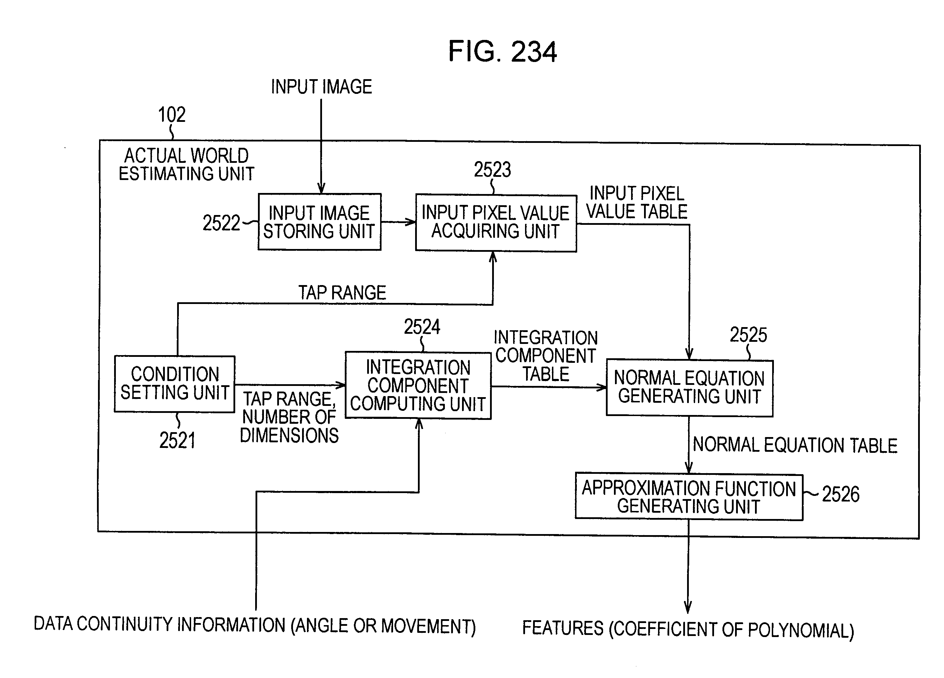

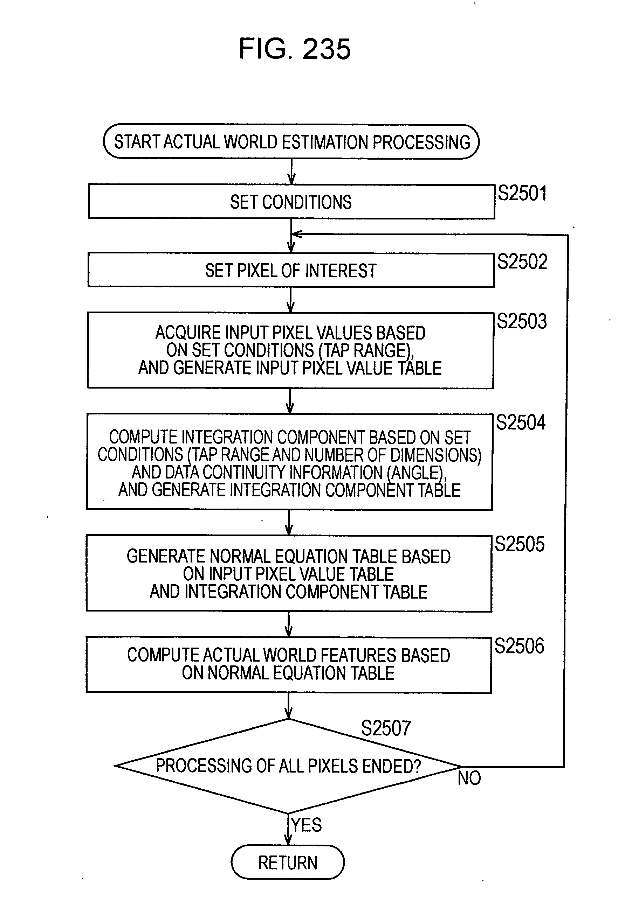

Next, description will be made regarding another embodiment example of the actual world estimating unit 102 (Fig. 3) with reference to Fig. 205 through Fig. 235.

Fig. 205 is a diagram for describing the principle of this embodiment example.

As shown in Fig. 205, a signal (light intensity allocation) in the actual world 1, which is an image cast on the sensor 2, is represented with a predetermined function F. Note that hereafter, with the description of this embodiment example, the signal serving as an image in the actual world 1 is particularly referred to as a light signal, and the function F is particularly referred to as a light signal function F.

With this embodiment example, in the event that the light signal in the actual world 1 represented with the light signal function F has predetermined continuity, the actual world estimating unit 102 estimates the light signal function F by approximating the light signal function F with a predetermined function f using an input image (image data including continuity of data corresponding to continuity) from the sensor 2, and data continuity information (data continuity information corresponding to continuity of the input image data) from the data continuity detecting unit 101. Note that with the description of this embodiment example, the function f is particularly referred to as an approximation function f, hereafter.

In other words, with this embodiment example, the actual world estimating unit 102 approximates (describes) the image (light signal in the actual world 1) represented with the light signal function F using a model 161 (Fig. 7) represented with the approximation function f. Accordingly, hereafter, this embodiment example is referred to as a function approximating method.

Now, description will be made regarding the background wherein the present applicant has invented the function approximating method, prior to entering the specific description of the function approximating method.

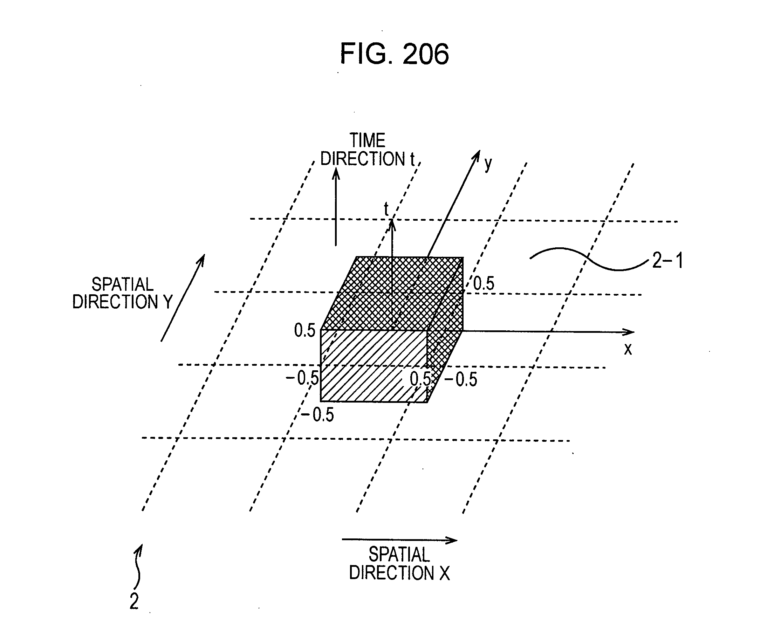

Fig. 206 is a diagram for describing integration effects in the case in which the sensor 2 is treated as a CCD.

As shown in Fig. 206, multiple detecting elements 2-1 are disposed on the plane of the sensor 2.

With the example in Fig. 206, a direction in parallel with a predetermined side of the detecting elements 2-1 is taken as the X direction, which is one direction in the spatial direction, and the a direction orthogonal to the X direction is taken as the Y direction, which is another direction in the spatial direction. Also, the direction perpendicular to the X-Y plane is taken as the direction t serving as the temporal direction.

Also, with the example in Fig. 206, the spatial shape of each detecting element 2-1 of the sensor 2 is represented with a square of which one side is 1 in length. The shutter time (exposure time) of the sensor 2 is represented with 1.

Further, with the example in Fig. 206, the center of one detecting element 2-1 of the sensor 2 is taken as the origin (position x = 0 in the X direction, and position y = 0 in the Y direction) in the spatial direction (X direction and Y direction), and the intermediate point-in-time of the exposure time is taken as the origin (position t = 0 in the t direction) in the temporal direction (t direction).

In this case, the detecting element 2-1 of which the center is in the origin (x = 0, y = 0) in the spatial direction subjects the light signal function F(x, y, t) to integration with a range between -0.5 and 0.5 in the X direction, range between -0.5 and 0.5 in the Y direction, and range between -0.5 and 0.5 in the t direction, and outputs the integral value thereof as a pixel value P.

That is to say, the pixel value P output from the detecting element 2-1 of which the center is in the origin in the spatial direction is represented with the following Expression (104).

$$P = \int_{-0.5}^{+0.5} \int_{-0.5}^{+0.5} \int_{-0.5}^{+0.5} F(x, y, t)\,dx\,dy\,dt$$

$$...(104)$$

The other detecting elements 2-1 also output the pixel value P shown in Expression (104) by taking the center thereof as the origin in the spatial direction in the same way.

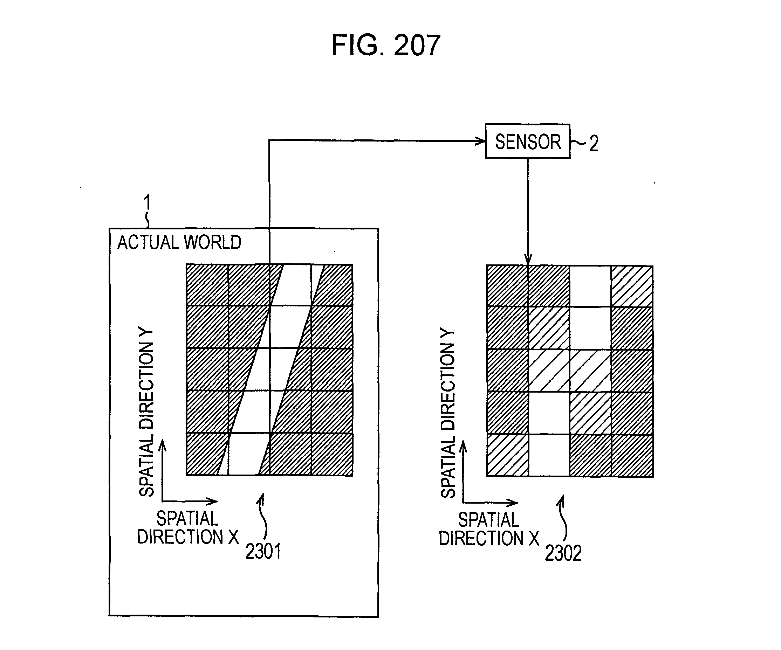

Fig. 207 is a diagram for describing a specific example of the integration effects of the sensor 2.

In Fig. 207, the X direction and Y direction represent the X direction and Y direction of the sensor 2 (Fig. 206).

A portion 2301 of the light signal in the actual world 1 (hereafter, such a portion is referred to as a region) represents an example of a region having predetermined continuity.

Note that the region 2301 is a portion of the continuous light signal (continuous region). On the other hand, in Fig. 207, the region 2301 is shown as divided into 20 small regions (square regions) in reality. This is because of representing that the size of the region 2301 is equivalent to the size wherein the four detecting elements (pixels) of the sensor 2 in the X direction, and also the five detecting elements (pixels) of the sensor 2 in the Y direction are arrayed. That is to say, each of the 20 small regions (virtual regions) within the region 2301 is equivalent to one pixel.

Also, a white portion within the region 2301 represents a light signal corresponding to a fine line. Accordingly, the region 2301 has continuity in the direction wherein a fine line continues. Hereafter, the region 2301 is referred to as the fine-line-including actual world region 2301.

In this case, when the fine-line-including actual world region 2301 (a portion of a light signal in the actual world 1) is detected by the sensor 2, region 2302 (hereafter, this is referred to as a fine-line-including data region 2302) of the input image (pixel values) is output from the sensor 2 by integration effects.

Note that each pixel of the fine-line-including data region 2302 is represented as an image in the drawing, but is data representing a predetermined value in reality. That is to say, the fine-line-including actual world region 2301 is changed (distorted) to the fine-line-including data region 2302, which is divided into 20 pixels (20 pixels in total of 4 pixels in the X direction and also 5 pixels in the Y direction) each having a predetermined pixel value by the integration effects of the sensor 2.

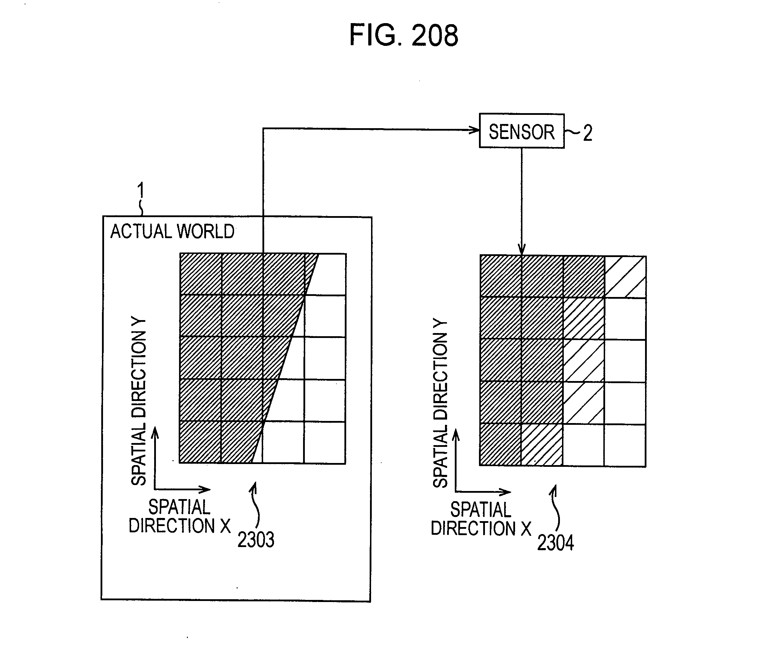

Fig. 208 is a diagram for describing another specific example (example different from Fig. 207) of the integration effects of the sensor 2.

In Fig. 208, the X direction and Y direction represent the X direction and Y direction of the sensor 2 (Fig. 206).

A portion (region) 2303 of the light signal in the actual world 1 represents another example (example different from the fine-line-including actual region 2301 in Fig. 207) of a region having predetermined continuity.

Note that the region 2303 is a region having the same size as the fine-line-including actual world region 2301. That is to say, the region 2303 is also a portion of the continuous light signal in the actual world 1 (continuous region) as with the fine-line-including actual world region 2301 in reality, but is shown as divided into 20 small regions (square regions) equivalent to one pixel of the sensor 2 in Fig. 208.

Also, the region 2303 includes a first portion edge having predetermined first light intensity (value), and a second portion edge having predetermined second light intensity (value). Accordingly, the region 2303 has continuity in the direction wherein the edges continue. Hereafter, the region 2303 is referred to as the two-valued-edge-including actual world region 2303.

In this case, when the two-valued-edge-including actual world region 2303 (a portion of the light signal in the actual world 1) is detected by the sensor 2, a region 2304 (hereafter, referred to as two-valued-edge-including data region 2304) of the input image (pixel value) is output from the sensor 2 by integration effects.

Note that each pixel value of the two-valued-edge-including data region 2304 is represented as an image in the drawing as with the fine-line-including data region 2302, but is data representing a predetermined value in reality. That is to say, the two-valued-edge-including actual world region 2303 is changed (distorted) to the two-valued-edge-including data region 2304, which is divided into 20 pixels (20 pixels in total of 4 pixels in the X direction and also 5 pixels in the Y direction) each having a predetermined pixel value by the integration effects of the sensor 2.

Conventional image processing devices have regarded image data output from the sensor 2 such as the fine-line-including data region 2302, two-valued-edge-including data region 2304, and the like as the origin (basis), and also have subjected the image data to the subsequent image processing. That is to say, regardless of that the image data output from the sensor 2 had been changed (distorted) to data different from the light signal in the actual world 1 by integration effects, the conventional image processing devices have performed image processing on assumption that the data different from the light signal in the actual world 1 is correct.

As a result, the conventional image processing devices have provided a problem wherein based on the waveform (image data) of which the details in the actual world is distorted at the stage wherein the image data is output from the sensor 2, it is very difficult to restore the original details from the waveform.

Accordingly, with the function approximating method, in order to solve this problem, as described above (as shown in Fig. 205), the actual world estimating unit 102 estimates the light signal function F by approximating the light signal function F(light signal in the actual world 1) with the approximation function f based on the image data (input image) such as the fine-line-including data region 2302, and two-valued-edge-including data region 2304 output from the sensor 2.

Thus, at a later stage than the actual world estimating unit 102 (in this case, the image generating unit 103 in Fig. 3), the processing can be performed by taking the image data wherein integration effects are taken into consideratidn, i.e., image data that can be represented with the approximation function f as the origin.

Hereafter, description will be made independently regarding three specific methods (first through third function approximating methods), of such a function approximating method with reference to the drawings.

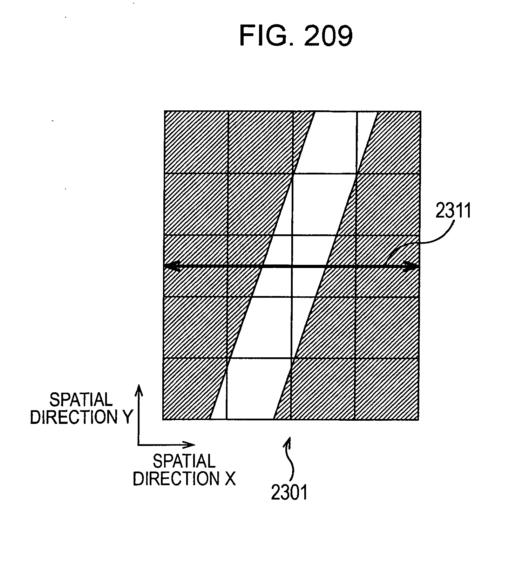

First, description will be made regarding the first function approximating method with reference to Fig. 209 through Fig. 223.

Fig. 209 is a diagram representing the fine-line-including actual world region 2301 shown in Fig. 207 described above again.

In Fig. 209, the X direction and Y direction represent the X direction and Y direction of the sensor 2 (Fig. 206).

The first function approximating method is a method for approximating a one-dimensional waveform (hereafter, such a waveform is referred to as an X cross-sectional waveform F(x)) wherein the light signal function F(x, y, t) corresponding to the fine-line-including actual world region 2301 such as shown in Fig. 209 is projected in the X direction (direction of an arrow 2311 in the drawing), with the approximation function f(x) serving as an n-dimensional (n is an arbitrary integer) polynomial. Accordingly, hereafter, the first function approximating method is particularly referred to as a one-dimensional polynomial approximating method.

Note that with the one-dimensional polynomial approximating method, the X cross-sectional waveform F(x), which is to be approximated, is not restricted to a waveform corresponding to the fine-line-including actual world region 2301 in Fig. 209, of course. That is to say, as described later, with the one-dimensional polynomial approximating method, any waveform can be approximated as long as the X cross-sectional waveform F(x) corresponds to the light signals in the actual world 1 having continuity.

Also, the direction of the projection of the light signal function F(x, y, t) is not restricted to the X direction, or rather the Y direction or t direction may be employed. That is to say, with the one-dimensional polynomial approximating method, a function F(y) wherein the light signal function F(x, y, t) is projected in the Y direction may be approximated with a predetermined approximation function f(y), or a function F(t) wherein the light signal function F(x, y, t) is projected in the t direction may be approximated with a predetermined approximation f (t).

More specifically, the one-dimensional polynomial approximating method is a method for approximating, for example, the X cross-sectional waveform F(x) with the approximation function f(x) serving as an n-dimensional polynomial such as shown in the following Expression (105).

$$f(x) = w_0 + w_1 x + w_2 x + \cdots + w_n x^n = \sum_{i=0}^{n} w_i x^i$$

$$\ldots (105)$$

That is to say, with the one-dimensional polynomial approximating method, the actual world estimating unit 102 estimates the X cross-sectional waveform F(x) by calculating the coefficient (features) $w_i$ of $x^i$ in Expression (105).

This calculation method of the features $w_i$ is not restricted to a particular method, for example, the following first through third methods may be employed.

That is to say, the first method is a method that has been employed so far.

On the other hand, the second method is a method that has been newly invented by the present applicant, which is a method that considers continuity in the spatial direction as to the first method.

However, as described later, with the first and second methods, the integration effects of the sensor 2 are not taken into consideration. Accordingly, an approximation function f(x) obtained by substituting the features $w_i$ calculated by the first method or the second method for the above Expression (105) is an approximation function regarding an input image, but strictly speaking, cannot be referred to as the approximation function of the X cross-sectional waveform F(x).

Consequently, the present applicant has invented the third method that calculates the features $w_i$ further in light of the integration effects of the sensor 2 as to the second method. An approximation function f(x) obtained by substituting the features $w_i$ calculated with this third method for the above Expression (105) can be referred to as the approximation function of the X cross-sectional waveform F(x) in that the integration effects of the sensor 2 are taken into consideration.

Thus, strictly speaking, the first method and the second method cannot be referred to as the one-dimensional polynomial approximating method, and the third method alone can be referred to as the one-dimensional polynomial approximating method.

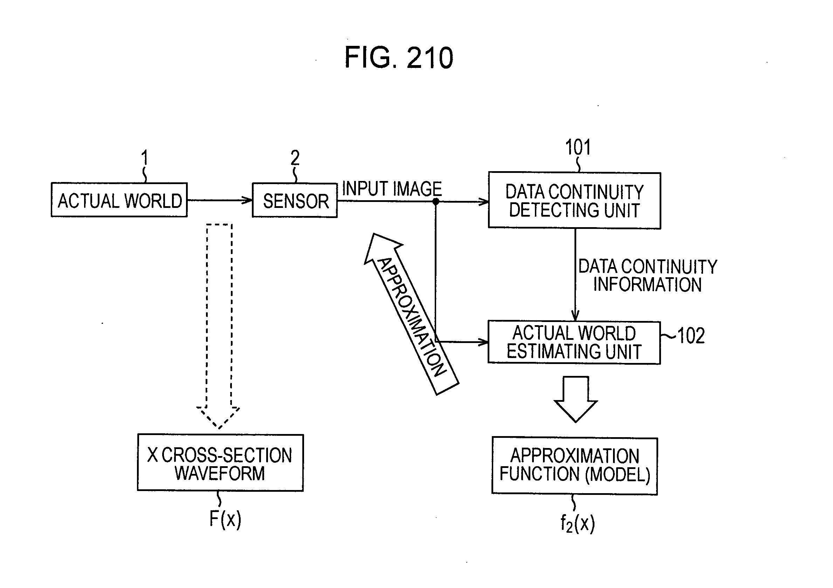

In other words, as shown in Fig. 210, the second method is an embodiment of the actual world estimating unit 102 according to the present invention, which is different from the one-dimensional polynomial approximating method. That is to say, Fig. 210 is a diagram for describing the principle of the embodiment corresponding to the second method.

As shown in Fig. 210, with the embodiment corresponding to the second method, in the event that the light signal in the actual world 1 represented with the light signal function F has predetermined continuity, the actual world estimating unit 102 does not approximate the X cross-sectional waveform F(x) with an input image (image data including continuity of data corresponding to continuity) from the sensor 2, and data continuity information (data continuity information corresponding to continuity of input image data) from the data continuity detecting unit 101, but approximates the input image from the sensor 2 with a predetermined approximation function $f_2(x)$.

Thus, it is hard to say that the second method is a method having the same level as the third method in that approximation of the input image alone is performed without considering the integral effects of the sensor 2. However, the second method is a method superior to the conventional first method in that the second method takes continuity in the spatial direction into consideration.

Hereafter, description will be made independently regarding the details of the first method, second method, and third method in this order.

Note that hereafter, in the event that the respective approximation functions f (x) generated by the first method, second method, and third method are distinguished from that of the other method, they are particularly referred to as approximation function $f_1(x)$, approximation function $f_2(x)$, and approximation function $f_3(x)$ respectively.

First, description will be made regarding the details of the first method.

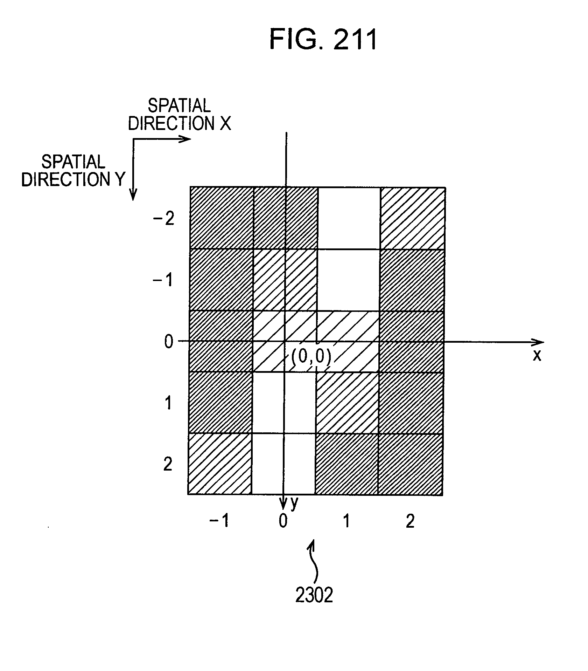

With the first method, on condition that the approximation function $f_1(x)$ shown in the above Expression (105) holds within the fine-line-including actual world region 2301 in Fig. 211, the following prediction equation (106) is defined.

$$P(x,y) = f_1(x) + e \tag{106}$$

In Expression (106), x represents a pixel position relative as to the X direction from a pixel of interest. y represents a pixel position relative as to the Y direction from the pixel of interest. e represents a margin of error.

Specifically, for example, as shown in Fig. 211, let us say that the pixel of interest is the second pixel in the X direction from the left, and also the third pixel in the Y direction from the bottom in the drawing, of the fine-line-including data region 2302 (data of which the fine-line-including actual world region 2301 (Fig. 209) is detected by the sensor 2, and output). Also, let us say that the center of the pixel of interest is the origin (0, 0), and a coordinates system (hereafter, referred to as a pixel-of-interest coordinates system) of which axes are an x axis and y axis respectively in parallel with the X direction and Y direction of the sensor 2 (Fig. 206) is set. In this case, the coordinates value (x, y) of the pixel-of-interest coordinates system represents a relative pixel position.

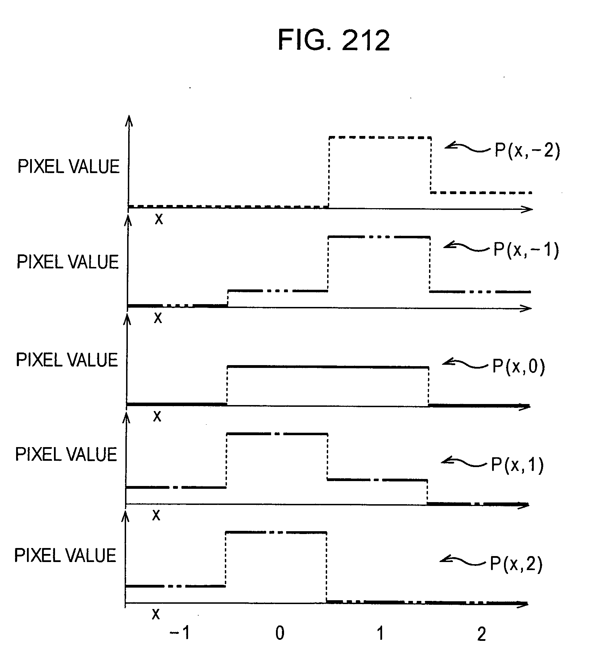

Also, in Expression (106), P (x, y) represents a pixel value in the relative pixel positions (x, y). Specifically, in this case, the P (x, y) within the fine-line-including data region 2302 is such as shown in Fig. 212.

Fig. 212 represents this pixel value P (x, y) in a graphic manner.

In Fig. 212, the respective vertical axes of the graphs represent pixel values, and the horizontal axes represent a relative position x in the X direction from the pixel of interest. Also, in the drawing, the dashed line in the first graph from the top represents an input pixel value P (x, -2), the chain triple-dashed line in the second graph from the top represents an input pixel value P (x, -1), the solid line in the third graph from the top represents an input pixel value P (x, 0), the chain single-dashed line in the fourth graph from the top represents an input pixel value P (x, 1), and the chain double-dashed line in the fifth graph from the top (the first from the bottom) represents an input pixel value P (x, 2) respectively.

Upon the 20 input pixel values P (x, -2), P (x, -1), P (x, 0), P (x, 1), and P (x, 2) (however, x is any one integer value of -1 through 2) shown in Fig. 212 being substituted for the above Expression (106) respectively, 20 equations as shown in the following Expression (107) are generated. Note that each $e_k$ (k is any one of integer values 1 through 20) represents a margin of error.

$$
\begin{aligned}
P(-1, -2) &= f_1(-1) + e_1 \\
P(0, -2) &= f_1(0) + e_2 \\
P(1, -2) &= f_1(1) + e_3 \\
P(2, -2) &= f_1(2) + e_4 \\
P(-1, -1) &= f_1(-1) + e_5 \\
P(0, -1) &= f_1(0) + e_6 \\
P(1, -1) &= f_1(1) + e_7 \\
P(2, -1) &= f_1(2) + e_8 \\
P(-1, 0) &= f_1(-1) + e_9 \\
P(0, 0) &= f_1(0) + e_{10} \\
P(1, 0) &= f_1(1) + e_{11} \\
P(2, 0) &= f_1(2) + e_{12} \\
P(-1, 1) &= f_1(-1) + e_{13} \\
P(0, 1) &= f_1(0) + e_{14} \\
P(1, 1) &= f_1(1) + e_{15} \\
P(2, 1) &= f_1(2) + e_{16} \\
P(-1, 2) &= f_1(-1) + e_{17} \\
P(0, 2) &= f_1(0) + e_{18} \\
P(1, 2) &= f_1(1) + e_{19} \\
P(2, 2) &= f_1(2) + e_{20}
\end{aligned}
$$

$$\ldots (107)$$

Expression (107) is made up of 20 equations, so in the event that the number of the features $w_i$ of the approximation function $f_1(x)$ is less than 20, i.e., in the event that the approximation function $f_1(x)$ is a polynomial having the number of dimensions less than 19, the features $w_i$ can be calculated using the least squares method, for example.

Note that the specific solution of the least squares method will be described later.

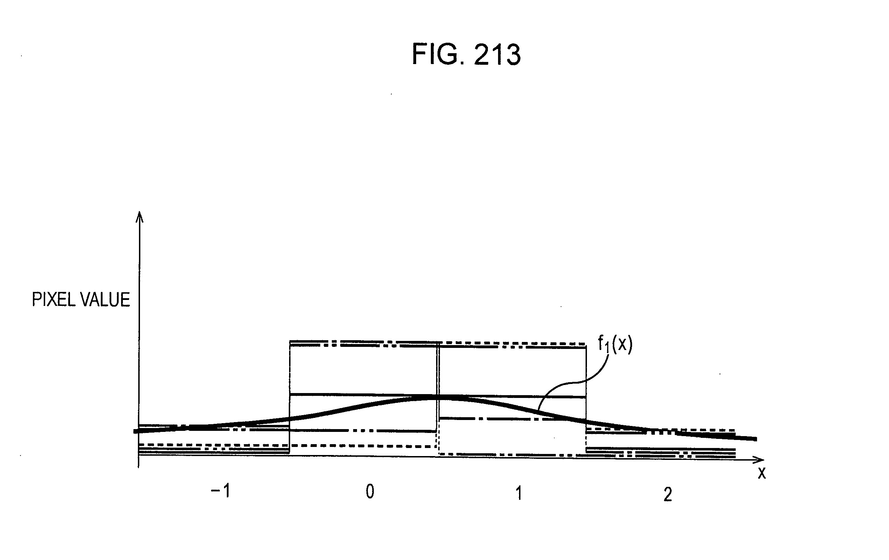

For example, if we say that the number of dimensions of the approximation function $f_1(x)$ is five, the approximation function $f_1(x)$ calculated with the least squares method using Expression (107) (the approximation function $f_1(x)$ generated by the calculated features $w_i$) becomes a curve shown in Fig. 213.

Note that in Fig. 213, the vertical axis represents pixel values, and the horizontal axis represents a relative position x from the pixel of interest.

That is to say, for example, if we supplement the respective 20 pixel values $P(x, y)$ (the respective input pixel values $P(x, -2)$, $P(x, -1)$, $P(x, 0)$, $P(x, 1)$, and $P(x, 2)$ shown in Fig. 212) making up the fine-line-including data region 2302 in Fig. 211 along the x axis without any modification (if we regard a relative position y in the Y direction as constant, and overlay the five graphs shown in Fig. 212), multiple lines (dashed line, chain triple-dashed line, solid line, chain single-dashed line, and chain double-dashed line) in parallel with the x axis, such as shown in Fig. 213, are distributed.

However, in Fig. 213, the dashed line represents the input pixel value $P(x, -2)$, the chain triple-dashed line represents the input pixel value $P(x, -1)$, the solid line represents the input pixel value $P(x, 0)$, the chain single-dashed line represents the input pixel value $P(x, 1)$, and the chain double-dashed line represents the input pixel value $P(x, 2)$ respectively. Also, in the event of the same pixel value, lines more than 2 lines are overlaid in reality, but in Fig. 213, the lines are drawn so as to distinguish each line, and so as not to overlay each line.

The respective 20 input pixel values ($P(x, -2)$, $P(x, -1)$, $P(x, 0)$, $P(x, 1)$, and $P(x, 2)$) thus distributed, and a regression curve (the approximation function $f_1(x)$ obtained by substituting the features $w_i$ calculated with the least squares method for the above Expression (104)) so as to minimize the error of the value $f_1(x)$ become a curve (approximation function $f_1(x)$) shown in Fig. 213.

Thus, the approximation function $f_1(x)$ represents nothing but a curve connecting in the X direction the means of the pixel values (pixel values having the same relative position x in the X direction from the pixel of interest) $P(x, -2)$, $P(x, -1)$, $P(x, 0)$, $P(x, 1)$, and $P(x, 2)$ in the Y direction. That is to say, the approximation function $f_1(x)$ is generated without considering continuity in the spatial direction included in the light signal.

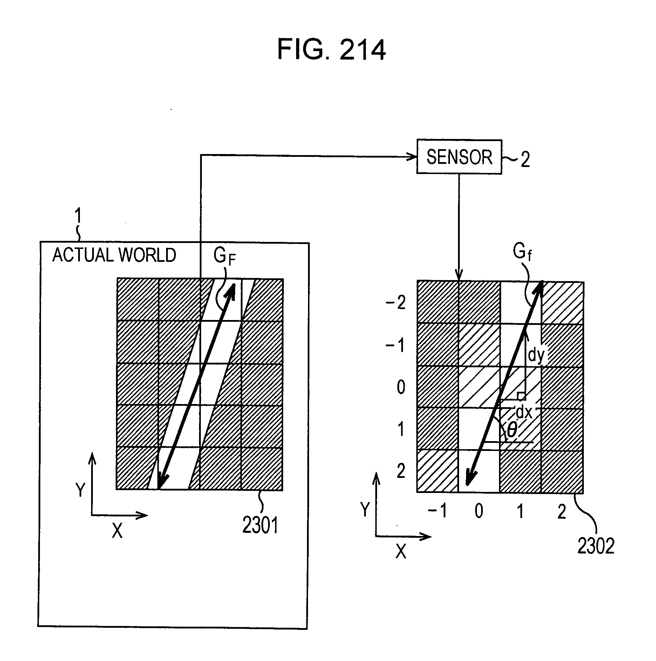

For example, in this case, the fine-line-including actual world region 2301 (Fig. 209) is regarded as a subject to be approximated. This fine-line-including actual world region 2301 has continuity in the spatial direction, which is represented with a gradient $G_F$, such as shown in Fig. 214. Note that in Fig. 214, the X direction and Y direction represent the X direction and Y direction of the sensor 2 (Fig. 206).

Accordingly, the data continuity detecting unit 101 (Fig. 205) can output an angle θ (angle θ generated between the direction of data continuity represented with a gradient $G_f$ corresponding to the gradient $G_F$, and the X direction) such as shown in Fig. 214 as data continuity information corresponding to the gradient $G_F$ as continuity in the spatial direction.

However, with the first method, the data continuity information output from the data continuity detecting unit 101 is not employed at all.

In other words, such as shown in Fig. 214, the direction of continuity in the spatial direction of the fine-line-including actual world region 2301 is a general angle θ direction. However, the first method is a method for calculating the features $w_i$ of the approximation function $f_1(x)$ on assumption that the direction of continuity in the spatial direction of the fine-line-including actual world region 2301 is the Y direction (i.e., on assumption that the angle θ is 90°).

Consequently, the approximation function $f_1(x)$ becomes a function of which the waveform gets dull, and the detail decreases than the original pixel value. In other words, though not shown in the drawing, with the approximation function $f_1(x)$ generated with the first method, the waveform thereof becomes a waveform different from the actual X cross-sectional waveform $F(x)$.

To this end, the present applicant has invented the second method for calculating the features $w_i$ by further taking continuity in the spatial direction into consideration (utilizing the angle θ) as to the first method.

That is to say, the second method is a method for calculating the features $w_i$ of the approximation function $f_2(x)$ on assumption that the direction of continuity of the fine-line-including actual world region 2301 is a general angle θ direction.

Specifically, for example, the gradient $G_f$ representing continuity of data corresponding to continuity in the spatial direction is represented with the following Expression (108).

$$G_f = \tan\theta = \frac{dy}{dx} \tag{108}$$

Note that in Expression (108), dx represents the amount of fine movement in the X direction such as shown in Fig. 214, dy represents the amount of fine movement in the Y direction as to the dx such as shown in Fig. 214.

In this case, if we define the shift amount $C_x(y)$ as shown in the following Expression (109), with the second method, an equation corresponding to Expression (106) employed in the first method becomes such as the following Expression (110).

$$C_x(y) = \frac{y}{G_f} \qquad (109)$$

$$P(x,y) = f_2(x-C_x(y))+e \qquad (110)$$

That is to say, Expression (106) employed in the first method represents that the position x in the X direction of the pixel center position (x, y) is the same value regarding the pixel value P (x, y) of any pixel positioned in the same position. In other words, Expression (106) represents that pixels having the same pixel value continue in the Y direction (exhibits continuity in the Y direction).

On the other hand, Expression (110) employed in the second method represents that the pixel value P (x, y) of a pixel of which the center position is (x, y) is not identical to the pixel value (approximate equivalent to $f_2$ (x)) of a pixel positioned in a place distant from the pixel of interest (a pixel of which the center position is the origin (0, 0)) in the X direction by x, and is the same value as the pixel value (approximate equivalent to $f_2$ (x + $C_x$ (y)) of a pixel positioned in a place further distant from the pixel thereof in the X direction by the shift amount $C_x$ (y) (pixel positioned in a place distant from the pixel of interest in the X direction by x + $C_x$ (y)). In other words, Expression (110) represents that pixels having the same pixel value continue in the angle θ direction corresponding to the shift amount $C_x$ (y) (exhibits continuity in the general angle θ direction). Thus, the shift amount $C_x$ (y) is the amount of correction considering continuity (in this case, continuity represented with the gradient $G_F$ in Fig. 214 (strictly speaking, continuity of data represented with the gradient $G_f$)) in the spatial direction, and Expression (110) is obtained by correcting Expression (106) with the shift amount $C_x$ (y).

In this case, upon the 20 pixel values P (x, y) (however, x is any one integer value of -1 through 2, and y is any one integer value of -2 through 2) of the fine-line-including data region shown in Fig. 211 being substituted for the above Expression (110) respectively, 20 equations as shown in the following Expression (111) are generated.

$$P(-1, -2) = f_2(-1 - C_x(-2)) + e_1$$
$$P(0, -2) = f_2(0 - C_x(-2)) + e_2$$
$$P(1, -2) = f_2(1 - C_x(-2)) + e_3$$
$$P(2, -2) = f_2(2 - C_x(-2)) + e_4$$
$$P(-1, -1) = f_2(-1 - C_x(-1)) + e_5$$
$$P(0, -1) = f_2(0 - C_x(-1)) + e_6$$
$$P(1, -1) = f_2(1 - C_x(-1)) + e_7$$
$$P(2, -1) = f_2(2 - C_x(-1)) + e_8$$
$$P(-1, 0) = f_2(-1) + e_9$$
$$P(0, 0) = f_2(0) + e_{10}$$
$$P(1, 0) = f_2(1) + e_{11}$$
$$P(2, 0) = f_2(2) + e_{12}$$
$$P(-1, 1) = f_2(-1 - C_x(1)) + e_{13}$$
$$P(0, 1) = f_2(0 - C_x(1)) + e_{14}$$
$$P(1, 1) = f_2(1 - C_x(1)) + e_{15}$$
$$P(2, 1) = f_2(2 - C_x(1)) + e_{16}$$
$$P(-1, 2) = f_2(-1 - C_x(2)) + e_{17}$$
$$P(0, 2) = f_2(0 - C_x(2)) + e_{18}$$
$$P(1, 2) = f_2(1 - C_x(2)) + e_{19}$$
$$P(2, 2) = f_2(2 - C_x(2)) + e_{20}$$

$$\ldots (111)$$

Expression (111) is made up of 20 equations, as with the above Expression (107). Accordingly, with the second method, as with the first method, in the event that the number of the features $w_i$ of the approximation function $f_2(x)$ is less than 20, i.e., the approximation function $f_2(x)$ is a polynomial having the number of dimensions less than 19, the features $w_i$ can be calculated with the least squares method, for example. Note that the specific solution regarding the least squares method will be described later.

For example, if we say that the number of dimensions of the approximation function $f_2(x)$ is five as with the first method, with the second method, the features $w_i$ are calculated as follows.

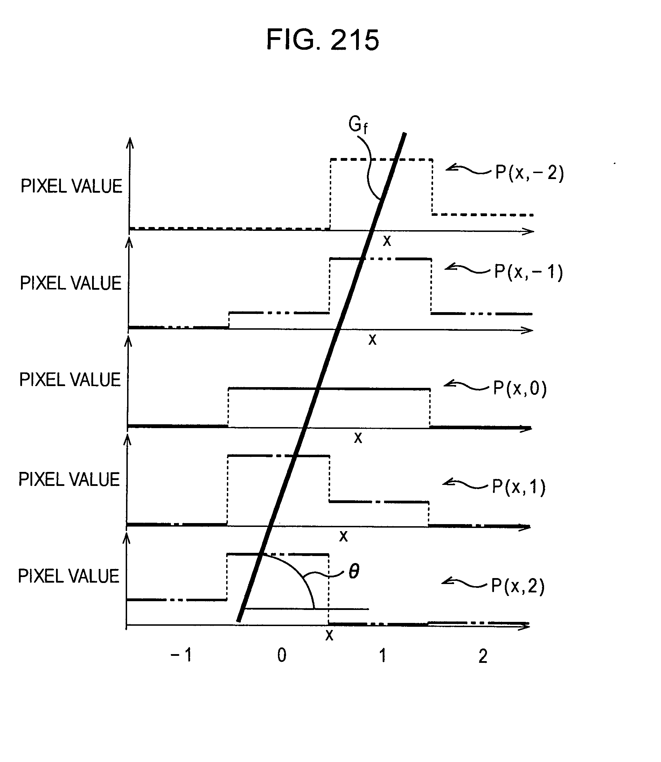

That is to say, Fig. 215 represents the pixel value P (x, y) shown in the left side of Expression (111) in a graphic manner. The respective five graphs shown in Fig. 215 are basically the same as shown in Fig. 212.

As shown in Fig. 215, the maximal pixel values (pixel values corresponding to fine lines) are continuous in the direction of continuity of data represented with the gradient $G_f$.

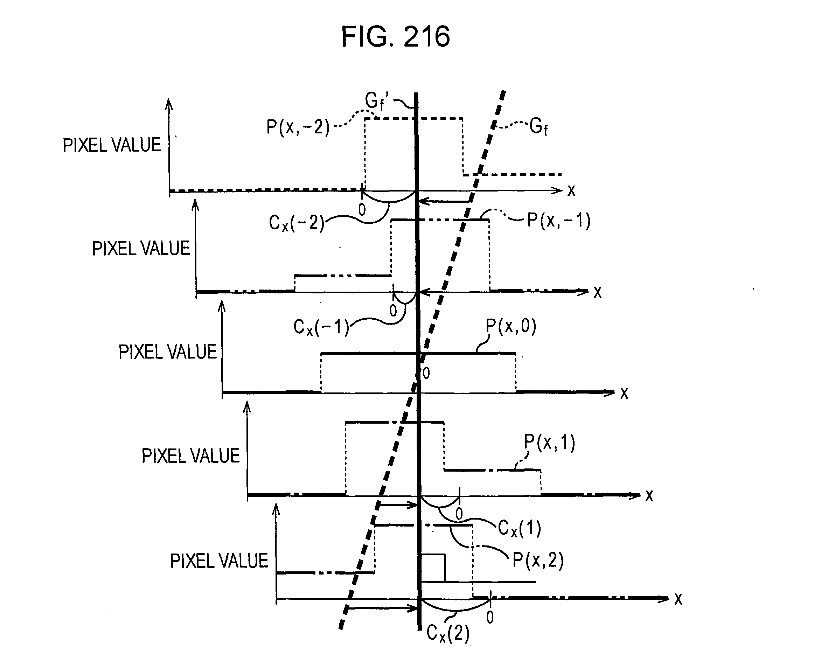

Consequently, with the second method, if we supplement the respective input pixel values P (x, -2), P (x, -1), P (x, 0), P (x, 1), and P (x, 2) shown in Fig. 215, for example, along the x axis, we supplement the pixel values after the pixel values are changed in the states shown in Fig. 216 instead of supplementing the pixel values without any modification as with the first method (let us assume that y is constant, and the five graphs are overlaid in the states shown in Fig. 215).

That is to say, Fig. 216 represents a state wherein the respective input pixel values P (x, -2), P (x, -1), P (x, 0), P (x, 1), and P (x, 2) shown in Fig. 215 are shifted by the shift amount $C_x$ (y) shown in the above Expression (109). In other words, Fig. 216 represents a state wherein the five graphs shown in Fig. 215 are moved as if the gradient $G_F$ representing the actual direction of continuity of data were regarded as a gradient $G_F'$ (in the drawing, a straight line made up of a dashed line were regarded as a straight line made up of a solid line).

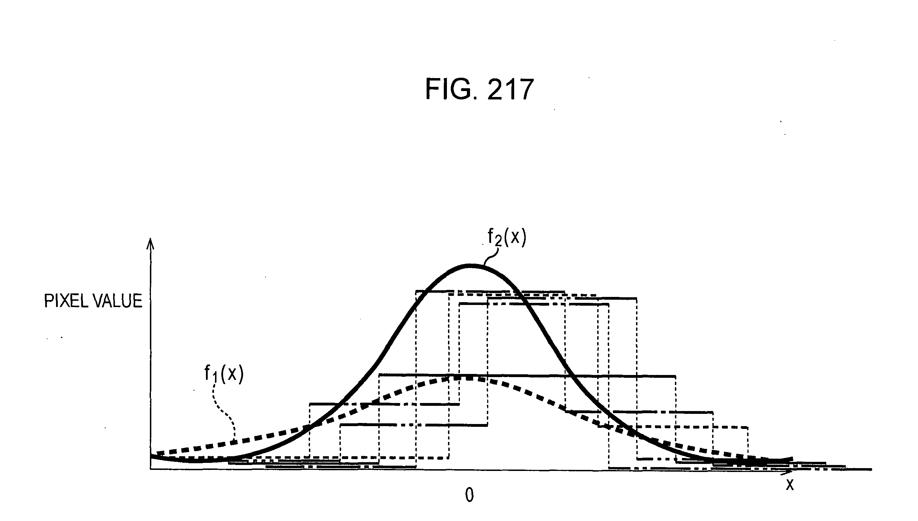

In the states in Fig. 216, if we supplement the respective input pixel values P (x, -2), P (x, -1), P (x, 0), P (x, 1), and P (x, 2), for example, along the x axis (in the states shown in Fig. 216, if we overlay the five graphs), multiple lines (dashed line, chain triple-dashed line, solid line, chain single-dashed line, and chain double-dashed line) in parallel with the x axis, such as shown in Fig. 217, are distributed.

Note that in Fig. 217, the vertical axis represents pixel values, and the horizontal axis represents a relative position x from the pixel of interest. Also, the dashed line represents the input pixel value P (x, -2), the chain triple-dashed line represents the input pixel value P (x, -1), the solid line represents the input pixel value P (x, 0), the chain single-dashed line represents the input pixel value P (x, 1), and the chain double-dashed line represents the input pixel value P (x, 2) respectively. Further, in the event of the same pixel value, lines more than 2 lines are overlaid in reality, but in Fig. 217, the lines are drawn so as to distinguish each line, and so as not to overlay each line.

The respective 20 input pixel values P (x, y) (however, x is any one integer value of -1 through 2, and y is any one integer value of -2 through 2) thus distributed, and a regression curve (the approximation function $f_2$ (x) obtained by substituting the features $w_i$ calculated with the least squares method for the above Expression (104)) to minimize the error of the value $f_2$ (x + $C_x$ (y)) become a curve $f_2$ (x) shown in the solid line in Fig. 217.

Thus, the approximation function $f_2$ (x) generated with the second method represents a curve connecting in the X direction the means of the input pixel values P (x, y) in the angle θ direction (i.e., direction of continuity in the general spatial direction) output from the data continuity detecting unit 101 (Fig. 205).

On the other hand, as described above, the approximation function $f_1$ (x) generated with the first method represents nothing but a curve connecting in the X direction the means of the input pixel values P (x, y) in the Y direction (i.e., the direction different from the continuity in the spatial direction).

Accordingly, as shown in Fig. 217, the approximation function $f_2$ (x) generated with the second method becomes a function wherein the degree of dullness of the waveform thereof decreases, and also the degree of decrease of the detail as to the original pixel value decreases less than the approximation function $f_1$ (x) generated with the first method. In other words, though not shown in the drawing, with the approximation function $f_2$ (x) generated with the second method, the waveform thereof becomes a waveform closer to the actual X cross-sectional waveform F(x) than the approximation function $f_1$ (x) generated with the first method.

However, as described above, the approximation function $f_2$ (x) is a function considering continuity in the spatial direction, but is nothing but a function generated wherein the input image (input pixel value) is regarded as the origin (basis). That is to say, as shown in Fig. 210 described above, the approximation function $f_2$ (x) is nothing but a function that approximated the input image different from the X cross-sectional waveform F(x), and it is hard to say that the approximation function $f_2$ (x) is a function that approximated the X cross-sectional waveform F(x). In other words, the second method is a method for calculating the features $w_i$ on assumption that the above Expression (110) holds, but does not take the relation in Expression (104) described above into consideration (does not consider the integration effects of the sensor 2).

Consequently, the present applicant has invented the third method that calculates the features $w_i$ of the approximation function $f_3$ (x) by further taking the integration effects of the sensor 2 into consideration as to the second method.

That is to say the third method is a method that introduces the concept of a spatial mixed region.

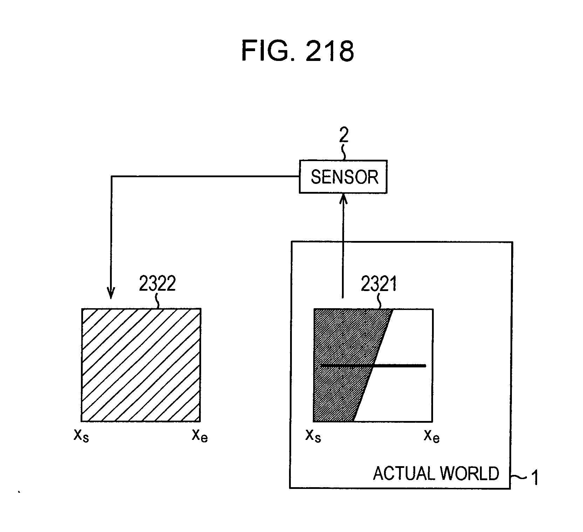

Description will be made regarding a spatial mixed region with reference to Fig. 218 prior to description of the third method.

In Fig. 218, a portion 2321 (hereafter, referred to as a region 2321) of a light signal in the actual world 1 represents a region having the same area as one detecting element (pixel) of the sensor 2.

Upon the sensor 2 detecting the region 2321, the sensor 2 outputs a value (one pixel value) 2322 obtained by the region 2321 being subjected to integration in the temporal and spatial directions (X direction, Y direction, and t direction). Note that the pixel value 2322 is represented as an image in the drawing, but is actually data representing a predetermined value.

The region 2321 in the actual world 1 is clearly classified into a light signal (white region in the drawing) corresponding to the foreground (the above fine line, for example), and a light signal (black region in the drawing) corresponding to the background.

On the other hand, the pixel value 2322 is a value obtained by the light signal in the actual world 1 corresponding to the foreground and the light signal in the actual world 1 corresponding to the background being subjected to integration. In other words, the pixel value 2322 is a value corresponding to a level wherein the light corresponding to the foreground and the light corresponding to the background are spatially mixed.

Thus, in the event that a portion corresponding to one pixel (detecting element of the sensor 2) of the light signals in the actual world 1 is not a portion where the light signals having the same level are spatially uniformly distributed, but a portion where the light signals having a different level such as a foreground and background are distributed, upon the region thereof being detected by the sensor 2, the region becomes one pixel value as if the different light levels were spatially mixed by the integration effects of the sensor 2 (integrated in the spatial direction). Thus, a region made up of pixels in which an image (light signals in the actual world 1) corresponding to a foreground, and an image (light signals in the actual world 1) corresponding to a background are subjected to spatial integration is, here, referred to as a spatial mixed region.

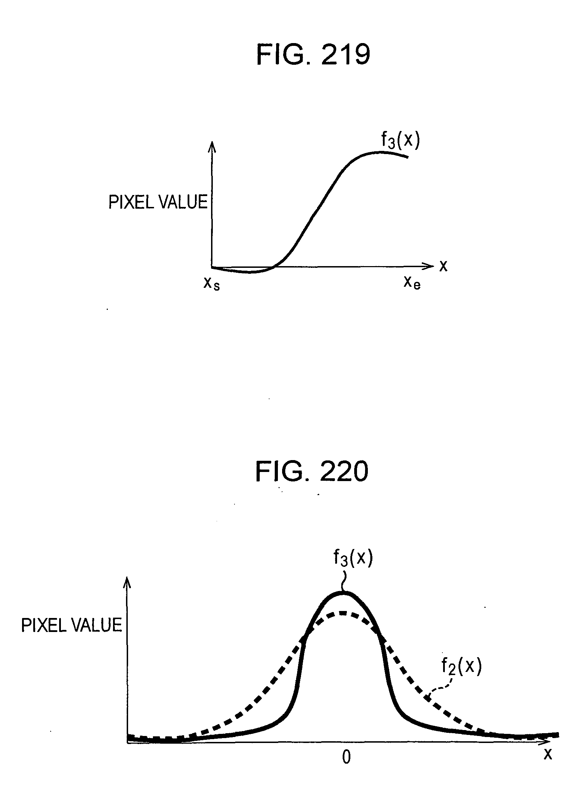

Accordingly, with the third method, the actual world estimating unit 102 (Fig. 205) estimates the X cross-sectional waveform F(x) representing the original region 2321 in the actual world 1 (of the light signals in the actual world 1, the portion 2321 corresponding to one pixel of the sensor 2) by approximating the X cross-sectional waveform F(x) with the approximation function $f_3$ (x) serving as a one-dimensional polynomial such as shown in Fig. 219.

That is to say, Fig. 219 represents an example of the approximation function $f_3$ (x) corresponding to the pixel value 2322 serving as a spatial mixed region (Fig. 218), i.e., the approximation function $f_3$ (x) that approximates the X cross-sectional waveform F(x) corresponding to the solid line within the region 2331 in the actual world 1 (Fig. 218). In Fig. 219, the axis in the horizontal direction in the drawing represents an axis in parallel with the side from the upper left end $x_s$ to lower right end $x_e$ of the pixel corresponding to the pixel value 2322 (Fig. 218), which is taken as the x axis. The axis in the vertical direction in the drawing is taken as an axis representing pixel values.

In Fig. 219, the following Expression (112) is defined on condition that the result obtained by subjecting the approximation function $f_3$ (x) to integration in a range (pixel width) from the $x_s$ to the $x_e$ is generally identical with the pixel values P (x, y) output from the sensor 2 (dependent on a margin of error e alone).

$$P = \int_{x_s}^{x_e} f_3(x)\,dx + e$$
$$= \int_{x_s}^{x_e} (w_0 + w_1 x + w_2 x^2 + \cdots + w_n x^n)\,dx + e$$
$$= w_0(x_e - x_s) + \cdots + w_{n-1}\frac{x_e^n - x_s^n}{n} + w_n\frac{x_e^{n+1} - x_s^{n+1}}{n+1} + e$$

$$\ldots (112)$$

In this case, the features $w_i$ of the approximation function $f_3$ (x) are calculated from the 20 pixel values P (x, y) (however, x is any one integer value of -1 through 2, and y is any one integer value of -2 through 2) of the fine-line-including data region 2302 shown in Fig. 214, so the pixel value P in Expression (112) becomes the pixel values P (x, y).

Also, as with the second method, it is necessary to take continuity in the spatial direction into consideration, and accordingly, each of the start position $x_s$ and end position $x_e$ in the integral range in Expression (112) is dependent upon the shift amount $C_x$ (y). That is to say, each of the start position $x_s$ and end position $x_e$ of the integral range in Expression (112) is represented such as the following Expression (113).

$$x_s = x - C_x\,(y)\,-0.5$$

$$x_e = x - C_x\,(y)\,+0.5 \tag{113}$$

In this case, upon each pixel value of the fine-line-including data region 2302 shown in Fig. 214, i.e., each of the input pixel values P (x, -2), P (x, -1), P (x, 0), P (x, 1), and P (x, 2) (however, x is any one integer value of -1 through 2) shown in Fig. 215 being substituted for the above Expression (112) (the integral range is the above Expression (113)), 20 equations shown in the following Expression (114) are generated.

$$P(-1, -2) = \int_{-1-C_x(-2)-0.5}^{-1-C_x(-2)+0.5} f_3(x)\,dx + e_1,$$

$$P(0, -2) = \int_{0-C_x(-2)-0.5}^{0-C_x(-2)+0.5} f_3(x)\,dx + e_2,$$

$$P(1, -2) = \int_{1-C_x(-2)-0.5}^{1-C_x(-2)+0.5} f_3(x)\,dx + e_3,$$

$$P(2, -2) = \int_{2-C_x(-2)-0.5}^{2-C_x(-2)+0.5} f_3(x)\,dx + e_4,$$

$$P(-1, -1) = \int_{-1-C_x(-1)-0.5}^{-1-C_x(-1)+0.5} f_3(x)\,dx + e_5,$$

$$P(0, -1) = \int_{0-C_x(-1)-0.5}^{0-C_x(-1)+0.5} f_3(x)\,dx + e_6,$$

$$P(1, -1) = \int_{1-C_x(-1)-0.5}^{1-C_x(-1)+0.5} f_3(x)\,dx + e_7,$$

$$P(2, -1) = \int_{2-C_x(-1)-0.5}^{2-C_x(-1)+0.5} f_3(x)\,dx + e_8,$$

$$P(-1, 0) = \int_{-1-0.5}^{-1+0.5} f_3(x)\,dx + e_9,$$

$$P(0, 0) = \int_{0-0.5}^{0+0.5} f_3(x)\,dx + e_{10},$$

$$P(1, 0) = \int_{1-0.5}^{1+0.5} f_3(x)\,dx + e_{11},$$

$$P(2, 0) = \int_{2-0.5}^{2+0.5} f_3(x)\,dx + e_{12},$$

$$P(-1, 1) = \int_{-1-C_x(1)-0.5}^{-1-C_x(1)+0.5} f_3(x)\,dx + e_{13},$$

$$P(0, 1) = \int_{0-C_x(1)-0.5}^{0-C_x(1)+0.5} f_3(x)\,dx + e_{14},$$

$$P(1, 1) = \int_{1-C_x(1)-0.5}^{1-C_x(1)+0.5} f_3(x)\,dx + e_{15},$$

$$P(2, 1) = \int_{2-C_x(1)-0.5}^{2-C_x(1)+0.5} f_3(x)\,dx + e_{16},$$

$$P(-1, 2) = \int_{-1-C_x(2)-0.5}^{-1-C_x(2)+0.5} f_3(x)\,dx + e_{17},$$

$$P(0, 2) = \int_{0-C_x(2)-0.5}^{0-C_x(2)+0.5} f_3(x)\,dx + e_{18},$$

$$P(1, 2) = \int_{1-C_x(2)-0.5}^{1-C_x(2)+0.5} f_3(x)\,dx + e_{19},$$

$$P(2, 2) = \int_{2-C_x(2)-0.5}^{2-C_x(2)+0.5} f_3(x)\,dx + e_{20}$$

$$\dots(114)$$

Expression (114) is made up of 20 equations as with the above Expression (111). Accordingly, with the third method as with the second method, in the event that the number of the features $w_i$ of the approximation function $f_3(x)$ is less than 20, i.e., in the event that the approximation function $f_3(x)$ is a polynomial having the number of dimensions less than 19, for example, the features $w_i$ may be calculated with the least squares method. Note that the specific solution of the least squares method will be described later.

For example, if we say that the number of dimensions of the approximation function $f_3(x)$ is five, the approximation function $f_3(x)$ calculated with the least squares method using Expression (114) (the approximation function $f_3(x)$ generated with the calculated features $w_i$) becomes a curve shown with the solid line in Fig. 220.

Note that in Fig. 220, the vertical axis represents pixel values, and the horizontal axis represents a relative position x from the pixel of interest.

As shown in Fig. 220, in the event that the approximation function $f_3(x)$ (a curve shown with a solid line in the drawing) generated with the third method is compared with the approximation function $f_2(x)$ (a curve shown with a dashed line in the drawing) generated with the second method, a pixel value at x = 0 becomes great, and also the gradient of the curve creates a steep waveform. This is because details increase more than the input pixels, resulting in being unrelated to the resolution of the input pixels. That is to say, we can say that the approximation function $f_3(x)$ approximates the X cross-sectional waveform F(x). Accordingly, though not shown in the drawing, the approximation function $f_3(x)$ becomes a waveform closer to the X cross-sectional waveform F(x) than the approximation function $f_2(x)$.

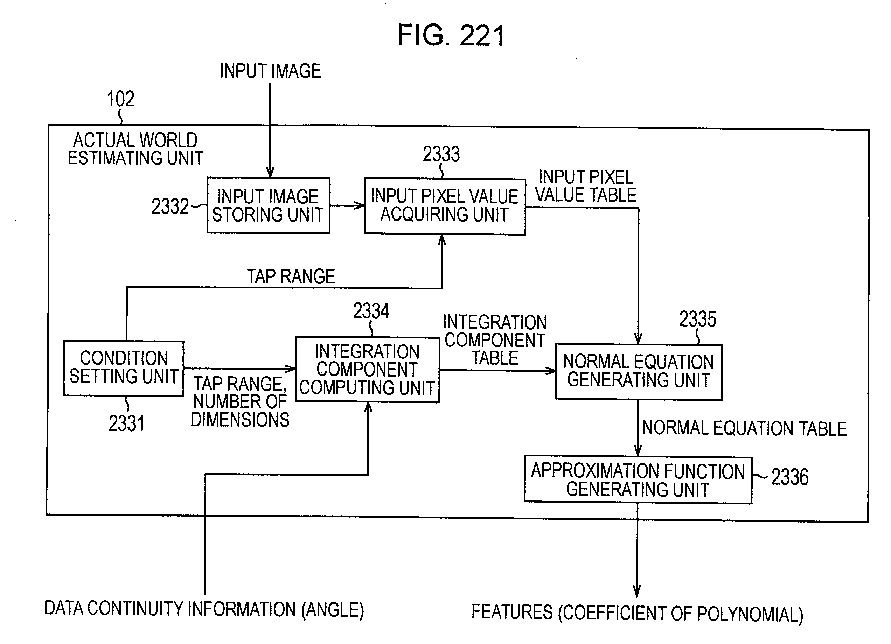

Fig. 221 represents an configuration example of the actual world estimating unit 102 employing such a one-dimensional polynomial approximating method.

In Fig. 221, the actual world estimating unit 102 estimates the X cross-sectional waveform F(x) by calculating the features $w_i$ using the above third method (least squares method), and generating the approximation function f(x) of the above Expression (105) using the calculated features $w_i$.

As shown in Fig. 221, the actual world estimating unit 102 includes a conditions setting unit 2331, input image storage unit 2332, input pixel value acquiring unit 2333, integral component calculation unit 2334, normal equation generating unit 2335, and approximation function generating unit 2336.

The conditions setting unit 2331 sets a pixel range (hereafter, referred to as a tap range) used for estimating the X cross-sectional waveform F(x) corresponding to a pixel of interest, and the number of dimensions n of the approximation function f(x).

The input image storage unit 2332 temporarily stores an input image (pixel values) from the sensor 2.

The input pixel acquiring unit 2333 acquires, of the input images stored in the input image storage unit 2332, an input image region corresponding to the tap range set by the conditions setting unit 2231, and supplies this to the normal equation generating unit 2335 as an input pixel value table. That is to say, the input pixel value table is a table in which the respective pixel values of pixels included in the input image region are described. Note that a specific example of the input pixel value table will be described later.

Now, the actual world estimating unit 102 calculates the features $w_i$ of the approximation function f(x) with the least squares method using the above Expression (112) and Expression (113) here, but the above Expression (112) can be represented such as the following Expression (115).

$$P(x, y)$$
$$= \sum_{i=0}^{n} w_i \times \frac{(x - C_x(y) + 0.5)^{i+1} - (x - C_x(y) - 0.5)^{i+1}}{i+1} + e$$
$$= \sum_{i=0}^{n} w_i \times S_i(x_s, x_e) + e$$

$$\dots(115)$$

In Expression (115), $S_i(x_s, x_e)$ represents the integral components of the i-dimensional term. That is to say, the integral components $S_i(x_s, x_e)$ are shown in the following Expression (116).

$$S_i(x_s, x_e) = \frac{x_e^{i+1} - x_s^{i+1}}{i+1} \tag{116}$$

The integral component calculation unit 2334 calculates the integral components $S_i(x_s, x_e)$.

Specifically, the integral components $S_i(x_s, x_e)$ (however, the value $x_s$ and value $x_e$ are values shown in the above Expression (112)) shown in Expression (116) may be calculated as long as the relative pixel positions (x, y), shift amount $C_x(y)$, and i of the i-dimensional terms are known. Also, of these, the relative pixel positions (x, y) are determined by the pixel of interest and the tap range, the shift amount $C_x(y)$ is determined by the angle θ (by the above Expression (107) and Expression (109)), and the range of i is determined by the number of dimensions n, respectively.

Accordingly, the integral component calculation unit 2334 calculates the integral components $S_i(x_s, x_e)$ based on the tap range and the number of dimensions set by the conditions setting unit 2331, and the angle θ of the data continuity information output from the data continuity detecting unit 101, and supplies the calculated results to the normal equation generating unit 2335 as an integral component table.

The normal equation generating unit 2335 generates the above Expression (112), i.e., a normal equation in the case of obtaining the features $w_i$ of the right side of Expression (115) with the least squares method using the input pixel value table supplied from the input pixel value acquiring unit 2333, and the integral component table supplied from the integral component calculation unit 2334, and supplies this to the approximation function generating unit 2336 as a normal equation table. Note that a specific example of a normal equation will be described later.

The approximation function generating unit 2336 calculates the respective features $w_i$ of the above Expression (115) (i.e., the respective coefficients $w_i$ of the approximation function f(x) serving as a one-dimensional polynomial) by solving a normal equation included in the normal equation table supplied from the normal equation generating unit 2335 using the matrix solution, and outputs these to the image generating unit 103.

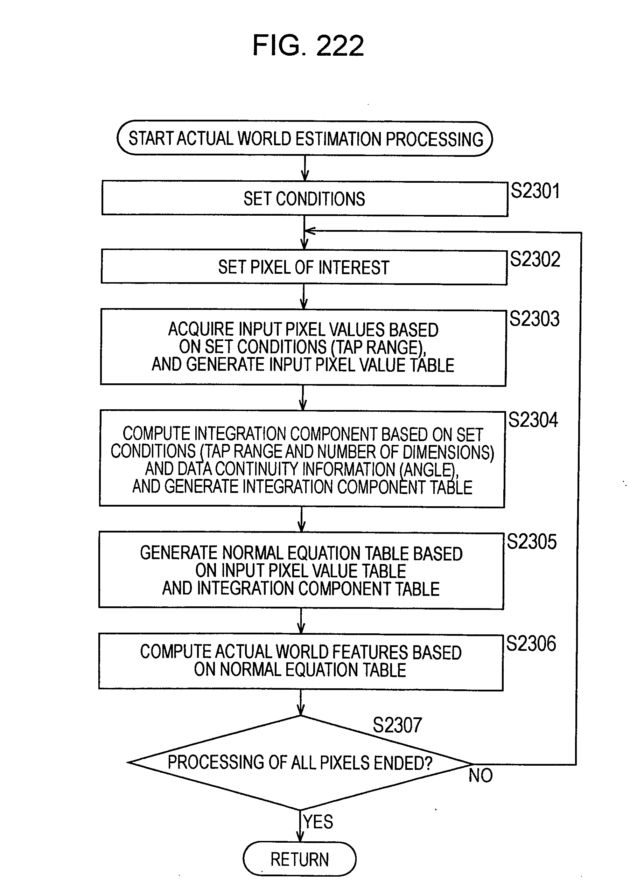

Next, description will be made regarding the actual world estimating processing (processing in step S102 in Fig. 40) of the actual world estimating unit 102 (Fig. 221) which employs the one-dimensional polynomial approximating method with reference to the flowchart in Fig. 222.

For example, let us say that an input image, which is a one-frame input image output from the sensor 2, including the fine-line-including data region 2302 in Fig. 207 described above has been already stored in the input image storage unit 2332. Also, let us say that the data continuity detecting unit 101 has subjected, at the continuity detection processing in step S101 (Fig. 40), the fine-line-including data region 2302 to the processing thereof, and has already output the angle θ as data continuity information.

In this case, the conditions setting unit 2331 sets conditions (a tap range and the number of dimensions) in step S2301 in Fig. 222.

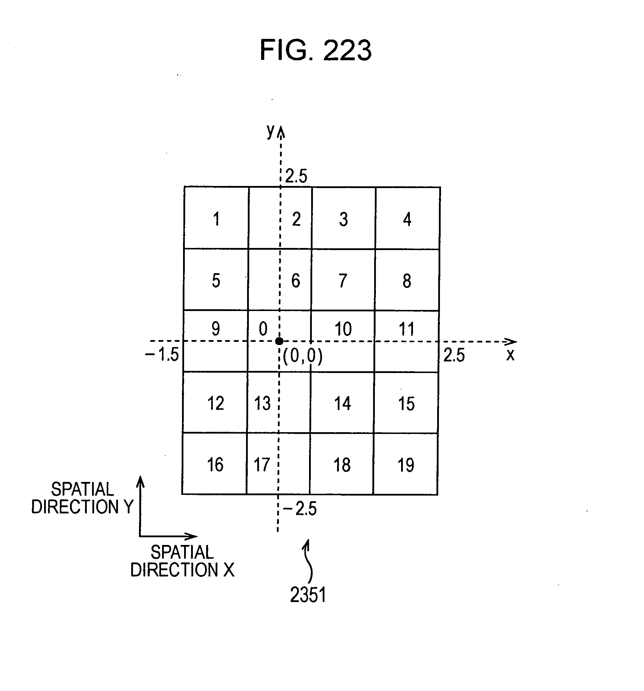

For example, let us say that a tap range 2351 shown in Fig. 223 is set, and 5 dimensions are set as the number of dimensions.

That is to say, Fig. 223 is a diagram for describing an example of a tap range. In Fig. 223, the X direction and Y direction are the X direction and Y direction of the sensor 2 (Fig. 206) respectively. Also, the tap range 2351 represents a pixel group made up of 20 pixels in total (20 squares in the drawing) of 4 pixels in the X direction, and also 5 pixels in the Y direction.

Further, as shown in Fig. 223, let us say that a pixel of interest is set at the second pixel from the left and also the third pixel from the bottom in the drawing, of the tap range 2351. Also, let us say that each pixel is denoted with a number I such as shown in Fig. 223 (I is any integer value of 0 through 19) according to the relative pixel positions (x, y) from the pixel of interest (a coordinate value of a pixel-of-interest coordinates system wherein the center (0, 0) of the pixel of interest is taken as the origin). Now, description will return to Fig. 222, wherein in step S2302, the conditions setting unit 2331 sets a pixel of interest.

In step S2303, the input pixel value acquiring unit 2333 acquires an input pixel value based on the condition (tap range) set by the conditions setting unit 2331, and generates an input pixel value table. That is to say, in this case, the input pixel value acquiring unit 2333 acquires the fine-line-including data region 2302 (Fig. 211), and generates a table made up of 20 input pixel values P (I) as an input pixel value table.

Note that in this case, the relation between the input pixel values P (I) and the above input pixel values P (x, y) is a relation shown in the following Expression (117). However, in Expression (117), the left side represents the input pixel values P (I), and the right side represents the input pixel values P (x, y).

$$P(0) = P(0,0)$$

$$P(1) = P(-1,2)$$

$$P(2) = P(0,2)$$

$$P(3) = P(1,2)$$

$$P(4) = P(2,2)$$

$$P(5) = P(-1,1)$$

$$P(6) = P(0,1)$$

$$P(7) = P(1,1)$$

$$P(8) = P(2,1)$$

$$P(9) = P(-1,0)$$

$$P(10) = P(1,0)$$

$$P(11) = P(2,0)$$

$$P(12) = P(-1,-1)$$

$$P(13) = P(0,-1)$$

$$P(14) = P(1,-1)$$

$$P(15) = P(2,-1)$$

$$P(16) = P(-1,-2)$$

$$P(17) = P(0,-2)$$

$$P(18) = P(1,-2)$$

$$P(19) = P(2,-2)$$

In step S2304, the integral component calculation unit 2334 calculates integral components based on the conditions (a tap range and the number of dimensions) set by the conditions setting unit 2331, and the data continuity information (angle θ) supplied from the data continuity detecting unit 101, and generates an integral component table.

In this case, as described above, the input pixel values are not P (x, y) but P (l), and are acquired as the value of a pixel number l, so the integral component calculation unit 2334 calculates the above integral components $S_i$ ($x_s$, $x_e$) in Expression (116) as a function of l such as the integral components $S_i$ (l) shown in the left side of the following Expression (118).

$$S_i \text{ (l)} = S_i \text{ } (x_s, x_e) \tag{118}$$

Specifically, in this case, the integral components $S_i$ (l) shown in the following Expression (119) are calculated.

$$S_i(0) = S_i(-0.5,0.5)$$

$$S_i(1) = S_i(-1.5 - C_x(2), -0.5 - C_x(2))$$

$$S_i(2) = S_i(-0.5 - C_x(2), 0.5C_x(2))$$

$$S_i(3) = S_i(0.5 - C_x(2), 1.5C_x(2))$$

$$S_i(4) = S_i(1.5 - C_x(2), 2.5C_x(2))$$

$$S_i(5) = S_i(-1.5 - C_x(1), -0.5C_x(1))$$

$$S_i(6) = S_i(-0.5 - C_x(1), 0.5C_x(1))$$

$$S_i(7) = S_i(0.5 - C_x(1), 1.5C_x(1))$$

$$S_i(8) = S_i(1.5 - C_x(1), 2.5C_x(1))$$

$$S_i(9) = S_i(-1.5,-0.5)$$

$$S_i(10) = S_i(0.5,1.5)$$

$$S_i(11) = S_i(1.5,2.5)$$

$$S_i(12) = S_i(-1.5-C_x(-1), -0.5C_x(-1))$$

$$S_i(13) = S_i(-0.5-C_x(-1), 0.5C_x(-1))$$

$$S_i(14) = S_i(0.5-C_x(-1), 1.5C_x(-1))$$

$$S_i(15) = S_i(1.5-C_x(-1), 2.5C_x(-1))$$

$$S_i(16) = S_i(-1.5-C_x(-2), -0.5C_x(-2))$$

$$S_i(17) = S_i(-0.5-C_x(-2), 0.5C_x(-2))$$

$$S_i(18) = S_i(0.5-C_x(-2), 1.5C_x(-2))$$

$$S_i(19) = S_i(1.5-C_x(-2), 2.5C_x(-2))$$

$$...(119)$$

Note that in Expression (119), the left side represents the integral components $S_i$ (l), and the right side represents the integral components $S_i$ $(x_s, x_e)$. That is to say, in this case, i is 0 through 5, and accordingly, the 120 $S_i$ (l) in total of the 20 $S_0$ (l), 20 $S_1$ (l), 20 $S_2$ (l), 20 $S_3$ (l), 20 $S_4$ (l), and 20 $S_5$ (l) are calculated.

More specifically, first the integral component calculation unit 2334 calculates each of the shift amounts $C_x$ (-2), $C_x$ (-1), $C_x$ (1), and $C_x$ (2) using the angle θ supplied from the data continuity detecting unit 101. Next, the integral component calculation unit 2334 calculates each of the 20 integral components $S_i$ $(x_s, x_e)$ shown in the right side of Expression (118) regarding each of i = 0 through 5 using the calculated shift amounts $C_x$ (-2), $C_x$ (-1), $C_x$ (1), and $C_x$ (2). That is to say, the 120 integral components $S_i$ $(x_s, x_e)$ are calculated. Note that with this calculation of the integral components $S_i$ $(x_s, x_e)$, the above Expression (116) is used. Subsequently, the integral component calculation unit 2334 converts each of the calculated 120 integral components $S_i$ $(x_s, x_e)$ into the corresponding integral components $S_i$ (l) in accordance with Expression (119), and generates an integral component table including the converted 120 integral components $S_i$ (l).

Note that the sequence of the processing in step S2303 and the processing in step S2304 is not restricted to the example in Fig. 222, the processing in step S2304 may be executed first, or the processing in step S2303 and the processing in step S2304 may be executed simultaneously.

Next, in step S2305, the normal equation generating unit 2335 generates a normal equation table based on the input pixel value table generated by the input pixel value acquiring unit 2333 at the processing in step S2303, and the integral component table generated by the integral component calculation unit 2334 at the processing in step S2304.

Specifically, in this case, the features $w_i$ of the following Expression (120) corresponding to the above Expression (115) are calculated using the least squares method. A normal equation corresponding to this is represented as the following Expression (121).

$$P(l) = \sum_{i=0}^{n} w_i \times S_i(l) + e$$

$$...(120)$$

$$
\begin{pmatrix}
\sum_{l=0}^{L} S_0(l)S_0(l) & \sum_{l=0}^{L} S_0(l)S_1(l) & \cdots & \sum_{l=0}^{L} S_0(l)S_n(l) \\
\sum_{l=0}^{L} S_1(l)S_0(l) & \sum_{l=0}^{L} S_1(l)S_1(l) & \cdots & \sum_{l=0}^{L} S_1(l)S_n(l) \\
\vdots & \vdots & \ddots & \vdots \\
\sum_{l=0}^{L} S_n(l)S_0(l) & \sum_{l=0}^{L} S_n(l)S_1(l) & \cdots & \sum_{l=0}^{L} S_n(l)S_n(l)
\end{pmatrix}
\begin{pmatrix}
W_0 \\ W_1 \\ \vdots \\ W_n
\end{pmatrix}
=
\begin{pmatrix}
\sum_{l=0}^{L} S_0(l)P(l) \\
\sum_{l=0}^{L} S_1(l)P(l) \\
\vdots \\
\sum_{l=0}^{L} S_n(l)P(l)
\end{pmatrix}
$$

$$\cdots (121)$$

Note that in Expression (121), L represents the maximum value of the pixel number l in the tap range. n represents the number of dimensions of the approximation function f(x) serving as a polynomial. Specifically, in this case, n = 5, and L = 19.

If we define each matrix of the normal equation shown in Expression (121) as the following Expressions (122) through (124), the normal equation is represented as the following Expression (125).

$$
S_{MAT} =
\begin{pmatrix}
\sum_{l=0}^{L} S_0(l)S_0(l) & \sum_{l=0}^{L} S_0(l)S_1(l) & \cdots & \sum_{l=0}^{L} S_0(l)S_n(l) \\
\sum_{l=0}^{L} S_1(l)S_0(l) & \sum_{l=0}^{L} S_1(l)S_1(l) & \cdots & \sum_{l=0}^{L} S_1(l)S_n(l) \\
\vdots & \vdots & \ddots & \vdots \\
\sum_{l=0}^{L} S_n(l)S_0(l) & \sum_{l=0}^{L} S_n(l)S_1(l) & \cdots & \sum_{l=0}^{L} S_n(l)S_n(l)
\end{pmatrix}
$$

$$\cdots (122)$$

$$
W_{MAT} =
\begin{pmatrix}
W_0 \\ W_1 \\ \vdots \\ W_n
\end{pmatrix}
$$

$$\cdots (123)$$

$$P_{MAT} = \begin{pmatrix} \sum_{l=0}^{L} S_0(l)P(l) \\ \sum_{l=0}^{L} S_1(l)P(l) \\ \vdots \\ \sum_{l=0}^{L} S_n(l)P(l) \end{pmatrix}$$

$$\dots (124)$$

$$S_{MAT}W_{MAT} = P_{MAT} \tag{125}$$

As shown in Expression (123), the respective components of the matrix $W_{MAT}$ are the features $w_i$ to be obtained. Accordingly, in Expression (125), if the matrix $S_{MAT}$ of the left side and the matrix $P_{MAT}$ of the right side are determined, the matrix $W_{MAT}$ (i.e., features $w_i$) may by be calculated with the matrix solution.

Specifically, as shown in Expression (122), the respective components of the matrix $S_{MAT}$ may be calculated as long as the above integral components $S_i(l)$ are known. The integral components $S_i(l)$ are included in the integral component table supplied from the integral component calculation unit 2334, so the normal equation generating unit 2335 can calculate each component of the matrix $S_{MAT}$ using the integral component table.

Also, as shown in Expression (124), the respective components of the matrix $P_{MAT}$ may be calculated as long as the integral components $S_i(l)$ and the input pixel values P (1) are known. The integral components $S_i(l)$ is the same as those included in the respective components of the matrix $S_{MAT}$, also the input pixel values P (1) are included in the input pixel value table supplied from the input pixel value acquiring unit 2333, so the normal equation generating unit 2335 can calculate each component of the matrix $P_{MAT}$ using the integral component table and input pixel value table.

Thus, the normal equation generating unit 2335 calculates each component of the matrix $S_{MAT}$ and matrix $P_{MAT}$, and outputs the calculated results (each component of the matrix $S_{MAT}$ and matrix $P_{MAT}$) to the approximation function generating unit 2336 as a normal equation table.

Upon the normal equation table being output from the normal equation generating unit 2335, in step S2306, the approximation function generating unit 2336 calculates the features $w_i$ (i.e., the coefficients $w_i$ of the approximation function f(x) serving as a one-dimensional polynomial) serving as the respective components of the matrix $W_{MAT}$ in the above Expression (125) based on the normal equation table.

Specifically, the normal equation in the above Expression (125) can be transformed as the following Expression (126).

$$W_{MAT} = S_{MAT}^{-1}P_{MAT} \tag{126}$$

In Expression (126), the respective components of the matrix $W_{MAT}$ in the left side are the features $w_i$ to be obtained. The respective components regarding the matrix $S_{MAT}$ and matrix $P_{MAT}$ are included in the normal equation table supplied from the normal equation generating unit 2335. Accordingly, the approximation function generating unit 2336 calculates the matrix $W_{MAT}$ by calculating the matrix in the right side of Expression (126) using the normal equation table, and outputs the calculated results (features $w_i$) to the image generating unit 103.

In step S2307, the approximation function generating unit 2336 determines regarding whether or not the processing of all the pixels has been completed.

In step S2307, in the event that determination is made that the processing of all the pixels has not been completed, the processing returns to step S2303, wherein the subsequent processing is repeatedly performed. That is to say, the pixels that have not become a pixel of interest are sequentially taken as a pixel of interest, and the processing in step S2302 through S2307 is repeatedly performed.

In the event that the processing of all the pixels has been completed (in step S2307, in the event that determination is made that the processing of all the pixels has been completed), the estimating processing of the actual world 1 ends.

Note that the waveform of the approximation function f(x) generated with the coefficients (features) $w_i$ thus calculated becomes a waveform such as the approximation function f3 (x) in Fig. 220 described above.

Thus, with the one-dimensional polynomial approximating method, the features of the approximation function f(x) serving as a one-dimensional polynomial are calculated on assumption that a waveform having the same form as the one-dimensional X cross-sectional waveform F(x) is continuous in the direction of continuity. Accordingly, with the one-dimensional polynomial approximating method, the features of the approximation function f(x) can be calculated with less amount of calculation processing than other function approximating methods.

In other words, with the one-dimensional polynomial approximating method, for example, the multiple detecting elements of the sensor (for example, detecting elements 2-1 of the sensor 2 in Fig. 206) each having time-space integration effects project the light signals in the actual world 1 (for example, an I portion 2301 of the light signal in the actual world 1 in Fig. 207), and the data continuity detecting unit 101 in Fig. 205 (Fig. 3) detects continuity of data (for example, continuity of data represented with $G_f$ in Fig. 214) in image data (for example, image data (input image region) 2302 in Fig. 207) made up of multiple pixels having a pixel value (for example, input pixel values P (x, y) shown in the respective graphs in Fig. 212) projected by the detecting elements 2-1, which drop part of continuity (for example, continuity represented with the gradient $G_F$ in Fig. 214) of the light signal in the actual world 1.

For example, the actual world estimating unit 102 in Fig. 205 (Fig. 3) estimates the light signal function F by approximating the light signal function F representing the light signal in the actual world 1 (specifically, X cross-sectional waveform F(x)) with a predetermined approximation function f(specifically, for example, the approximation function $f_3$ (x) in Fig. 220) on condition that the pixel value (for example, input pixel value P serving as the left side of the above Expression (112)) of a pixel corresponding to a position in the one-dimensional direction (for example, arrow 2311 in Fig. 209, i.e., X direction) of the time-space directions of image data corresponding to continuity of data detected by the data continuity detecting unit 101 is the pixel value (for example, as shown in the right side of Expression (112), the value obtained by the approximation function $f_3$ (x) being integrated in the X direction) acquired by integration effects in the one-dimensional direction.

Speaking in detail, for example, the actual world estimating unit 102 estimates the light signal function F by approximating the light signal function F with the approximation function f on condition that the pixel value of a pixel corresponding to a distance (for example, shift amounts $C_x$ (y) in Fig. 216) along in the one-dimensional direction (for example, X direction) from a line corresponding to continuity of data (for example, a line (dashed line) corresponding to the gradient $G_f$ in Fig. 216) detected by the continuity detecting hand unit 101 is the pixel value (for example, a value obtained by the approximation function $f_3$ (x) being integrated in the X direction such as shown in the right side of Expression (112) with an integral range such as shown in Expression (112)) acquired by integration effects in the one-dimensional direction.

Accordingly, with the one-dimensional polynomial approximating method, the features of the approximation function f(x) can be calculated with less amount of calculation processing than other function approximating methods.

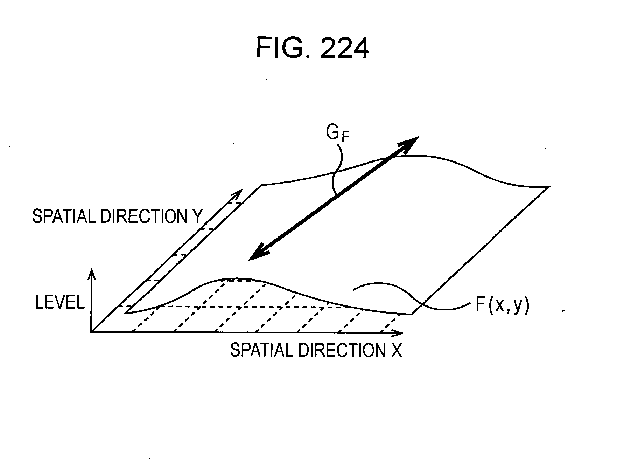

Next, description will be made regarding the second function approximating method with reference to Fig. 224 through Fig. 230.

That is to say, the second function approximating method is a method wherein the light signal in the actual world 1 having continuity in the spatial direction represented with the gradient $G_F$ such as shown in Fig. 224 for example is regarded as a waveform F(x, y) on the X-Y plane (on the plane level in the X direction serving as one direction of the spatial directions, and in the Y direction orthogonal to the X direction), and the waveform F(x, y) is approximated with the approximation function f(x, y) serving as a two-dimensional polynomial, thereby estimating the waveform F(x, y). Accordingly, hereafter, the second function approximating method is referred to as a two-dimensional polynomial approximating method.

Note that in Fig. 224, the horizontal direction represents the X direction serving as one direction of the spatial directions, the upper right direction represents the Y direction serving as the other direction of the spatial directions, and the vertical direction represents the level of light respectively. $G_F$ represents the gradient as continuity in the spatial direction.

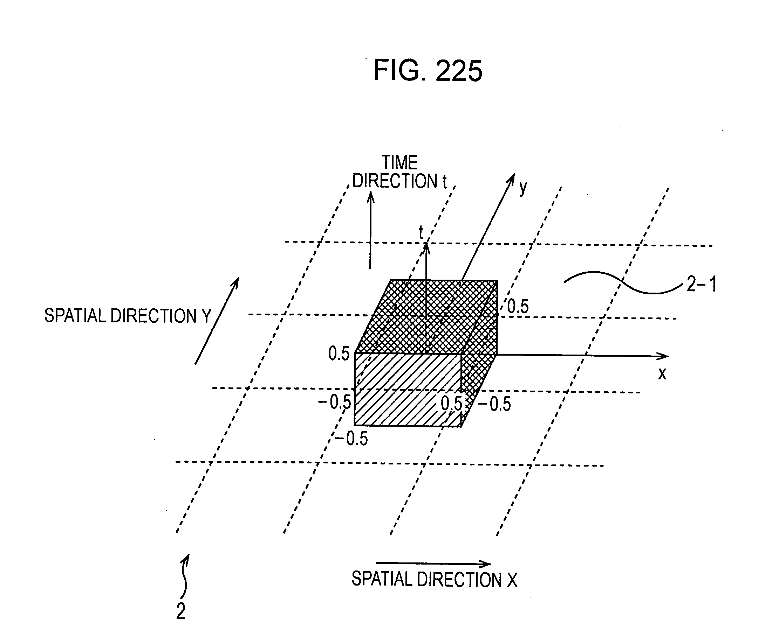

Also, with description of the two-dimensional polynomial approximating method, let us say that the sensor 2 is a CCD made up of the multiple detecting elements 2-1 disposed on the plane thereof, such as shown in Fig. 225.

With the example in Fig. 225, the direction in parallel with a predetermined side of the detecting elements 2-1 is taken as the X direction serving as one direction of the spatial directions, and the direction orthogonal to the X direction is taken as the Y direction serving as the other direction of the spatial directions. The direction orthogonal to the X-Y plane is taken as the t direction serving as the temporal direction.

Also, with the example in Fig. 225, the spatial shape of the respective detecting elements 2-1 of the sensor 2 is taken as a square of which one side is 1 in length. The shutter time (exposure time) of the sensor 2 is taken as 1.

Further, with the example in Fig. 225, the center of one certain detecting element 2-1 of the sensor 2 is taken as the origin (the position in the X direction is x = 0, and the position in the Y direction is y = 0) in the spatial directions (X direction and Y direction), and also the intermediate point-in-time of the exposure time is taken as the origin (the position in the t direction is t = 0) in the temporal direction (t direction).

In this case, the detecting element 2-1 of which the center is in the origin (x = 0, y = 0) in the spatial directions subjects the light signal function F(x, y, t) to integration with a range of -0.5 through 0.5 in the X direction, with a range of -0.5 through 0.5 in the Y direction, and with a range of -0.5 through 0.5 in the t direction, and outputs the integral value as the pixel value P.

That is to say, the pixel value P output from the detecting element 2-1 of which the center is in the origin in the spatial directions is represented with the following Expression (127).

$$P = \int_{-0.5}^{+0.5} \int_{-0.5}^{+0.5} \int_{-0.5}^{+0.5} F(x, y, t)\, dx\, dy\, dt$$

$$\dots(127)$$

Similarly, the other detecting elements 2-1 output the pixel value P shown in Expression (127) by taking the center of the detecting element 2-1 to be processed as the origin in the spatial directions.

Incidentally, as described above, the two-dimensional polynomial approximating method is a method wherein the light signal in the actual world 1 is handled as a waveform F(x, y) such as shown in Fig. 224 for example, and the two-dimensional waveform F(x, y) is approximated with the approximation function f(x, y) serving as a two-dimensional polynomial.

First, description will be made regarding a method representing such the approximation function f(x, y) with a two-dimensional polynomial.

As described above, the light signal in the actual world 1 is represented with the light signal function F(x, y, t) of which variables are the position on the three-dimensional space x, y, and z, and point-in-time t. This light signal function F(x, y, t), i.e., a one-dimensional waveform projected in the X direction at an arbitrary position y in the Y direction is referred to as an X cross-sectional waveform F(x), here.

When paying attention to this X cross-sectional waveform F(x), in the event that the signal in the actual world 1 has continuity in a certain direction in the spatial directions, it can be conceived that a waveform having the same form as the X cross-sectional waveform F(x) continues in the continuity direction. For example, with the example in Fig. 224, a waveform having the same form as the X cross-sectional waveform F(x) continues in the direction of the gradient $G_F$. In other words, it can be said that the waveform F(x, y) is formed by a waveform having the same form as the X cross-sectional waveform F(x) continuing in the direction of the gradient $G_F$.

Accordingly, the approximation function f(x, y) can be represented with a two-dimensional polynomial by considering that the waveform of the approximation function f(x, y) approximating the waveform F(x, y) is formed by a waveform having the same form as the approximation function f(x) approximating the X cross-sectional F(x) continuing.

Description will be made in more detail regarding the representing method of the approximation function f(x, y).

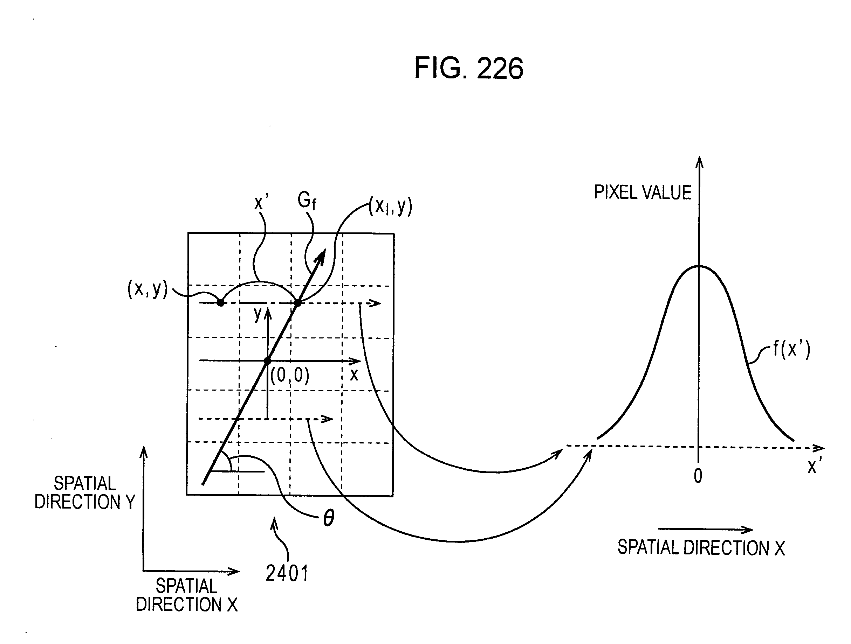

For example, let us say that the light signal in the actual world 1 such as shown in Fig. 224 described above, i.e., a light signal having continuity in the spatial direction represented with the gradient $G_F$ is detected by the sensor 2 (Fig. 225), and output as an input image (pixel value). Further, let us say that as shown in Fig. 226, the data continuity detecting unit 101 (Fig. 3) subjects an input image region 2401 made up of 20 pixels (in the drawing, 20 squares represented with dashed line) in total of 4 pixels in the X direction and also 5 pixels in the Y direction, of this input image, to the processing thereof, and outputs an angle θ (angle θ generated between the direction of data continuity represented with the gradient $G_f$ corresponding to the gradient $G_F$, and the X direction) as one of the data continuity information.

Note that with the input image region 2401, the horizontal direction in the drawing represents the X direction serving as one direction, in the spatial directions, and the vertical direction in the drawing represents the Y direction serving as the other direction of the spatial directions.

Also, in Fig. 226, an (x, y) coordinates system is set such that a pixel in the second pixel from the left, and also the third pixel from the bottom is taken as a pixel of interest, and the center of the pixel of interest is taken as the origin (0, 0). A relative distance (hereafter, referred to as a cross-sectional direction distance) in the X direction as to the straight line (straight line having the gradient $G_f$ representing the direction of data continuity) having an angle θ passing through the origin (0, 0) is described as x'.

Further, in Fig. 226, the graph on the right side is a function wherein an X cross-sectional waveform F(x') is approximated, which represents an approximation function f(x') serving as an n-dimensional (n is an arbitrary integer) polynomial. Of the axes in the graph on the right side, the axis in the horizontal direction in the drawing represents a cross-sectional direction distance, and the axis in the vertical direction in the drawing represents pixel values.

In this case, the approximation function f(x') shown in Fig. 226 is an n-dimensional polynomial, so is represented as the following Expression (128).

$$f(x') = w_0 + w_1 x' + w_2 x' + \cdots + w_n x'^n = \sum_{i=0}^{n} w_i x'^i$$

$$\ldots (128)$$

Also, since the angle $\theta$ is determined, the straight line having angle $\theta$ passing through the origin (0, 0) is uniquely determined, and a position $x_1$ in the X direction of the straight line at an arbitrary position y in the Y direction is represented as the following Expression (129). However, in Expression (129), s represents cot $\theta$.

$$x_1 = s \times y \qquad (129)$$

That is to say, as shown in Fig. 226, a point on the straight line corresponding to continuity of data represented with the gradient $G_f$ is represented with a coordinate value ($x_1$, y).

The cross-sectional direction distance x' is represented as the following Expression (130) using Expression (129).

$$x' = x - x_1 = x - s \times y \qquad (130)$$

Accordingly, the approximation function f(x, y) at an arbitrary position (x, y) within the input image region 2401 is represented as the following Expression (131) using Expression (128) and Expression (130).

$$f(x, y) = \sum_{i=0}^{n} w_i (x - s \times y)^i$$

$$\ldots (131)$$

Note that in Expression (131), $w_i$ represents coefficients of the approximation function f(x, y). Note that the coefficients $w_i$ of the approximation function f including the approximation function f(x, y) can be evaluated as the features of the approximation function f. Accordingly, the coefficients $w_i$ of the approximation function f are also referred to as the features $w_i$ of the approximation function f.

Thus, the approximation function f(x, y) having a two-dimensional waveform can be represented as the polynomial of Expression (131) as long as the angle $\theta$ is known.

Accordingly, if the actual world estimating unit 102 can calculate the features $w_i$ of Expression (131), the actual world estimating unit 102 can estimate the waveform F(x, y) such as shown in Fig. 224.

Consequently, hereafter, description will be made regarding a method for calculating the features $w_i$ of Expression (131).

That is to say, upon the approximation function f(x, y) represented with Expression (131) being subjected to integration with an integral range (integral range in the spatial direction) corresponding to a pixel (the detecting element 2-1 of the sensor 2 (Fig. 225)), the integral value becomes the estimated value regarding the pixel value of the pixel. It is the following Expression (132) that this is represented with an equation. Note that with the two-dimensional polynomial approximating method, the temporal direction t is regarded as a constant value, so Expression (132) is taken as an equation of which variables are the positions x and y in the spatial directions (X direction and Y direction).

$$P(x, y) = \int_{y-0.5}^{y+0.5} \int_{x-0.5}^{x+0.5} \sum_{i=0}^{n} w_i (x - s \times y)^i + e$$

$$\ldots (132)$$

In Expression (132), P (x, y) represents the pixel value of a pixel of which the center position is in a position (x, y) (relative position (x, y) from the pixel of interest) of an input image from the sensor 2. Also, e represents a margin of error.

Thus, with the two-dimensional polynomial approximating method, the relation between the input pixel value P (x, y) and the approximation function f(x, y) serving as a two-dimensional polynomial can be represented with Expression (132), and accordingly, the actual world estimating unit 102 can estimate the two-dimensional function F(x, y) (waveform F(x, y) wherein the light signal in the actual world 1 having continuity in the spatial direction represented with the gradient $G_F$ (Fig. 224) is represented focusing attention on the spatial direction) by calculating the features $w_i$ with, for example, the least squares method or the like using Expression (132) (by generating the approximation function f(x, y) by substituting the calculated features $w_i$ for Expression (130)).

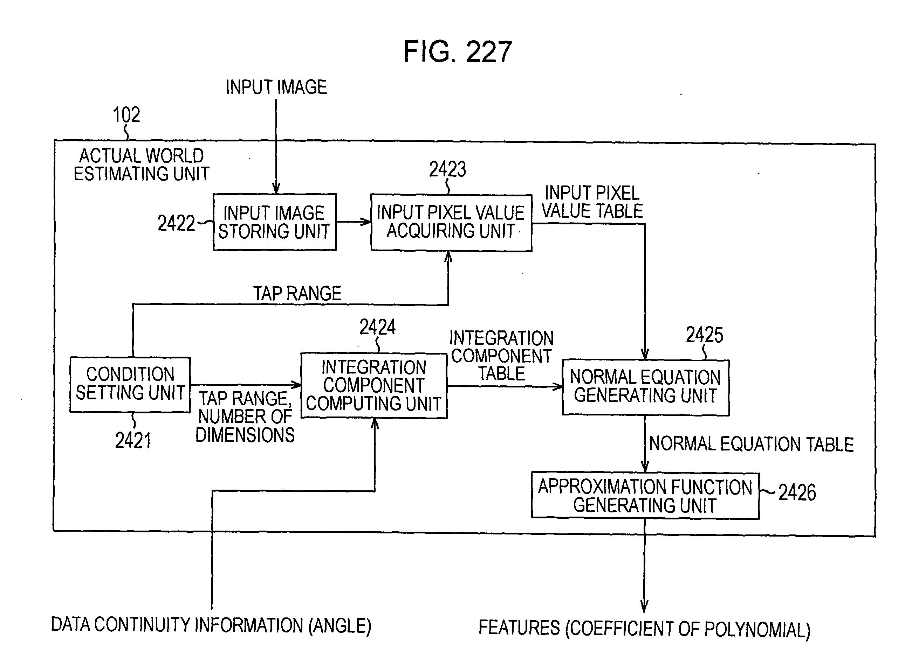

Fig. 227 represents a configuration example of the actual world estimating unit 102 employing such a two-dimensional polynomial approximating method.

As shown in Fig. 227, the actual world estimating unit 102 includes a conditions setting unit 2421, input image storage unit 2422, input pixel value acquiring unit 2423, integral component calculation unit 2424, normal equation generating unit 2425, and approximation function generating unit 2426.

The conditions setting unit 2421 sets a pixel range (tap range) used for estimating the function F(x, y) corresponding to a pixel of interest, and the number of dimensions n of the approximation function f(x, y).

The input image storage unit 2422 temporarily stores an input image (pixel values) from the sensor 2.

The input pixel value acquiring unit 2423 acquires, of the input images stored in the input image storage unit 2422, an input image region corresponding to the tap range set by the conditions setting unit 2421, and supplies this to the normal equation generating unit 2425 as an input pixel value table. That is to say, the input pixel value table is a table in which the respective pixel values of pixels included in the input image region are described. Note that a specific example of the input pixel value table will be described later.

Incidentally, as described above, the actual world estimating unit 102 employing the two-dimensional approximating method calculates the features $w_i$ of the approximation function f(x, y) represented with the above Expression (131) by solving the above Expression (132) using the least squares method.

Expression (132) can be represented as the following Expression (137) by using the following Expression (136) obtained by the following Expressions (133) through (135).

$$\int x^i dx = \frac{x^{i+1}}{i+1}$$

$$\ldots (133)$$

$$\int (x - s \times y)^i dx = \frac{(x - s \times y)^{i+1}}{(i+1)}$$

$$\ldots (134)$$

$$\int (x - s \times y)^i dy = \frac{(x - s \times y)^{i+1}}{s(i+1)}$$

$$\ldots (135)$$

$$\int_{y-0.5}^{y+0.5}\int_{x-0.5}^{x+0.5}(x-s\times y)^i\,dxdy = \int_{y-0.5}^{y+0.5}\left[\frac{(x-s\times y)^{i+1}}{(i+1)}\right]_{x-0.5}^{x+0.5}dy$$

$$= \int_{y-0.5}^{y+0.5}\frac{(x+0.5-s\times y)^{i+1}-(x-0.5-s\times y)^{i+1}}{i+1}\,dy$$

$$= \left[\frac{(x+0.5-s\times y)^{i+2}}{s(i+1)(i+2)}\right]_{y-0.5}^{y+0.5}-\left[\frac{(x-0.5-s\times y)^{i+2}}{s(i+1)(i+2)}\right]_{y-0.5}^{y+0.5}$$

$$= \frac{(x+0.5-s\times y+0.5s)^{i+2}-(x+0.5-s\times y-0.5s)^{i+2}-(x-0.5-s\times y+0.5s)^{i+2}+(x-0.5-s\times y-0.5s)^{i+2}}{s(i+1)(i+2)}$$

$$\cdots(136)$$

$$P(x,y) = \sum_{i=0}^{n}\frac{W_i}{s(i+1)(i+2)}\{(x+0.5-s\times y+0.5s)^{i+2}$$

$$-(x+0.5-s\times y-0.5s)^{i+2}-(x-0.5-s\times y+0.5s)^{i+2}$$

$$+(x-0.5-s\times y-0.5s)^{i+2}\}+e$$

$$= \sum_{i=0}^{n}w_i s_i(x-0.5,\,x+0.5,\,y-0.5,\,y+0.5)+e$$

$$\cdots(137)$$

In Expression (137), $S_i$ (x - 0.5, x + 0.5, y - 0.5, y + 0.5) represents the integral components of i-dimensional terms. That is to say, the integral components $S_i$ (x - 0.5, x + 0.5, y - 0.5, y + 0.5) are as shown in the following Expression (138).

$$S_i(x-0.5,\,x+0.5,\,y-0.5,\,y+0.5) =$$

$$\frac{(x+0.5-s\times y+0.5s)^{i+2}-(x+0.5-s\times y-0.5s)^{i+2}-(x-0.5-s\times y+0.5s)^{i+2}+(x-0.5-s\times y-0.5s)^{i+2}}{s(i+1)(i+2)} \qquad(138)$$

The integral component calculation unit 2424 calculates the integral components $S_i$ (x - 0.5, x + 0.5, y - 0.5, y + 0.5).

Specifically, the integral components $S_i$ (x - 0.5, x + 0.5, y - 0.5, y + 0.5) shown in Expression (138) can be calculated as long as the relative pixel positions (x, y), the variable s and i of i-dimensional terms in the above Expression (131) are known. Of these, the relative pixel positions (x, y) are determined with a pixel of interest, and a tap range, the variable s is cot $\theta$, which is determined with the angle $\theta$, and the range of i is determined with the number of dimensions n respectively.

Accordingly, the integral component calculation unit 2424 calculates the integral components $S_i$ (x - 0.5, x + 0.5, y - 0.5, y + 0.5) based on the tap range and the number of dimensions set by the conditions setting unit 2421, and the angle $\theta$ of the data continuity information output from the data continuity detecting unit 101, and supplies the calculated results to the normal equation generating unit 2425 as an integral component table.

The normal equation generating unit 2425 generates a normal equation in the case of obtaining the above Expression (132), i.e., Expression (137) by the least squares method using the input pixel value table supplied from the input pixel value acquiring unit 2423, and the integral component table supplied from the integral component calculation unit 2424, and outputs this to the approximation function generating unit 2426 as a normal equation table. Note that a specific example of a normal equation will be described later.

The approximation function generating unit 2426 calculates the respective features $w_i$ of the above Expression (132) (i.e., the coefficients $w_i$ of the approximation function f(x, y) serving as a two-dimensional polynomial) by solving the normal equation included in the normal equation table supplied from the normal equation generating unit 2425 using the matrix solution, and output these to the image generating unit 103.

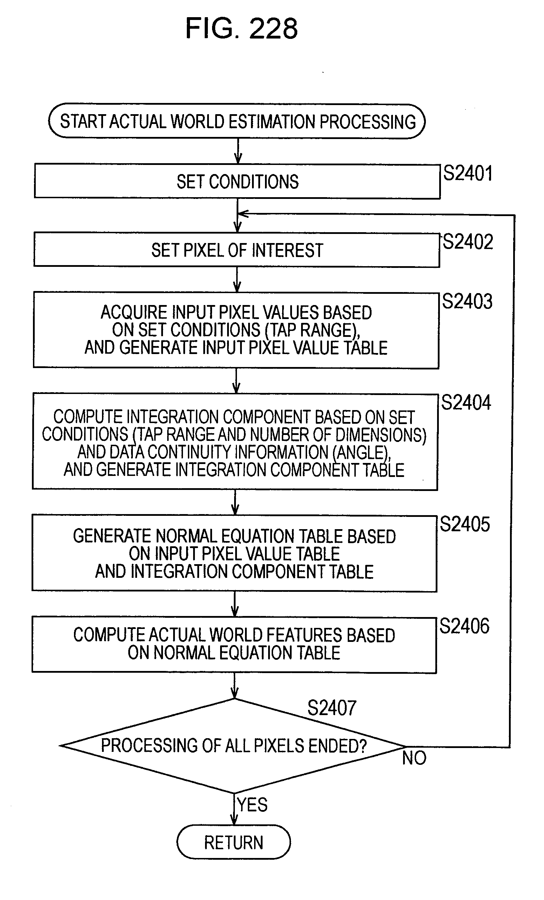

Next, description will be made regarding the actual world estimating processing (processing in step S102 in Fig. 40) to which the two-dimensional polynomial approximating method is applied, with reference to the flowchart in Fig. 228.

For example, let us say that the light signal in the actual world 1 having continuity in the spatial direction represented with the gradient $G_F$ has been detected by the sensor 2 (Fig. 225), and has been stored in the input image storage unit 2422 as an input image corresponding to one frame. Also, let us say that the data continuity detecting unit 101 has subjected the region 2401 shown in Fig. 226 described above of the input image to processing in the continuity detecting processing in step S101 (Fig. 40), and has output the angle θ as data continuity information.

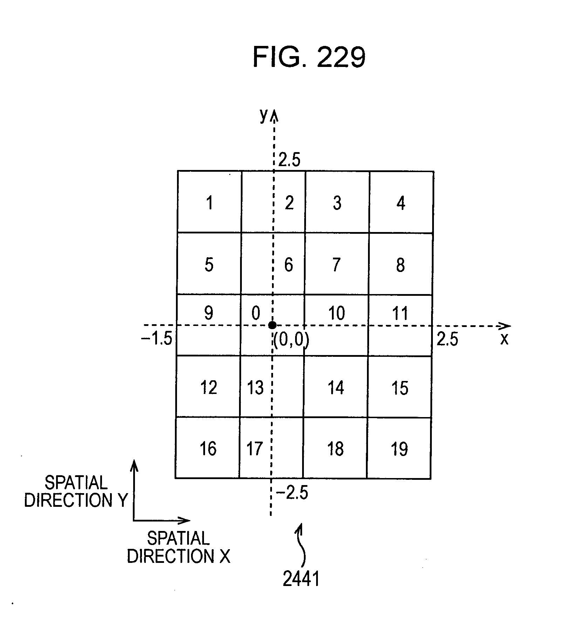

In this case, in step S2401, the conditions setting unit 2421 sets conditions (a tap range and the number of dimensions). For example, let us say that a tap range 2441 shown in Fig. 229 has been set, and also 5 has been set as the number of dimensions.

Fig. 229 is a diagram for describing an example of a tap range. In Fig. 229, the X direction and Y direction represent the X direction and Y direction of the sensor 2 (Fig. 225). Also, the tap range 2441 represents a pixel group made up of 20 pixels (20 squares in the drawing) in total of 4 pixels in the X direction and also 5 pixels in the Y direction.

Further, as shown in Fig. 229, let us say that a pixel of interest has been set to a pixel, which is the second pixel from the left and also the third pixel from the bottom in the drawing, of the tap range 2441. Also, let us say that each pixel is denoted with a number 1 such as shown in Fig. 229 (1 is any integer value of 0 through 19) according to the relative pixel positions (x, y) from the pixel of interest (a coordinate value of a pixel-of-interest coordinates system wherein the center (0, 0) of the pixel of interest is taken as the origin).

Now, description will return to Fig. 228, wherein in step S2402, the conditions setting unit 2421 sets a pixel of interest.

In step S2403, the input pixel value acquiring unit 2423 acquires an input pixel value based on the condition (tap range) set by the conditions setting unit 2421, and generates an input pixel value table. That is to say, in this case, the input pixel value acquiring unit 2423 acquires the input image region 2401 (Fig. 226), generates a table made up of 20 input pixel values P (l) as an input pixel value table.

Note that in this case, the relation between the input pixel values P (l) and the above input pixel values P (x, y) is a relation shown in the following Expression (139). However, in Expression (139), the left side represents the input pixel values P (l), and the right side represents the input pixel values P (x, y).

### Claims

**1.** An image processing device including:

inverse gamma correction means for applying inverse gamma correction to first image data acquired by light signals of the real world being cast upon a plurality of detecting devices each having spatio-temporal integration effects, of which a part of continuity of the light signals of the real world have been lost, and subjected to gamma correction, and outputting said first image data subjected to inverse gamma correction;

image data continuity detecting means for detecting the continuity of image data corresponding to the continuity of said light signals of the real world within said first image data output from said inverse gamma correction means;

real world estimating means for generating a function approximating said light signals by estimating the continuity of said light signals of the real world, based on the continuity of said image data detected by said image data continuity detecting means;

image generating means for generating second image data from said function generated by said real world estimating means; and

presentation system property correcting means for applying correction corresponding to the properties of a presentation system, to said second data generated by said image generating means.

**2.** The image processing device according to Claim 1, said image data continuity detecting means including:

discontinuity detecting means for detecting discontinuity of a plurality of pixel values within said first image data;

peak detecting means for detecting the peak of change of said pixel values from said discontinuity;

monotonous increase/decrease region detecting means for detecting a monotonous increase/decrease region wherein said pixel value is increasing or decreasing monotonously from said peak; and

discontinuity detecting means for detecting a monotonous increase/decrease region regarding which said monotonous increase/decrease region exists at an adjacent position as a continuity region having continuity of said image data.

3. An image processing method including:

an inverse gamma correction step for applying inverse gamma correction to first image data acquired by light signals of the real world being cast upon a plurality of detecting devices each having spatio-temporal integration effects, of which a part of continuity of the light signals of the real world have been lost, and subjected to gamma correction, and outputting said first image signals subjected to inverse gamma correction;

an image data continuity detecting step for detecting the continuity of image data corresponding to the continuity of said light signals of the real world within said first image data output in said inverse gamma correction step;

an actual world estimating step for generating a function approximating said light signals by estimating the continuity of said light signals of the real world, based on the continuity of said image data detected in said image data continuity detecting step;

an image generating step for generating second image data from said function generated in said actual world estimating step; and

a presentation system property correcting step for applying correction corresponding to the properties of a presentation system, to said second image data generated in said image generating step.

4. A computer-readable program including:

an inverse gamma correction step for applying inverse gamma correction to first image data acquired by light signals of the real world being cast upon a plurality of detecting devices each having spatio-temporal integration effects, of which a part of continuity of the light signals of the real world have been lost, and subjected to gamma correction, and outputting said first image data subjected to inverse gamma correction;

an image data continuity detecting step for detecting the continuity of image data corresponding to the continuity of said light signals of the real world within said first image data output in said inverse gamma correction step;

an actual world estimating step for generating a function approximating said light signals by estimating the continuity of said light signals of the real world, based on the continuity of said image data detected in said image data continuity detecting step;

an image generating step for generating second image data from said function generated in said actual world estimating step; and

a presentation system property correcting step for applying correction corresponding to the properties of a presentation system, to said second image data generated in said image generating step.

# FIG. 1

```
┌──────────┐      ┌──────────┐      ┌──────────┐      ┌──────────────┐
│  ACTUAL  │─────▶│  SENSOR  │─────▶│   DATA   │─────▶│    SIGNAL    │
│  WORLD   │      │          │      │          │      │  PROCESSING  │
│          │      │          │      │          │      │    DEVICE    │
└──────────┘      └──────────┘      └──────────┘      └──────────────┘
     1                 2                 3                   4
```

## FIG. 2

EP 1 598 776 A1

## FIG. 3

```
                    ┌──────────────┐
                    │              ↓
                 101│           102│              103
                   ↓              ↓                ↓
            ┌──────────────┐  ┌──────────────┐  ┌──────────────┐
INPUT IMAGE─●→│DATA CONTINUITY│ ●→│ACTUAL WORLD  │→│IMAGE GENERATING│→OUTPUT IMAGE
            │DETECTING UNIT │  │ESTIMATING UNIT│  │     UNIT     │
            └──────────────┘  └──────────────┘  └──────────────┘
                              │                  ↑
                              └──────────────────┘
```

EP 1 598 776 A1

## FIG. 4

| 1 | | 2 | | 3 | | 121 |
|---|---|---|---|---|---|---|
| ACTUAL WORLD | --→ | SENSOR | --→ | DATA | → | SIGNAL PROCESSING DEVICE |

## FIG. 5

| 1 | | 2 | | 3 | | 4 |
|---|---|---|---|---|---|---|
| ACTUAL WORLD | → | SENSOR | → | DATA | → | SIGNAL PROCESSING DEVICE |

# FIG. 6

EP 1 598 776 A1

# FIG. 7

1

141

2

3

6198213047104
1249870134122
3123491742310
3410723510875
0938511512234

CONTINUITY

EXTRACT

APPROXIMATION

MODEL
N VARIABLES

161

PREDICTION

M PIECES
OF DATA

162

EP 1 598 776 A1

# FIG. 8

SPATIAL
DIRECTION Y

SPATIAL
DIRECTION X

# FIG. 9

F(x,y,z,t)

CCD

PIXEL VALUES

# FIG. 10

SPATIAL DIRECTION X

PIXEL VALUES

D      E      F

Y

$F(x)$

$x_1$      $x_2$

L

# FIG. 11

TIME DIRECTION t

PIXEL VALUES

FRAME #n−1    FRAME #n    FRAME #n+1

$t_s$      $t_s$      $t_s$

Y

$F(t)$

$t_1$      $t_2$

146

# FIG. 12

LEVEL

SPATIAL DIRECTION X

SPATIAL DIRECTION Y

FIG. 13

SPATIAL
DIRECTION X

SPATIAL DIRECTION Y

PIXEL VALUES

FIG. 14

SPATIAL DIRECTION X

SPATIAL DIRECTION Y

PIXEL VALUES

FIG. 15

EP 1 598 776 A1

LEVEL

SPATIAL DIRECTION X

SPATIAL DIRECTION Y

# FIG. 16

PIXEL VALUES

SPATIAL DIRECTION X

SPATIAL DIRECTION Y

FIG. 17

SPATIAL DIRECTION X

SPATIAL DIRECTION Y

PIXEL VALUES

FIG. 18

# FIG. 19

ACTUAL WORLD 1

ESTIMATION

DATA ~3

PROJECTION

HIGH-RESOLUTION DATA ~181

EP 1 598 776 A1

FIG. 20

FIG. 21

EP 1 598 776 A1

# FIG. 22

FIG. 23

FIG. 24

FIG. 25

SPATIAL DIRECTION Y

SPATIAL DIRECTION X

3

P

FORMULATE EXPRESSION

1

R

L

SPATIAL DIRECTION Y

SPATIAL DIRECTION X

# FIG. 26

TIME DIRECTION t

$(v_x, v_y, 1.0)$

SPATIAL DIRECTION Y

SPATIAL DIRECTION X

FIG. 27

# FIG. 28

# FIG. 29

## FIG. 30

SPATIAL
DIRECTION X

TIME DIRECTION t

SPATIAL
DIRECTION Y

## FIG. 31

SPATIAL
DIRECTION X

TIME DIRECTION t

SPATIAL
DIRECTION Y

FIG. 32

FIG. 33

# FIG. 34

SPATIAL DIRECTION X

TIME DIRECTION t

SPATIAL DIRECTION Y

FIG. 35

# FIG. 36

# FIG. 37

# FIG. 38

FIG. 39

# FIG. 40

START SIGNAL PROCESSING

DATA CONTINUITY DETECTION PROCESSING — S101

ACTUAL WORLD ESTIMATION PROCESSING — S102

IMAGE GENERATING PROCESSING — S103

END

## FIG. 41

DATA CONTINUITY DETECTING UNIT — 101

INPUT IMAGE → NON-CONTINUITY COMPONENT EXTRACTING UNIT (201)

NON-CONTINUITY COMPONENT INFORMATION → PEAK DETECTING UNIT (202)

INPUT IMAGE →

MONOTONOUS INCREASE / DECREASE DETECTING UNIT (203) → CONTINUOUSNESS DETECTING UNIT (204) → DATA CONTINUITY INFORMATION

EP 1 598 776 A1

## FIG. 42

SPATIAL DIRECTION Y

SPATIAL DIRECTION X

## FIG. 43

A

PIXEL VALUE

PL

SPATIAL DIRECTION

# FIG. 44

# FIG. 45

# FIG. 46

FIG. 47

# FIG. 48

# FIG. 49

FIG. 50

SPATIAL DIRECTION X

PIXEL VALUE

SPATIAL DIRECTION Y

FIG. 51

FIG. 52

FIG. 53

FIG. 54

FIG. 55

# FIG. 56

START CONTINUITY DETECTION PROCESSING

NON-CONTINUITY COMPONENT
EXTRACTING PROCESSING — S201

PEAK DETECTION — S202

DETECTION OF MONOTONOUS
INCREASE / DECREASE — S203

S204
PROCESSING
OF ALL PIXELS ENDED
?
NO

YES

CONTINUITY DETECTION — S205

S206
PROCESSING
OF ALL PIXELS ENDED
?
NO

YES

RETURN

# FIG. 57

## FIG. 58

201

NON-CONTINUITY COMPONENT EXTRACTING UNIT

221      222      223

INPUT IMAGE → BLOCK EXTRACTING UNIT → PLANAR APPROXIMATION UNIT → REPETITION DETERMINING UNIT → NON-CONTINUITY COMPONENT INFORMATION

→ INPUT IMAGE

FIG. 59

SPATIAL DIRECTION X

SPATIAL DIRECTION Y

FIG. 60

FIG. 61

FIG. 62

EP 1 598 776 A1

FIG. 63

193

FIG. 64

FIG. 65

FIG. 66

FIG. 67

# FIG. 68

START NON-CONTINUITY COMPONENT
EXTRACTING PROCESSING

EXTRACT BLOCK S221

PLANAR APPROXIMATION S222

REPETITION DETERMINATION S223

S224
IS ERROR
THRESHOLD VALUE OR GREATER
?
YES

S225
REJECT PIXELS WITH
GREAT ERROR

NO

OUTPUT GRADIENT AND S226
INTERCEPT OF PLANE

S227
PROCESSING
NO OF ALL PIXELS ENDED
?

YES

RETURN

EP 1 598 776 A1

# FIG. 69

START CONTINUITY COMPONENT
EXTRACTING PROCESSING

EXTRACT BLOCK — S241

PLANAR APPROXIMATION — S242

REPETITION DETERMINATION — S243

S244
IS ERROR
THRESHOLD VALUE OR GREATER
?

YES → S245
REJECT PIXELS WITH
GREAT ERROR

NO

OUTPUT DIFFERENCE BETWEEN
APPROXIMATION VALUES REPRESENTED
BY PLANE AND PIXEL VALUES — S246

S247
PROCESSING
OF ALL PIXELS ENDED
?

NO

YES

RETURN

EP 1 598 776 A1

## FIG. 70

START CONTINUITY COMPONENT
EXTRACTING PROCESSING

EXTRACT BLOCK — S281

PLANAR APPROXIMATION — S282

REPETITION DETERMINATION — S283

S284
IS ERROR
THRESHOLD VALUE OR GREATER
?
→ YES

NO

S285
REJECT PIXELS WITH
GREAT ERROR

S286
STORE NUMBER OF
TIMES OF REJECTION

S287
PROCESSING
OF ALL PIXELS ENDED
?
NO

YES

S288
IS NUMBER
OF TIMES OF REJECTION THRESHOLD
VALUE OR GREATER
?
NO

YES

OUTPUT DIFFERENCE BETWEEN
APPROXIMATION VALUES REPRESENTED
BY PLANE AND PIXEL VALUES — S289

S290
PROCESSING
OF ALL PIXELS ENDED
?
NO

YES

RETURN

# FIG. 71

START CONTINUITY COMPONENT
EXTRACTING PROCESSING

EXTRACT BLOCK — S281

PLANAR APPROXIMATION — S282

REPETITION DETERMINATION — S283

S284
IS ERROR
THRESHOLD VALUE OR GREATER
?
— YES

NO

S285
REJECT PIXELS WITH
GREAT ERROR

S286
STORE NUMBER OF
TIMES OF REJECTION

S287
PROCESSING
OF ALL PIXELS ENDED
?
NO / YES

S288
IS NUMBER
OF TIMES OF REJECTION THRESHOLD
VALUE OR GREATER
?
NO / YES

S289
OUTPUT DIFFERENCE BETWEEN
APPROXIMATION VALUES REPRESENTED
BY PLANE AND PIXEL VALUES

S290
PROCESSING
OF ALL PIXELS ENDED
?
NO / YES

RETURN

# FIG. 72

DATA CONTINUITY DETECTING UNIT — 101

INPUT IMAGE

ACTIVITY DETECTING UNIT — 401

DATA SELECTING UNIT — 402

ERROR ESTIMATING UNIT — 403

CONTINUITY DIRECTION DERIVATION UNIT — 404

DATA CONTINUITY INFORMATION

## FIG. 73

SPATIAL DIRECTION Y

SPATIAL DIRECTION X

# FIG. 74

SPATIAL DIRECTION Y

SPATIAL DIRECTION X

# FIG. 75

SPATIAL DIRECTION Y

SPATIAL DIRECTION X

# FIG. 76

EP 1 598 776 A1

# FIG. 77

SPATIAL DIRECTION Y

SPATIAL DIRECTION X

FIG. 78

# FIG. 79

```
( START DATA CONTINUITY DETECTION PROCESSING )
```

SELECT PIXEL OF INTEREST — S401

DETECT ACTIVITY — S402

SELECT A PREDETERMINED NUMBER OF PIXELS CENTERED ON THE PIXEL OF INTEREST FROM A ROW OF PIXELS INCLUDING THE PIXEL OF INTEREST, AS A SET OF PIXELS — S403

SELECT A PREDETERMINED NUMBER OF PIXELS FROM A PREDETERMINED NUMBER OF ROWS OF PIXELS, FOR EACH ANGLE, AS SETS OF PIXELS — S404

CALCULATE CORRELATION BETWEEN SET OF PIXELS CENTERED ON PIXEL OF INTEREST AND SETS OF PIXELS SELECTED FOR EACH ANGLE — S405

DETECT ANGLE OF DATA CONTINUITY FROM POSITION OF PIXEL SET WITH GREATEST CORRELATION — S406

S407
PROCESSING OF ALL PIXELS ENDED ? — NO

YES

( RETURN )

# FIG. 80

FIG. 81

101 — DATA CONTINUITY DETECTING UNIT

401 — ACTIVITY DETECTING UNIT

402 — DATA SELECTING UNIT
- 421-1 PIXEL SELECTING UNIT
- 421-2 PIXEL SELECTING UNIT
- ···
- 421-L PIXEL SELECTING UNIT

403 — ERROR ESTIMATING UNIT
- 422-1 ESTIMATED ERROR CALCULATING UNIT
- 422-2 ESTIMATED ERROR CALCULATING UNIT
- ···
- 422-L ESTIMATED ERROR CALCULATING UNIT

404 — CONTINUITY DIRECTION DERIVATION UNIT
- 413 SMALLEST ERROR ANGLE SELECTING UNIT

INPUT IMAGE

DATA CONTINUITY INFORMATION

FIG. 82

SPATIAL DIRECTION Y

SPATIAL DIRECTION Y

SPATIAL
DIRECTION X

SPATIAL
DIRECTION X

EP 1 598 776 A1

# FIG. 83

# FIG. 84

| RANGE OF CALCULATION | NUMBER OF ROWS | NUMBER OF PIXELS IN EACH ROW | SELECTION RANGE OF PIXELS |
|---|---|---|---|
| RANGE A (45° TO 63.4°) | 5 | 5 | 5 TO 9 |
| RANGE B (63.4° TO 71.6°) | 4 | 7 | 8 TO 11 |
| RANGE C (71.6° TO 76.0°) | 3 | 9 | 9 TO 11 |
| RANGE D (76.0° TO 87.7°) | 2 | 11 | 8 TO 50 |

EP 1 598 776 A1

# FIG. 85

SPATIAL DIRECTION Y

SPATIAL
DIRECTION X

# FIG. 86

# FIG. 87

## FIG. 88

# FIG. 89

SPATIAL DIRECTION Y

SPATIAL
DIRECTION X

# FIG. 90

# FIG. 91

# FIG. 92

# FIG. 93

( START DATA CONTINUITY DETECTION PROCESSING )

SELECT PIXEL OF INTEREST — S421

DETECT ACTIVITY — S422

SELECT, AS A SET OF PIXELS, PIXELS OF A PREDETERMINED NUMBER S423
DETERMINED ACCORDING TO THE ANGLE RANGE,
CENTERED ON THE PIXEL OF INTEREST,
FROM THE ROW OF PIXELS OF THE PIXEL OF INTEREST,
FOR EACH ANGLE RANGE

SELECT, AS SETS OF PIXELS, PIXELS OF A PREDETERMINED S424
NUMBER DETERMINED ACCORDING TO THE ANGLE RANGE,
FROM PIXEL ROWS OF A PREDETERMINED NUMBER DETERMINED
ACCORDING TO THE ANGLE RANGE, FOR EACH ANGLE RANGE

CALCULATE CORRELATION BETWEEN SET S425
OF PIXELS CENTERED ON PIXEL OF INTEREST
AND SETS OF PIXELS SELECTED FOR EACH ANGLE

DETECT ANGLE OF DATA CONTINUITY FROM POSITION S426
OF PIXEL SET WITH GREATEST CORRELATION

S427
PROCESSING
NO —— OF ALL PIXELS ENDED
?

YES

( RETURN )

# FIG. 94

101
DATA CONTINUITY DETECTING UNIT

INPUT IMAGE → DATA SELECTING UNIT (441) → ERROR ESTIMATING UNIT (442) → CONTINUITY DIRECTION DERIVATION UNIT (443) → DATA CONTINUITY INFORMATION

# FIG. 95

DATA CONTINUITY DETECTING UNIT 101

DATA SELECTING UNIT 441

ERROR ESTIMATING UNIT 442

CONTINUITY DIRECTION DERIVATION UNIT 443

461-1 PIXEL SELECTING UNIT

461-2 PIXEL SELECTING UNIT

461-L PIXEL SELECTING UNIT

462-1 ESTIMATED ERROR CALCULATING UNIT

462-2 ESTIMATED ERROR CALCULATING UNIT

462-L ESTIMATED ERROR CALCULATING UNIT

SMALLEST ERROR ANGLE SELECTING UNIT 463

INPUT IMAGE

DATA CONTINUITY INFORMATION

# FIG. 96

# FIG. 97

FIG. 98

| $-2\gamma-2$ | $-2\gamma-1$ | $-2\gamma$ | $-2\gamma+1$ | $-2\gamma+2$ |
|---|---|---|---|---|
| $-\gamma-2$ | $-\gamma-1$ | $-\gamma$ | $-\gamma+1$ | $-\gamma+2$ |
| $-2$ | $-1$ | $0$ | $1$ | $2$ |
| $\gamma-2$ | $\gamma-1$ | $\gamma$ | $\gamma+1$ | $\gamma+2$ |
| $2\gamma-2$ | $2\gamma-1$ | $2\gamma$ | $2\gamma+1$ | $2\gamma+2$ |

SPATIAL DIRECTION Y

SPATIAL DIRECTION X

EP 1 598 776 A1

FIG. 99

# FIG. 100

# FIG. 101

| θ | REFERENCE BLOCKS WITH SMALLEST DISTANCE |
|---|---|
| 0.0 TO 18.4 | A AND A' |
| 18.4 TO 33.7 | B AND B' |
| 33.7 TO 56.3 | C AND C' |
| 56.3 TO 71.6 | D AND D' |
| 71.6 TO 108.4 | E AND E' |
| 108.4 TO 123.7 | F AND F' |
| 123.7 TO 146.3 | G AND G' |
| 146.3 TO 161.6 | H AND H' |
| 161.6 TO 180.0 | A AND A' |

## FIG. 102

# FIG. 103

```
  ( START DATA CONTINUITY DETECTION PROCESSING )
                         │
                         ▼
        ┌────────────────────────────────┐  S441
        │     SELECT PIXEL OF INTEREST    │
        └────────────────────────────────┘
                         │
                         ▼
        ┌────────────────────────────────┐  S442
        │  SELECT BLOCK OF INTEREST CENTERED │
        │        ON PIXEL OF INTEREST     │
        └────────────────────────────────┘
                         │
                         ▼
        ┌────────────────────────────────┐  S443
        │   SELECT REFERENCE BLOCKS FROM  │
        │  THE SURROUNDINGS OF THE PIXEL  │
        │            OF INTEREST          │
        └────────────────────────────────┘
                         │
                         ▼
        ┌────────────────────────────────┐  S444
        │ CALCULATE CORRELATION BETWEEN BLOCK OF │
        │   INTEREST AND REFERENCE BLOCKS │
        └────────────────────────────────┘
                         │
                         ▼
        ┌────────────────────────────────┐  S445
        │   DETECT ANGLE OF DATA CONTINUITY │
        │ FROM THE POSITION OF REFERENCE BLOCKS │
        │   WITH THE GREATEST CORRELATION │
        └────────────────────────────────┘
                         │
                         ▼
                    S446
         NO     ╱ PROCESSING ╲
        ◄──────◄ OF ALL PIXELS ENDED ►
                ╲     ?     ╱
                         │ YES
                         ▼
                    ( RETURN )
```

# FIG. 104

FRAME
#n−1

F    D

H    G    E    C    B

θ

A'    A

G'    H'

FRAME
#n

FRAME
#n+1

SPATIAL DIRECTION Y

SPATIAL DIRECTION X

TIME DIRECTION t

# FIG. 105

101
DATA CONTINUITY DETECTING UNIT

481-1
DATA CONTINUITY DETECTING UNIT

481-2
DATA CONTINUITY DETECTING UNIT

481-3
DATA CONTINUITY DETECTING UNIT

482
DETERMINING UNIT

INPUT IMAGE

DATA CONTINUITY INFORMATION

EP 1 598 776 A1

FIG. 106

101

DATA CONTINUITY DETECTING UNIT

491

492

INPUT IMAGE → | COMPONENT PROCESSING UNIT | → | DATA CONTINUITY DETECTING UNIT | → DATA CONTINUITY INFORMATION

EP 1 598 776 A1

# FIG. 107

101
DATA CONTINUITY DETECTING UNIT

INPUT IMAGE →

501
FRAME MEMORY —PIXELS→

502
PIXEL ACQUIRING UNIT —PIXELS→

503
SCORE DETECTING UNIT —SCORE→

504
REGRESSION LINE COMPUTING UNIT —COMPUTATION RESULT PARAMETERS→

505
ANGLE CALCULATING UNIT → DATA CONTINUITY INFORMATION

FIG. 108

EP 1 598 776 A1

# FIG. 109

(30) (30) (80) (120) (80)

(30) (30) (100) (100) (30)

(30) (80) (120) (80) (30)

(30) (100) (100) (30) (30)

(80) (120) (80) (30) (30)

238

## FIG. 110

FIG. 111

SPATIAL
DIRECTION Y

SPATIAL DIRECTION X

PIXEL VALUE

A

# FIG. 112

SPATIAL DIRECTION Y

A

θ

SPATIAL DIRECTION X

FIG. 113

# FIG. 114

START DATA CONTINUITY DETECTION PROCESSING

SELECT PIXEL OF INTEREST — S501

OBTAIN PIXEL VALUES OF PIXELS CONTAINED IN REGION CENTERED ON PIXEL OF INTEREST — S502

CONVERT PIXEL VALUES INTO SCORES — S503

OBTAIN REGRESSION LINE BASED ON SCORE — S504

CALCULATE ANGLE OF REGRESSION LINE — S505

S506

PROCESSING ENDED FOR ALL PIXELS?

NO

YES

RETURN

# FIG. 115

EP 1 598 776 A1

101

DATA CONTINUITY DETECTING UNIT

601

602

603

604

COMPUTATION
RESULT
PARAMETERS

605

INPUT
IMAGE → | FRAME
MEMORY | PIXELS→ | PIXEL
ACQUIRING
UNIT | PIXELS→ | SCORE
DETECTING
UNIT | SCORE→ | REGRESSION
LINE
COMPUTING
UNIT | → | REGION
CALCULATING
UNIT | → DATA CONTINUITY
INFORMATION

FIG. 116

# FIG. 117

PIXEL VALUE

STANDARD
DEVIATION

SPATIAL DIRECTION X

FIG. 118

# FIG. 119

START DATA CONTINUITY DETECTION PROCESSING

SELECT PIXEL OF INTEREST — S601

OBTAIN PIXEL VALUES OF PIXELS CONTAINED IN REGION CENTERED ON PIXEL OF INTEREST — S602

CONVERT PIXEL VALUES INTO SCORES — S603

OBTAIN REGRESSION LINE BASED ON SCORE — S604

CALCULATE STANDARD DEVIATION AS TO REGRESSION LINE — S605

DETERMINE REGION HAVING DATA CONTINUITY FROM STANDARD DEVIATION — S606

S607
PROCESSING ENDED FOR ALL PIXELS?

NO

YES

RETURN

# FIG. 120

START DATA CONTINUITY DETECTION PROCESSING

SELECT PIXEL OF INTEREST — S621

OBTAIN PIXEL VALUES OF PIXELS CONTAINED IN REGION CENTERED ON PIXEL OF INTEREST — S622

CONVERT PIXEL VALUES INTO SCORES — S623

OBTAIN REGRESSION LINE BASED ON SCORE — S624

CALCULATE CORRELATION COEFFICIENT REGARDING REGRESSION LINE — S625

DETERMINE REGION HAVING DATA CONTINUITY FROM CORRELATION COEFFICIENT — S626

S627
PROCESSING ENDED FOR ALL PIXELS?

NO

YES

RETURN

# FIG. 121

DATA CONTINUITY DETECTING UNIT 101

INPUT IMAGE → DATA SELECTING UNIT 701 → DATA SUPPLEMENTING UNIT 702 → CONTINUITY DIRECTION DERIVATION UNIT 703 → ANGLE

EP 1 598 776 A1

FIG. 122

EP 1 598 776 A1

# FIG. 123

EP 1 598 776 A1

# FIG. 124

101 — DATA CONTINUITY DETECTING UNIT

701 DATA SELECTING UNIT

702 DATA SUPPLEMENTING UNIT

703 CONTINUITY DIRECTION DERIVATION UNIT

INPUT IMAGE

711 HORIZONTAL/ VERTICAL DETERMINING UNIT

712 DATA ACQUIRING UNIT

721 DIFFERENCE SUPPLEMENTING UNIT

722 MaxMin ACQUIRING UNIT

723 DIFFERENCE SUPPLEMENTING UNIT

731 CONTINUITY DIRECTION COMPUTING UNIT

ANGLE

EP 1 598 776 A1

## FIG. 125

SPATIAL
DIRECTION Y

SPATIAL
DIRECTION X

## FIG. 126

SPATIAL
DIRECTION Y

SPATIAL
DIRECTION X

## FIG. 127A

SPATIAL
DIRECTION Y

SPATIAL DIRECTION X

## FIG. 127B

d_CCD

## FIG. 127C

BACKGROUND LEVEL

FINE LINE LEVEL

BACKGROUND LEVEL

# FIG. 128A

FINE LINE

BACKGROUND

BACKGROUND

SPATIAL
DIRECTION Y

SPATIAL
DIRECTION X

# FIG. 128B

AREA

0

LEVEL

BACKGROUND
LEVEL

FINE LINE
LEVEL

# FIG. 129A

d_CCD

SPATIAL
DIRECTION Y

SPATIAL
DIRECTION X

# FIG. 129B

NUMBER OF PIXELS

BACKGROUND REGION

SPATIALLY MIXED REGION

0

PIXEL VALUE

PIXEL VALUES
CORRESPONDING TO
THE BACKGROUND LEVEL

PIXEL VALUES
CORRESPONDING TO
THE FINE LINE LEVEL

# FIG. 130A

# FIG. 130B

# FIG. 131A

FINE LINE

BACKGROUND

BACKGROUND

SPATIAL
DIRECTION Y

SPATIAL
DIRECTION X

# FIG. 131B

LEVEL

FINE LINE LEVEL

BACKGROUND LEVEL

0

SPATIAL DIRECTION Y

# FIG. 132A

d_CCD

SPATIAL
DIRECTION Y

X0  X1  X2

SPATIAL
DIRECTION X

# FIG. 132B

PIXEL VALUE

X0    X1    X2

0        SPATIAL DIRECTION Y

# FIG. 133A

# FIG. 133B

# FIG. 134

SPATIAL
DIRECTION Y

SPATIAL
DIRECTION X

# FIG. 135

# FIG. 136A

d_CCD

pix1
pix2
pix3
pix4
pix5
pix6
pix7

SPATIAL
DIRECTION Y

X0  X1  X2

SPATIAL
DIRECTION X

# FIG. 136B

pix1
pix2
Max

pix3

PIXEL OF INTEREST
pix4

pix5

pix6

Min
pix7

## FIG. 137A

SPATIAL
DIRECTION Y

X0 X1 X2

SPATIAL
DIRECTION X

d_CCD

## FIG. 137B

S

X0    X1    X2

PIXEL VALUE

SPATIAL DIRECTION Y

## FIG. 137C

S

$\theta$

1

# FIG. 138

# FIG. 139

B1

pix11
pix12
pix13
pix14
pix15
pix16
pix17

d_CCD

B2

SPATIAL
DIRECTION Y

X0  X1  X2

SPATIAL
DIRECTION X

# FIG. 140

FIG. 141

## FIG. 142A

SPATIAL
DIRECTION Y

SPATIAL
DIRECTION X

## FIG. 142B

d_CCD

## FIG. 142C

FIRST EDGE LEVEL

SECOND EDGE LEVEL

# FIG. 143A

SPATIAL DIRECTION Y

X0  X1  X2

SPATIAL DIRECTION X

# FIG. 143B

PIXEL VALUE

X0

$P_0$

$P_E$

X1

X2

$P_1$

$P_S$

$P_2$

SPATIAL DIRECTION Y

# FIG. 144A

# FIG. 144B

# FIG. 145A

# FIG. 145B

# FIG. 146

SPATIAL
DIRECTION Y

SPATIAL
DIRECTION X

# FIG. 147A

SPATIAL
DIRECTION Y

X0    X1    X2

SPATIAL
DIRECTION X

S

$\theta$

1

# FIG. 147B

S

PIXEL VALUE

X0

X1

X2

SPATIAL DIRECTION Y

# FIG. 147C

S

$\theta$

1

# FIG. 148

# FIG. 149

```
    ( START DATA CONTINUITY DETECTION PROCESSING )
                        │
                        ▼
        ┌──────────────────────────────┐
        │     INITIALIZE COUNTER T      │ S701
        └──────────────────────────────┘
                        │
                        ▼
        ┌──────────────────────────────┐
        │   DATA EXTRACTING PROCESSING  │ S702
        └──────────────────────────────┘
                        │
                        ▼
    ┌──────────────────────────────────────┐
    │ SUPPLEMENTING PROCESSING TO NORMAL    │ S703
    │ EQUATION                              │
    └──────────────────────────────────────┘
                        │
                        ▼
                                          S704
              ◇ HAS PROCESSING
    NO ◄──────  ENDED FOR ALL PIXELS OF
              EXTRACTED BLOCK ?
                        │ YES
                        ▼
        ┌──────────────────────────────┐
        │  OUTPUT SUPPLEMENTING RESULTS │ S705
        └──────────────────────────────┘
                        │
                        ▼
        ┌──────────────────────────────┐
        │ DERIVE ANGLE BY LEAST-SQUARE  │ S706
        │           METHOD              │
        └──────────────────────────────┘
                        │
                        ▼
    S708
    ┌────────────────────┐
    │ INCREMENT T AND     │
    │ RESET DATA          │
    │ ACQUIRING UNIT      │
    └────────────────────┘
              ▲                          S707
              │          ◇ PROCESSING
    NO ◄──────  PERFORMED FOR ALL PIXELS ?
                        │ YES
                        ▼
                                          S709
              ◇ IS THERE A NEXT
                INPUT IMAGE?  ──── YES
                        │ NO
                        ▼
                   ( RETURN )
```

# FIG. 150

```
     ┌─────────────────────────────────────┐
     │  START DATA EXTRACTING PROCESSING   │
     └─────────────────────────────────────┘
                      │
                      ▼
     ┌─────────────────────────────────────────┐  S711
     │      DETERMINE WHETHER TO USE BLOCK      │
     │ IN VERTICAL DIRECTION OR HORIZONTAL DIRECTION │
     └─────────────────────────────────────────┘
                      │
                      ▼
     ┌─────────────────────────────────────────┐  S712
     │        EXTRACT PIXELS OF EXTRACTED        │
     │        BLOCK BASED ON DETERMINATION       │
     └─────────────────────────────────────────┘
                      │
                      ▼
     ┌─────────────────────────────────────────┐  S713
     │        EXTRACT DYNAMIC RANGE BLOCK        │
     └─────────────────────────────────────────┘
                      │
                      ▼
              ┌───────────────┐
              │    RETURN     │
              └───────────────┘
```

# FIG. 151

```
        ┌──────────────────────────────────┐
        │      START PROCESSING FOR        │
        │ SUPPLEMENTING TO NORMAL EQUATION │
        └──────────────────────────────────┘
                        │
                        ▼
    ┌──────────────────────────────────────────┐
    │ OBTAIN DIFFERENCE, SQUARE, AND SUPPLEMENT │  S721
    └──────────────────────────────────────────┘
                        │
                        ▼
    ┌──────────────────────────────────────────┐
    │            OBTAIN MaxMin DATA            │  S722
    └──────────────────────────────────────────┘
                        │
                        ▼
    ┌──────────────────────────────────────────┐
    │           OBTAIN DYNAMIC RANGE           │  S723
    └──────────────────────────────────────────┘
                        │
                        ▼
    ┌──────────────────────────────────────────┐
    │       MULTIPLY DIFFERENCE AND DYNAMIC    │  S724
    │          RANGE, AND SUPPLEMENT           │
    └──────────────────────────────────────────┘
                        │
                        ▼
                 ┌────────────┐
                 │   RETURN   │
                 └────────────┘
```

# FIG. 152A

# FIG. 152B

SPATIAL DIRECTION Y

## FIG. 153A

## FIG. 153B

SPATIAL DIRECTION Y

# FIG. 154

DATA CONTINUITY DETECTING UNIT  101

701 DATA SELECTING UNIT

711 HORIZONTAL/VERTICAL DETERMINING UNIT

712 DATA ACQUIRING UNIT

INPUT IMAGE

751 DATA SUPPLEMENTING UNIT

752 MaxMin ACQUIRING UNIT

753 SUPPLEMENTING UNIT

754 DIFFERENCE COMPUTING UNIT

755 SUPPLEMENTING UNIT

761 CONTINUITY DIRECTION DERIVATION UNIT

762 MIXTURE RATIO COMPUTING UNIT

MIXTURE RATIO

EP 1 598 776 A1

# FIG. 155A

FINE LINE

BACKGROUND

BACKGROUND

SPATIAL
DIRECTION Y

SPATIAL DIRECTION X

# FIG. 155B

d_CCD

SPATIAL
DIRECTION Y

X0 X1 X2

SPATIAL DIRECTION X

# FIG. 155C

$\alpha$

BACKGROUND B
=Min

$P_s$

FINE LINE L
=Max

283

# FIG. 156

START DATA CONTINUITY DETECTION PROCESSING

INITIALIZE COUNTER u — S731

DATA EXTRACTING PROCESSING — S732

SUPPLEMENTING PROCESSING TO NORMAL EQUATION — S733

S734
HAS PROCESSING ENDED FOR ALL PIXELS OF EXTRACTED BLOCK ?
NO
YES

OUTPUT SUPPLEMENTING RESULTS — S735

DERIVE MIXTURE RATIO BY LEAST-SQUARE METHOD — S736

INCREMENT u — S738

S737
PROCESSING PERFORMED FOR ALL PIXELS ?
NO
YES

S739
IS THERE A NEXT INPUT IMAGE?
YES
NO

RETURN

# FIG. 157

START PROCESSING FOR SUPPLEMENTING
TO NORMAL EQUATION

OBTAIN MaxMin DATA — S751

OBTAIN DYNAMIC RANGE — S752

SQUARE AND SUPPLEMENT — S753

OBTAIN DIFFERENCE BETWEEN PIXEL
VALUE AND MAXIMUM VALUE — S754

MULTIPLY DIFFERENCE AND DYNAMIC
RANGE, AND SUPPLEMENT — S755

RETURN

# FIG. 158A

# FIG. 158B

SPATIAL DIRECTION Y

# FIG. 159A

# FIG. 159B

# FIG. 160

# FIG. 161A

DIRECTION OF MOVEMENT OF OBJECT
(TRACK OF OBJECT)

BACKGROUND

BACKGROUND

SPATIAL
DIRECTION Y

FRAME
DIRECTION T

# FIG. 161B

LEVEL

LEVEL OF OBJECT

BACKGROUND LEVEL

0

SPATIAL DIRECTION Y

# FIG. 162A

d_CCD

SPATIAL
DIRECTION Y

T0  T1  T2

FRAME
DIRECTION T

# FIG. 162B

PIXEL VALUE

T0    T1    T2

0

SPATIAL DIRECTION Y

# FIG. 163A

DIRECTION OF MOVEMENT OF OBJECT
(TRACK OF OBJECT)

BACKGROUND

BACKGROUND

SPATIAL
DIRECTION Y

FRAME DIRECTION T

# FIG. 163B

d_CCD

SPATIAL
DIRECTION Y     T    T0    T2    1

FRAME DIRECTION T

# FIG. 163C

$\beta$

BACKGROUND B
=Min

$P_t$

OBJECT O
=Max

# FIG. 164

SPATIAL
DIRECTION Y

FRAME
DIRECTION T

FIG. 165

# FIG. 166

```
( START DATA CONTINUITY DETECTING PROCESSING )
                    │
                    ▼
          ┌──────────────────────┐  S801
          │    ACQUIRE IMAGE      │
          └──────────────────────┘
                    │
                    ▼
          ┌──────────────────────┐  S802
          │    DETECT ANGLE       │
          └──────────────────────┘
                    │
                    ▼
          ┌──────────────────────────┐  S803
          │ ESTIMATE ACTUAL WORLD FUNCTION │
          └──────────────────────────┘
                    │
                    ▼
          ┌──────────────────────┐  S804
          │     REINTEGRATE       │
          └──────────────────────┘
                    │
                    ▼
          ┌──────────────────────────┐  S805
          │ OBTAIN ERROR AS TO INPUT PIXEL │
          └──────────────────────────┘
                    │
                    ▼
          < IS ABSOLUTE VALUE OF ERROR        S806
            THRESHOLD VALUE OR LOWER? >   NO
                    │ YES
                    ▼
          ┌──────────────────┐  S807
          │   RECOGNIZE AS    │
          │ PROCESSING REGION │
          └──────────────────┘

                              ┌──────────────────┐  S808
                              │ RECOGNIZE AS NON- │
                              │ PROCESSING REGION │
                              └──────────────────┘
                    │
                    ▼
   NO < HAVE ALL PIXELS BEEN PROCESSED? >  S809
                    │ YES
                    ▼
          ┌──────────────────────────┐  S810
          │ OUTPUT REGION INFORMATION │
          └──────────────────────────┘
                    │
                    ▼
                ( END )
```

# FIG. 167

# FIG. 168

FIG. 169

# FIG. 170

START DATA CONTINUITY DETECTING PROCESSING

ACQUIRE IMAGE — S821

DETECT MOVEMENT — S822

ESTIMATE ACTUAL WORLD FUNCTION — S823

REINTEGRATE — S824

OBTAIN ERROR AS TO INPUT PIXEL — S825

IS ABSOLUTE VALUE OF ERROR THRESHOLD VALUE OR LOWER? — S826

NO

YES

RECOGNIZE AS PROCESSING REGION — S827

RECOGNIZE AS NON-PROCESSING REGION — S828

HAVE ALL PIXELS BEEN PROCESSED? — S829

NO

YES

OUTPUT REGION INFORMATION — S830

END

# FIG. 171

FRAME DIRECTION T

SPATIAL DIRECTION Y

$S_t$

$y_m + B$

$y_m$

$T_m$

$T_m + A$

# FIG. 172

# FIG. 173

EP 1 598 776 A1

```
                              102
                    ┌──────────────────────────────────────┐
                    │   ACTUAL WORLD ESTIMATING UNIT        │
                    │                                       │
                    │     2101              2102            │
                    │  ┌──────────┐     ┌──────────┐        │
DATA CONTINUITY     │  │LINE WIDTH│     │SIGNAL LEVEL│      │    ACTUAL WORLD
INFORMATION ───────→│  │ESTIMATING│ ───→│ ESTIMATING │──────→ ESTIMATION INFORMATION
                    │  │   UNIT   │     │   UNIT   │        │
                    │  └──────────┘     └──────────┘        │
                    │                        ↑              │
                    └────────────────────────┼──────────────┘
                                             │
               INPUT IMAGE ──────────────────┘
```

# FIG. 174

SPATIAL DIRECTION Y

SPATIAL DIRECTION X

# FIG. 175

SPATIAL DIRECTION Y

SPATIAL DIRECTION X

# FIG. 176

# FIG. 177

START ACTUAL WORLD ESTIMATION PROCESSING

DETECT WIDTH OF FINE LINE — S2101

ESTIMATE LEVEL OF SIGNAL OF FINE LINE — S2102

RETURN

# FIG. 178

102

ACTUAL WORLD ESTIMATING UNIT

DATA CONTINUITY INFORMATION →

2121
BOUNDARY DETECTING UNIT

2101
LINE WIDTH DETECTING UNIT

2102
SIGNAL LEVEL ESTIMATING UNIT

→ ACTUAL WORLD ESTIMATION INFORMATION

INPUT IMAGE

EP 1 598 776 A1

# FIG. 179

```
┌─────────────────────────────────────────────────────┐ ～2121
│                 BOUNDARY DETECTING UNIT               │
│          2131                    2132                 │
│     ┌──────────────┐        ┌──────────────┐          │
DATA CONTINUITY →  │  ALLOCATION RATIO  │ → │  REGRESSION LINE │ → REGION
INFORMATION    │ CALCULATING UNIT │      │ CALCULATING UNIT │   INFORMATION
INPUT IMAGE →  └──────────────────┘      └──────────────────┘
└─────────────────────────────────────────────────────┘
```

# FIG. 180

|  | 2141-2 |  |
|---|---|---|
| 2 | 58 | 60 |
| 1 | 65 | 66 |
| −9 | 66 | 57 |
| 2 | 68 | 70 |
| 3 | 63 | 66 |
| 9 | 52 | 61 |
| 19 | 44 | 63 |
| 20 | 24 | 44 |
| 32 | 22 | 54 |
| 47 | 13 | 60 |
| 61 | −3 | 58 |
| 75 | 3 | 78 |
| 79 | −1 | 78 |
| 81 | −1 | 80 |
| 77 | −8 | 69 |

2141-1

# FIG. 181

|  |  |
|---|---|
| 3.5 | 96.5 |
| 1.5 | 98.5 |
| 0.0 | 100.0 |
| 3.0 | 97.0 |
| 4.5 | 95.5 |
| 15.0 | 85.0 |
| 30.0 | 70.0 |
| 45.5 | 54.5 |
| 59.5 | 40.5 |
| 78.5 | 21.5 |
| 100.0 | 0.0 |
| 96.0 | 4.0 |
| 100.0 | 0.0 |
| 100.0 | 0.0 |
| 91.5 | 0.0 |

2151-1 (left column)   2151-2 (right column)

# FIG. 182

| | | |
|---|---|---|
| −3 | 32 | 22 |
| 2 | 47 | 13 |
| −2 | 61 | −3 |
| 0 | 75 | 3 |
| 3 | 79 | −1 |
| 2 | 81 | −1 |
| 7 | 77 | −8 |

2141-2 (upper right), 2141-1 (lower left), P

## FIG. 183

FIG. 184

# FIG. 185

START ACTUAL WORLD ESTIMATION PROCESSING

BOUNDARY DETECTION PROCESSING — S2121

DETECT WIDTH OF FINE LINE — S2122

ESTIMATE LEVEL OF SIGNAL OF FINE LINE — S2123

RETURN

# FIG. 186

START BOUNDARY DETECTION PROCESSING

CALCULATE ALLOCATION RATIO — S2131

CALCULATE REGRESSION LINE INDICATING BOUNDARY — S2132

RETURN

EP 1 598 776 A1

# FIG. 187

102

ACTUAL WORLD ESTIMATING UNIT

INPUT IMAGE ⟶

DATA CONTINUITY
INFORMATION
(ANGLE, REGION) ⟶

2201
REFERENCE PIXEL
EXTRACTING UNIT

2202
APPROXIMATION
FUNCTION
ESTIMATING UNIT

2203
DIFFERENTIATION
PROCESSING UNIT

⟶ DERIVATIVE VALUE

EP 1 598 776 A1

# FIG. 188

START ACTUAL WORLD ESTIMATION PROCESSING

OBTAIN IMAGE, ANGLE, AND REGION — S2201

SET PIXEL OF INTEREST FROM UNPROCESSED PIXELS — S2202

IS PIXEL OF INTEREST A PROCESSING REGION ? — S2203

NO

YES

DETERMINE WHETHER HORIZONTAL DIRECTION OR VERTICAL DIRECTION — S2204

EXTRACT REFERENCE PIXEL — S2205

OBTAIN APPROXIMATION FUNCTION f(x) — S2206

OBTAIN AMOUNT OF SHIFT — S2207

SET DERIVATIVE VALUE TO 0 — S2210

OBTAIN DERIVATIVE VALUE AT SHIFTED POINT — S2208

NECESSARY NUMBER OF DERIVATIVE VALUES OBTAINED ? — S2209

NO

YES

ALL PIXELS PROCESSED? — S2211

NO

YES

RETURN

# FIG. 189

GRADIENT WITH CONTINUITY
GRADIENT: $G_f$

| | | |
|---|---|---|
| $(-1,2)$ | $(0,2)$ | $(1,2)$ |
| $(-1,1)$ | $(0,1)$ | $(1,1)$ |
| $(-1,0)$ | $(0,0)$ | $(1,0)$ |
| $(-1,-1)$ | $(0,-1)$ | $(1,-1)$ |
| $(-1,-2)$ | $(0,-2)$ | $(1,-2)$ |

PIXEL OF INTEREST

SPATIAL
DIRECTION Y

SPATIAL
DIRECTION X

# FIG. 190

GRADIENT WITH CONTINUITY
GRADIENT: $G_f$

SPATIAL
DIRECTION Y

P01

Cx(0.25)

Pa

P02

Pin

0.25

Yin

0.25

P04

Pb

P03

Cx(−0.25)

Xin

SPATIAL DIRECTION X

# FIG. 191

GRADIENT: f(xin−Cx(0.25))'

GRADIENT: f(xin)'

GRADIENT: f(xin−Cx(−0.25))'

PIXEL VALUE

Pin

f(x)

X

Xin

Cx(0.25)    Cx(−0.25)

# FIG. 192

EP 1 598 776 A1

102

ACTUAL WORLD ESTIMATING UNIT

INPUT IMAGE

DATA CONTINUITY INFORMATION
(ANGLE, REGION)

2211

REFERENCE PIXEL
EXTRACTING UNIT

2212

GRADIENT
ESTIMATING UNIT

GRADIENT

# FIG. 193

```
┌──────────────────────────────────────────────┐
│ START ACTUAL WORLD ESTIMATION PROCESSING       │
└──────────────────────────────────────────────┘
                      │
                      ▼
        ┌──────────────────────────────┐
        │ OBTAIN IMAGE, ANGLE, AND REGION │  S2221
        └──────────────────────────────┘
                      │
                      ▼
        ┌──────────────────────────────┐
        │ SET PIXEL OF INTEREST FROM    │  S2222
        │ UNPROCESSED PIXELS            │
        └──────────────────────────────┘
                      │
                      ▼                 S2223
              ╱─────────────────╲
      NO     ╱   IS PIXEL OF      ╲
   ◄────────   INTEREST A PROCESSING REGION
             ╲        ?          ╱
              ╲─────────────────╱
                      │ YES
                      ▼
        ┌──────────────────────────────┐
        │ DETERMINE WHETHER HORIZONTAL  │  S2224
        │ DIRECTION OR VERTICAL DIRECTION │
        └──────────────────────────────┘
                      │
                      ▼
        ┌──────────────────────────────┐
        │ EXTRACT REFERENCE PIXEL       │  S2225
        └──────────────────────────────┘
                      │
                      ▼
        ┌──────────────────────────────┐
        │ OBTAIN AMOUNT OF SHIFT        │  S2226
        └──────────────────────────────┘
   S2228              │
 ┌──────────┐         ▼
 │ SET      │  ┌──────────────────────────────┐
 │ GRADIENT │  │ OBTAIN GRADIENT               │  S2227
 │ TO 0     │  └──────────────────────────────┘
 └──────────┘         │
                      ▼                 S2229
              ╱─────────────────╲
      NO     ╱                   ╲
   ◄────────   ALL PIXELS PROCESSED?
             ╲                   ╱
              ╲─────────────────╱
                      │ YES
                      ▼
               ┌──────────┐
               │ RETURN   │
               └──────────┘
```

## FIG. 194

RANGE OF PIXEL

PIXEL OF INTEREST

$f(x-Cx(2))$

$f(x-Cx(1))$

GRADIENT: $G_f$

$f(x)$

$f(x-Cx(-1))$

$f(x-Cx(-2))$

(0,2)

(0,1)

(0,0)

(0,-1)

(0,-2)

SPATIAL
DIRECTION Y

SPATIAL
DIRECTION X

Xin

$-Cx(-1)$  $-Cx(-2)$

FIG. 195

EP 1 598 776 A1

# FIG. 196

102

ACTUAL WORLD ESTIMATING UNIT

INPUT IMAGE

DATA CONTINUITY
INFORMATION
(ANGLE, REGION)

2231
REFERENCE PIXEL
EXTRACTING UNIT

2232
APPROXIMATION
FUNCTION
ESTIMATING UNIT

2233
DIFFERENTIATION
PROCESSING UNIT

DERIVATIVE VALUE

# FIG. 197

```
        ( START ACTUAL WORLD ESTIMATION PROCESSING )
                              │
                              ▼
        ┌─────────────────────────────────────────┐
        │      OBTAIN IMAGE, ANGLE, AND REGION     │  S2241
        └─────────────────────────────────────────┘
                              │
                              ▼
        ┌─────────────────────────────────────────┐
        │       SET PIXEL OF INTEREST FROM         │  S2242
        │            UNPROCESSED PIXELS            │
        └─────────────────────────────────────────┘
                              │
                              ▼        S2243
              ╱─────────────────────────────╲
        NO   ╱         IS PIXEL OF           ╲
     ◄───────   INTEREST A PROCESSING REGION
             ╲              ?                ╱
              ╲─────────────────────────────╱
                              │ YES
                              ▼
        ┌─────────────────────────────────────────┐
        │   DETERMINE WHETHER FRAME DIRECTION      │  S2244
        │           OR SPATIAL DIRECTION           │
        └─────────────────────────────────────────┘
                              │
                              ▼
        ┌─────────────────────────────────────────┐
        │         EXTRACT REFERENCE PIXEL          │  S2245
        └─────────────────────────────────────────┘
                              │
                              ▼
        ┌─────────────────────────────────────────┐
        │      OBTAIN APPROXIMATION FUNCTION f(t)  │  S2246
        └─────────────────────────────────────────┘
                              │
                              ▼
        ┌─────────────────────────────────────────┐
        │          OBTAIN AMOUNT OF SHIFT          │  S2247
        └─────────────────────────────────────────┘
   S2250                      │
 ┌────────────┐               ▼
 │SET GRADIENT│  ┌─────────────────────────────────────┐
 │   TO 0     │  │ OBTAIN DERIVATIVE VALUE AT SHIFTED POINT │  S2248
 └────────────┘  └─────────────────────────────────────┘
                              │
                              ▼        S2249
              ╱─────────────────────────────╲
             ╱          NECESSARY            ╲   NO
      NUMBER OF DERIVATIVE VALUES OBTAINED    ─────►
             ╲              ?                ╱
              ╲─────────────────────────────╱
                              │ YES
                              ▼        S2251
              ╱─────────────────────────────╲
        NO   ╱                               ╲
     ◄───────       ALL PIXELS PROCESSED?
             ╲                               ╱
              ╲─────────────────────────────╱
                              │ YES
                              ▼
                        ( RETURN )
```

# FIG. 198

MOVEMENT DIRECTION: $V_f$

| (−1,2) | (0,2) | (1,2) |
| (−1,1) | (0,1) | (1,1) |
| (−1,0) | (0,0) | (1,0) |
| (−1,−1) | (0,−1) | (1,−1) |
| (−1,−2) | (0,−2) | (1,−2) |

PIXEL OF INTEREST

SPATIAL DIRECTION Y

FRAME DIRECTION T

# FIG. 199

# FIG. 200

GRADIENT:f(Tin−Ct(0.25))'

GRADIENT:f(Tin)'

GRADIENT:f(Tin−Ct(−0.25))'

PIXEL VALUE

Pin

f(t)

FRAME DIRECTION T

Tin

Ct(0.25)    Ct(−0.25)

# FIG. 201

EP 1 598 776 A1

102

ACTUAL WORLD ESTIMATING UNIT

INPUT IMAGE

DATA CONTINUITY INFORMATION
(MOVEMENT, REGION)

2251

REFERENCE PIXEL
EXTRACTING UNIT

2252

GRADIENT
ESTIMATING UNIT

GRADIENT

# FIG. 202

```
START ACTUAL WORLD ESTIMATION PROCESSING

OBTAIN IMAGE, ANGLE, AND REGION                    S2261

SET PIXEL OF INTEREST FROM                         S2262
UNPROCESSED PIXELS

                    IS PIXEL OF              S2263
    NO    INTEREST A PROCESSING REGION
                         ?
                        YES

DETERMINE WHETHER FRAME DIRECTION                  S2264
        OR SPATIAL DIRECTION

EXTRACT REFERENCE PIXEL                             S2265

OBTAIN AMOUNT OF SHIFT                              S2266

S2268
SET GRADIENT
   TO 0           OBTAIN GRADIENT                   S2267

                                          S2269
    NO         ALL PIXELS PROCESSED?
                        YES

                      RETURN
```

# FIG. 203

RANGE OF PIXEL

(0,2) - - - - - ->

(0,1) - - - - - ->

PIXEL OF INTEREST

(0,0) - - - - - ->

(0,-1) - - - - - ->

(0,-2) - - - - - ->

GRADIENT: $V_f$

$f(t-Ct(2))$

$f(t-Ct(1))$

$f(t)$

$f(t-Ct(-1))$

$f(t-Ct(-2))$

SPATIAL
DIRECTION Y

FRAME
DIRECTION T.

Tin

$-Ct(-1)$     $-Ct(-2)$

EP 1 598 776 A1

# FIG. 204

# FIG. 205

# FIG. 206

EP 1 598 776 A1

FIG. 207

SENSOR 2

ACTUAL WORLD 1

SPATIAL DIRECTION Y

SPATIAL DIRECTION X 2301

SPATIAL DIRECTION Y

SPATIAL DIRECTION X 2302

EP 1 598 776 A1

# FIG. 208

SENSOR ~ 2

1

ACTUAL WORLD

SPATIAL DIRECTION Y

SPATIAL DIRECTION X

2303

SPATIAL DIRECTION Y

SPATIAL DIRECTION X

2304

# FIG. 209

2311

SPATIAL
DIRECTION Y

SPATIAL
DIRECTION X

2301

# FIG. 210

ACTUAL WORLD (1) → SENSOR (2) → INPUT IMAGE → DATA CONTINUITY DETECTING UNIT (101)

DATA CONTINUITY INFORMATION

ACTUAL WORLD ESTIMATING UNIT (~102)

APPROXIMATION

X CROSS-SECTION WAVEFORM

F(x)

APPROXIMATION FUNCTION (MODEL)

$f_2(x)$

EP 1 598 776 A1

# FIG. 211

SPATIAL DIRECTION X

SPATIAL DIRECTION Y

2302

# FIG. 212

# FIG. 213

PIXEL VALUE

$f_1(x)$

−1　　　　0　　　　1　　　　2

X

FIG. 214

EP 1 598 776 A1

# FIG. 215

# FIG. 216

EP 1 598 776 A1

# FIG. 217

# FIG. 218

# FIG. 219

PIXEL VALUE

$f_3(x)$

$x_s$      $x_e$    x

# FIG. 220

PIXEL VALUE

$f_3(x)$

$f_2(x)$

0    x

EP 1 598 776 A1

## FIG. 221

INPUT IMAGE

102

ACTUAL WORLD
ESTIMATING UNIT

2332 — INPUT IMAGE
STORING UNIT

2333

INPUT PIXEL VALUE
ACQUIRING UNIT

INPUT PIXEL
VALUE TABLE

TAP RANGE

CONDITION
SETTING UNIT

TAP RANGE,
NUMBER OF
DIMENSIONS

2331

2334

INTEGRATION
COMPONENT
COMPUTING UNIT

INTEGRATION
COMPONENT
TABLE

2335

NORMAL EQUATION
GENERATING UNIT

NORMAL EQUATION TABLE

APPROXIMATION FUNCTION
GENERATING UNIT — 2336

DATA CONTINUITY INFORMATION (ANGLE)

FEATURES (COEFFICIENT OF POLYNOMIAL)

# FIG. 222

```
( START ACTUAL WORLD ESTIMATION PROCESSING )
                    │
                    ▼
┌─────────────────────────────────────────┐  S2301
│              SET CONDITIONS              │
└─────────────────────────────────────────┘
                    │
                    ▼
┌─────────────────────────────────────────┐  S2302
│            SET PIXEL OF INTEREST         │
└─────────────────────────────────────────┘
                    │
                    ▼
┌─────────────────────────────────────────┐  S2303
│       ACQUIRE INPUT PIXEL VALUES BASED   │
│        ON SET CONDITIONS (TAP RANGE),    │
│      AND GENERATE INPUT PIXEL VALUE TABLE│
└─────────────────────────────────────────┘
                    │
                    ▼
┌─────────────────────────────────────────┐  S2304
│  COMPUTE INTEGRATION COMPONENT BASED ON SET │
│ CONDITIONS (TAP RANGE AND NUMBER OF DIMENSIONS) │
│    AND DATA CONTINUITY INFORMATION (ANGLE), │
│   AND GENERATE INTEGRATION COMPONENT TABLE │
└─────────────────────────────────────────┘
                    │
                    ▼
┌─────────────────────────────────────────┐  S2305
│     GENERATE NORMAL EQUATION TABLE BASED │
│          ON INPUT PIXEL VALUE TABLE      │
│        AND INTEGRATION COMPONENT TABLE   │
└─────────────────────────────────────────┘
                    │
                    ▼
┌─────────────────────────────────────────┐  S2306
│     COMPUTE ACTUAL WORLD FEATURES BASED  │
│          ON NORMAL EQUATION TABLE        │
└─────────────────────────────────────────┘
                    │
                    ▼
              S2307
          ◇ PROCESSING OF ALL PIXELS ENDED? ◇── NO ──┐
                    │                                 │
                   YES                                │
                    │                                 │
                    ▼                                 │
              ( RETURN )
```

# FIG. 223

# FIG. 224

SPATIAL DIRECTION Y

LEVEL

$G_F$

$F(x,y)$

SPATIAL DIRECTION X

# FIG. 225

FIG. 226

# FIG. 227

INPUT IMAGE

102
ACTUAL WORLD ESTIMATING UNIT

2422 — INPUT IMAGE STORING UNIT

2423
INPUT PIXEL VALUE ACQUIRING UNIT

INPUT PIXEL VALUE TABLE

TAP RANGE

2421
CONDITION SETTING UNIT

TAP RANGE, NUMBER OF DIMENSIONS

2424
INTEGRATION COMPONENT COMPUTING UNIT

INTEGRATION COMPONENT TABLE

2425
NORMAL EQUATION GENERATING UNIT

NORMAL EQUATION TABLE

APPROXIMATION FUNCTION GENERATING UNIT — 2426

DATA CONTINUITY INFORMATION (ANGLE)

FEATURES (COEFFICIENT OF POLYNOMIAL)

EP 1 598 776 A1

# FIG. 228

```
( START ACTUAL WORLD ESTIMATION PROCESSING )
                    │
                    ▼
        ┌─────────────────────────┐
        │      SET CONDITIONS      │  S2401
        └─────────────────────────┘
                    │
                    ▼◄──────────────────────┐
        ┌─────────────────────────┐         │
        │   SET PIXEL OF INTEREST  │  S2402  │
        └─────────────────────────┘         │
                    │                        │
                    ▼                        │
        ┌─────────────────────────┐         │
        │  ACQUIRE INPUT PIXEL     │  S2403  │
        │  VALUES BASED ON SET     │         │
        │  CONDITIONS (TAP RANGE), │         │
        │  AND GENERATE INPUT      │         │
        │  PIXEL VALUE TABLE       │         │
        └─────────────────────────┘         │
                    │                        │
                    ▼                        │
        ┌─────────────────────────┐         │
        │ COMPUTE INTEGRATION      │  S2404  │
        │ COMPONENT BASED ON SET   │         │
        │ CONDITIONS (TAP RANGE    │         │
        │ AND NUMBER OF DIMENSIONS)│         │
        │ AND DATA CONTINUITY      │         │
        │ INFORMATION (ANGLE),     │         │
        │ AND GENERATE INTEGRATION │         │
        │ COMPONENT TABLE          │         │
        └─────────────────────────┘         │
                    │                        │
                    ▼                        │
        ┌─────────────────────────┐         │
        │ GENERATE NORMAL EQUATION │  S2405  │
        │ TABLE BASED ON INPUT     │         │
        │ PIXEL VALUE TABLE        │         │
        │ AND INTEGRATION          │         │
        │ COMPONENT TABLE          │         │
        └─────────────────────────┘         │
                    │                        │
                    ▼                        │
        ┌─────────────────────────┐         │
        │ COMPUTE ACTUAL WORLD     │  S2406  │
        │ FEATURES BASED ON        │         │
        │ NORMAL EQUATION TABLE    │         │
        └─────────────────────────┘         │
                    │                        │
                    ▼        S2407           │
                  ╱─────────────────╲        │
                 ╱ PROCESSING OF ALL ╲──NO───┘
                 ╲ PIXELS ENDED?     ╱
                  ╲─────────────────╱
                    │ YES
                    ▼
               ( RETURN )
```

# FIG. 229

## FIG. 230

SPATIAL DIRECTION X

TIME DIRECTION t

$V_F$

$\theta$

EP 1 598 776 A1

## FIG. 231

# FIG. 232

SPATIAL DIRECTION Y

$G_F$

LEVEL

$F(x,y,t)$

SPATIAL DIRECTION X

# FIG. 233

# FIG. 234

INPUT IMAGE

102

ACTUAL WORLD
ESTIMATING UNIT

2523

INPUT PIXEL
VALUE TABLE

2522 — INPUT IMAGE
STORING UNIT

INPUT PIXEL VALUE
ACQUIRING UNIT

TAP RANGE

2524

INTEGRATION
COMPONENT
TABLE

2525

CONDITION
SETTING UNIT

TAP RANGE,
NUMBER OF
DIMENSIONS

INTEGRATION
COMPONENT
COMPUTING UNIT

NORMAL EQUATION
GENERATING UNIT

2521

NORMAL EQUATION TABLE

APPROXIMATION FUNCTION
GENERATING UNIT

~2526

DATA CONTINUITY INFORMATION (ANGLE OR MOVEMENT)

FEATURES (COEFFICIENT OF POLYNOMIAL)

EP 1 598 776 A1

# FIG. 235

```
( START ACTUAL WORLD ESTIMATION PROCESSING )
                        │
                        ▼
┌─────────────────────────────────────────┐  S2501
│              SET CONDITIONS              │
└─────────────────────────────────────────┘
                        │
                        ▼
┌─────────────────────────────────────────┐  S2502
│            SET PIXEL OF INTEREST         │
└─────────────────────────────────────────┘
                        │
                        ▼
┌─────────────────────────────────────────┐  S2503
│      ACQUIRE INPUT PIXEL VALUES BASED    │
│        ON SET CONDITIONS (TAP RANGE),    │
│    AND GENERATE INPUT PIXEL VALUE TABLE  │
└─────────────────────────────────────────┘
                        │
                        ▼
┌─────────────────────────────────────────┐  S2504
│  COMPUTE INTEGRATION COMPONENT BASED ON SET │
│ CONDITIONS (TAP RANGE AND NUMBER OF DIMENSIONS) │
│    AND DATA CONTINUITY INFORMATION (ANGLE), │
│  AND GENERATE INTEGRATION COMPONENT TABLE │
└─────────────────────────────────────────┘
                        │
                        ▼
┌─────────────────────────────────────────┐  S2505
│     GENERATE NORMAL EQUATION TABLE BASED │
│          ON INPUT PIXEL VALUE TABLE      │
│        AND INTEGRATION COMPONENT TABLE   │
└─────────────────────────────────────────┘
                        │
                        ▼
┌─────────────────────────────────────────┐  S2506
│      COMPUTE ACTUAL WORLD FEATURES BASED │
│          ON NORMAL EQUATION TABLE        │
└─────────────────────────────────────────┘
                        │
                        ▼
                      S2507
              ◇ PROCESSING OF ALL PIXELS ENDED? ◇──NO
                        │ YES
                        ▼
                   ( RETURN )
```

**FIG. 236**

# FIG. 237

# FIG. 238

## FIG. 239

ACTUAL WORLD ESTIMATION INFORMATION
(FEATURES OF APPROXIMATION FUNCTION f(x))

103

IMAGE GENERATING UNIT

3122 — FEATURES STORING UNIT

FEATURES TABLE

3123

CONDITION SETTING UNIT

3121

NUMBER OF DIMENSIONS AND INTEGRATION RANGE

INTEGRATION COMPONENT COMPUTING UNIT

INTEGRATION COMPONENT TABLE

OUTPUT PIXEL VALUE COMPUTING UNIT — 3124

DATA CONTINUITY INFORMATION (ANGLE)

OUTPUT IMAGE (OUTPUT PIXEL VALUE)

# FIG. 240

```
        ( START IMAGE GENERATING PROCESSING )
                          │
                          ▼
        ┌──────────────────────────────────────┐  S3101
        │            SET CONDITIONS             │
        └──────────────────────────────────────┘
                          │              ◄────────────┐
                          ▼                           │
        ┌──────────────────────────────────────┐  S3102
        │ ACQUIRE FEATURES OF ESTIMATION FUNCTION f(x), │
        │      AND GENERATE FEATURES TABLE      │      │
        └──────────────────────────────────────┘      │
                          │                           │
                          ▼                           │
        ┌──────────────────────────────────────┐  S3103
        │     COMPUTE INTEGRATION COMPONENT BASED ON    │
        │       SET CONDITIONS (NUMBER OF DIMENSIONS AND │
        │ INTEGRATION RANGE) AND DATA CONTINUITY INFORMATION │
        │ (ANGLE), AND GENERATE INTEGRATION COMPONENT TABLE │
        └──────────────────────────────────────┘      │
                          │                           │
                          ▼                           │
        ┌──────────────────────────────────────┐  S3104
        │ COMPUTE OUTPUT PIXEL VALUE BASED FEATURES TABLE │
        │      AND INTEGRATION COMPONENT TABLE  │        │
        └──────────────────────────────────────┘        │
                          │                             │
                          ▼          S3105              │
                    ╱──────────────╲                    │
                   ╱   PROCESSING    ╲    NO            │
                  ╱ OF ALL PIXELS ENDED? ╲──────────────┘
                   ╲                ╱
                    ╲──────────────╱
                          │ YES
                          ▼
        ┌──────────────────────────────────────┐  S3106
        │              OUTPUT IMAGE             │
        └──────────────────────────────────────┘
                          │
                          ▼
                    (  RETURN  )
```

FIG. 241

FIG. 242

SPATIAL DIRECTION Y

SPATIAL DIRECTION X

PIXEL VALUE

FIG. 243

FIG. 244

FIG. 245

FIG. 246

FIG. 247

FIG. 248

PIXEL VALUE

SPATIAL DIRECTION X

SPATIAL DIRECTION Y

# FIG. 249

# FIG. 250

ACTUAL WORLD ESTIMATION INFORMATION
(FEATURES OF APPROXIMATION FUNCTION f(x,y))

103

IMAGE GENERATING UNIT

3202 — FEATURES STORING UNIT

FEATURES TABLE

3203
INTEGRATION COMPONENT COMPUTING UNIT

INTEGRATION COMPONENT TABLE

CONDITION SETTING UNIT

3201

NUMBER OF DIMENSIONS AND INTEGRATION RANGE

OUTPUT PIXEL VALUE COMPUTING UNIT ~ 3204

DATA CONTINUITY INFORMATION (ANGLE)

OUTPUT IMAGE (OUTPUT PIXEL VALUE)

FIG. 251

# FIG. 252

START IMAGE GENERATING PROCESSING

SET CONDITIONS — S3201

ACQUIRE FEATURES OF ESTIMATION FUNCTION f(x,y), AND GENERATE FEATURES TABLE — S3202

COMPUTE INTEGRATION COMPONENT BASED ON SET CONDITIONS (NUMBER OF DIMENSIONS AND INTEGRATION RANGE) AND DATA CONTINUITY INFORMATION (ANGLE), AND GENERATE INTEGRATION COMPONENT TABLE — S3203

COMPUTE OUTPUT PIXEL VALUE BASED FEATURES TABLE AND INTEGRATION COMPONENT TABLE — S3204

S3205
PROCESSING OF ALL PIXELS ENDED?

NO

YES

OUTPUT IMAGE — S3206

RETURN

# FIG. 253

# FIG. 254

# FIG. 255

# FIG. 256

ACTUAL WORLD ESTIMATION INFORMATION
(FEATURES OF APPROXIMATION FUNCTION f(x, y, t))

103 — IMAGE GENERATING UNIT

3302 — FEATURES STORING UNIT

FEATURES TABLE

3301 — CONDITION SETTING UNIT

3303 — INTEGRATION COMPONENT COMPUTING UNIT

NUMBER OF DIMENSIONS AND INTEGRATION RANGE

INTEGRATION COMPONENT TABLE

3304 — OUTPUT PIXEL VALUE COMPUTING UNIT

OUTPUT IMAGE (OUTPUT PIXEL VALUE)

DATA CONTINUITY INFORMATION (ANGLE OR MOVEMENT)

# FIG. 257

```
( START IMAGE GENERATING PROCESSING )
                    │
                    ▼
┌──────────────────────────────────────────┐  S3301
│              SET CONDITIONS               │
└──────────────────────────────────────────┘
                    │
                    ▼
┌──────────────────────────────────────────┐  S3302
│  ACQUIRE FEATURES OF ESTIMATION FUNCTION f(x, y, t), │
│        AND GENERATE FEATURES TABLE         │
└──────────────────────────────────────────┘
                    │
                    ▼
┌──────────────────────────────────────────┐  S3303
│      COMPUTE INTEGRATION COMPONENT BASED ON    │
│      SET CONDITIONS (NUMBER OF DIMENSIONS AND  │
│ INTEGRATION RANGE) AND DATA CONTINUITY INFORMATION │
│  (ANGLE), AND GENERATE INTEGRATION COMPONENT TABLE │
└──────────────────────────────────────────┘
                    │
                    ▼
┌──────────────────────────────────────────┐  S3304
│  COMPUTE OUTPUT PIXEL VALUE BASED FEATURES TABLE │
│        AND INTEGRATION COMPONENT TABLE      │
└──────────────────────────────────────────┘
                    │
                    ▼
              S3305
         ╱ PROCESSING ╲
  NO ◄──┤  OF ALL PIXELS ENDED?  ├
         ╲            ╱
              │ YES
              ▼
┌──────────────────────────────────────────┐  S3306
│               OUTPUT IMAGE                │
└──────────────────────────────────────────┘
                    │
                    ▼
               ( RETURN )
```

# FIG. 258

# FIG. 259

```
        ( START IMAGE GENERATING PROCESSING )
                          │
                          ▼
  ┌──────────────────────────────────────────────────┐  S3401
  │  ACQUIRE ACTUAL WORLD ESTIMATION INFORMATION      │
  └──────────────────────────────────────────────────┘
                          │
                          ▼
  ┌──────────────────────────────────────────────────┐  S3402
  │              SELECT PIXEL OF INTEREST             │
  └──────────────────────────────────────────────────┘
                          │
                          ▼
  ┌──────────────────────────────────────────────────┐  S3403
  │           OBTAIN AMOUNT OF SHIFT IN THE           │
  │               SPATIAL DIRECTION                   │
  └──────────────────────────────────────────────────┘
                          │
                          ▼
  ┌──────────────────────────────────────────────────┐  S3404
  │        PERFORM EXTRAPOLATION INTERPOLATION        │
  │               TO GENERATE PIXEL                   │
  └──────────────────────────────────────────────────┘
                          │
                          ▼               S3405
         NO          PIXEL OF PREDETERMINED
         ◄──────    RESOLUTION OBTAINED?
                          │ YES
                          ▼               S3406
         NO            PROCESSING
         ◄──────  PERFORMED FOR ALL PIXELS?
                          │ YES
                          ▼
  ┌──────────────────────────────────────────────────┐  S3407
  │                   OUTPUT IMAGE                    │
  └──────────────────────────────────────────────────┘
                          │
                          ▼
                     ( RETURN )
```

EP 1 598 776 A1

# FIG. 260

# FIG. 261

# FIG. 262

103

IMAGE GENERATING UNIT

3411

GRADIENT ACQUIRING UNIT

3412

EXTRAPOLATION INTERPOLATION UNIT

DERIVATIVE VALUE OR GRADIENT

# FIG. 263

START IMAGE GENERATING PROCESSING

ACQUIRE ACTUAL WORLD ESTIMATION INFORMATION — S3421

SELECT PIXEL OF INTEREST — S3422

OBTAIN AMOUNT OF SHIFT IN THE FRAME DIRECTION — S3423

PERFORM EXTRAPOLATION INTERPOLATION TO GENERATE PIXEL — S3424

S3425
PIXEL OF PREDETERMINED RESOLUTION OBTAINED?

NO

YES

S3426
PROCESSING PERFORMED FOR ALL PIXELS?

NO

YES

OUTPUT IMAGE — S3427

RETURN

# FIG. 264

# FIG. 265

# FIG. 266

# FIG. 267

CLASS CLASSIFICATION ADAPTATION PROCESSING UNIT (3501)

INPUT IMAGE →

3511 — REGION EXTRACTING UNIT

3512 — PATTERN DETECTING UNIT

3513 — CLASS CODE DETERMINING UNIT

3514 — COEFFICIENT MEMORY

3515 — REGION EXTRACTING UNIT

3516 — PREDICTION COMPUTING UNIT

→ PREDICTION IMAGE

# FIG. 268

LEARNING DEVICE — 3504

3521 — CLASS CLASSIFICATION ADAPTATION PROCESSING LEARNING UNIT

FIRST TUTOR IMAGE

FIRST STUDENT IMAGE

PREDICTION IMAGE FOR LEARNING

3561 — CLASS CLASSIFICATION ADAPTATION PROCESSING CORRECTION LEARNING UNIT

EP 1 598 776 A1

# FIG. 269

FIRST TUTOR IMAGE

DOWN CONVERTER (3531)

FIRST STUDENT IMAGE

CLASS CLASSIFICATION ADAPTATION PROCESSING LEARNING UNIT (3521)

REGION EXTRACTING UNIT (3532)

PATTERN DETECTING UNIT (3533)

CLASS CODE DETERMINING UNIT (3534)

REGION EXTRACTING UNIT (3535)

NORMAL EQUATION GENERATING UNIT (3536)

COEFFICIENT DETERMINING UNIT (3537)

PREDICTION COMPUTING UNIT (3538)

COEFFICIENT MEMORY (3514)

PREDICTION IMAGE FOR LEARNING

EP 1 598 776 A1

# FIG. 270

PREDICTION IMAGE ~3543

3546

HD IMAGE ~3541

3547

SD IMAGE ~3542

DIFFERENCE IMAGE ~3544

DIFFERENCE IMAGE ~3545

EP 1 598 776 A1

# FIG. 271

SPATIAL DIRECTION Y

3544-1

DIFFERENCE IMAGE

3544

SPATIAL DIRECTION X

FIG. 272

# FIG. 273

SPATIAL
DIRECTION Y

3544-2

3544

DIFFERENCE
IMAGE

SPATIAL
DIRECTION X

FIG. 274

PIXEL VALUE

SD PIXEL WIDTH $L_s$

HD PIXEL WIDTH $L_t$

$f(x)$

x

SPATIAL DIRECTION X

-1.0  -0.5  0.0  0.5  1.0  1.5  2.0

## FIG. 275

LEVEL (PIXEL VALUE)

F(x)

PIXEL
VALUE P

$\Delta P$

DETECTING ELEMENT
WIDTH $L_C$ OF SENSOR 2

SPATIAL DIRECTION X

## FIG. 276

CLASS CLASSIFICATION ADAPTATION PROCESSING CORRECTION UNIT — 3502

FEATURES IMAGE
(ACTUAL WORLD ESTIMATION INFORMATION)

3551 — REGION EXTRACTING UNIT

3552 — PATTERN DETECTING UNIT

3553 — CLASS CODE DETERMINING UNIT

3554 — CORRECTION COEFFICIENT MEMORY

3555 — REGION EXTRACTING UNIT

3556 — CORRECTION COMPUTING UNIT

DIFFERENCE PREDICTION IMAGE (CORRECTION IMAGE)

# FIG. 277

CLASS CLASSIFICATION ADAPTATION PROCESSING CORRECTION LEARNING UNIT — 3561

FIRST STUDENT IMAGE → DATA CONTINUITY DETECTING UNIT (3572) → ACTUAL WORLD ESTIMATING UNIT (3573) → FEATURES IMAGE (SECOND STUDENT IMAGE)

3574 — REGION EXTRACTING UNIT

3575 — PATTERN DETECTING UNIT

3576 — CLASS CODE DETERMINING UNIT

3571 DIFFERENCE IMAGE (SECOND TUTOR IMAGE)

FIRST TUTOR IMAGE → (+)

PREDICTION IMAGE FOR LEARNING → (−)

REGION EXTRACTING UNIT — 3577

NORMAL EQUATION GENERATING UNIT — 3578

CORRECTION COEFFICIENT DETERMINING UNIT — 3579

CORRECTION COEFFICIENT MEMORY — 3554

EP 1 598 776 A1

EP 1 598 776 A1

# FIG. 278

402

# FIG. 279

FIG. 280

EP 1 598 776 A1

FIG. 281

# FIG. 282

```
     ( START IMAGE GENERATING PROCESSING )
                        │
                        ▼
   ┌──────────────────────────────────────────────────────┐
→  │ INPUT IMAGE CLASS CLASSIFICATION ADAPTATION PROCESSING │  S3501
│  └──────────────────────────────────────────────────────┘
│                       │
│                       ▼
│  ┌──────────────────────────────────────────────────────┐
│  │   CORRECTION PROCESSING FOR CLASS CLASSIFICATION        │  S3502
│  │            ADAPTATION PROCESSING                         │
│  └──────────────────────────────────────────────────────┘
│                       │
│                       ▼
│  ┌──────────────────────────────────────────────────────┐
│  │ ADD PIXEL OF INTEREST OF PREDICTION IMAGE AND PIXEL OF  │  S3503
│  │ CORRECTION IMAGE CORRESPONDING TO THE PIXEL OF          │
│  │ INTEREST, AND GENERATE PIXEL OF OUTPUT IMAGE            │
│  └──────────────────────────────────────────────────────┘
│                       │
│                       ▼
│                                    S3504
│              ╱────────────────────╲
│       NO    ╱      PROCESSING       ╲
└───────────<    OF ALL PIXELS ENDED?   >
             ╲                         ╱
              ╲───────────────────────╱
                        │
                       YES
                        ▼
              ┌──────────────────┐
              │   OUTPUT IMAGE    │  S3505
              └──────────────────┘
                        │
                        ▼
                 ( RETURN )
```

406

# FIG. 283

```
( START INPUT IMAGE CLASS CLASSIFICATION ADAPTATION PROCESSING )
                              │
                              ▼
         ┌────────────────────────────────────────┐
         │          INPUT AN INPUT IMAGE           │  S3521
         └────────────────────────────────────────┘
                              │
                              ▼
         ┌────────────────────────────────────────┐
         │            EXTRACT CLASS TAP            │  S3522
         └────────────────────────────────────────┘
                              │
                              ▼
         ┌────────────────────────────────────────┐
         │  DETECT CLASS TAP PATTERN AND OUTPUT TO CLASS  │  S3523
         │          CODE DETERMINING UNIT          │
         └────────────────────────────────────────┘
                              │
                              ▼
         ┌────────────────────────────────────────┐
         │          DETERMINE CLASS CODE           │  S3524
         └────────────────────────────────────────┘
                              │
                              ▼
         ┌────────────────────────────────────────┐
         │  READ OUT PREDICTION COEFFICIENT BASED ON CLASS CODE,  │  S3525
         │     AND OUTPUT TO PREDICTION COMPUTING UNIT      │
         └────────────────────────────────────────┘
                              │
                              ▼
         ┌────────────────────────────────────────┐
         │  EXTRACT PREDICTION TAP CORRESPONDING TO CLASS CODE,  │  S3526
         │     AND OUTPUT TO PREDICTION COMPUTING UNIT      │
         └────────────────────────────────────────┘
                              │
                              ▼
         ┌────────────────────────────────────────┐
         │  COMPUTE PREDICTION TAP FROM PREDICTION COEFFICIENT,  │  S3527
         │  GENERATE PREDICTION IMAGE, AND OUTPUT TO ADDING UNIT  │
         └────────────────────────────────────────┘
                              │
                              ▼
                        ( RETURN )
```

# FIG. 284

START CORRECTION PROCESSING FOR CLASS
CLASSIFICATION ADAPTATION PROCESSING

INPUT FEATURES IMAGE — S3541

EXTRACT CLASS TAP — S3542

DETECT CLASS TAP PATTERN AND OUTPUT
TO CLASS CODE DETERMINING UNIT — S3543

DETERMINE CLASS CODE — S3544

READ OUT CORRECTION COEFFICIENT BASED
ON CLASS CODE, AND OUTPUT TO CORRECTION
COMPUTING UNIT — S3545

EXTRACT PREDICTION TAP FOR CORRECTION
CORRESPONDING TO CLASS CODE,
AND OUTPUT TO CORRECTION COMPUTING UNIT — S3546

COMPUTE PREDICTION TAP FOR CORRECTION FROM
CORRECTION COEFFICIENT, GENERATE DIFFERENCE
PREDICTION IMAGE (CORRECTION IMAGE),
AND OUTPUT TO ADDING UNIT — S3547

RETURN

# FIG. 285

## FIG. 286

## FIG. 287

SPATIAL
DIRECTION Y

SPATIAL
DIRECTION X

3641-1

3641

## FIG. 288

START LEARNING
PROCESSING

LEARNING PROCESSING FOR CLASS
CLASSIFICATION ADAPTATION PROCESSING — S3561

LEARNING PROCESSING FOR
CORRECTING CLASS — S3562

END PROCESSING

EP 1 598 776 A1

# FIG. 289

START LEARNING PROCESSING FOR CLASS
CLASSIFICATION ADAPTATION PROCESSING

| INPUT FIRST TUTOR IMAGE | S3581 |

| GENERATE FIRST STUDENT IMAGE | S3582 |

| EXTRACT CLASS TAP | S3583 |

| DETECT CLASS TAP PATTERN | S3584 |

| DETERMINE CLASS CODE | S3585 |

| EXTRACT PREDICTION TAP OF FIRST STUDENT IMAGE CORRESPONDING TO CLASS CODE | S3586 |

| GENERATE NORMAL EQUATION | S3587 |

| SOLVE NORMAL EQUATION AND DETERMINE PREDICTION COEFFICIENT | S3588 |

| COMPUTE PREDICTION TAP WITH PREDICTION COEFFICIENT, AND GENERATE LEARNING PREDICTION IMAGE (PIXEL) | S3589 |

S3590

NO ← PROCESSING OF ALL PIXELS ENDED?

YES

| OUTPUT LEARNING PREDICTION IMAGE TO CLASS CLASSIFICATION PROCESSING CORRECTION LEARNING UNIT | S3591 |

RETURN

412

# FIG. 290

```
┌─────────────────────────────────────────────┐
│  START LEARNING PROCESSING FOR CORRECTING    │
│  CLASS CLASSIFICATION ADAPTATION PROCESSING  │
└─────────────────────────────────────────────┘
                      │
                      ▼
┌─────────────────────────────────────────────┐
│ SUBTRACT LEARNING PREDICTION IMAGE FROM FIRST│  S3601
│  TUTOR IMAGE TO GENERATE SECOND TUTOR IMAGE  │
│             (DIFFERENCE IMAGE)               │
└─────────────────────────────────────────────┘
                      │
                      ▼
┌─────────────────────────────────────────────┐
│ GENERATE SECOND STUDENT IMAGE (FEATURES IMAGE)│ S3602
└─────────────────────────────────────────────┘
                      │
                      ▼
┌─────────────────────────────────────────────┐
│              EXTRACT CLASS TAP               │  S3603
└─────────────────────────────────────────────┘
                      │
                      ▼
┌─────────────────────────────────────────────┐
│          DETECT CLASS TAP PATTERN            │  S3604
└─────────────────────────────────────────────┘
                      │
                      ▼
┌─────────────────────────────────────────────┐
│             DETERMINE CLASS CODE             │  S3605
└─────────────────────────────────────────────┘
                      │
                      ▼
┌─────────────────────────────────────────────┐
│ EXTRACT PREDICTION TAP OF SECOND STUDENT IMAGE│ S3606
│          CORRESPONDING TO CLASS CODE         │
└─────────────────────────────────────────────┘
                      │
                      ▼
┌─────────────────────────────────────────────┐
│           GENERATE NORMAL EQUATION           │  S3607
└─────────────────────────────────────────────┘
                      │
                      ▼
┌─────────────────────────────────────────────┐
│     SOLVE NORMAL EQUATION AND DETERMINE      │  S3608
│            CORRECTION COEFFICIENT            │
└─────────────────────────────────────────────┘
                      │
                      ▼
              S3609
         ╱─────────────────╲
   NO   ╱    PROCESSING      ╲
  ◄─────   OF ALL PIXELS ENDED? 
         ╲                   ╱
          ╲─────────────────╱
                  │ YES
                  ▼
            ┌──────────┐
            │  RETURN  │
            └──────────┘
```

FIG. 291

PREDICTION IMAGE

3543

OUTPUT IMAGE

3651

FIG. 292

INPUT IMAGE → DATA CONTINUITY DETECTING UNIT 4101

REGION IDENTIFYING INFORMATION

ACTUAL WORLD ESTIMATING UNIT 4102

IMAGE GENERATING UNIT 4104

IMAGE GENERATING UNIT 4103

REGION DETECTING UNIT 4111

SELECTOR 4112

CONTINUITY REGION DETECTING UNIT 4105

OUTPUT IMAGE

# FIG. 293

INPUT IMAGE

4104  
IMAGE GENERATING UNIT

4121 — REGION EXTRACTING UNIT

4122 — PATTERN DETECTING UNIT

4123 — CLASS CODE DETERMINING UNIT

COEFFICIENT MEMORY  
4124

REGION EXTRACTING UNIT ~ 4125

PREDICTION COMPUTING UNIT  
4126

PREDICTION IMAGE

# FIG. 294

Block diagram — LEARNING DEVICE (4131)

- TUTOR IMAGE
- DOWN CONVERTER (4141) → STUDENT IMAGE
- REGION EXTRACTING UNIT (4142)
- PATTERN DETECTING UNIT (4143)
- CLASS CODE DETERMINING UNIT (4144)
- REGION EXTRACTING UNIT (4145)
- NORMAL EQUATION GENERATING UNIT (4146)
- COEFFICIENT DETERMINING UNIT (4147)
- COEFFICIENT MEMORY (4124)

# FIG. 295

```
( START SIGNAL PROCESSING )
            |
            v
+------------------------------------------+
| PROCESSING FOR EXECUTING CLASS           | S4101
| CLASSIFICATION ADAPTATION PROCESSING     |
+------------------------------------------+
            |
            v
+------------------------------------------+
| DETECT ANGLE CORRESPONDING TO DIRECTION  | S4102
| OF CONTINUITY BASED ON INPUT IMAGE,      |
| AND ALSO COMPUTE THE ESTIMATED ERROR     |
| (REGION IDENTIFYING INFORMATION) THEREOF |
+------------------------------------------+
            |
            v
+------------------------------------------+
| ESTIMATE SIGNALS OF ACTUAL WORLD         | S4103
| BASED ON DETECTED ANGLE                  |
+------------------------------------------+
            |
            v
+------------------------------------------+
| GENERATE SECOND PIXEL CORRESPONDING      | S4104
| TO FIRST PIXEL GENERATED WITH            |
| THE CLASS CLASSIFICATION PROCESSING BASED|
| ON THE ESTIMATED ACTUAL WORLD SIGNALS    |
+------------------------------------------+
            |
            v
+------------------------------------------+
| DETECT SECOND PIXEL REGION BASED         | S4105
| ON THE COMPUTED ESTIMATED ERROR          |
+------------------------------------------+
            |
            v
        S4106
       / IS DETECTED REGION \   NO
 <     A CONTINUITY REGION?  >------+
       \                     /      |
            | YES                   |
            v                       v
+-----------------------+   +----------------------+
| OUTPUT SECOND PIXEL   |   | OUTPUT FIRST PIXEL   |
| AS OUTPUT IMAGE       |   | AS OUTPUT IMAGE      |
| S4107                 |   | S4108                |
+-----------------------+   +----------------------+
            |                       |
            +-----------+-----------+
                        |
                        v
                    S4109
                  / PROCESSING OF \    NO
             <    ALL PIXELS ENDED  >------+
                  \       ?        /
                        | YES
                        v
                    ( END )
```

# FIG. 296

```
┌─────────────────────────────────────┐
│ START PROCESSING FOR EXECUTING CLASS │
│ CLASSIFICATION ADAPTATION PROCESSING │
└─────────────────────────────────────┘
                    │
                    ▼
┌─────────────────────────────┐
│      INPUT AN INPUT IMAGE    │ S4121
└─────────────────────────────┘
                    │
                    ▼
┌─────────────────────────────┐
│      EXTRACT CLASS TAP       │ S4122
└─────────────────────────────┘
                    │
                    ▼
┌─────────────────────────────────────┐
│ DETECT PATTERN OF CLASS TAP AND OUTPUT│ S4123
│     TO CLASS CODE DETERMINING UNIT   │
└─────────────────────────────────────┘
                    │
                    ▼
┌─────────────────────────────┐
│      DETERMINE CLASS CODE    │ S4124
└─────────────────────────────┘
                    │
                    ▼
┌─────────────────────────────────────┐
│    READ OUT PREDICTION COEFFICIENT   │ S4125
│   BASED ON CLASS CODE, AND OUTPUT TO │
│      PREDICTION COMPUTING UNIT       │
└─────────────────────────────────────┘
                    │
                    ▼
┌─────────────────────────────────────┐
│ EXTRACT PREDICTION TAP CORRESPONDING │ S4126
│       TO CLASS CODE, AND OUTPUT TO   │
│        PREDICTION COMPUTING UNIT     │
└─────────────────────────────────────┘
                    │
                    ▼
┌─────────────────────────────────────┐
│       COMPUTE PREDICTION TAP         │ S4127
│    FROM PREDICTION COEFFICIENT,      │
│ GENERATE PREDICTION IMAGE (FIRST PIXEL),│
│       AND OUTPUT EXTERNALLY          │
└─────────────────────────────────────┘
                    │
                    ▼
              ( RETURN )
```

# FIG. 297

```
        ( START LEARNING PROCESSING )
                      │
                      ▼
        ┌──────────────────────────┐  S4141
        │     INPUT TUTOR IMAGE     │
        └──────────────────────────┘
                      │
                      ▼
        ┌──────────────────────────┐  S4142
        │   GENERATE STUDENT IMAGE  │
        └──────────────────────────┘
                      │
    ┌─────────────────┤
    │                 ▼
    │     ┌──────────────────────────┐  S4143
    │     │     EXTRACT CLASS TAP     │
    │     └──────────────────────────┘
    │                 │
    │                 ▼
    │     ┌──────────────────────────┐  S4144
    │     │  DETECT PATTERN OF CLASS TAP │
    │     └──────────────────────────┘
    │                 │
    │                 ▼
    │     ┌──────────────────────────┐  S4145
    │     │    DETERMINE CLASS CODE   │
    │     └──────────────────────────┘
    │                 │
    │                 ▼
    │     ┌──────────────────────────────────────┐  S4146
    │     │        EXTRACT PREDICTION TAP OF       │
    │     │ STUDENT IMAGE CORRESPONDING TO CLASS CODE │
    │     └──────────────────────────────────────┘
    │                 │
    │                 ▼
    │     ┌──────────────────────────┐  S4147
    │     │  GENERATE NORMAL EQUATION │
    │     └──────────────────────────┘
    │                 │
    │                 ▼
    │     ┌──────────────────────────┐  S4148
    │     │   SOLVE NORMAL EQUATION AND   │
    │     │ DETERMINE PREDICTION COEFFICIENT │
    │     └──────────────────────────┘
    │                 │
    │                 ▼          S4149
    │          ╱──────────────╲
    │    NO   ╱  PROCESSING OF  ╲
    └────────   ALL PIXELS ENDED?
              ╲                ╱
               ╲──────────────╱
                      │ YES
                      ▼
                 ( RETURN )
```

FIG. 298

EP 1 598 776 A1

INPUT IMAGE

DATA CONTINUITY
DETECTING UNIT

4101

ACTUAL WORLD
ESTIMATING UNIT

4102

REGION IDENTIFYING
INFORMATION

IMAGE
GENERATING
UNIT

4103

IMAGE
GENERATING UNIT

4104

4111

REGION
DETECTING
UNIT

SELECTOR

4112

CONTINUITY REGION
DETECTING UNIT

4105

OUTPUT IMAGE

# FIG. 299

```
( START SIGNAL PROCESSING )
            │
            ▼
┌─────────────────────────────────────────┐  S4161
│  PROCESSING FOR EXECUTING CLASS          │
│  CLASSIFICATION ADAPTATION PROCESSING    │
└─────────────────────────────────────────┘
            │
            ▼
┌─────────────────────────────────────────┐  S4162
│  DETECT ANGLE CORRESPONDING TO DIRECTION │
│     OF CONTINUITY BASED ON INPUT IMAGE   │
└─────────────────────────────────────────┘
            │
            ▼
┌─────────────────────────────────────────┐  S4163
│  ESTIMATE SIGNALS OF ACTUAL WORLD BASED ON│
│ DETECTED ANGLE, AND ALSO COMPUTE THE ESTIMATED│
│   ERROR (REGION IDENTIFYING INFORMATION) │
│     OF ESTIMATED ACTUAL WORLD SIGNALS    │
└─────────────────────────────────────────┘
            │
            ▼
┌─────────────────────────────────────────┐  S4164
│    GENERATE SECOND PIXEL CORRESPONDING   │
│   TO FIRST PIXEL GENERATED WITH THE CLASS│
│     CLASSIFICATION ADAPTATION PROCESSING │
│ BASED ON THE ESTIMATED ACTUAL WORLD SIGNALS│
└─────────────────────────────────────────┘
            │
            ▼
┌─────────────────────────────────────────┐  S4165
│    DETECT SECOND PIXEL REGION BASED      │
│     ON THE COMPUTED ESTIMATED ERROR      │
└─────────────────────────────────────────┘
            │
            ▼
         S4166
      ◇ IS DETECTED
  NO ◇ REGION A CONTINUITY REGION? ◇
            │ YES
            ▼
```

        NO → S4168                    S4167
OUTPUT FIRST PIXEL          OUTPUT SECOND PIXEL
AS OUTPUT IMAGE             AS OUTPUT IMAGE

```
            │
            ▼
         S4169
      ◇ PROCESSING
   ◇ OF ALL PIXELS ENDED? ◇ NO
            │ YES
            ▼
        ( END )
```

# FIG. 300

INPUT IMAGE → **4101** DATA CONTINUITY DETECTING UNIT

REGION IDENTIFYING INFORMATION

**4102** ACTUAL WORLD ESTIMATING UNIT

**4103** IMAGE GENERATING UNIT → OUTPUT IMAGE

EXECUTION COMMAND

**4171** REGION DETECTING UNIT

**4104** IMAGE GENERATING UNIT

EXECUTION COMMAND GENERATING UNIT **4172**

EXECUTION COMMAND

CONTINUITY REGION DETECTING UNIT **4161**

EP 1 598 776 A1

# FIG. 301

```
                  ( START SIGNAL PROCESSING )
                              │
                              ▼
┌─────────────────────────────────────────────────────┐  S4181
│  DETECT ANGLE CORRESPONDING TO DIRECTION            │
│  OF CONTINUITY BASED ON INPUT IMAGE,                │
│  AND ALSO COMPUTE THE ESTIMATED ERROR THEREOF       │
│  (REGION IDENTIFYING INFORMATION)                   │
└─────────────────────────────────────────────────────┘
                              │
                              ▼
┌─────────────────────────────────────────────────────┐  S4182
│       DETECT REGION BASED ON CALCULATED             │
│              ESTIMATED ERROR                        │
└─────────────────────────────────────────────────────┘
                              │
                              ▼
                           S4183
            NO  ◇  IS DETECTED REGION  ◇
          ◄─────── A CONTINUITY REGION? ───────
                              │ YES
                              │
┌──────────────────────────┐ S4184
│  PROCESSING FOR EXECUTING │
│  CLASS CLASSIFICATION     │
│  ADAPTATION PROCESSING    │
└──────────────────────────┘
             │
             ▼
┌──────────────────────────┐ S4185
│ OUTPUT FIRST PIXEL        │
│ GENERATED BY CLASS        │
│ CLASSIFICATION            │
│ ADAPTATION PROCESSING AS  │
│ OUTPUT IMAGE              │
└──────────────────────────┘
                              ▼
                 ┌─────────────────────────────────────────┐  S4186
                 │ ESTIMATE SIGNALS OF THE ACTUAL WORLD     │
                 │ BASED ON THE DETECTED ANGLE              │
                 └─────────────────────────────────────────┘
                              │
                              ▼
                 ┌─────────────────────────────────────────┐  S4187
                 │ GENERATE SECOND PIXEL IN DETECTED        │
                 │ REGION, BASED ON ESTIMATED               │
                 │ ACTUAL WORLD SIGNALS                     │
                 └─────────────────────────────────────────┘
                              │
                              ▼
                 ┌─────────────────────────────────────────┐  S4188
                 │ OUTPUT GENERATED SECOND PIXEL            │
                 │ AS OUTPUT IMAGE                          │
                 └─────────────────────────────────────────┘
                              │
                              ▼
                           S4189
               ◇  HAS PROCESSING  ◇  NO
               ◇ OF ALL PIXELS ENDED? ◇ ───►
                              │ YES
                              ▼
                        (   END   )
```

# FIG. 302

INPUT IMAGE → **4101** DATA CONTINUITY DETECTING UNIT → **4102** ACTUAL WORLD ESTIMATING UNIT → **4103** IMAGE GENERATING UNIT → OUTPUT IMAGE

REGION IDENTIFYING INFORMATION

EXECUTION COMMAND

**4171** REGION DETECTING UNIT

**4104** IMAGE GENERATING UNIT

**4172** EXECUTION COMMAND GENERATING UNIT

EXECUTION COMMAND

CONTINUITY REGION DETECTING UNIT

**4161**

EP 1 598 776 A1

## FIG. 303

```
        ( START SIGNAL PROCESSING )
                    │
                    ▼
   DETECT ANGLE CORRESPONDING TO DIRECTION    S4201
      OF CONTINUITY BASED ON INPUT IMAGE
                    │
                    ▼
    ESTIMATE ACTUAL WORLD SIGNAL BASED ON     S4202
      DETECTED ANGLE, AND ALSO COMPUTE
         THE ESTIMATED ERROR THEREOF
       (REGION IDENTIFYING INFORMATION)
                    │
                    ▼
     DETECT REGION BASED ON COMPUTED          S4203
            ESTIMATED ERROR
                    │
                    ▼
                                      S4204
          ╱ IS DETECTED          ╲
   NO  ╱   REGION A CONTINUITY REGION?  ╲
  ◄───╲                             ╱
        ╲                         ╱
   │          │ YES
   ▼          │
 PROCESSING FOR EXECUTING   S4205
     CLASS CLASSIFICATION
    ADAPTATION PROCESSING
   │
   ▼
OUTPUT FIRST PIXEL GENERATED  S4206
   BY CLASS CLASSIFICATION
   ADAPTATION PROCESSING
        AS OUTPUT IMAGE
   │          │
   │          ▼
   │   GENERATE SECOND PIXEL IN DETECTED   S4207
   │      REGION, BASED ON ESTIMATED
   │         ACTUAL WORLD SIGNALS
   │          │
   │          ▼
   │   OUTPUT GENERATED SECOND PIXEL    S4208
   │           AS OUTPUT IMAGE
   │          │
   └────────► ▼
                                      S4209
          ╱ HAS PROCESSING  ╲   NO
          ╲  OF ALL PIXELS ENDED? ╱ ───►
                    │
                    │ YES
                    ▼
                ( END )
```

# FIG. 304

EP 1 598 776 A1

# FIG. 305

START SIGNAL PROCESSING

DETECT ANGLE CORRESPONDING TO DIRECTION OF CONTINUITY BASED ON INPUT IMAGE, AND ALSO COMPUTE THE ESTIMATED ERROR THEREOF (FIRST REGION IDENTIFYING INFORMATION) — S4221

DETECT REGION BASED ON COMPUTED ESTIMATED ERROR — S4222

IS DETECTED REGION A CONTINUITY REGION ? — S4223

NO

YES

ESTIMATE ACTUAL WORLD SIGNAL BASED ON DETECTED ANGLE, AND ALSO COMPUTE THE ESTIMATED ERROR THEREOF (SECOND REGION IDENTIFYING INFORMATION) — S4226

DETECT REGION BASED ON COMPUTED ESTIMATED ERROR — S4227

IS DETECTED REGION A CONTINUITY REGION ? — S4228

NO

YES

PROCESSING FOR EXECUTING CLASS CLASSIFICATION ADAPTATION PROCESSING — S4224

OUTPUT FIRST PIXEL GENERATED BY CLASS CLASSIFICATION ADAPTATION PROCESSING AS OUTPUT IMAGE — S4225

GENERATE SECOND PIXEL IN DETECTED REGION, BASED ON ESTIMATED ACTUAL WORLD SIGNALS — S4229

OUTPUT GENERATED SECOND PIXEL AS OUTPUT IMAGE — S4230

HAS PROCESSING OF ALL PIXELS ENDED? — S4231

NO

YES

END

428

FIG. 306

# FIG. 307

```
┌──────────────────────────────────────────────────────┐
│ START DATA CONTINUITY DETECTION PROCESSING           │
└──────────────────────────────────────────────────────┘
                        │
                        ▼
         ┌────────────────────────────┐  S4501
         │       ACQUIRE IMAGE         │
         └────────────────────────────┘
                        │
                        ▼
         ┌────────────────────────────┐  S4502
         │        DETECT ANGLE         │
         └────────────────────────────┘
                        │
                        ▼
         ┌────────────────────────────┐  S4503
         │ ESTIMATE ACTUAL WORLD FUNCTION │
         └────────────────────────────┘
                        │
                        ▼
         ┌────────────────────────────┐  S4504
         │        REINTEGRATION        │
         └────────────────────────────┘
                        │
                        ▼
         ┌────────────────────────────┐  S4505
         │   GENERATE AND OUTPUT IMAGE │
         └────────────────────────────┘
                        │
                        ▼
         ┌────────────────────────────┐  S4506
         │ OBTAIN ERROR AS TO INPUT IMAGE │
         └────────────────────────────┘
                        │
                        ▼
         ╱ IS ABSOLUTE VALUE OF ERROR EQUAL ╲  S4507
         ╲ TO OR LESS THAN THRESHOLD?       ╱  NO
                        │ YES
                        ▼
              ┌──────────────────┐  S4508
              │  RECOGNIZE AS    │
              │ PROCESSING REGION│
              └──────────────────┘
                                    ┌──────────────────────┐  S4509
                                    │ RECOGNIZE AS NON-    │
                                    │ PROCESSING REGION    │
                                    └──────────────────────┘
                        │
                        ▼
    NO ╱ PROCESSED FOR ALL PIXELS? ╲  S4510
                        │ YES
                        ▼
         ┌────────────────────────────┐  S4511
         │ OUTPUT REGION INFORMATION   │
         └────────────────────────────┘
                        │
                        ▼
                    ( END )
```

# FIG. 308

SENSOR 2

GAMMA CORRECTION CIRCUIT 5011

INVERSE GAMMA CORRECTION UNIT 5001

DATA CONTINUITY DETECTING UNIT 101

ACTUAL WORLD ESTIMATING UNIT 102

IMAGE GENERATING UNIT 103

PRESENTATION SYSTEM PROPERTY CORRECTION UNIT 5002

OUTPUT IMAGE

# FIG. 309

## FIG. 310

FIG. 311

FIG. 312

## FIG. 313

# FIG. 314

```
        ( START SIGNAL PROCESSING )
                     |
                     v
        ┌──────────────────────────────┐
        │  INVERSE GAMMA CORRECTION    │  S5001
        └──────────────────────────────┘
                     |
                     v
      ┌────────────────────────────────────┐
      │ DATA CONTINUITY DETECTION PROCESSING │  S5002
      └────────────────────────────────────┘
                     |
                     v
      ┌────────────────────────────────────┐
      │ ACTUAL WORLD ESTIMATION PROCESSING  │  S5003
      └────────────────────────────────────┘
                     |
                     v
      ┌────────────────────────────────────┐
      │    IMAGE GENERATING PROCESSING      │  S5004
      └────────────────────────────────────┘
                     |
                     v
      ┌────────────────────────────────────┐
      │  IMAGE CORRECTION CORRESPONDING     │  S5005
      │ TO PROPERTIES OF PRESENTATION SYSTEM│
      └────────────────────────────────────┘
                     |
                     v
              (    END    )
```

# EP 1 598 776 A1

<table>
<tr><td colspan="2" align="center"><b>INTERNATIONAL SEARCH REPORT</b></td><td>International application No.<br>PCT/JP2004/001581</td></tr>
</table>

A. CLASSIFICATION OF SUBJECT MATTER
   Int.Cl⁷ G06T1/00

According to International Patent Classification (IPC) or to both national classification and IPC

B. FIELDS SEARCHED

Minimum documentation searched (classification system followed by classification symbols)
   Int.Cl⁷ G06T1/00, G06T3/00, G06T5/00, H05N5/00, H04N7/00

Documentation searched other than minimum documentation to the extent that such documents are included in the fields searched

Electronic data base consulted during the international search (name of data base and, where practicable, search terms used)
   JSTPLUS(JOIS)

C. DOCUMENTS CONSIDERED TO BE RELEVANT

| Category* | Citation of document, with indication, where appropriate, of the relevant passages | Relevant to claim No. |
|---|---|---|
| Y | JP 05-273949 A (Matsushita Electric Industrial Co., Ltd.), 22 October, 1993 (22.10.93), Full text; all drawings (Family: none) | 1,3,4 |
| Y | JP 04-290074 A (Canon Inc.), 14 October, 1992 (14.10.92), Full text; all drawings (Family: none) | 1,3,4 |
| Y | JP 2000-201283 A (Sony Corp.), 18 July, 2000 (18.07.00), Columns 13 to 47; Fig. 1 (Family: none) | 1,3,4 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
   25 March, 2004 (25.03.04)

Date of mailing of the international search report
   20 April, 2004 (20.04.04)

Name and mailing address of the ISA/
   Japanese Patent Office

Authorized officer

Facsimile No.

Telephone No.

Form PCT/ISA/210 (second sheet) (January 2004)

| INTERNATIONAL SEARCH REPORT | International application No. |
|---|---|
| | PCT/JP2004/001581 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-084368 A  (Sony Corp.),<br>30 March, 2001 (30.03.01),<br>Full text; all drawings<br>& EP 1061473 A1       & US 6678405 B1 | 1,3,4 |
| A | JP 08-096145 A  (NEC Corp.),<br>12 April, 1996 (12.04.96),<br>Full text; all drawings<br>(Family: none) | 2 |
| A | JP 02-285475 A  (Hughes Aircraft Co.),<br>22 November, 1990 (22.11.90),<br>Full text; all drawings<br>& EP 0389968 B1       & US 5081689 A | 2 |
| A | JP 11-239363 A  (Nippon Telegraph And Telephone Corp.),<br>31 August, 1999 (31.08.99),<br>Full text; all drawings<br>& US 6366699 B1 | 2 |
| A | JP 05-342352 A  (Dainippon Screen Mfg. Co., Ltd.),<br>24 December, 1993 (24.12.93),<br>Full text; all drawings<br>(Family: none) | 2 |

Form PCT/ISA/210 (continuation of second sheet) (January 2004)